(19) Europäisches Patentamt / European Patent Office / Office européen des brevets

(11) **EP 2 858 269 B1**

(12) **EUROPEAN PATENT SPECIFICATION**

(45) Date of publication and mention
of the grant of the patent:
**28.02.2018 Bulletin 2018/09**

(21) Application number: **13793777.7**

(22) Date of filing: **24.05.2013**

(51) Int Cl.:
*H04B 10/116* (2013.01)     *H04N 5/235* (2006.01)
*H04B 10/114* (2013.01)     *H04L 12/28* (2006.01)
*H04N 3/14* (2006.01)       *H04N 5/232* (2006.01)
*H04N 5/243* (2006.01)      *H04W 4/00* (2018.01)

(86) International application number:
**PCT/JP2013/003318**

(87) International publication number:
**WO 2013/175803 (28.11.2013 Gazette 2013/48)**

(54) **INFORMATION COMMUNICATION METHOD**

INFORMATIONSÜBERMITTLUNGSVERFAHREN

PROCÉDÉ DE COMMUNICATION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2012 JP 2012119082
27.12.2012 JP 2012286339
27.12.2012 US 201261746315 P
28.03.2013 US 201361805978 P
28.03.2013 JP 2013070740
10.04.2013 JP 2013082546
10.04.2013 US 201361810291 P**

(43) Date of publication of application:
**08.04.2015 Bulletin 2015/15**

(73) Proprietor: **Panasonic Intellectual Property
Corporation
of America
Torrance, CA 90503 (US)**

(72) Inventors:
• **OSHIMA, Mitsuaki**
Osaka 540-6207 (JP)
• **YAMADA, Kazunori**
Osaka 540-6207 (JP)
• **AOYAMA, Hideki**
Osaka 540-6207 (JP)
• **FUCHIGAMI, Ikuo**
Osaka 540-6207 (JP)
• **SHIN, Hidehiko**
Osaka 540-6207 (JP)
• **MUKAI, Tsutomu**
Osaka 540-6207 (JP)
• **MATSUSHITA, Yosuke**
Osaka 540-6207 (JP)
• **IIDA, Shigehiro**
Osaka 540-6207 (JP)
• **NAKANISHI, Koji**
Osaka 540-6207 (JP)

(74) Representative: **Vigand, Philippe et al
Novagraaf International SA
Chemin de l'Echo 3
1213 Onex - Genève (CH)**

(56) References cited:
WO-A1-2007/004530     WO-A1-2011/086517
JP-A- 2002 144 984    JP-A- 2004 072 365
JP-A- 2006 121 466    JP-A- 2008 124 922
JP-A- 2008 292 397    JP-A- 2010 278 573

• JIANG LIU ET AL: "Foundational analysis of
spatial optical wireless communication utilizing
image sensor", IMAGING SYSTEMS AND
TECHNIQUES (IST), 2011 IEEE INTERNATIONAL
CONFERENCE ON, IEEE, 17 May 2011
(2011-05-17), pages 205-209, XP031907193, DOI:
10.1109/IST.2011.5962193 ISBN:
978-1-61284-894-5

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a method of communication between a mobile terminal such as a smartphone, a tablet terminal, or a mobile phone and a home electric appliance such as an air conditioner, a lighting device, or a rice cooker.

[Background Art]

In recent years, a home-electric-appliance cooperation function has been introduced for a home network, with which various home electric appliances are connected to a network by a home energy management system (HEMS) having a function of managing power usage for addressing an environmental issue, turning power on/off from outside a house, and the like, in addition to cooperation of AV home electric appliances by internet protocol (IP) connection using Ethernet (registered trademark) or wireless local area network (LAN). However, there are home electric appliances whose computational performance is insufficient to have a communication function, and home electric appliances which do not have a communication function due to a matter of cost.

In order to solve such a problem, Patent Literature (PTL) 1 discloses a technique of efficiently establishing communication between devices among limited optical spatial transmission devices which transmit information to free space using light, by performing communication using plural single color light sources of illumination light.

[Citation List]

[Patent Literature]

[PTL 1] Japanese Unexamined Patent Application Publication No. 2002-290335

Further art is disclosed by the document JIANG LIU ET AL, "Foundational analysis of spatial optical wireless communication utilizing image sensor", 2011 IEEE INTERNATIONAL CONFERENCE ON IMAGING SYSTEMS AND TECHNIQUES (IST), IEEE, 20110517, doi:10.1109/IST.2011.5962193, ISBN 978-1-61284-894-5, PAGE 205 - 209. This document describes the image sensor communication (ISC) technology and provides theoretical analysis on the proposed system. A new method of region detection using size, shape matching is proposed. Furthermore the communication signal recovering algorithms for OWC utilizing image sensor is presented.

[Summary of Invention]

[Technical Problem]

However, the conventional method is limited to a case in which a device to which the method is applied has three color light sources such as an illuminator. The present invention solves this problem, and provides an information communication method that enables communication between various devices including a device with low computational performance.

[Solution to Problem]

An information communication method according to an aspect of the present invention is an information communication method of obtaining information from a subject, the information communication method including: an exposure time setting step of setting an exposure time of an image sensor so that, in an image obtained by capturing the subject by the image sensor, a bright line corresponding to an exposure line included in the image sensor appears according to a change in luminance of the subject; an imaging step of capturing the subject that changes in luminance by the image sensor with the set exposure time, to obtain the image including the bright line; and an information obtainment step of obtaining the information by demodulating data specified by a pattern of the bright line included in the obtained image.

These general and specific aspects may be implemented using a system, a method, an integrated circuit, a computer program, or a computer-readable recording medium such as a CD-ROM, or any combination of systems, methods, integrated circuits, computer programs, or computer-readable recording media.

[Advantageous Effects of Invention]

An information communication method disclosed herein enables communication between various devices including a device with low computational performance.

[Brief Description of Drawings]

[FIG. 1]

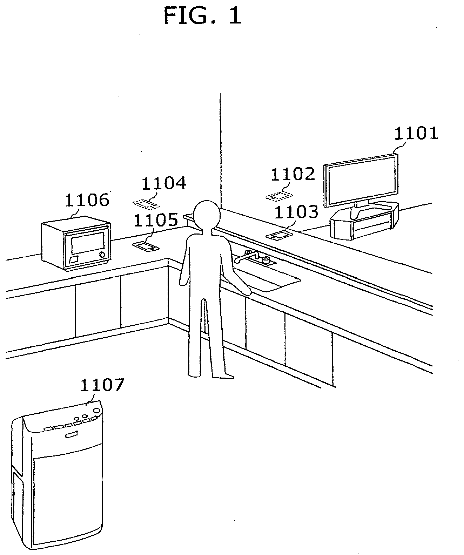

FIG. 1 is a diagram illustrating an example of an environment in a house in Embodiment 1.
[FIG. 2]

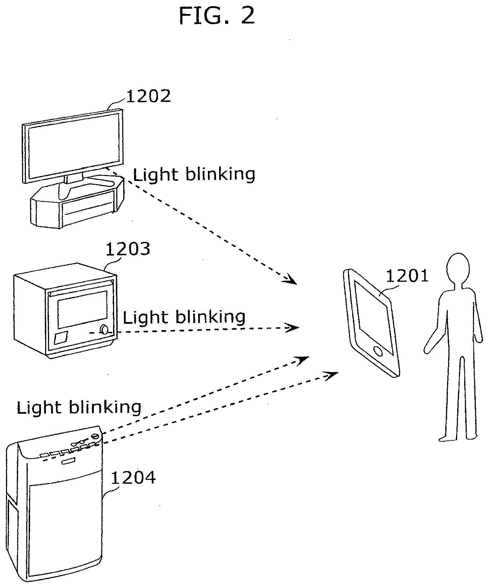

FIG. 2 is a diagram illustrating an example of communication between a smartphone and home electric appliances according to Embodiment 1.
[FIG. 3]

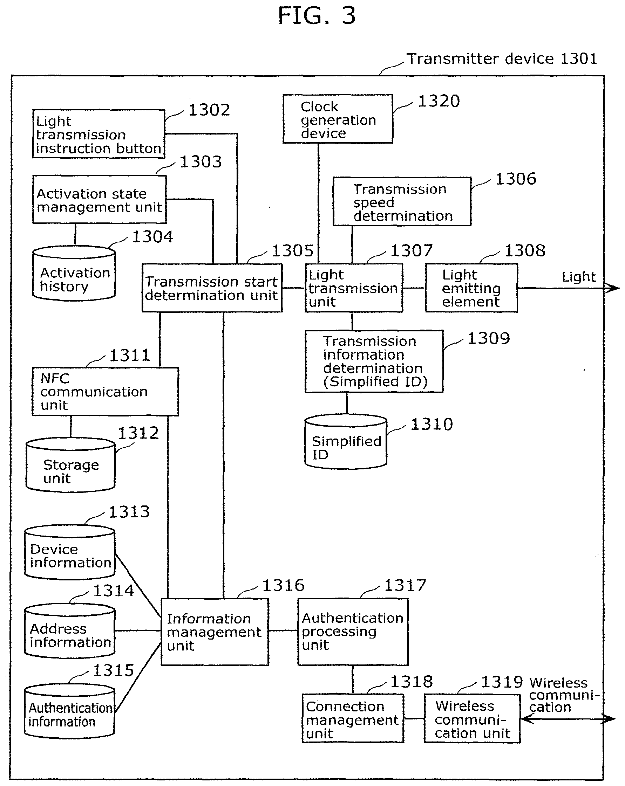

FIG. 3 is a diagram illustrating an example of a configuration of a transmitter device according to Embodiment 1.
[FIG. 4]

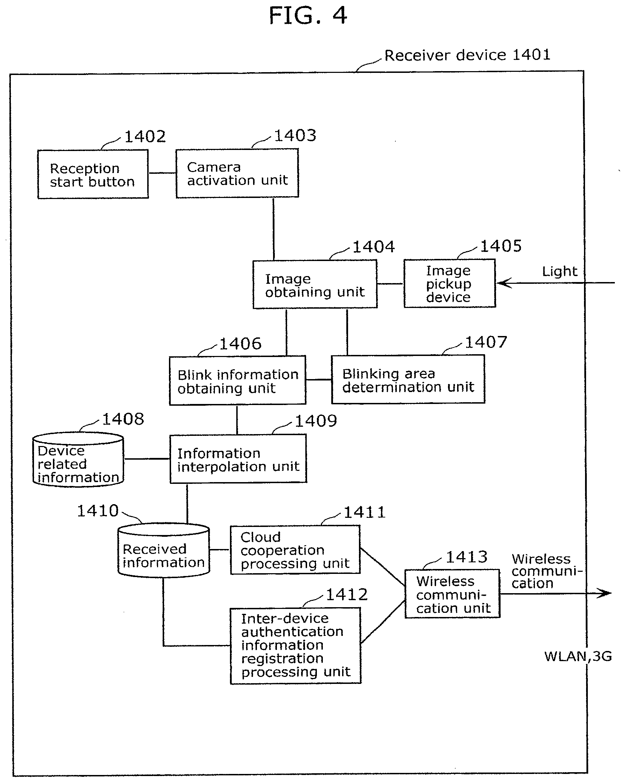

FIG. 4 is a diagram illustrating an example of a configuration of a receiver device according to Embodiment 1.
[FIG. 5]

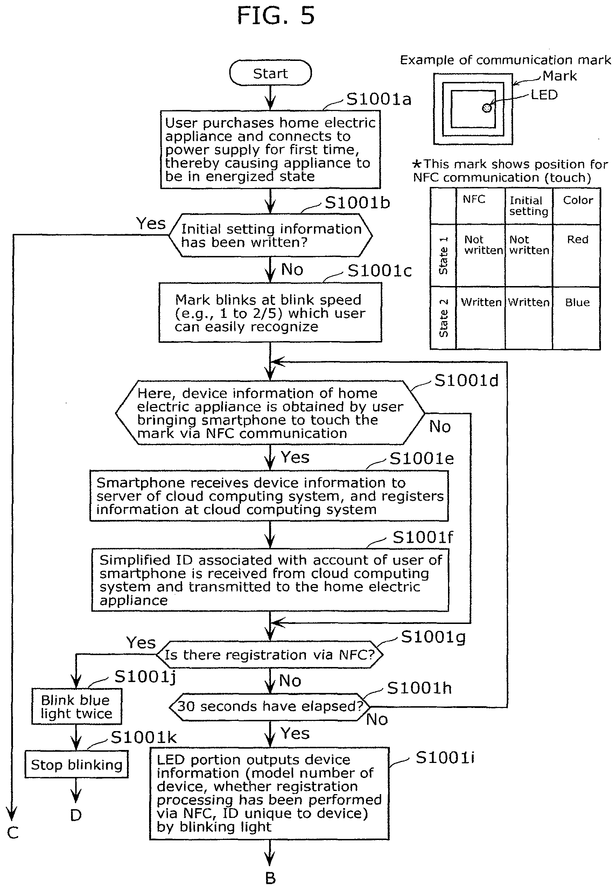

FIG. 5 is a diagram illustrating a flow of processing of transmitting information to the receiver device by blinking an LED of the transmitter device according to Embodiment 1.
[FIG. 6]

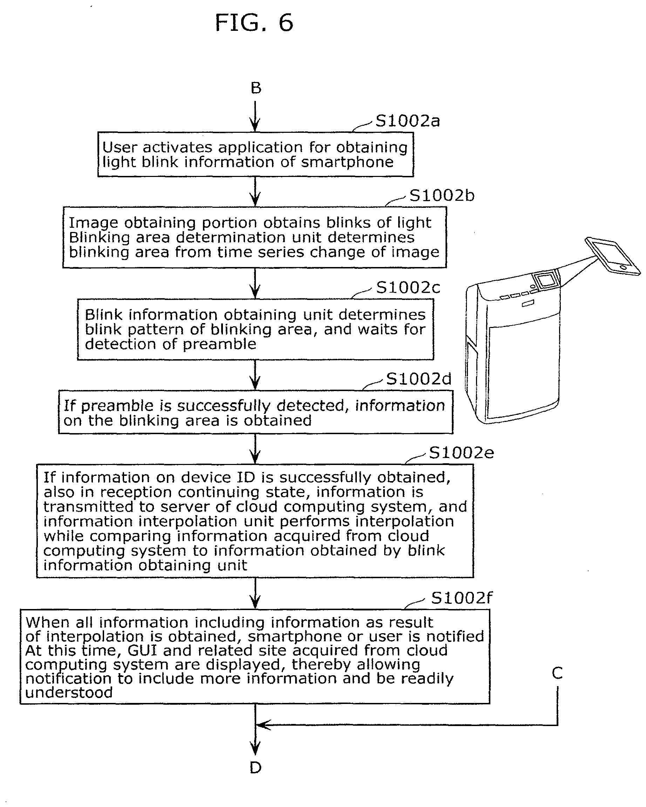

FIG. 6 is a diagram illustrating a flow of processing of transmitting information to the receiver device by blinking an LED of the transmitter device according to Embodiment 1.
[FIG. 7]

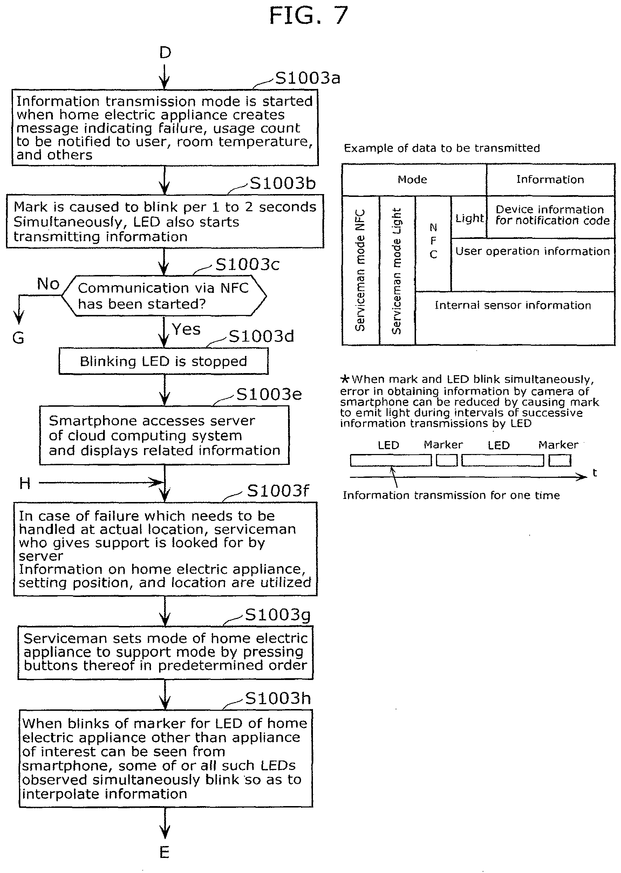

FIG. 7 is a diagram illustrating a flow of processing of transmitting information to the receiver device by blinking an LED of the transmitter device according to Embodiment 1.
[FIG. 8]

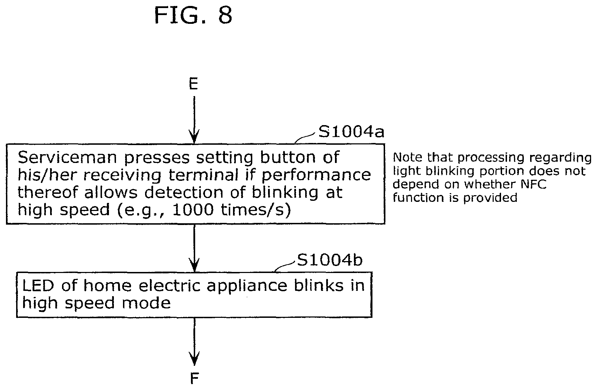

FIG. 8 is a diagram illustrating a flow of processing of transmitting information to the receiver device by blinking an LED of the transmitter device according to Embodiment 1.
[FIG. 9]

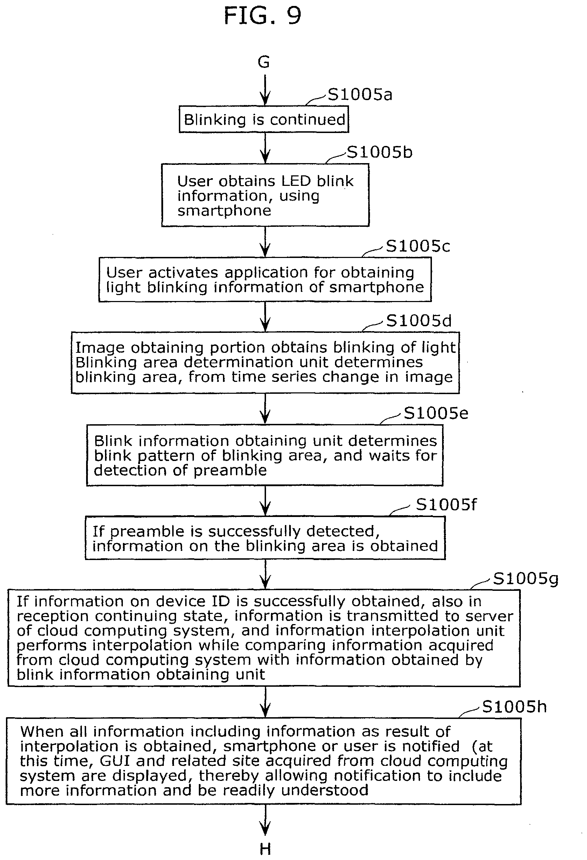

FIG. 9 is a diagram illustrating a flow of processing of transmitting information to the receiver device by blinking an LED of the transmitter device according to Embodiment 1.
[FIG. 10]

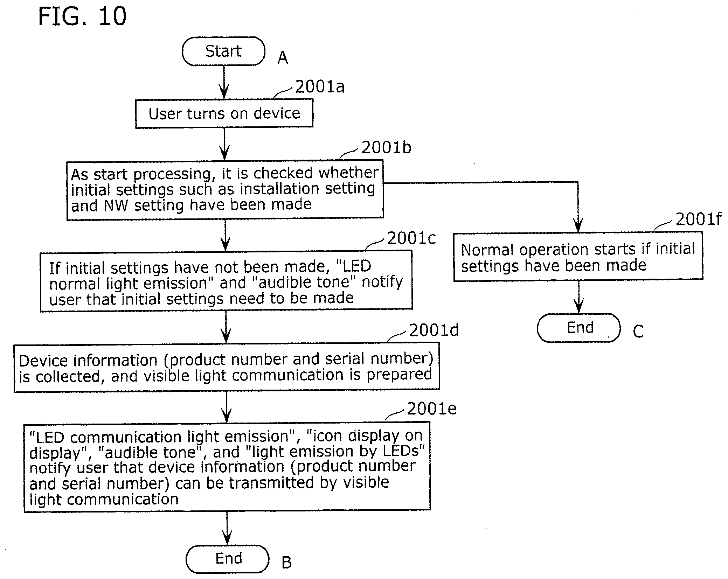

FIG. 10 is a diagram for describing a procedure of performing communication between a user and a device using visible light according to Embodiment 2.
[FIG. 11]

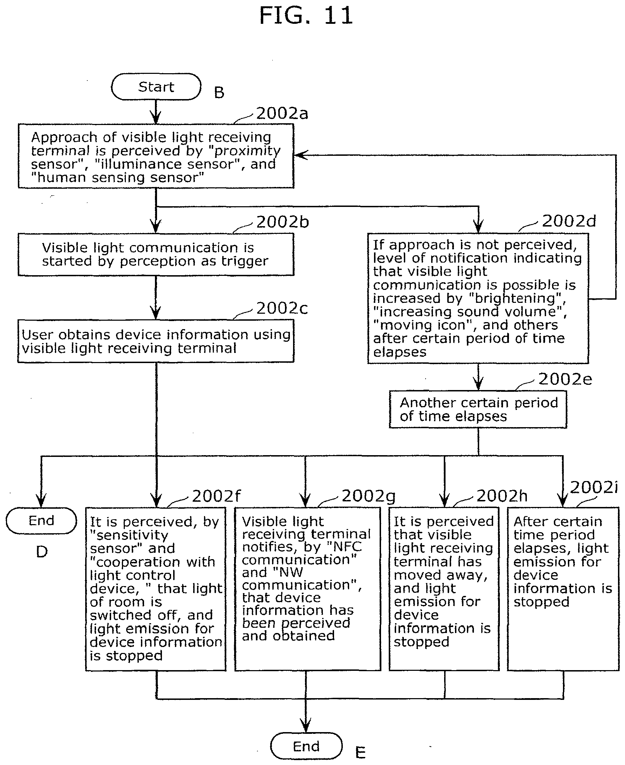

FIG. 11 is a diagram for describing a procedure of performing communication between the user and the device using visible light according to Embodiment 2.
[FIG. 12]

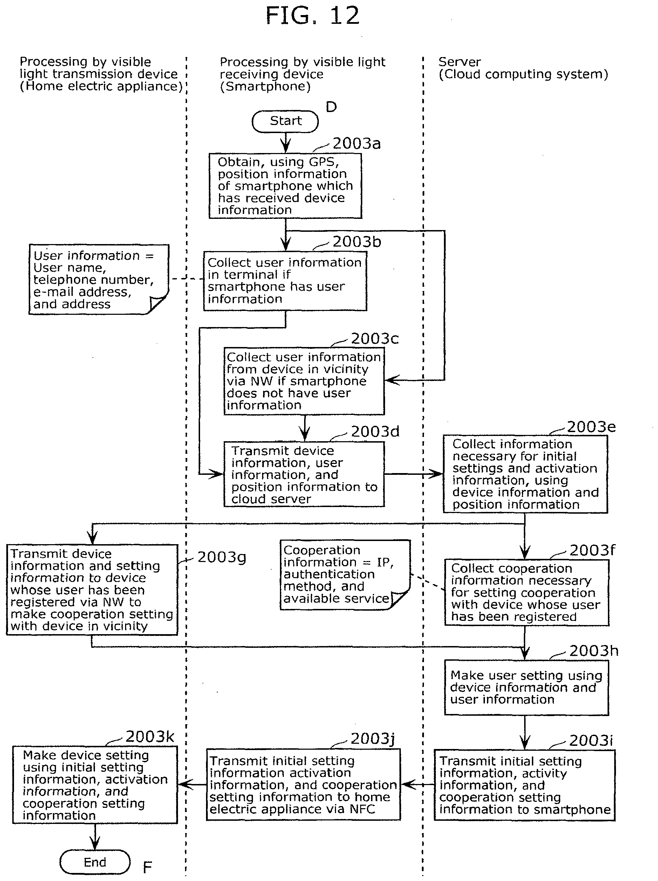

FIG. 12 is a diagram for describing a procedure from when a user purchases a device until when the user makes initial settings of the device according to Embodiment 2.
[FIG. 13]

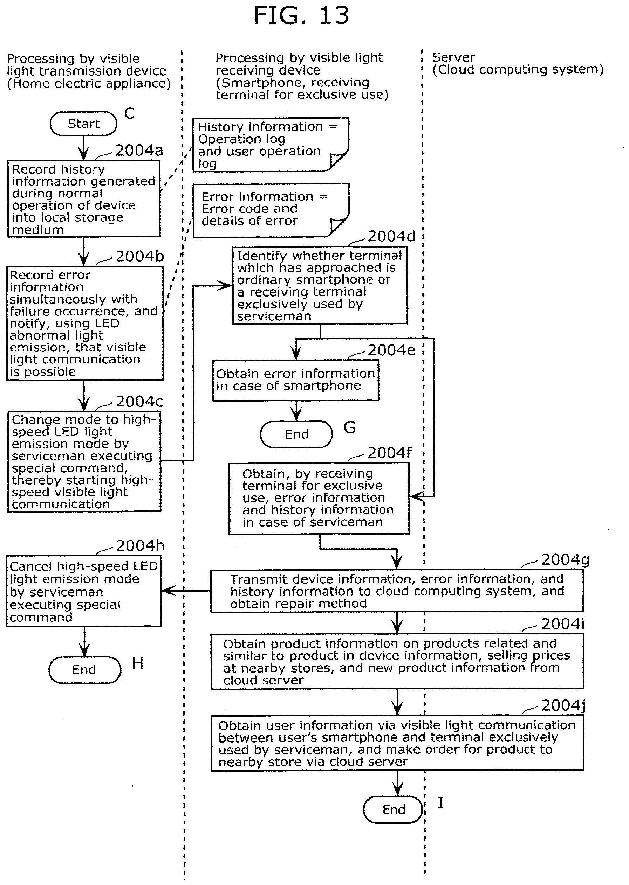

FIG. 13 is a diagram for describing service exclusively performed by a serviceman when a device fails according to Embodiment 2.
[FIG. 14]

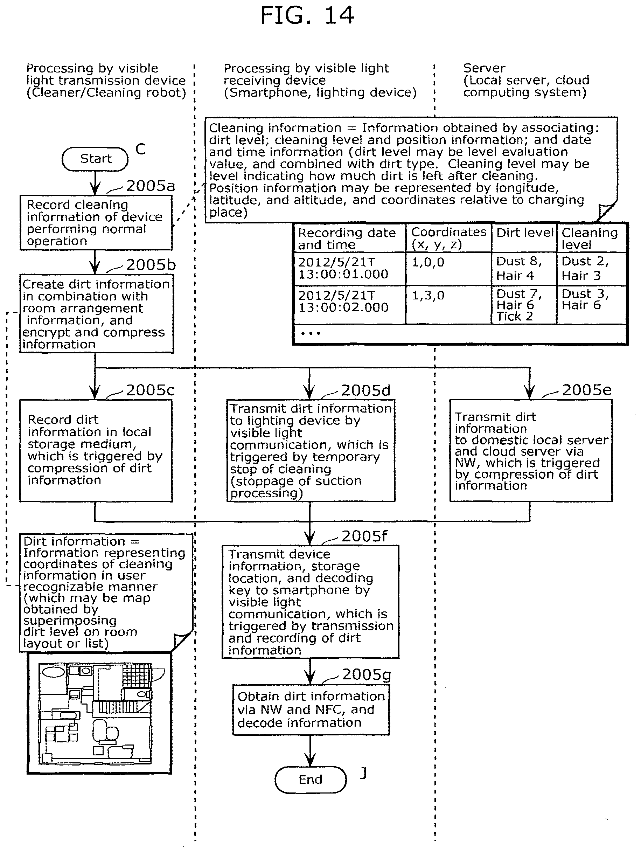

FIG. 14 is a diagram for describing service for checking a cleaning state using a cleaner and visible light communication according to Embodiment 2.
[FIG. 15]

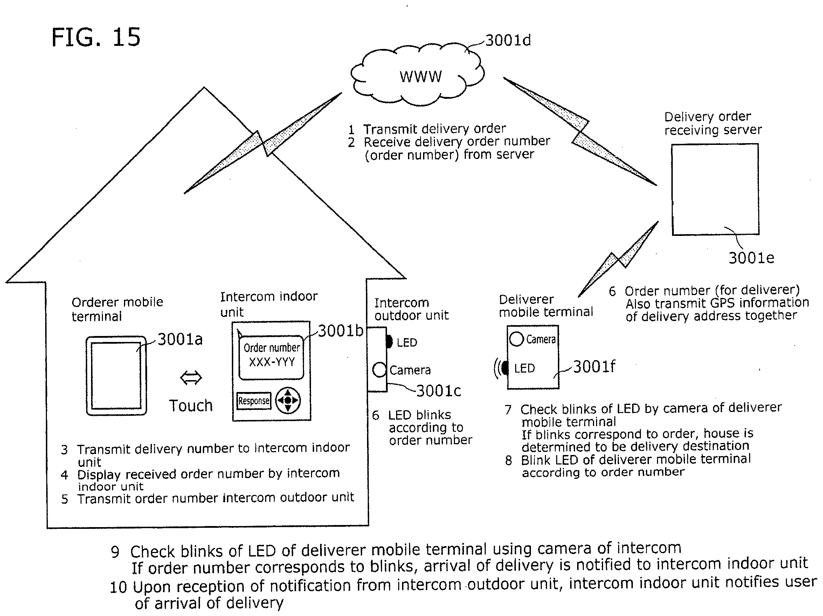

FIG. 15 is a schematic diagram of home delivery service support using optical communication according to Embodiment 3.
[FIG. 16]

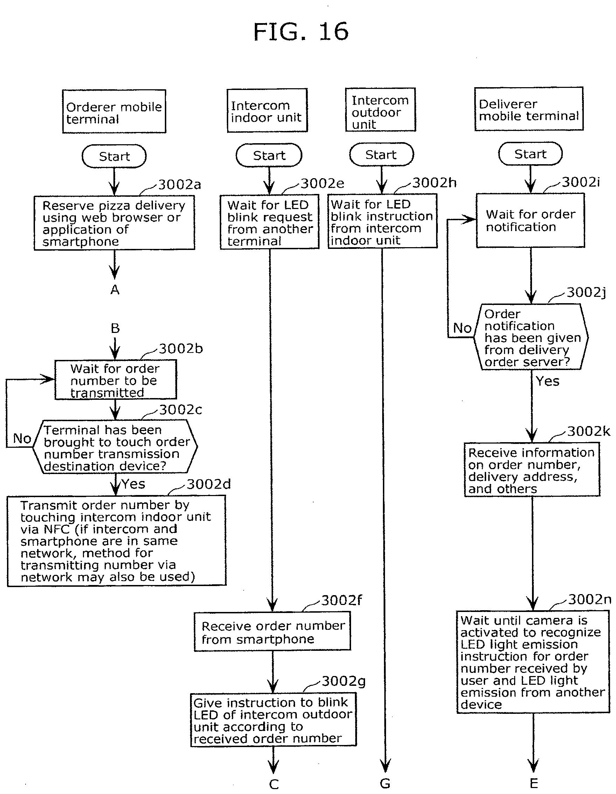

FIG. 16 is a flowchart for describing home delivery service support using optical communication according to Embodiment 3.
[FIG. 17]

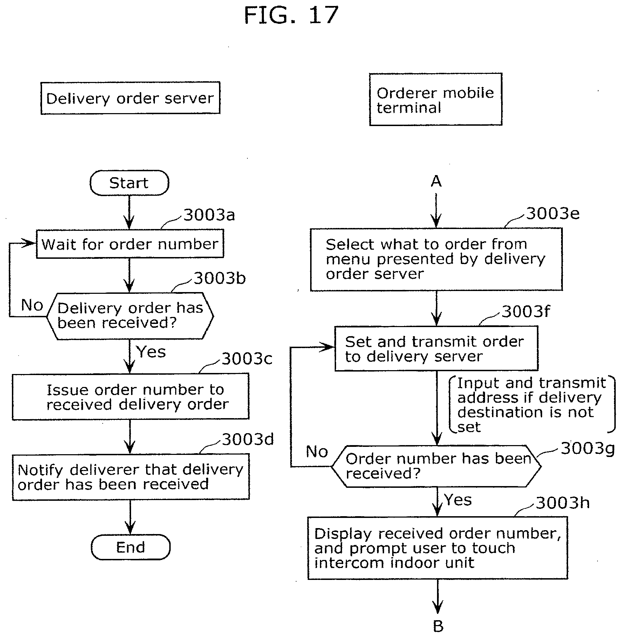

FIG. 17 is a flowchart for describing home delivery service support using optical communication according to Embodiment 3.
[FIG. 18]

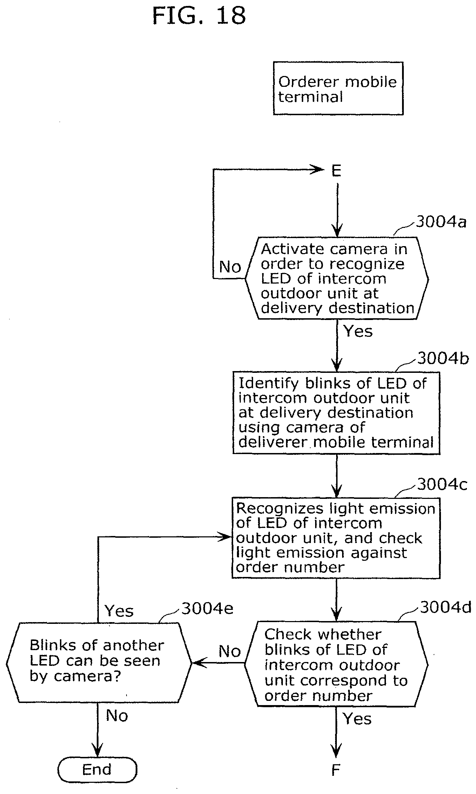

FIG. 18 is a flowchart for describing home delivery service support using optical communication according to Embodiment 3.
[FIG. 19]

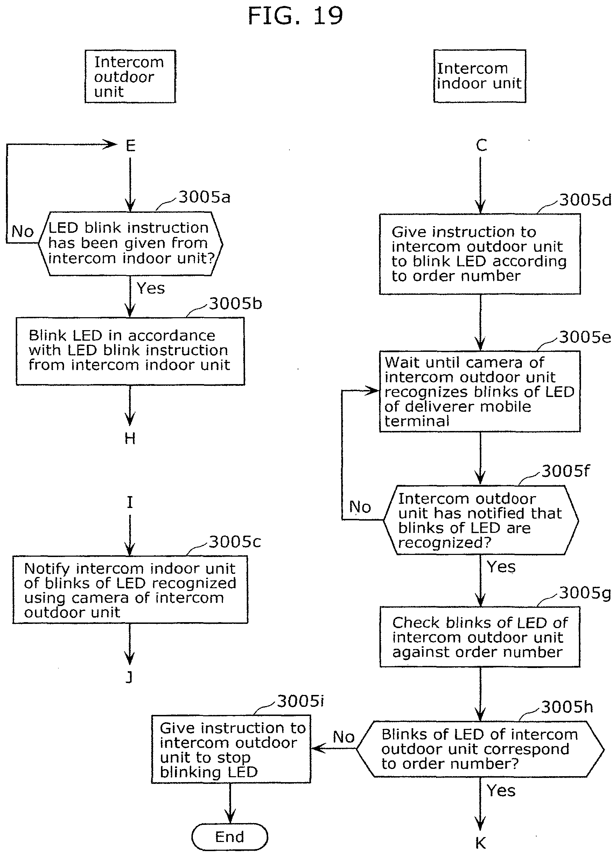

FIG. 19 is a flowchart for describing home delivery service support using optical communication according to Embodiment 3.

[FIG. 20]

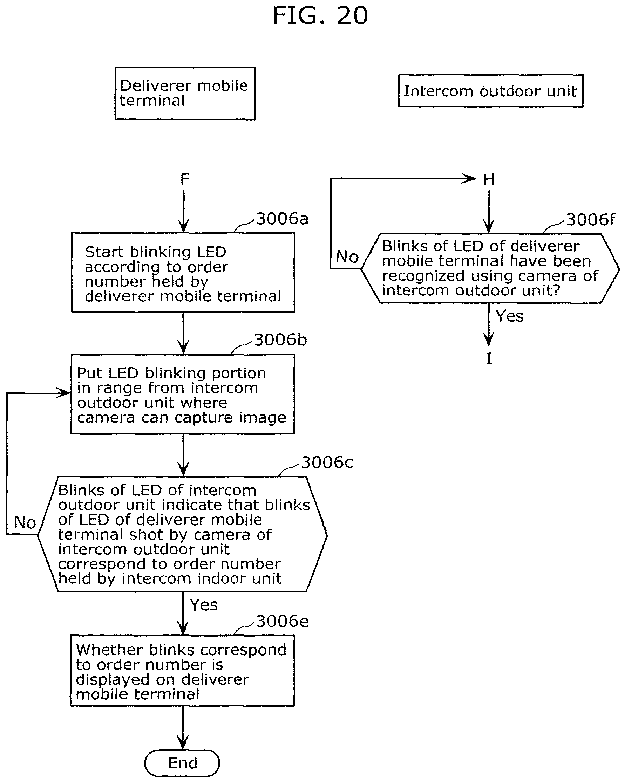

FIG. 20 is a flowchart for describing home delivery service support using optical communication according to Embodiment 3.

[FIG. 21]

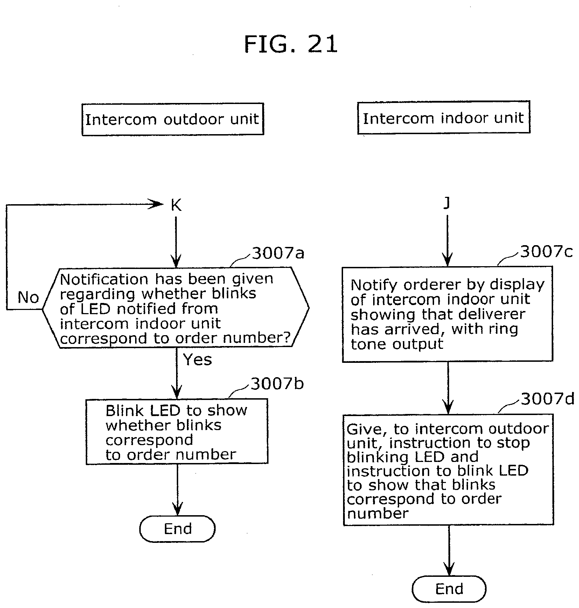

FIG. 21 is a flowchart for describing home delivery service support using optical communication according to Embodiment 3.

[FIG. 22]

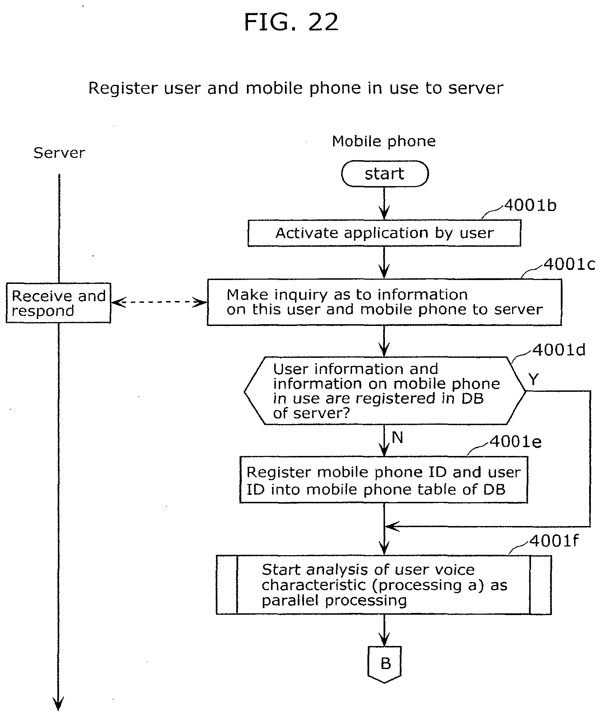

FIG. 22 is a diagram for describing processing of registering a user and a mobile phone in use to a server according to Embodiment 4.

[FIG. 23]

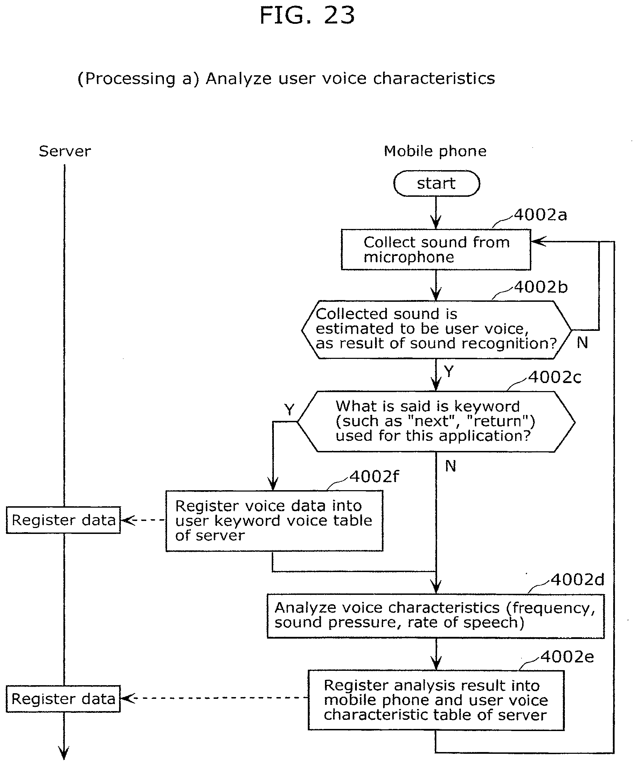

FIG. 23 is a diagram for describing processing of analyzing user voice characteristics according to Embodiment 4.

[FIG. 24]

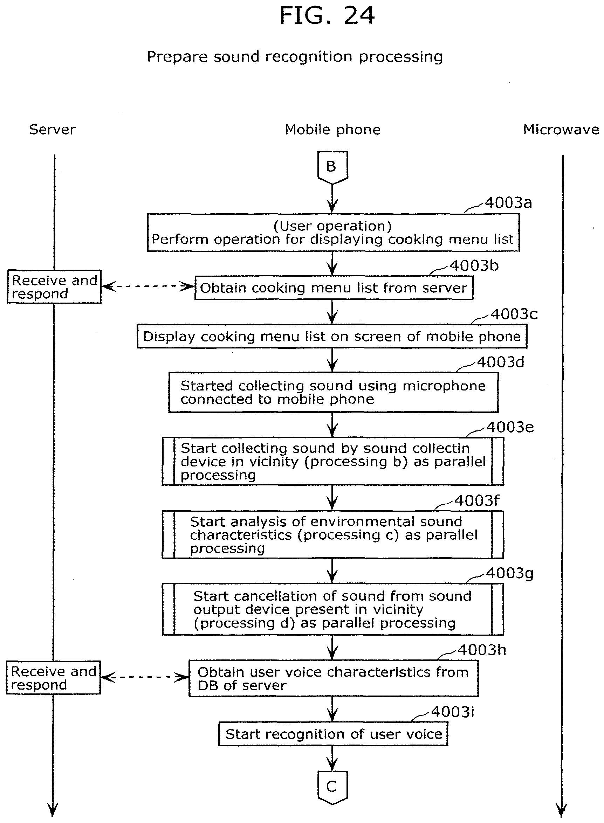

FIG. 24 is a diagram for describing processing of preparing sound recognition processing according to Embodiment 4.

[FIG. 25]

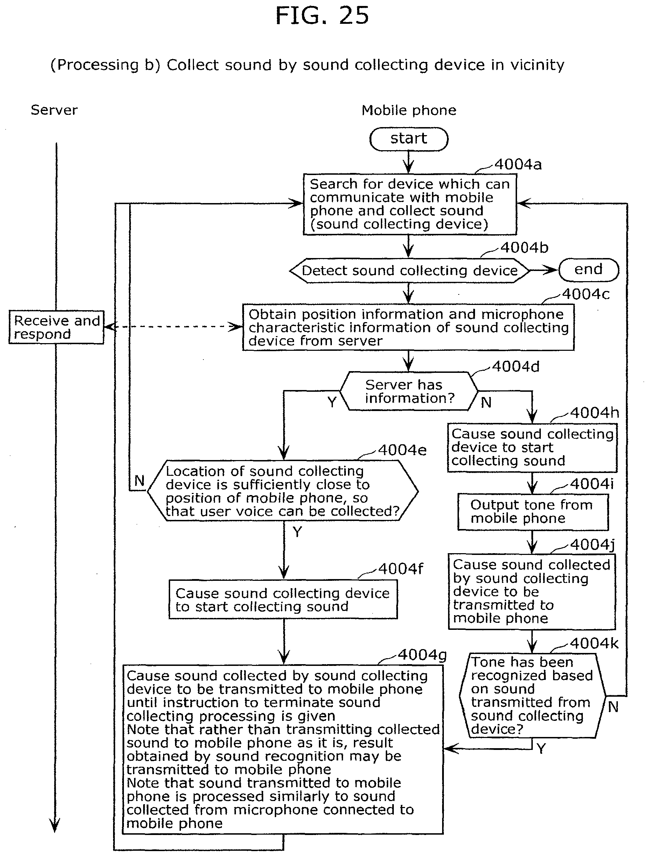

FIG. 25 is a diagram for describing processing of collecting sound by a sound collecting device in the vicinity according to Embodiment 4.

[FIG. 26]

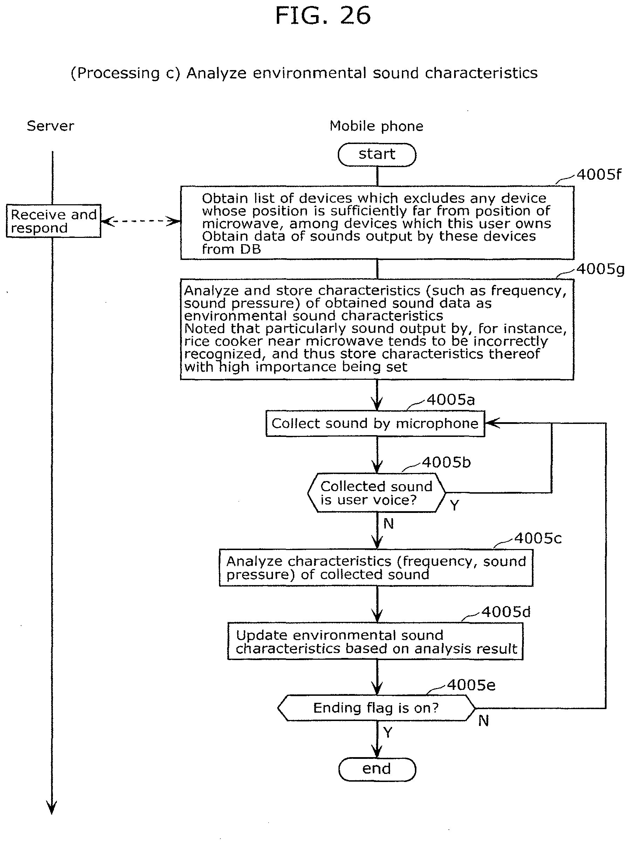

FIG. 26 is a diagram for describing processing of analyzing environmental sound characteristics according to Embodiment 4.

[FIG. 27]

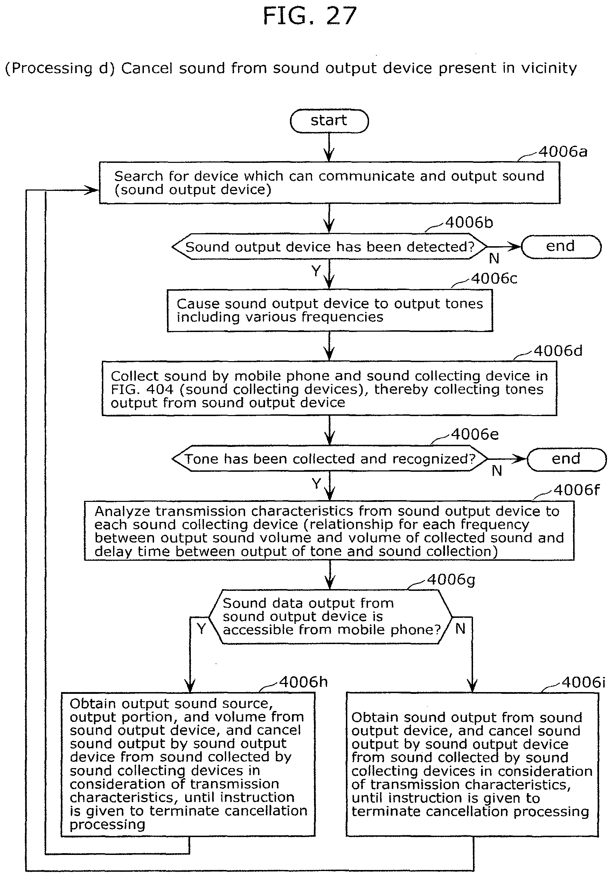

FIG. 27 is a diagram for describing processing of canceling sound from a sound output device which is present in the vicinity according to Embodiment 4.

[FIG. 28]

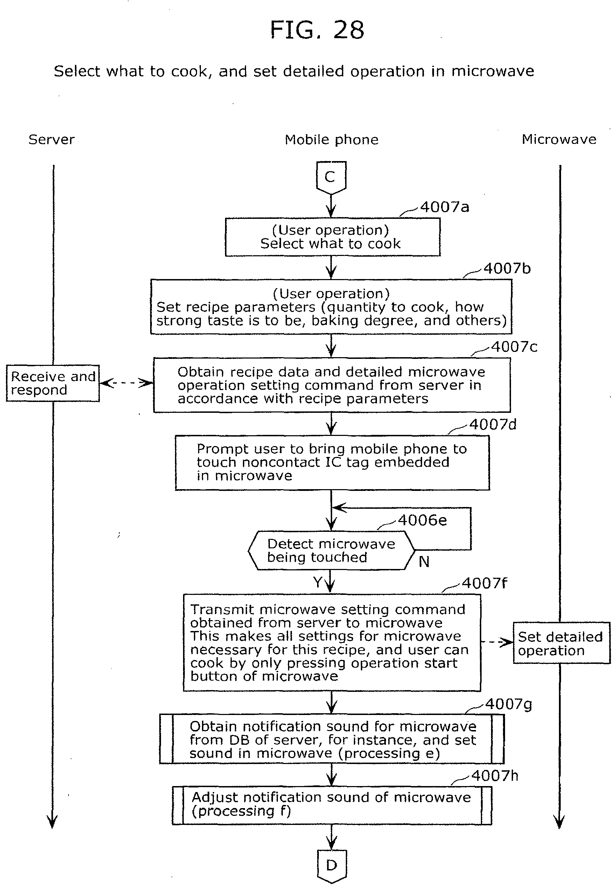

FIG. 28 is a diagram for describing processing of selecting what to cook and setting detailed operation of a microwave according to Embodiment 4.

[FIG. 29]

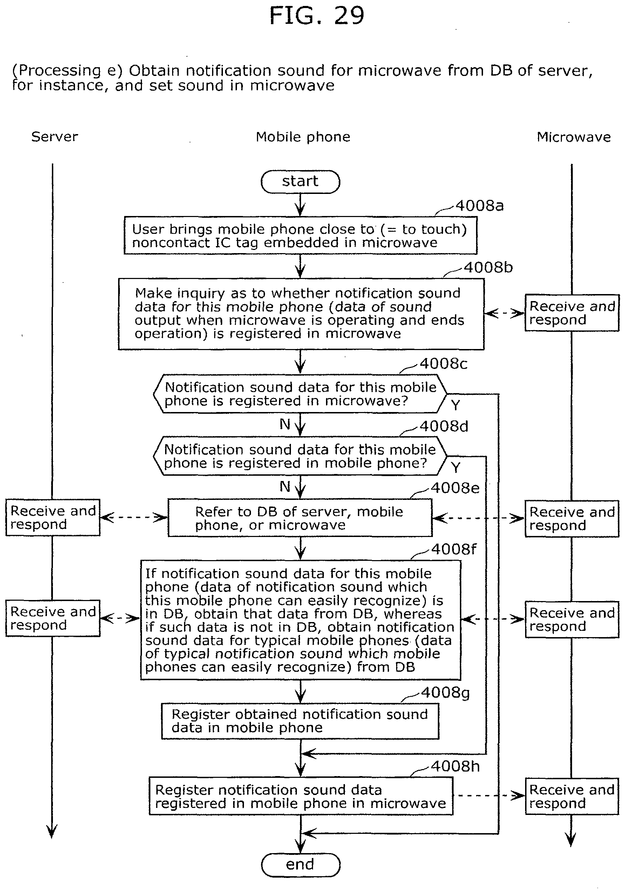

FIG. 29 is a diagram for describing processing of obtaining notification sound for the microwave from a DB of a server, for instance, and setting the sound in the microwave according to Embodiment 4.

[FIG. 30]

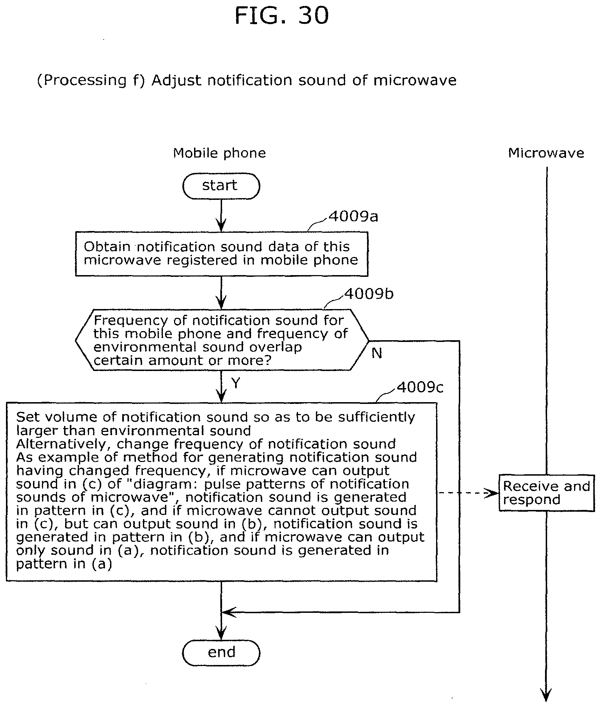

FIG. 30 is a diagram for describing processing of adjusting notification sound of the microwave according to Embodiment 4.

[FIG. 31]

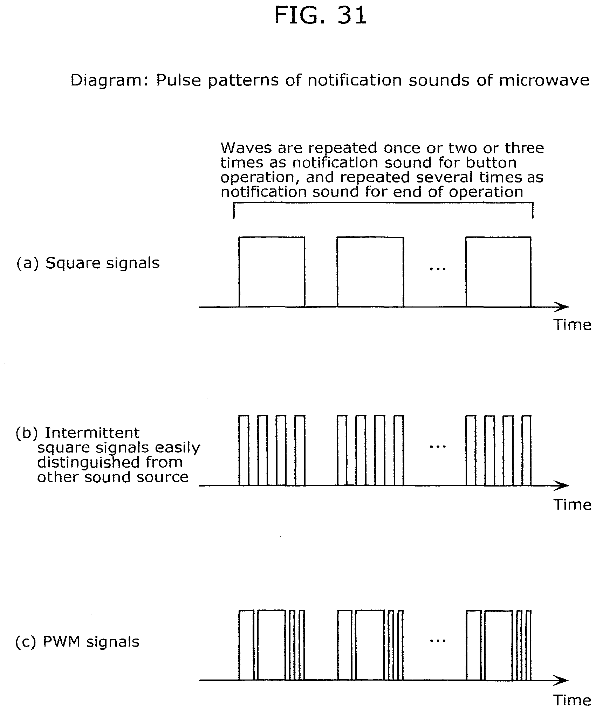

FIG. 31 is a diagram illustrating examples of waveforms of notification sounds set in the microwave according to Embodiment 4.

[FIG. 32]

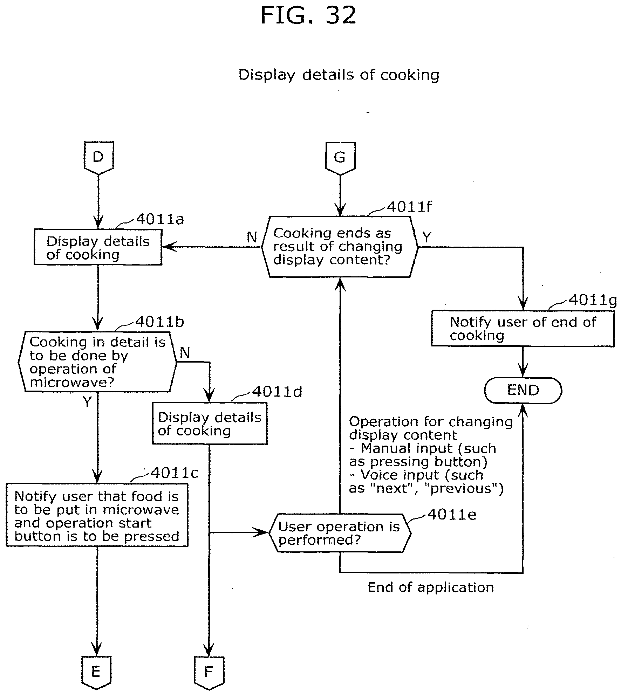

FIG. 32 is a diagram for describing processing of displaying details of cooking according to Embodiment 4.

[FIG. 33]

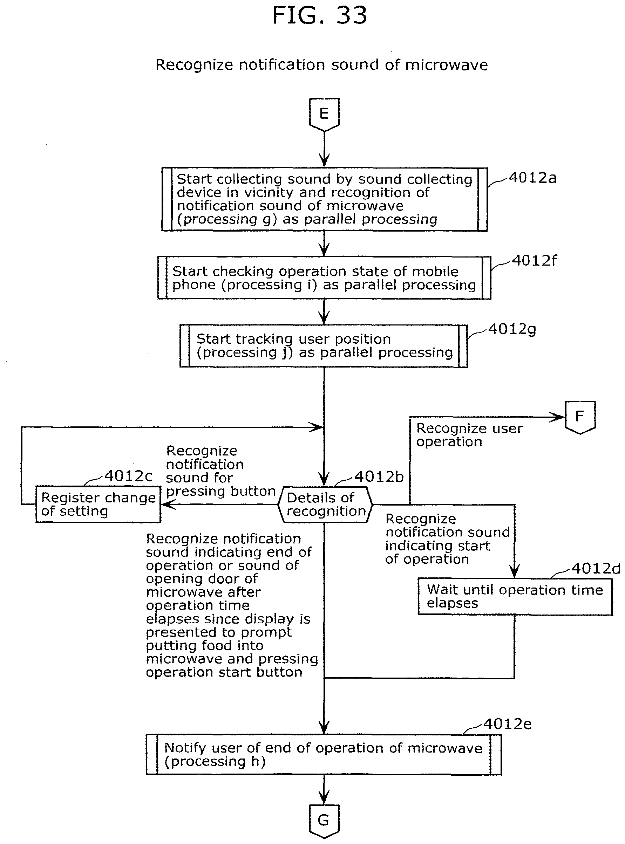

FIG. 33 is a diagram for describing processing of recognizing notification sound of the microwave according to Embodiment 4.

[FIG. 34]

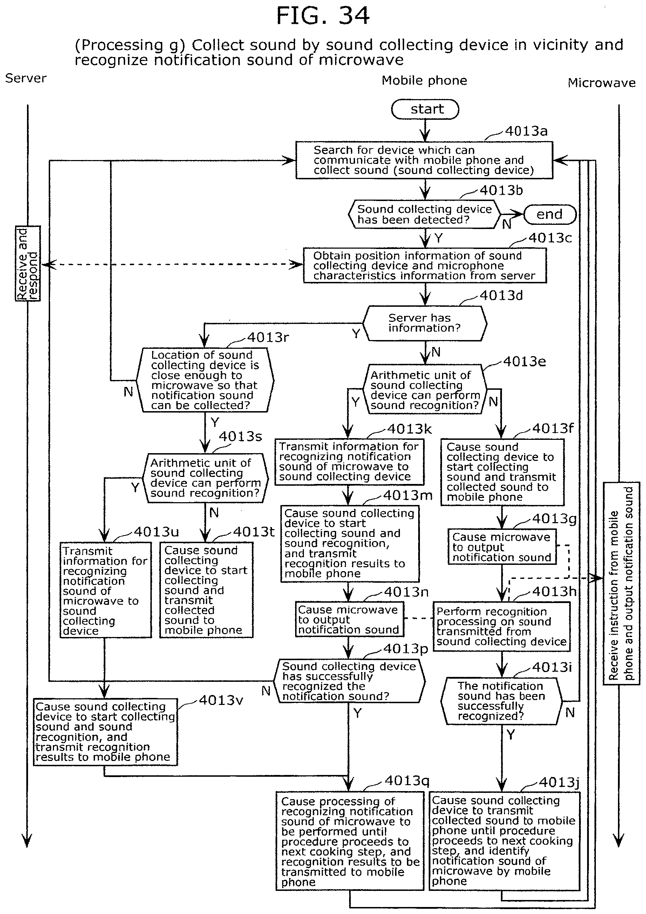

FIG. 34 is a diagram for describing processing of collecting sound by a sound collecting device in the vicinity and recognizing notification sound of the microwave according to Embodiment 4.

[FIG. 35]

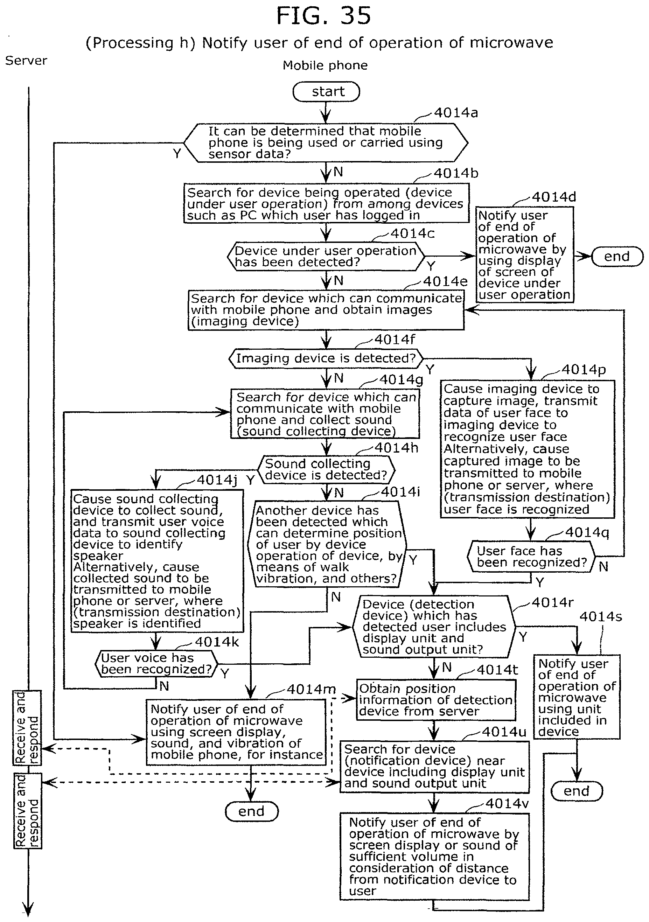

FIG. 35 is a diagram for describing processing of notifying a user of the end of operation of the microwave according to Embodiment 4.

[FIG. 36]

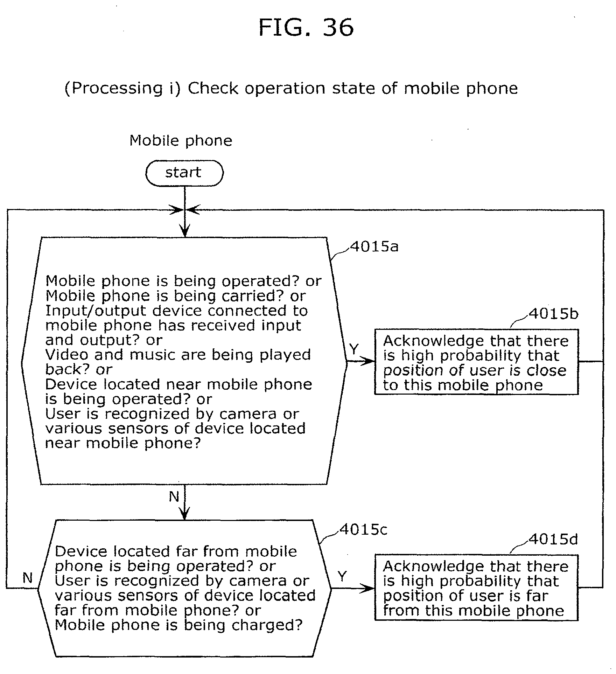

FIG. 36 is a diagram for describing processing of checking an operation state of a mobile phone according to Embodiment 4.

[FIG. 37]

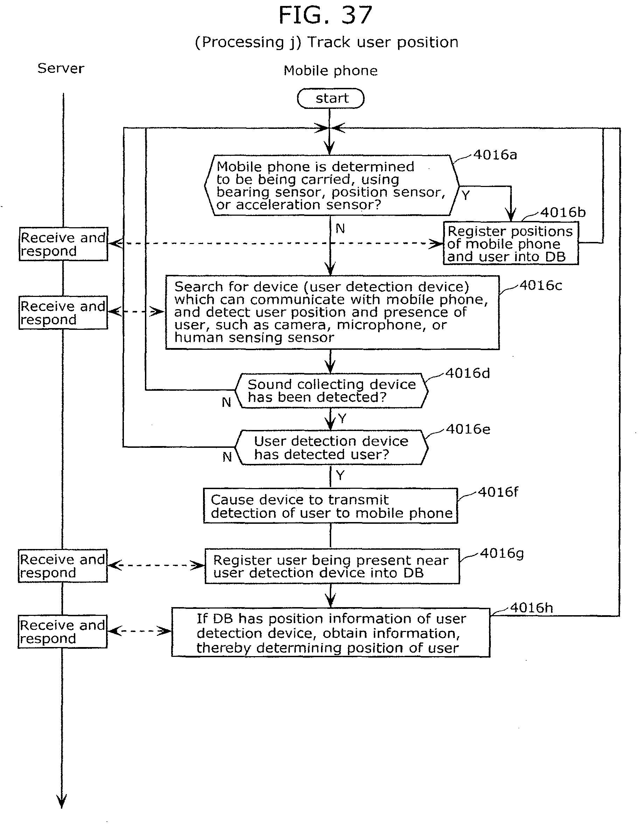

FIG. 37 is a diagram for describing processing of tracking a user position according to Embodiment 4.

[FIG. 38]

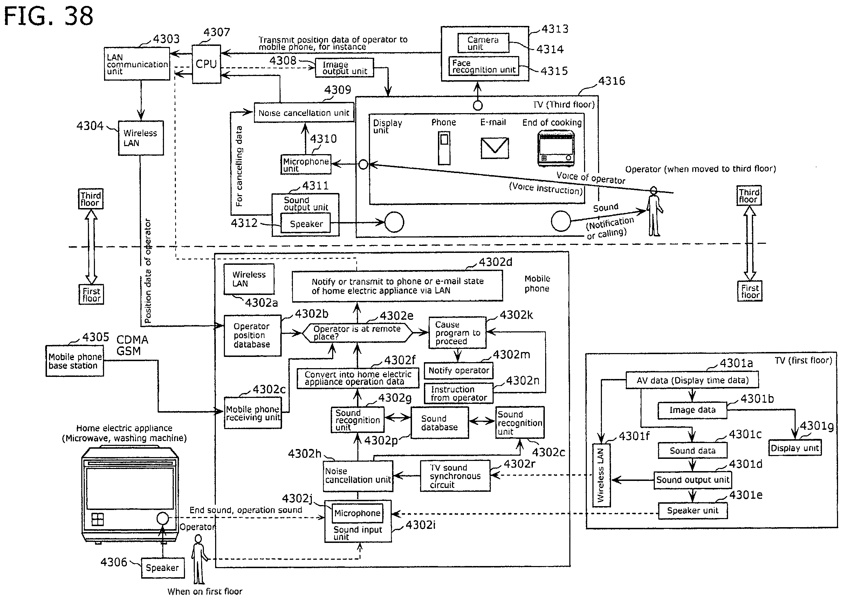

FIG. 38 is a diagram illustrating that while canceling sound from a sound output device, notification sound of a home electric appliance is recognized, an electronic device which can communicate is caused to recognize a current position of a user (operator), and based on the recognition result of the user position, a device located near the user position is caused to give a notification to the user.

[FIG. 39]

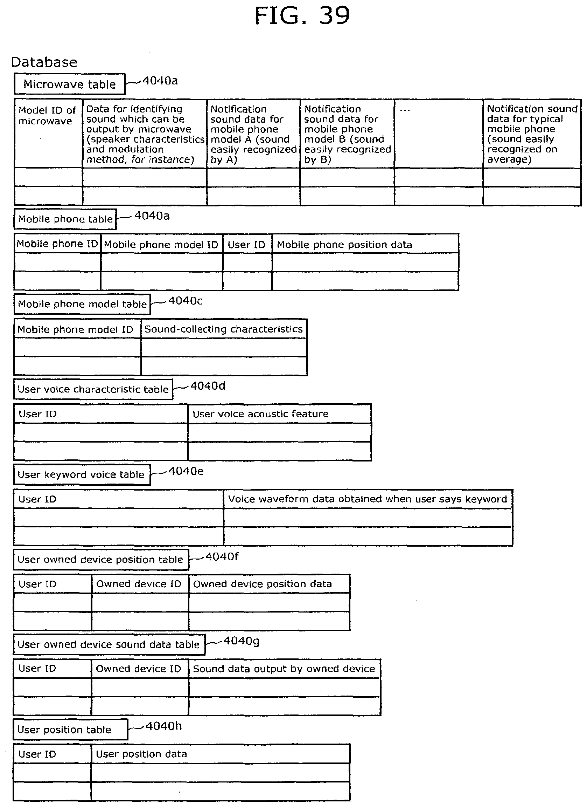

FIG. 39 is a diagram illustrating content of a database held in the server, the mobile phone, or the microwave according to Embodiment 4.

[FIG. 40]

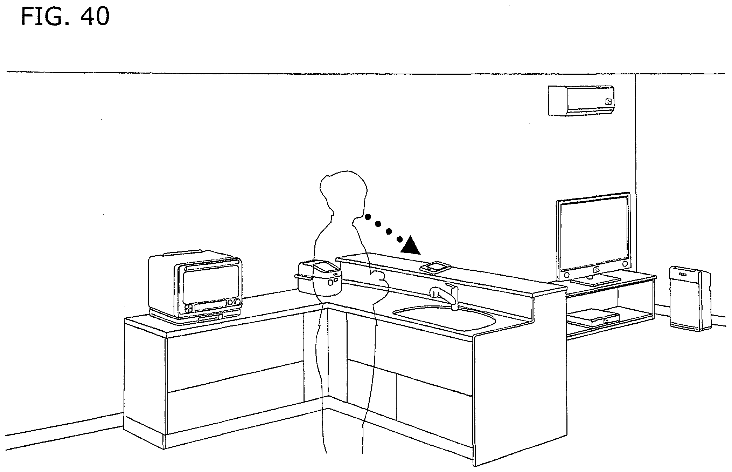

FIG. 40 is a diagram illustrating that a user cooks based on cooking processes displayed on a mobile phone, and further operates the display content of the mobile phone by saying "next", "return", and others, according to Embodiment 4.

[FIG. 41]

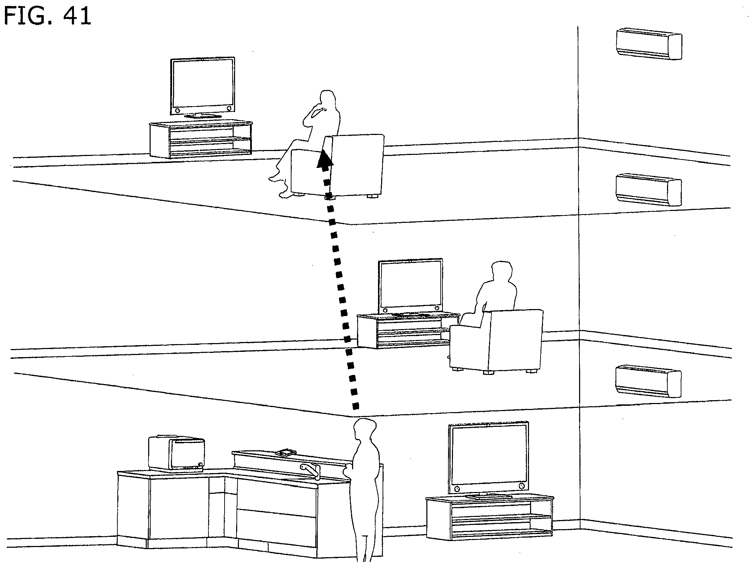

FIG. 41 is a diagram illustrating that the user has moved to another place while he/she is waiting until the operation of the microwave ends after starting the operation or while he/she is stewing food according to Embodiment 4.

[FIG. 42]

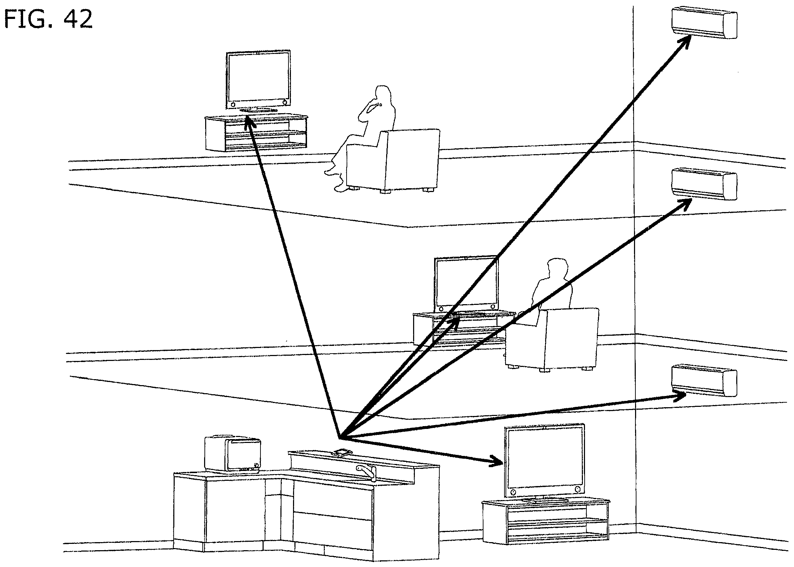

FIG. 42 is a diagram illustrating that a mobile phone transmits an instruction to detect a user to a device which is connected to the mobile phone via a network, and can recognize a position of the user and the presence of the user, such as a camera, a microphone, or a human sensing sensor.

[FIG. 43]

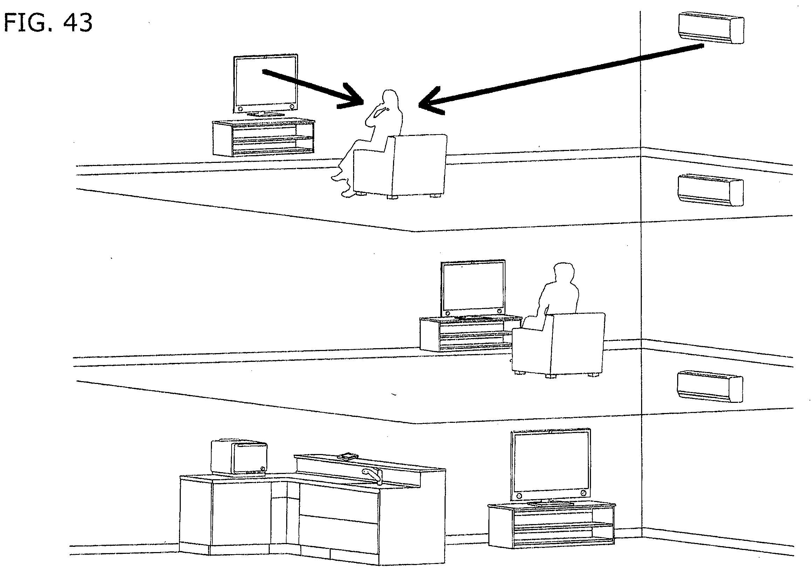

FIG. 43 is a diagram illustrating that a user face is recognized using a camera included in a television, and further the movement and presence of the user are recognized using a human sensing sensor of an air-conditioner, as an example of user detection according to Embodiment 4.

[FIG. 44]

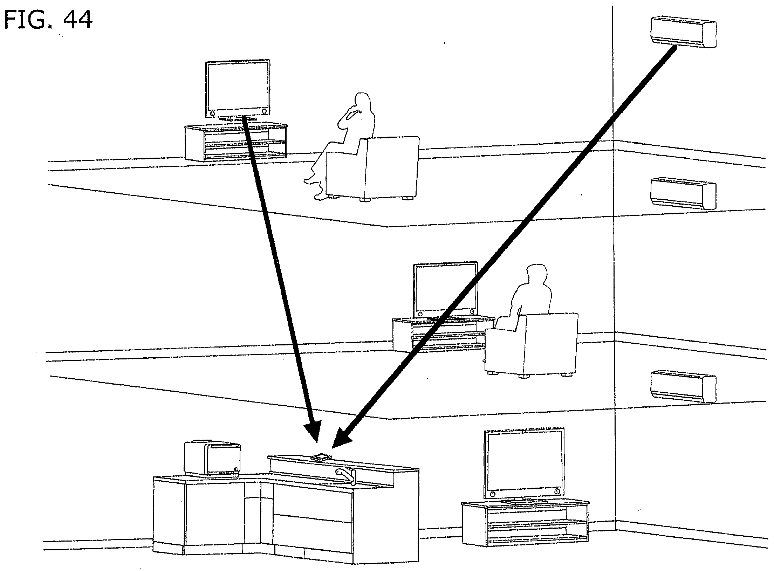

FIG. 44 is a diagram illustrating that devices which have detected the user transmit to the mobile phone the detection of the user and a relative position of the user to the devices which have detected the user.

[FIG. 45]

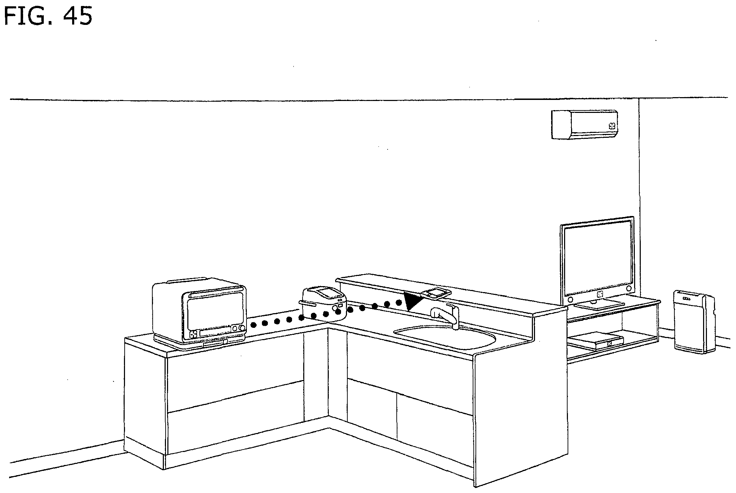

FIG. 45 is a diagram illustrating that the mobile phone recognizes microwave operation end sound according to Embodiment 4.

[FIG. 46]

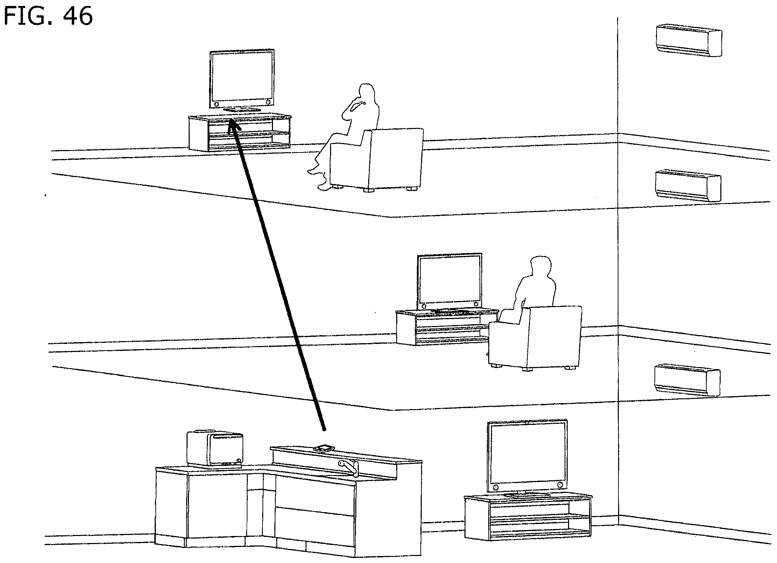

FIG. 46 is a diagram illustrating that the mobile phone which has recognized the end of the operation of the microwave transmits an instruction to, among the devices which have detected the user, a device having a screen-display function and a sound output function to notify the user of the end of the microwave operation.

[FIG. 47]

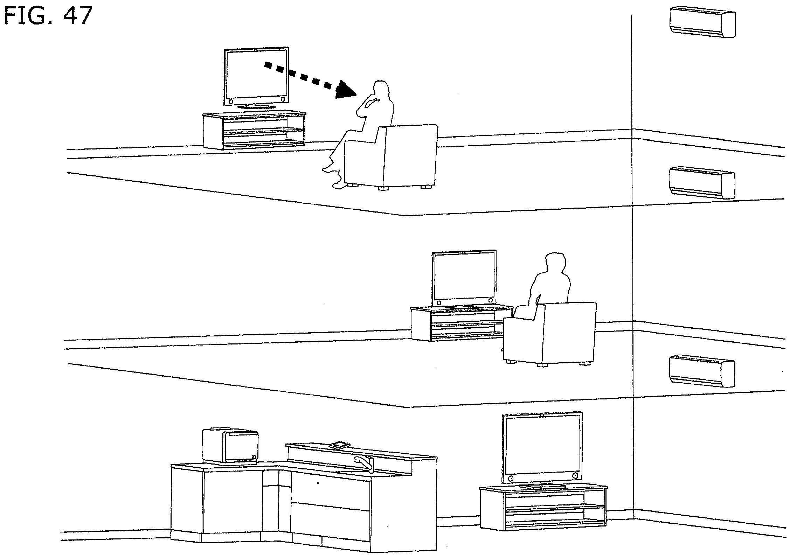

FIG. 47 is a diagram illustrating that the device which has received an instruction notifies the user of the details of the notification.

[FIG. 48]

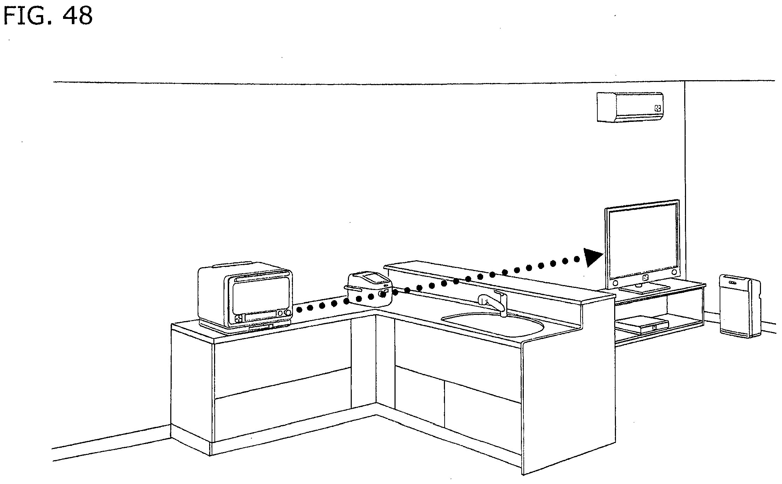

FIG. 48 is a diagram illustrating that a device which is present near the microwave, is connected to the mobile phone via a network, and includes a microphone recognizes the microwave operation end sound.

[FIG. 49]

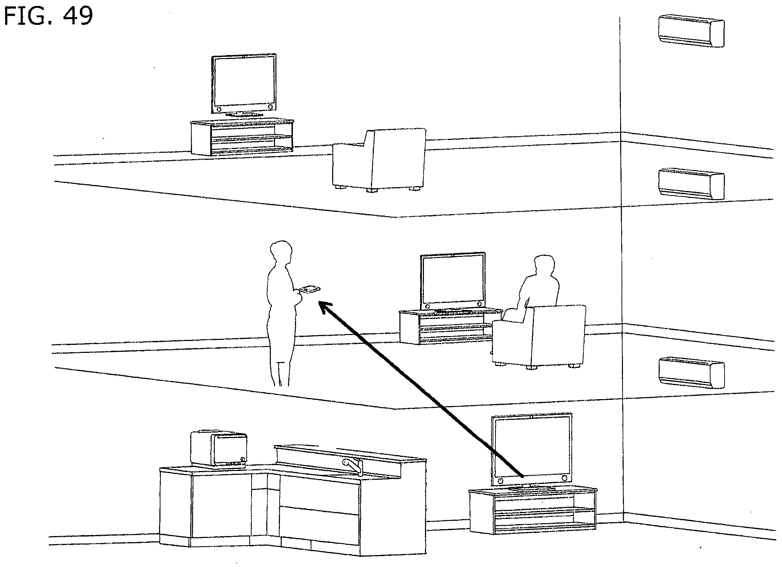

FIG. 49 is a diagram illustrating that the device which has recognized the end of operation of the microwave notifies the mobile phone thereof.

[FIG. 50]

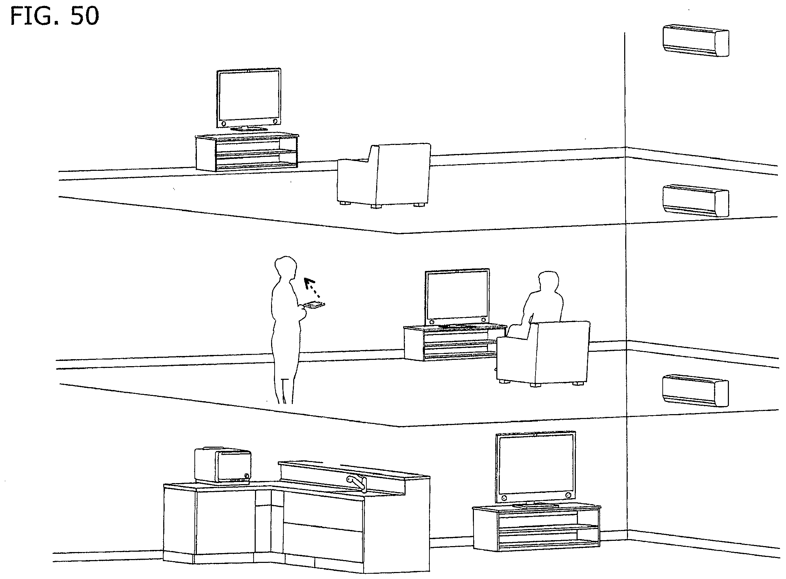

FIG. 50 is a diagram illustrating that if the mobile phone is near the user when the mobile phone receives the notification indicating the end of the operation of the microwave, the user is notified of the end of the operation of the microwave, using screen display, sound output, and the like by the mobile phone.

[FIG. 51]

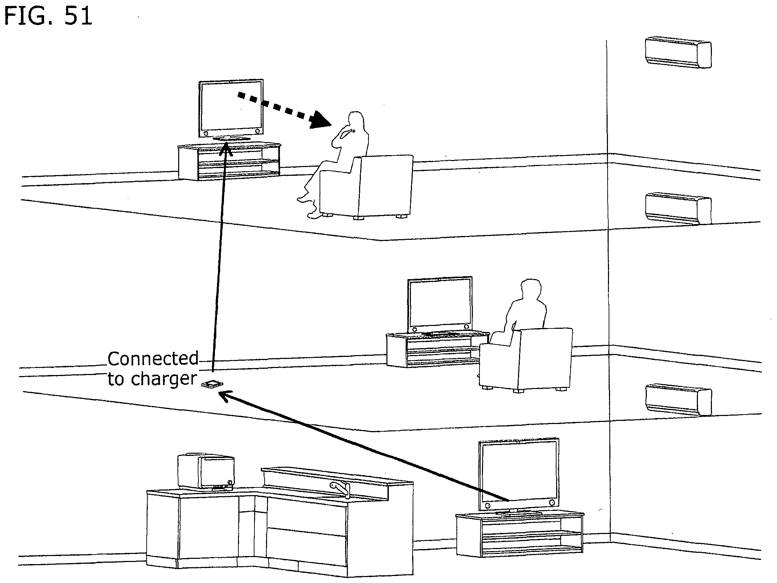

FIG. 51 is a diagram illustrating that the user is notified of the end of the operation of the microwave.

[FIG. 52]

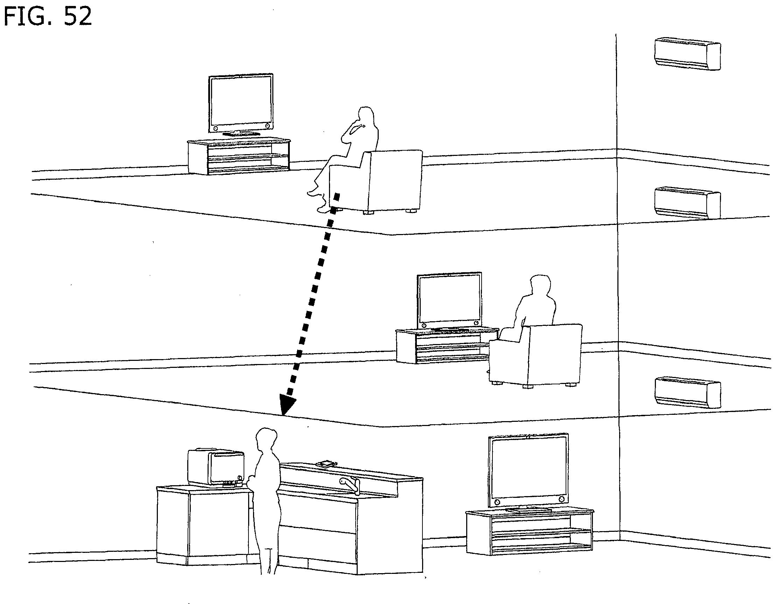

FIG. 52 is a diagram illustrating that the user who has received the notification indicating the end of the operation of the microwave moves to a kitchen.

[FIG. 53]

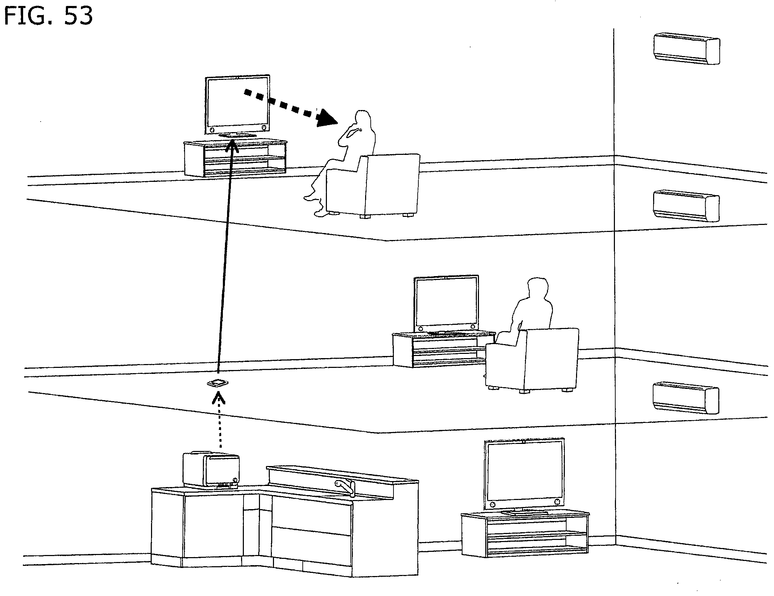

FIG. 53 is a diagram illustrating that the microwave transmits information such as the end of operation to the mobile phone by wireless communication, the mobile phone gives a notification instruction to the television which the user is watching, and the user is notified by a screen display and sound of the television.

[FIG. 54]

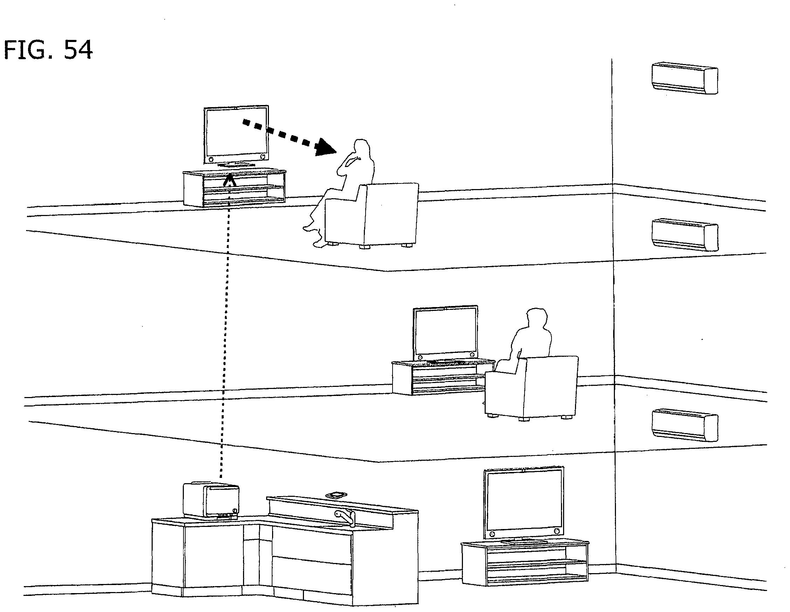

FIG. 54 is a diagram illustrating that the microwave transmits information such as the end of operation to the television which the user is watching by wireless communication, and the user is notified thereof using the screen display and sound of the television.

[FIG. 55]

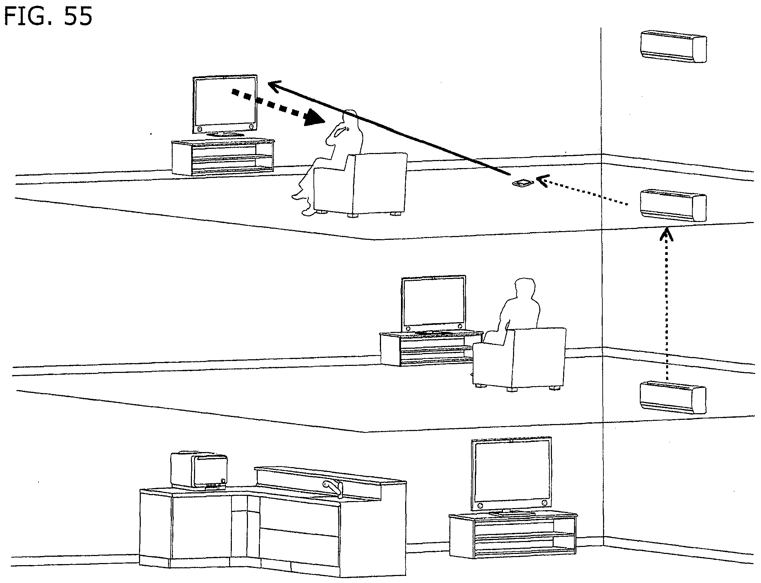

FIG. 55 is a diagram illustrating that the user is notified by the screen display and sound of the television.

[FIG. 56]

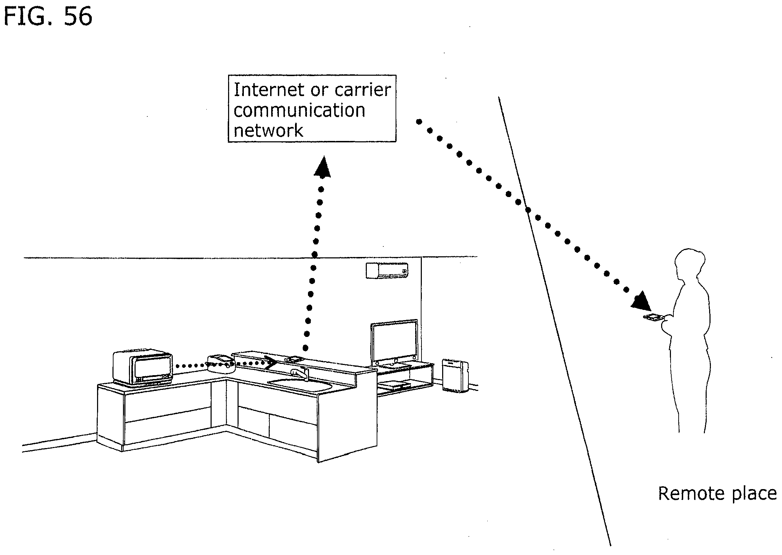

FIG. 56 is a diagram illustrating that a user who is at a remote place is notified of information.

[FIG. 57]

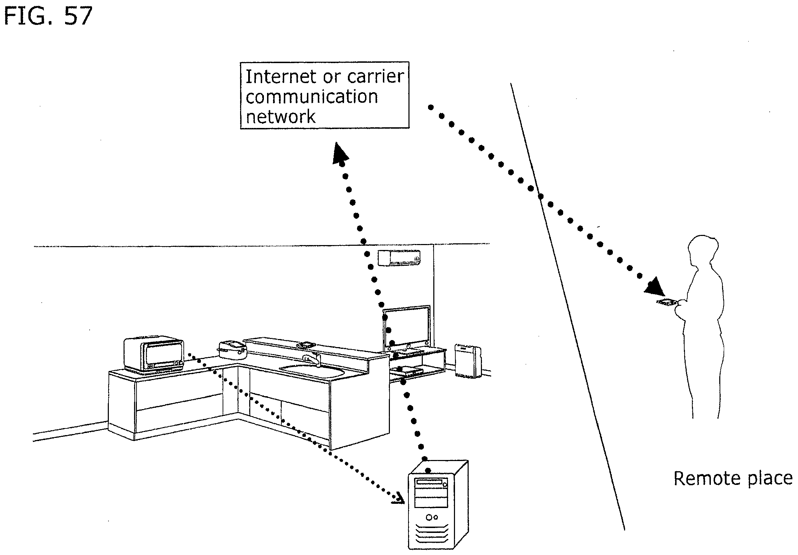

FIG. 57 is a diagram illustrating that if the microwave cannot directly communicate with the mobile phone serving as a hub, the microwave transmits information to the mobile phone via a personal computer, for instance.
[FIG. 58]

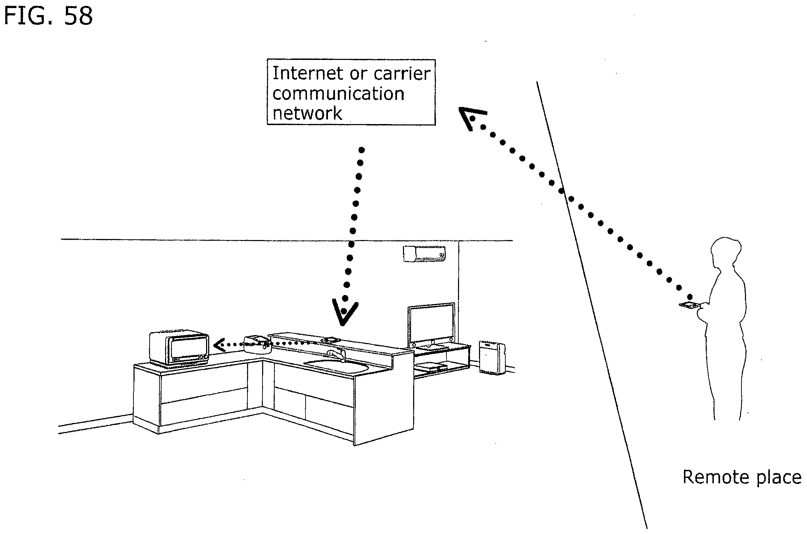

FIG. 58 is a diagram illustrating that the mobile phone which has received communication in FIG. 57 transmits information such as an operation instruction to the microwave, following the information-and-communication path in an opposite direction.
[FIG. 59]

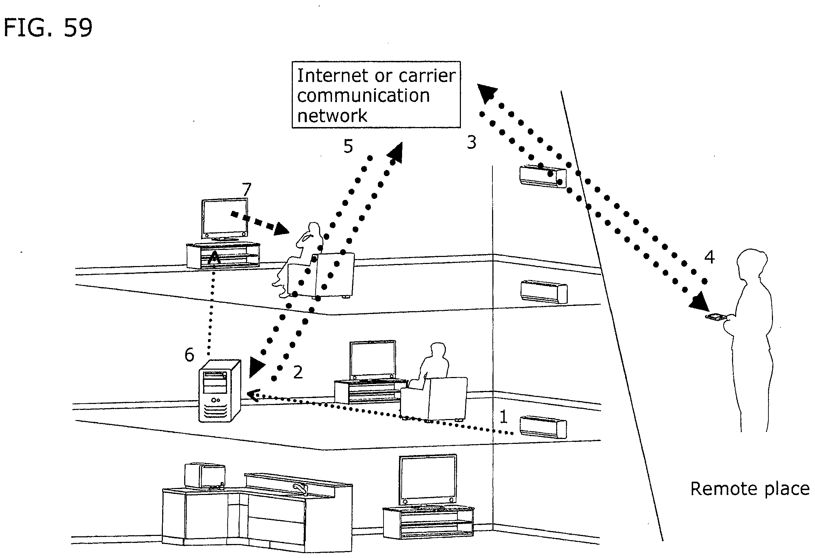

FIG. 59 is a diagram illustrating that in the case where the air-conditioner which is an information source device cannot directly communicate with the mobile phone serving as a hub, the air-conditioner notifies the user of information.
[FIG. 60]

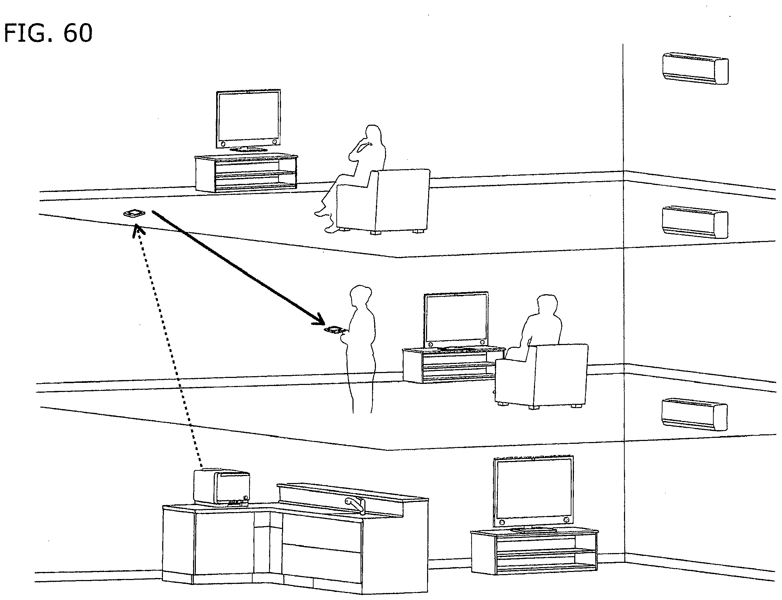

FIG. 60 is a diagram for describing a system utilizing a communication device which uses a 700 to 900 MHz radio wave.
[FIG. 61]

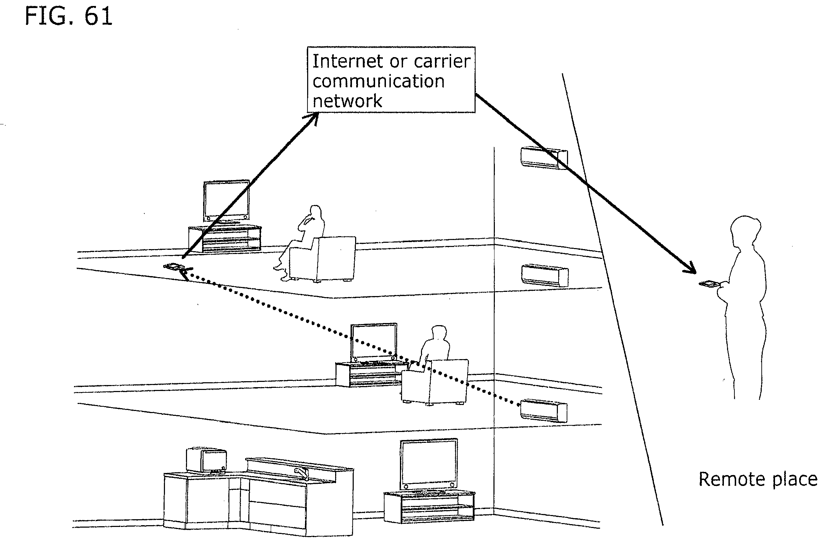

FIG. 61 is a diagram illustrating that a mobile phone at a remote place notifies a user of information.
[FIG. 62]

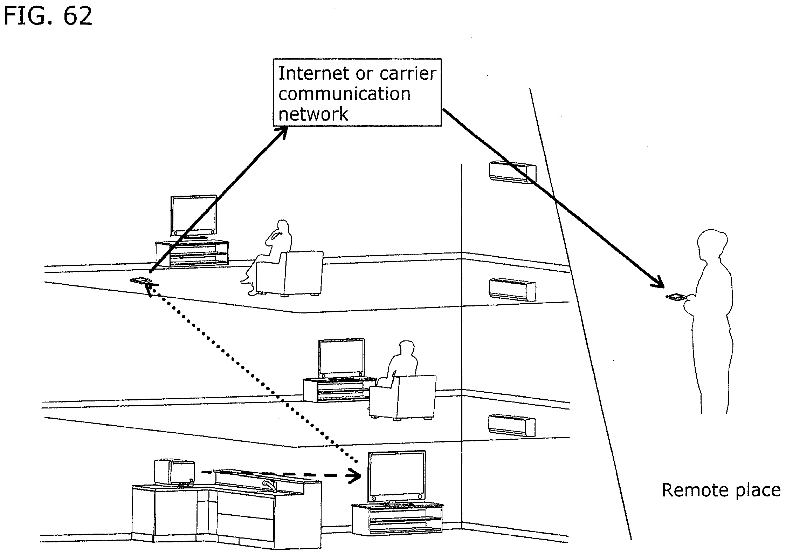

FIG. 62 is a diagram illustrating that the mobile phone at a remote place notifies the user of information.
[FIG. 63]

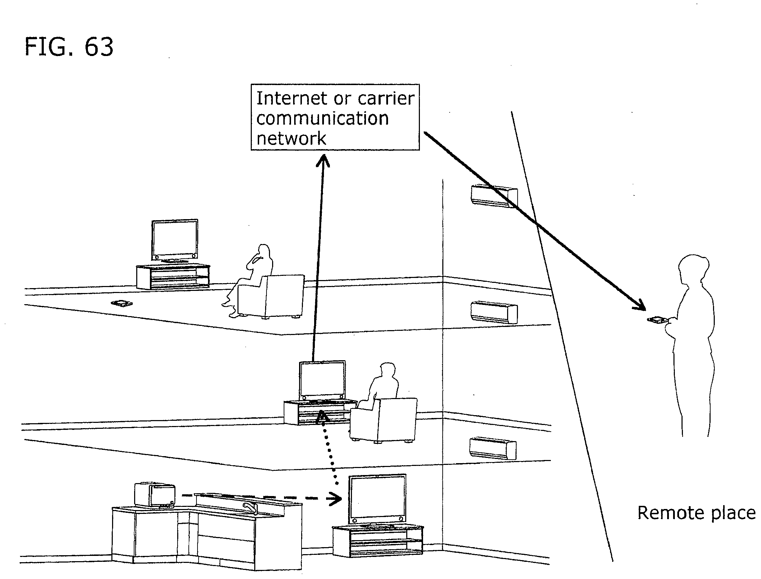

FIG. 63 is a diagram illustrating that in a similar case to that of FIG. 62, a television on the second floor serves as a relay device instead of a device which relays communication between a notification recognition device and an information notification device.
[FIG. 64]

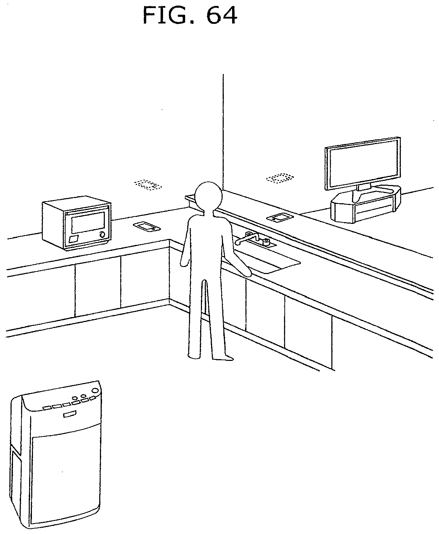

FIG. 64 is a diagram illustrating an example of an environment in a house in Embodiment 5.
[FIG. 65]

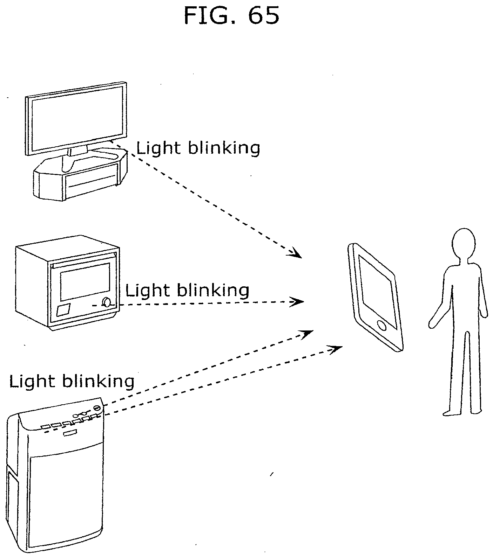

FIG. 65 is a diagram illustrating an example of communication between a smartphone and home electric appliances according to Embodiment 5.
[FIG. 66]

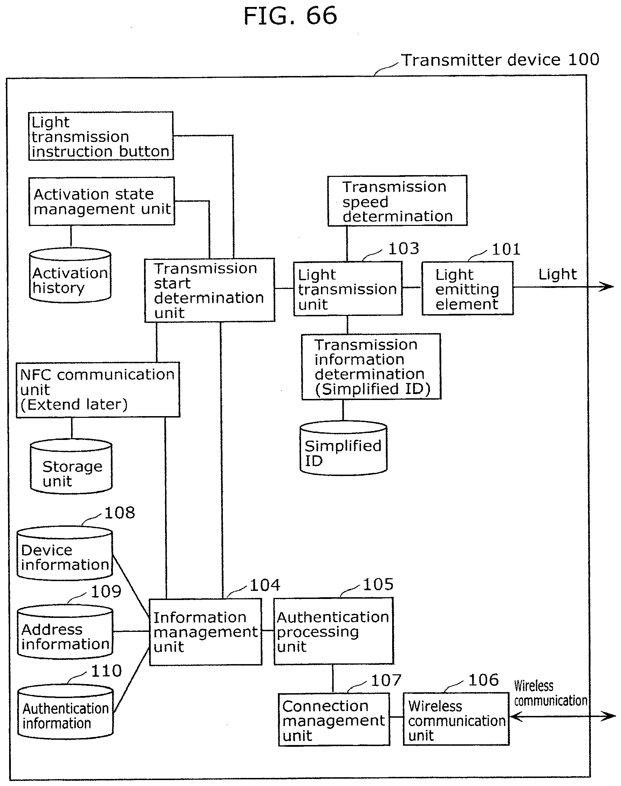

FIG. 66 is a diagram illustrating a configuration of a transmitter device according to Embodiment 5.
[FIG. 67]

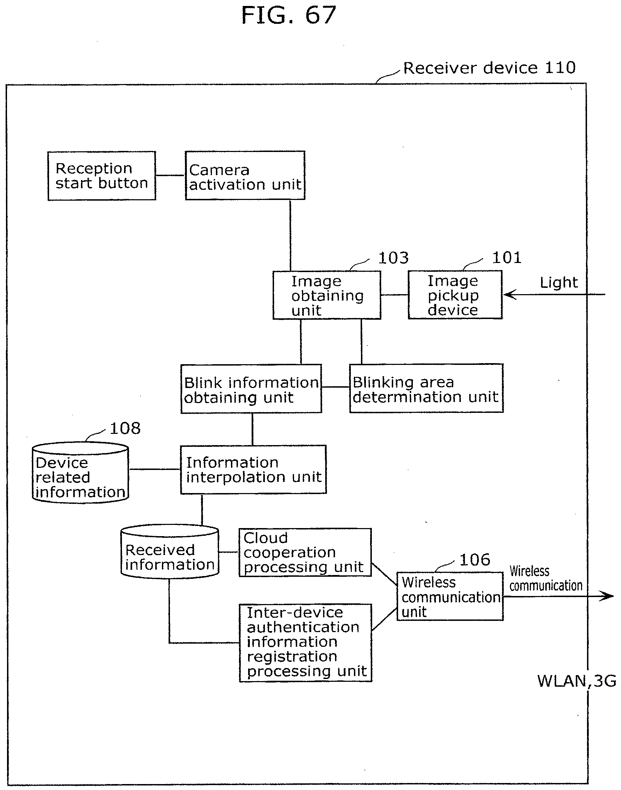

FIG. 67 is a diagram illustrating a configuration of a receiver device according to Embodiment 5.
[FIG. 68]

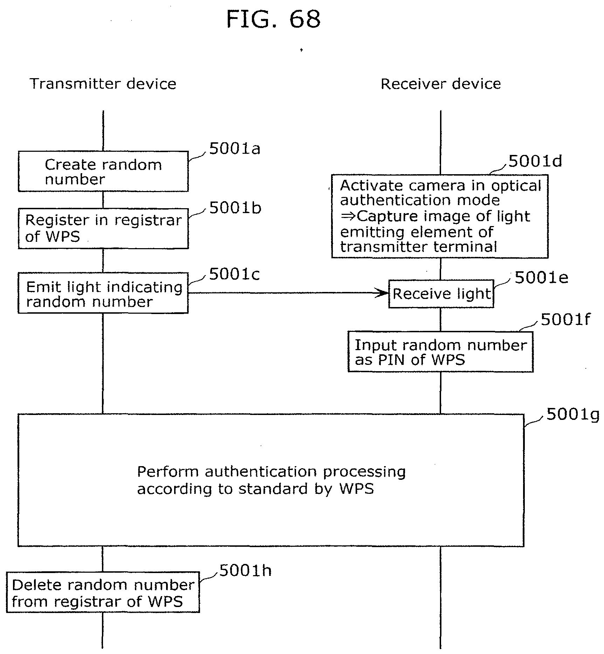

FIG. 68 is a sequence diagram for when a transmitter terminal (TV) performs wireless LAN authentication with a receiver terminal (tablet terminal), using optical communication in FIG. 64.
[FIG. 69]

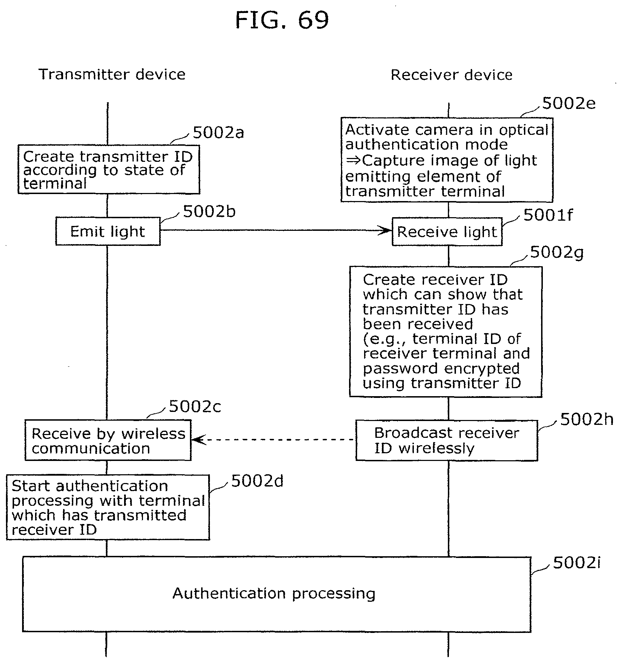

FIG. 69 is a sequence diagram for when authentication is performed using an application according to Embodiment 5.
[FIG. 70]

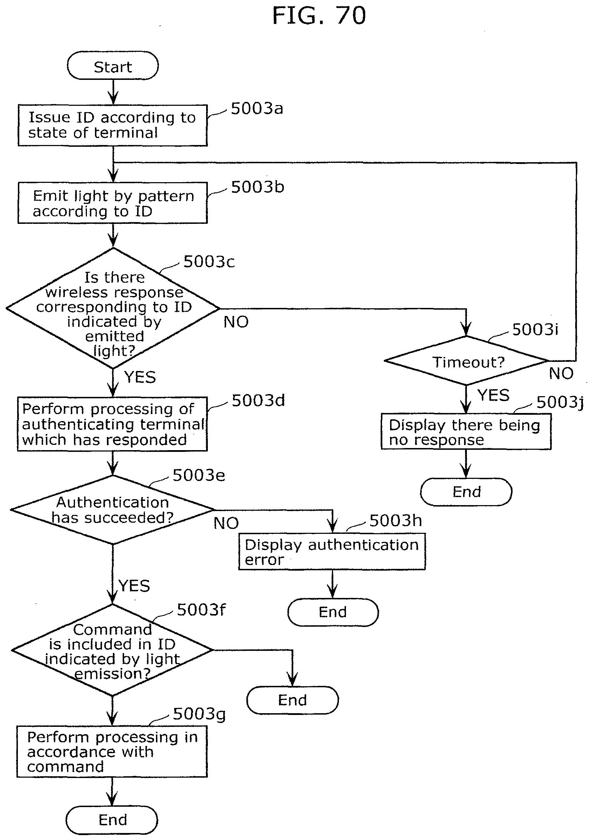

FIG. 70 is a flowchart illustrating operation of the transmitter terminal according to Embodiment 5.
[FIG. 71]

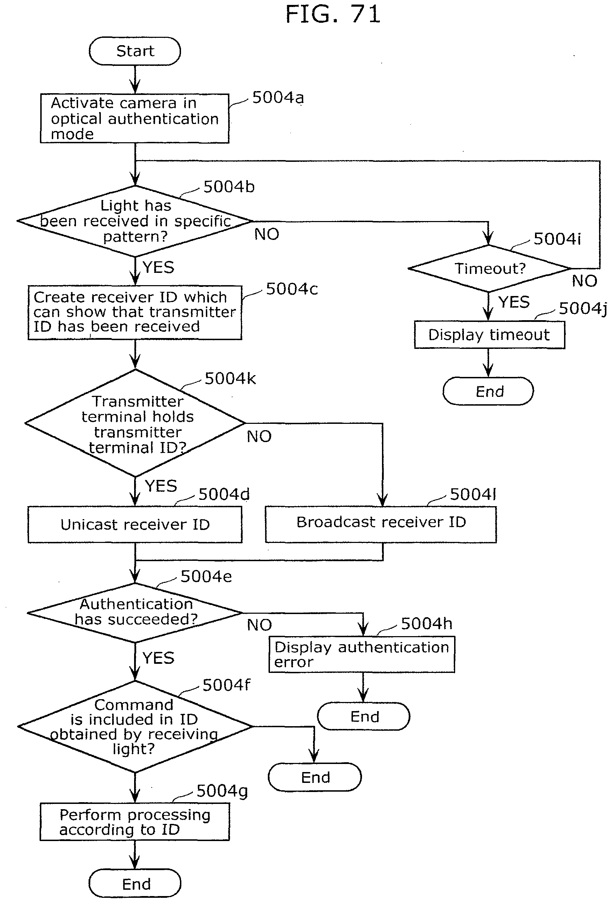

FIG. 71 is a flowchart illustrating operation of the receiver terminal according to Embodiment 5.
[FIG. 72]

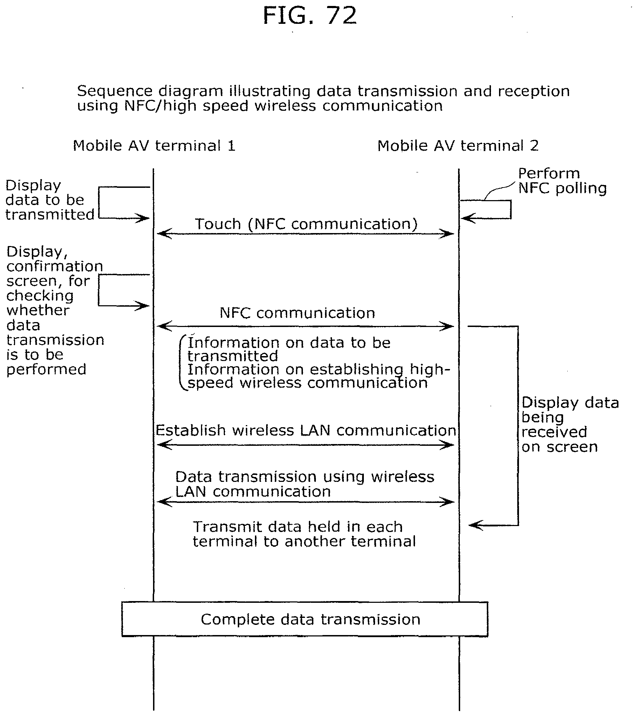

FIG. 72 is a sequence diagram in which a mobile AV terminal 1 transmits data to a mobile AV terminal 2 according to Embodiment 6.
[FIG. 73]

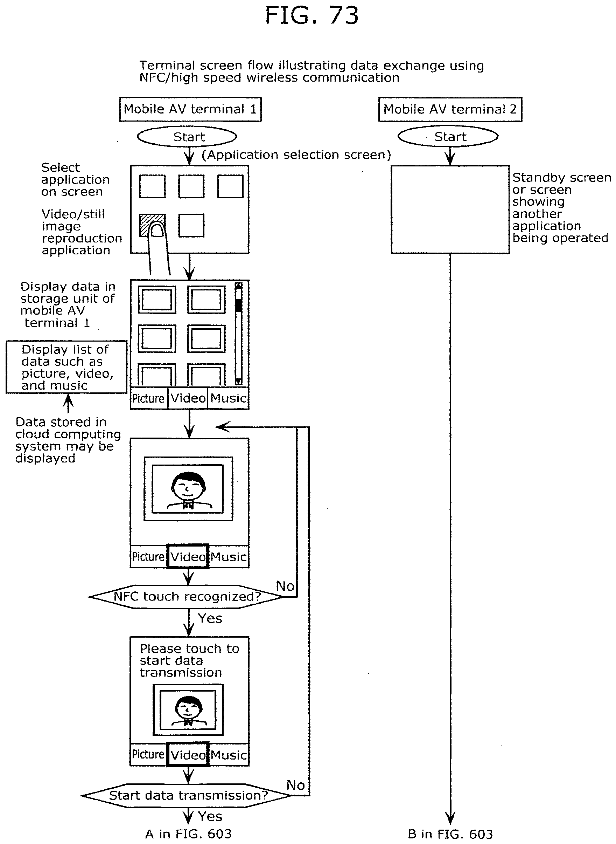

FIG. 73 is a diagram illustrating a screen changed when the mobile AV terminal 1 transmits data to the mobile AV terminal 2 according to Embodiment 6.
[FIG. 74]

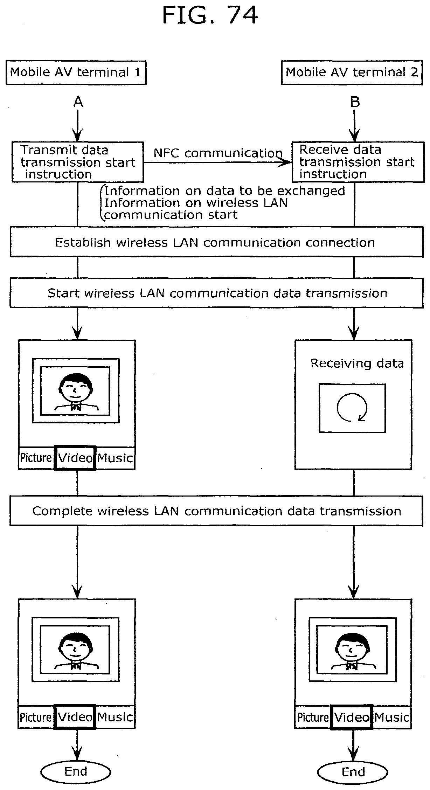

FIG. 74 is a diagram illustrating a screen changed when the mobile AV terminal 1 transmits data to the mobile AV terminal 2 according to Embodiment 6.
[FIG. 75]

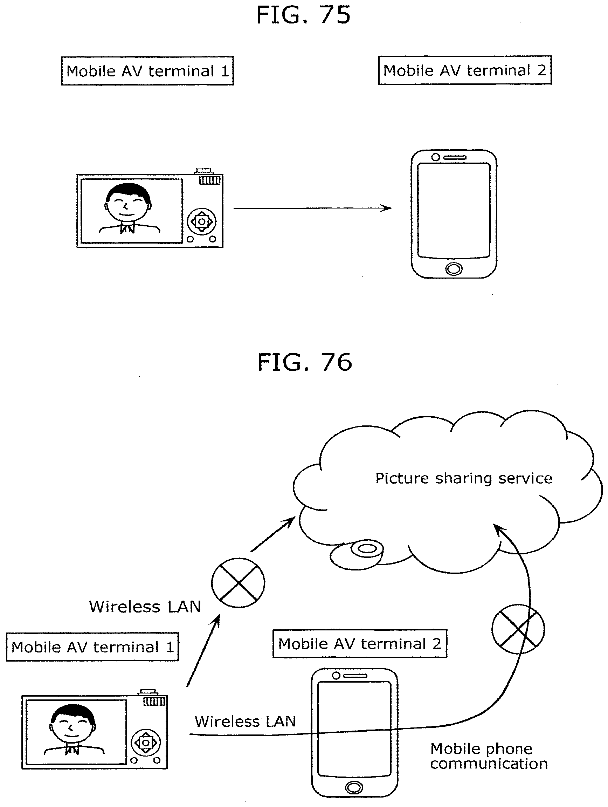

FIG. 75 is a system outline diagram for when the mobile AV terminal 1 is a digital camera according to Embodiment 6.
[FIG. 76]
FIG. 76 is a system outline diagram for when the mobile AV terminal 1 is a digital camera according to Embodiment 6.
[FIG. 77]

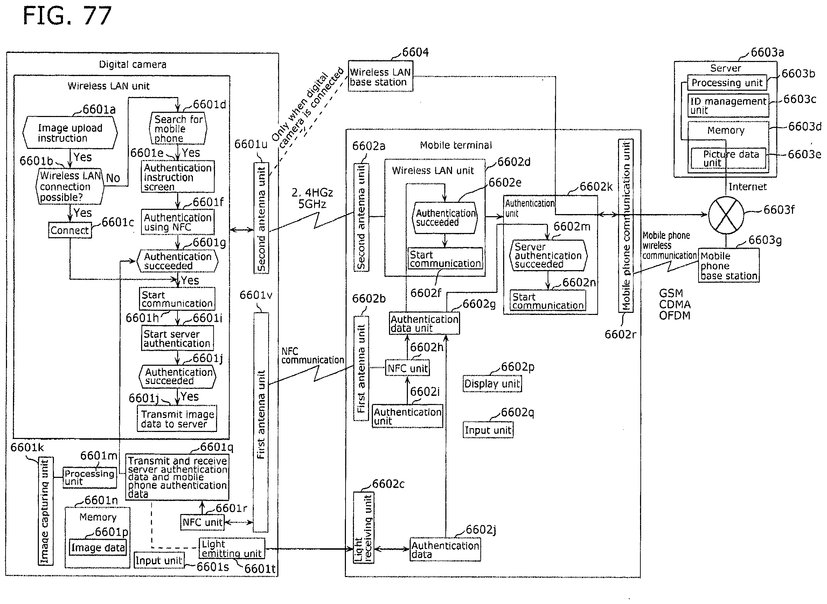

FIG. 77 is a system outline diagram for when the mobile AV terminal 1 is a digital camera according to Embodiment 6.
[FIG. 78]

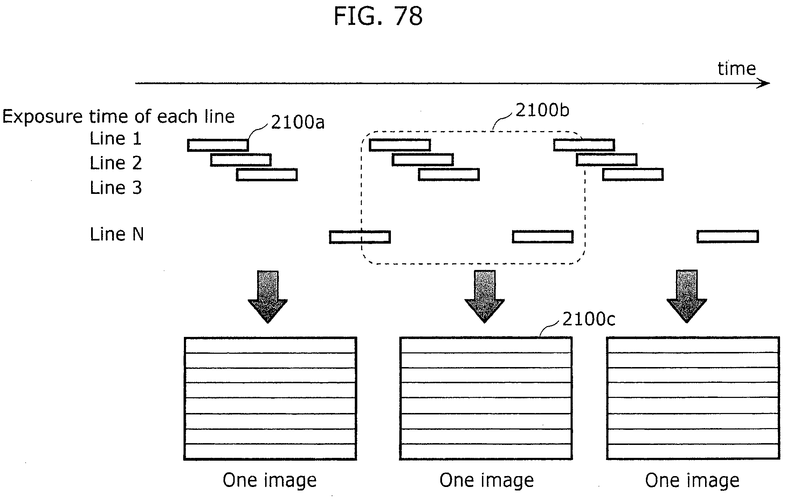

FIG. 78 is a diagram illustrating an example of an observation method of luminance of a light emitting unit in Embodiment 7.
[FIG. 79]

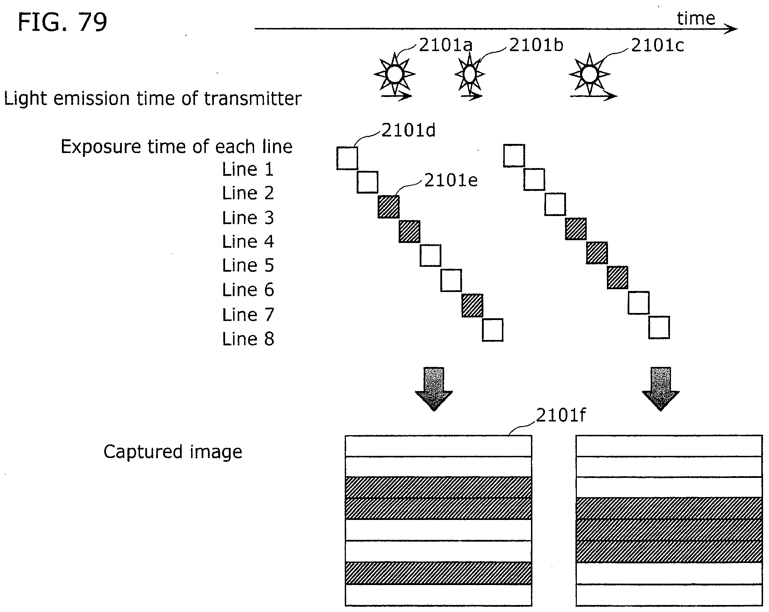

FIG. 79 is a diagram illustrating an example of an observation method of luminance of a light emitting unit in Embodiment 7.

[FIG. 80]

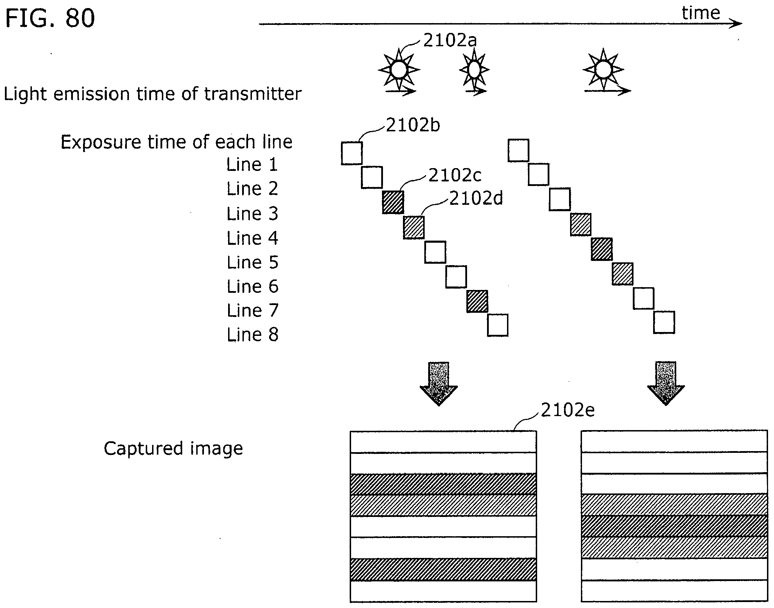

FIG. 80 is a diagram illustrating an example of an observation method of luminance of a light emitting unit in Embodiment 7.

[FIG. 81]

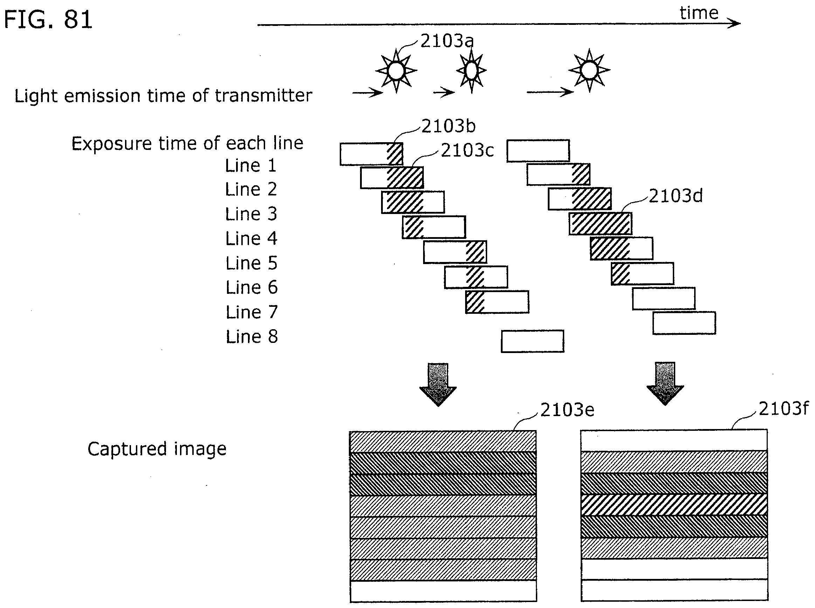

FIG. 81 is a diagram illustrating an example of an observation method of luminance of a light emitting unit in Embodiment 7.

[FIG. 82]

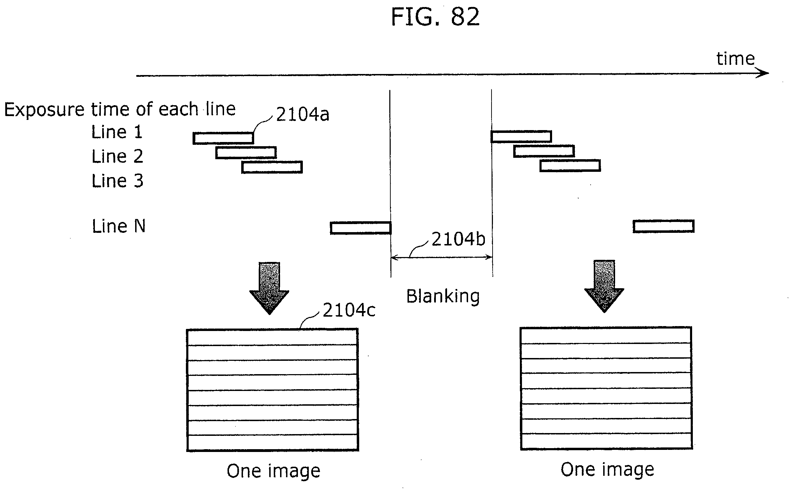

FIG. 82 is a diagram illustrating an example of an observation method of luminance of a light emitting unit in Embodiment 7.

[FIG. 83]

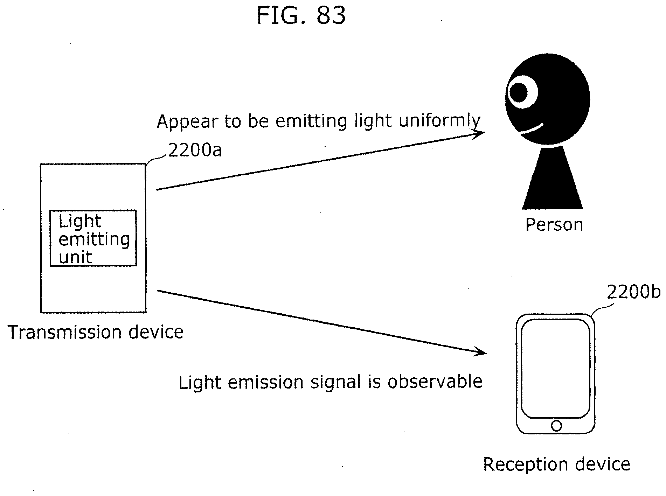

FIG. 83 is a diagram illustrating an example of a signal modulation scheme in Embodiment 7.

[FIG. 84]

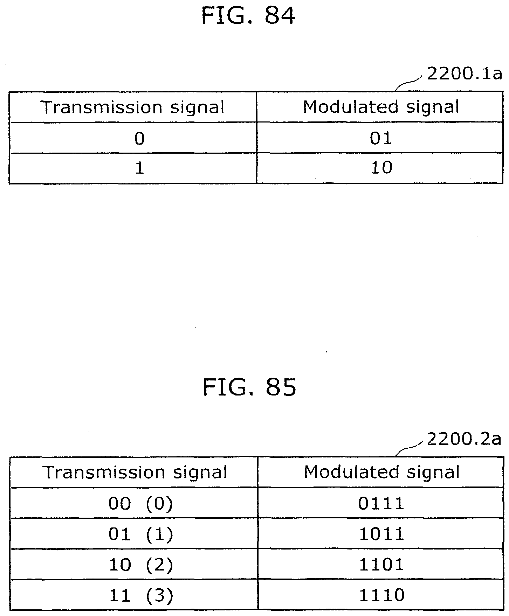

FIG. 84 is a diagram illustrating an example of a signal modulation scheme in Embodiment 7.

[FIG. 85]

FIG. 85 is a diagram illustrating an example of a signal modulation scheme in Embodiment 7.

[FIG. 86]

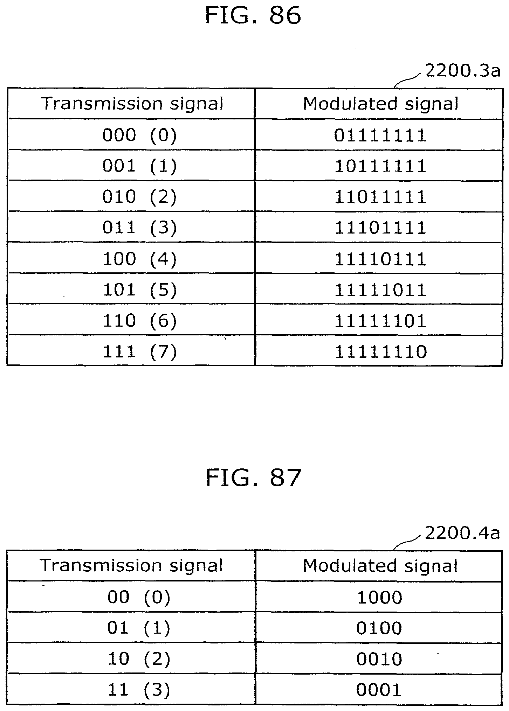

FIG. 86 is a diagram illustrating an example of a signal modulation scheme in Embodiment 7.

[FIG. 87]

FIG. 87 is a diagram illustrating an example of a signal modulation scheme in Embodiment 7.

[FIG. 88]

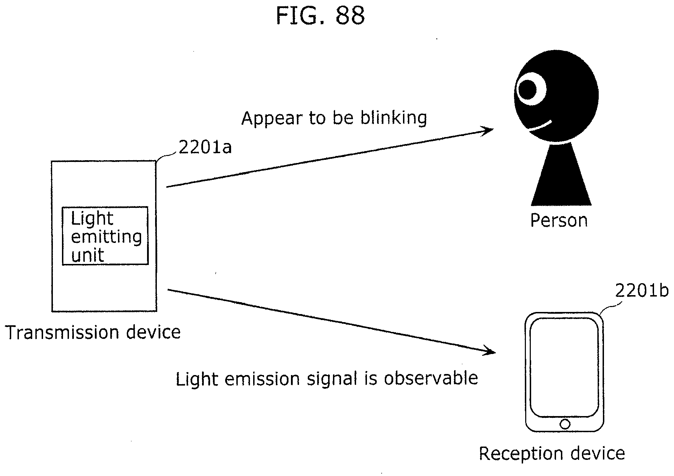

FIG. 88 is a diagram illustrating an example of a signal modulation scheme in Embodiment 7.

[FIG. 89]

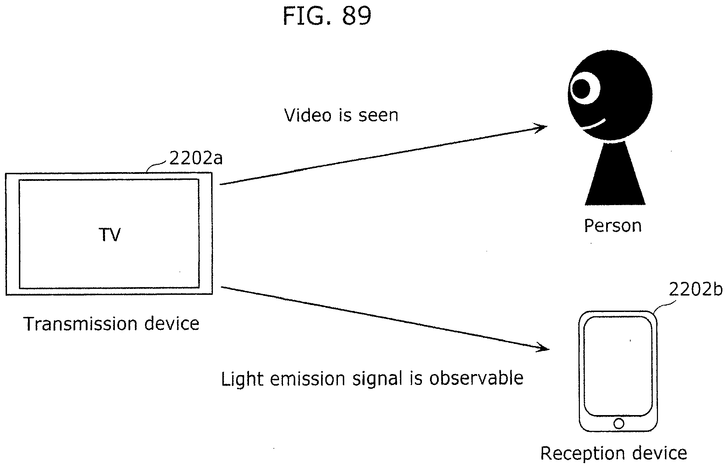

FIG. 89 is a diagram illustrating an example of a signal modulation scheme in Embodiment 7.

[FIG. 90]

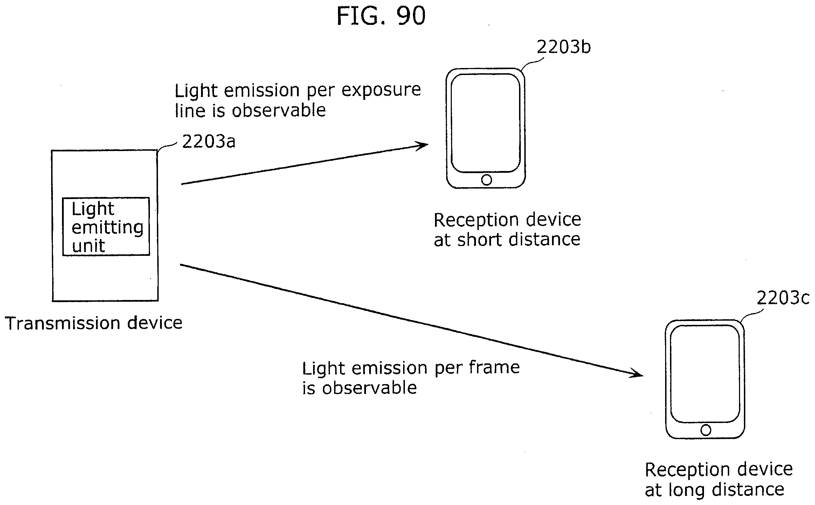

FIG. 90 is a diagram illustrating an example of a signal modulation scheme in Embodiment 7.

[FIG. 91]

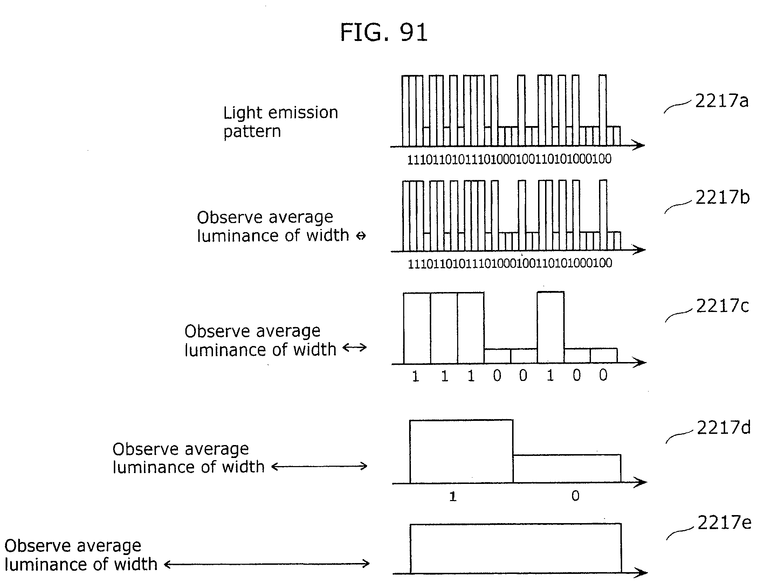

FIG. 91 is a diagram illustrating an example of a signal modulation scheme in Embodiment 7.

[FIG. 92]

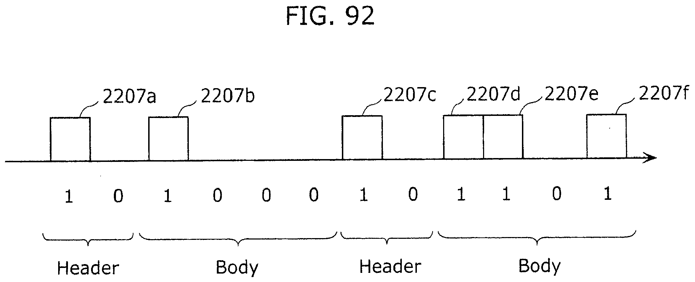

FIG. 92 is a diagram illustrating an example of a signal modulation scheme in Embodiment 7.

[FIG. 93]

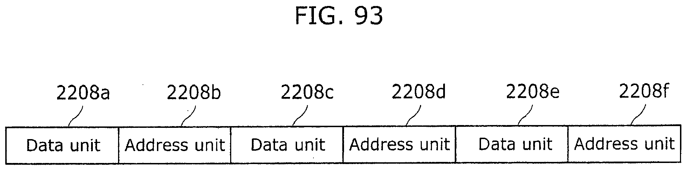

FIG. 93 is a diagram illustrating an example of a signal modulation scheme in Embodiment 7.

[FIG. 94]

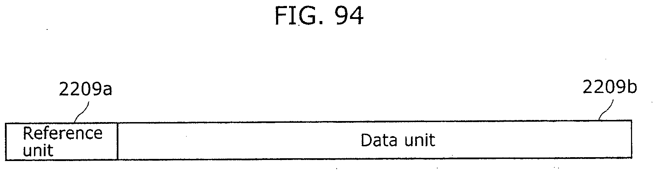

FIG. 94 is a diagram illustrating an example of a signal modulation scheme in Embodiment 7.

[FIG. 95]

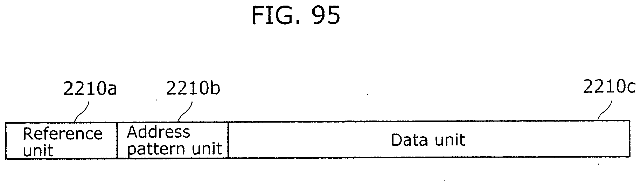

FIG. 95 is a diagram illustrating an example of a signal modulation scheme in Embodiment 7.

[FIG. 96]

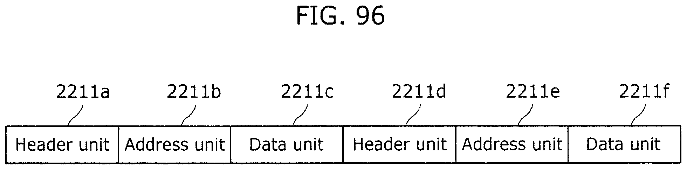

FIG. 96 is a diagram illustrating an example of a signal modulation scheme in Embodiment 7.

[FIG. 97]

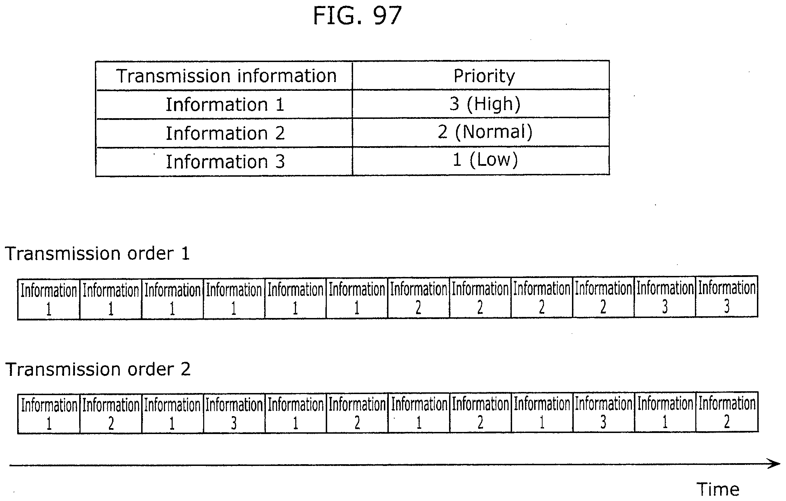

FIG. 97 is a diagram illustrating an example of a signal modulation scheme in Embodiment 7.

[FIG. 98]

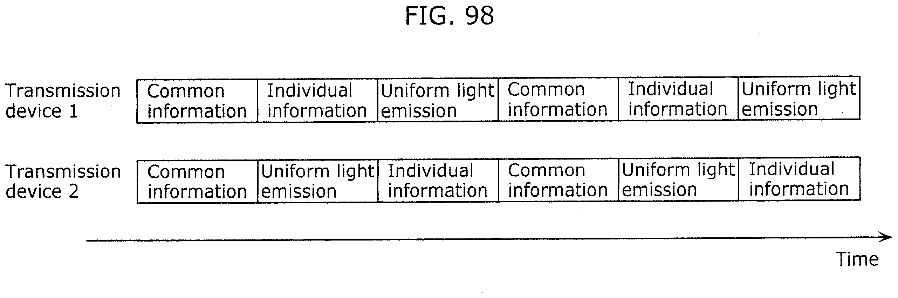

FIG. 98 is a diagram illustrating an example of a signal modulation scheme in Embodiment 7.

[FIG. 99]

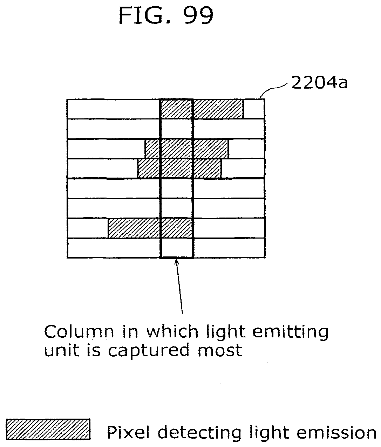

FIG. 99 is a diagram illustrating an example of a light emitting unit detection method in Embodiment 7.

[FIG. 100]

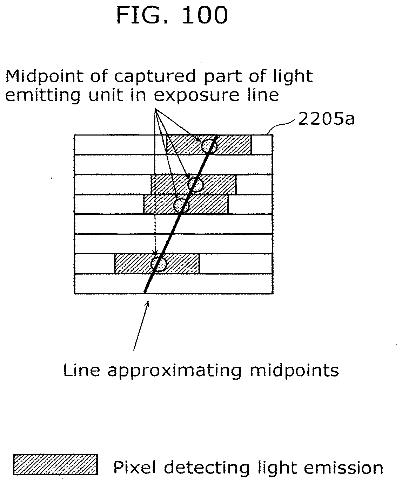

FIG. 100 is a diagram illustrating an example of a light emitting unit detection method in Embodiment 7.

[FIG. 101]

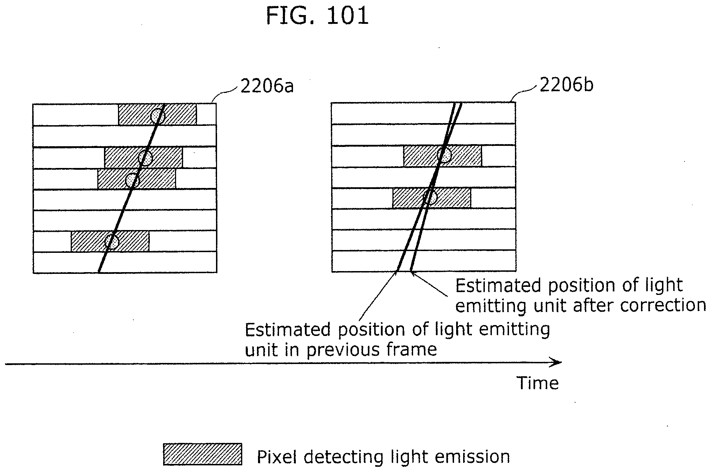

FIG. 101 is a diagram illustrating an example of a light emitting unit detection method in Embodiment 7.

[FIG. 102]

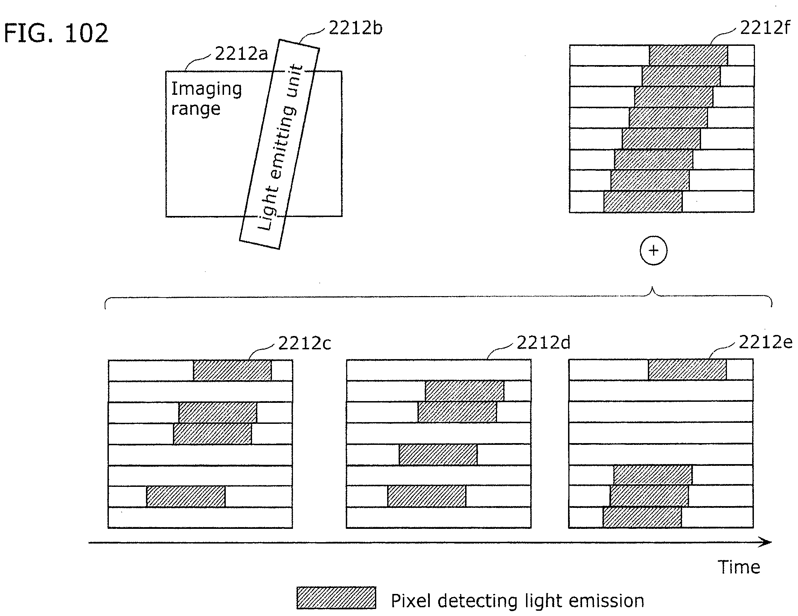

FIG. 102 is a diagram illustrating an example of a light emitting unit detection method in Embodiment 7.

[FIG. 103]

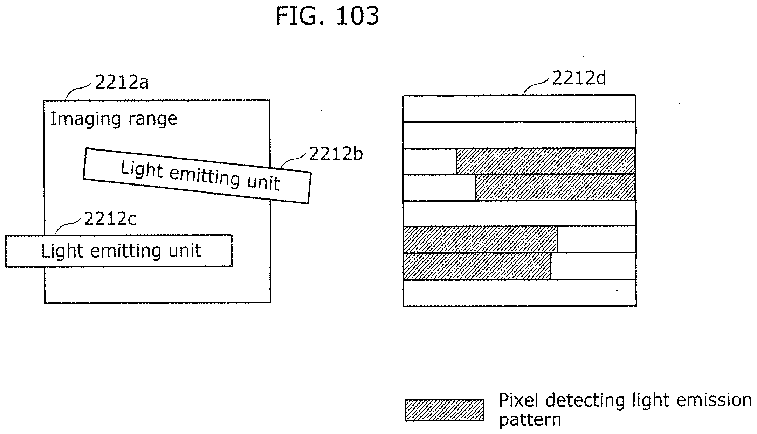

FIG. 103 is a diagram illustrating an example of a light emitting unit detection method in Embodiment 7.

[FIG. 104]

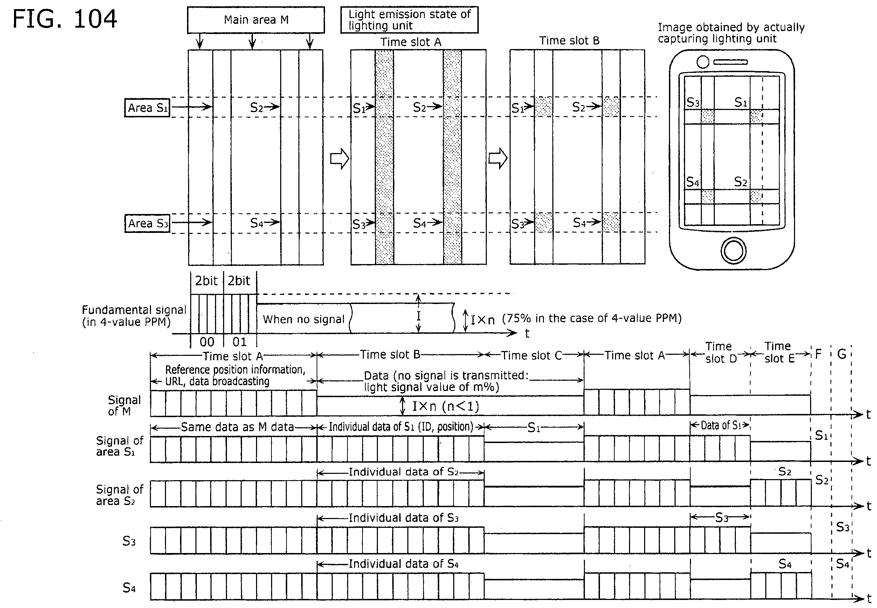

FIG. 104 is a diagram illustrating transmission signal timelines and an image obtained by capturing light emitting units in Embodiment 7.

[FIG. 105]

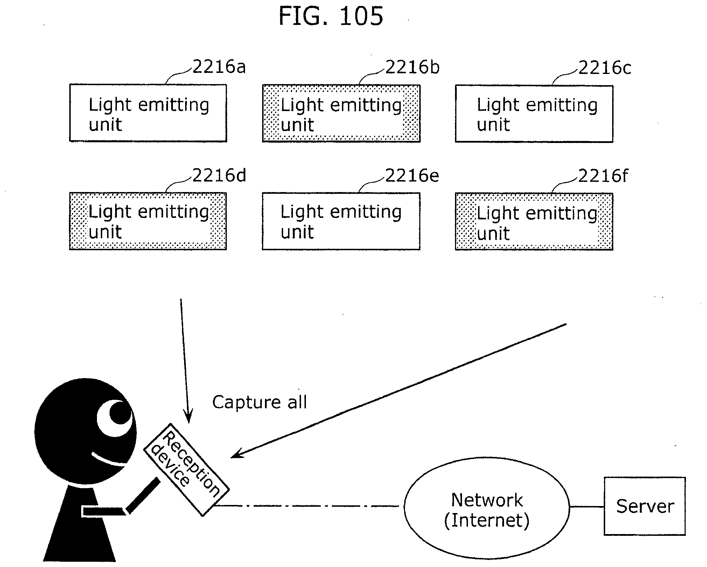

FIG. 105 is a diagram illustrating an example of signal transmission using a position pattern in Embodiment 7.

[FIG. 106]

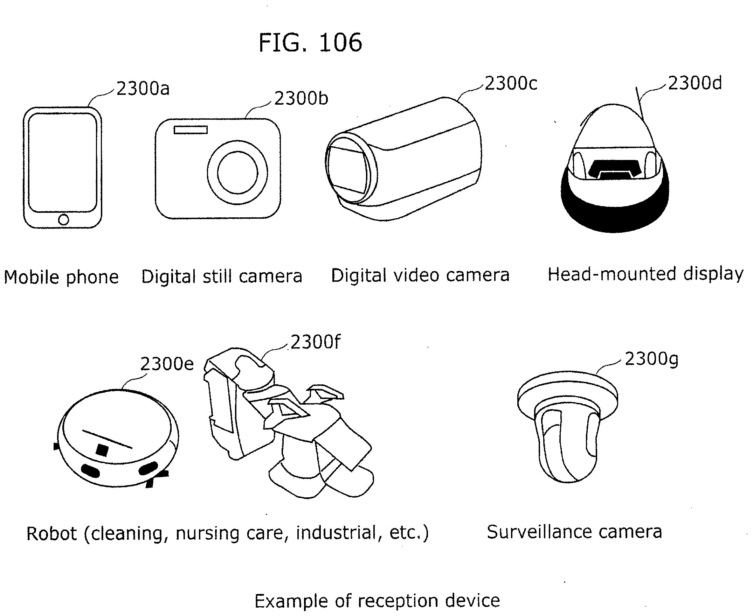

FIG. 106 is a diagram illustrating an example of a reception device in Embodiment 7.
[FIG. 107]

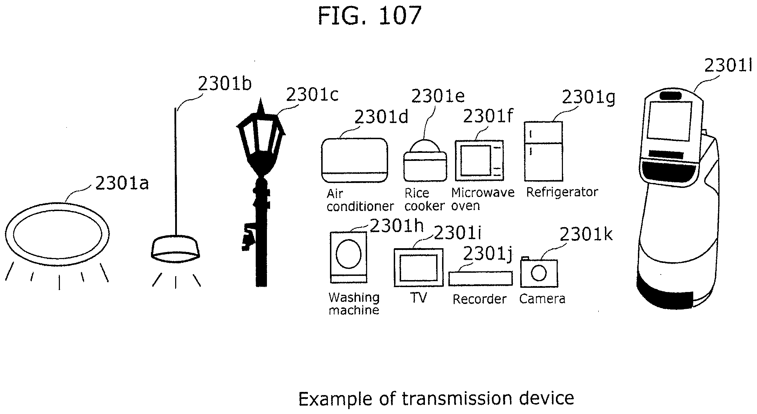

FIG. 107 is a diagram illustrating an example of a transmission device in Embodiment 7.
[FIG. 108]

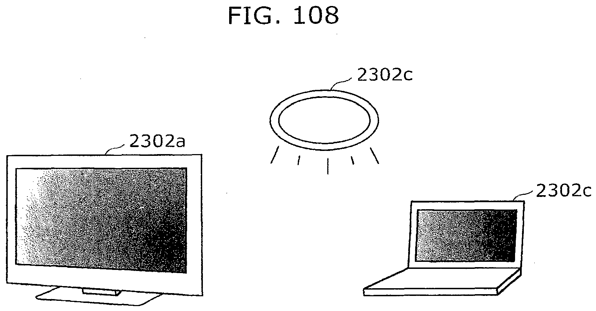

FIG. 108 is a diagram illustrating an example of a transmission device in Embodiment 7.
[FIG. 109]

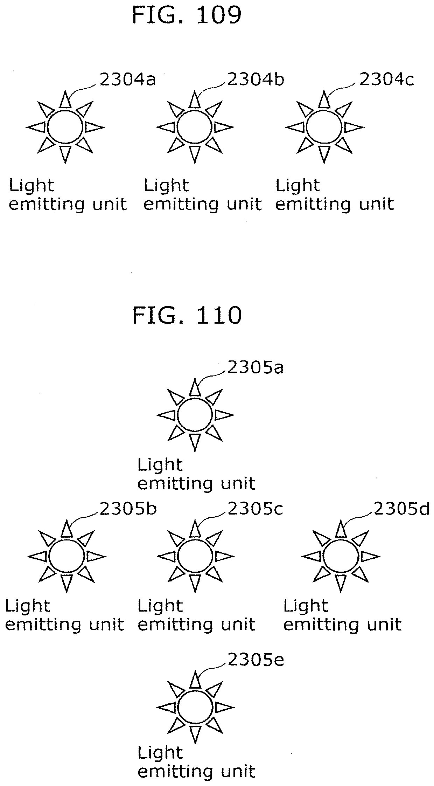

FIG. 109 is a diagram illustrating an example of a transmission device in Embodiment 7.
[FIG. 110]
FIG. 110 is a diagram illustrating an example of a transmission device in Embodiment 7.
[FIG. 111]

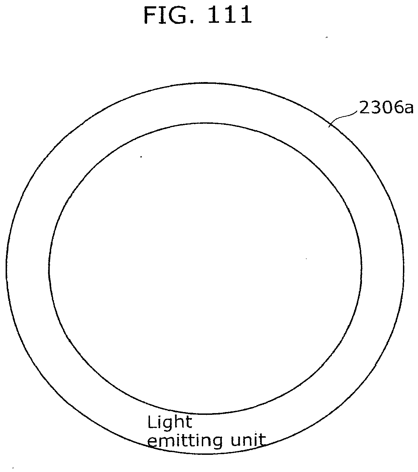

FIG. 111 is a diagram illustrating an example of a transmission device in Embodiment 7.
[FIG. 112]

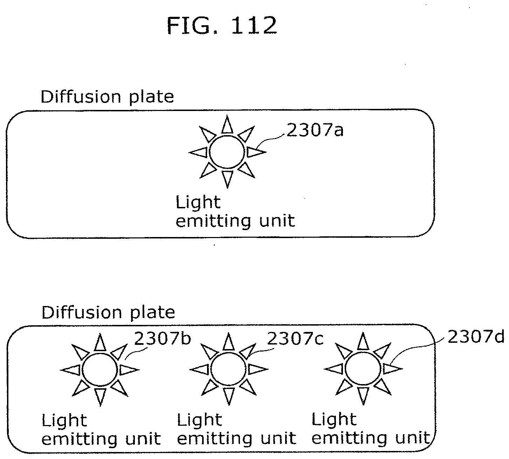

FIG. 112 is a diagram illustrating an example of a transmission device in Embodiment 7.
[FIG. 113]

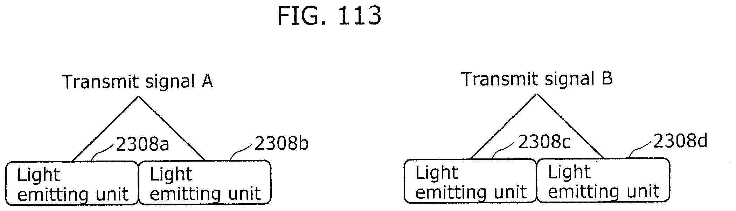

FIG. 113 is a diagram illustrating an example of a transmission device in Embodiment 7.
[FIG. 114]

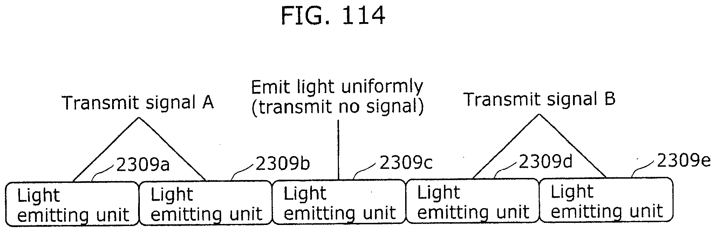

FIG. 114 is a diagram illustrating an example of a transmission device in Embodiment 7.
[FIG. 115]

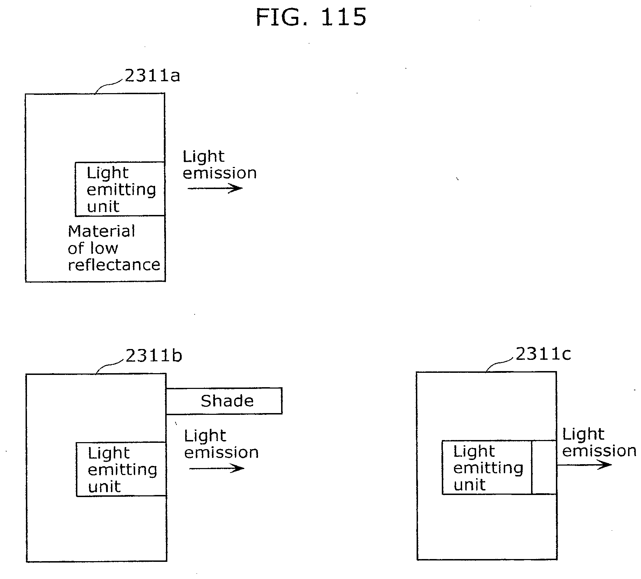

FIG. 115 is a diagram illustrating an example of a structure of a light emitting unit in Embodiment 7.
[FIG. 116]

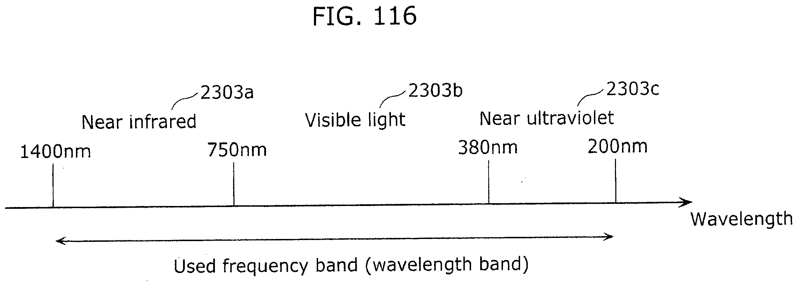

FIG. 116 is a diagram illustrating an example of a signal carrier in Embodiment 7.
[FIG. 117]

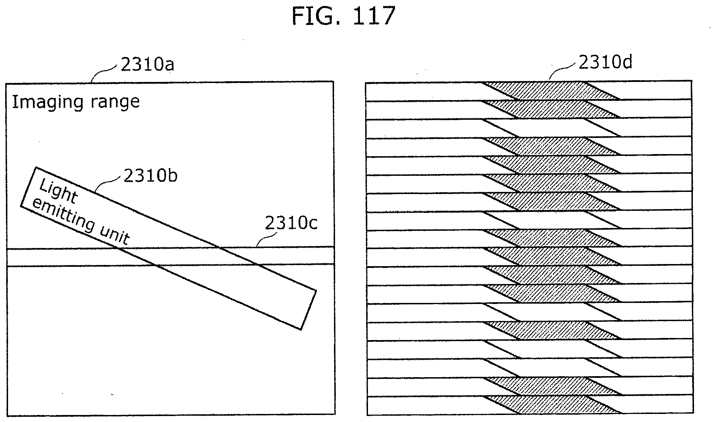

FIG. 117 is a diagram illustrating an example of an imaging unit in Embodiment 7.
[FIG. 118]

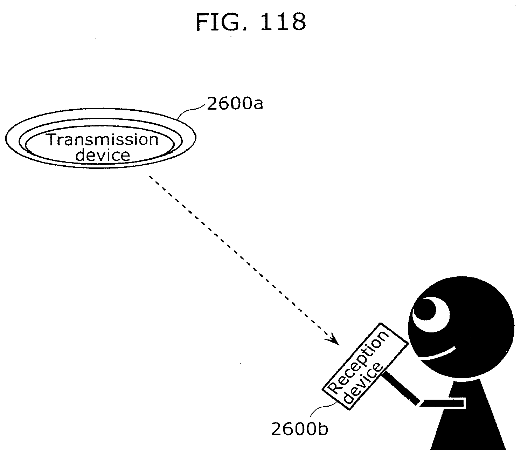

FIG. 118 is a diagram illustrating an example of position estimation of a reception device in Embodiment 7.
[FIG. 119]

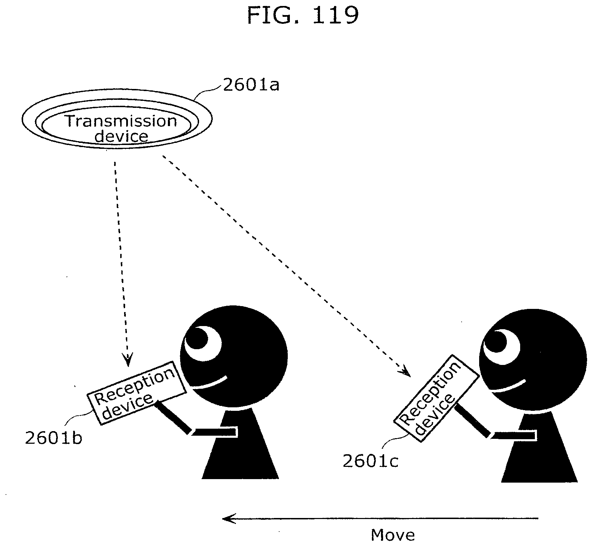

FIG. 119 is a diagram illustrating an example of position estimation of a reception device in Embodiment 7.
[FIG. 120]

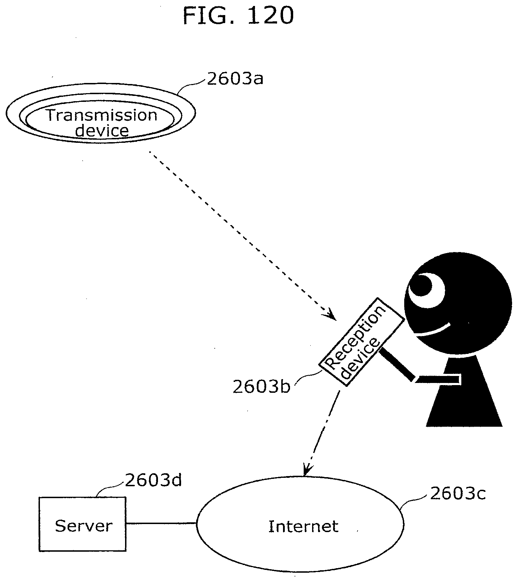

FIG. 120 is a diagram illustrating an example of position estimation of a reception device in Embodiment 7.
[FIG. 121]

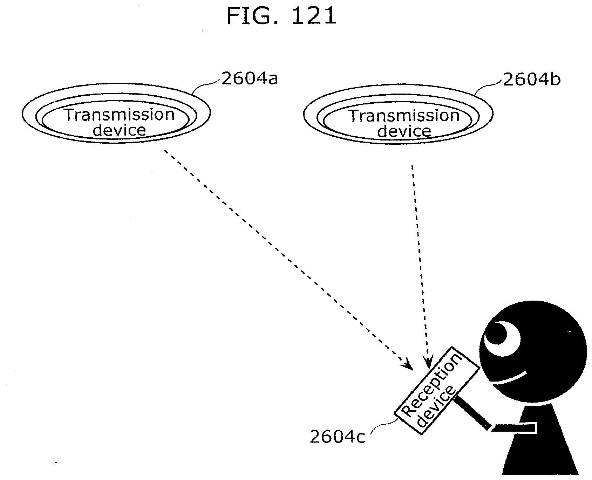

FIG. 121 is a diagram illustrating an example of position estimation of a reception device in Embodiment 7.
[FIG. 122]

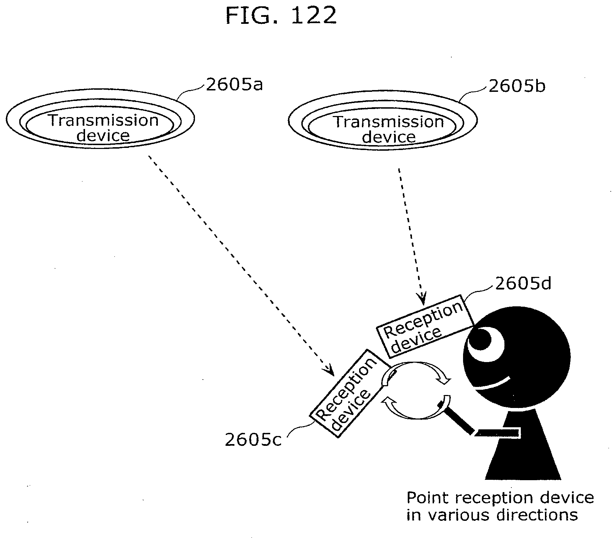

FIG. 122 is a diagram illustrating an example of position estimation of a reception device in Embodiment 7.
[FIG. 123]

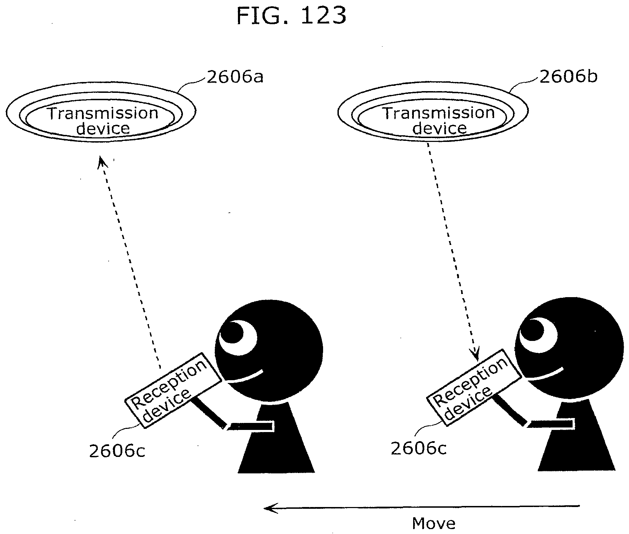

FIG. 123 is a diagram illustrating an example of transmission information setting in Embodiment 7.
[FIG. 124]

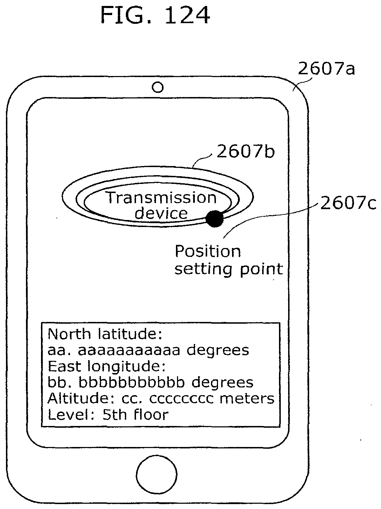

FIG. 124 is a diagram illustrating an example of transmission information setting in Embodiment 7.
[FIG. 125]

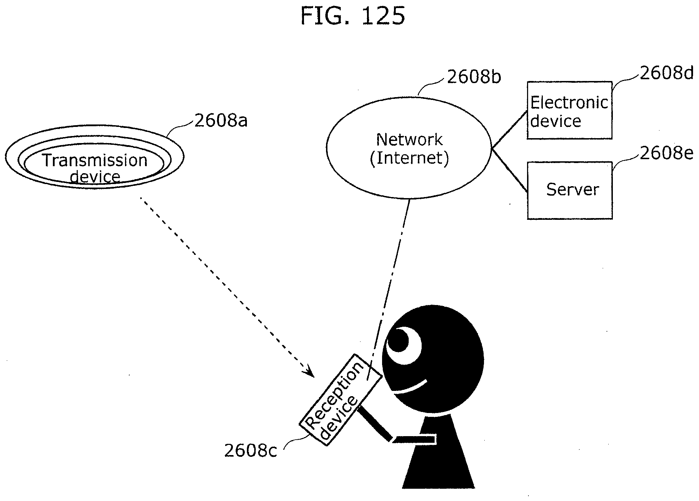

FIG. 125 is a diagram illustrating an example of transmission information setting in Embodiment 7.
[FIG. 126]

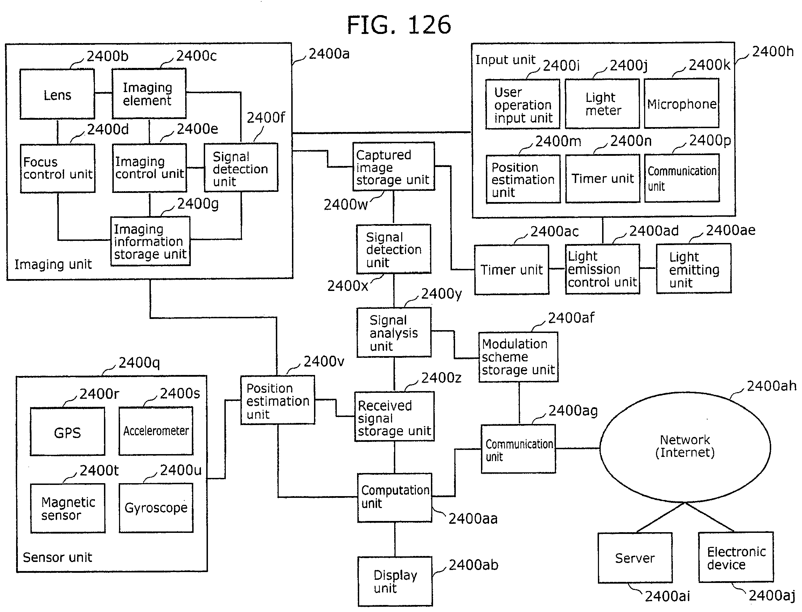

FIG. 126 is a block diagram illustrating an example of structural elements of a reception device in Embodiment 7.
[FIG. 127]

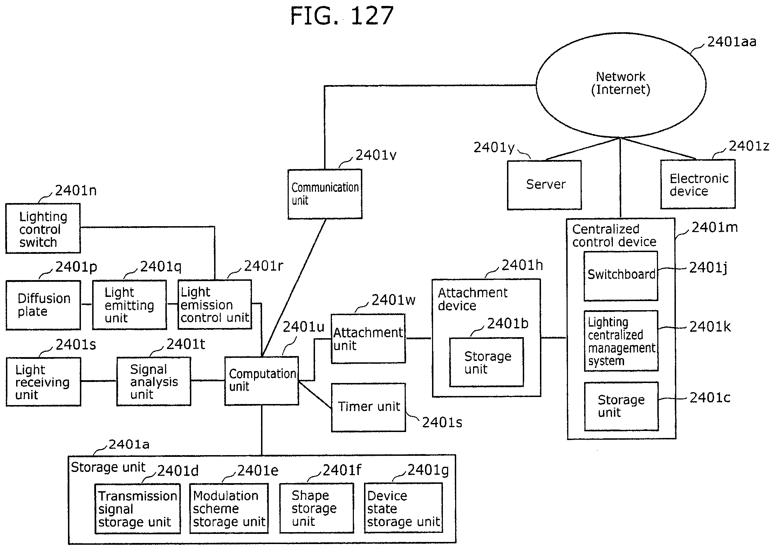

FIG. 127 is a block diagram illustrating an example of structural elements of a transmission device in Embodiment 7.
[FIG. 128]

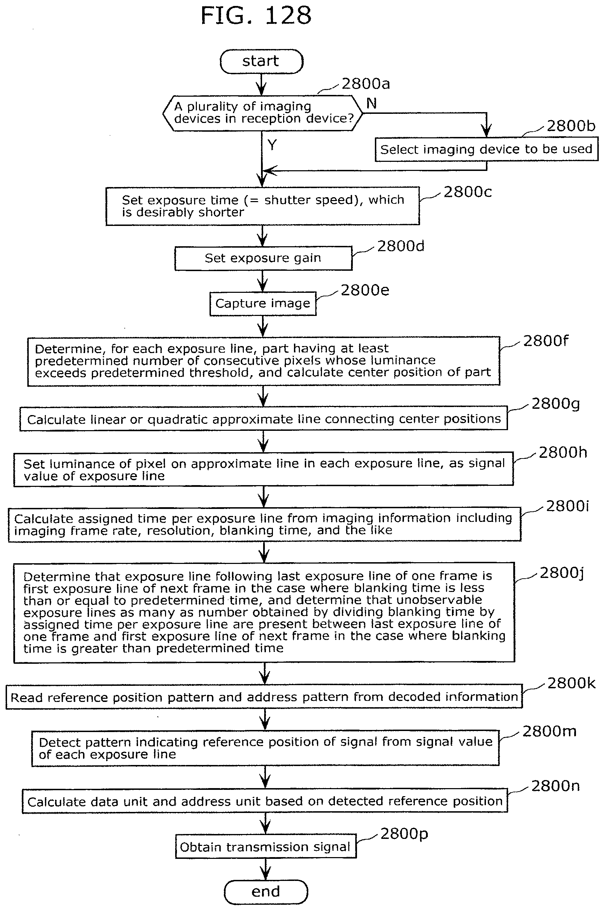

FIG. 128 is a diagram illustrating an example of a reception procedure in Embodiment 7.
[FIG. 129]

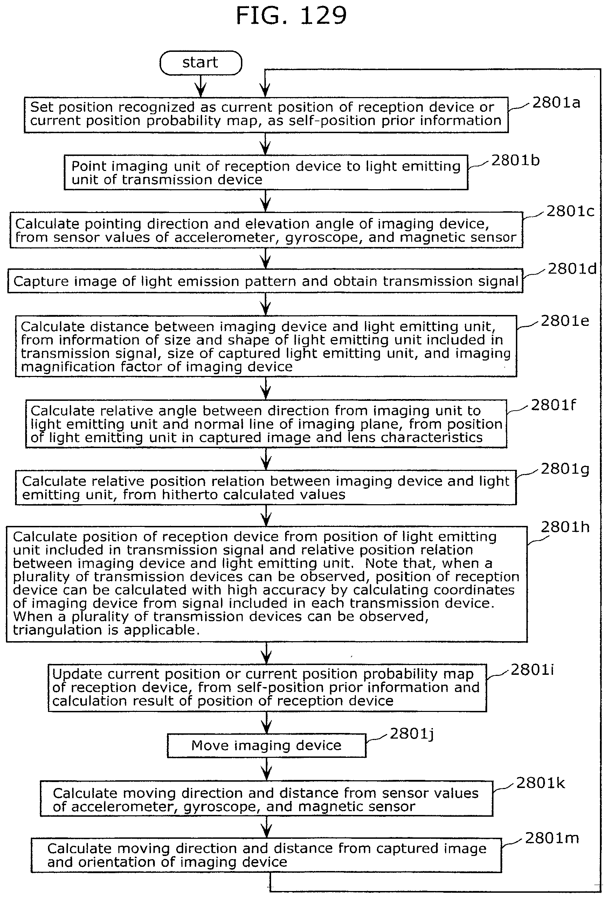

FIG. 129 is a diagram illustrating an example of a self-position estimation procedure in Embodiment 7.
[FIG. 130]

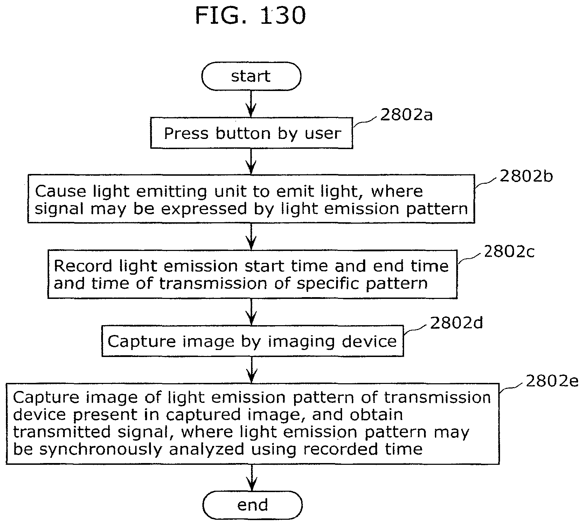

FIG. 130 is a diagram illustrating an example of a transmission control procedure in Embodiment 7.
[FIG. 131]

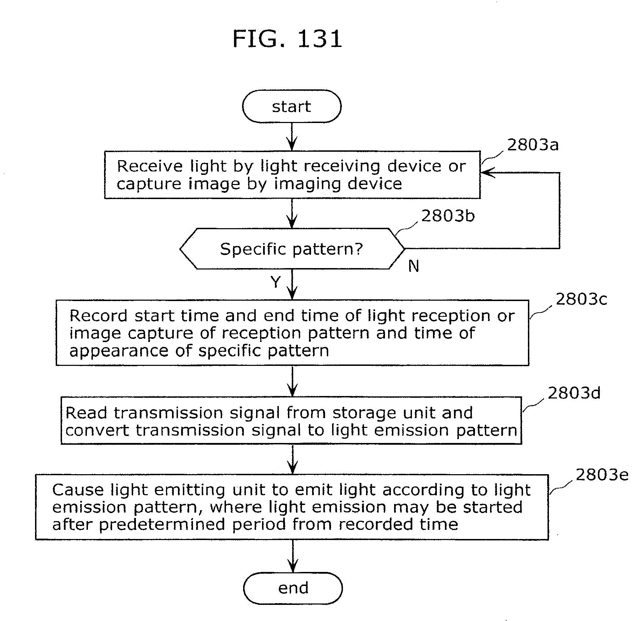

FIG. 131 is a diagram illustrating an example of a transmission control procedure in Embodiment 7.
[FIG. 132]

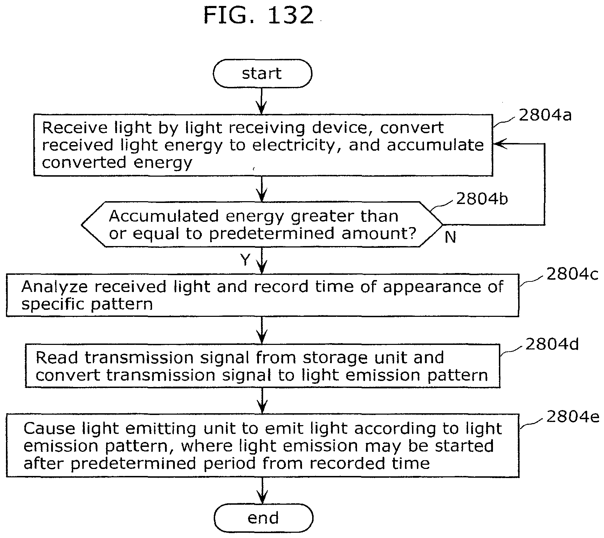

FIG. 132 is a diagram illustrating an example of a transmission control procedure in Embodiment 7.
[FIG. 133]

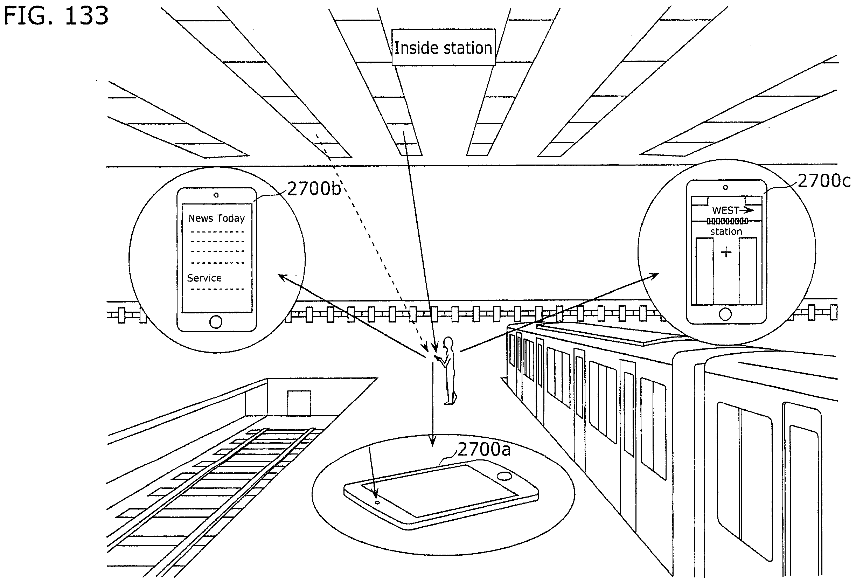

FIG. 133 is a diagram illustrating an example of information provision inside a station in Embodiment 7.
[FIG. 134]

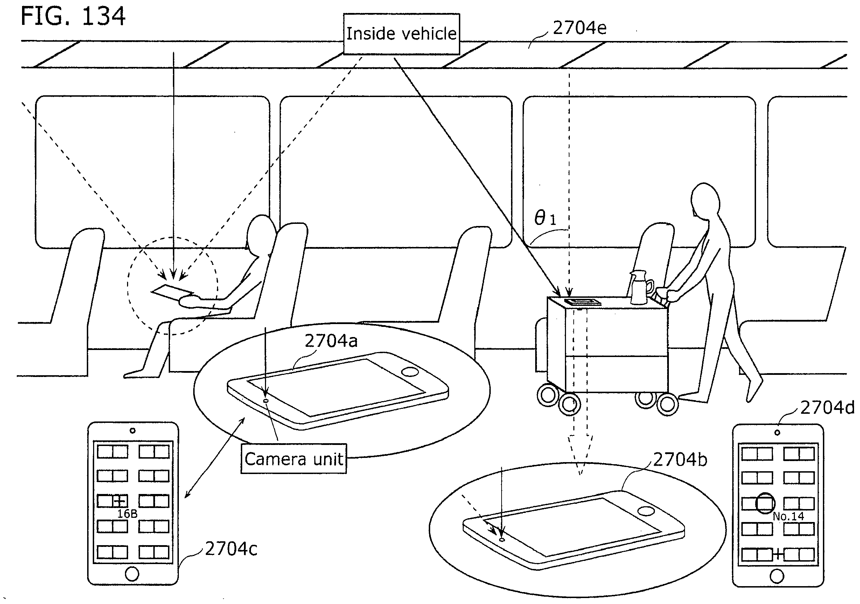

FIG. 134 is a diagram illustrating an example of a passenger service in Embodiment 7.
[FIG. 135]

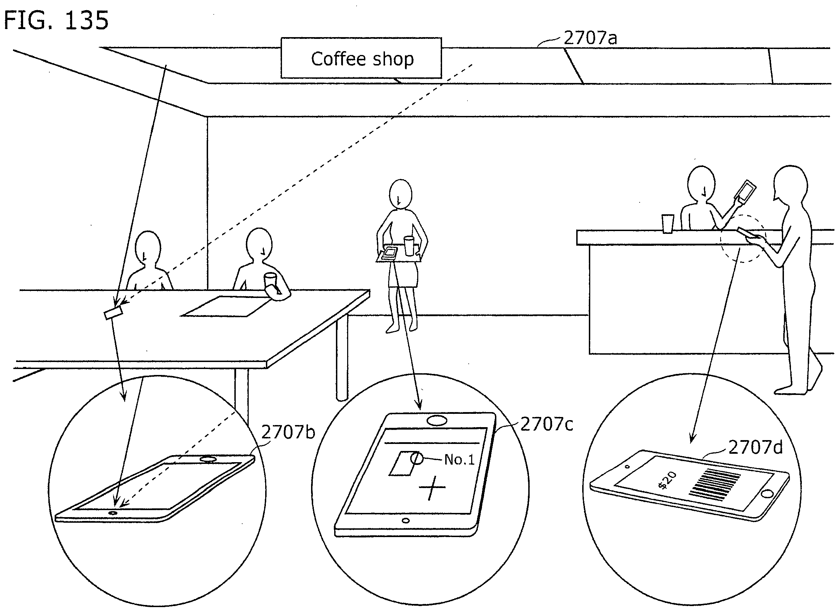

FIG. 135 is a diagram illustrating an example of an in-store service in Embodiment 7.

[FIG. 136]

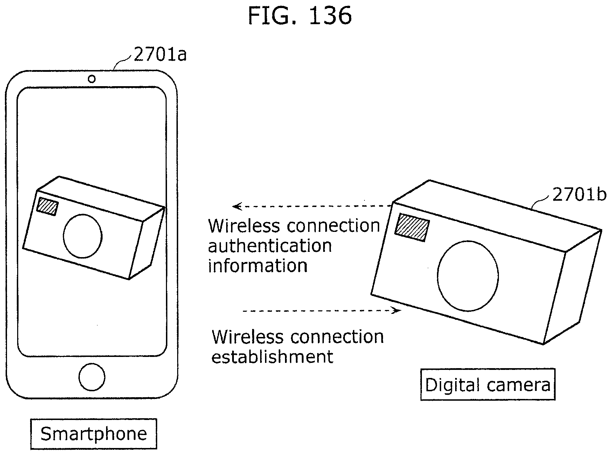

FIG. 136 is a diagram illustrating an example of wireless connection establishment in Embodiment 7.

[FIG. 137]

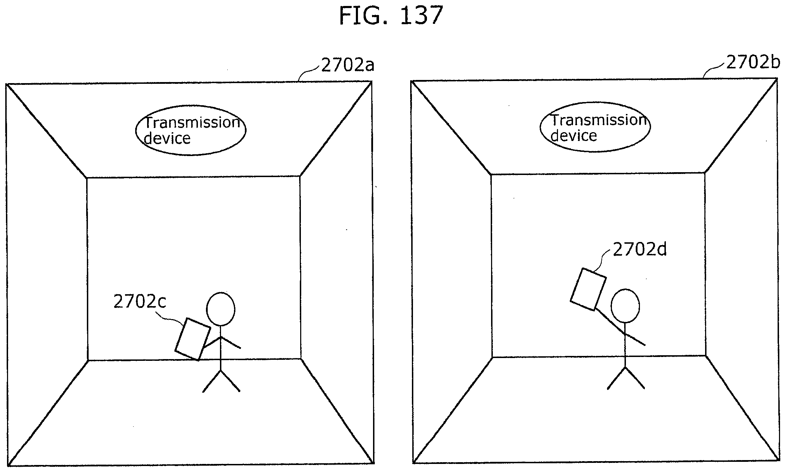

FIG. 137 is a diagram illustrating an example of communication range adjustment in Embodiment 7.

[FIG. 138]

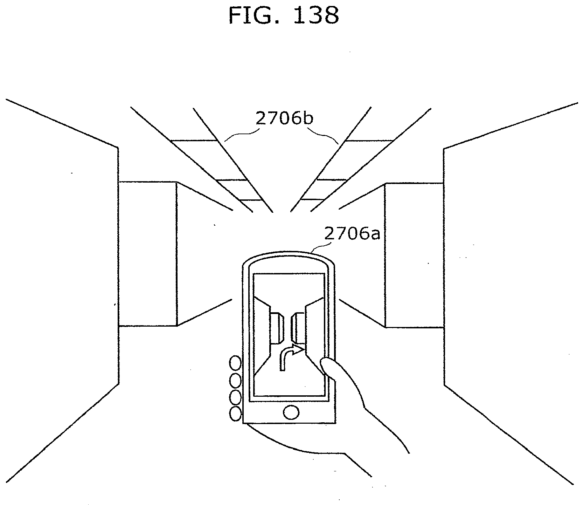

FIG. 138 is a diagram illustrating an example of indoor use in Embodiment 7.

[FIG. 139]

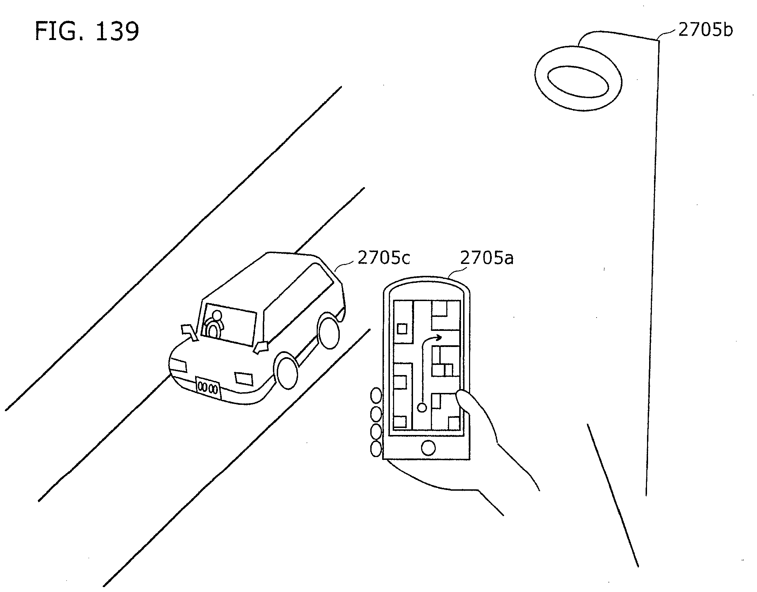

FIG. 139 is a diagram illustrating an example of outdoor use in Embodiment 7.

[FIG. 140]

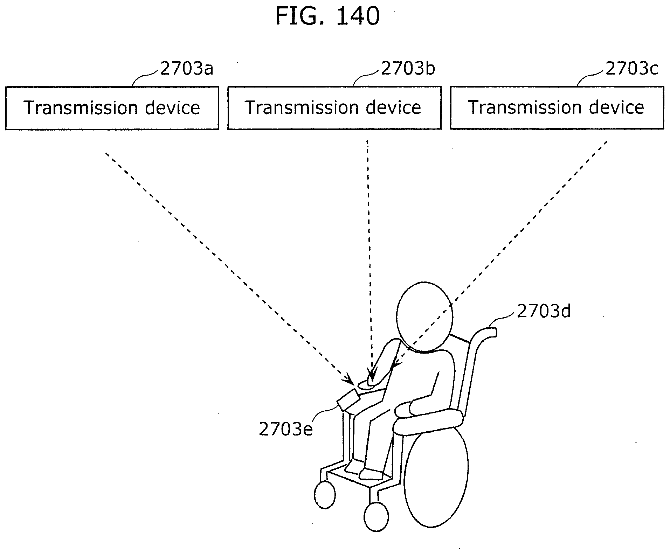

FIG. 140 is a diagram illustrating an example of route indication in Embodiment 7.

[FIG. 141]

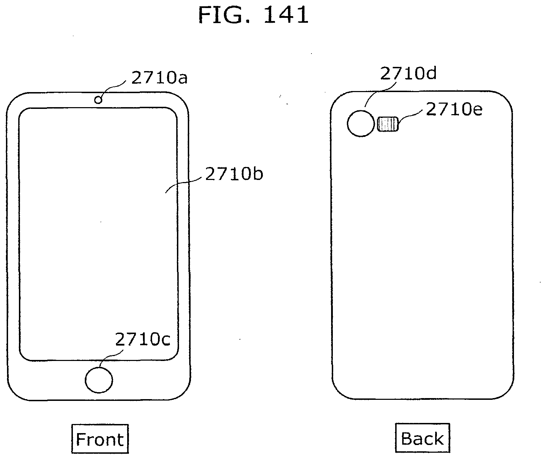

FIG. 141 is a diagram illustrating an example of use of a plurality of imaging devices in Embodiment 7.

[FIG. 142]

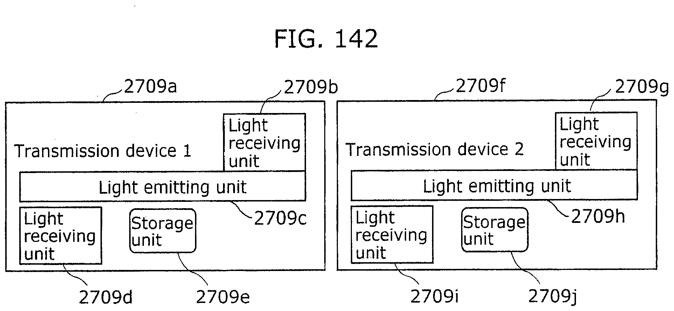

FIG. 142 is a diagram illustrating an example of transmission device autonomous control in Embodiment 7.

[FIG. 143]

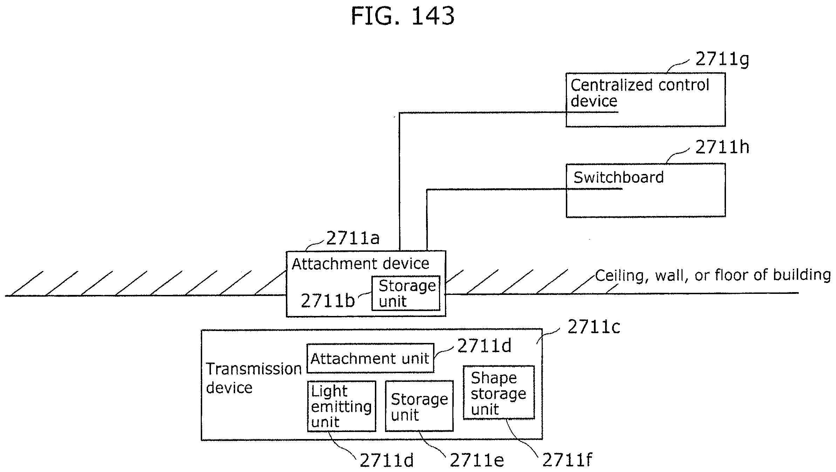

FIG. 143 is a diagram illustrating an example of transmission information setting in Embodiment 7.

[FIG. 144]

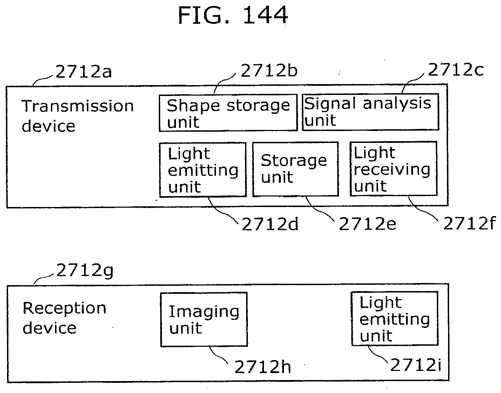

FIG. 144 is a diagram illustrating an example of transmission information setting in Embodiment 7.

[FIG. 145]

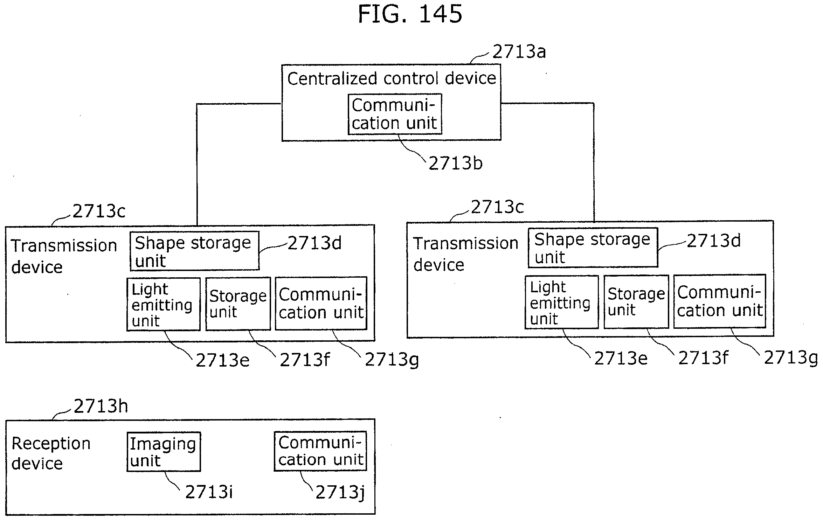

FIG. 145 is a diagram illustrating an example of transmission information setting in Embodiment 7.

[FIG. 146]

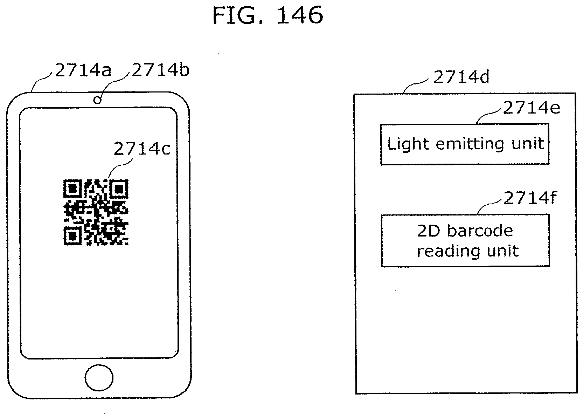

FIG. 146 is a diagram illustrating an example of combination with 2D barcode in Embodiment 7.

[FIG. 147]

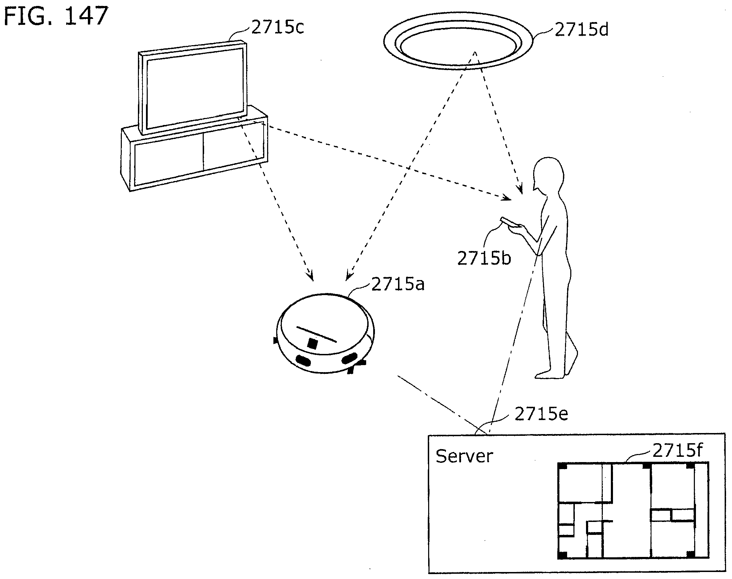

FIG. 147 is a diagram illustrating an example of map generation and use in Embodiment 7.

[FIG. 148]

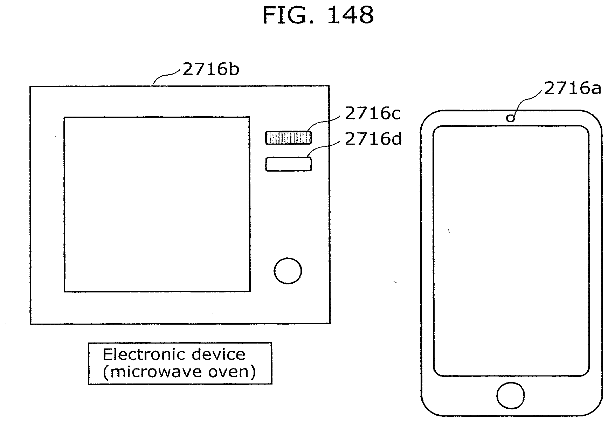

FIG. 148 is a diagram illustrating an example of electronic device state obtainment and operation in Embodiment 7.

[FIG. 149]

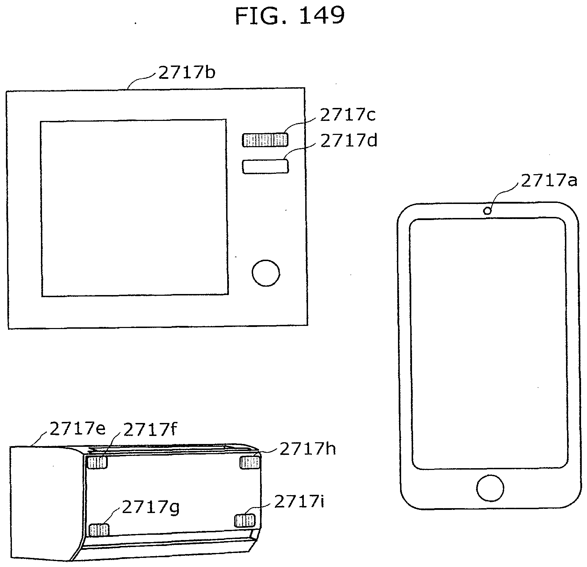

FIG. 149 is a diagram illustrating an example of electronic device recognition in Embodiment 7.

[FIG. 150]

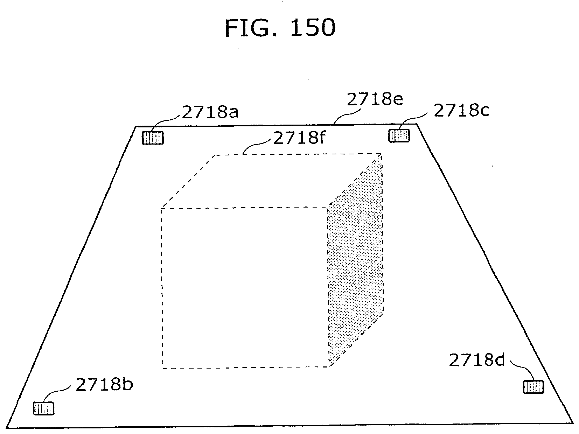

FIG. 150 is a diagram illustrating an example of augmented reality object display in Embodiment 7.

[FIG. 151]

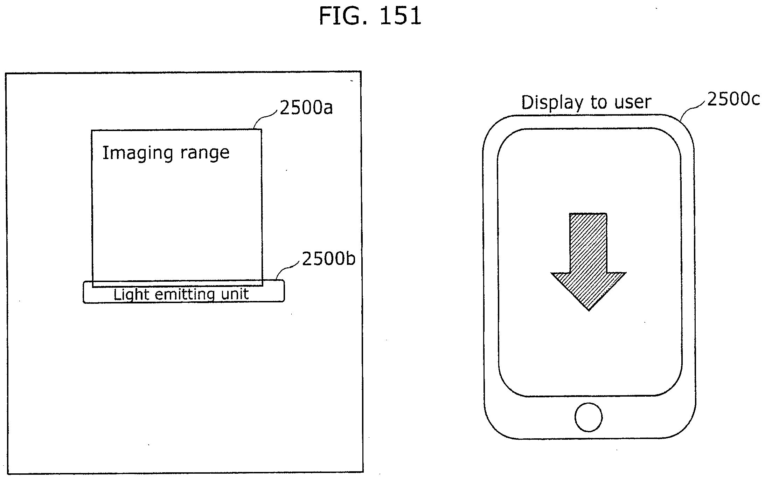

FIG. 151 is a diagram illustrating an example of a user interface in Embodiment 7.

[FIG. 152]

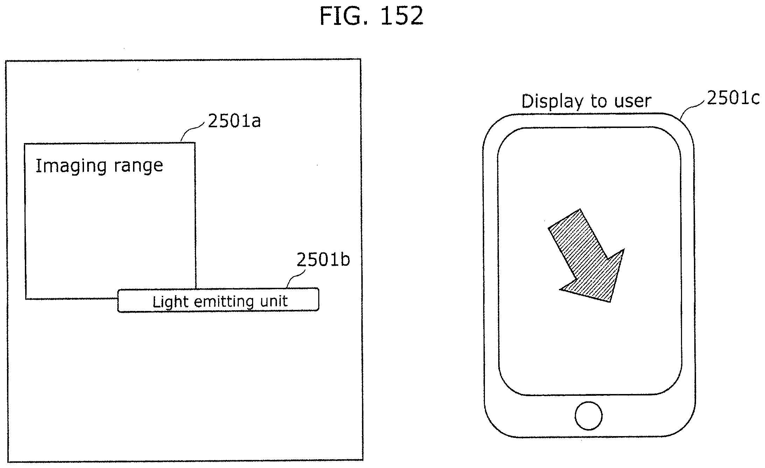

FIG. 152 is a diagram illustrating an example of a user interface in Embodiment 7.

[FIG. 153]

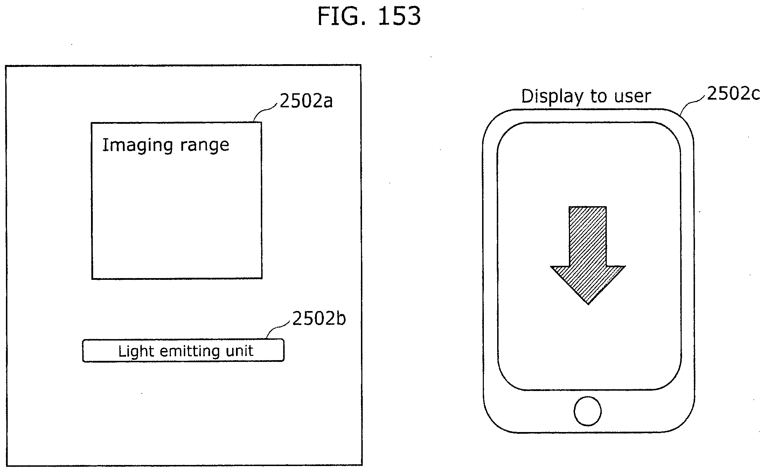

FIG. 153 is a diagram illustrating an example of a user interface in Embodiment 7.

[FIG. 154]

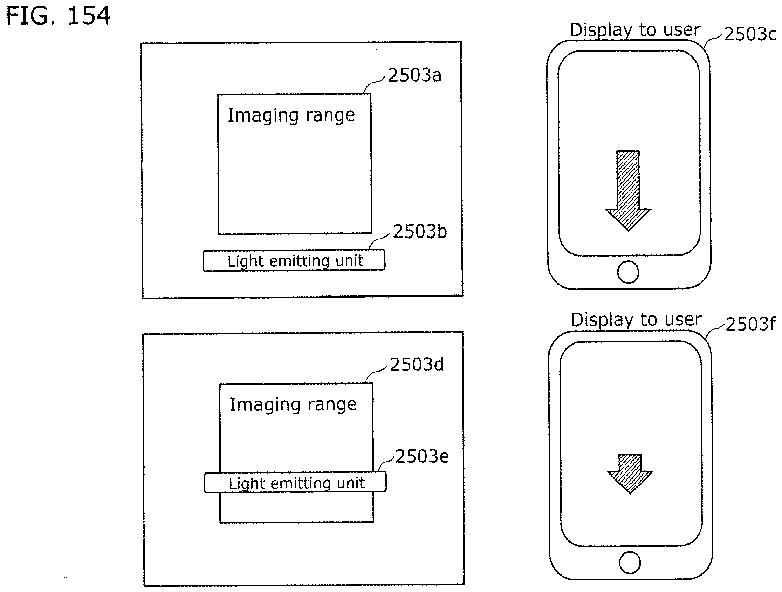

FIG. 154 is a diagram illustrating an example of a user interface in Embodiment 7.

[FIG. 155]

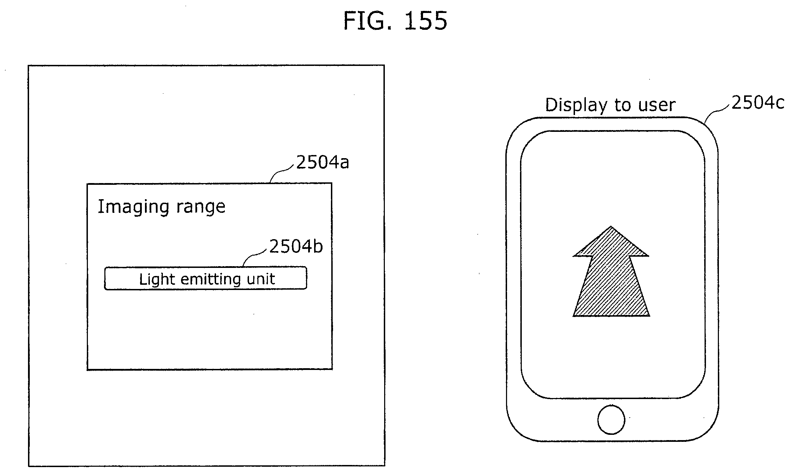

FIG. 155 is a diagram illustrating an example of a user interface in Embodiment 7.

[FIG. 156]

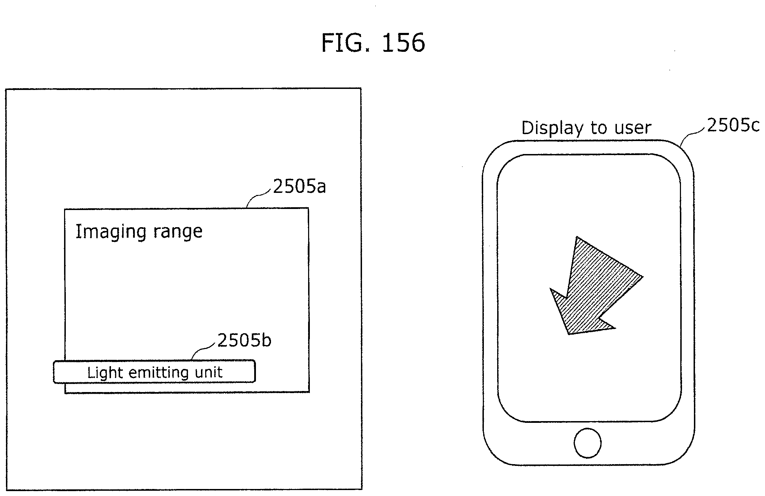

FIG. 156 is a diagram illustrating an example of a user interface in Embodiment 7.

[FIG. 157]

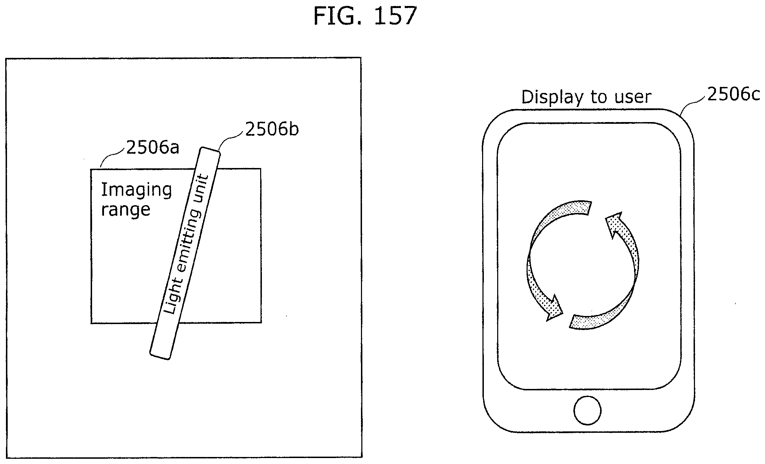

FIG. 157 is a diagram illustrating an example of a user interface in Embodiment 7.

[FIG. 158]

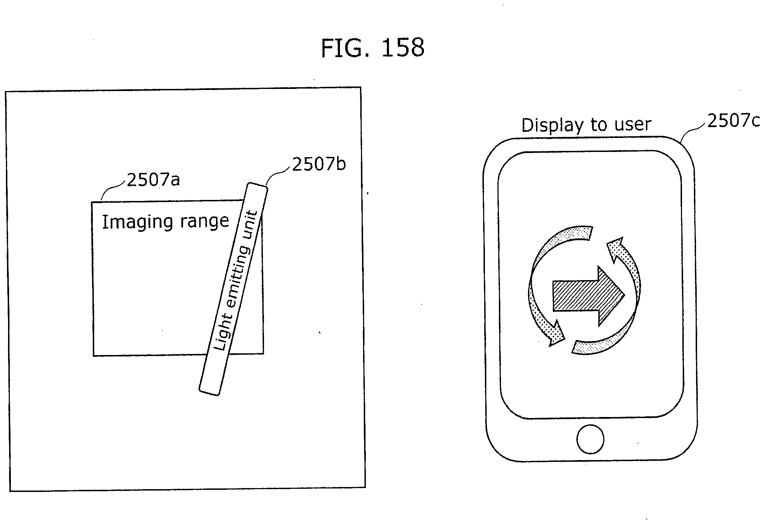

FIG. 158 is a diagram illustrating an example of a user interface in Embodiment 7.

[FIG. 159]

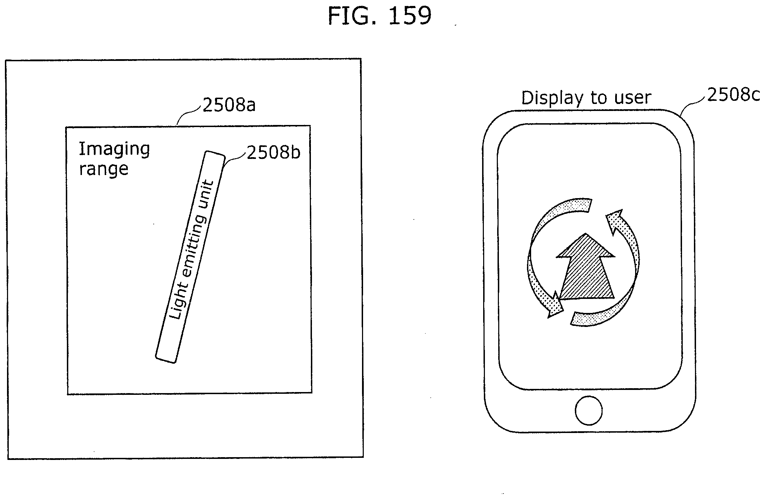

FIG. 159 is a diagram illustrating an example of a user interface in Embodiment 7.

[FIG. 160]

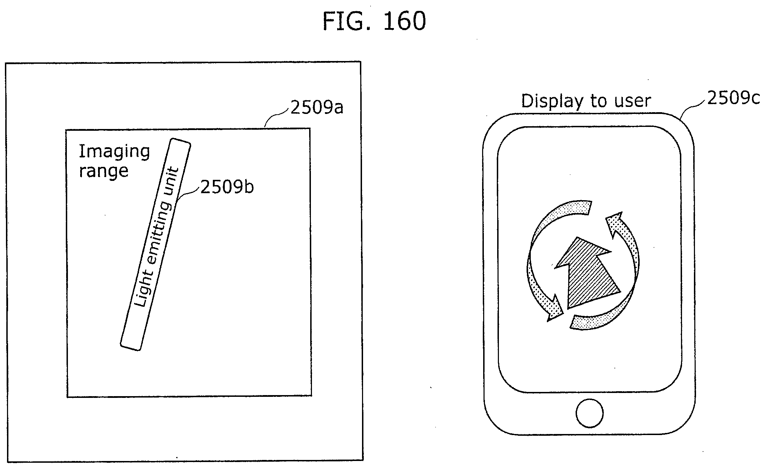

FIG. 160 is a diagram illustrating an example of a user interface in Embodiment 7.

[FIG. 161]

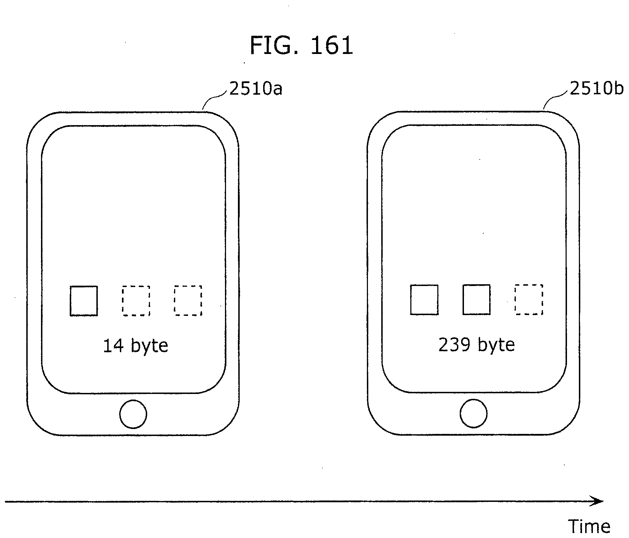

FIG. 161 is a diagram illustrating an example of a user interface in Embodiment 7.

[FIG. 162]

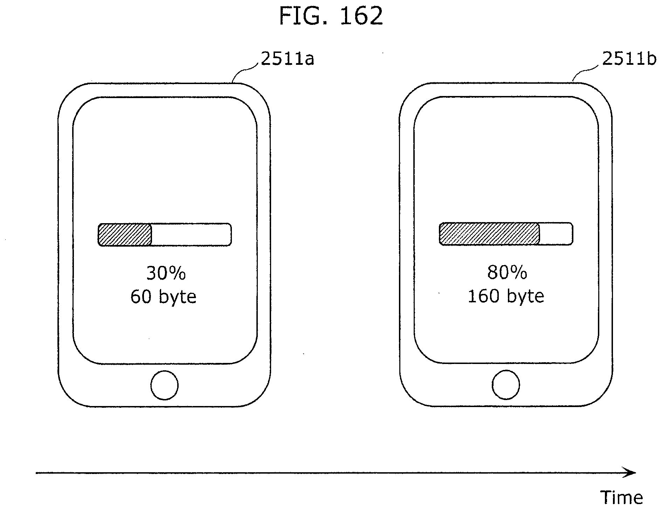

FIG. 162 is a diagram illustrating an example of a user interface in Embodiment 7.

[FIG. 163]

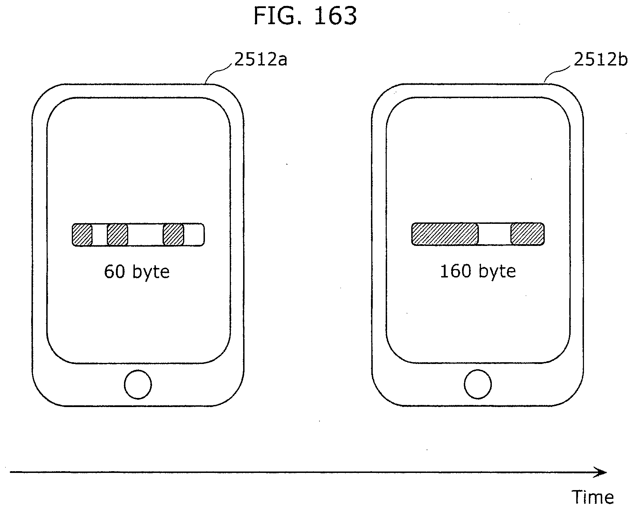

FIG. 163 is a diagram illustrating an example of a user interface in Embodiment 7.

[FIG. 164]

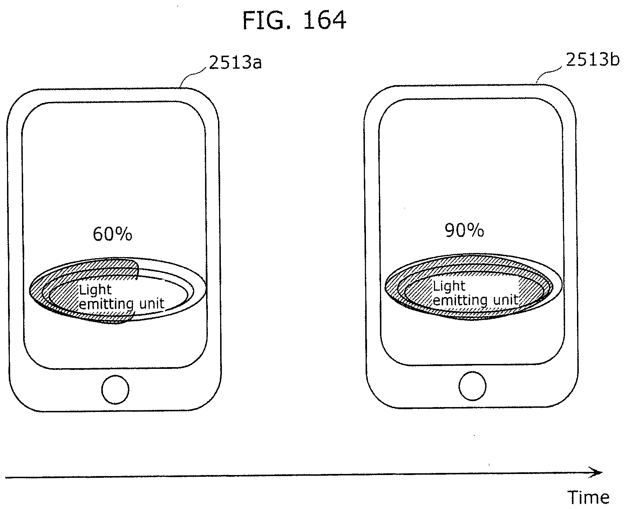

FIG. 164 is a diagram illustrating an example of a user interface in Embodiment 7.

[FIG. 165]

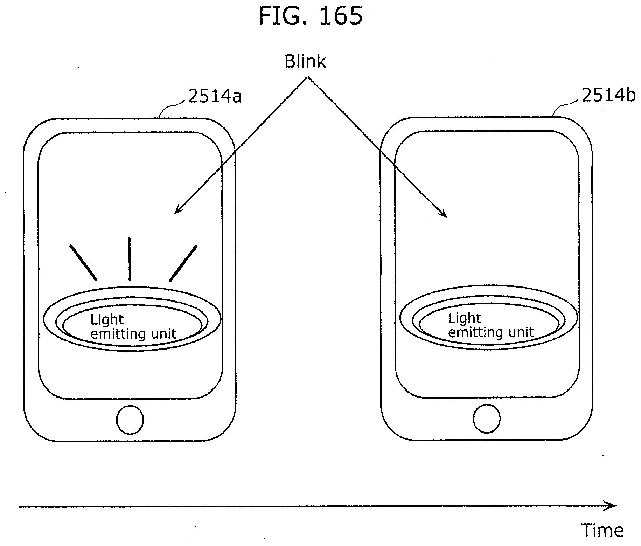

FIG. 165 is a diagram illustrating an example of a user interface in Embodiment 7.

[FIG. 166]

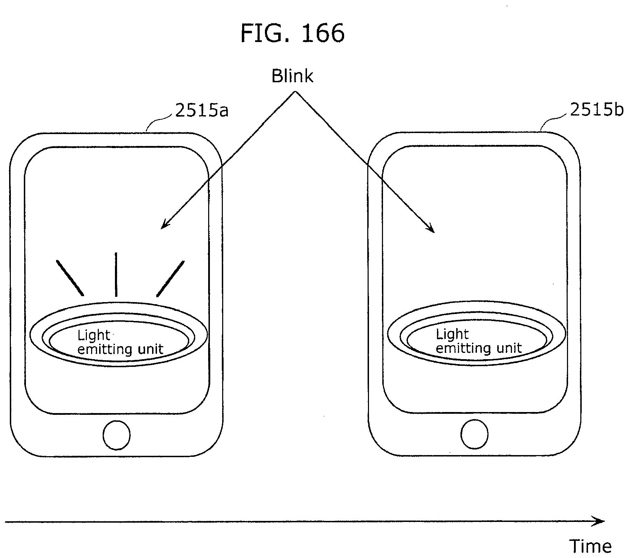

FIG. 166 is a diagram illustrating an example of a user interface in Embodiment 7.

[FIG. 167]

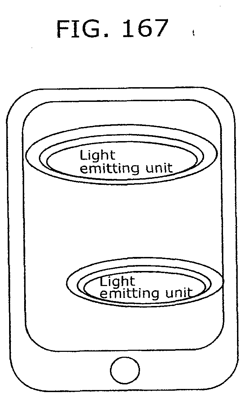

FIG. 167 is a diagram illustrating an example of a user interface in Embodiment 7.

[FIG. 168]

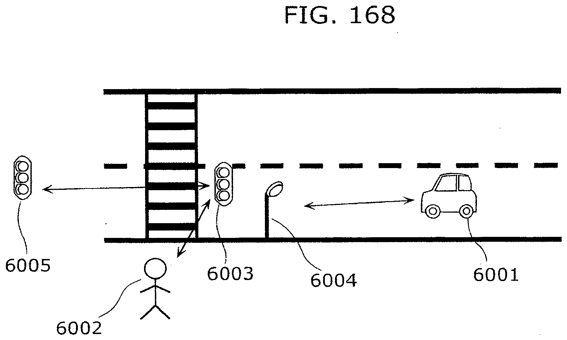

FIG. 168 is a diagram illustrating an example of application to ITS in Embodiment 8.

[FIG. 169]

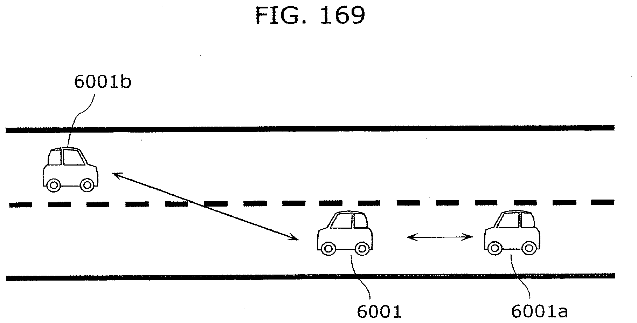

FIG. 169 is a diagram illustrating an example of application to ITS in Embodiment 8.

[FIG. 170]

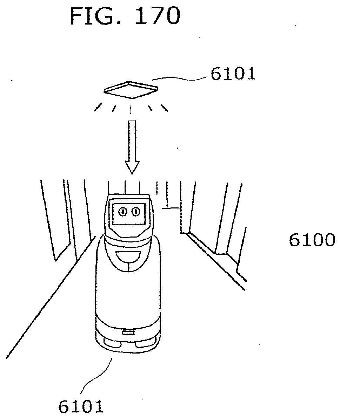

FIG. 170 is a diagram illustrating an example of application to a position information reporting system and a facility system in Embodiment 8.

[FIG. 171]

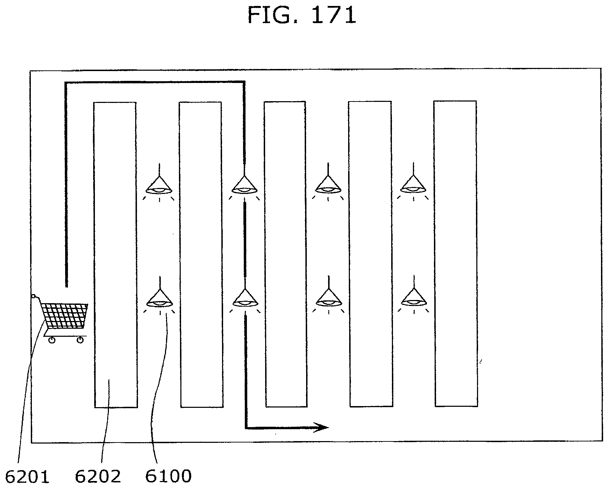

FIG. 171 is a diagram illustrating an example of application to a supermarket system in Embodiment 8.

[FIG. 172]

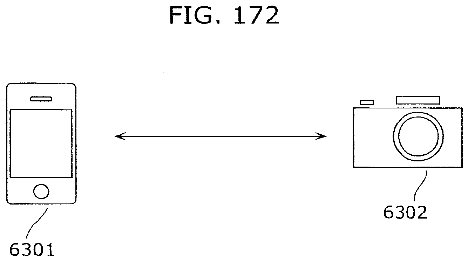

FIG. 172 is a diagram illustrating an example of application to communication between a mobile phone terminal and a camera in Embodiment 8.

[FIG. 173]

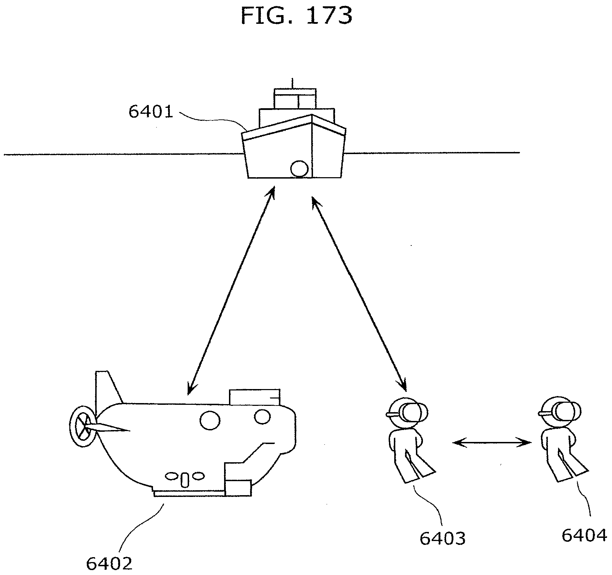

FIG. 173 is a diagram illustrating an example of application to underwater communication in Embodiment 8.

[FIG. 174]

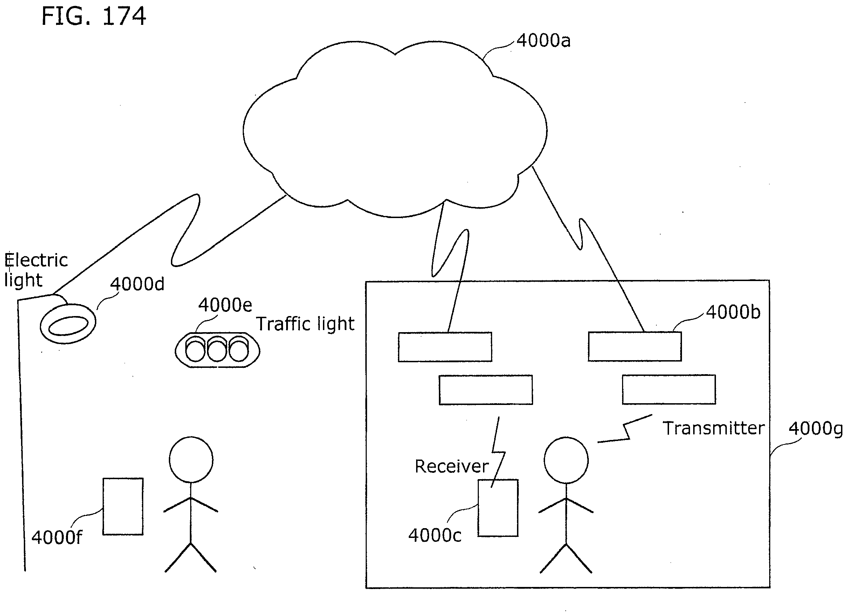

FIG. 174 is a diagram for describing an example of service provision to a user in Embodiment 9.

[FIG. 175]

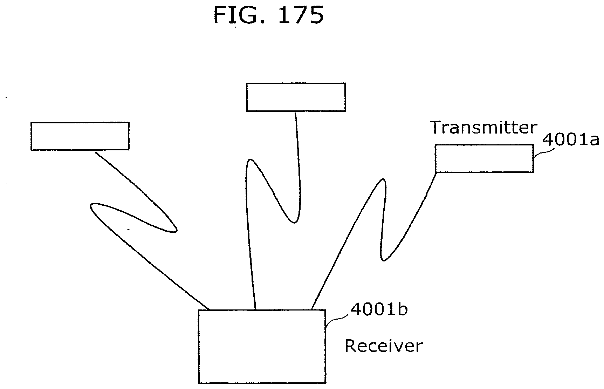

FIG. 175 is a diagram for describing an example of service provision to a user in Embodiment 9.

[FIG. 176]

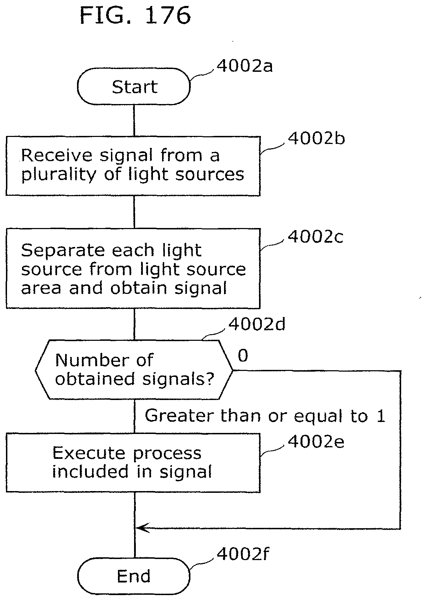

FIG. 176 is a flowchart illustrating the case where a receiver simultaneously processes a plurality of signals received from transmitters in Embodiment 9.

[FIG. 177]

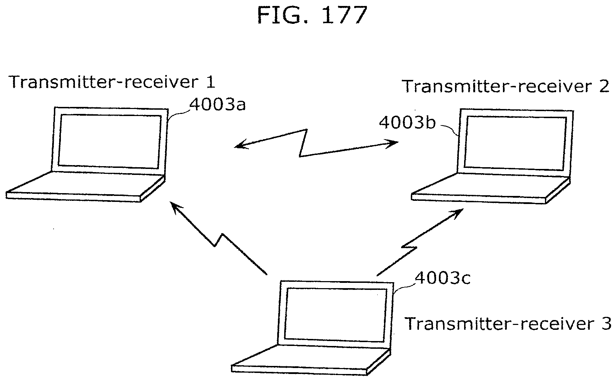

FIG. 177 is a diagram illustrating an example of the case of realizing inter-device communication by two-way communication in Embodiment 9.

[FIG. 178]

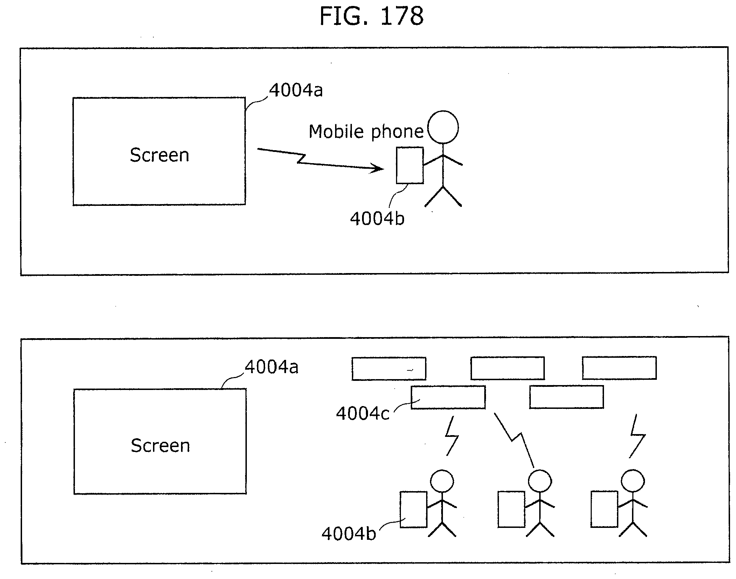

FIG. 178 is a diagram for describing a service using directivity characteristics in Embodiment 9.

[FIG. 179]

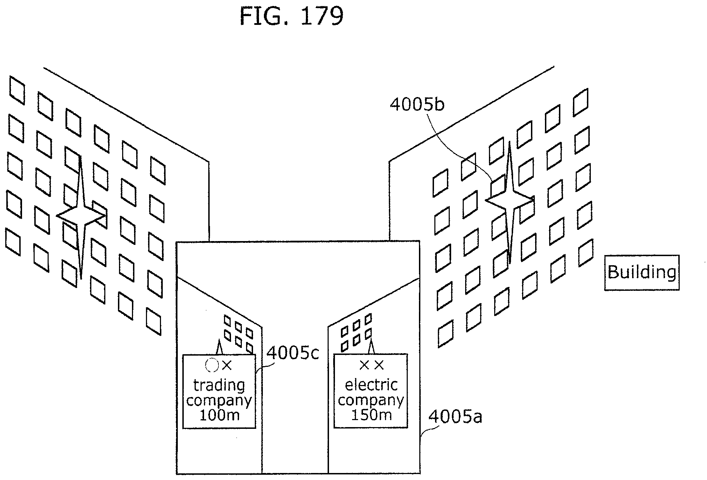

FIG. 179 is a diagram for describing another example of service provision to a user in Embodiment 9.

[FIG. 180]

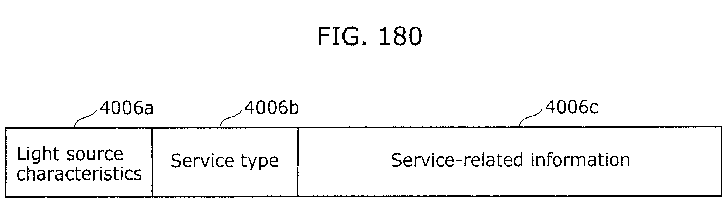

FIG. 180 is a diagram illustrating a format example of a signal included in a light source emitted from a transmitter in Embodiment 9.

[FIG. 181]

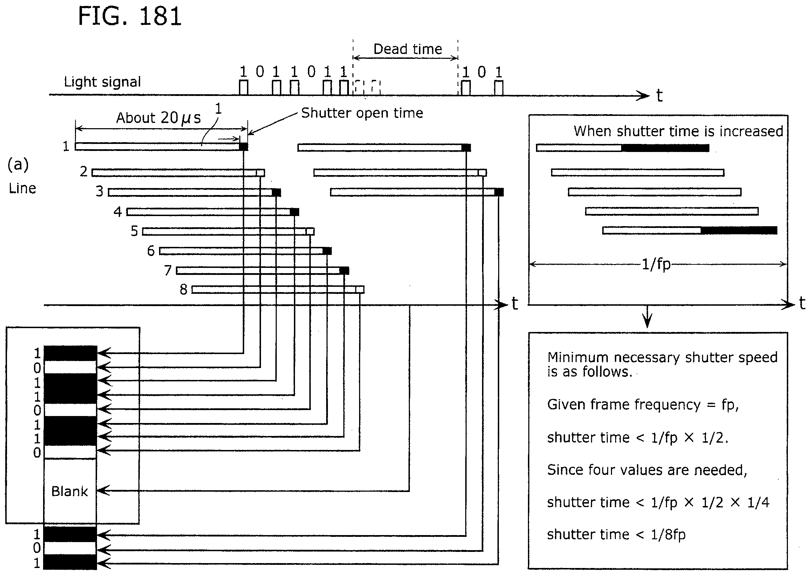

FIG. 181 is a diagram illustrating a principle in Embodiment 10.

[FIG. 182]

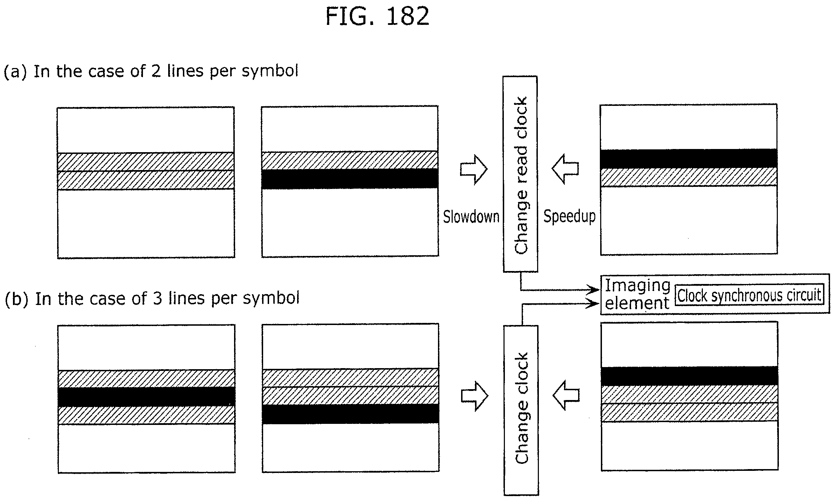

FIG. 182 is a diagram illustrating an example of operation in Embodiment 10.

[FIG. 183]

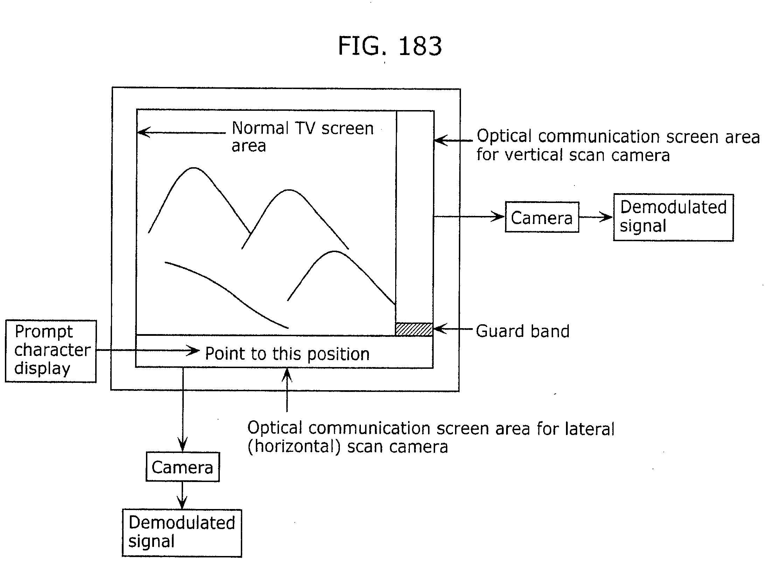

FIG. 183 is a diagram illustrating an example of operation in Embodiment 10.

[FIG. 184]

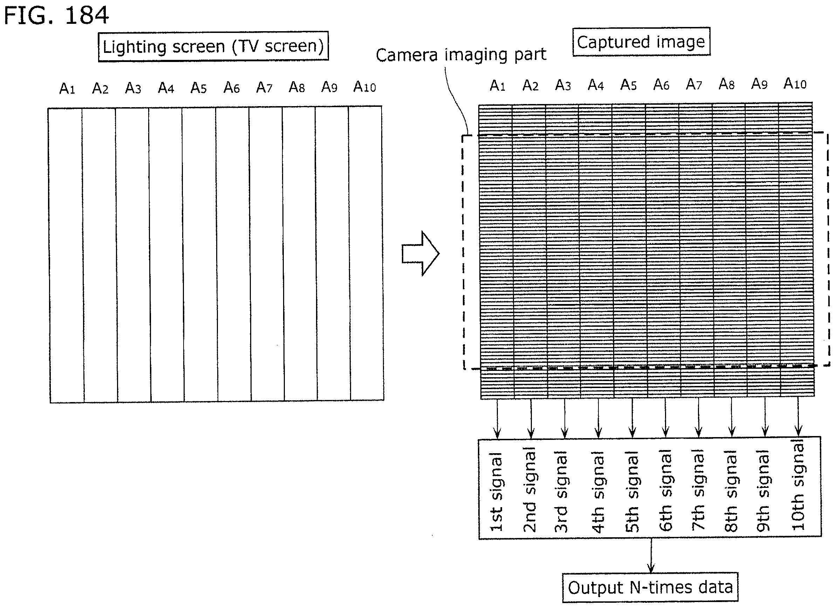

FIG. 184 is a diagram illustrating an example of operation in Embodiment 10.

[FIG. 185]

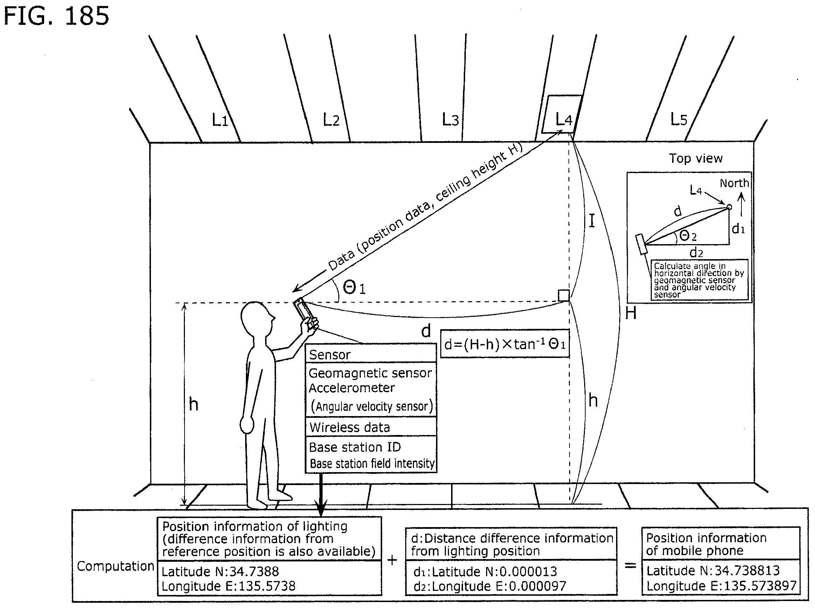

FIG. 185 is a diagram illustrating an example of operation in Embodiment 10.

[FIG. 186]

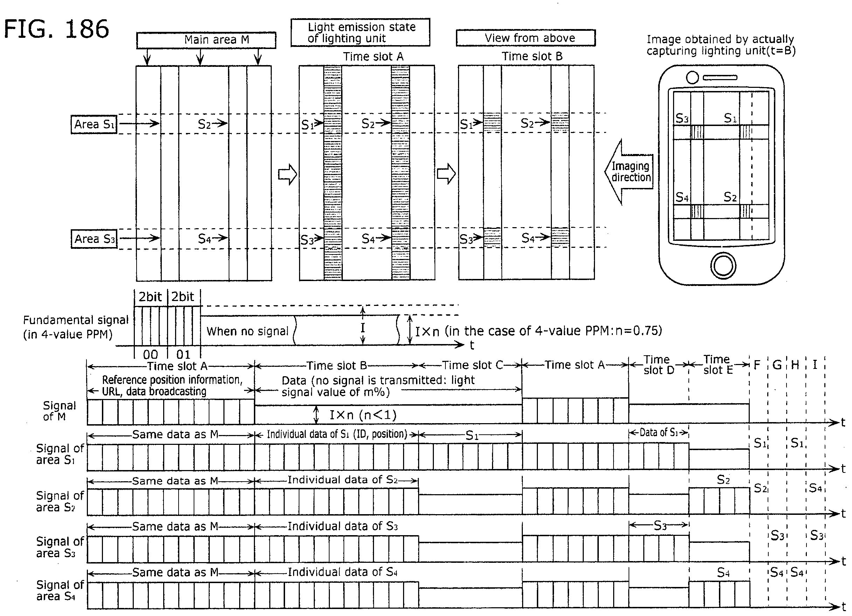

FIG. 186 is a diagram illustrating an example of operation in Embodiment 10.

[FIG. 187]

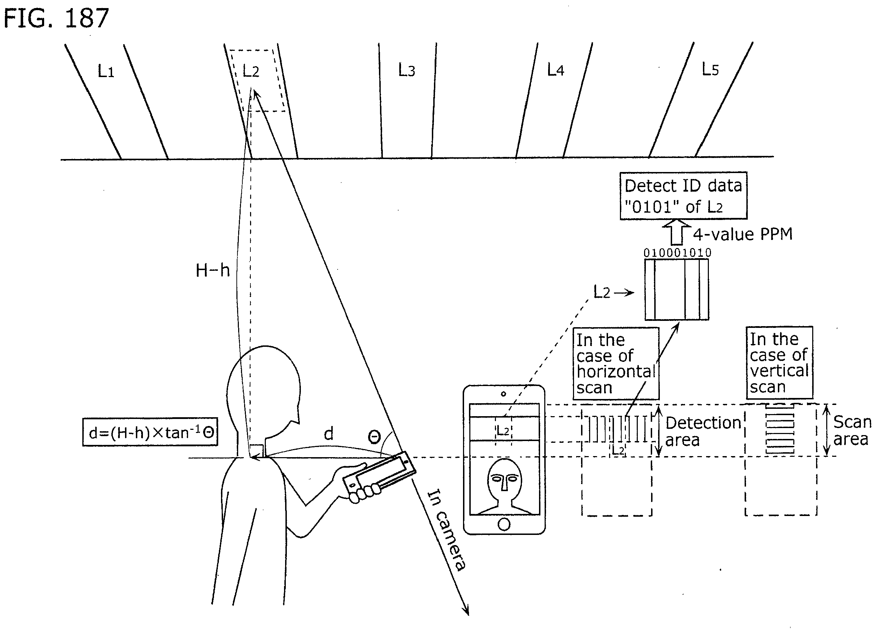

FIG. 187 is a diagram illustrating an example of operation in Embodiment 10.

[FIG. 188]

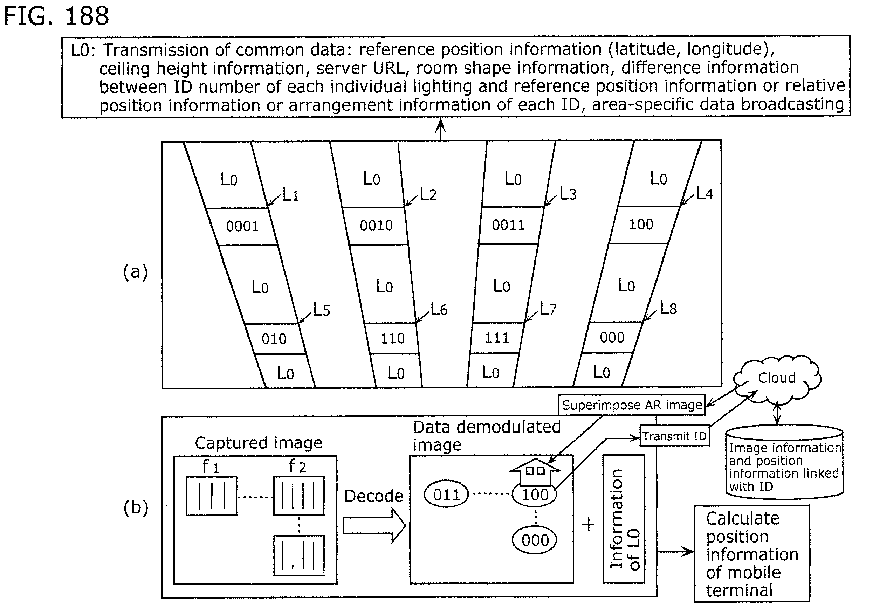

FIG. 188 is a diagram illustrating an example of operation in Embodiment 10.

[FIG. 189]

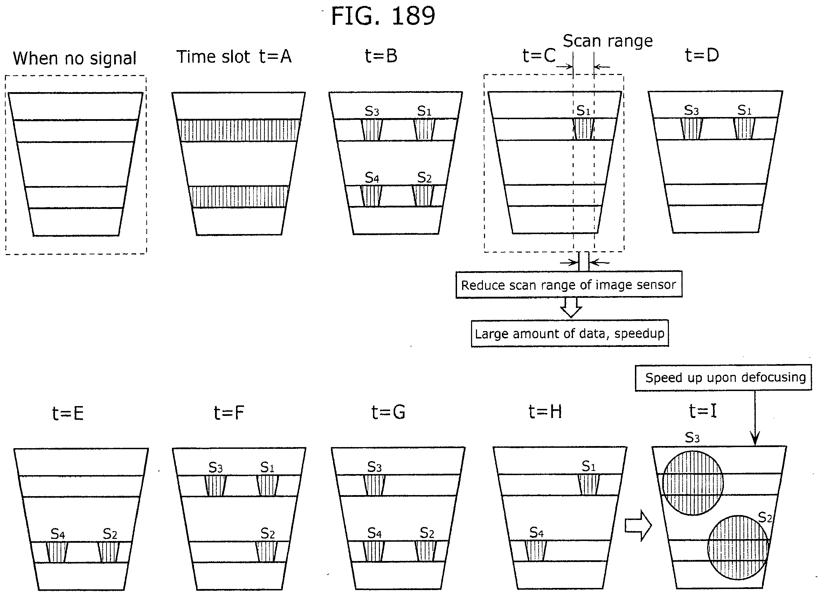

FIG. 189 is a diagram illustrating an example of operation in Embodiment 10.

[FIG. 190]

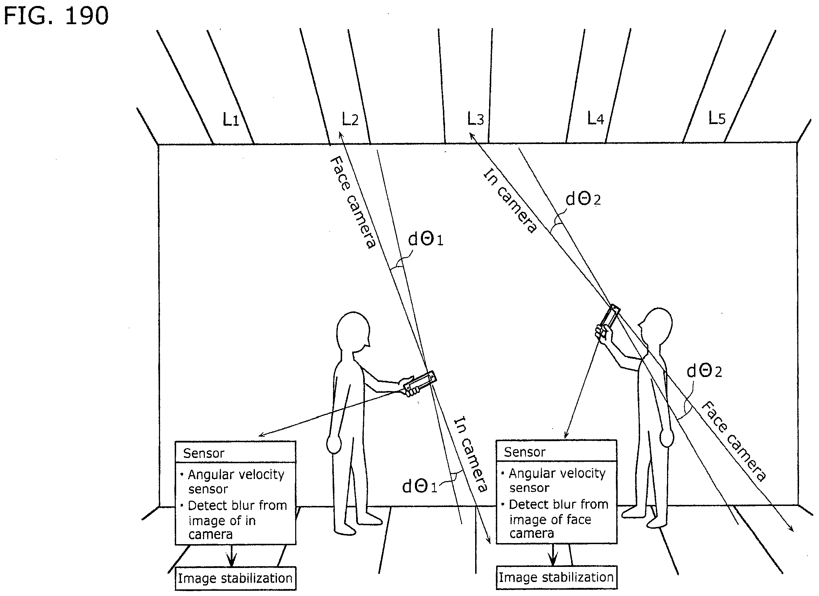

FIG. 190 is a diagram illustrating an example of operation in Embodiment 10.

[FIG. 191]

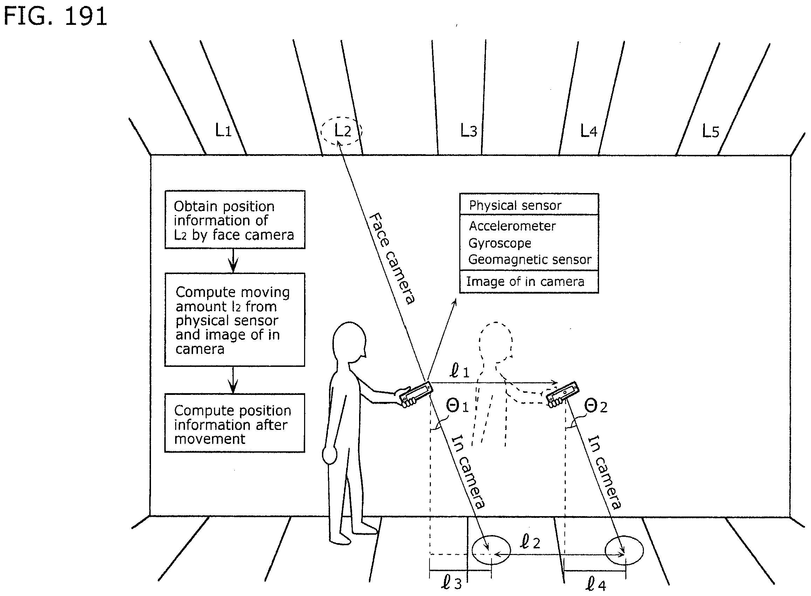

FIG. 191 is a diagram illustrating an example of operation in Embodiment 10.
[FIG. 192]

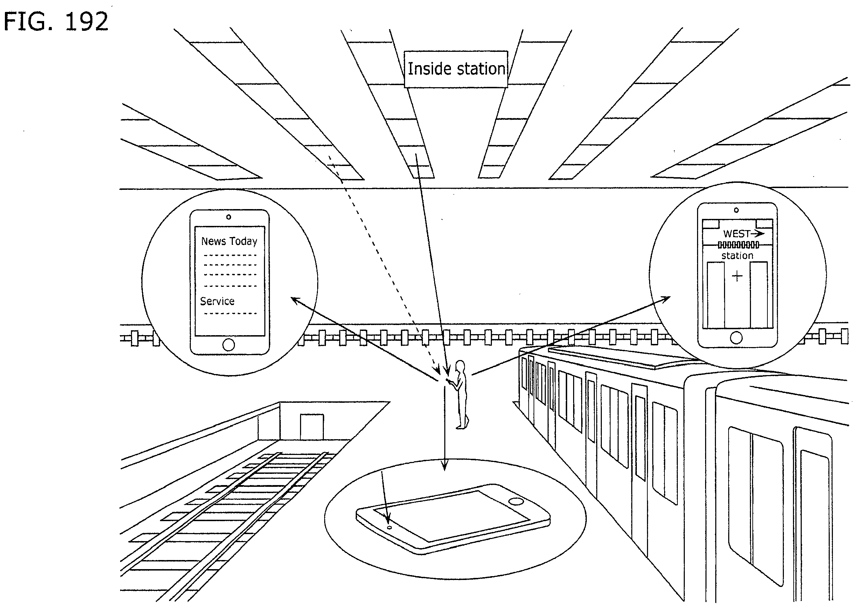

FIG. 192 is a diagram illustrating an example of operation in Embodiment 10.
[FIG. 193]

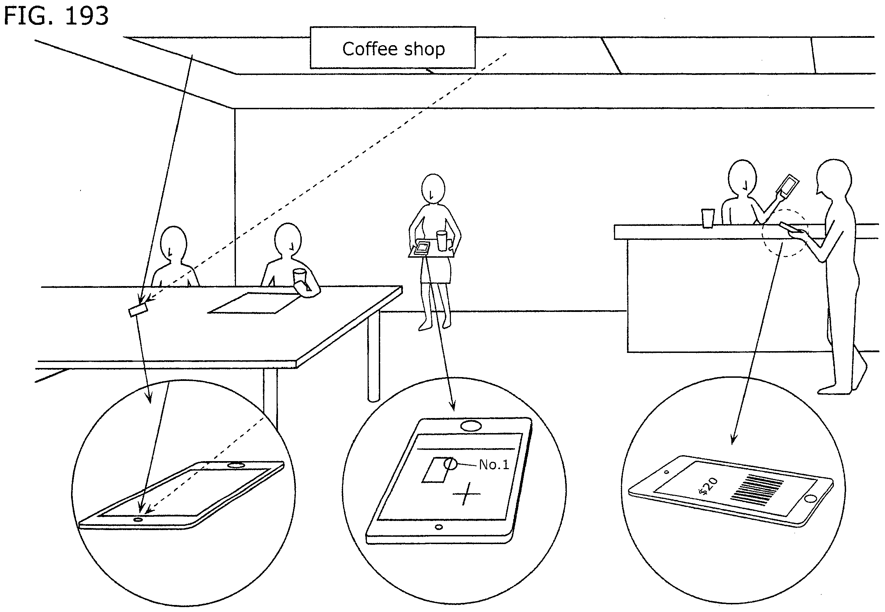

FIG. 193 is a diagram illustrating an example of operation in Embodiment 10.
[FIG. 194]

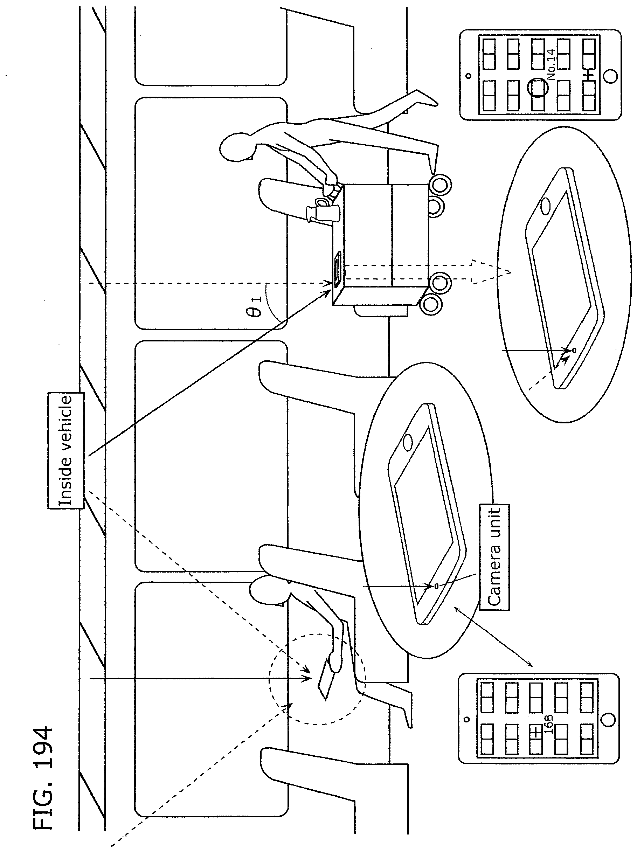

FIG. 194 is a diagram illustrating an example of operation in Embodiment 10.
[FIG. 195]

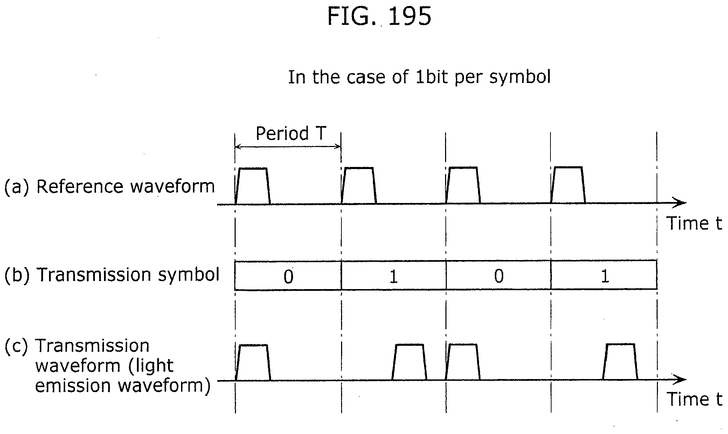

FIG. 195 is a timing diagram of a transmission signal in an information communication device in Embodiment 11.
[FIG. 196]

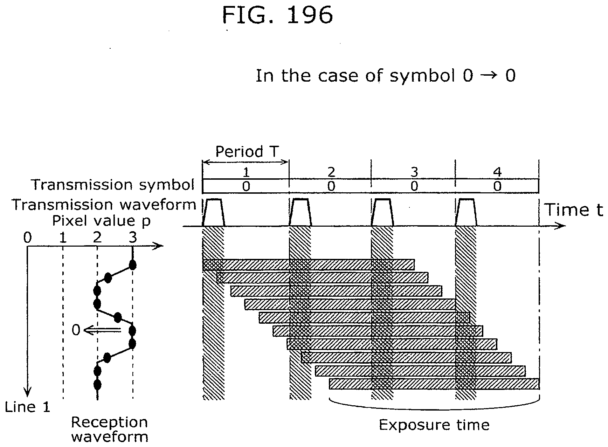

FIG. 196 is a diagram illustrating relations between a transmission signal and a reception signal in Embodiment 11.
[FIG. 197]

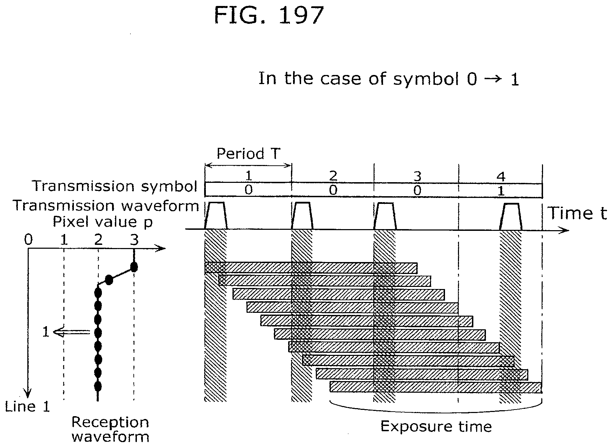

FIG. 197 is a diagram illustrating relations between a transmission signal and a reception signal in Embodiment 11.
[FIG. 198]

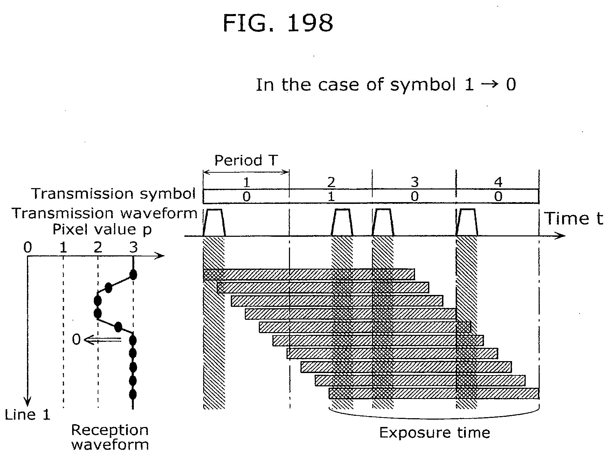

FIG. 198 is a diagram illustrating relations between a transmission signal and a reception signal in Embodiment 11.
[FIG. 199]

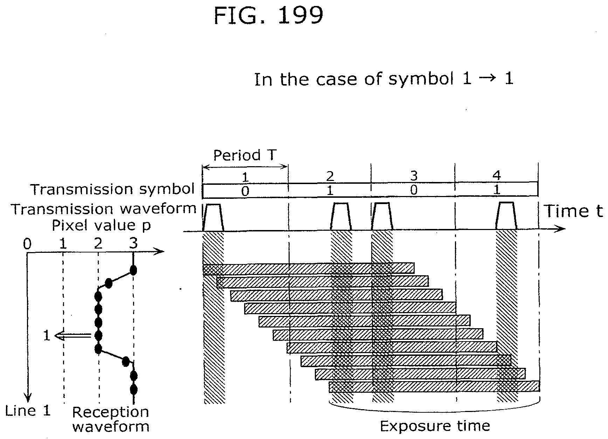

FIG. 199 is a diagram illustrating relations between a transmission signal and a reception signal in Embodiment 11.
[FIG. 200]

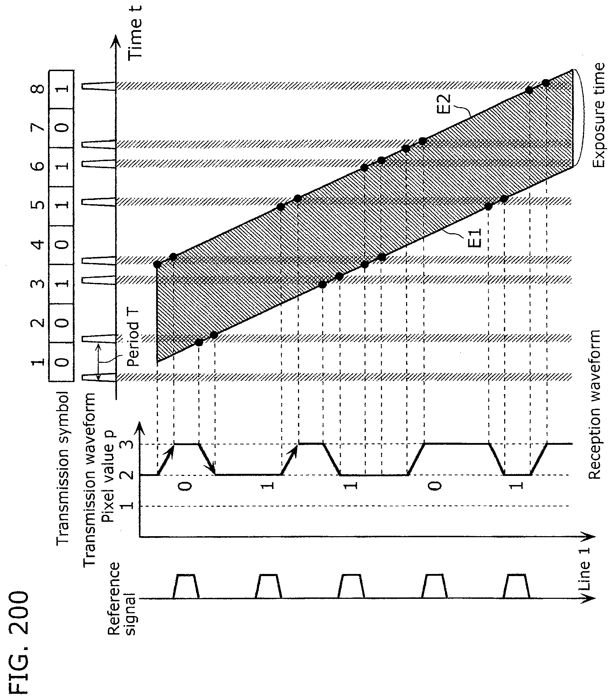

FIG. 200 is a diagram illustrating relations between a transmission signal and a reception signal in Embodiment 11.
[FIG. 201]

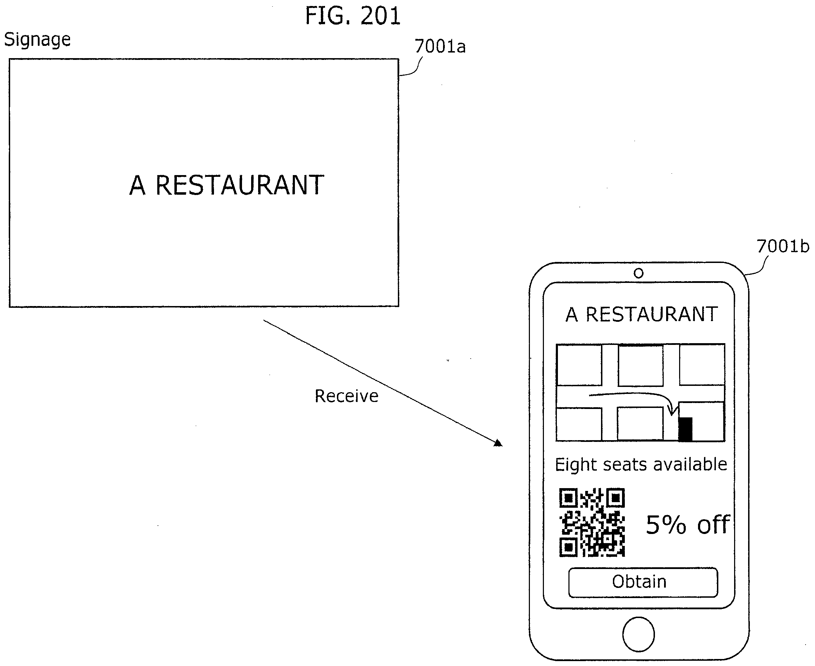

FIG. 201 is a diagram illustrating an example of application of a receiver and a transmitter in Embodiment 12.
[FIG. 202]

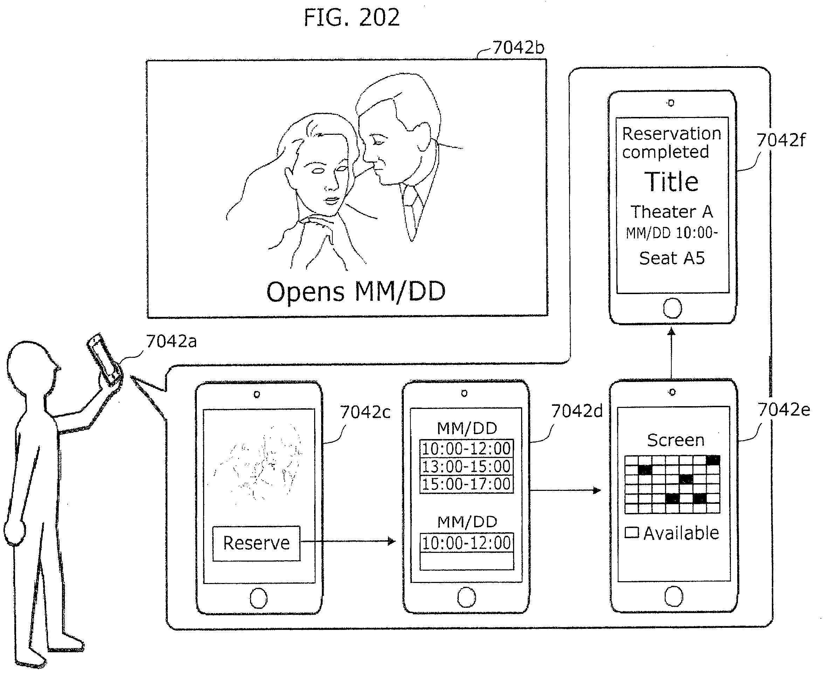

FIG. 202 is a diagram illustrating an example of application of a receiver and a transmitter in Embodiment 12.
[FIG. 203]

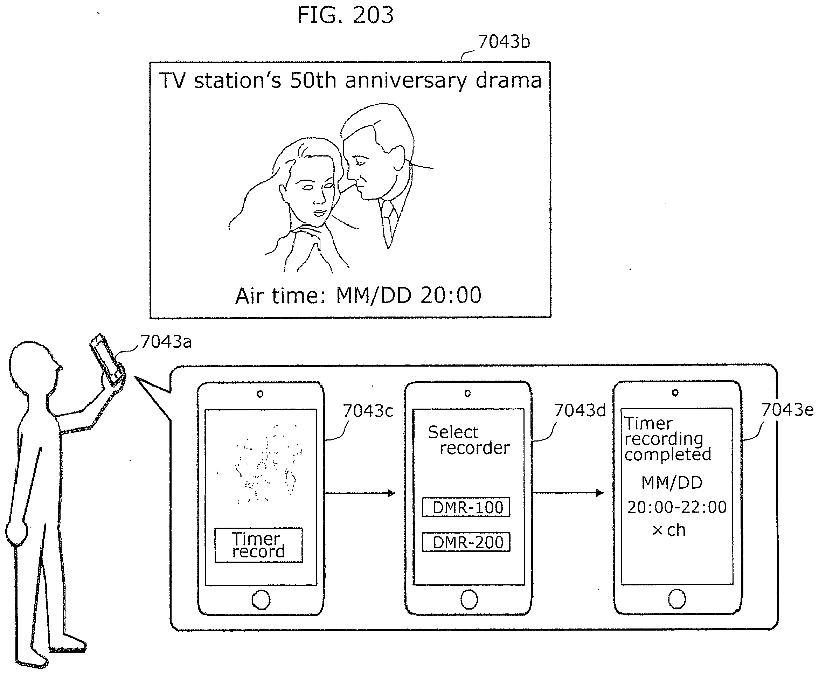

FIG. 203 is a diagram illustrating an example of application of a receiver and a transmitter in Embodiment 12.
[FIG. 204]

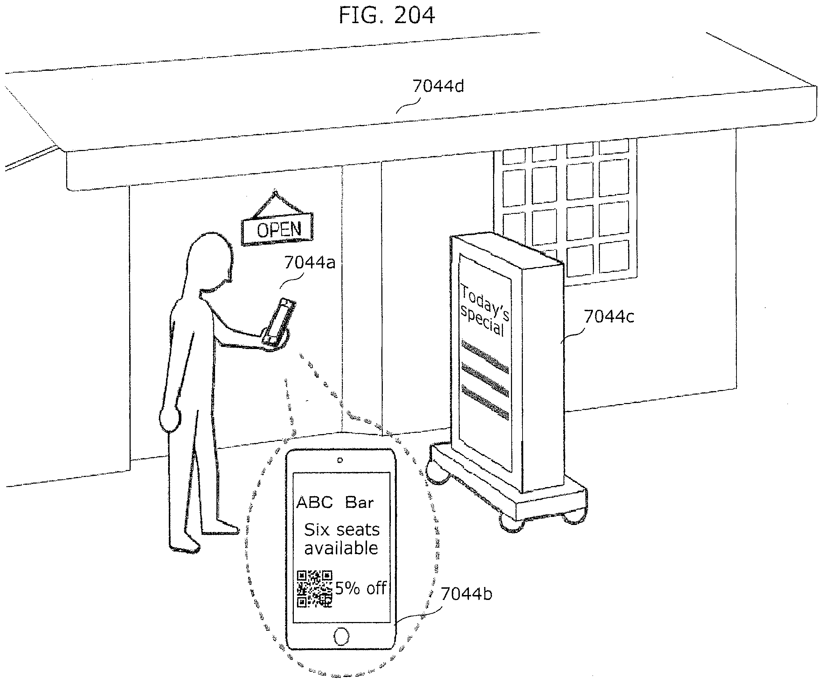

FIG. 204 is a diagram illustrating an example of application of a receiver and a transmitter in Embodiment 12.
[FIG. 205]

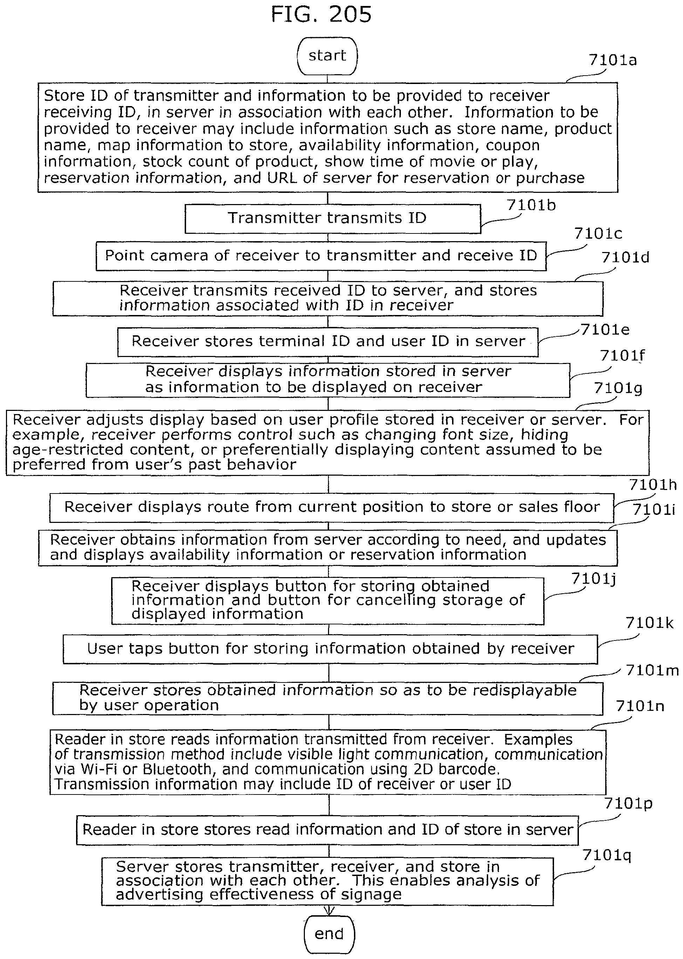

FIG. 205 is a flowchart illustrating an example of process operations of a receiver and a transmitter in Embodiment 12.
[FIG. 206]

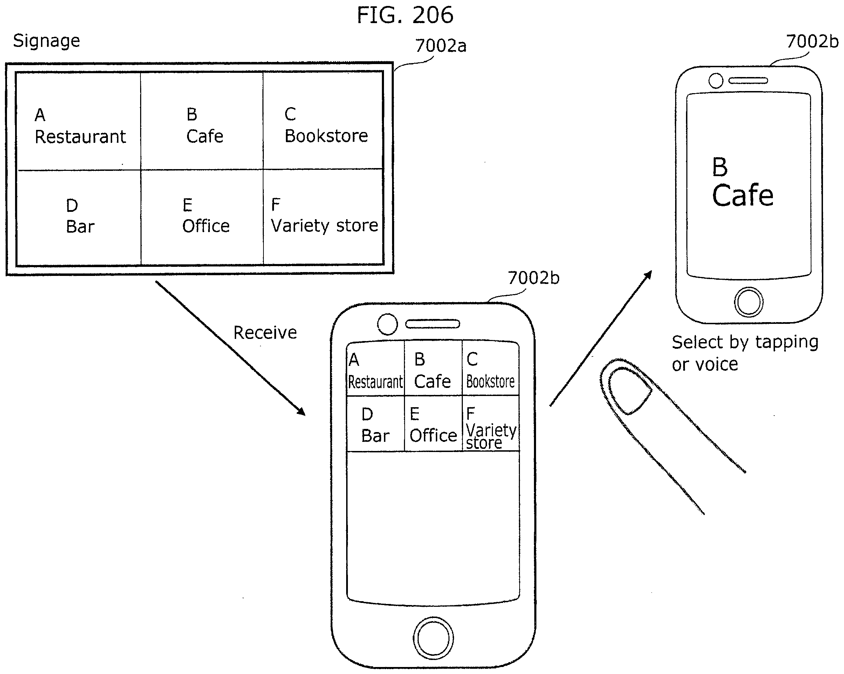

FIG. 206 is a diagram illustrating an example of application of a receiver and a transmitter in Embodiment 12.
[FIG. 207]

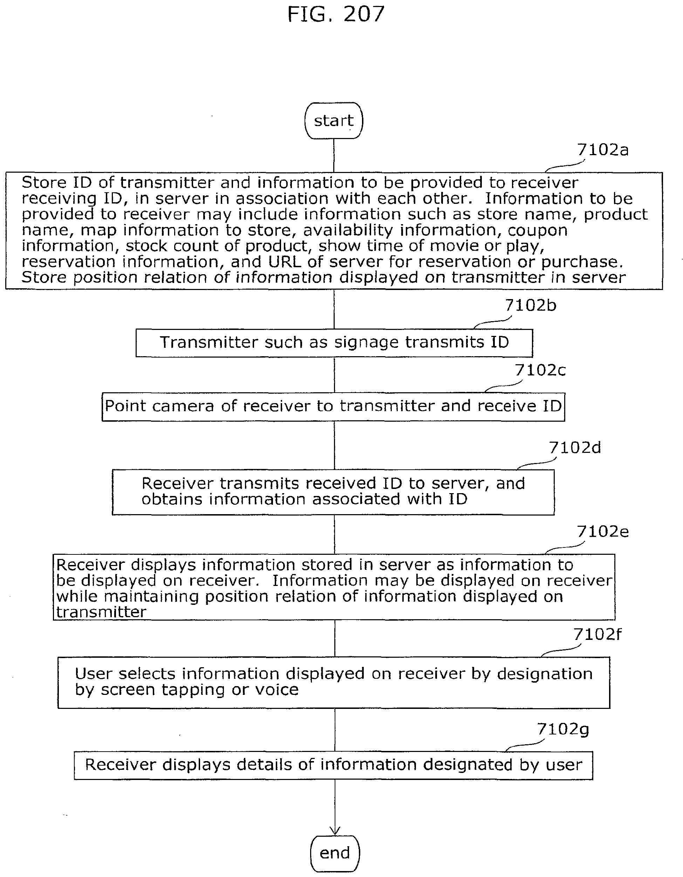

FIG. 207 is a flowchart illustrating an example of process operations of a receiver and a transmitter in Embodiment 12.
[FIG. 208]

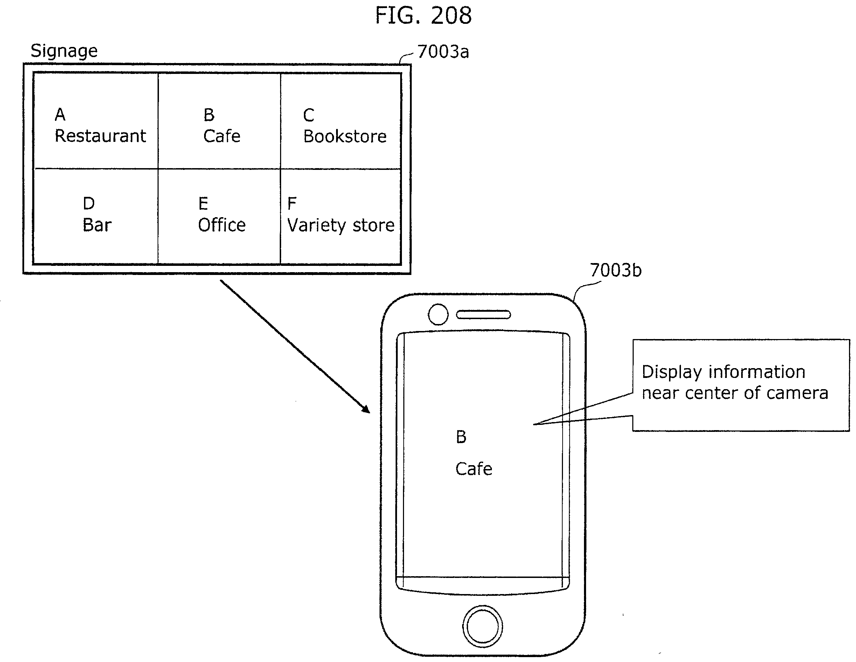

FIG. 208 is a diagram illustrating an example of application of a receiver and a transmitter in Embodiment 12.
[FIG. 209]

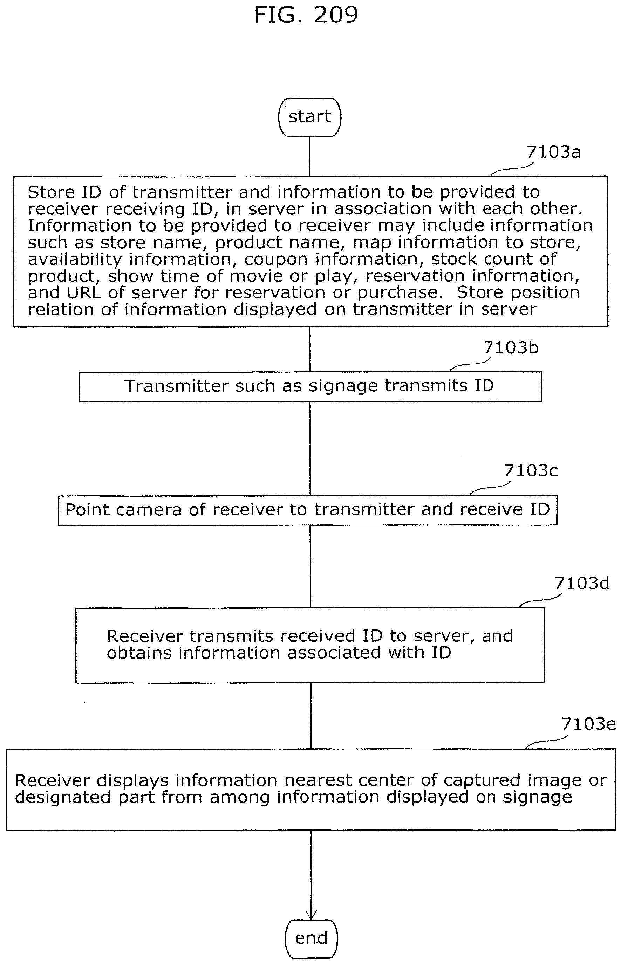

FIG. 209 is a flowchart illustrating an example of process operations of a receiver and a transmitter in Embodiment 12.
[FIG. 210]

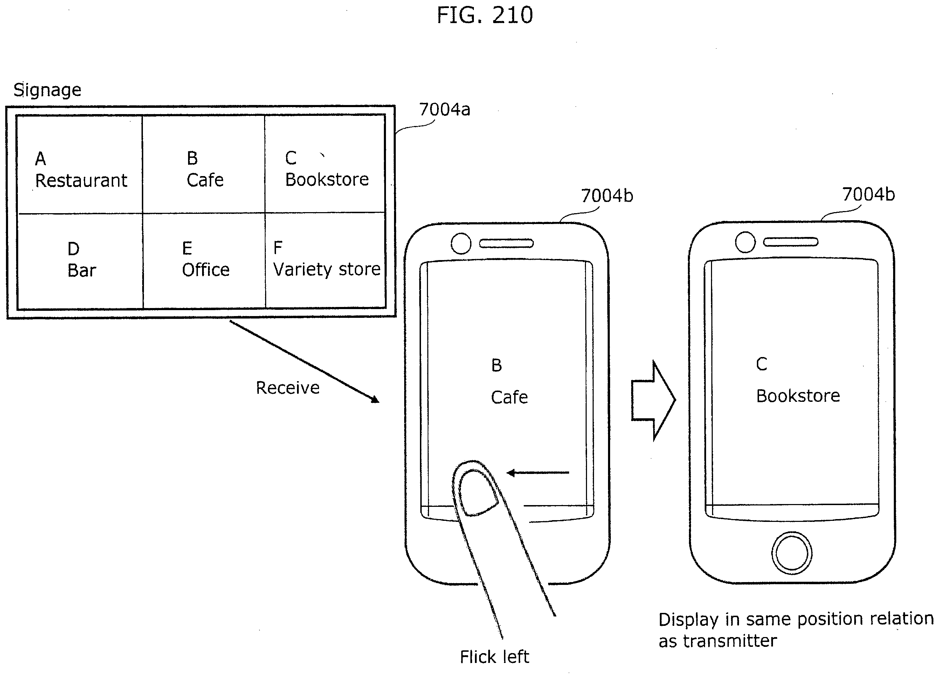

FIG. 210 is a diagram illustrating an example of application of a receiver and a transmitter in Embodiment 12.
[FIG. 211]

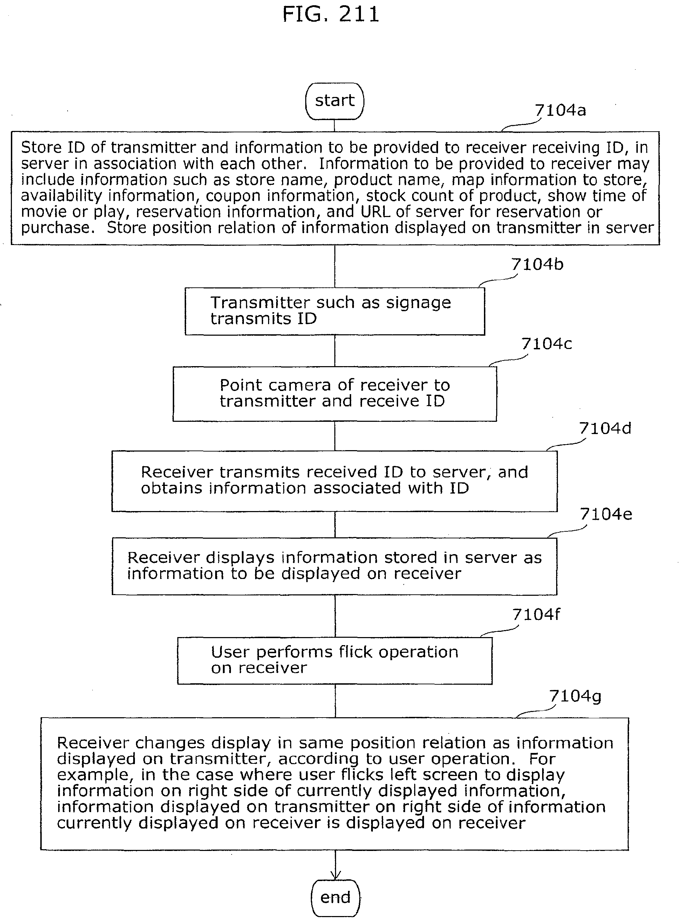

FIG. 211 is a flowchart illustrating an example of process operations of a receiver and a transmitter in Embodiment 12.
[FIG. 212]

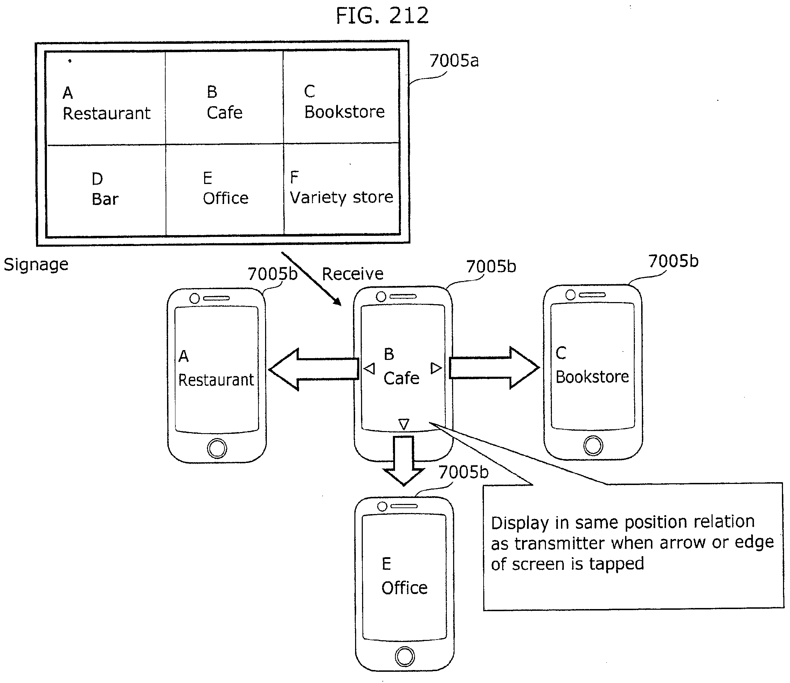

FIG. 212 is a diagram illustrating an example of application of a receiver and a transmitter in Embodiment 12.
[FIG. 213]

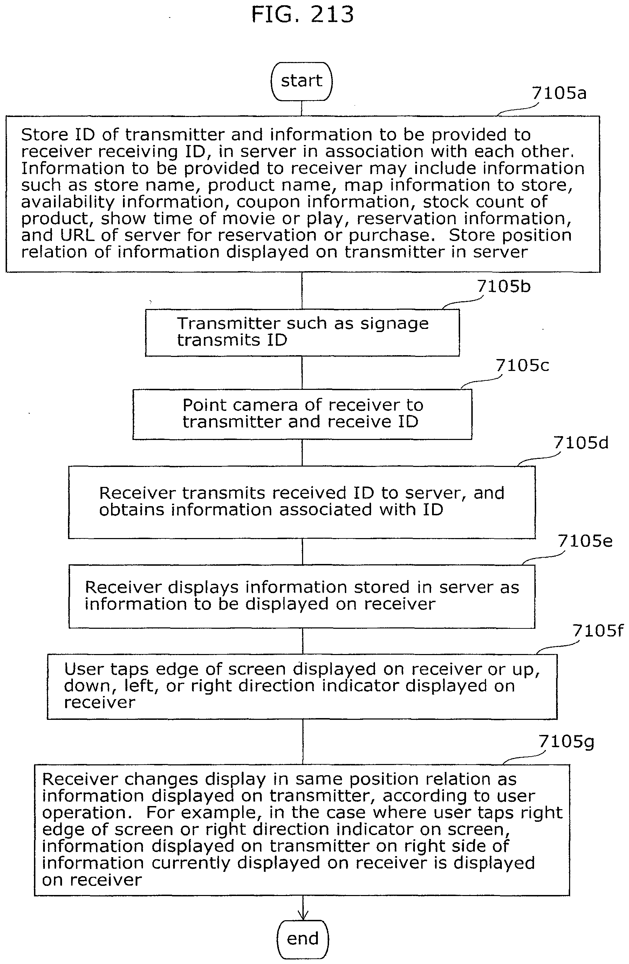

FIG. 213 is a flowchart illustrating an example of process operations of a receiver and a transmitter in Embodiment 12.
[FIG. 214]

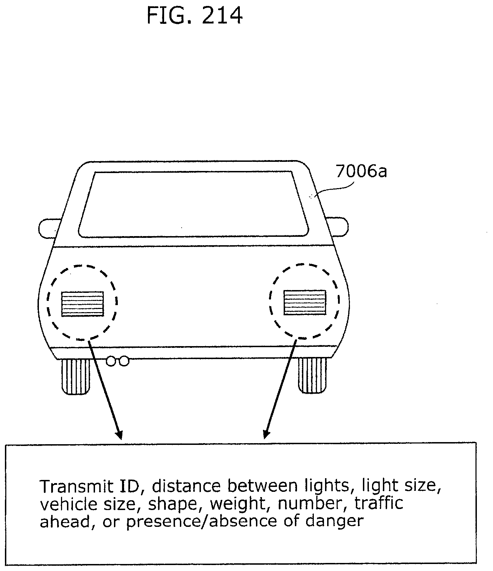

FIG. 214 is a diagram illustrating an example of application of a receiver and a transmitter in Embodiment 12.
[FIG. 215]

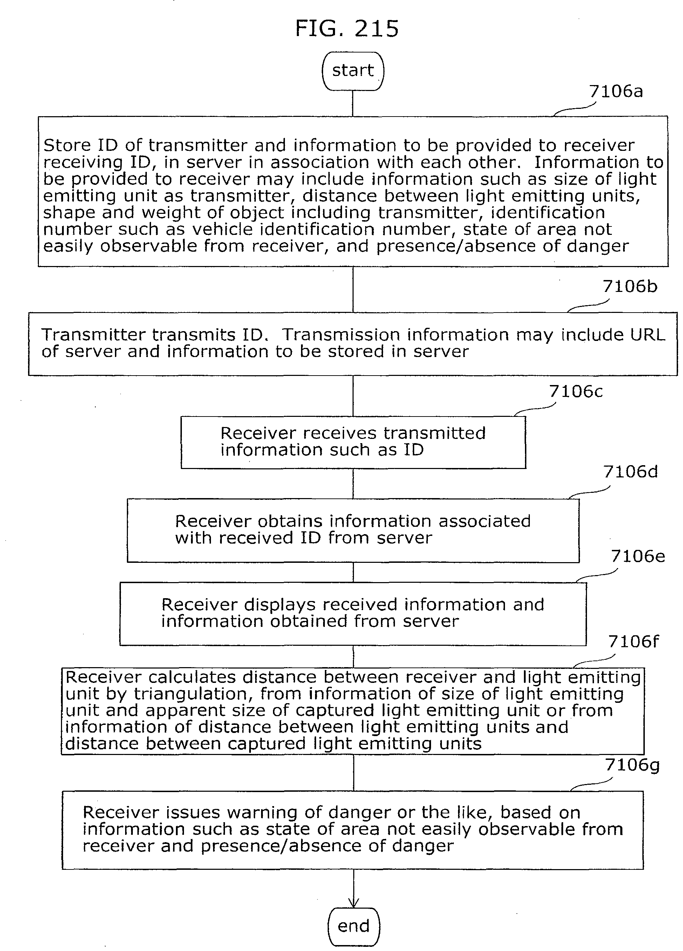

FIG. 215 is a flowchart illustrating an example of process operations of a receiver and a transmitter in Embodiment 12.
[FIG. 216]

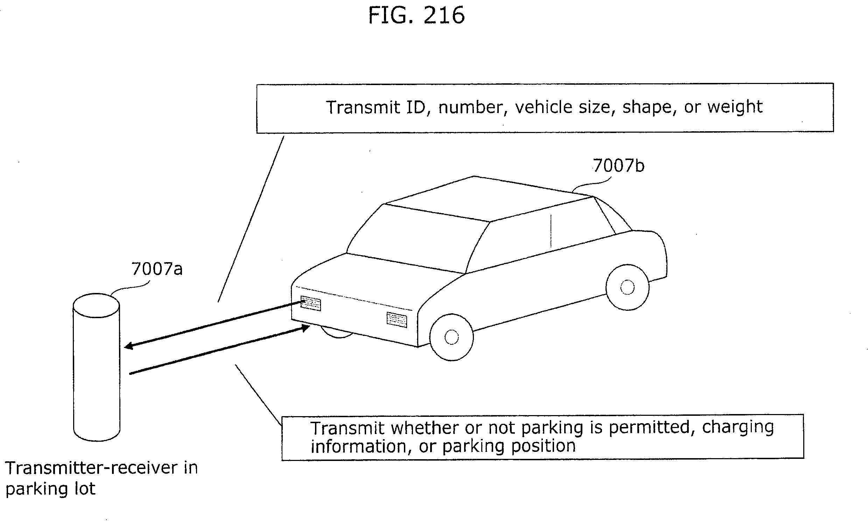

FIG. 216 is a diagram illustrating an example of application of a receiver and a transmitter in Embodiment 12.
[FIG. 217]

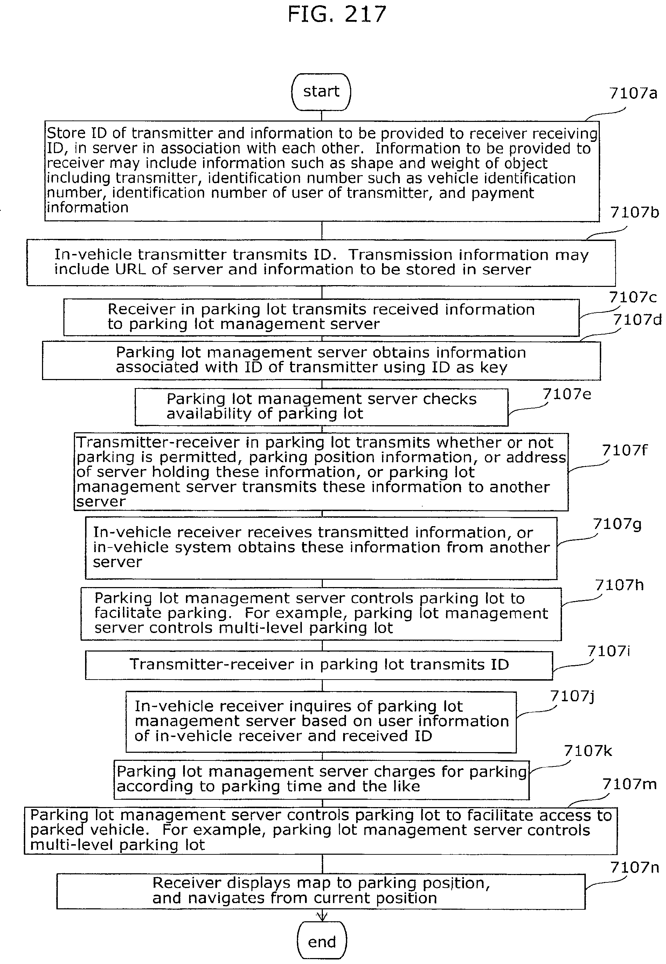

FIG. 217 is a flowchart illustrating an example of process operations of a receiver and a transmitter in Embodiment 12.
[FIG. 218]

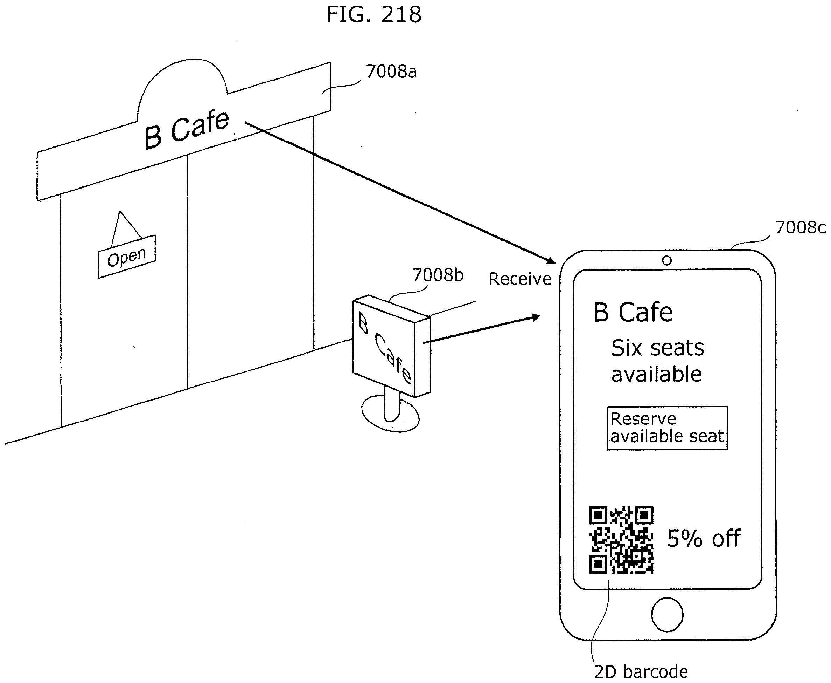

FIG. 218 is a diagram illustrating an example of application of a receiver and a transmitter in Embodiment 12.
[FIG. 219]

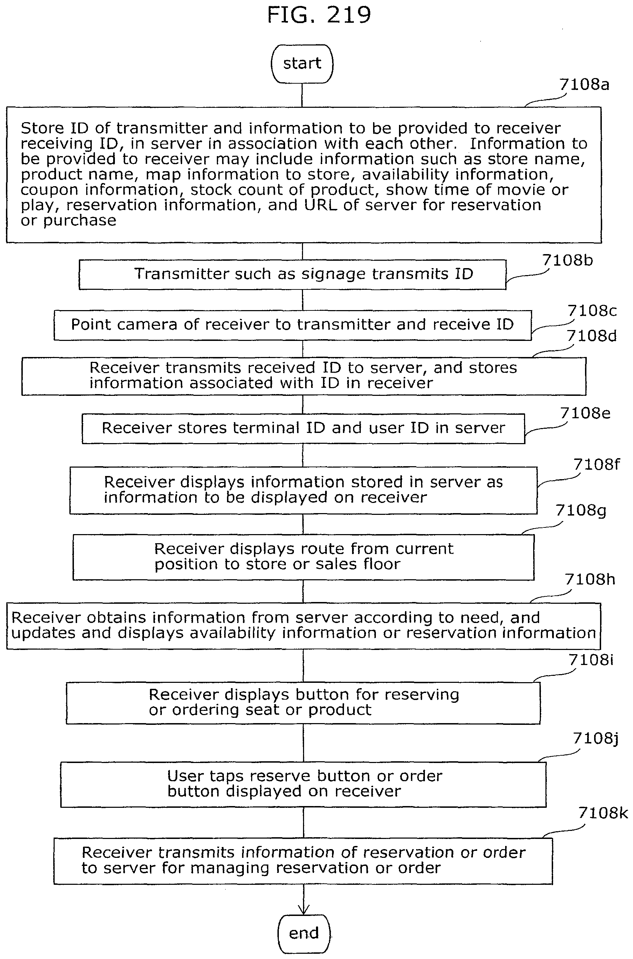

FIG. 219 is a flowchart illustrating an example of process operations of a receiver and a transmitter in Embodiment 12.

[FIG. 220]

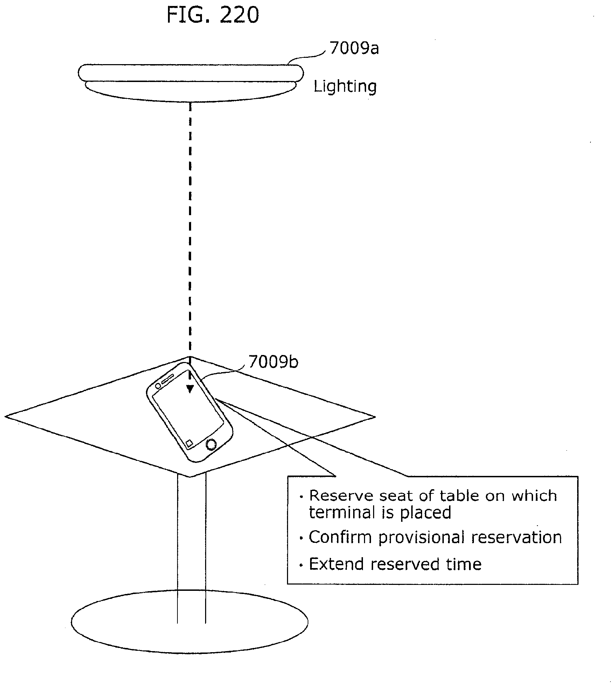

FIG. 220 is a diagram illustrating an example of application of a receiver and a transmitter in Embodiment 12.
[FIG. 221]

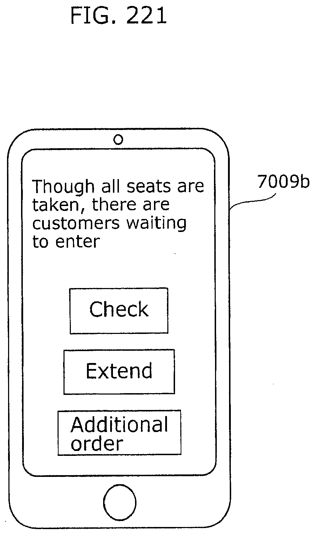

FIG. 221 is a diagram illustrating an example of application of a receiver and a transmitter in Embodiment 12.
[FIG. 222]

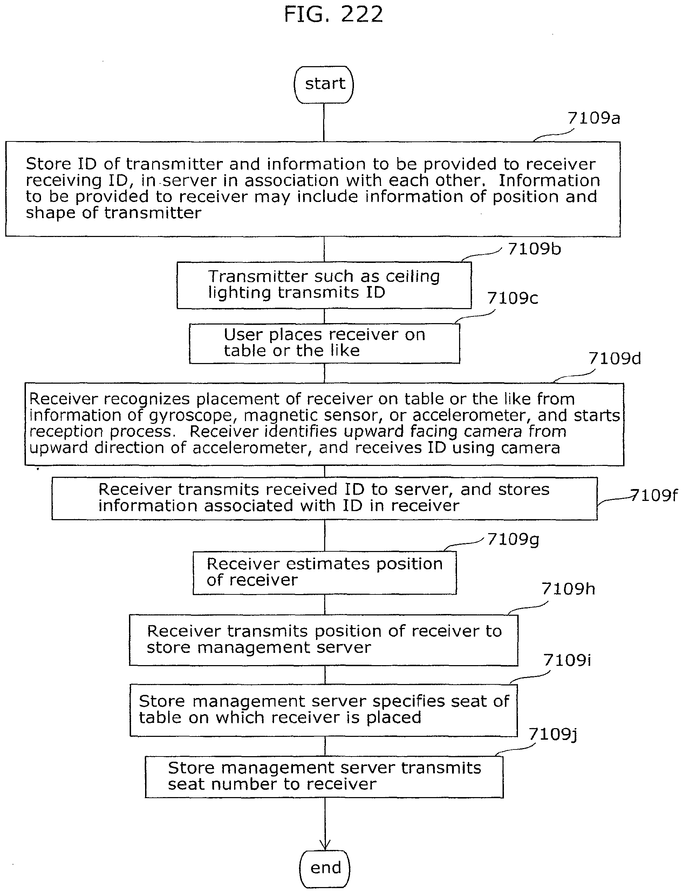

FIG. 222 is a flowchart illustrating an example of process operations of a receiver and a transmitter in Embodiment 12.
[FIG. 223]

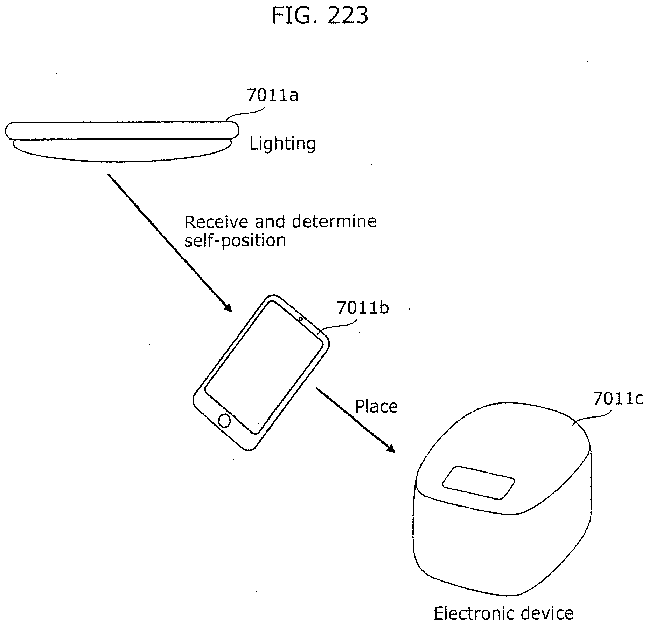

FIG. 223 is a diagram illustrating an example of application of a receiver and a transmitter in Embodiment 12.
[FIG. 224]

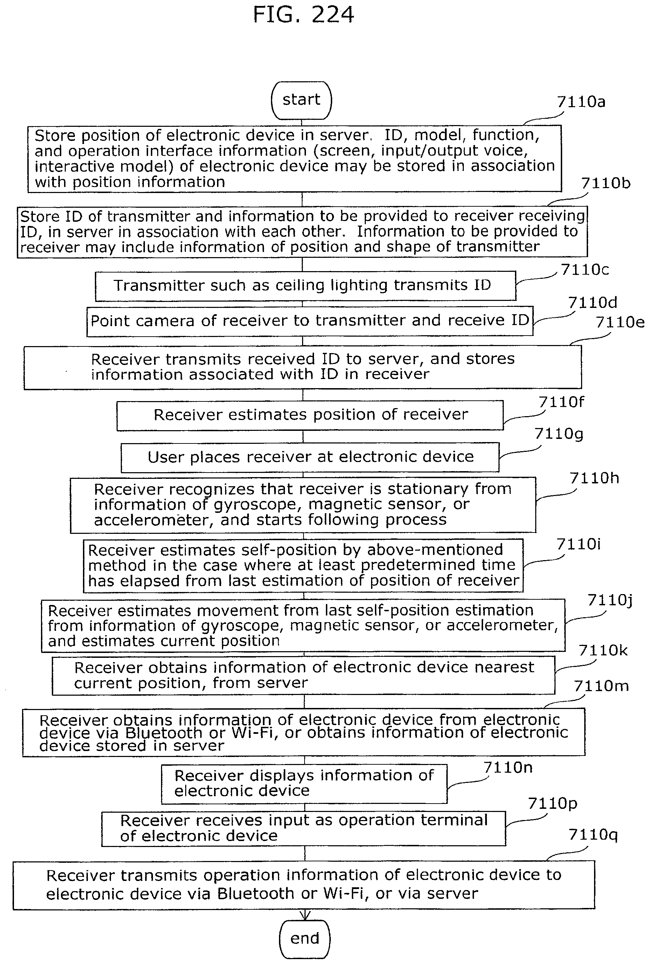

FIG. 224 is a flowchart illustrating an example of process operations of a receiver and a transmitter in Embodiment 12.
[FIG. 225]

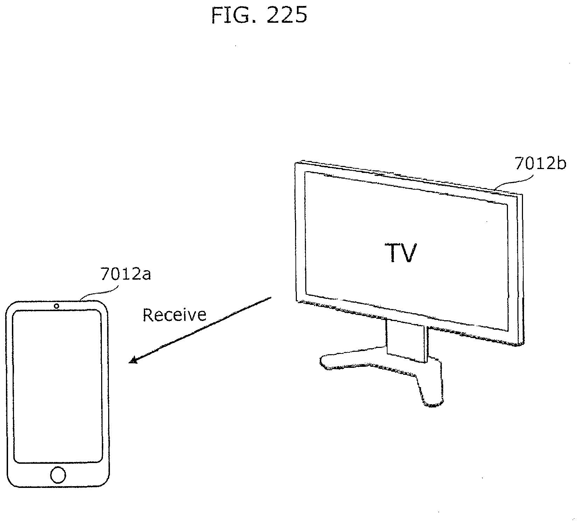

FIG. 225 is a diagram illustrating an example of application of a receiver and a transmitter in Embodiment 12.
[FIG. 226]

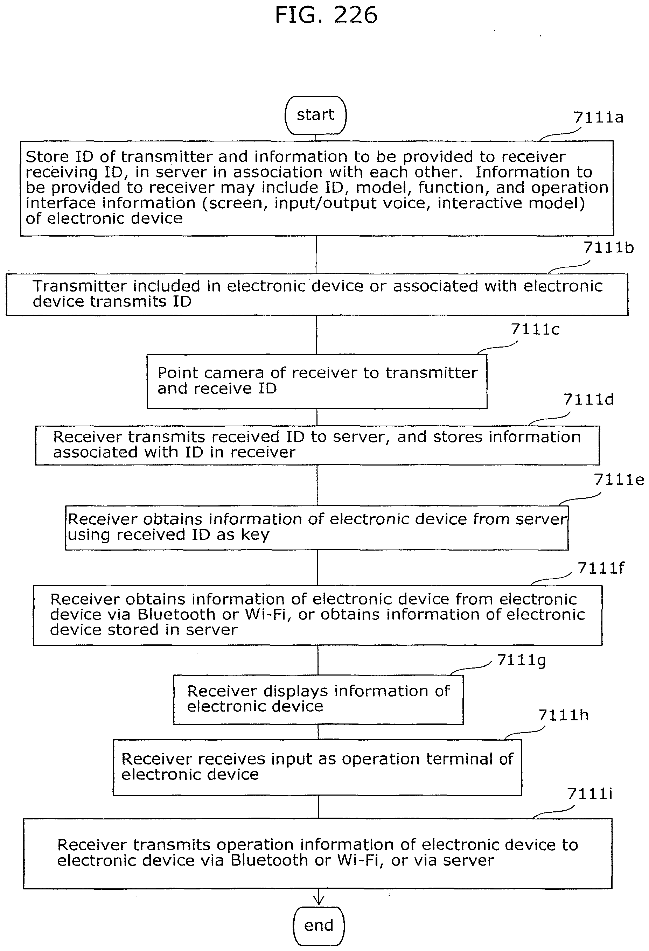

FIG. 226 is a flowchart illustrating an example of process operations of a receiver and a transmitter in Embodiment 12.
[FIG. 227]

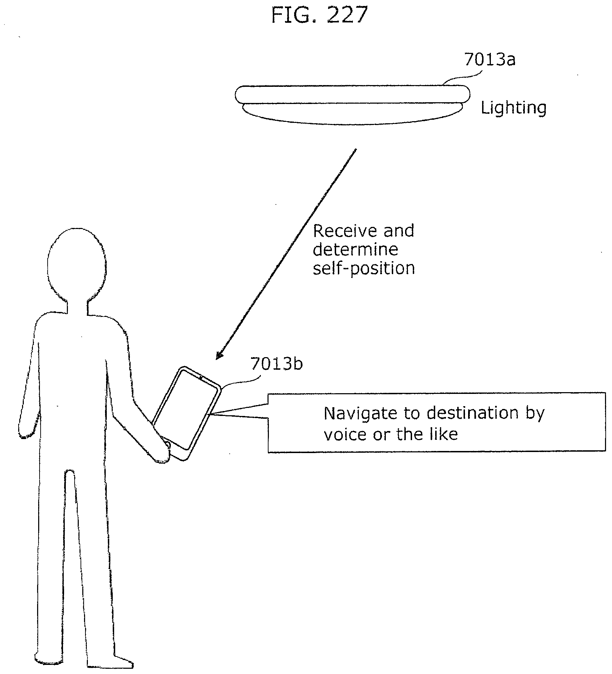

FIG. 227 is a diagram illustrating an example of application of a receiver and a transmitter in Embodiment 12.
[FIG. 228]

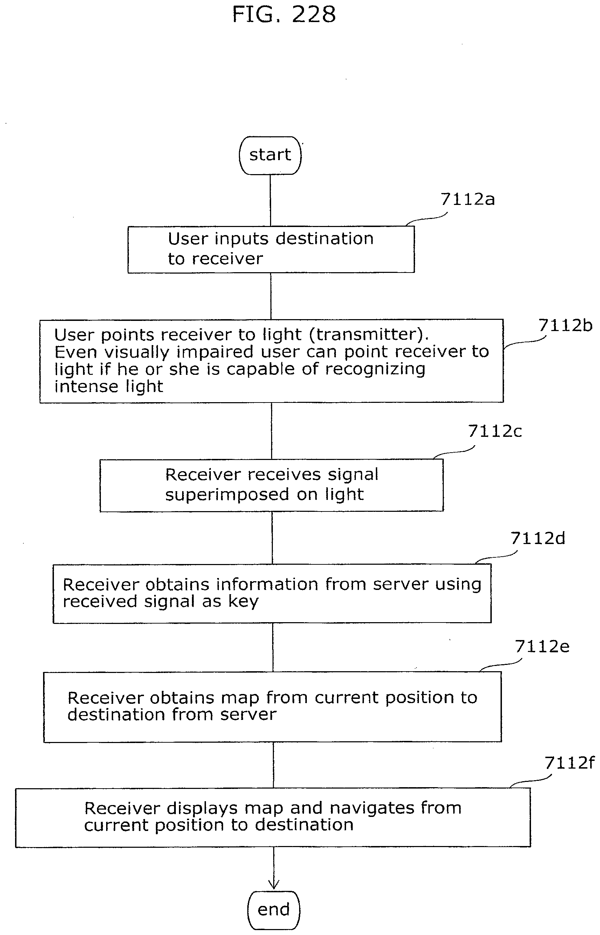

FIG. 228 is a flowchart illustrating an example of process operations of a receiver and a transmitter in Embodiment 12.
[FIG. 229]

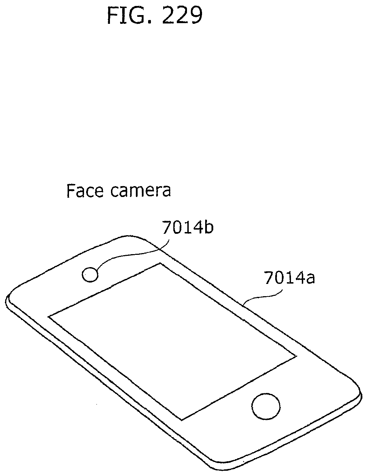

FIG. 229 is a diagram illustrating a state of a receiver in Embodiment 12.
[FIG. 230]

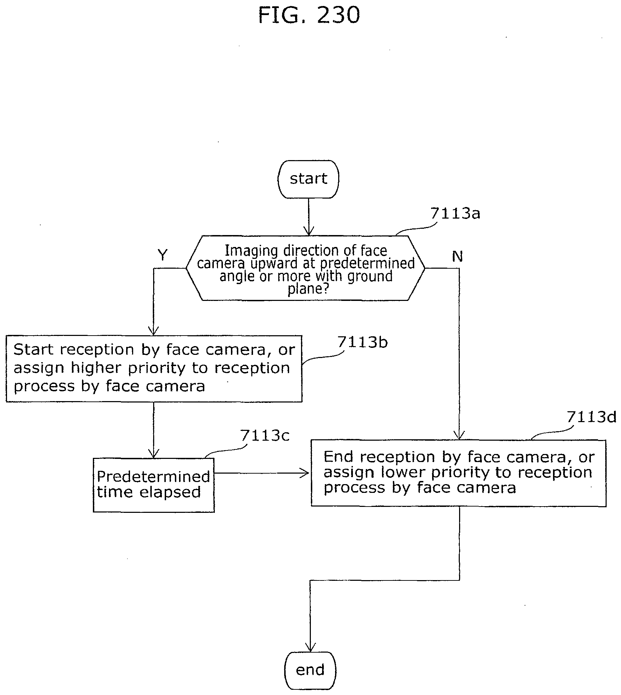

FIG. 230 is a flowchart illustrating an example of process operations of a receiver in Embodiment 12.
[FIG. 231]

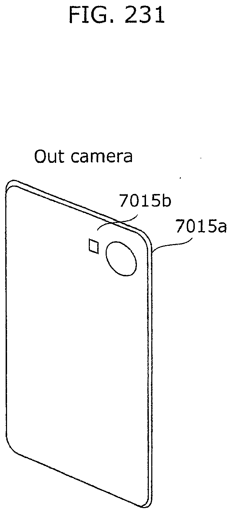

FIG. 231 is a diagram illustrating a state of a receiver in Embodiment 12.
[FIG. 232]

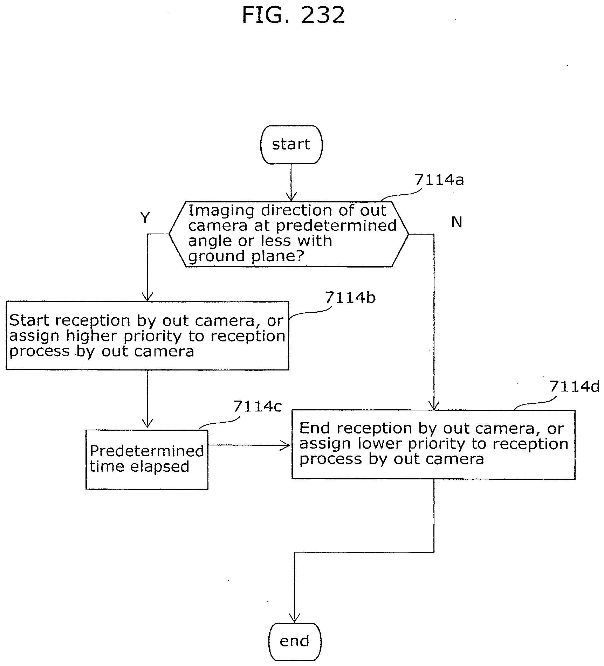

FIG. 232 is a flowchart illustrating an example of process operations of a receiver in Embodiment 12.
[FIG. 233]

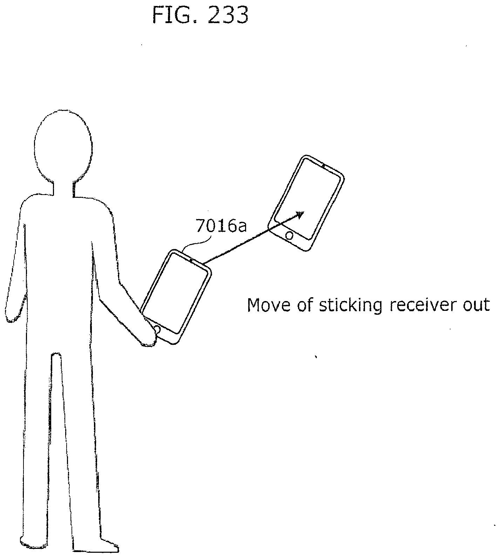

FIG. 233 is a diagram illustrating a state of a receiver in Embodiment 12.
[FIG. 234]

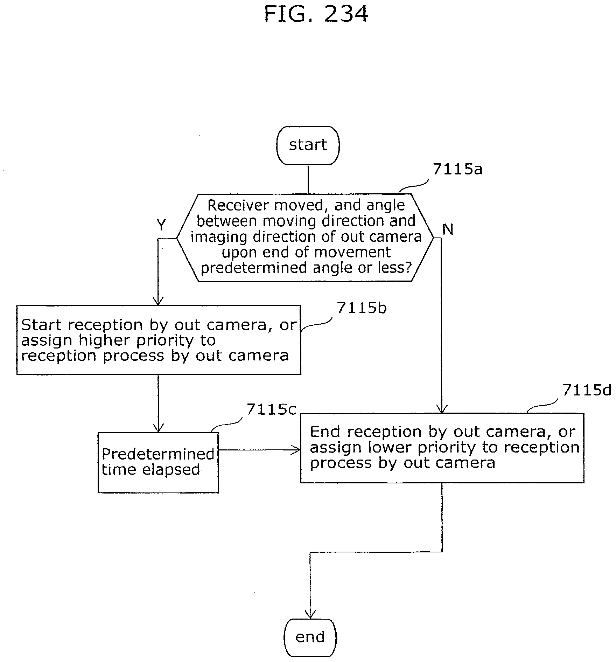

FIG. 234 is a flowchart illustrating an example of process operations of a receiver in Embodiment 12.
[FIG. 235]

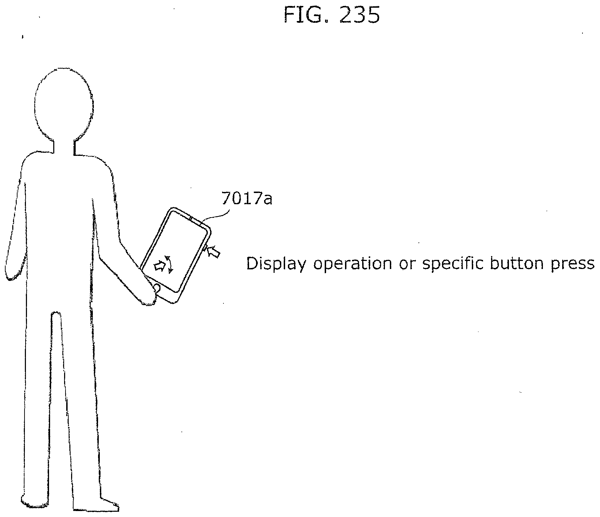

FIG. 235 is a diagram illustrating a state of a receiver in Embodiment 12.
[FIG. 236]

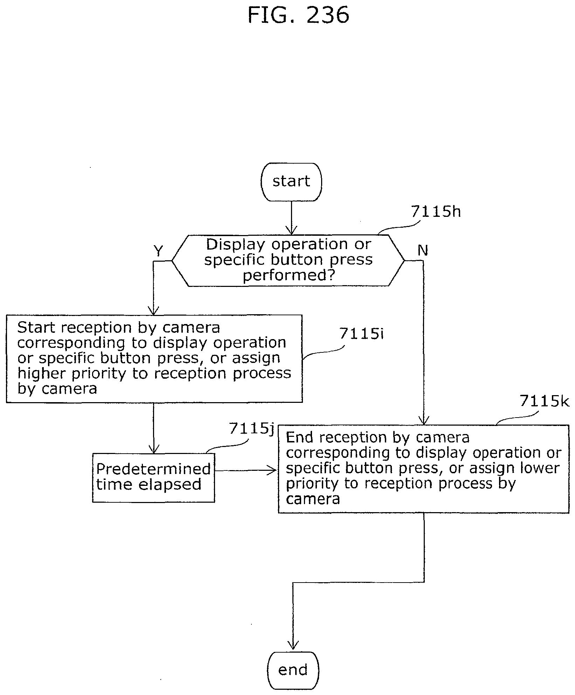

FIG. 236 is a flowchart illustrating an example of process operations of a receiver in Embodiment 12.
[FIG. 237]

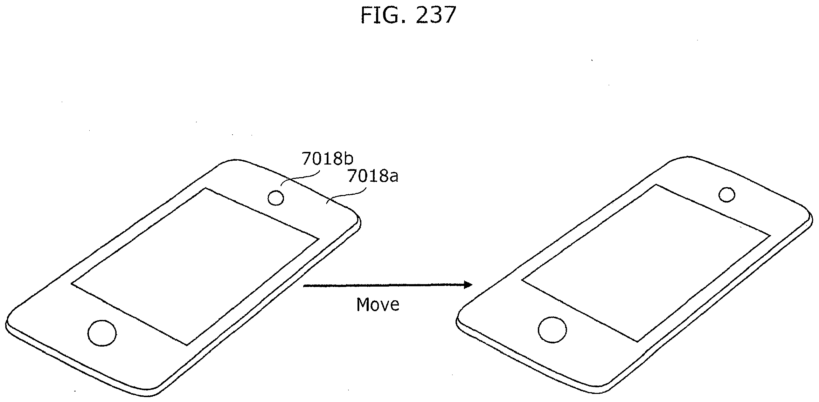

FIG. 237 is a diagram illustrating a state of a receiver in Embodiment 12.
[FIG. 238]

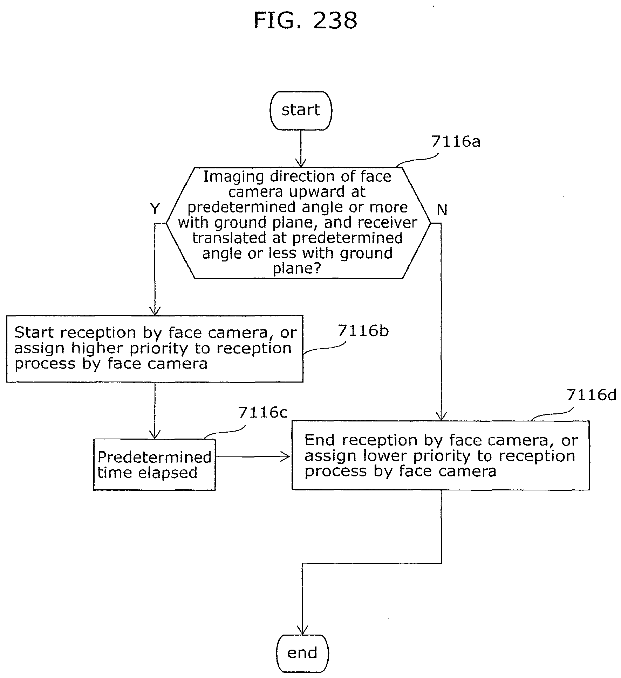

FIG. 238 is a flowchart illustrating an example of process operations of a receiver in Embodiment 12.
[FIG. 239]

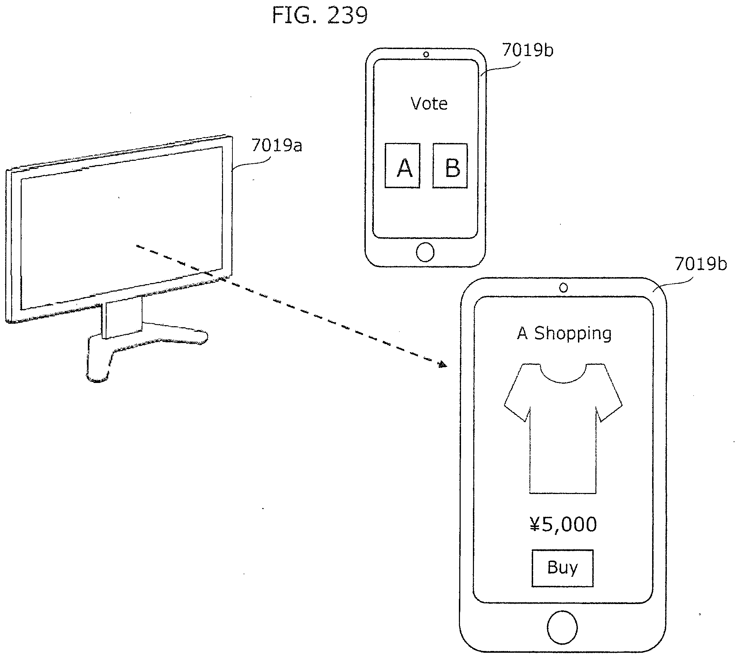

FIG. 239 is a diagram illustrating an example of application of a receiver and a transmitter in Embodiment 12.
[FIG. 240]

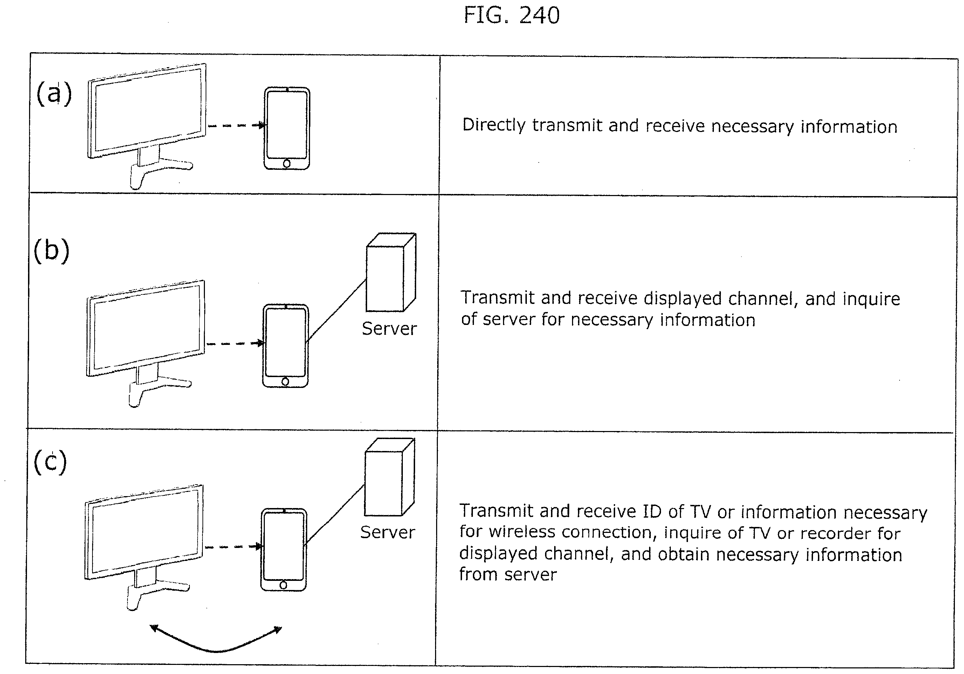

FIG. 240 is a diagram illustrating an example of application of a receiver and a transmitter in Embodiment 12.
[FIG. 241]

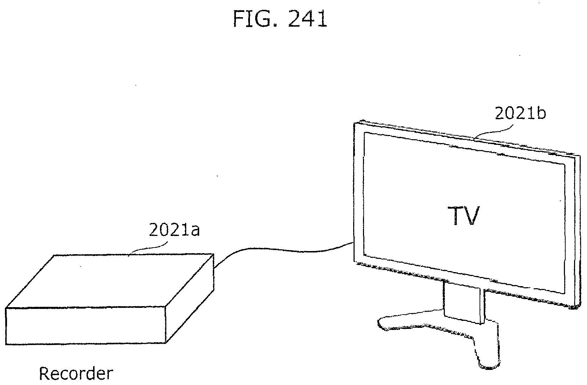

FIG. 241 is a diagram illustrating an example of application of a receiver and a transmitter in Embodiment 12.
[FIG. 242]

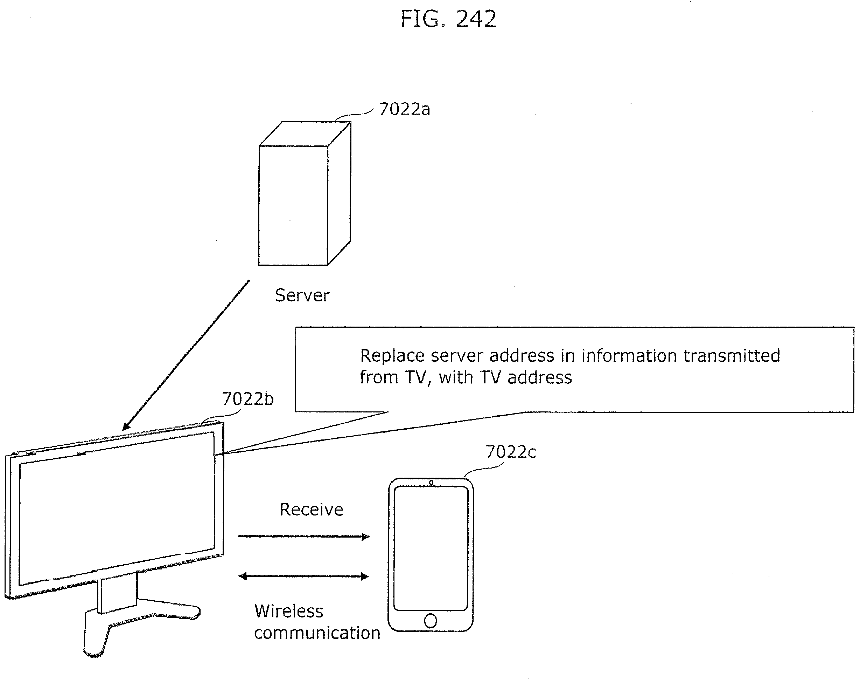

FIG. 242 is a diagram illustrating an example of application of a receiver and a transmitter in Embodiment 12.
[FIG. 243]

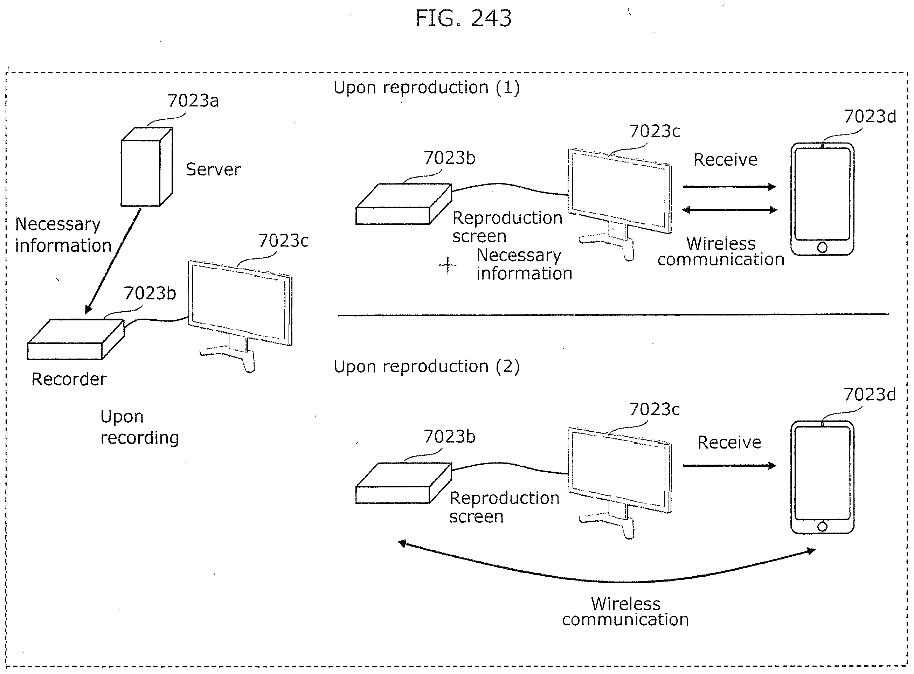

FIG. 243 is a diagram illustrating an example of application of a receiver and a transmitter in Embodiment 12.
[FIG. 244]

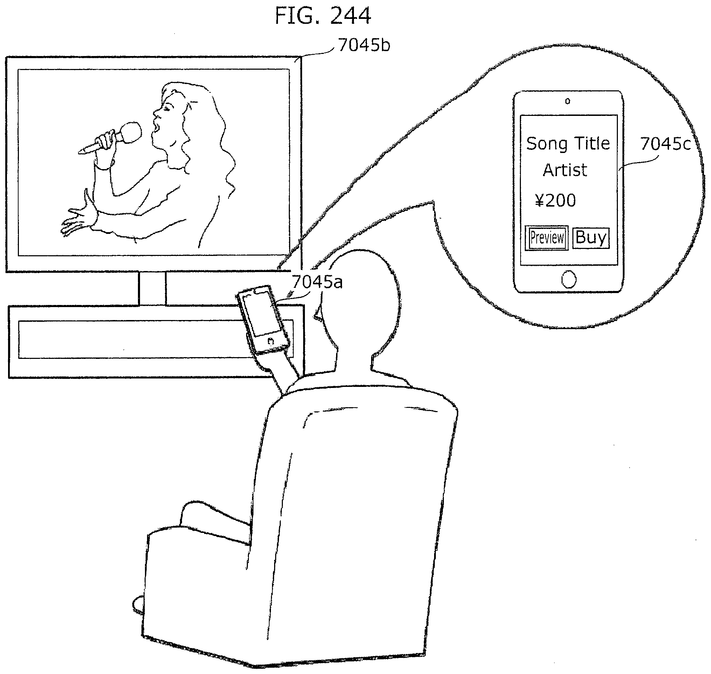

FIG. 244 is a diagram illustrating an example of application of a receiver and a transmitter in Embodiment 12.
[FIG. 245]

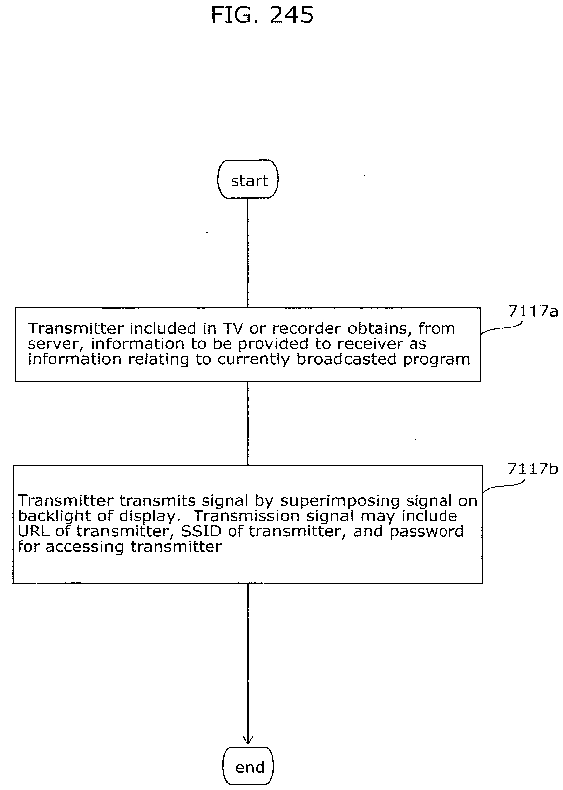

FIG. 245 is a flowchart illustrating an example of process operations of a receiver and a transmitter in Embodiment 12.
[FIG. 246]

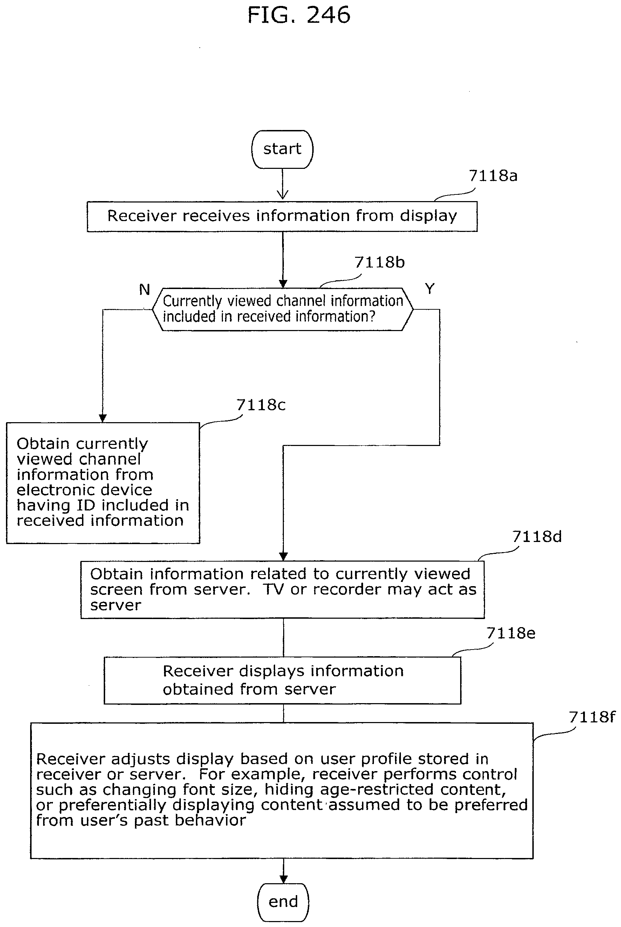

FIG. 246 is a flowchart illustrating an example of process operations of a receiver and a transmitter in Embodiment 12.
[FIG. 247]

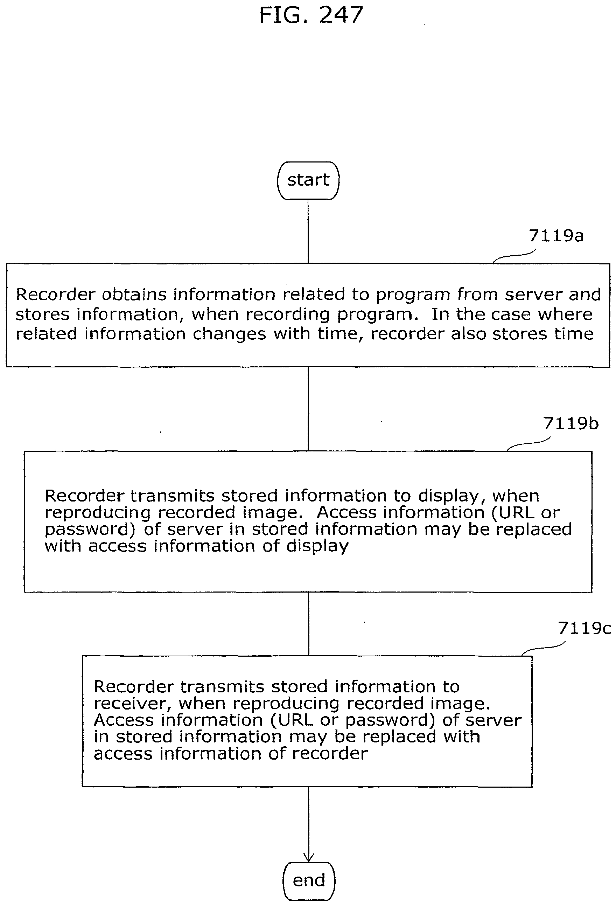

FIG. 247 is a flowchart illustrating an example of process operations of a receiver and a transmitter in Embodiment 12.
[FIG. 248]

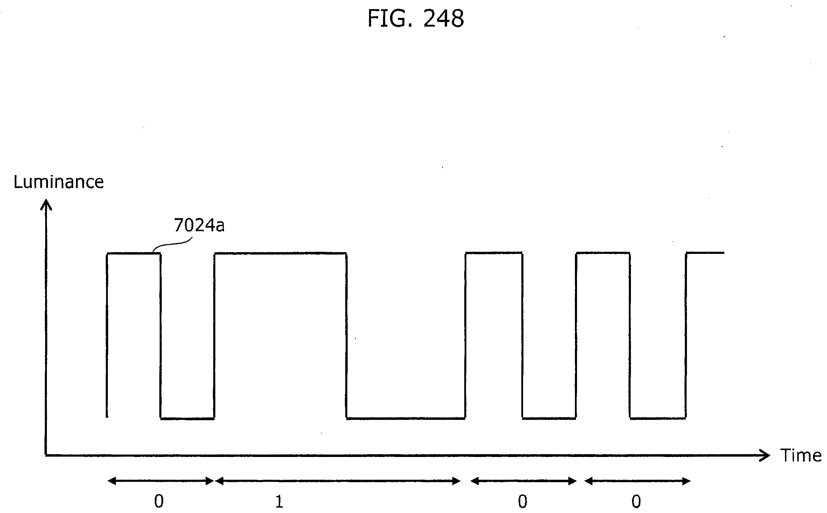

FIG. 248 is a diagram illustrating a luminance change of a transmitter in Embodiment 12.

[FIG. 249]

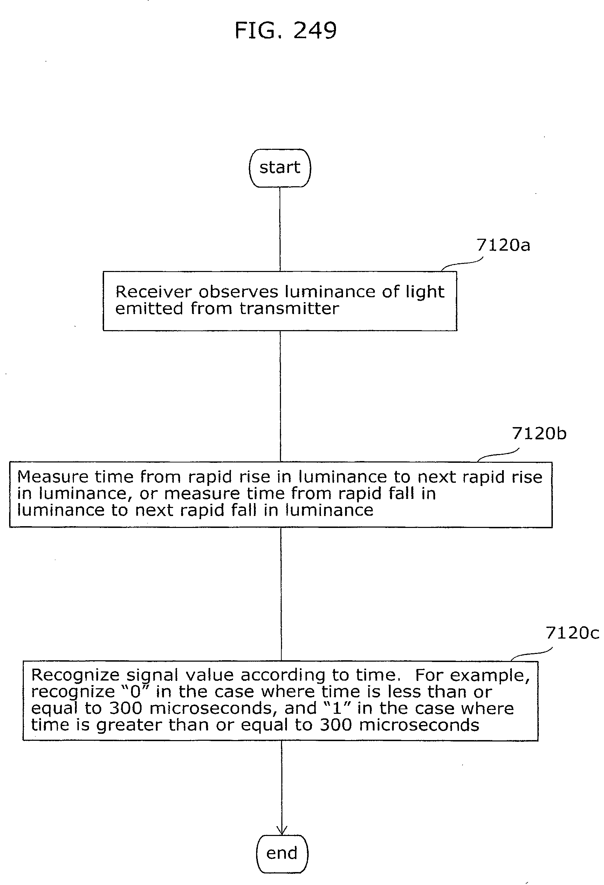

FIG. 249 is a flowchart illustrating an example of process operations of a receiver in Embodiment 12.
[FIG. 250]

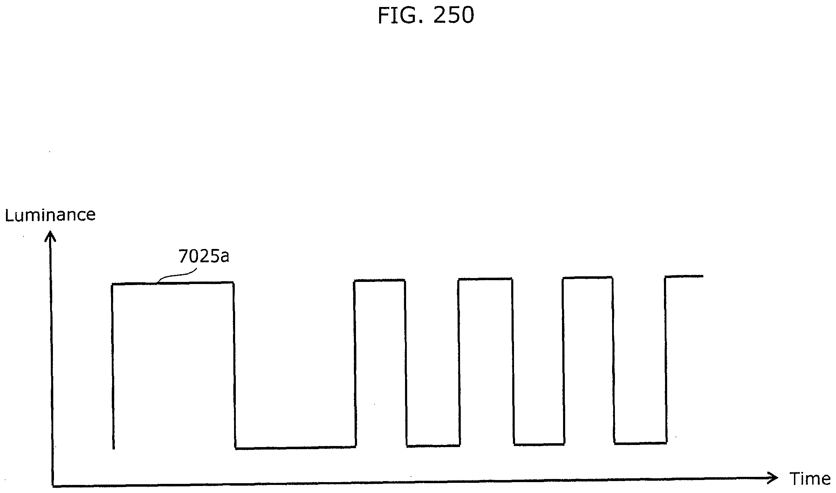

FIG. 250 is a diagram illustrating a luminance change of a transmitter in Embodiment 12.
[FIG. 251]

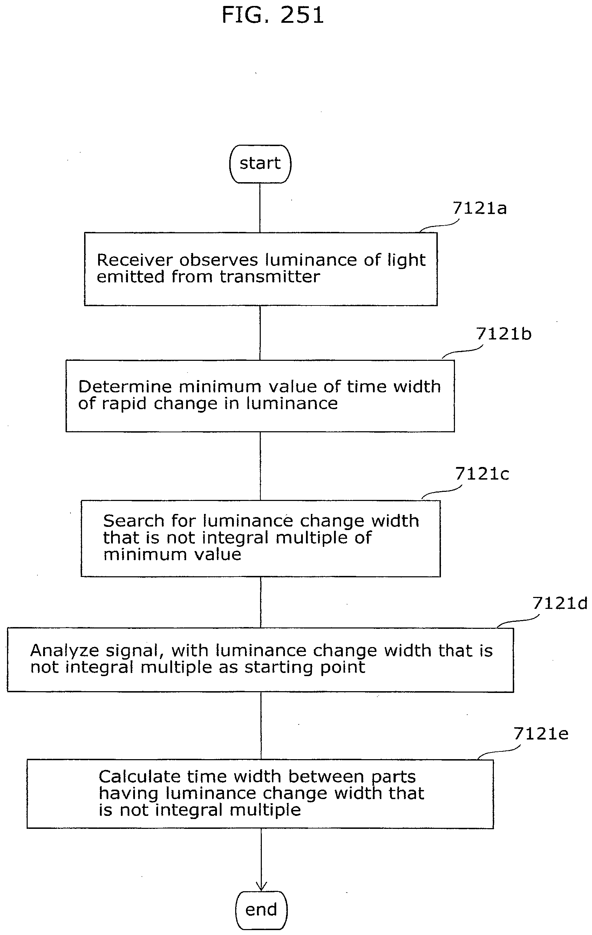

FIG. 251 is a flowchart illustrating an example of process operations of a receiver in Embodiment 12.
[FIG. 252]

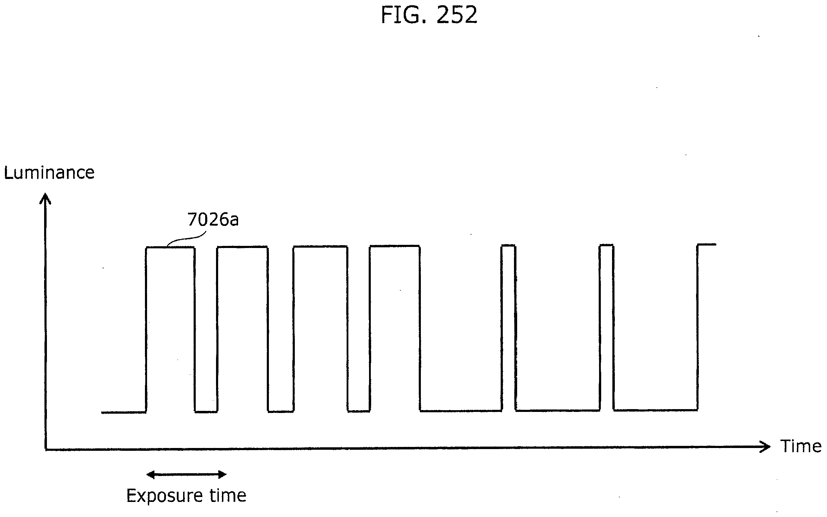

FIG. 252 is a diagram illustrating a luminance change of a transmitter in Embodiment 12.
[FIG. 253]

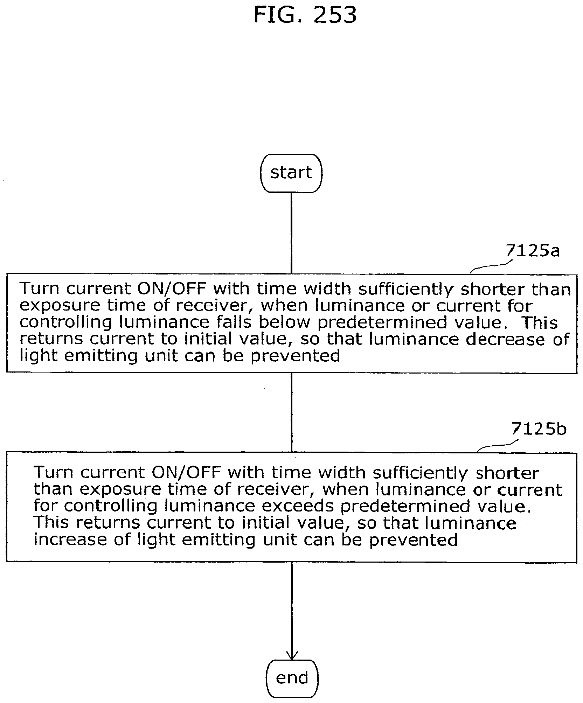

FIG. 253 is a flowchart illustrating an example of process operations of a transmitter in Embodiment 12.
[FIG. 254]

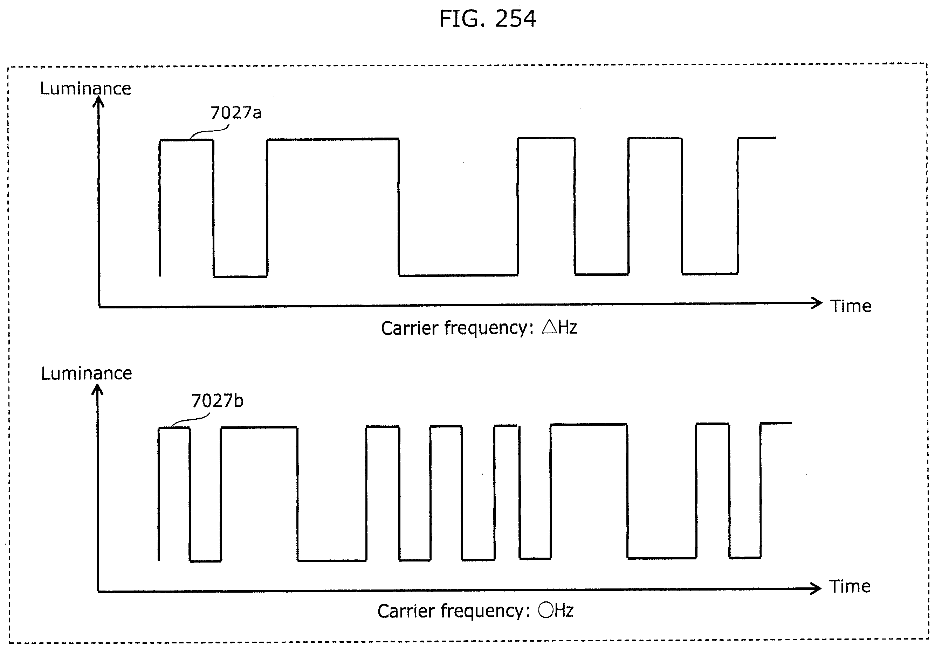

FIG. 254 is a diagram illustrating a luminance change of a transmitter in Embodiment 12.
[FIG. 255]

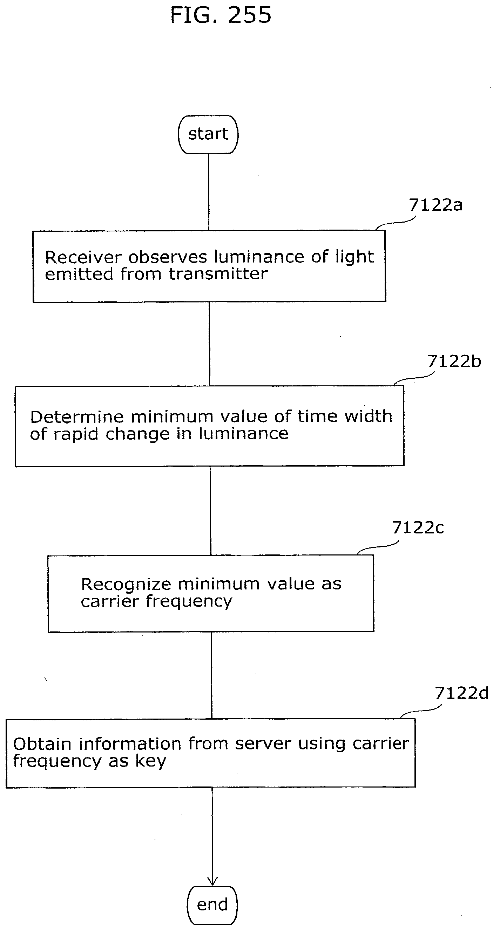

FIG. 255 is a flowchart illustrating an example of process operations of a receiver in Embodiment 12.
[FIG. 256]

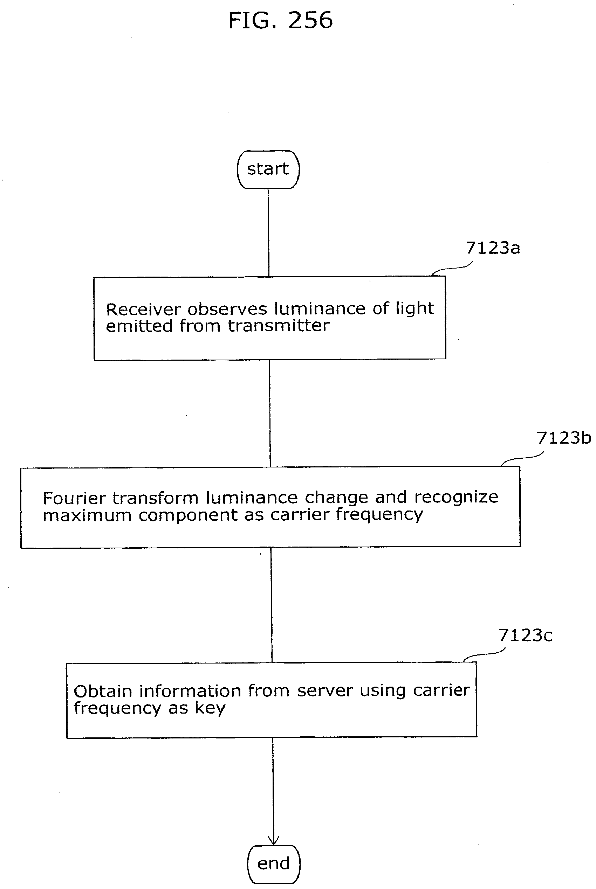

FIG. 256 is a flowchart illustrating an example of process operations of a receiver in Embodiment 12.
[FIG. 257]

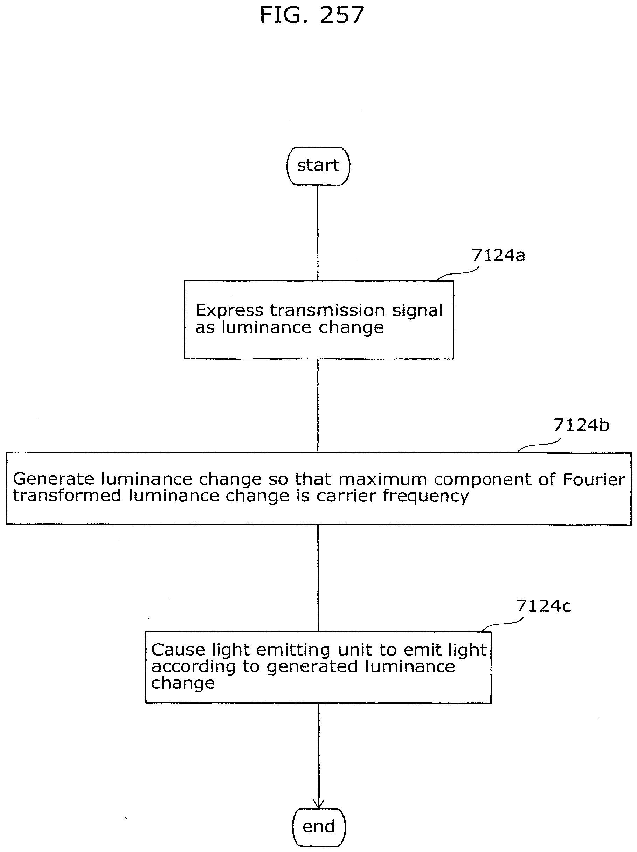

FIG. 257 is a flowchart illustrating an example of process operations of a transmitter in Embodiment 12.
[FIG. 258]

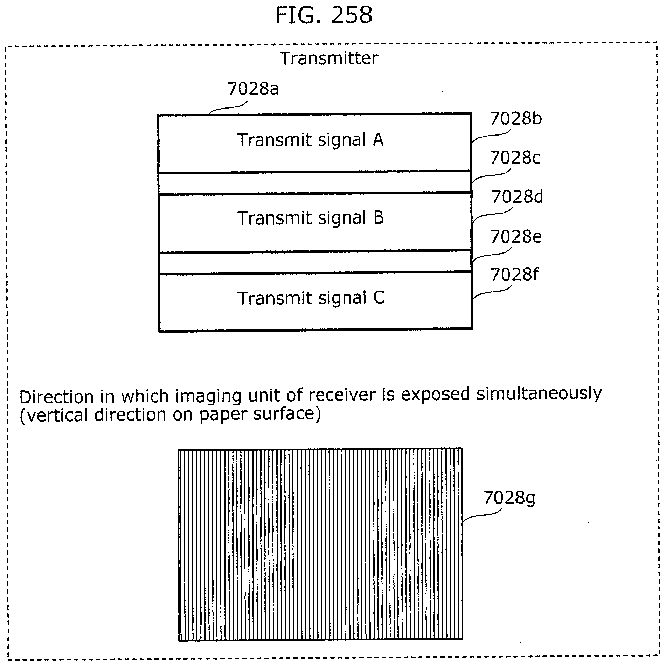

FIG. 258 is a diagram illustrating an example of a structure of a transmitter in Embodiment 12.
[FIG. 259]

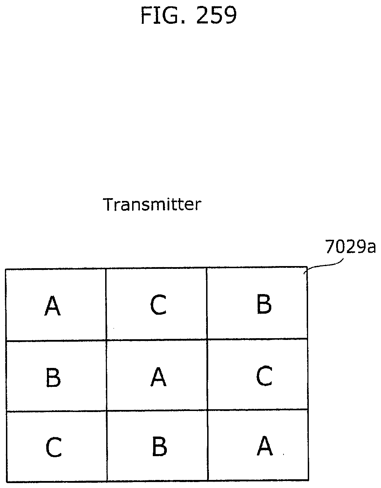

FIG. 259 is a diagram illustrating an example of a structure of a transmitter in Embodiment 12.
[FIG. 260]

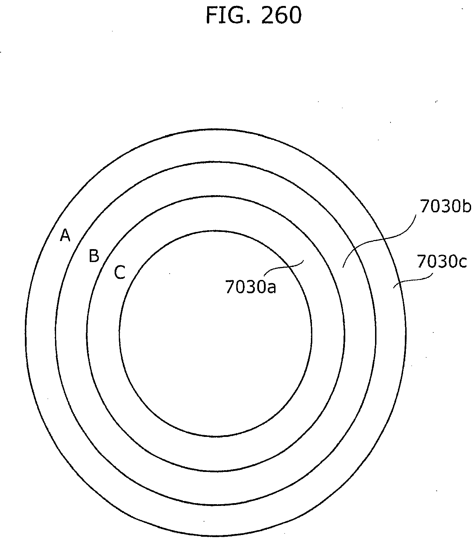

FIG. 260 is a diagram illustrating an example of a structure of a transmitter in Embodiment 12.
[FIG. 261]

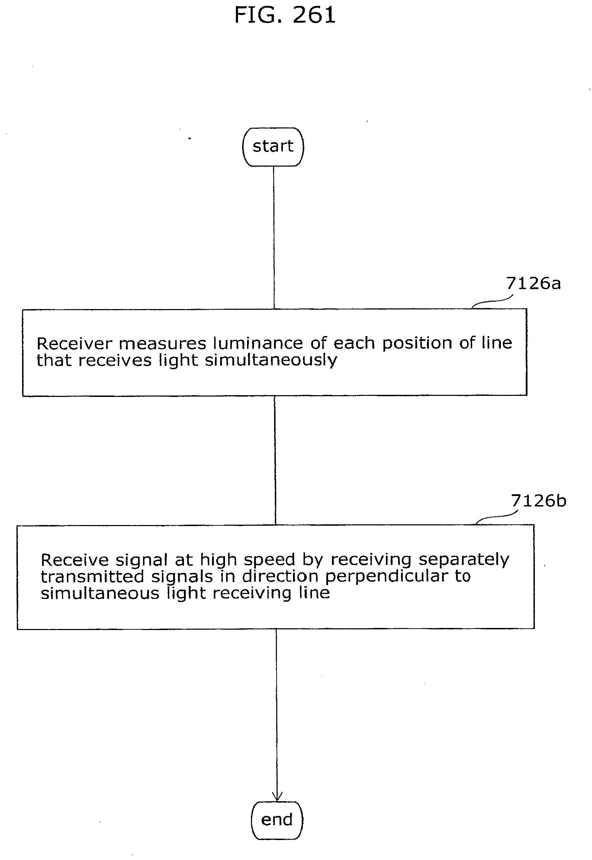

FIG. 261 is a flowchart illustrating an example of process operations of a receiver in Embodiment 12.
[FIG. 262]

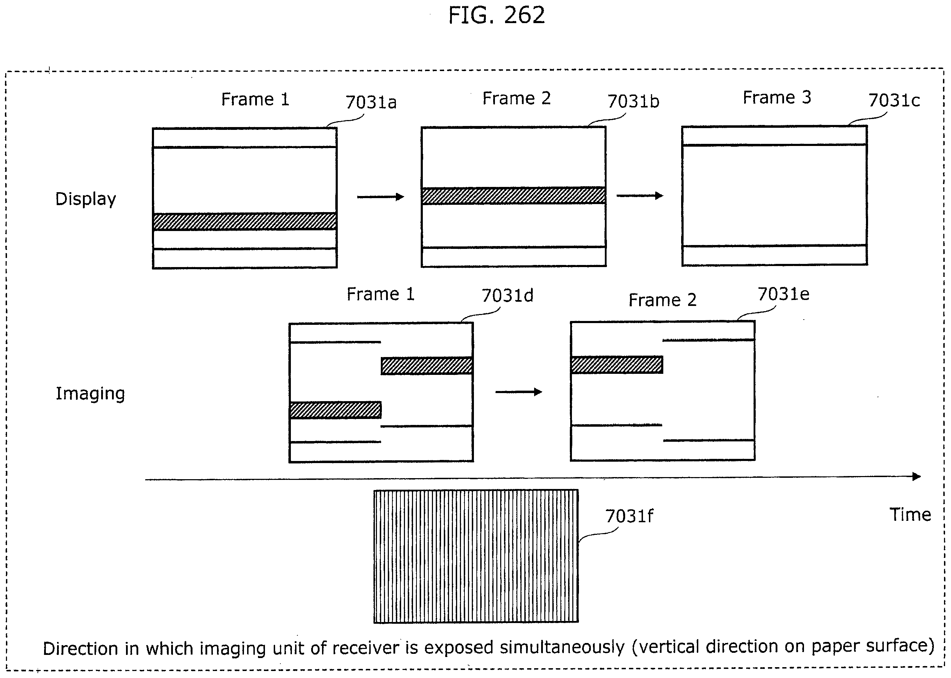

FIG. 262 is a diagram illustrating an example of display and imaging by a receiver and a transmitter in Embodiment 12.
[FIG. 263]

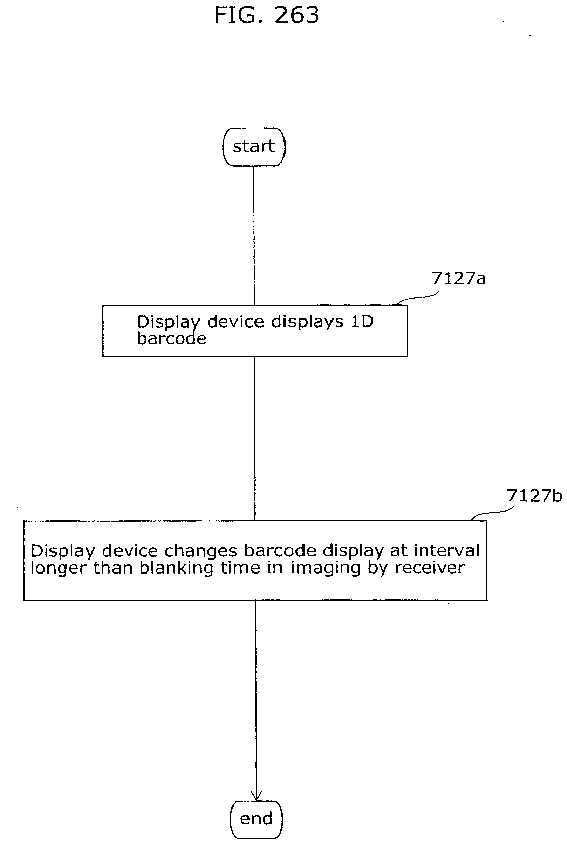

FIG. 263 is a flowchart illustrating an example of process operations of a transmitter in Embodiment 12.
[FIG. 264]

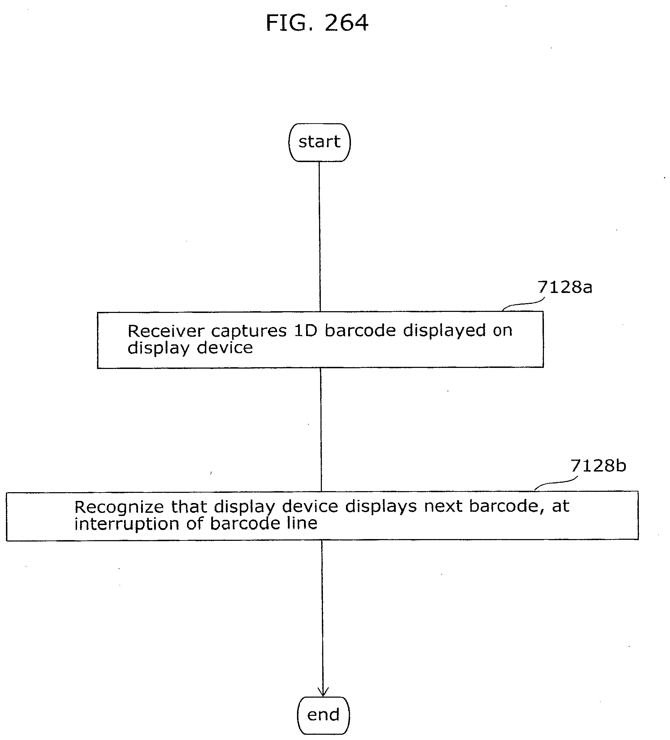

FIG. 264 is a flowchart illustrating an example of process operations of a receiver in Embodiment 12.
[FIG. 265]

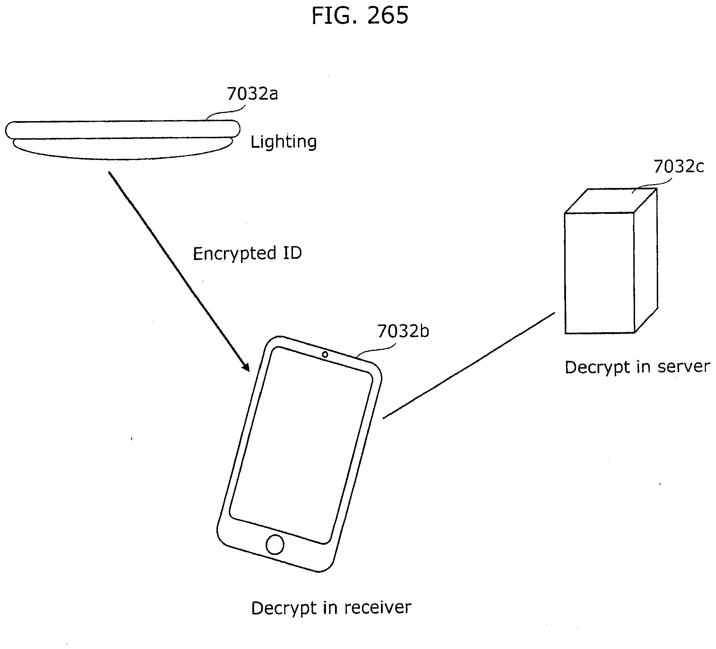

FIG. 265 is a diagram illustrating an example of application of a receiver and a transmitter in Embodiment 12.
[FIG. 266]

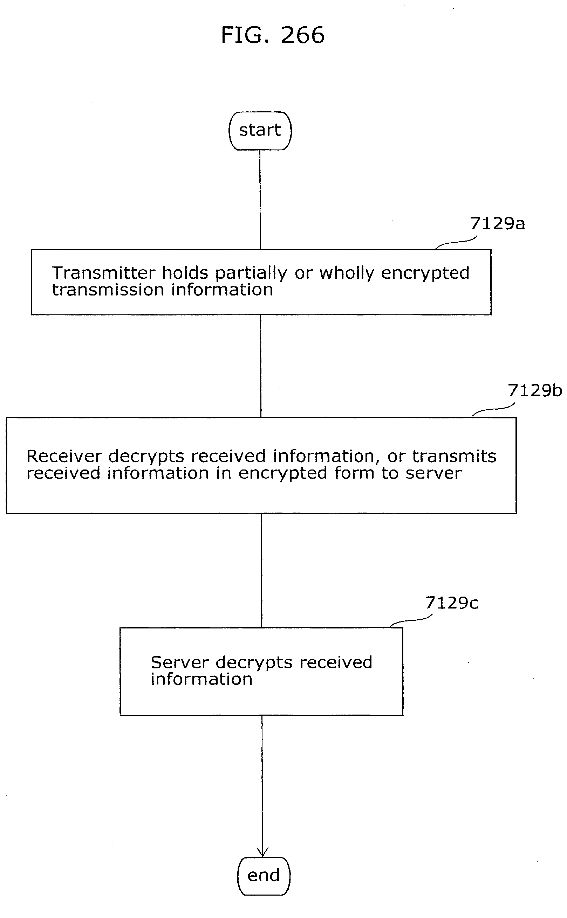

FIG. 266 is a flowchart illustrating an example of process operations of a receiver and a transmitter in Embodiment 12.
[FIG. 267]

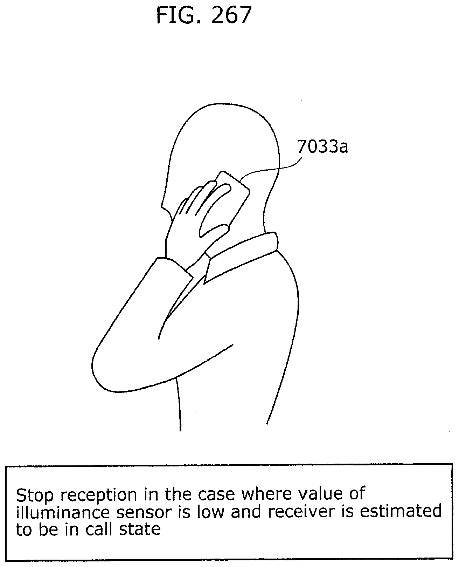

FIG. 267 is a diagram illustrating a state of a receiver in Embodiment 12.
[FIG. 268]

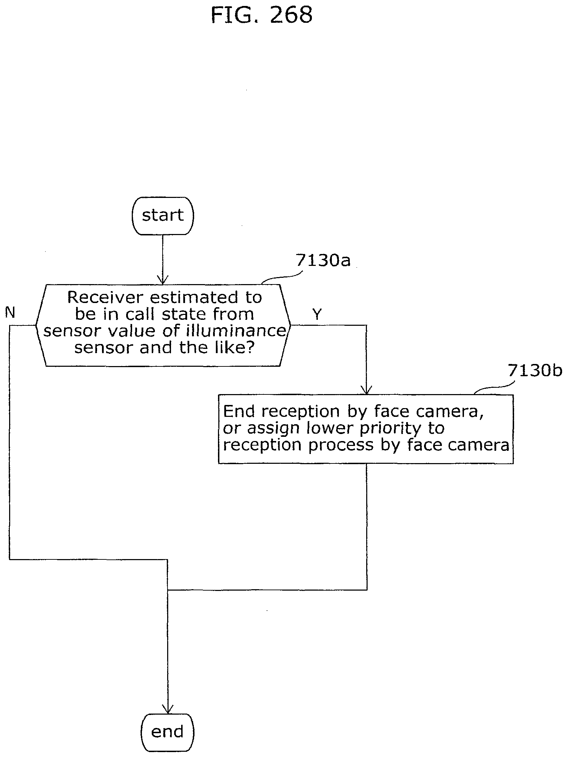

FIG. 268 is a flowchart illustrating an example of process operations of a receiver in Embodiment 12.
[FIG. 269]

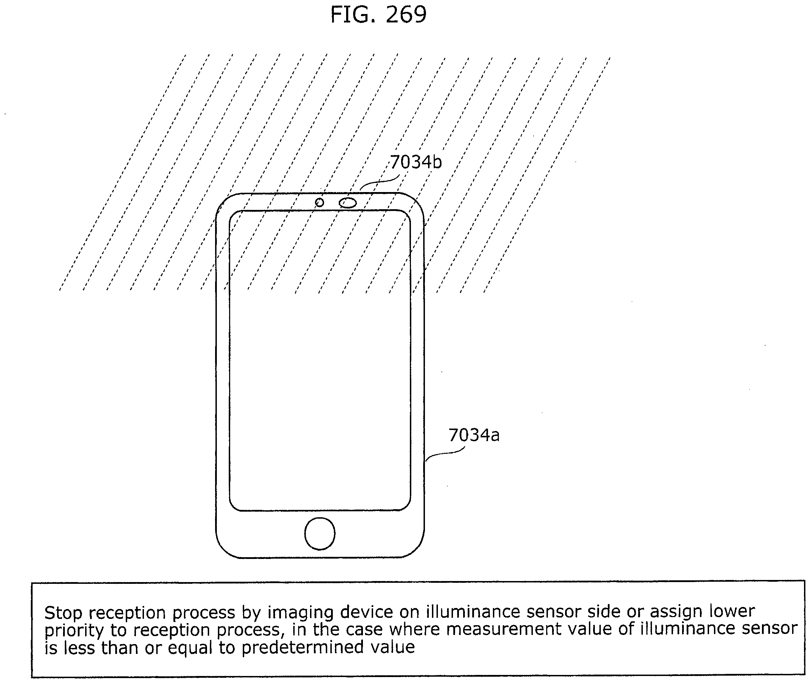

FIG. 269 is a diagram illustrating a state of a receiver in Embodiment 12.
[FIG. 270]

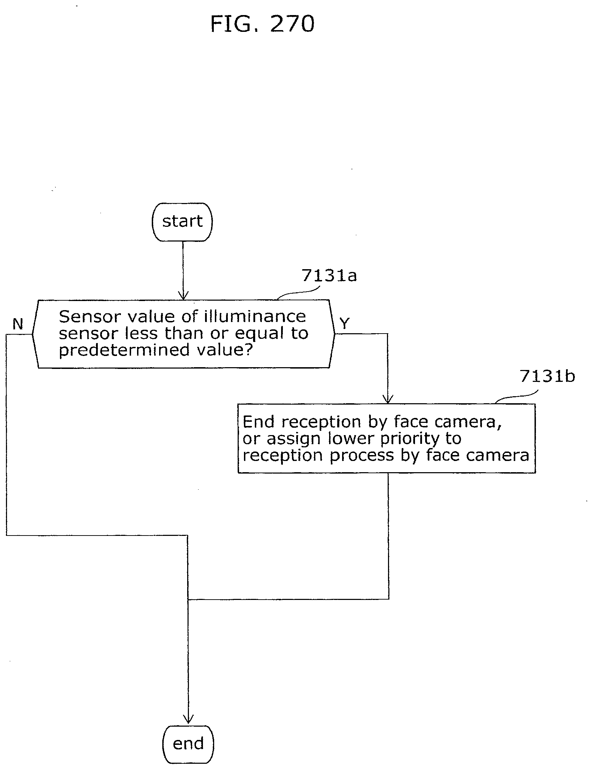

FIG. 270 is a flowchart illustrating an example of process operations of a receiver in Embodiment 12.
[FIG. 271]

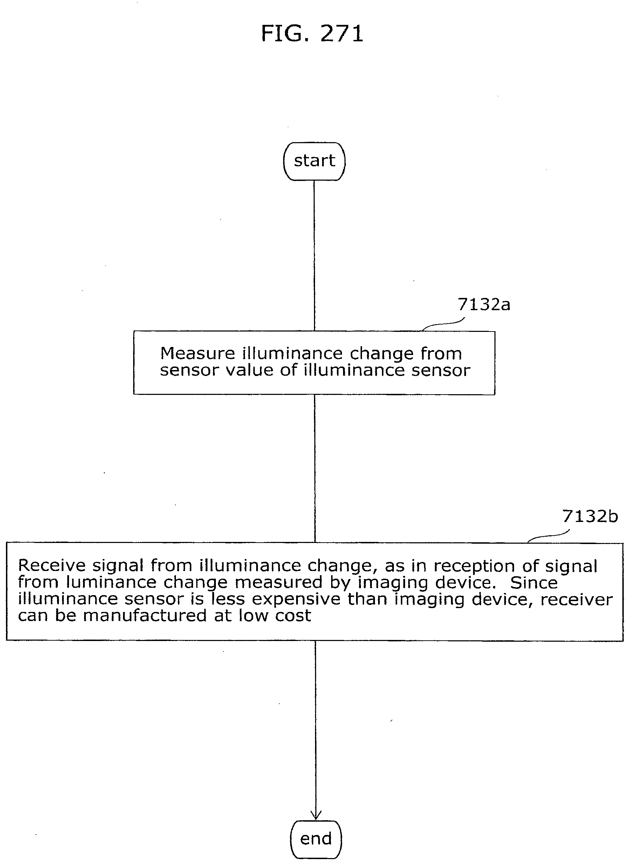

FIG. 271 is a flowchart illustrating an example of process operations of a receiver in Embodiment 12.
[FIG. 272]

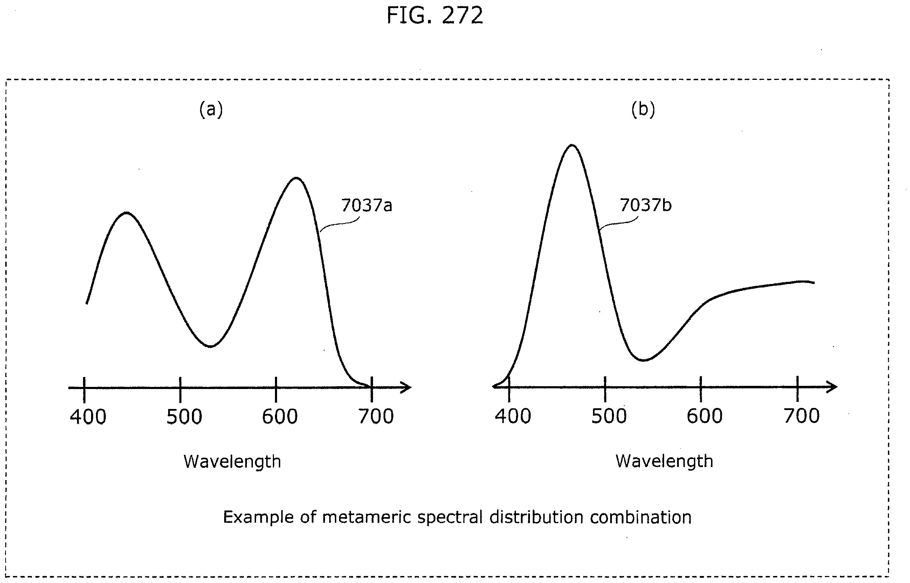

FIG. 272 is a diagram illustrating an example of a wavelength of a transmitter in Embodiment 12.
[FIG. 273]

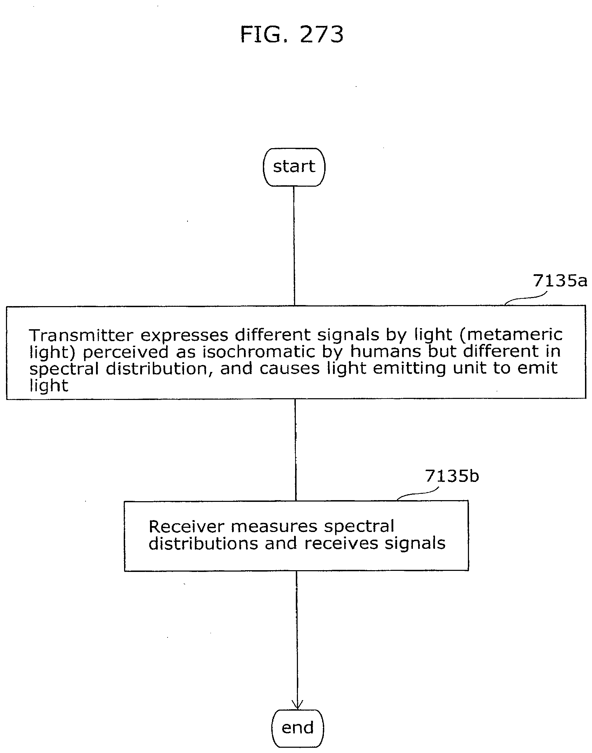

FIG. 273 is a flowchart illustrating an example of process operations of a receiver and a transmitter in Embodiment 12.
[FIG. 274]

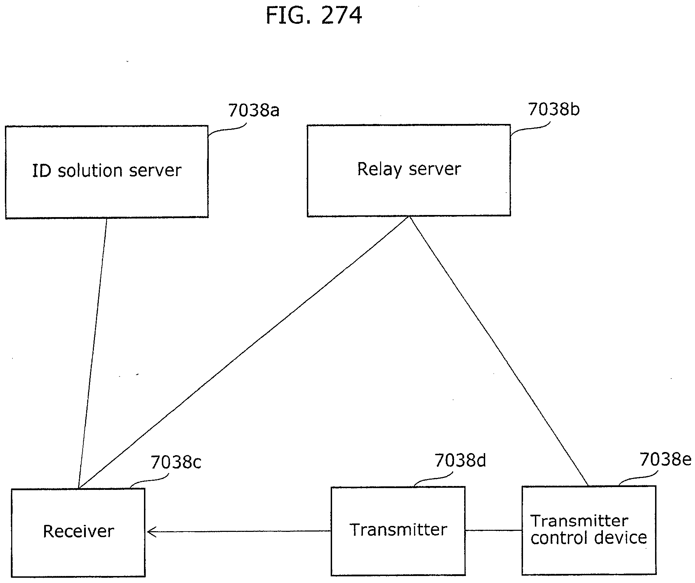

FIG. 274 is a diagram illustrating an example of a structure of a system including a receiver and a transmitter in Embodiment 12.
[FIG. 275]

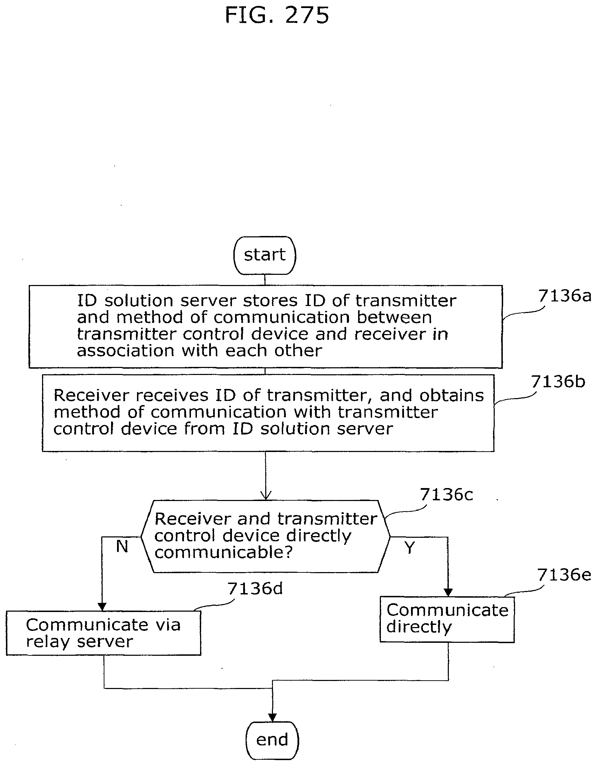

FIG. 275 is a flowchart illustrating an example of process operations of a system in Embodiment 12.
[FIG. 276]

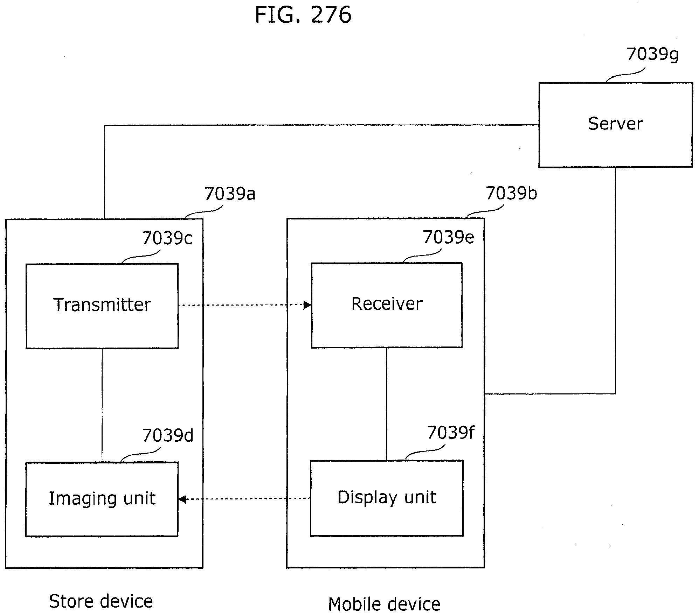

FIG. 276 is a diagram illustrating an example of a structure of a system including a receiver and a transmitter in Embodiment 12.

[FIG. 277]

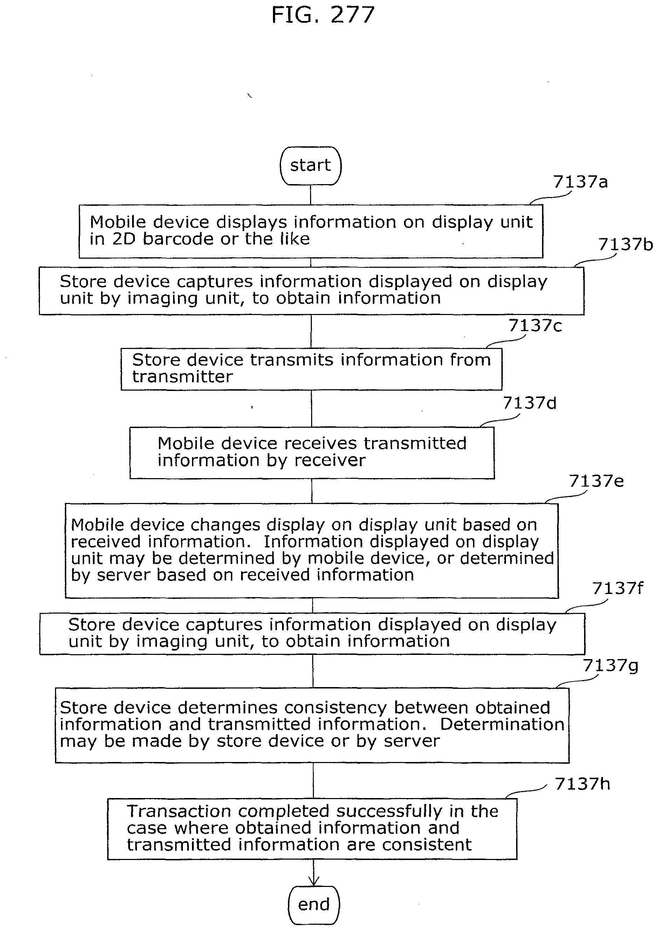

FIG. 277 is a flowchart illustrating an example of process operations of a system in Embodiment 12.
[FIG. 278]

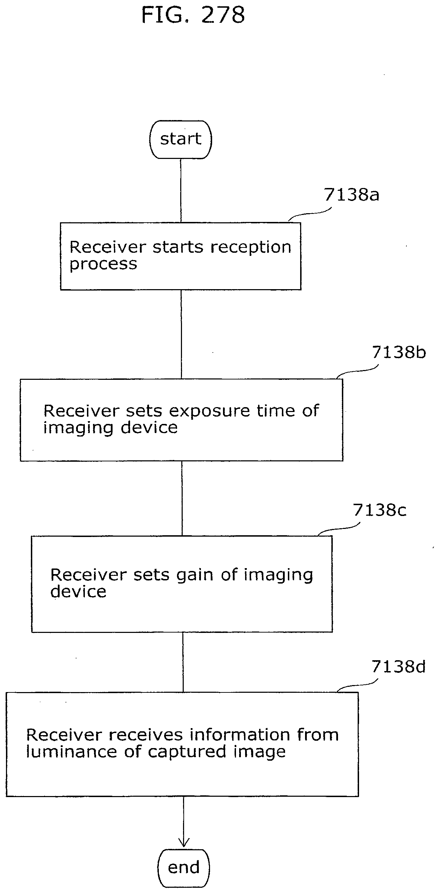

FIG. 278 is a flowchart illustrating an example of process operations of a receiver in Embodiment 12.
[FIG. 279]

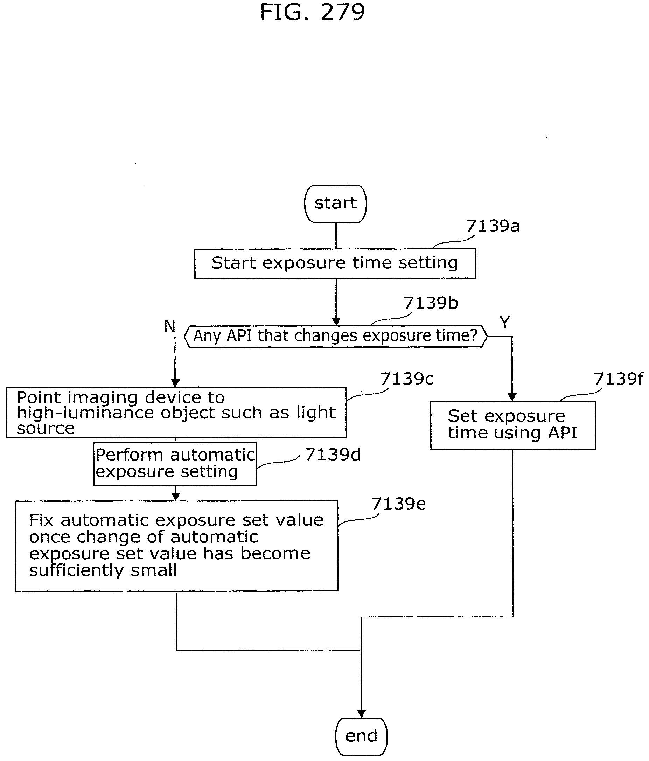

FIG. 279 is a flowchart illustrating an example of process operations of a receiver in Embodiment 12.
[FIG. 280]

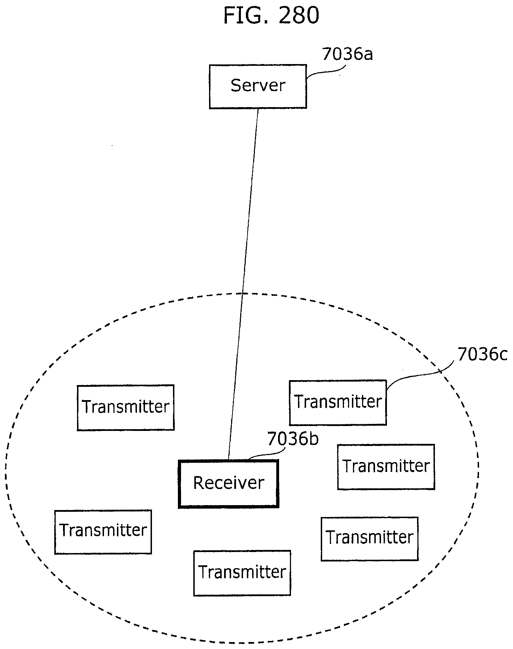

FIG. 280 is a diagram illustrating an example of a structure of a system including a receiver and a transmitter in Embodiment 12.
[FIG. 281]

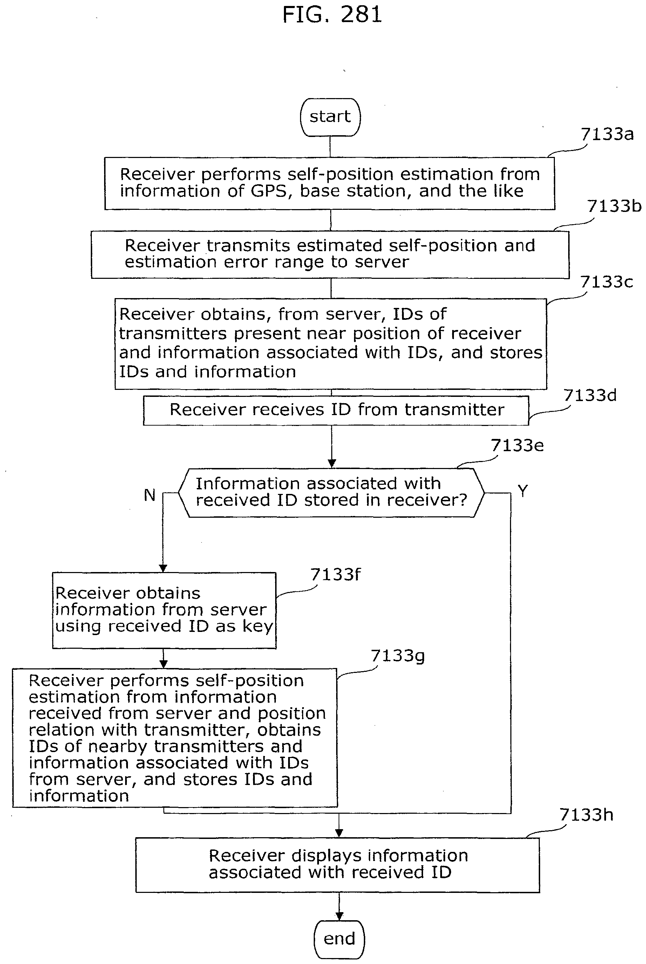

FIG. 281 is a flowchart illustrating an example of process operations of a receiver in Embodiment 12.
[FIG. 282]

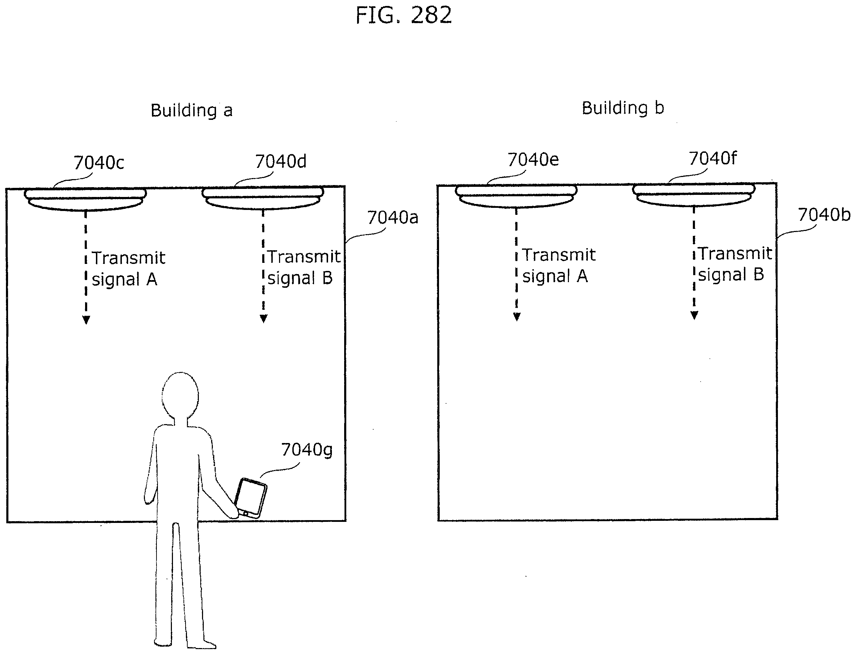

FIG. 282 is a diagram illustrating an example of application of a receiver and a transmitter in Embodiment 12.
[FIG. 283]

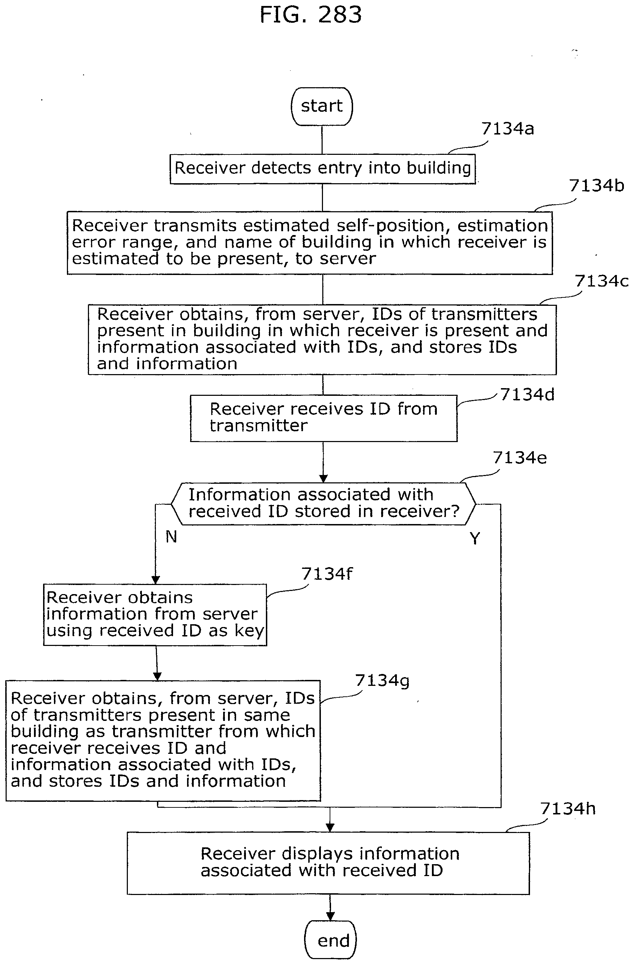

FIG. 283 is a flowchart illustrating an example of process operations of a receiver in Embodiment 12.
[FIG. 284]

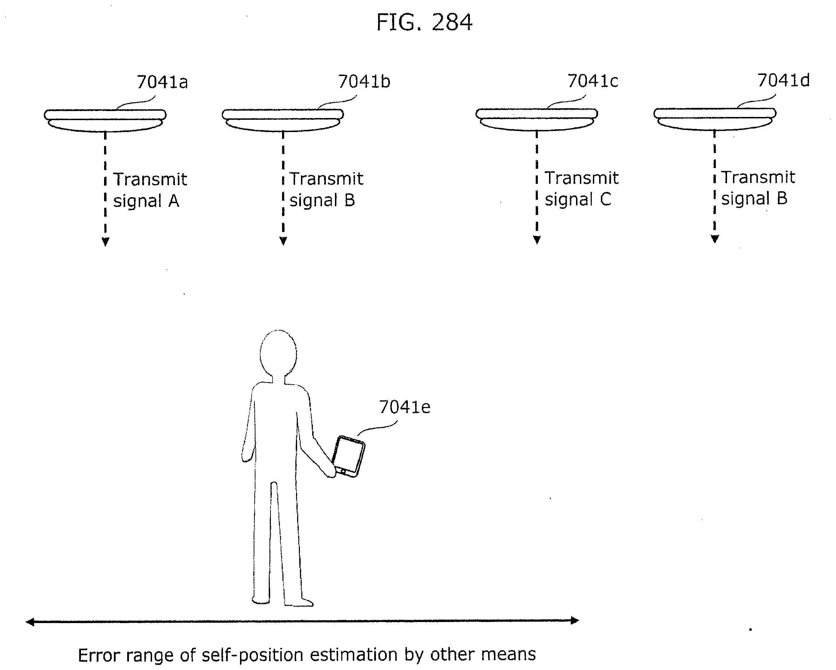

FIG. 284 is a diagram illustrating an example of a structure of a system including a receiver and a transmitter in Embodiment 12.
[FIG. 285]

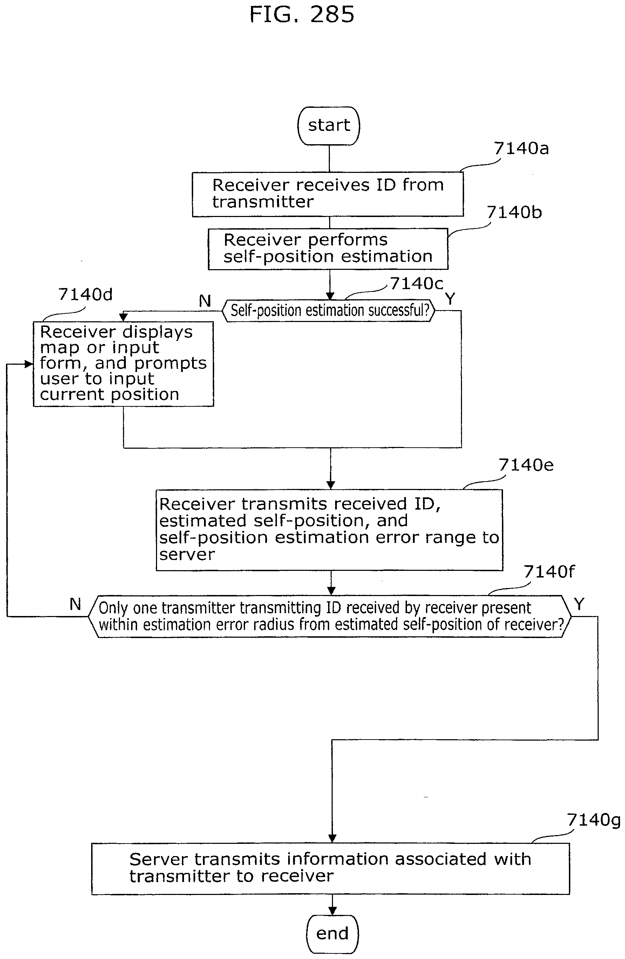

FIG. 285 is a flowchart illustrating an example of process operations of a system in Embodiment 12.
[FIG. 286]

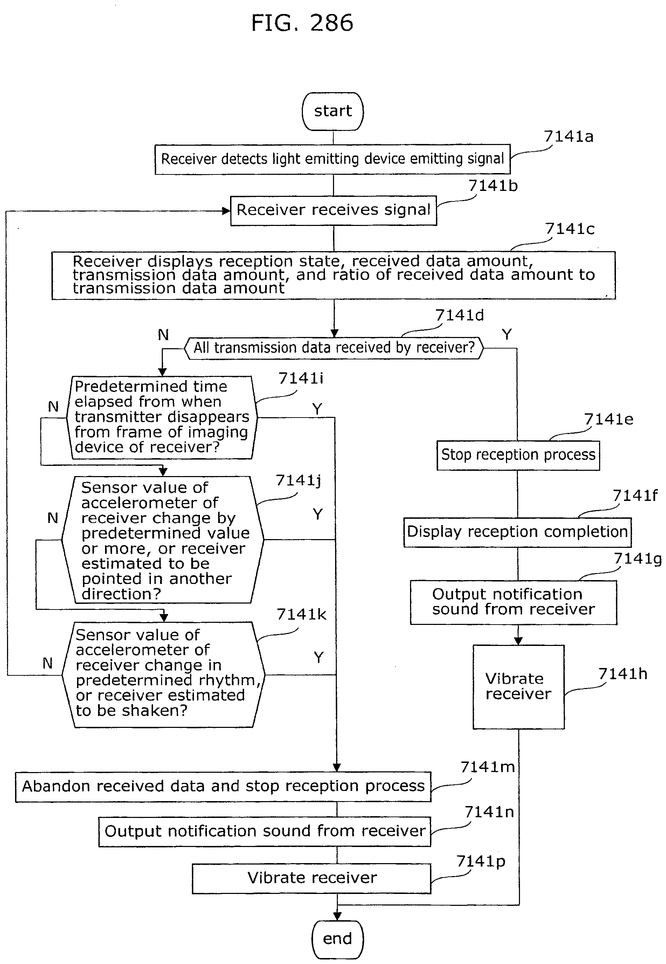

FIG. 286 is a flowchart illustrating an example of process operations of a receiver in Embodiment 12.
[FIG. 287A]

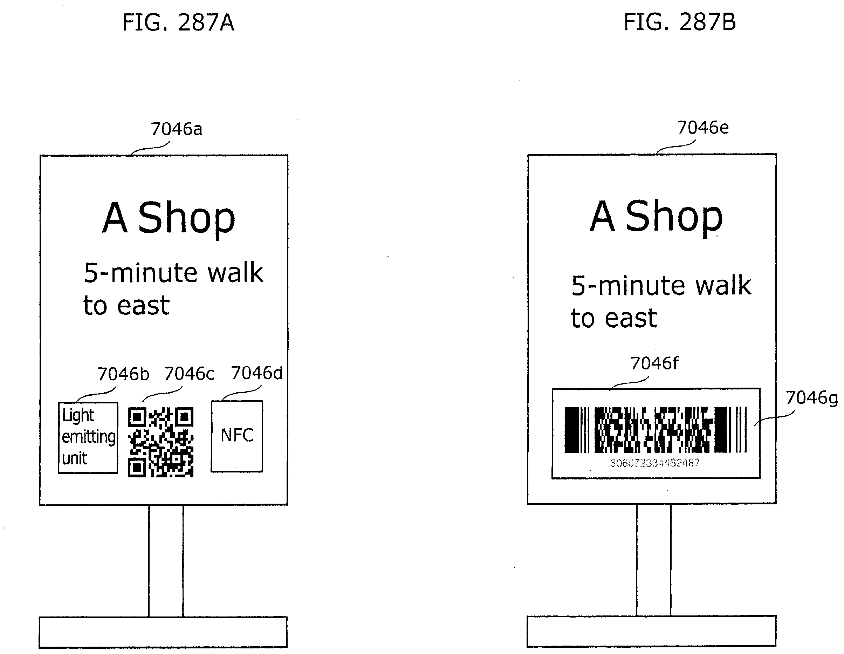

FIG. 287A is a diagram illustrating an example of a structure of a transmitter in Embodiment 12.
[FIG. 287B]
FIG. 287B is a diagram illustrating another example of a structure of a transmitter in Embodiment 12.
[FIG. 288]

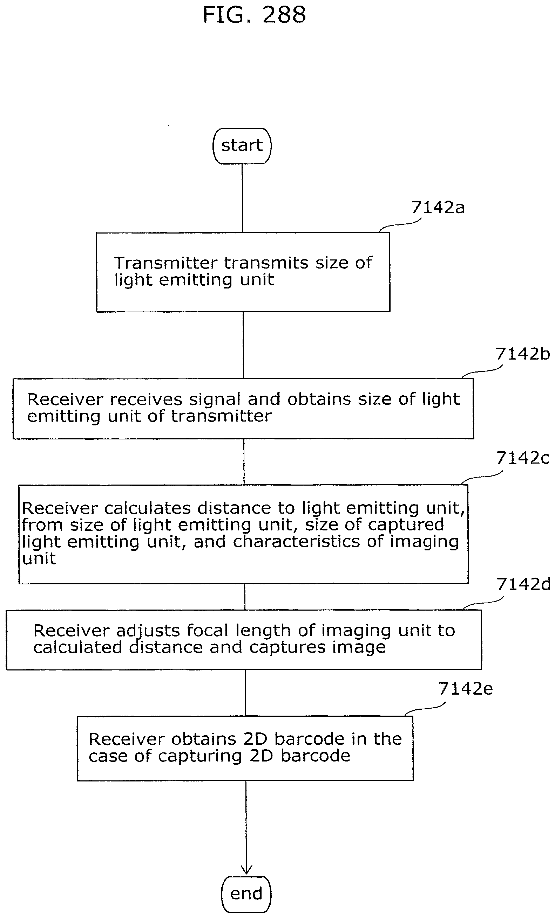

FIG. 288 is a flowchart illustrating an example of process operations of a receiver and a transmitter in Embodiment 12.
[FIG. 289]

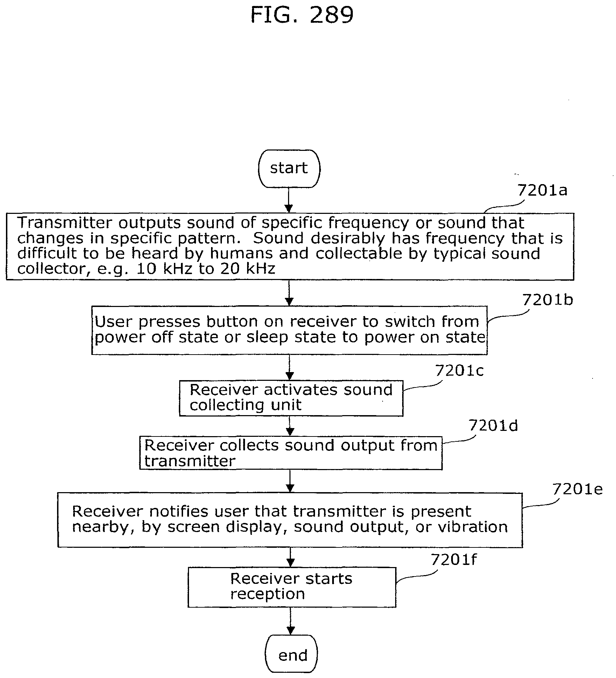

FIG. 289 is a flowchart illustrating an example of process operations relating to a receiver and a transmitter in Embodiment 13.
[FIG. 290]

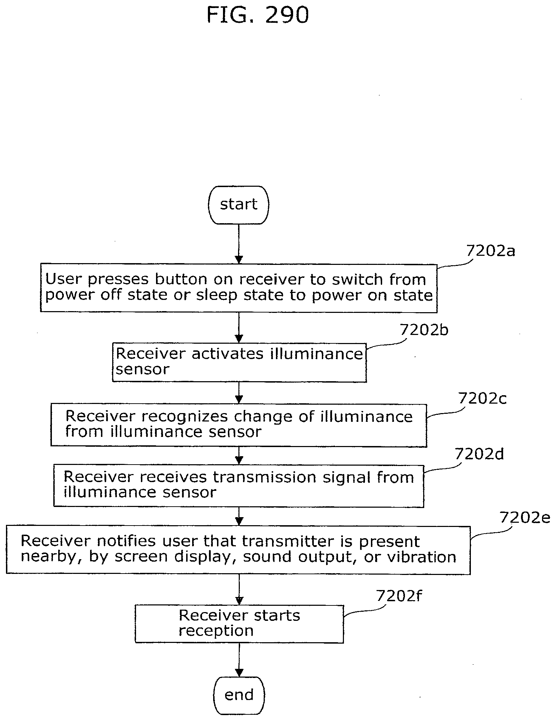

FIG. 290 is a flowchart illustrating an example of process operations relating to a receiver and a transmitter in Embodiment 13.
[FIG. 291]

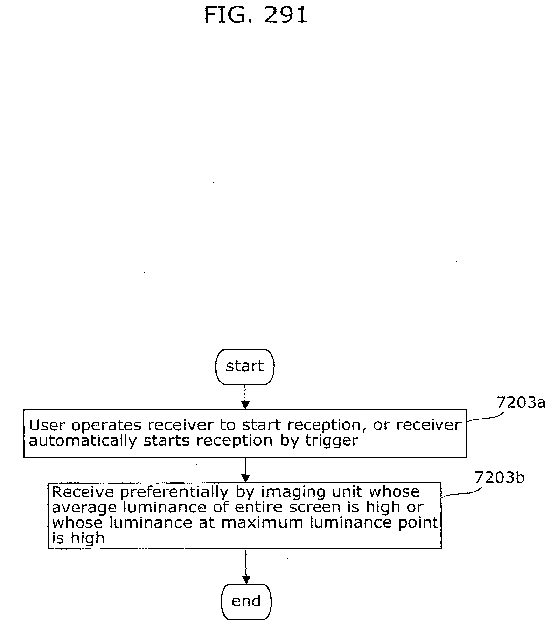

FIG. 291 is a flowchart illustrating an example of process operations relating to a receiver and a transmitter in Embodiment 13.
[FIG. 292]

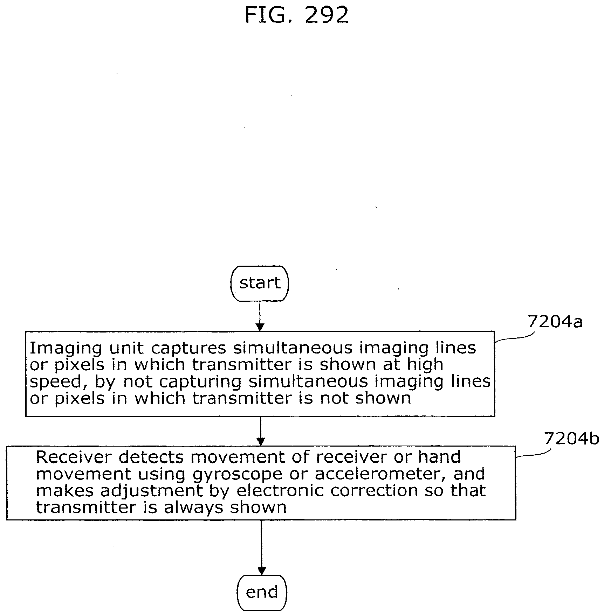

FIG. 292 is a flowchart illustrating an example of process operations relating to a receiver and a transmitter in Embodiment 13.
[FIG. 293]

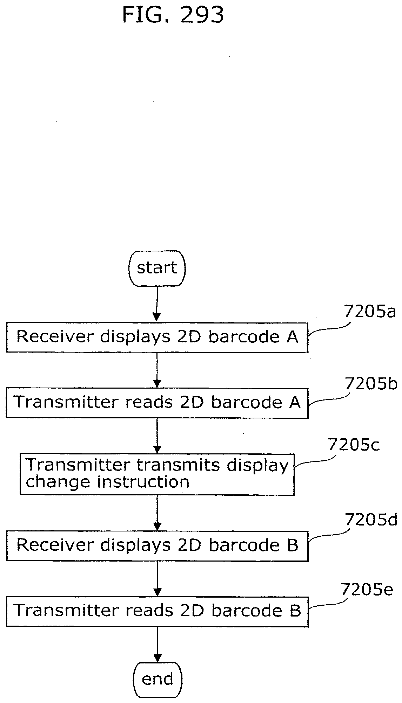

FIG. 293 is a flowchart illustrating an example of process operations relating to a receiver and a transmitter in Embodiment 13.
[FIG. 294]

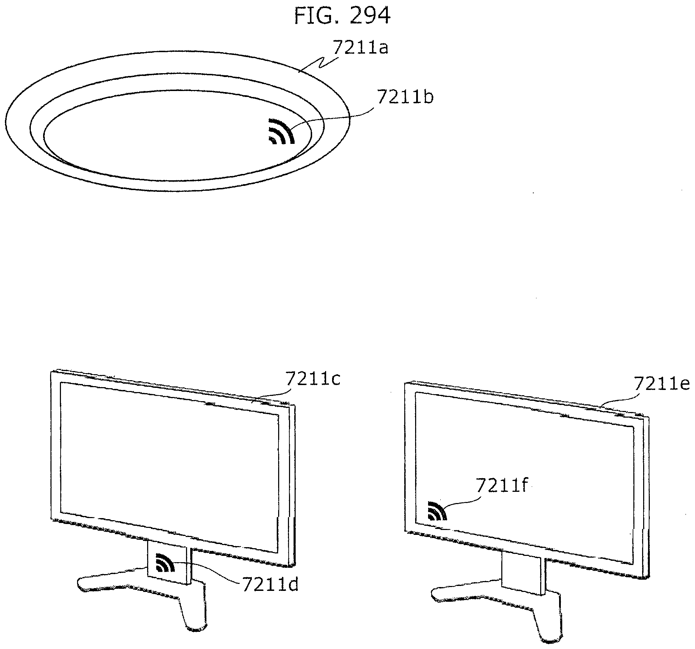

FIG. 294 is a diagram illustrating an example of application of a transmitter in Embodiment 13.
[FIG. 295]

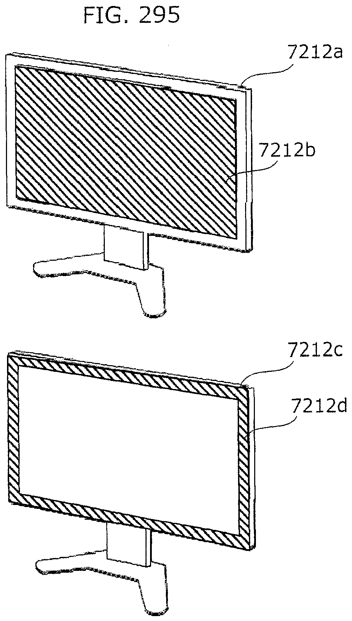

FIG. 295 is a diagram illustrating an example of application of a transmitter in Embodiment 13.
[FIG. 296]

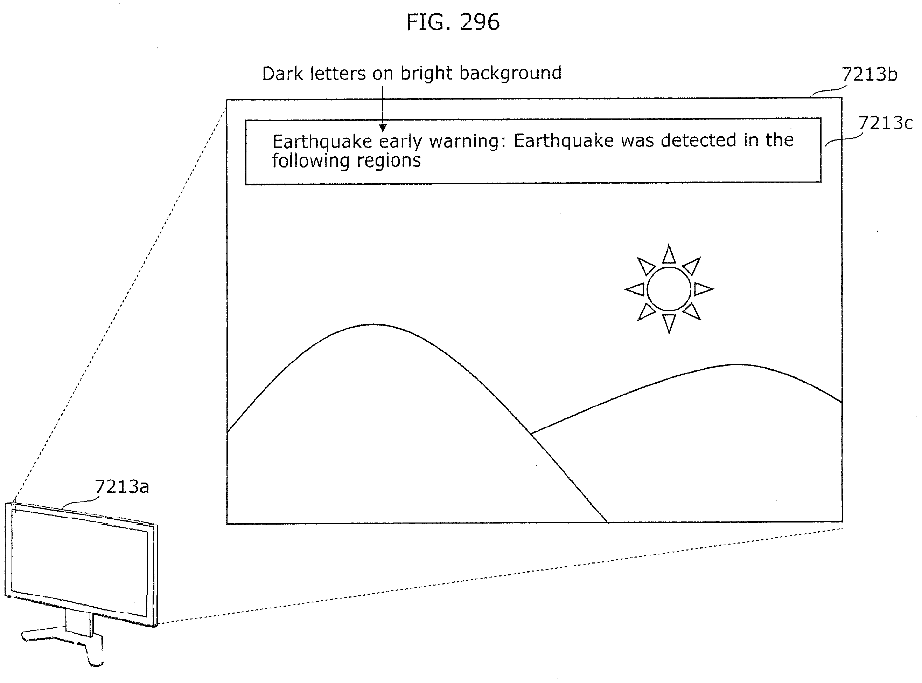

FIG. 296 is a diagram illustrating an example of application of a transmitter in Embodiment 13.
[FIG. 297]

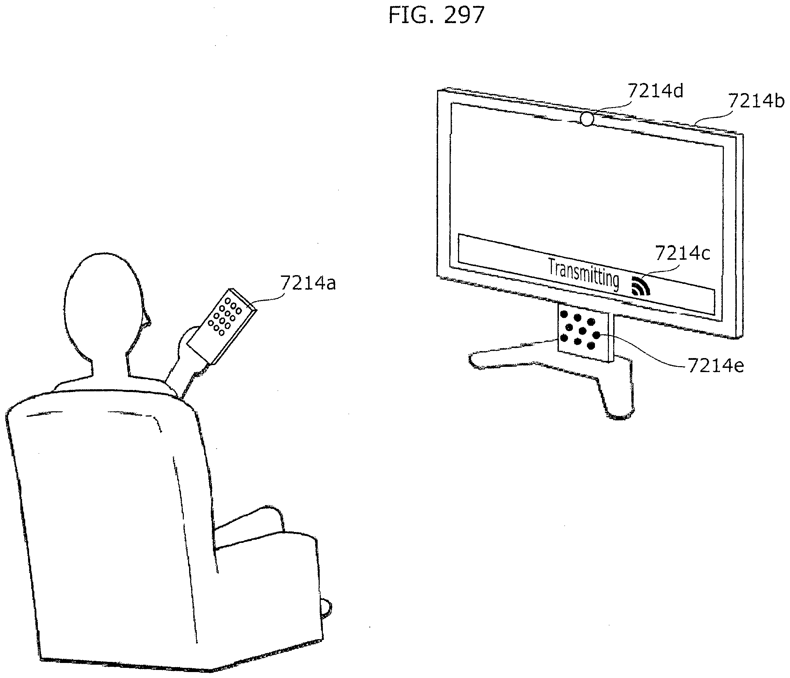

FIG. 297 is a diagram illustrating an example of application of a transmitter and a receiver in Embodiment 13.
[FIG. 298]

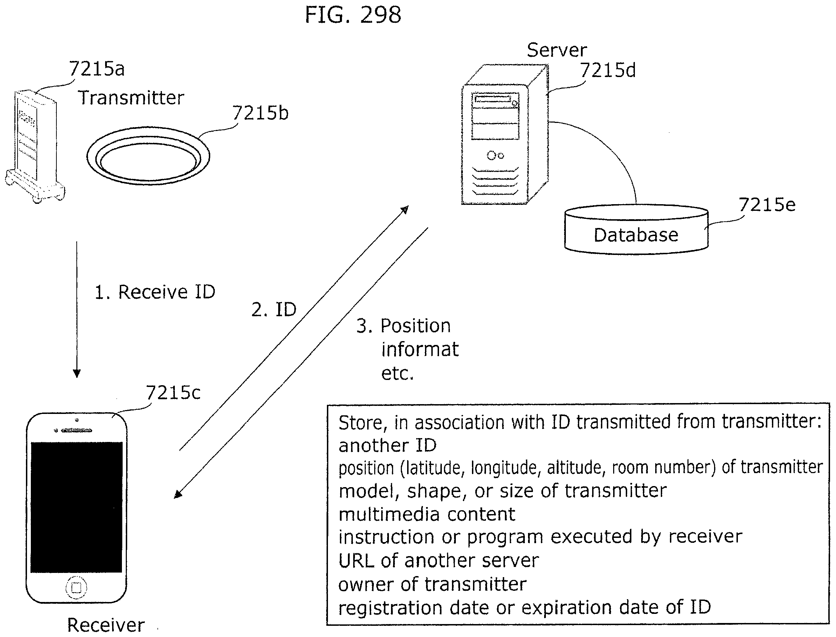

FIG. 298 is a diagram illustrating an example of application of a transmitter and a receiver in Embodiment 13.
[FIG. 299]

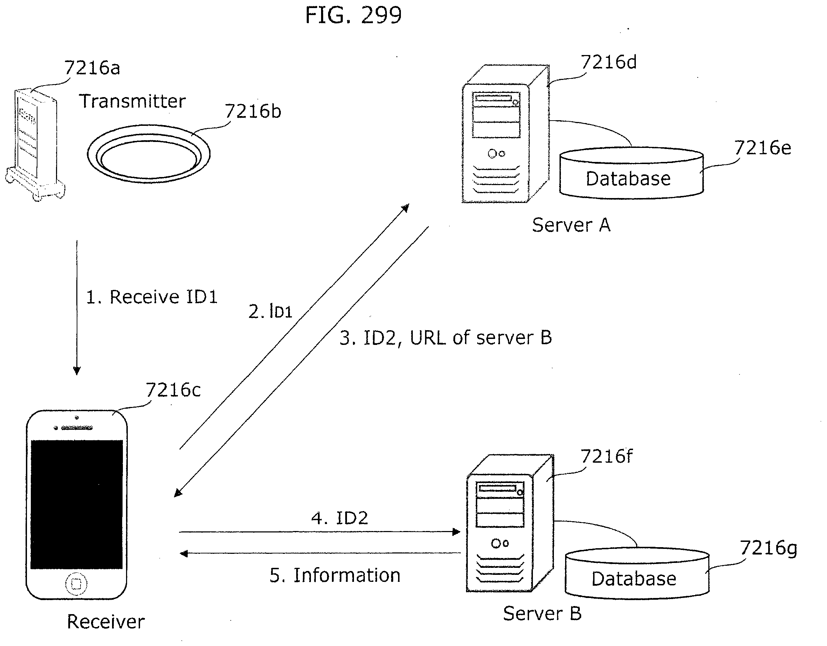

FIG. 299 is a diagram illustrating an example of application of a transmitter and a receiver in Embodiment 13.
[FIG. 300]

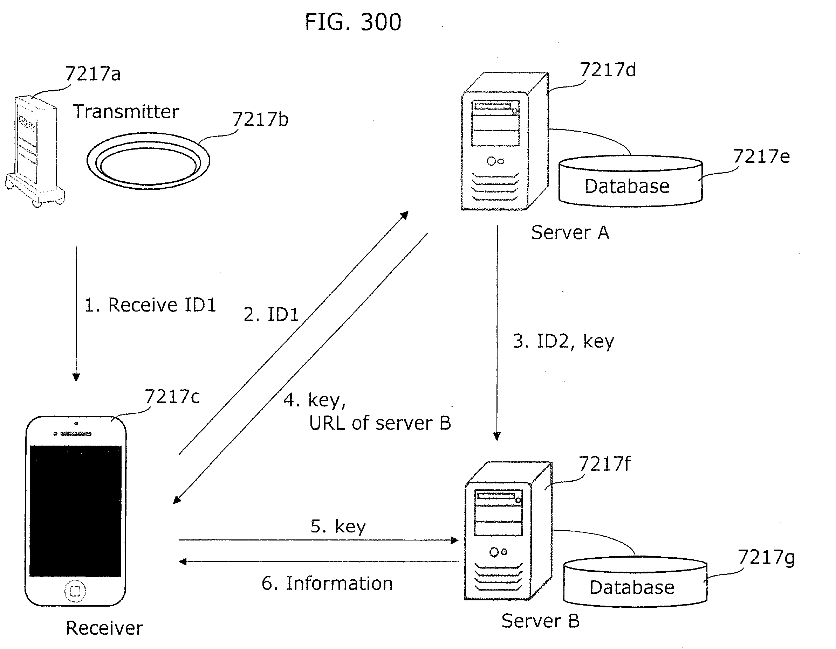

FIG. 300 is a diagram illustrating an example of application of a transmitter and a receiver in Embodiment 13.
[FIG. 301A]

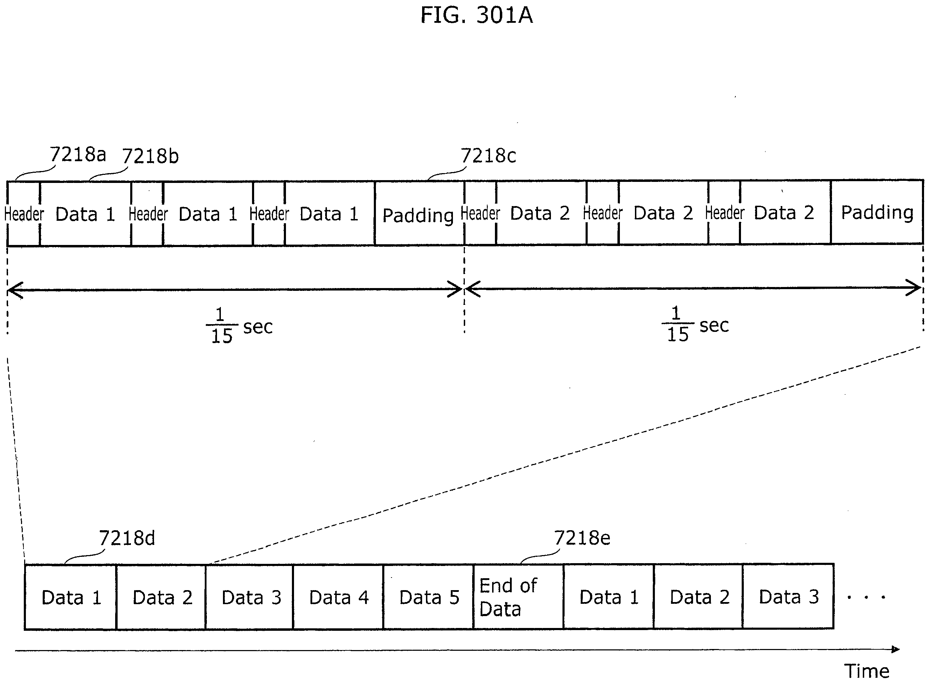

FIG. 301A is a diagram illustrating an example of a transmission signal in Embodiment 13.

[FIG. 301B]

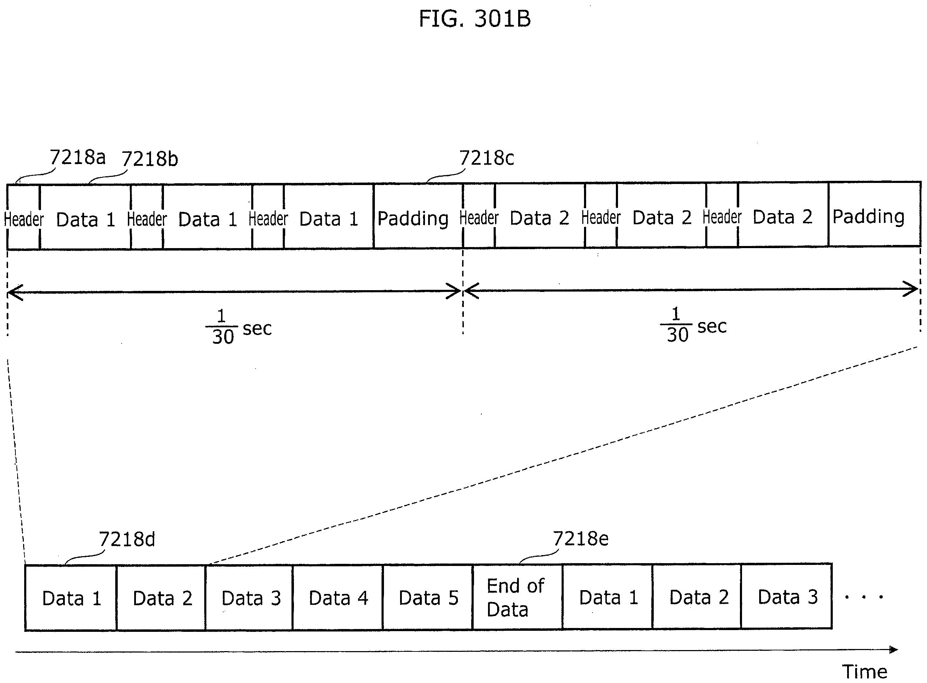

FIG. 301B is a diagram illustrating another example of a transmission signal in Embodiment 13.

[FIG. 302]

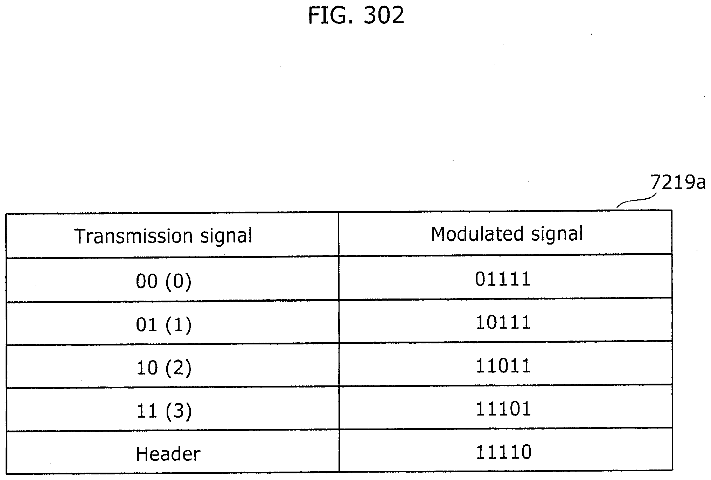

FIG. 302 is a diagram illustrating an example of a transmission signal in Embodiment 13.

[FIG. 303A]

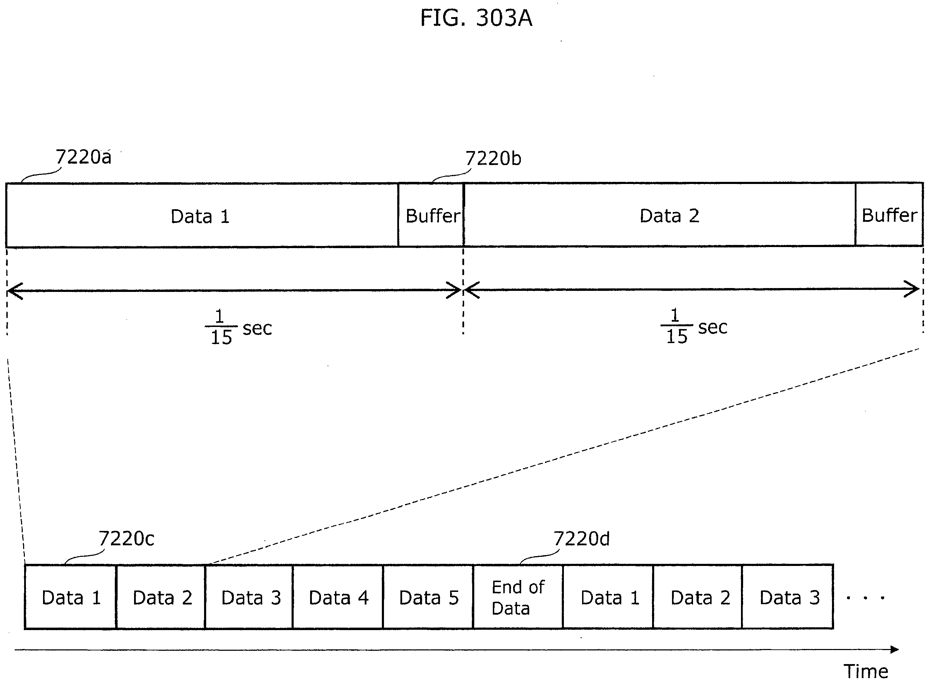

FIG. 303A is a diagram illustrating an example of a transmission signal in Embodiment 13.

[FIG. 303B]

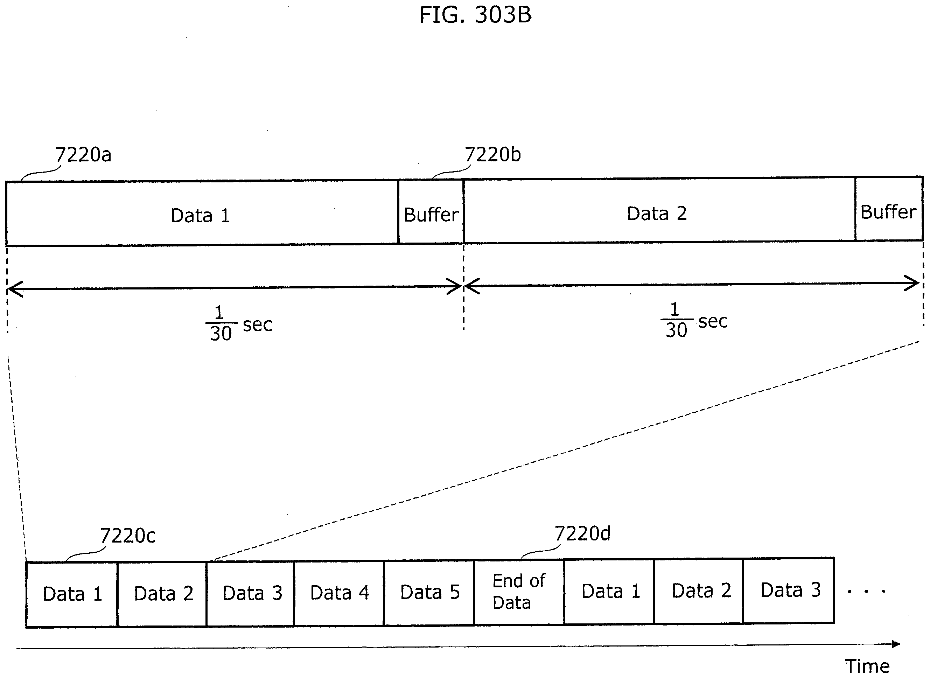

FIG. 303B is a diagram illustrating another example of a transmission signal in Embodiment 13.

[FIG. 304]

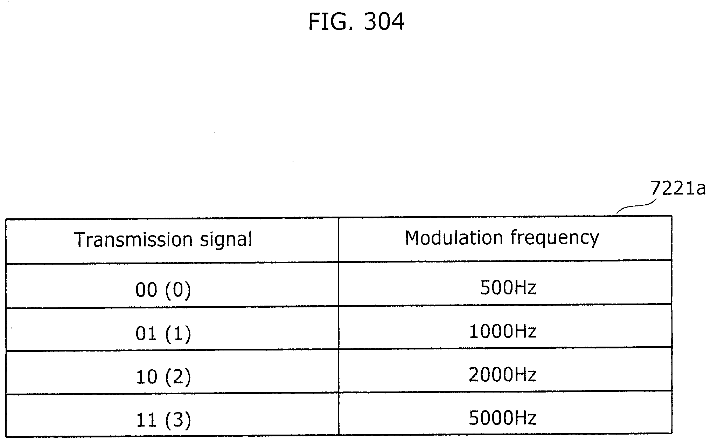

FIG. 304 is a diagram illustrating an example of a transmission signal in Embodiment 13.

[FIG. 305A]

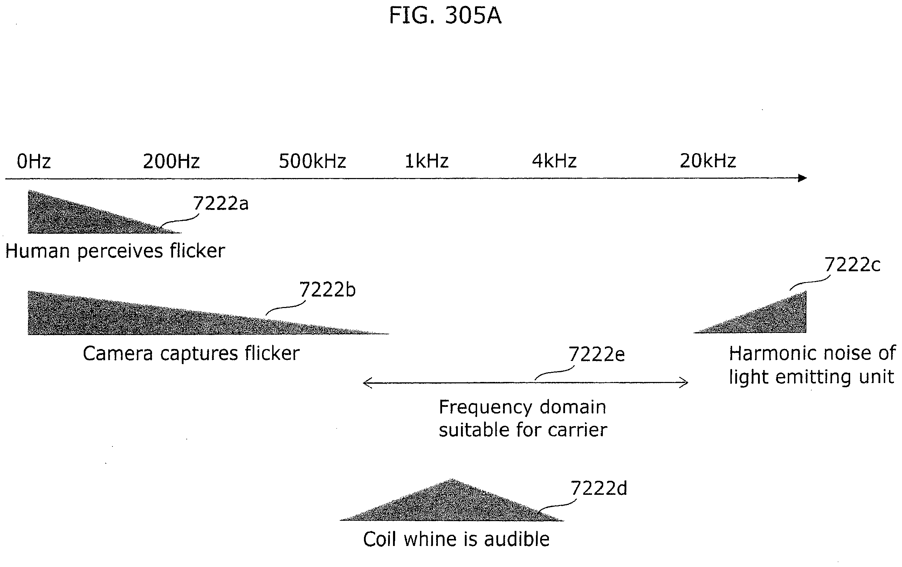

FIG. 305A is a diagram illustrating an example of a transmission signal in Embodiment 13.

[FIG. 305B]

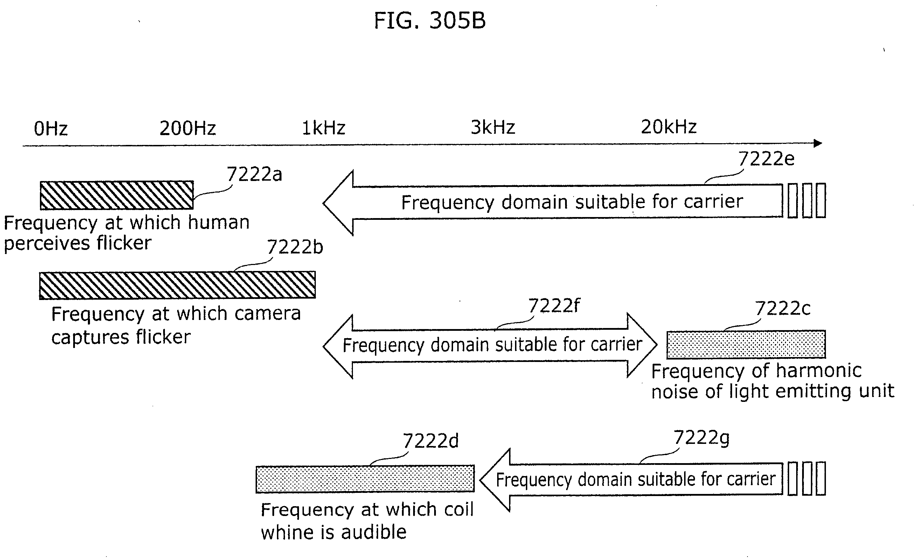

FIG. 305B is a diagram illustrating an example of a transmission signal in Embodiment 13.

[FIG. 306]

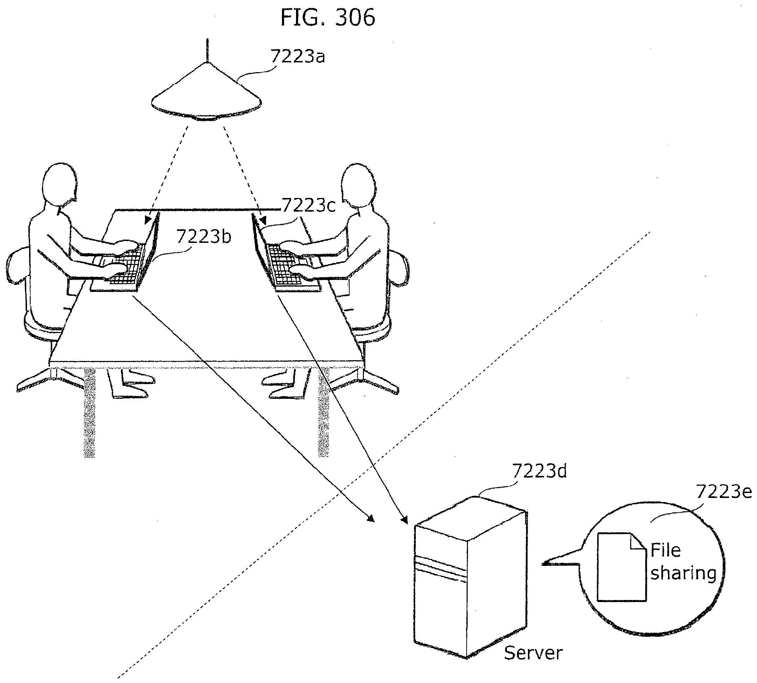

FIG. 306 is a diagram illustrating an example of application of a transmitter in Embodiment 13.

[FIG. 307]

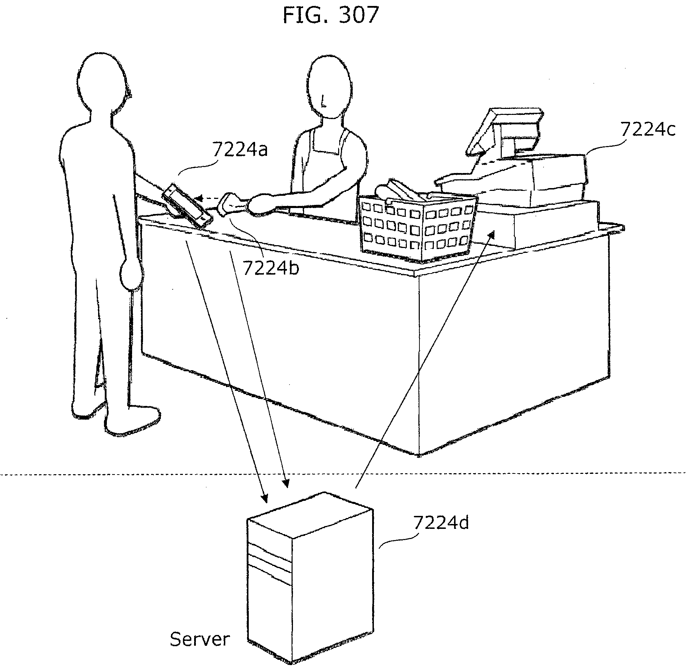

FIG. 307 is a diagram illustrating an example of application of a transmitter in Embodiment 13.

[FIG. 308]

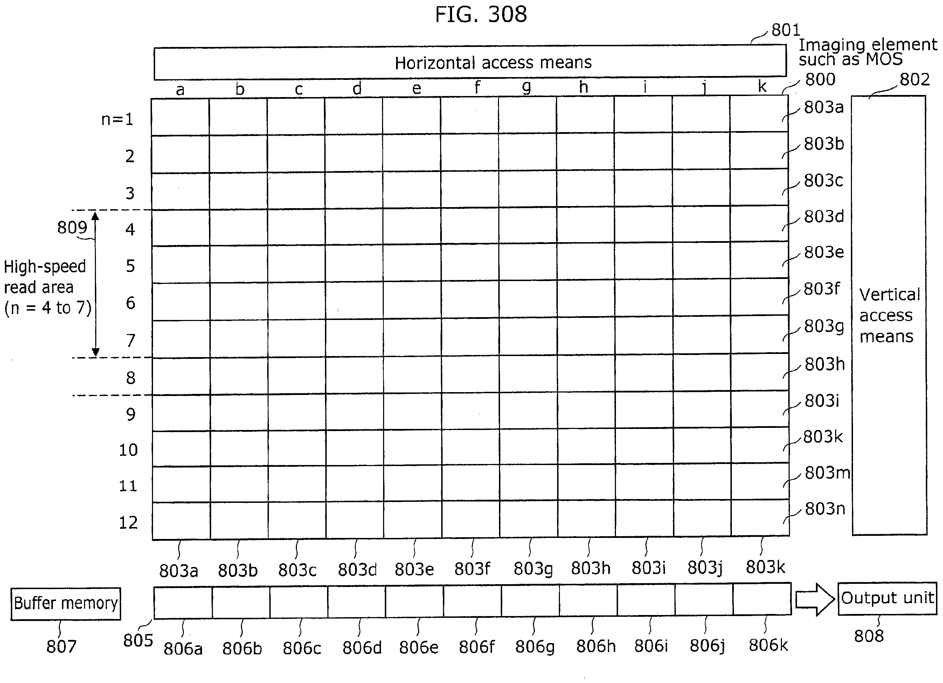

FIG. 308 is a diagram for describing an imaging element in Embodiment 13.

[FIG. 309]

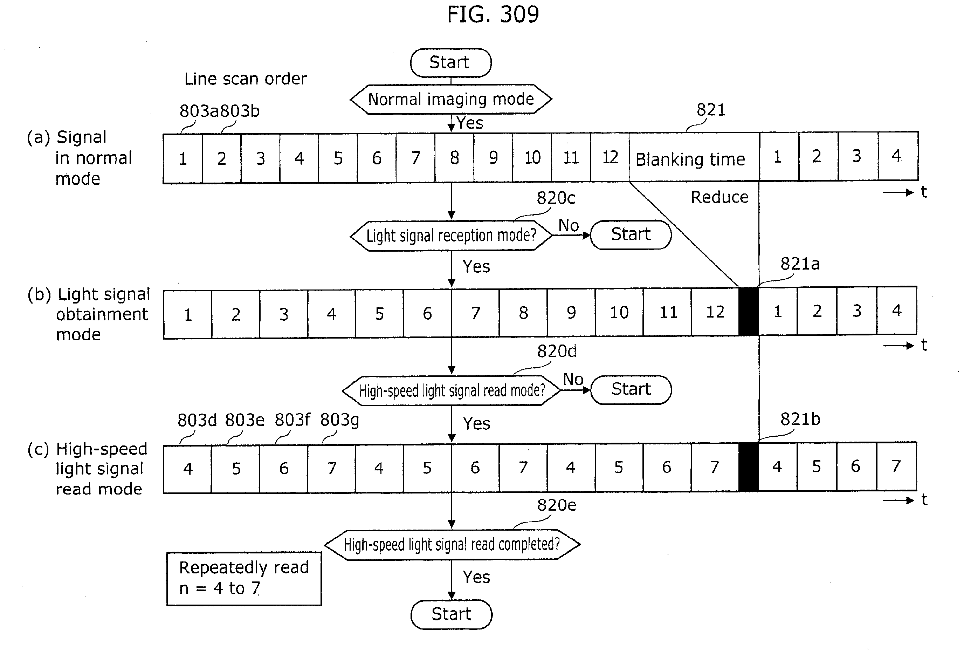

FIG. 309 is a diagram for describing an imaging element in Embodiment 13.

[FIG. 310]

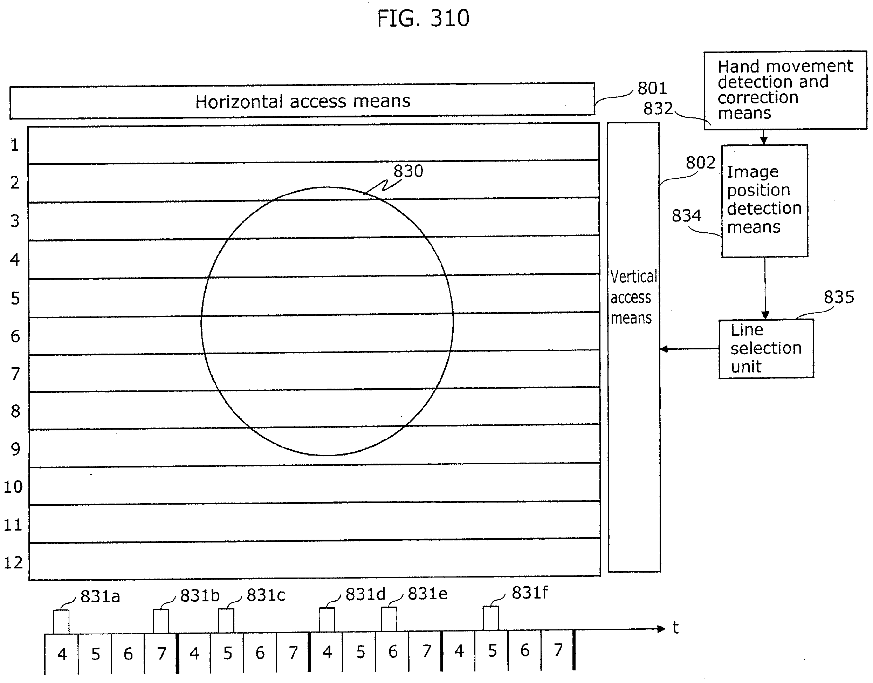

FIG. 310 is a diagram for describing an imaging element in Embodiment 13.

[FIG. 311A]

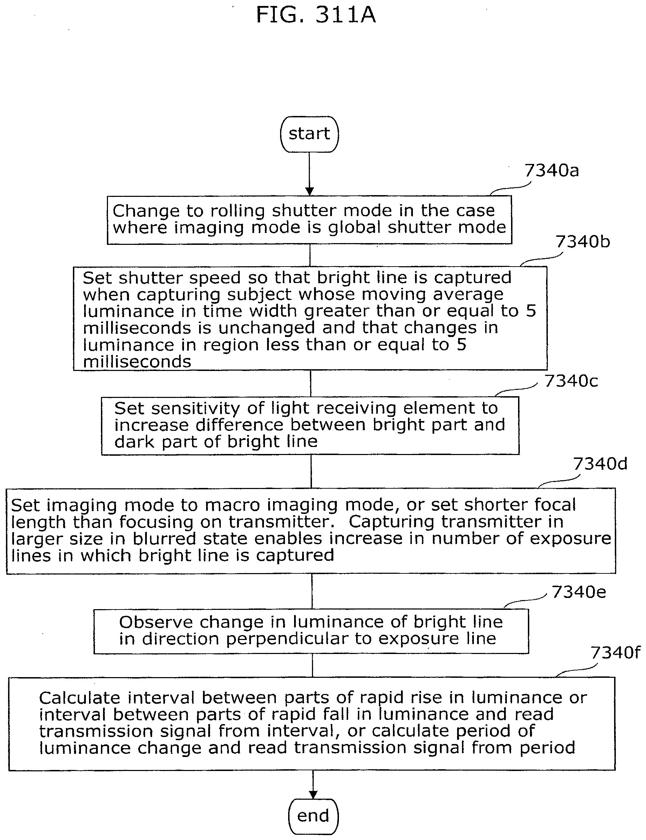

FIG. 311A is a flowchart illustrating process operations of a reception device (imaging device) in a variation of each embodiment.

[FIG. 311B]

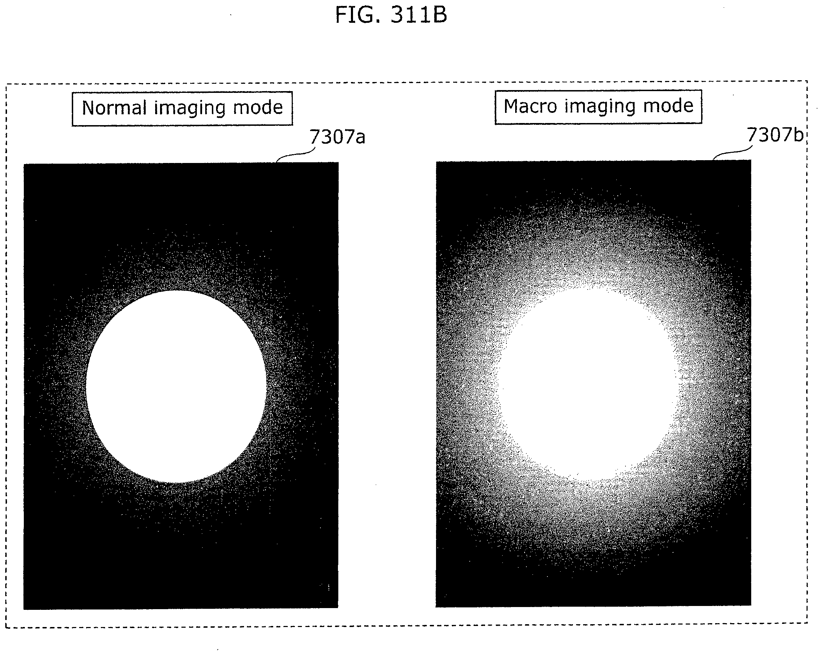

FIG. 311B is a diagram illustrating a normal imaging mode and a macro imaging mode in a variation of each embodiment in comparison.

[FIG. 312]

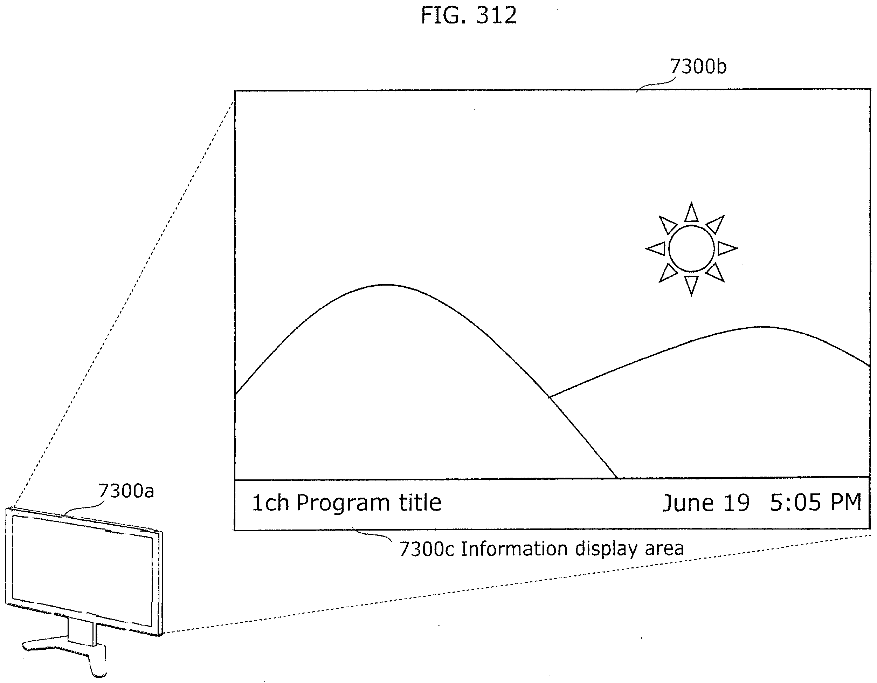

FIG. 312 is a diagram illustrating a display device for displaying video and the like in a variation of each embodiment.

[FIG. 313]

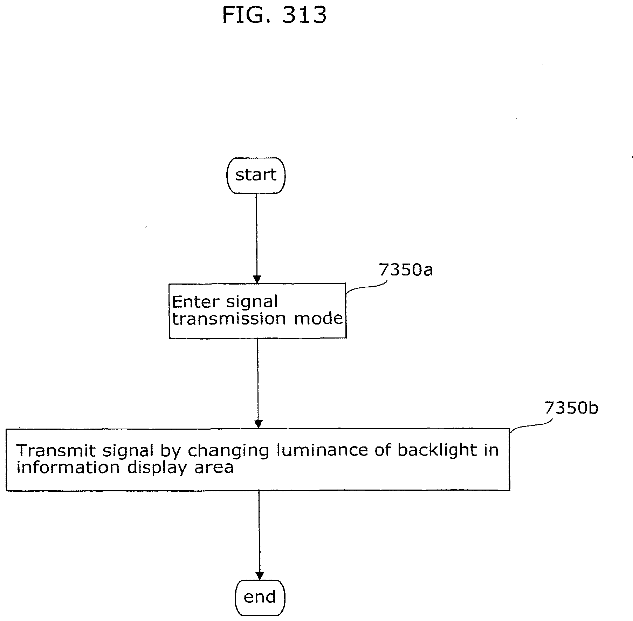

FIG. 313 is a diagram illustrating an example of process operations of a display device in a variation of each embodiment.

[FIG. 314]

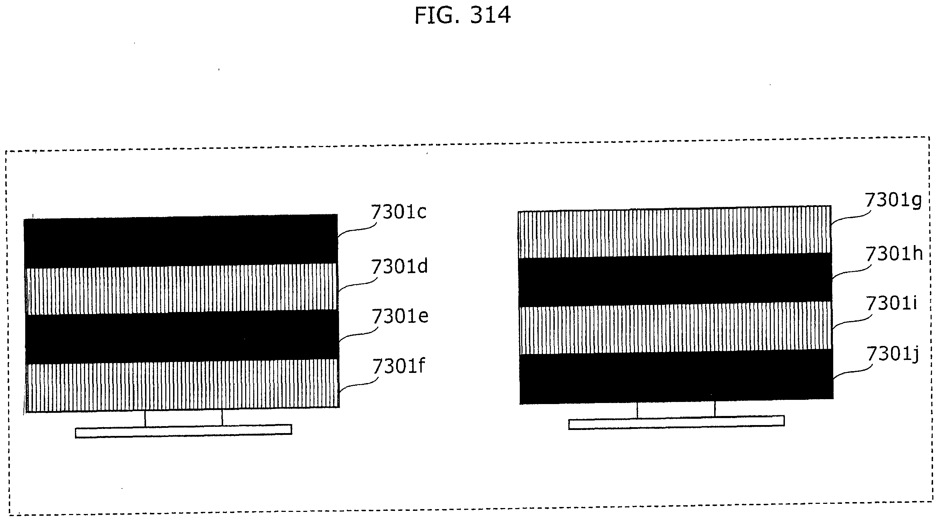

FIG. 314 is a diagram illustrating an example of a part transmitting a signal in a display device in a variation of each embodiment.

[FIG. 315]

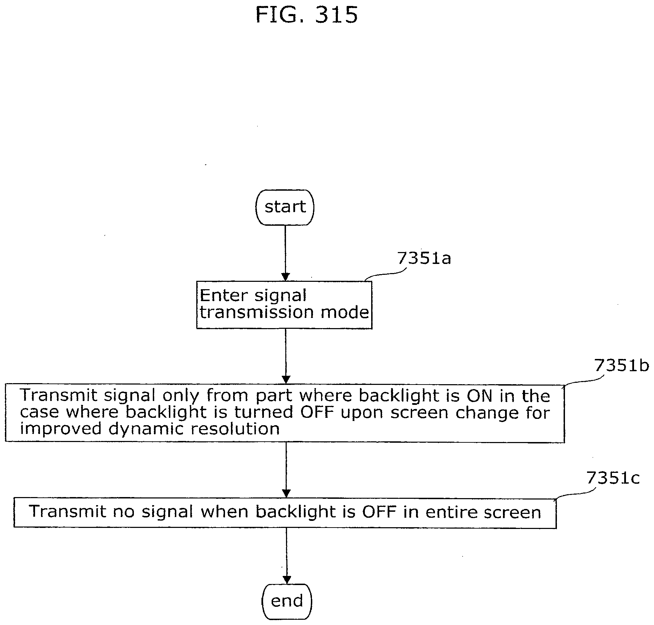

FIG. 315 is a diagram illustrating another example of process operations of a display device in a variation of each embodiment.

[FIG. 316]

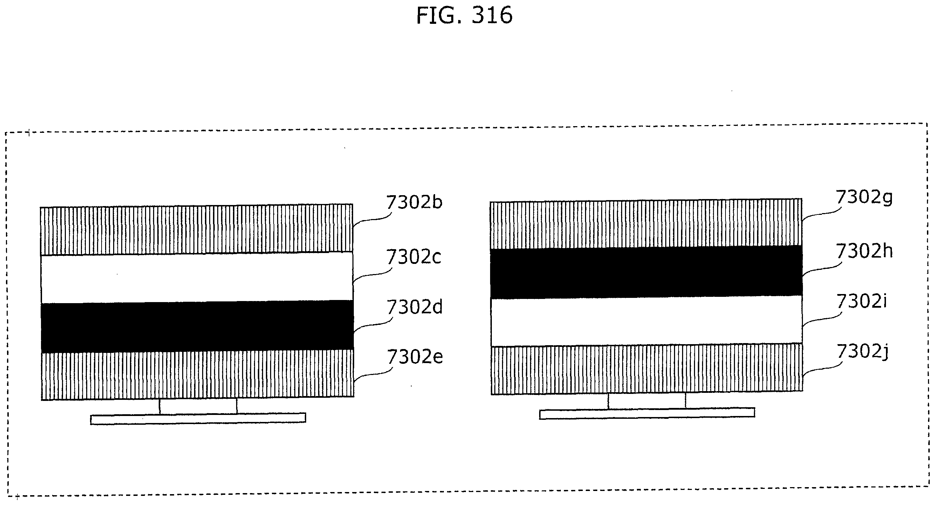

FIG. 316 is a diagram illustrating another example of a part transmitting a signal in a display device in a variation of each embodiment.

[FIG. 317]

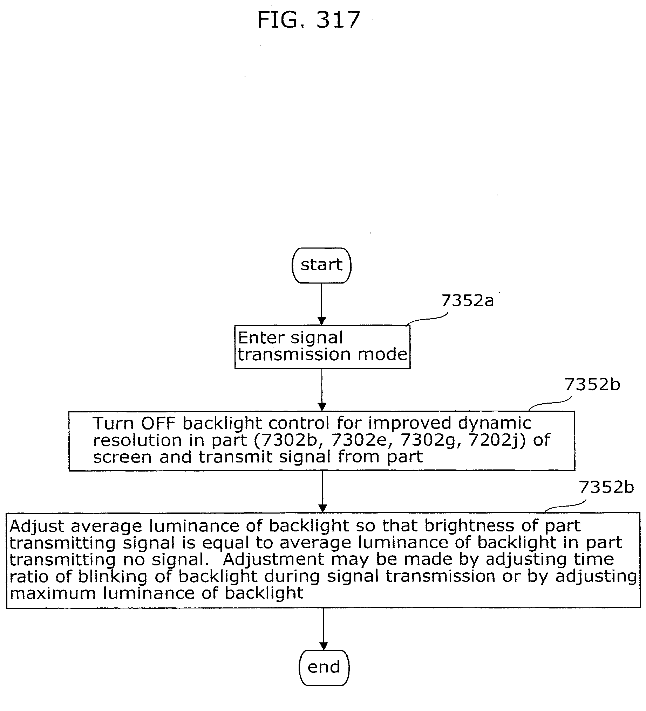

FIG. 317 is a diagram illustrating yet another example of process operations of a display device in a variation of each embodiment.

[FIG. 318]

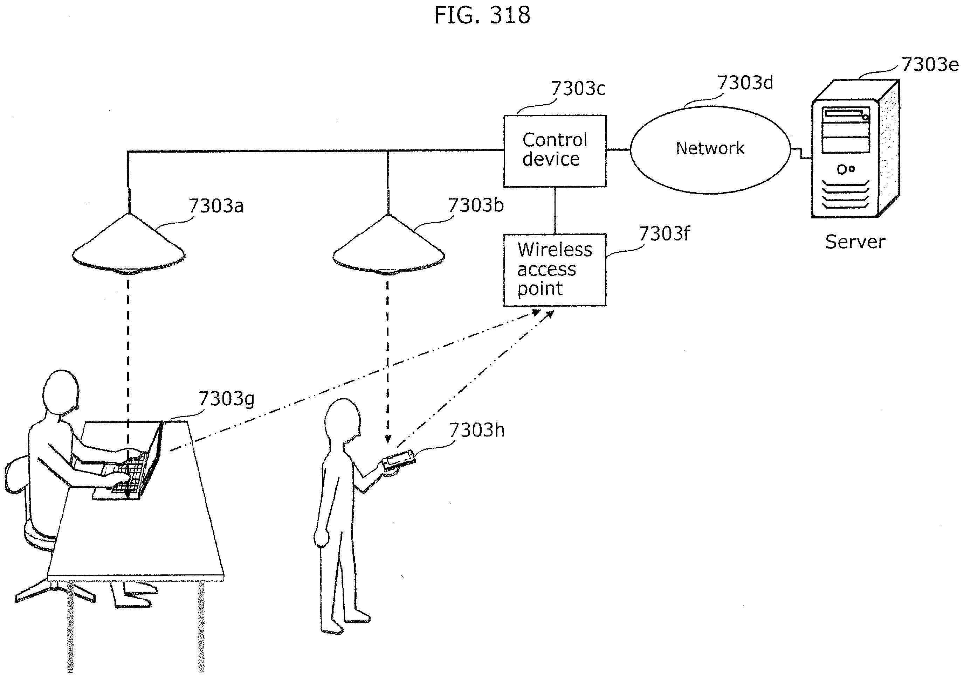

FIG. 318 is a diagram illustrating a structure of a communication system including a transmitter and a receiver in a variation of each embodiment.

[FIG. 319]

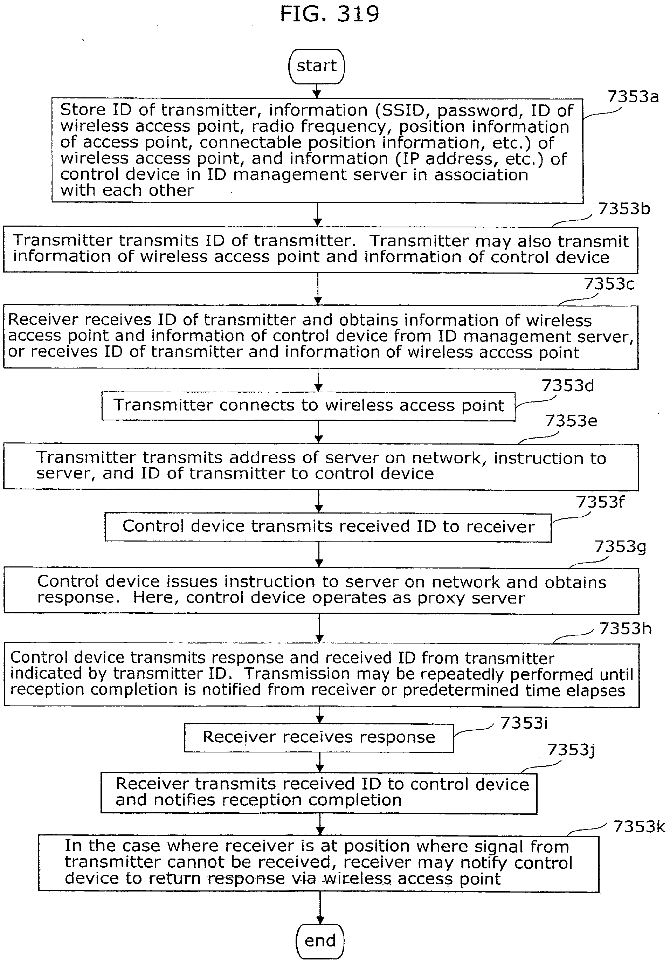

FIG. 319 is a flowchart illustrating process operations of a communication system in a variation of each embodiment.

[FIG. 320]

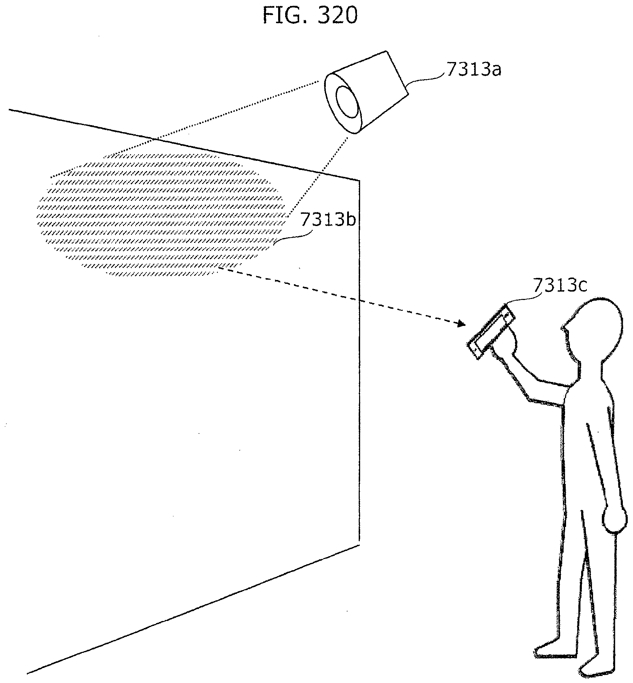

FIG. 320 is a diagram illustrating an example of signal transmission in a variation of each embodiment.

[FIG. 321]

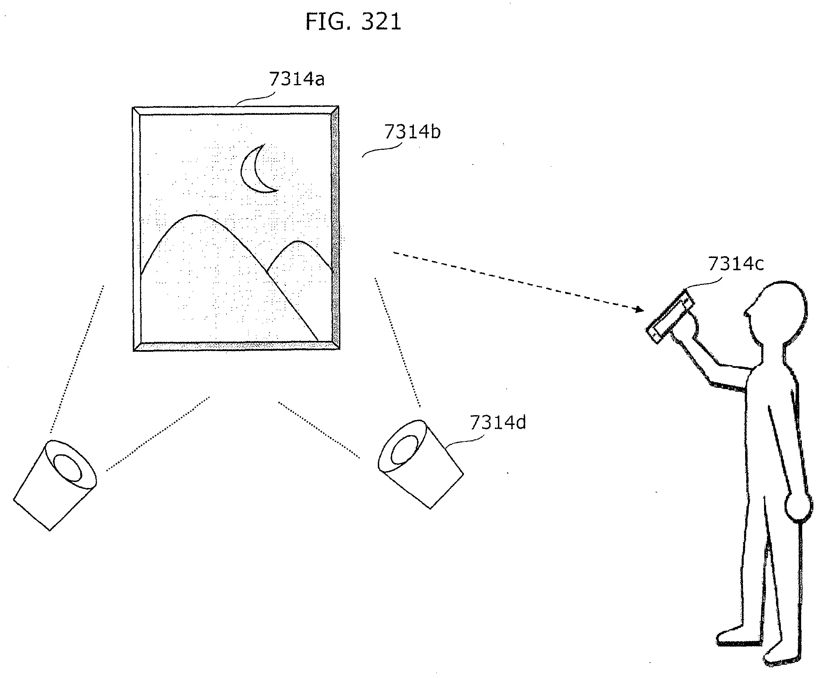

FIG. 321 is a diagram illustrating an example of signal transmission in a variation of each embodiment.

[FIG. 322]

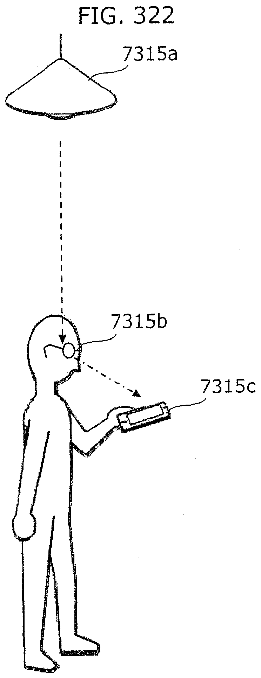

FIG. 322 is a diagram illustrating an example of signal transmission in a variation of each embodiment.
[FIG. 323A]

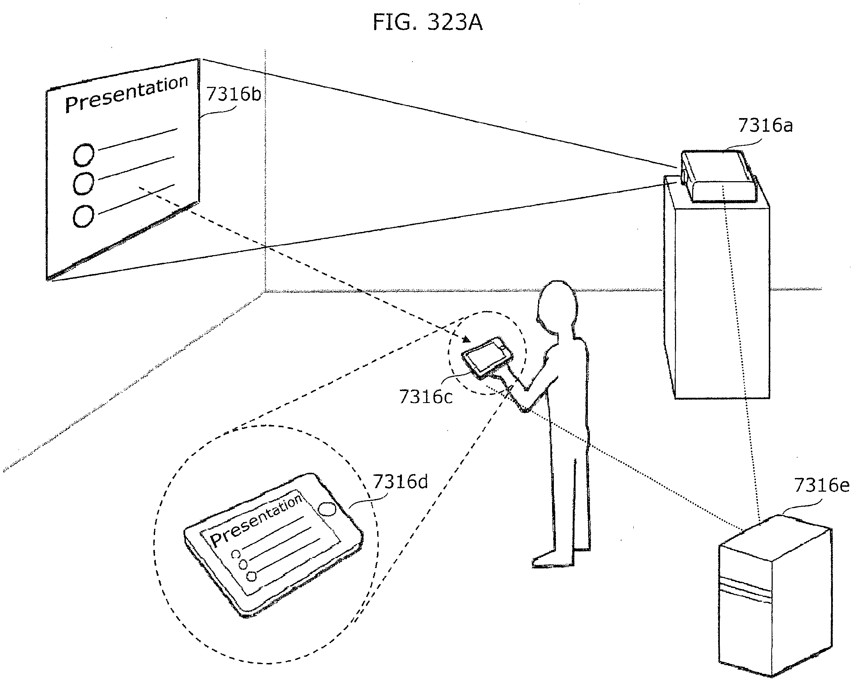

FIG. 323A is a diagram illustrating an example of signal transmission in a variation of each embodiment.
[FIG. 323B]

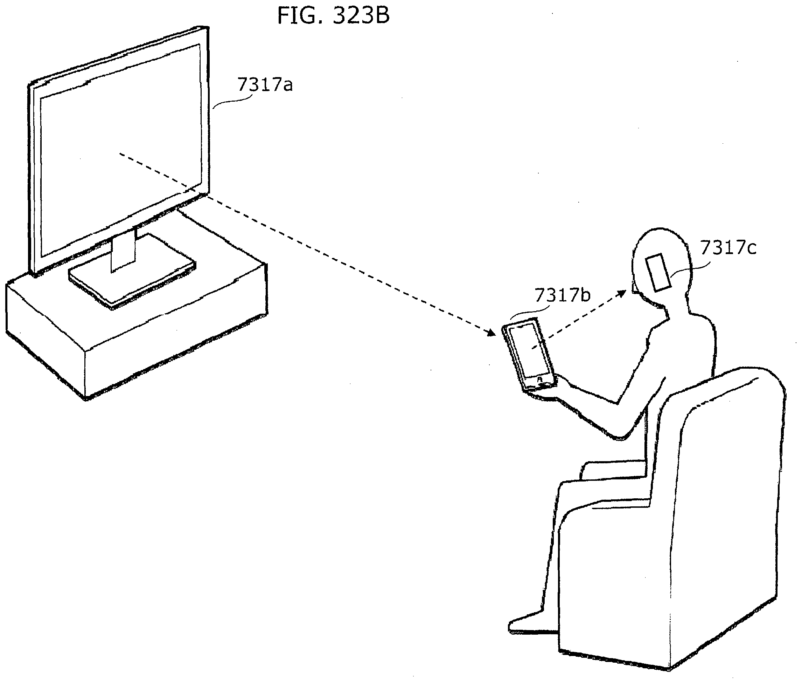

FIG. 323B is a diagram illustrating an example of signal transmission in a variation of each embodiment.
[FIG. 323C]

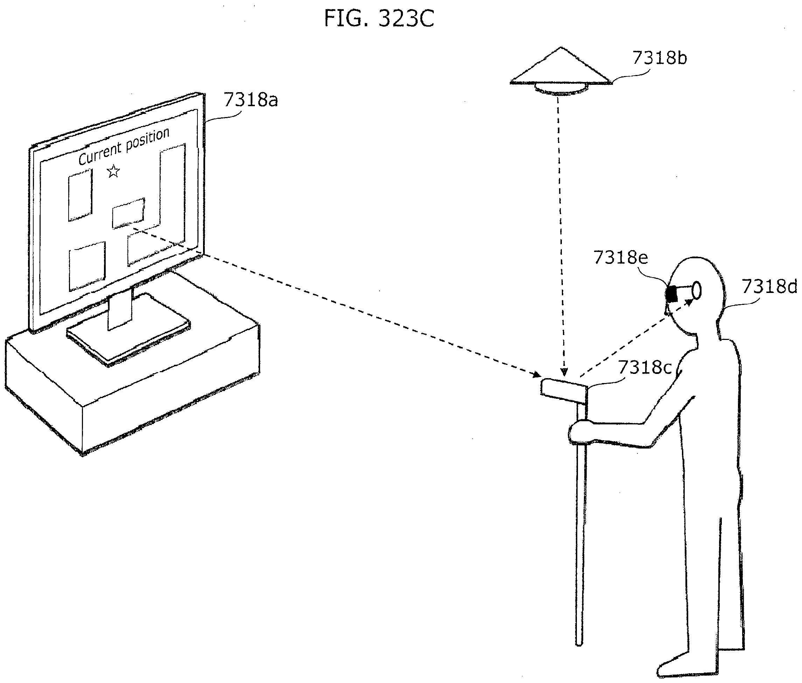

FIG. 323C is a diagram illustrating an example of signal transmission in a variation of each embodiment.
[FIG. 323D]

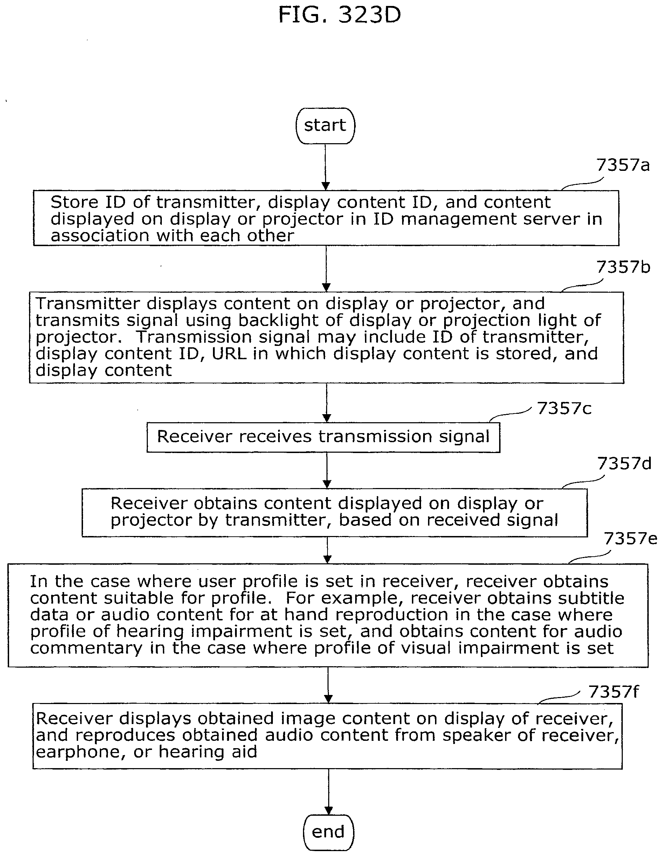

FIG. 323D is a flowchart illustrating process operations of a communication system including a receiver and a display or a projector in a variation of each embodiment.
[FIG. 324]

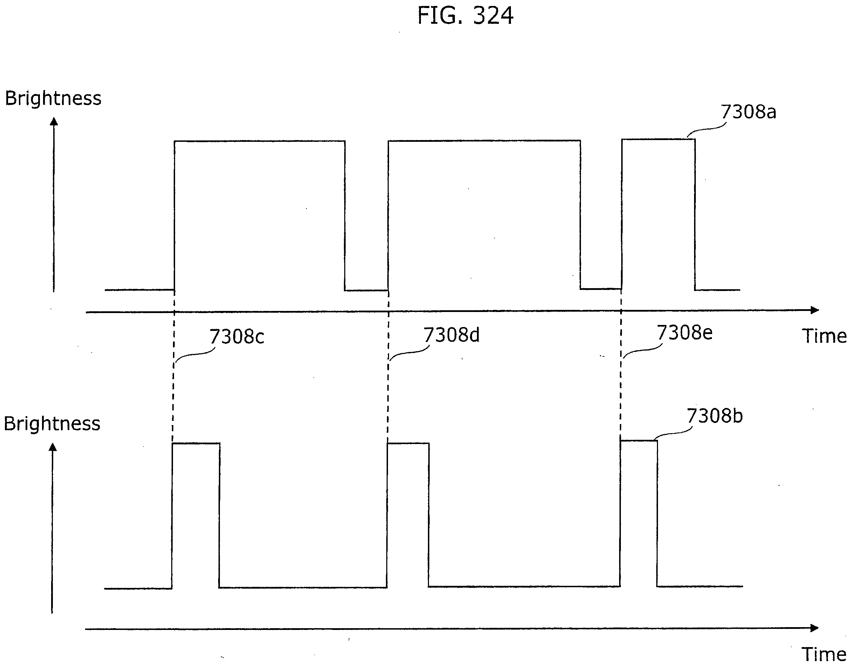

FIG. 324 is a diagram illustrating an example of a transmission signal in a variation of each embodiment.
[FIG. 325]

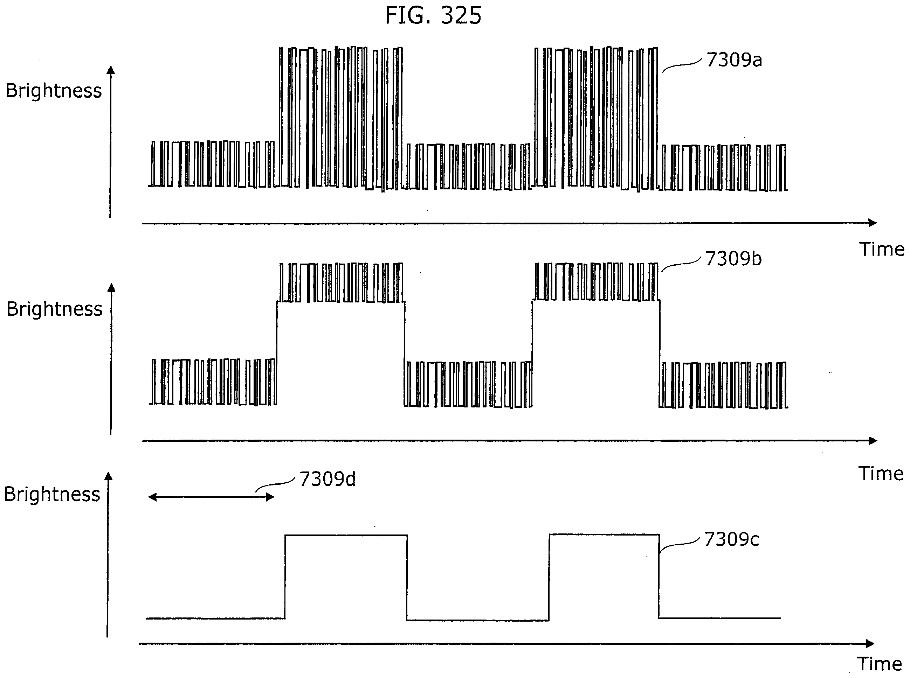

FIG. 325 is a diagram illustrating an example of a transmission signal in a variation of each embodiment.
[FIG. 326]

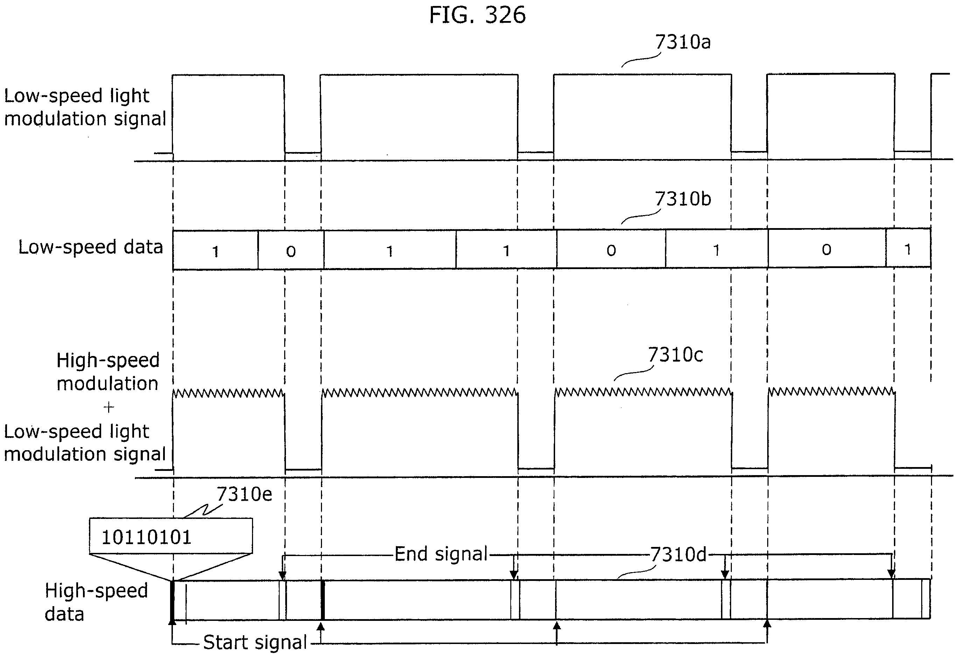

FIG. 326 is a diagram illustrating an example of a transmission signal in a variation of each embodiment.
[FIG. 327A]

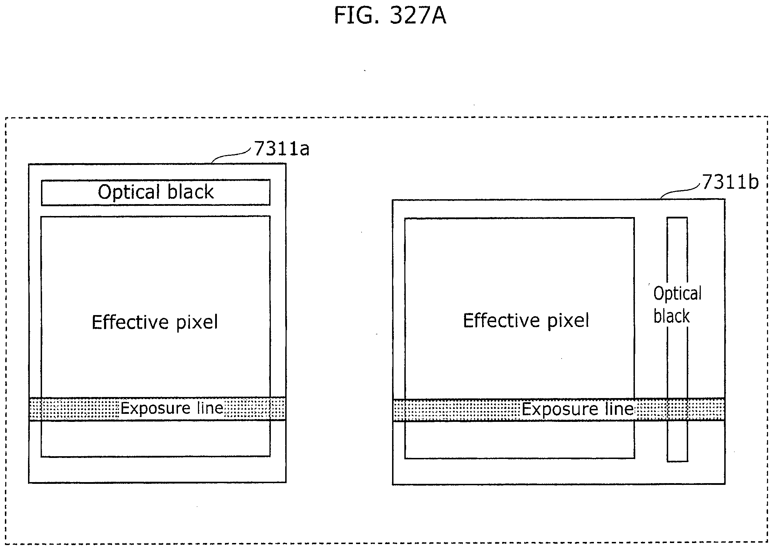

FIG. 327A is a diagram illustrating an example of an imaging element of a receiver in a variation of each embodiment.
[FIG. 327B]

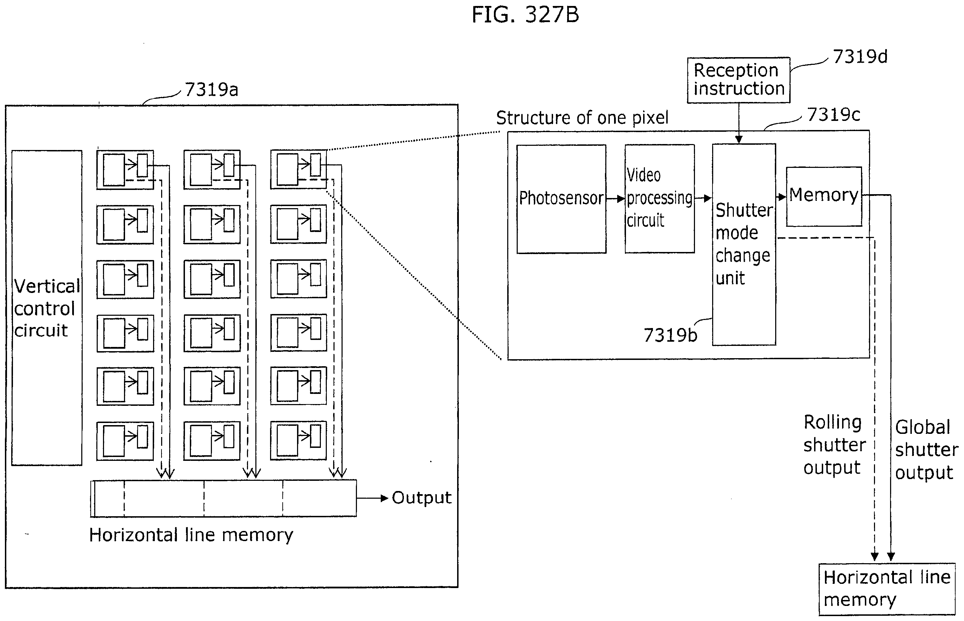

FIG. 327B is a diagram illustrating an example of a structure of an internal circuit of an imaging device of a receiver in a variation of each embodiment.
[FIG. 327C]

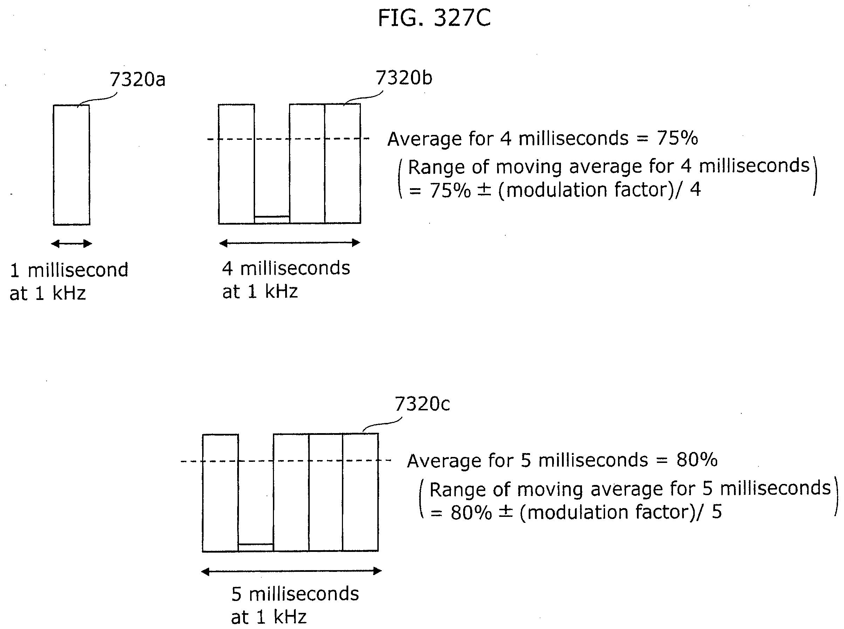

FIG. 327C is a diagram illustrating an example of a transmission signal in a variation of each embodiment.
[FIG. 327D]

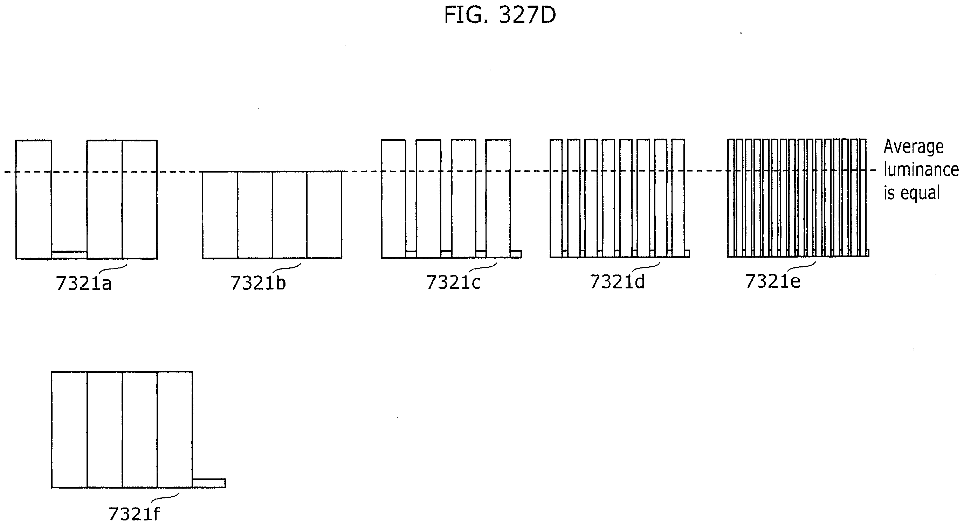

FIG. 327D is a diagram illustrating an example of a transmission signal in a variation of each embodiment.
[FIG. 328A]

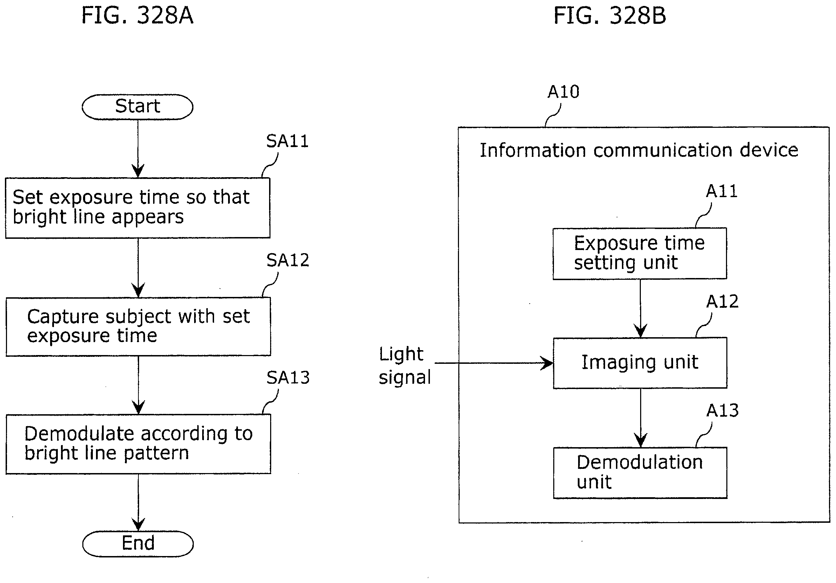

FIG. 328A is a flowchart of an information communication method according to an aspect of the present invention.
[FIG. 328B]
FIG. 328B is a block diagram of an information communication device according to an aspect of the present invention.
[FIG. 329]

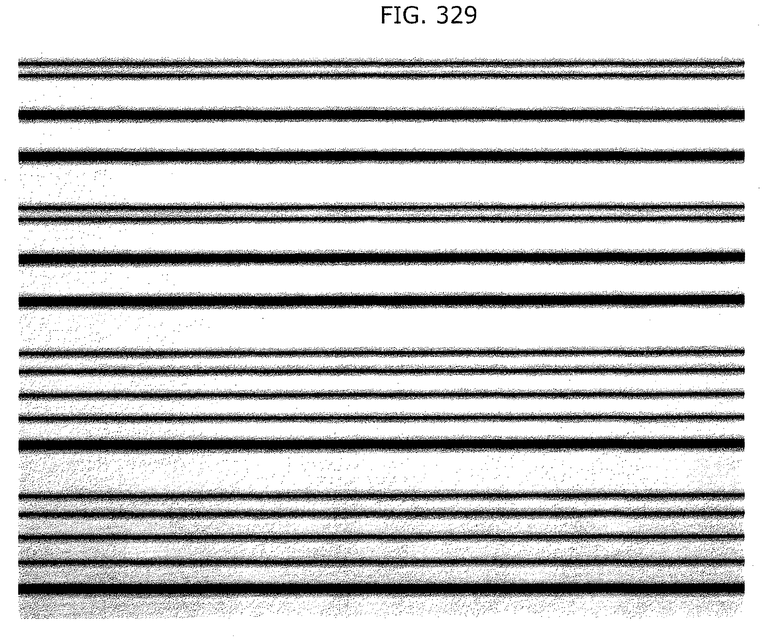

FIG. 329 is a diagram illustrating an example of an image obtained by an information communication method according to an aspect of the present invention.
[FIG. 330A]

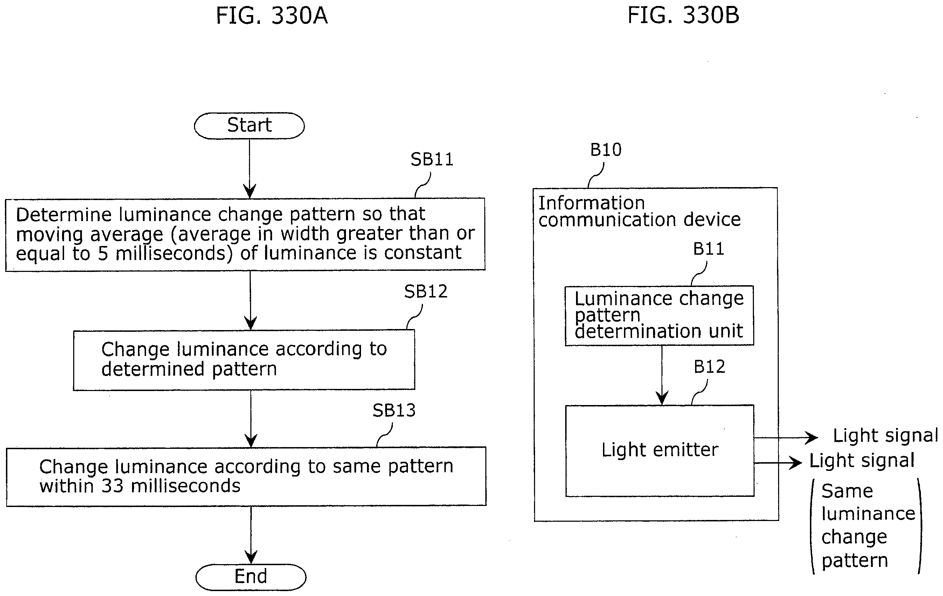

FIG. 330A is a flowchart of an information communication method according to another aspect of the present invention.
[FIG. 330B]
FIG. 330B is a block diagram of an information communication device according to another aspect of the present invention.
[FIG. 331A]

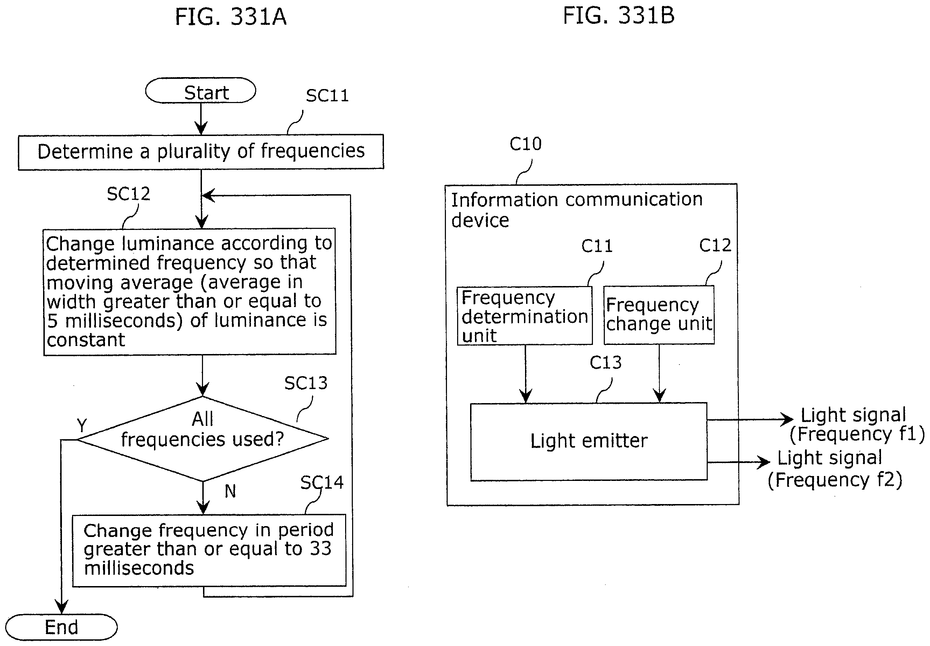

FIG. 331A is a flowchart of an information communication method according to yet another aspect of the present invention.
[FIG. 331B]
FIG. 331B is a block diagram of an information communication device according to yet another aspect of the present invention.

[Description of Embodiments]

An information communication method according to an aspect of the present invention is an information communication method of obtaining information from a subject, the information communication method including: an exposure time setting step of setting an exposure time of an image sensor so that, in an image obtained by capturing the subject by the image sensor, a bright line corresponding to an exposure line included in the image sensor appears according to a change in luminance of the subject; an imaging step of capturing the subject that changes in luminance by the image sensor with the set exposure time, to obtain the image including the bright line; and an information obtainment step of obtaining the information by demodulating data specified by a pattern of the bright line included in the obtained image.

In this way, the information transmitted using the change in luminance of the subject is obtained by the exposure of the exposure line in the image sensor. This enables communication between various devices, with no need for, for example, a special communication device for wireless communication. Note that the exposure line is a column or a row of a plurality of pixels that are simultaneously exposed in the image sensor, and the bright line is a line included in a captured image illustrated, for instance, in FIG. 79 described later.

For example, in the imaging step, a plurality of exposure lines included in the image sensor may be exposed sequentially, each at a different time.

In this way, the bright line generated by capturing the subject in a rolling shutter mode is included in the position corresponding to each exposure line in the image, and therefore a lot of information can be obtained from the subject.

For example, in the information obtainment step, the data specified by a pattern in a direction perpendicular to the exposure line in the pattern of the bright line may be demodulated.

In this way, the information corresponding to the change in luminance can be appropriately obtained.

For example, in the exposure time setting step, the exposure time may be set to less than 10 milliseconds.

In this way, the bright line can be generated in the image more reliably.

For example, in the imaging step, the subject that changes in luminance at a frequency greater than or equal to 200 Hz may be captured.

In this way, a lot of information can be obtained from the subject without humans perceiving flicker, for instance as illustrated in FIGS. 305A and 305B described later.

For example, in the imaging step, the image including the bright line parallel to the exposure line may be obtained.

In this way, the information corresponding to the change in luminance can be appropriately obtained.

For example, in the information obtainment step, for each area in the obtained image corresponding to a different one of exposure lines included in the image sensor, the data indicating 0 or 1 specified according to whether or not the bright line is present in the area may be demodulated.

In this way, a lot of PPM modulated information can be obtained from the subject. For instance as illustrated in FIG. 79 described later, in the case of obtaining information based on whether or not each exposure line receives at least a predetermined amount of light, information can be obtained at a speed of fl bits per second at the maximum where f is the number of images per second (frame rate) and I is the number of exposure lines constituting one image.

For example, in the information obtainment step, whether or not the bright line is present in the area may be determined according to whether or not a luminance value of the area is greater than or equal to a threshold.

In this way, information can be appropriately obtained from the subject.

For example, in the imaging step, for each predetermined period, the subject that changes in luminance at a constant frequency corresponding to the predetermined period may be captured, wherein in the information obtainment step, the data specified by the pattern of the bright line generated, for each predetermined period, according to the change in luminance at the constant frequency corresponding to the predetermined period is demodulated.

In this way, a lot of FM modulated information can be obtained from the subject. For instance as illustrated in FIG. 188 described later, appropriate information can be obtained using a bright line pattern corresponding to a frequency f1 and a bright line pattern corresponding to a frequency f2.

For example, in the imaging step, the subject that changes in luminance to transmit a signal by adjusting a time from one change to a next change in luminance may be captured, the one change and the next change being the same one of a rise and a fall in luminance, wherein in the obtaining, the data specified by the pattern of the bright line is demodulated, the data being a code associated with the time.

In this way, the brightness of the subject (e.g. lighting device) perceived by humans can be adjusted by PWM control without changing the information transmitted from the subject, for instance as illustrated in FIG. 248 described later.

For example, in the imaging step, the subject that changes in luminance so that each average obtained by moving-averaging the changing luminance with a width greater than or equal to 5 milliseconds is within a predetermined range may be captured.

In this way, a lot of information can be obtained from the subject without humans perceiving flicker. For instance as illustrated in FIG. 85 described later, when a modulated signal "0" indicates no light emission and a modulated signal "1" indicates light emission and there is no bias in a transmission signal, each luminance average obtained by moving averaging is about 75% of the luminance at the time of light emission. This can prevent humans from perceiving flicker.

For example, the pattern of the bright line may differ according to the exposure time of the image sensor, wherein in the information obtainment step, the data specified by the pattern corresponding to the set exposure time is demodulated.

In this way, different information can be obtained from the subject according to the exposure time, for instance as illustrated in FIG. 91 described later.

For example, the information communication method may further include detecting a state of an imaging device including the image sensor, wherein in the information obtainment step, the information indicating a position of the subject is obtained, and a position of the imaging device is calculated based on the obtained information and the detected state.

In this way, the position of the imaging device can be accurately specified even in the case where GPS or the like is unavailable or more accurately specified than in the case where GPS or the like is used, for instance as illustrated in FIG. 185 described later.

For example, in the imaging step, the subject that includes a plurality of areas arranged along the exposure line and changes in luminance for each area may be captured.

In this way, a lot of information can be obtained from the subject, for instance as illustrated in FIG. 258 described later.

For example, in the imaging step, the subject that emits a plurality of types of metameric light each at a different time may be captured.

In this way, a lot of information can be obtained from the subject without humans perceiving flicker, for instance as illustrated in FIG. 272 described later.

For example, the information communication method may further include estimating a location where an imaging device including the image sensor is present, wherein in the information obtainment step, identification information of the subject is obtained as the information, and related information associated with the location and the identification information is obtained from a server.

In this way, even in the case where the same identification information is transmitted from a plurality of lighting devices using a luminance change, appropriate related information can be obtained according to the location (building) in which the imaging device is present, i.e. the location (building) in which the lighting device is present, for instance as illustrated in FIGS. 282 and 283 described later.

An information communication method according to an aspect of the present invention is an information communication method of transmitting a signal using a change in luminance, the information communication method including: a determination step of determining a pattern of the change in luminance by modulating the signal to be transmitted; a first transmission step of transmitting the signal by a light emitter changing in luminance according to the determined pattern; and a second transmission step of transmitting the same signal as the signal by the light emitter changing in luminance according to the same pattern as the determined pattern within 33 milliseconds from the transmission of the signal, wherein in the determination step, the pattern is determined so that each average obtained by moving-averaging the changing luminance with a width greater than or equal to 5 milliseconds is within a predetermined range.

In this way, the pattern of the change in luminance is determined so that each average obtained by moving-averaging the changing luminance with a width greater than or equal to 5 milliseconds is within a predetermined range. As a result, the signal can be transmitted using the change in luminance without humans perceiving flicker. Moreover, for instance as illustrated in FIG. 301B described later, the same signal is transmitted within 33 milliseconds, ensuring that, even when the receiver receiving the signal has blanking, the signal is transmitted to the receiver.

For example, in the determination step, the signal may be modulated by a scheme of modulating a signal expressed by 2 bits to a signal expressed by 4 bits made up of 3 bits each indicating a same value and 1 bit indicating a value other than the same value.

In this way, for instance as illustrated in FIG. 85 described later, when a modulated signal "0" indicates no light emission and a modulated signal "1" indicates light emission and there is no bias in a transmission signal, each luminance average obtained by moving averaging is about 75% of the luminance at the time of light emission. This can more reliably prevent humans from perceiving flicker.

For example, in the determination step, the pattern of the change in luminance may be determined by adjusting a time from one change to a next change in luminance according to the signal, the one change and the next change being the same one of a rise and a fall in luminance.

In this way, the brightness of the light emitter (e.g. lighting device) perceived by humans can be adjusted by PWM control without changing the transmission signal, for instance as illustrated in FIG. 248 described later.

For example, in the first transmission step and the second transmission step, the light emitter may change in luminance so that a signal different according to an exposure time of an image sensor that captures the light emitter changing in luminance is obtained by an imaging device including the image sensor.

In this way, different signals can be transmitted to the imaging device according to the exposure time, for instance as illustrated in FIG. 91 described later.

For example, in the first transmission step and the second transmission step, a plurality of light emitters may change in luminance synchronously to transmit common information, wherein after the transmission of the common information, each light emitter changes in luminance individually to transmit information different depending on the light emitter.

In this way, for instance as illustrated in FIG. 98 described later, when the plurality of light emitters simultaneously transmit the common information, the plurality of light emitters can be regarded as one large light emitter. Such a light emitter is captured in a large size by the imaging device receiving the common information, so that information can be transmitted faster from a longer distance. Moreover, for instance as illustrated in FIG. 186 described later, by the plurality of light emitters transmitting the common information, it is possible to reduce the amount of individual information transmitted from each light emitter.

For example, the information communication method may further include an instruction reception step of receiving an instruction of whether or not to modulate the signal, wherein the determination step, the first transmission step, and the second transmission step are performed in the case where an instruction to modulate the signal is received, and the light emitter emits light or stops emitting light without the determination step, the first transmission step, and the second transmission step being performed in the case where an instruction not to modulate the signal is received.

In this way, whether or not to perform modulation is switched, with it being possible to reduce the noise effect on luminance changes of other light emitters, for instance as illustrated in FIG. 186 described later.

For example, the light emitter may include a plurality of areas arranged along an exposure line of an image sensor that captures the light emitter, wherein in the first transmission step and the second transmission step, the light emitter changes in luminance for each area.

In this way, a lot of information can be transmitted, for instance as illustrated in FIG. 258 described later.

For example, in the first transmission step and the second transmission step, the light emitter may change in luminance by emitting a plurality of types of metameric light each at a different time.

In this way, a lot of information can be transmitted without humans perceiving flicker, for instance as illustrated in FIG. 272 described later.

For example, in the first transmission step and the second transmission step, identification information of the light emitter may be transmitted as the signal or the same signal.

In this way, the identification information of the light emitter is transmitted, for instance as illustrated in FIG. 282 described later. The imaging device receiving the identification information can obtain more information associated with the identification information from a server or the like via a communication line such as the Internet.

An information communication method according to an aspect of the present invention is an information communication method of transmitting a signal using a change in luminance, the information communication method including: a determination step of determining a plurality of frequencies by modulating the signal to be transmitted; a transmission step of transmitting the signal by a light emitter changing in luminance according to a constant frequency out of the determined plurality of frequencies; and a change step of changing the frequency used for the change in luminance to an other one of the determined plurality of frequencies in sequence, in a period greater than or equal to 33 milliseconds, wherein in the transmission step, the light emitter changes in luminance so that each average obtained by moving-averaging the changing luminance with a width greater than or equal to 5 milliseconds is within a predetermined range.

In this way, the pattern of the change in luminance is determined so that each average obtained by moving-averaging the changing luminance with a width greater than or equal to 5 milliseconds is within a predetermined range. As a result, the signal can be transmitted using the change in luminance without humans perceiving flicker. Moreover, a lot of FM modulated signals can be transmitted. For instance as illustrated in FIG. 188 described later, appropriate information can be transmitted by changing the luminance change frequency (f1, f2, etc.) in a period greater than or equal to 33 milliseconds.

These general and specific aspects may be implemented using a system, a method, an integrated circuit, a computer program, or a computer-readable recording medium such as a CD-ROM, or any combination of systems, methods, integrated circuits, computer programs, or computer-readable recording media.

Hereinafter, embodiments are specifically described with reference to the Drawings.

Each of the embodiments described below shows a general or specific example. The numerical values, shapes, materials, structural elements, the arrangement and connection of the structural elements, steps, the processing order of the steps etc. shown in the following embodiments are mere examples, and therefore do not limit the scope of the Claims. Therefore, among the structural elements in the following embodiments, structural elements not recited in any one of the independent claims are described as arbitrary structural elements. Embodiments 1 to 6, 8, 9 and 11 to 13 do not form part of the invention but are useful for understanding the present invention.


(Embodiment 1)

The following is a description of the flow of processing of communication performed using a camera of a smartphone by transmitting information using a blink pattern of an LED included in a device.

FIG. 1 is a diagram illustrating an example of the environment in a house in the present embodiment. In the environment illustrated in FIG. 1, there are a television 1101, a microwave 1106, and an air cleaner 1107, in addition to a smartphone 1105, for instance, around a user.

FIG. 2 is a diagram illustrating an example of communication between the smartphone and the home electric appliances according to the present embodiment. FIG. 2 illustrates an example of information communication, and is a diagram illustrating a configuration in which information output by devices such as the television 1101 and the microwave 1106 in FIG. 1 is obtained by a smartphone 1201 owned by a user, thereby obtaining information. As illustrated in FIG. 2, the devices transmit information using LED blink patterns, and the smartphone 1201 receives the information using an image pickup function of a camera, for instance.

FIG. 3 is a diagram illustrating an example of a configuration of a transmitter device 1301 according to the present embodiment.

The transmitter device 1301 transmits information using light blink patterns by pressing a button by a user, transmitting a transmission instruction using, for instance, near field communication (NFC), and detecting a change in a state such as failure inside the device. At this time, transmission is repeated for a certain period of time. A simplified identification (ID) may be used for transmitting information to a device which is registered previously. In addition, if a device has a wireless communication unit which uses a wireless LAN and specific power-saving wireless communication, authentication information necessary for connection thereof can also be transmitted using blink patterns.

In addition, a transmission speed determination unit 1309 ascertains the performance of a clock generation device inside a device, thereby performing processing of decreasing the transmission speed if the clock generation device is inexpensive and does not operate accurately and increasing the transmission speed if the clock generation device operates accurately. Alternatively, if a clock generation device exhibits poor performance, it is also possible to reduce an error due to the accumulation of differences of blink intervals because of a long-term communication, by dividing information to be transmitted itself into short pieces.

FIG. 4 illustrates an example of a configuration of a receiver device 1401 according to the present embodiment.

The receiver device 1401 determines an area where light blink is observed, from a frame image obtained by an image obtaining unit 1404. At this time, for the blink, it is also possible to take a method of tracking an area where an increase or a decrease in brightness by a certain amount is observed.

A blink information obtaining unit 1406 obtains transmitted information from a blink pattern, and if the information includes information related to a device such as a device ID, an inquiry is made as to information on a related server on a cloud computing system using the information, or interpolation is performed using information stored previously in a device in a wireless-communication area or information stored in the receiver apparatus. This achieves advantageous effect of reducing a time for correcting error due to noise when capturing a light emission pattern or for a user to hold up a smartphone to the light-emitting part of the transmitter device to obtain information already acquired.

The following is a description of FIG. 5.

FIG. 5 is a diagram illustrating a flow of processing of transmitting information to a receiver device such as a smartphone by blinking an LED of a transmitter device according to the present embodiment. Here, a state is assumed in which a transmitter device has a function of communicating with a smartphone by NFC, and information is transmitted with a light emission pattern of the LED embedded in part of a communication mark for NFC which the transmitter device has.

First, in step 1001a, a user purchases a home electric appliance, and connects the appliance to power supply for the first time, thereby causing the appliance to be in an energized state.

Next, in step 1001b, it is checked whether initial setting information has been written. In the case of Yes, the processing proceeds to C in FIG. 5. In the case of No, the processing proceeds to step 1001c, where the mark blinks at a blink speed (for example: 1 to 2/5) which the user can easily recognize.

Next, in step 1001d, the user checks whether device information of the home electric appliance is obtained by bringing the smartphone to touch the mark via NFC communication. Here, in the case of Yes, the processing proceeds to step 1001e, where the smartphone receives device information to a server of the cloud computing system, and registers the device information at the cloud computing system. Next, in step 1001f, a simplified ID associated with an account of the user of the smartphone is received from the cloud computing system and transmitted to the home electric appliance, and the processing proceeds to step 1001g. It should be noted that in the case of No in step 1001d, the processing proceeds to step 1001g.

Next, in step 1001g, it is checked whether there is registration via NFC. In the case of Yes, the processing proceeds to step 1001j, where two blue blinks are made, and thereafter the blinking stops in step 1001k.

In the case of No in step 1001g, the processing proceeds to step 1001h. Next, it is checked in step 1001h whether 30 seconds have elapsed. Here, in the case of Yes, the processing proceeds to step 1001i, where an LED portion outputs device information (a model number of the device, whether registration processing has been performed via NFC, an ID unique to the device) by blinking light, and the processing proceeds B in FIG. 6.

It should be noted that in the case of No in step 1001h, the processing returns to step 1001d.

Next, a description is given of, using FIGS. 6 to 9, a flow of processing of transmitting information to a receiver device by blinking an LED of a transmitter device according to the present embodiment. Here, FIGS. 6 to 9 are diagrams illustrating a flow of processing of transmitting information to a receiver device by blinking an LED of a transmitter apparatus.

The following is a description of FIG. 6.

First, the user activates an application for obtaining light blink information of the smartphone in step 1002a.

Next, the image obtaining portion obtains blinks of light in step 1002b. Then, a blinking area determination unit determines a blinking area from a time series change of an image.

Next, in step 1002c, a blink information obtaining unit determines a blink pattern of the blinking area, and waits for detection of a preamble.

Next, in step 1002d, if a preamble is successfully detected, information on the blinking area is obtained.

Next, in step 1002e, if information on a device ID is successfully obtained, also in a reception continuing state, information is transmitted to a server of the cloud computing system, an information interpolation unit performs interpolation while comparing information acquired from the cloud computing system to information obtained by the blink information obtaining unit.

Next, in step 1002f, when all the information including information as a result of the interpolation is obtained, the smartphone or the user is notified thereof. At this time, a GUI and a related site acquired from the cloud computing system are displayed, thereby allowing the notification to include more information and be readily understood, and the processing proceeds to D in FIG. 7

The following is a description of FIG. 7.

First, in step 1003a, an information transmission mode is started when a home electric appliance creates a message indicating failure, a usage count to be notified to the user, and a room temperature, for instance.

Next, the mark is caused to blink per 1 to 2 seconds in step 1003b. Simultaneously, the LED also starts transmitting information.

Next, in step 1003c, it is checked whether communication via NFC has been started. It should be noted that in the case of No, the processing proceeds to G in FIG. 9. In the case of Yes, the processing proceeds to step 1003d, where blinking the LED is stopped.

Next, the smartphone accesses the server of the cloud computing system and displays related information in step 1003e.

Next, in step 1003f, in the case of failure which needs to be handled at the actual location, a serviceman who gives support is looked for by the server. Information on the home electric appliance, a setting position, and the location are utilized.

Next, in step 1003g, the serviceman sets the mode of the device to a support mode by pressing buttons of the home electric appliance in the predetermined order.

Next, in step 1003h, if blinks of a marker for an LED of a home electric appliance other than the home electric appliance of interest can be seen from the smartphone, some of or all such LEDs observed simultaneously blink so as to interpolate information, and the processing proceeds to E in FIG. 8.

The following is a description of FIG. 8.

First, in step 1004a, the serviceman presses a setting button of his/her receiving terminal if the performance of the terminal allows detection of blinking at a high speed (for example, 1000 times/second).

Next, in step 1004b, the LED of the home electric appliance blinks in a high speed mode, and the processing proceeds to F.

The following is a description of FIG. 9.

First, the blinking is continued in step 1005a.

Next, in step 1005b, the user obtains, using the smartphone, blink information of the LED.

Next, the user activates an application for obtaining light blinking information of the smartphone in step 1005c.

Next, the image obtaining portion obtains the blinking of light in step 1005d. Then, the blinking area determination unit determines a blinking area, from a time series change in an image.

Next, in step 1005e, the blink information obtaining unit determines a blink pattern of the blinking area, and waits for detection of a preamble.

Next, in step 1005f, if a preamble is successfully detected, information on the blinking area is obtained.

Next, in step 1005g, if information on a device ID is successfully obtained, also in a reception continuing state, information is transmitted to the server of the cloud computing system, and the information interpolation unit performs interpolation while comparing information acquired from the cloud computing system with information obtained by the blink information obtaining unit.

Next, in step 1005h, if all the information pieces including information as a result of the interpolation are obtained, the smartphone or the user is notified thereof. At this time, a GUI and a related site acquired from the cloud computing system are displayed, thereby allowing the notification to be include more information and easier to understand.

Then, the processing proceeds to step 1003f in FIG. 7.

In this manner, a transmission device such as a home electric appliance can transmit information to a smartphone by blinking an LED. Even a device which does not have means of communication such as wireless communication function or NFC can transmit information, and provide a user with information having a lot of details which is in the server of the cloud computing system via a smartphone.

Moreover, as described in this embodiment, consider a situation where two devices including at least one mobile device are capable of transmitting and receiving data by both communication methods of bidirectional communication (e.g. communication by NFC) and unidirectional communication (e.g. communication by LED luminance change). In the case where data transmission and reception by bidirectional communication are established when data is being transmitted from one device to the other device by unidirectional communication, unidirectional communication can be stopped. This benefits efficiency because power consumption necessary for unidirectional communication is saved.

As described above, according to Embodiment 1, an information communication device can be achieved which allows communication between various devices including a device which exhibits low computational performance.

Specifically, an information communication device according to the present embodiment includes: an information management unit configured to manage device information which includes an ID unique to the information communication device and state information of a device; a light emitting element; and a light transmission unit configured to transmit information using a blink pattern of the light emitting element, wherein when an internal state of the device has changed, the light transmission unit is configured to convert the device information into the blink pattern of the light emitting element, and transmit the converted device information.

Here, for example, the device may further include an activation history management unit configured to store information sensed in the device including an activation state of the device and a user usage history, wherein the light transmission unit is configured to obtain previously registered performance information of a clock generation device to be utilized, and change a transmission speed.

In addition, for example, the light transmission unit may include a second light emitting element disposed in vicinity of a first light emitting element for transmitting information by blinking, and when information transmission is repeatedly performed a certain number of times by the first light emitting element blinking, the second light emitting element may emit light during an interval between an end of the information transmission and a start of the information transmission.

It should be noted that these general and specific embodiments may be implemented using a system, a method, an integrated circuit, a computer program, or a recording medium, or any combination of systems, methods, integrated circuits, computer programs, or recording media.

(Embodiment 2)

In the present embodiment, a description is given, using a cleaner as an example, of the procedure of communication between a device and a user using visible light communication, initial settings to a repair service at the time of failure using visible light communication, and service cooperation using the cleaner.

FIGS. 10 and 11 are diagrams for describing the procedure of performing communication between a user and a device using visible light according to the present embodiment.

The following is a description of FIG. 10.

First, the processing starts from A.

Next, the user turns on a device in step 2001a.

Next, in step 2001b, as start processing, it is checked whether initial settings such as installation setting and network (NW) setting have been made.

Here, if initial settings have been made, the processing proceeds to step 2001f, where normal operation starts, and the processing ends as illustrated by C.

If initial settings have not been made, the processing proceeds to step 2001c, where "LED normal light emission" and an "audible tone" notify the user that initial settings need to be made.

Next, in step 2001d, device information (product number and serial number) is collected, and visible light communication is prepared.

Next, in step 2001e, "LED communication light emission", "icon display on the display", "audible tone", and "light emission by plural LEDs" notify the user that device information (product number and serial number) can be transmitted by visible light communication.

Then, the processing ends as illustrated by B.

Next is a description of FIG. 11.

First, the processing starts as illustrated by B.

Next, in step 2002a, the approach of a visible light receiving terminal is perceived by a "proximity sensor", an "illuminance sensor", and a "human sensing sensor".

Next, in step 2002b, visible light communication is started by the perception thereof which is a trigger.

Next, in step 2002c, the user obtains device information using the visible light receiving terminal.

Next, the processing ends as illustrated by D. Alternatively, the processing proceeds to one of steps 2002f to 2002i.

If the processing proceeds to step 2002f, it is perceived, by a "sensitivity sensor" and "cooperation with a light control device," that the light of a room is switched off, and light emission for device information is stopped. The processing ends as illustrated by E. If the processing proceeds to step 2002g, the visible light receiving terminal notifies, by "NFC communication" and "NW communication", that device information has been perceived and obtained, and the processing ends. If the processing proceeds to step 2002h, it is perceived that the visible light receiving terminal has moved away, light emission for device information is stopped, and the processing ends. If the processing proceeds to step 2002i, after a certain time period elapses, light emission for device information is stopped, and the processing ends.

It should be noted that if the approach is not perceived in step 2002a, the processing proceeds to step 2002d, where after a certain period of time elapses, the level of notification indicating that visible light communication is possible is increased by "brightening", "increasing sound volume", and "moving an icon", for instance. Here, the processing returns to step 2002d. Alternatively, the processing proceeds to step 2002e, and proceeds to step 2002i after another certain period of time elapses.

FIG. 12 is a diagram for describing a procedure from when the user purchases a device until when the user makes initial settings of the device according to the present embodiment.

In FIG. 12, first, the processing starts as illustrated by D.

Next, in step 2003a, position information of a smartphone which has received device information is obtained using the global positioning system (GPS).

Next, in step 2003b, if the smartphone has user information such as a user name, a telephone number, and an e-mail address, such user information is collected in the terminal. Alternatively, in step 2003c, if the smartphone does not have user information, user information is collected from a device in the vicinity via NW.

Next, in step 2003d, device information, user information, and position information are transmitted to the cloud server.

Next, in step 2003e, using the device information and the position information, information necessary for initial settings and activation information are collected.

Next, in step 2003f, cooperation information such as an Internet protocol (IP), an authentication method, and available service necessary for setting cooperation with a device whose user has been registered is collected. Alternatively, in step 2003g, device information and setting information are transmitted to a device whose user has been registered via NW to make cooperation setting with devices in the vicinity thereof.

Next, user setting is made in step 2003h using device information and user information.

Next, initial setting information, activity information, and cooperation setting information are transmitted to the smartphone in step 2003i.

Next, the initial setting information, the activation information, and the cooperation setting information are transmitted to home electric appliance by NFC in step 2003j.

Next, device setting is made using the initial setting information, the activation information, and the cooperation setting information in step 2003k.

Then, the processing ends as illustrated by F.

FIG. 13 is a diagram for describing service exclusively performed by a serviceman when a device fails according to the present embodiment.

In FIG. 13, first, the processing starts as illustrated by C.

Next, in step 2004a, history information such as operation log and user operation log generated during a normal operation of the device is stored into a local storage medium.

Next, in step 2004b, at the same time with the occurrence of a failure, error information such as an error code and details of the error is recorded, and LED abnormal light emission notifies that visible light communication is possible.

Next, in step 2004c, the mode is changed to a high-speed LED light emission mode by the serviceman executing a special command, thereby starting high-speed visible light communication.

Next, in step 2004d, it is identified whether a terminal which has approached is an ordinary smartphone or a receiving terminal exclusively used by the serviceman. Here, if the processing proceeds to step 2004e, error information is obtained in the case of a smartphone, and the processing ends.

On the other hand, if the processing proceeds to step 2004f, the receiving terminal for exclusive use obtains error information and history information in the case of a serviceman.

Next, in step 2004g, device information, error information, and history information are transmitted to the cloud computing system, and a repair method is obtained. Here, if the processing proceeds to step 2004h, the high-speed LED light emission mode is canceled by the serviceman executing a special command, and the processing ends.

On the other hand, if the processing proceeds to step 2004i, product information on products related and similar to the product in the device information, selling prices at nearby stores, and new product information are obtained from the cloud server.

Next, in step 2004j, user information is obtained via visible light communication between the user's smartphone and the terminal exclusively used by the serviceman, and an order for a product is made to a nearby store via the cloud server.

Then, the processing ends as illustrated by I.

FIG. 14 is a diagram for describing service for checking a cleaning state using a cleaner and visible light communication according to the present embodiment.

First, the processing starts as illustrated by C.

Next, cleaning information of a device performing normal operation is recorded in step 2005a.

Next, in step 2005b, dirt information is created in combination with room arrangement information, and encrypted and compressed.

Here, if the processing proceeds to step 2005c, the dirt information is stored in a local storage medium, which is triggered by compression of the dirt information. Alternatively, if the processing proceeds to step 2005d, dirt information is transmitted to a lighting device by visible light communication, which is triggered by a temporary stop of cleaning (stoppage of suction processing). Alternatively, if the processing proceeds to step 2005e, the dirt information is transmitted to a domestic local server and the cloud server via NW, which is triggered by recording dirt information.

Next, in step 2005f, device information, a storage location, and a decryption key are transmitted to the smartphone by visible light communication, which is triggered by the transmission and storage of the dirt information.

Next, in step 2005g, the dirt information is obtained via NW and NFC, and decoded.

Then, the processing ends as illustrated by J.

As described above, according to Embodiment 1, a visible light communication system can be achieved which includes an information communication device allowing communication between various devices including a device which exhibits low computational performance.

Specifically, the visible light communication system (FIG. 10) including the information communication device according to the present embodiment includes a visible light transmission permissibility determination unit for determining whether preparation for visible light transmission is completed, and a visible light transmission notification unit which notifies a user that visible light transmission is being performed, wherein when visible light communication is possible, the user is notified visually and auditorily. Accordingly, the user is notified of a state where visible light reception is possible by an LED light emission mode, such as "emitted light color", "sound", "icon display", or "light emission by a plurality of LEDs", thereby improving user's convenience.

Preferably, the visible light communication system may include, as described using FIG. 11, a terminal approach sensing unit which senses the approach of a visible light receiving terminal, and a visible light transmission determination unit which determines whether visible light transmission is started or stopped, based on the position of a visible light receiving terminal, and may start visible light transmission, which is triggered by the terminal approaching sensing unit sensing the approach of the visible light receiving terminal.

Here, as described using FIG. 11, for example, the visible light communication system may stop visible light transmission, which is triggered by the terminal approaching sensing unit sensing that the visible light receiving terminal has moved away. In addition, as described using FIG. 11, for example, the visible light communication system may include a surrounding illuminance sensing unit which senses that a light of a room is turned off, and may stop visible light transmission, which is triggered by the surrounding illuminance sensing unit sensing that the light of the room is turned off. By sensing that a visible light receiving terminal approaches and moves away and a light of a room is turned off, visible light communication is started only in a state in which visible light communication is possible. Thus, unnecessary visible light communication is not performed, thereby saving energy.

Furthermore, as described using FIG. 11, for example, the visible light communication system may include: a visible light communication time monitoring unit which measures a time period during which visible light transmission is performed; and a visible light transmission notification unit which notifies a user that visible light transmission is being performed, and may further increase the level of visual and auditory notification to a user, which is triggered by no visible light receiving terminal approaching even though visible light communication is performed more than a certain time period. In addition, as described using FIG. 11, for example, the visible light communication system may stop visible light transmission, which is triggered by no visible light receiving terminal approaching even though visible light communication is performed more than a certain time period after the visible light transmission notification unit increases the level of notification.

Accordingly, if reception by a user is not performed after a visible light transmission time elapses which is greater than or equal to a certain time period, a request to a user to perform visible light reception and to stop visible light transmission is made to avoid not performing visible light reception and not stopping visible light transmission, thereby improving a user's convenience.

The visible light communication system (FIG. 12) including the information communication device according to the present embodiment may include: a visible light reception determination unit which determines that visible light communication has been received; a receiving terminal position obtaining unit for obtaining a position of a terminal; and a device-setting-information collecting unit which obtains device information and position information to collect device setting information, and may obtain a position of a receiving terminal, which is triggered by the reception of visible light, and collect information necessary for device setting. Accordingly, position information and user information necessary for device setting and user registration are automatically collected and set, which is triggered by device information being obtained via visible light communication, thereby improving convenience by skipping the input and registration procedure by a user.

Here, as described using FIG. 14, the visible light communication system may further include: a device information management unit which manages device information; a device relationship management unit which manages the similarity between devices; a store information management unit which manages information on a store which sells a device; and a nearby store search unit which searches for a nearby store, based on position information, and may search for a nearby store which sells a similar device and obtain a price thereof, which is triggered by receiving device information and position information. This saves time and effort for collecting information on a selling state of a related device and stores selling such a device according to device information, and searching for a device, thereby improving user convenience.

In addition, the visible light communication system (FIG. 12) which includes the information communication device according to the present embodiment may include: a user information monitoring unit which monitors user information being stored in a terminal; a user information collecting unit which collects user information from devices in the vicinity through NW; and a user registration processing unit which obtains user information and device information to register a user, and may collect user information from accessible devices in the vicinity, which is triggered by no user information being obtained, and register a user together with device information. Accordingly, position information and user information necessary for device setting and user registration are automatically collected and set, which is triggered by device information being obtained by visible light communication, thereby improving convenience by skipping the input and a registration procedure by a user.

In addition, the visible light communication system (FIG. 13) including the information communication device according to the present embodiment may include: a command determination unit which accepts a special command; and a visible light communication speed adjustment unit which controls the frequency of visible light communication and cooperation of a plurality of LEDs, and may adjust the frequency of visible light communication and the number of transmission LEDs by accepting a special command, thereby accelerating visible light communication. Here, for example, as described using FIG. 14, the visible light communication system may include: a terminal type determination unit which identifies the type of an approaching terminal by NFC communication; and a transmission information type determination unit which distinguishes information to be transmitted according to a terminal type, and may change the amount of information to be transmitted and the visible light communication speed according to the terminal which approaches. Thus, according to a receiving terminal, the frequency of visible light communication and the number of transmission LEDs are adjusted to change the speed of the visible light communication and information to be transmitted, thereby allowing high speed communication and improving user's convenience.

In addition, the visible light communication system (FIG. 14) which includes the information communication device according to the present embodiment may include: a cleaning information recording unit which records cleaning information; a room arrangement information recording unit which records room arrangement information; an information combining unit which creates dirty portion information by superimposing the room arrangement information and the cleaning information; and an operation monitoring unit which monitors the stop of normal operation, and may transmit the dirty portion information, using visible light, which is triggered by the perception of the stop of a device.

It should be noted that these general and specific embodiments may be implemented using a system, a method, an integrated circuit, a computer program, or a recording medium, or any combination of systems, methods, integrated circuits, computer programs, or recording media.

(Embodiment 3)

In the present embodiment, cooperation of devices and Web information using optical communication are described, using a home delivery service as an example.

The outline of the present embodiment is illustrated in FIG. 15. Specifically, FIG. 15 is a schematic diagram of home delivery service support using optical communication according to the present embodiment.

Specifically, an orderer orders a product from a product purchase site using a mobile terminal 3001a. When the order is completed, an order number is issued from the product purchase site. The mobile terminal 3001a which has received the order number transmits the order number to an intercom indoor unit 3001b, using NFC communication.

The intercom indoor unit 3001b, for example, displays the order number received from the mobile terminal 3001a on the monitor of the unit itself, thereby showing to the user that the transmission has been completed.

The intercom indoor unit 3001b transmits, to an intercom outdoor unit 3001c, blink instructions and blink patterns for an LED included in the intercom outdoor unit 3001c. The blink patterns are created by the intercom indoor unit 3001b according to the order number received from the mobile terminal 3001a.

The intercom outdoor unit 3001c blinks the LED according to the blink patterns designated by the intercom indoor unit 3001b.

Instead of a mobile terminal, an environment may be used which is accessible to a product purchase site in WWW 3001d, such as a personal computer (PC).

A home network may be used as means for transmission from the mobile terminal 3001a to the intercom indoor unit 3001b, in addition to NFC communication.

The mobile terminal 3001a may transmit the order number to the intercom outdoor unit 3001c directly, not via the intercom indoor unit 3001b.

If there is an order from an orderer, an order number is transmitted from a delivery order receiving server 3001e to a deliverer mobile terminal 3001f. When the deliverer arrives at a delivery place, the deliverer mobile terminal 3001f and the intercom outdoor unit 3001c bidirectionally perform optical communication using the LED blink patterns created based on the order number.

Next, a description is given using FIGS. 16 to 21. FIGS. 16 to 21 are flowcharts for describing home delivery service support using optical communication according to Embodiment 3 of the present invention.

FIG. 16 illustrates a flow from when an orderer places an order until when an order number is issued. The following is a description of FIG. 16.

In step 3002a, the orderer mobile terminal 3001a reserves delivery using the web browser or an application of the smartphone. Then, the processing proceeds to A in FIG. 17.

In step 3002b subsequent to B in FIG. 17, the orderer mobile terminal 3001a waits for the order number to be transmitted. Next, in step 3002c, the orderer mobile terminal 3001a checks whether the terminal has been brought to touch an order number transmission destination device. In the case of Yes, the processing proceeds to step 3002d, where the order number is transmitted by touching the intercom indoor unit via NFC (if the intercom and the smartphone are in the same network, a method for transmitting the number via the network may also be used). On the other hand, in the case of No, the processing returns to step 3002b.

First, the intercom indoor unit 3001b waits for an LED blink request from another terminal in step 3002e. Next, the order number is received from the smartphone in step 3002f. Next, the intercom indoor unit 3001b gives an instruction to blink an LED of the intercom outdoor unit according to the received order number, in step 3002g. Then, the processing proceeds to C in FIG. 19.

First, the intercom outdoor unit 3001c waits for the LED blink instruction from the intercom indoor unit in step 3002h. Then, the processing proceeds to G in FIG. 19.

In step 3002i, the deliverer mobile terminal 3001f waits for an order notification. Next, the deliverer mobile terminal 3001f checks whether the order notification has been given from the delivery order server. Here, in the case of No, the processing returns to step 3002i. In the case of Yes, the processing proceeds to step 3002k, where the deliverer mobile terminal 3001f receives information on an order number, a delivery address, and the like. Next, in step 3002n, the deliverer mobile terminal 3001f waits until its camera is activated to recognize an LED light emission instruction for the order number received by the user and LED light emission from another device. Then, the processing proceeds to E in FIG. 18.

FIG. 17 illustrates the flow until an orderer makes a delivery order using the orderer mobile terminal 3001a. The following is a description of FIG. 17.

First, a delivery order server 3001e waits for an order number in step 3003a. Next, in step 3003b, the delivery order server 3001e checks whether a delivery order has been received. Here, in the case of No, the processing returns to step 3003a. In the case of Yes, the processing proceeds to step 3003c, where an order number is issued to the received delivery order. Next, in step 3003d, the delivery order server 3001e notifies a deliverer that the delivery order has been received, and the processing ends.

In step 3003e subsequent to A in FIG. 16, the orderer mobile terminal 3001a selects what to order from the menu presented by the delivery order server. Next, in step 3003f, the orderer mobile terminal 3001a sets the order, and transmits the order to the delivery server. Next, the orderer mobile terminal 3001a checks in step 3003g whether the order number has been received. Here, in the case of No, the processing returns to step 3003f. In the case of Yes, the processing proceeds to step 3003h, where the orderer mobile terminal 3001a displays the received order number, and prompts the user to touch the intercom indoor unit. Then, the processing proceeds to B in FIG. 16.

FIG. 18 illustrates the flow of the deliverer performing optical communication with the intercom outdoor unit 3001c at a delivery destination, using the deliverer mobile terminal 3001f. The following is a description of FIG. 18.

In step 3004a subsequent to E in FIG. 16, the deliverer mobile terminal 3001f checks whether to activate a camera in order to recognize an LED of the intercom outdoor unit 3001c at the delivery destination. Here, in the case of No, the processing returns E in FIG. 16.

On the other hand, in the case of Yes, the processing proceeds to step 3004b, where the blinks of the LED of the intercom outdoor unit at the delivery destination are identified using the camera of the deliverer mobile terminal.

Next, in step 3004c, the deliverer mobile terminal 3001f recognizes light emission of the LED of the intercom outdoor unit, and checks it against the order number.

Next, in step 3004d, the deliverer mobile terminal 3001f checks whether the blinks of the LED of the intercom outdoor unit correspond to the order number. Here, in the case of Yes, the processing proceeds to F in FIG. 20.

It should be noted that in the case of No, the deliverer mobile terminal 3001f checks whether the blinks of another LED can be identified using the camera. In the case of Yes, the processing returns to step 3004c, whereas the processing ends in the case of No.

[0207] FIG. 19 illustrates the flow of order number checking between the intercom indoor unit 3001b and the intercom outdoor unit 3001c. The following is a description of FIG. 19.

In step 3005a subsequent to G in FIG. 16, the intercom outdoor unit 3001c checks whether the intercom indoor unit has given an LED blink instruction. In the case of No, the processing returns to G in FIG. 16. In the case of Yes, the processing proceeds to step 3005b, where the intercom outdoor unit 3001 blinks the LED in accordance with the LED blink instruction from the intercom indoor unit. Then, the processing proceeds to H in FIG. 20.

In step 3005c subsequent to I in FIG. 20, the intercom outdoor unit 3001c notifies the intercom indoor unit of the blinks of the LED recognized using the camera of the intercom outdoor unit. Then, the processing proceeds to J in FIG. 21.

In step 3005d subsequent to C in FIG. 16, the intercom indoor unit 3001c gives an instruction to the intercom outdoor unit to blink the LED according to the order number. Next, in step 3005e, the intercom indoor unit 3001b waits until the camera of the intercom outdoor unit recognizes the blinks of the LED of the deliverer mobile terminal. Next, in step 3005f, the intercom indoor unit 3001b checks whether the intercom outdoor unit has notified that the blinks of the LED are recognized. Here, in the case of No, the processing returns to step 3005e. In the case of Yes, the intercom indoor unit 3001b checks the blinks of the LED of the intercom outdoor unit against the order number in step 3005g. Next, in step 3005h, the intercom indoor unit 3001b checks whether the blinks of the LED of the intercom outdoor unit correspond to the order number. In the case of Yes, the processing proceeds to K in FIG. 21. On the other hand, in the case of No, the intercom indoor unit 3001b gives an instruction to the intercom outdoor unit to stop blinking the LED in step 3005i, and the processing ends.

FIG. 20 illustrates the flow between the intercom outdoor unit 3001c and the deliverer mobile terminal 3001f after checking against the order number. The following is a description of FIG. 20.

In step 3006a subsequent to F in FIG. 18, the deliverer mobile terminal 3001f starts blinking the LED according to the order number held by the deliverer mobile terminal.

Next, in step 3006b, an LED blinking portion is put in the range from the intercom outdoor unit where the camera can capture an image.

Next, in step 3006c, the deliverer mobile terminal 3001f checks whether the blinks of the LED of the intercom outdoor unit indicate that the blinks of the LED of the deliverer mobile terminal shot by the camera of the intercom outdoor unit correspond to the order number held by the intercom indoor unit.

Here, in the case of No, the processing returns to step 3006b. On the other hand, the processing proceeds to step 3006e in the case of Yes, where the deliverer mobile terminal displays whether the blinks correspond to the order number, and the processing ends.

Furthermore, as illustrated in FIG. 20, the intercom outdoor unit 3001c checks whether the blinks of the LED of the deliverer mobile terminal have been recognized using the camera of the intercom outdoor unit, in step 3006f subsequent to H in FIG. 19. Here, in the case of Yes, the processing proceeds to I in FIG. 19. In the case of No, the processing returns to H in FIG. 19.

FIG. 21 illustrates the flow between the intercom outdoor unit 3001c and the deliverer mobile terminals 3001f after checking against the order number. The following is a description of FIG. 21.

In step 3007a subsequent to K in FIG. 19, the intercom outdoor unit 3001c checks whether a notification has been given regarding whether the blinks of the LED notified from the intercom indoor unit correspond to the order number. Here, in the case of No, the processing returns to K in FIG. 19. On the other hand, in the case of Yes, the processing proceeds to step 3007b, where the intercom outdoor unit blinks the LED to show whether the blinks correspond to the order number, and the processing ends.

Furthermore, as illustrated in FIG. 21, in step 3007c subsequent to J in FIG. 19, the intercom indoor unit 3001b notifies the orderer by the display of the intercom indoor unit showing that the deliverer has arrived, with ring tone output. Next, in step 3007d, the intercom indoor unit gives, to the intercom outdoor unit, an instruction to stop blinking the LED and an instruction to blink the LED to show that the blinks correspond to the order number. Then, the processing ends.

It should be noted that a delivery box for keeping a delivered product is often placed at the entrance, for instance, in the case where an orderer is not at home in an apartment, which is the delivery destination. A deliverer puts a delivery product in the delivery box if the orderer is not at home when the deliverer delivers the product. Using the LED of the deliverer mobile terminal 3001f, optical communication is performed with the camera of the intercom outdoor unit 3001c to transmit the size of the delivery product, whereby the intercom outdoor unit 3001c automatically allows only a delivery box to be used which has a size corresponding to the delivery product.

As described above, according to Embodiment 3, cooperation between a device and web information can be achieved using optical communication.

(Embodiment 4)

The following is a description of Embodiment 4.

(Registration of user and mobile phone in use to server)

FIG. 22 is a diagram for describing processing of registering a user and a mobile phone in use to a server according to the present embodiment. The following is a description of FIG. 22.

First, a user activates an application in step 4001b.

Next, in step 4001c, an inquiry as to information on this user and his/her mobile phone is made to a server.

Next, it is checked in step 4001d whether user information and information on a mobile phone in use are registered in a database (DB) of the server.

In the case of Yes, the processing proceeds to step 4001f, where the analysis of a user voice characteristic (processing a) is started as parallel processing, and the processing proceeds to B in FIG. 24.

On the other hand, in the case of No, the processing proceeds to step 4001e, where a mobile phone ID and a user ID are registered into a mobile phone table of the DB, and the processing proceeds to B in FIG. 24.

(Processing a: Analyzing user voice characteristics)

FIG. 23 is a diagram for describing processing of analyzing user voice characteristics according to the present embodiment. The following is a description of FIG. 23.

First, in step 4002a, sound is collected from a microphone.

Next, in step 4002b, it is checked whether the collected sound is estimated to be the user voice, as a result of sound recognition. Here, in the case of No, the processing returns to step 4002a.

In the case of Yes, the processing proceeds to step 4002c, where it is checked whether what is said is a keyword (such as "next" and "return") used for this application. In the case of Yes, the processing proceeds to step 4002f, where voice data is registered into a user keyword voice table of the server, and the processing proceeds to step 4002d. On the other hand, in the case of No, the processing proceeds to step 4002d.

Next, in step 4002d, voice characteristics (frequency, sound pressure, rate of speech) are analyzed.

Next, in step 4002e, the analysis result is registered into the mobile phone and a user voice characteristic table of the server.

(Preparation for sound recognition processing)

FIG. 24 is a diagram for describing processing of preparing sound recognition processing according to the present embodiment. The following is a description of FIG. 24.

First, in step 4003a subsequent to B in the diagram, operation for displaying a cooking menu list is performed (user operation).

Next, in step 4003b, the cooking menu list is obtained from the server.

Next, in step 4003c, the cooking menu list is displayed on a screen of the mobile phone.

Next, in step 4004d, collecting sound is started using the microphone connected to the mobile phone.

Next, in step 4003e, collecting sound by a sound collecting device in the vicinity thereof is started (processing b) as parallel processing.

Next, in step 4003f, the analysis of environmental sound characteristics is started as parallel processing (processing c).

Next, in step 4003g, cancellation of the sound output from a sound output device which is present in the vicinity is started (processing d) as parallel processing.

Next, in step 4003h, user voice characteristics are obtained from the DB of the server.

Finally, in step 4003i, recognition of user voice is started, and the processing proceeds to C in FIG. 28.

(Processing b: Collecting sound by sound collecting device in vicinity)

FIG. 25 is a diagram for describing processing of collecting sound by a sound collecting device in the vicinity according to the present embodiment. The following is a description of FIG. 25.

First, in step 4004a, a device which can communicate with a mobile phone and collect sound (a sound collecting device) is searched for.

Next, in step 4004b, it is checked whether a sound collecting device has been detected.

Here, in the case of No, the processing ends. In the case of Yes, the processing proceeds to step 4004c, where position information and microphone characteristic information of the sound collecting device are obtained from the server.

Next, in step 4004d, it is checked whether the server has such information.

In the case of Yes, the processing proceeds to step 4004e, where it is checked whether the location of the sound collecting device is sufficiently close to the position of the mobile phone, so that the user voice can be collected.

It should be noted that in the case of No in step 4004e, the processing returns to step 4004a. On the other hand, in the case of Yes in step 4004e, the processing proceeds to step 4004f, where the sound collecting device is caused to start collecting sound. Next, in step 4004g, the sound collected by the sound collecting device is transmitted to the mobile phone until an instruction to terminate sound collecting processing is given. It should be noted that rather than transmitting the collected sound to the mobile phone as it is, the result obtained by sound recognition may be transmitted to the mobile phone. Further, the sound transmitted to the mobile phone is processed similarly to the sound collected from the microphone connected to the mobile phone, and the processing returns to step 4004a.

It should be noted that in the case of No in step 4004d, the processing proceeds to step 4004h, where the sound collecting device is caused to start collecting sound. Next, in step 4004i, a tone is output from the mobile phone. Next, in step 4004j, the voice collected by the sound collecting device is transmitted to the mobile phone. Next, in step 4004k, it is checked whether a tone has been recognized based on the sound transmitted from the sound collecting device. Here, in the case of Yes, the processing proceeds to step 4004g, whereas the processing returns to step 4004a in the case of No.

(Processing c: Analyzing environmental sound characteristics)

FIG. 26 is a diagram for describing processing of analyzing environmental sound characteristics according to the present embodiment. The following is a description of FIG. 26.

First, in step 4005f, the list of devices is obtained which excludes any device whose position is sufficiently far from the position of a microwave, among the devices which this user owns. Data of sounds output by these devices is obtained from the DB.

Next, in step 4005g, the characteristics (frequency, sound pressure, and the like) of the obtained sound data are analyzed, and stored as environmental sound characteristics. It should be noted that particularly the sound output by, for instance, a rice cooker near the microwave tends to be incorrectly recognized, and thus characteristics thereof are stored with high importance being set

Next, sound is collected by a microphone in step 4005a.

Next, it is checked in step 4005b whether the collected sound is user voice, and in the case of Yes, the processing returns to step 4005a. In the case of No, the processing proceeds to step 4005c, where characteristics (frequency, sound pressure) of the collected sound are analyzed.

Next, in step 4005d, environmental sound characteristics are updated based on the analysis result.

Next, in step 4005e, it is checked whether an ending flag is on, and the processing ends in the case of Yes, whereas the processing returns to step 4005a in the case of No.

(Processing d: Cancelling sound from sound output device present in vicinity)

FIG. 27 is a diagram for describing processing of canceling sound from a sound output device which is present in the vicinity according to the present embodiment. The following is a description of FIG. 27.

First, in step 4006a, a device which can communicate and output sound (sound output device) is searched for.

Next, in step 4006b, it is checked whether a sound output device has been detected, and the processing ends in the case of No. In the case of Yes, the processing proceeds to step 4006c, where the sound output device is caused to output tones including various frequencies.

Next, in step 4006d, the mobile phone and the sound collecting device in FIG. 25 (sound collecting devices) collect the sound, thereby collecting the tones output from the sound output device.

Next, it is checked in step 4006e whether a tone has been collected and recognized. The processing ends in the case of No. In the case of Yes, the processing proceeds to step 4006f, where transmission characteristics from the sound output device to each sound collecting device are analyzed (a relationship for each frequency between the output sound volume and the volume of collected sound and the delay time between the output of a tone and collection of the sound).

Next, it is checked in step 4006g whether sound data output from the sound output device is accessible from the mobile phone.

Here, in the case of Yes, the processing proceeds to step 4006h, where until an instruction is given to terminate cancellation processing, an output sound source, an output portion, and the volume are obtained from the sound output device, and the sound output by the sound output device is canceled from the sound collected by the sound collecting devices in consideration of the transmission characteristics. The processing returns to step 4006a. On the other hand, in the case of No, the processing proceeds to step 4006i, where until an instruction is given to terminate cancellation processing, the output sound from the sound output device is obtained, and the sound output by the sound output device is canceled from the sound collected by the sound collecting devices in consideration of the transmission characteristics. The processing returns to step 4006a.

(Selection of what to cook, and setting detailed operation in microwave)

FIG. 28 is a diagram for describing processing of selecting what to cook and setting detailed operation of a microwave according to the present embodiment. The following is a description of FIG. 28.

First, in step 4007a subsequent to C in the diagram, what to cook is selected (user operation).

Next, in step 4007b, recipe parameters (the quantity to cook, how strong the taste is to be, a baking degree, and the like) are set (user operation).

Next, in step 4007c, recipe data and a detailed microwave operation setting command are obtained from the server in accordance with the recipe parameters.

Next, in step 4007d, the user is prompted to bring the mobile phone to touch a noncontact integrated circuit (IC) tag embedded in the microwave.

Next, in step 4007e, it is checked whether the microwave being touched is detected.

Here, in the case of No, the processing returns to step 4007e. In the case of Yes, the processing proceeds to step 4007f, where the microwave setting command obtained from the server is transmitted to the microwave. Accordingly, all the settings for the microwave necessary for this recipe are made, and the user can cook by only pressing an operation start button of the microwave.

Next, in step 4007g, notification sound for the microwave is obtained from the DB of the server, for instance, and set in the microwave (processing e).

Next, in step 4007h, the notification sound of the microwave is adjusted (processing f), and the processing proceeds to D in FIG. 32.

(Processing e: Obtaining notification sound for microwave from DB of server, for instance, and set in microwave)

FIG. 29 is a diagram for describing processing of obtaining notification sound for a microwave from a DB of a server, for instance, and setting the sound in the microwave according to the present embodiment. The following is a description of FIG. 29.

First, in step 4008a, the user brings the mobile phone close to (= to touch) the noncontact IC tag embedded in the microwave.

Next, in step 4008b, an inquiry is made as to whether notification sound data for the mobile phone (data of sound output when the microwave is operating and ends operation) is registered in the microwave.

Next, it is checked in step 4008c whether the notification sound data for the mobile phone is registered in the microwave.

Here, in the case of Yes, the processing ends. In the case of No, the processing proceeds to step 4008d, where it is checked whether the notification sound data for the mobile phone is registered in the mobile phone. In the case of Yes, the processing proceeds to step 4008h, where the notification sound data registered in the mobile phone is registered in the microwave, and the processing ends. In the case of No, the processing proceeds to step 4008e, where the DB of the server, the mobile phone, or the microwave is referred to.

Next, in step 4008f, if notification sound data for the mobile phone (data of notification sound which this mobile phone can easily recognize) is in the DB, that data is obtained from the DB, whereas if such data is not in the DB, notification sound data for typical mobile phones (data of typical notification sound which mobile phones can easily recognize) is obtained from the DB.

Next, in step 4008g, the obtained notification sound data is registered in the mobile phone.

Next, in step 4008h, the notification sound data registered in the mobile phone is registered in the microwave, and the processing ends.

(Processing f: Adjusting notification sound of microwave)

FIG. 30 is a diagram for describing processing of adjusting notification sound of a microwave according to the present embodiment. The following is a description of FIG. 30.

First, in step 4009a, notification sound data of the microwave registered in the mobile phone is obtained.

Next, in step 4009b, it is checked whether a frequency of the notification sound for the terminal and a frequency of environmental sound overlap a certain amount or more.

Here, in the case of No, the processing ends.

However, in the case of Yes, the processing proceeds to step 4009c, where the volume of notification sound is set so as to be sufficiently larger than the environmental sound. Alternatively, the frequency of the notification sound is changed.

Here, as an example of a method for generating notification sound having a changed frequency, if the microwave can output the sound in (c) of FIG. 31, notification sound is generated in the pattern in (c), and the processing ends. If the microwave cannot output sound in (c), but can output the sound in (b), notification sound is generated in the pattern in (b), and the processing ends. If the microwave can output only the sound in (a), notification sound is generated in the pattern in (a), and the processing ends.

FIG. 31 is a diagram illustrating examples of waveforms of notification sounds set in a microwave according to the present embodiment.

The waveform illustrated in (a) of FIG. 31 includes simple square waves, and almost all sound output devices can output sound in the waveform. Since the sound in the waveform is easily mixed up with sound other than notification sound, the sound is output several times, and if the sound can be recognized some of the several times, it is to be determined that the output of the notification sound is recognized, which is an example of handling such case.

The waveform illustrated in (b) of FIG. 31 is a waveform obtained by sectioning the waveform in (a) finely at short square waves, and such sound in the waveform can be output if the operation clock frequency of a sound output device is high enough. Although people hear this sound as similar sound to the sound in (a), a feature of the sound is that the sound has a greater amount of information than (a), and tends not to be mixed up with sound other than notification sound in machine recognition.

The waveform illustrated in (c) of FIG. 31 is obtained by changing the temporal lengths of sound output portions, and is referred to as a pulse-width modulation (PWM) waveform. Although it is more difficult to output such sound in the PWM waveform than the sound in (b), the sound in the PWM waveform has a greater amount of information than the sound in (b), thus improving a recognition rate and also allowing information to be transmitted from the microwave to the mobile phone simultaneously.

It should be noted that although the sounds in the waveforms in (b) and (c) of FIG. 31 are less likely to be incorrectly recognized than the sound illustrated in (a) of FIG. 31, the recognition rate of the sounds can be further improved by repeating the sounds in the same waveform several times, as with the sound in (a) of FIG. 31.

(Display of details of cooking)

FIG. 32 is a diagram illustrating examples of waveforms of notification sounds set in a microwave according to the present embodiment. The following is a description of FIG. 32.

First, the details of cooking are displayed in step 4011a subsequent to D in the diagram.

Next, it is checked in step 4011b whether the cooking in detail is to be done by the operation of the microwave.

Here, in the case of Yes, the processing proceeds to step 4011c, where the user is notified that food is to be put in the microwave, and the operation start button is to be pressed. The processing proceeds to E in FIG. 33.

On the other hand, in the case of No, the processing proceeds to step 4011d, where the details of cooking are displayed, and the processing proceeds to F in the diagram or proceeds to step 4011e.

In step 4011e, it is checked whether the operation is performed by the user. If the application has ended, the processing ends.

On the other hand, in the case of operation of changing display content, manual input (pressing a button, for instance), or voice input (such as "next", "previous"), the processing proceeds to step 4011f, where it is checked whether cooking ends as a result of changing the display content. Here, in the case of Yes, the processing proceeds to step 4011g, where the user is notified of the end of cooking, and the processing ends. In the case of No, the processing proceeds to step 4011a.

(Recognition of notification sound of microwave)

FIG. 33 is a diagram for describing processing of recognizing notification sound of a microwave according to the present embodiment. The following is a description of FIG. 33.

First, in step 4012a subsequent to E in the diagram, collecting sound by a sound collecting device in the vicinity and recognition of notification sound of the microwave are started (processing g) as parallel processing.

Next, in step 4012f, checking of the operation state of the mobile phone is started (processing i) as parallel processing.

Next, in step 4012g, tracking a user position is started (processing j) as parallel processing.

Next, the details of recognition are checked in step 4012b.

Here, if notification sound indicating a button being pressed has been recognized, the processing proceeds to step 4012c, where the change of the setting is registered, and the processing returns to step 4012b. If operation by the user is recognized, the processing proceeds to F in FIG. 32. If notification sound indicating the end of operation or the sound of opening the door of the microwave is recognized after an operation time elapses since the display is presented to prompt the user to put food into the microwave and press the operation start button, the user is notified of the end of operation of the microwave (processing h) in step 4012e, and the processing proceeds to G in FIG. 32. If the notification sound indicating the start of the operation is recognized, the processing proceeds to step 4012d, where the elapse of the operation time is waited for, and the processing proceeds to step 4012e, where the user is notified of the end of operation of the microwave (processing h). Then, the processing proceeds to G in FIG. 32.

(Processing g: Collecting sound by sound collecting device in vicinity and recognizing notification sound of microwave)

FIG. 34 is a diagram for describing processing of collecting sound by a sound collecting device in the vicinity and recognizing notification sound of a microwave according to the present embodiment. The following is a description of FIG. 34.

First, in step 4013a, a device (sound collecting device) is searched for which can communicate with a mobile phone and collect sound.

Next, it is checked in step 4013b whether a sound collecting device has been detected.

Here, in the case of No, the processing ends. On the other hand, in the case of Yes, the processing proceeds to step 4013c, where the position information of the sound collecting device and microphone characteristics information are obtained from the server.

Next, in step 4013d, it is checked whether the server has that information.

In the case of Yes, the processing proceeds to step 4013r, where it is checked whether the location of the sound collecting device is close enough to the microwave so that notification sound can be collected.

Here, in the case of No in step 4013r, the processing returns to step 4013a. In the case of Yes, the processing proceeds to step 4013s, where it is checked whether an arithmetic unit of the sound collecting device can perform sound recognition. In the case of Yes in step 4013s, information for recognizing notification sound of the microwave is transmitted to the sound collecting device in step 4013u. Next, in step 4013v, the sound collecting device is caused to start collecting and recognizing sound, and transmit the recognition results to the mobile phone. Next, in step 4013q, processing of recognizing notification sound of the microwave is performed until the cooking procedure proceeds to the next cooking step, and the recognition results are transmitted to the mobile phone. On the other hand, in the case of No in step 4013s, the processing proceeds to step 4013t, where the sound collecting device is caused to start collecting sound, and transmit collected sound to the mobile phone. Next, in step 4013j, the sound collecting device is caused to transmit the collected sound to the mobile phone until the cooking procedure proceeds to the next cooking step, and the mobile phone identifies notification sound of the microwave.

It should be noted that in the case of No in step 4013d, the processing proceeds to step 4013e, where it is checked whether the arithmetic unit of the sound collecting device can perform sound recognition.

In the case of Yes, the processing proceeds to step 4013k, where information for recognizing notification sound of the microwave is transmitted to the sound collecting device. Next, in step 4013m, the sound collecting device is caused to start collecting sound and recognizing sound, and transmit the recognition results to the mobile phone. Next, in step 4013n, notification sound of the microwave is output. Next, in step 4013p, it is checked whether the sound collecting device has successfully recognized the notification sound. In the case of Yes in step 4013p, the processing proceeds to 4013q, where the sound collecting device is caused to perform processing of recognizing the notification sound of the microwave until the cooking procedure proceeds to the next cooking step, and transmit the recognition results to the mobile phone, and then the processing returns to step 4013a. In the case of No in step 4013p, the processing returns to step 4013a.

Further, in the case of No in step 4013e, the processing proceeds to step 4013f, where the sound collecting device is caused to start collecting sound, and transmit the collected sound to the mobile phone. Next, in step 4013g, the notification sound of the microwave is output. Next, in step 4013h, recognition processing is performed on the sound transmitted from the sound collecting device. Next, in step 4013i, it is checked whether the notification sound has been successfully recognized. Here, in the case of Yes, the processing proceeds to 4013j, where the sound collecting device is caused to transmit the collected sound to the mobile phone until the cooking procedure proceeds to the next cooking step, and the mobile phone recognizes the notification sound of the microwave, and then the processing returns to step 4013a. In the case of No, the processing returns to step 4013a.

(Processing h: Notifying user of end of operation of microwave)

FIG. 35 is a diagram for describing processing of notifying a user of the end of operation of the microwave according to the present embodiment. The following is a description of FIG. 35.

First, in step 4013a, it is checked whether it can be determined that the mobile phone is currently being used or carried using sensor data. It should be noted that in the case of Yes, the processing proceeds to step 4014m, where the user is notified of the end of operation of the microwave using screen display, sound, and vibration of the mobile phone, for instance, and the processing ends.

On the other hand, in the case of No in step 4013a, the processing proceeds to step 4014b, where a device which is being operated (a device under user operation) is searched for from among devices such as a personal computer (PC) which the user has logged in.

Next, it is checked in step 4014c whether the device under user operation has been detected. It should be noted that in the case of Yes, the user is notified of the end of operation of the microwave using, for instance, the screen display of the device under user operation, and the processing ends.

In the case of No in step 4014c, the processing proceeds to step 4014e, where a device (imaging device) is searched for which can communicate with the mobile phone and obtain images.

Next, it is checked in step 4014f whether an imaging device has been detected.

Here, in the case of Yes, the processing proceeds to step 4014p, where the imaging device is caused to capture an image, transmit data of a user face to the imaging device itself, and then recognize the user face. Alternatively, the imaging device is caused to transmit the captured image to the mobile phone or the server, and the user face is recognized at the destination to which the image is transmitted.

Next, it is checked in step 4014q whether the user face has been recognized. In the case of No, the processing returns to step 4014e. In the case of Yes, the processing proceeds to step 4014r, where it is checked whether a device (detection device) which has detected the user includes a display unit and a sound output unit. In the case of Yes in step 4014r, the processing proceeds to step 4014s, where the user is notified of the end of operation of the microwave using the unit included in the device, and the processing ends.

In the case of No in step 4014f, the processing proceeds to step 4014g, where a device (sound collecting device) is searched for which can communicate with the mobile phone and collect sound.

In the case of No in step 4014h, the processing proceeds to step 4014i, where another device is detected which can determine a position of the user by operation of the device, by means of walk vibration, and the like. Next, the processing proceeds to step 4014m, where the user is notified of the end of operation of the microwave using, for instance, screen display, sound, and vibration of the mobile phone, and the processing ends.

It should be noted that in the case of Yes in step 4014i, the processing proceeds to step 4014r, where it is checked whether a device (detection device) which has detected the user includes a display unit and a sound output unit. Here, in the case of No, the position information of a detection device is obtained from the server.

Next, in step 4014u, a device (notification device) which is near the detection device, and includes a display unit and a sound output unit is searched for. Next, in step 4014v, the user is notified of the end of operation of the microwave by a screen display or sound of sufficient volume in consideration of the distance from the notification device to the user, and the processing ends.

(Processing i: Checking operation state of mobile phone)

FIG. 36 is a diagram for describing processing of checking an operation state of a mobile phone according to the present embodiment. The following is a description of FIG. 36.

First, it is checked in step 4015a whether the mobile phone is being operated, the mobile phone is being carried, an input/output device connected to the mobile phone has received input and output, video and music are being played back, a device located near the mobile phone is being operated, or the user is recognized by a camera or various sensors of a device located near the mobile phone.

Here, in the case of Yes, the processing proceeds to step 4015b, where it is acknowledged that there is a high probability that the position of the user is close to this mobile phone. Then, the processing returns to step 4015a.

On the other hand, in the case of No, the processing proceeds to step 4015c, where it is checked whether a device located far from the mobile phone is being operated, the user is recognized by a camera or various sensors of the device located far from the mobile phone, or the mobile phone is being charged.

In the case of Yes in step 4015c, the processing proceeds to step 4015d, where it is acknowledged that there is a high probability that the position of the user is far from this mobile phone, and the processing returns to step 4015a. In the case of No in step 4015c, the processing returns to step 4015a.

(Processing j: Tracking user position)

FIG. 37 is a diagram for describing processing of tracking a user position according to the present embodiment. The following is a description of FIG. 37.

First, in step 4016a, it is checked whether the mobile phone is determined to be being carried, using a bearing sensor, a position sensor, or an acceleration sensor.

In the case of Yes in step 4016a, the processing proceeds to step 4016b, where the positions of the mobile phone and the user are registered into the DB, and the processing returns to step 4016a.

On the other hand, in the case of No in step 4016a, the processing proceeds to step 4016c, where a device (user detection device) is searched for which can communicate with the mobile phone, and detect a user position and the presence of the user, such as a camera, a microphone, or a human sensing sensor.

Next, it is checked in step 4016d whether a sound collecting device is detected. In the case of No in step 4016d, the processing returns to step 4016a.

In the case of Yes in step 4016d, the processing proceeds to step 4016e, where it is checked whether the user detection device detects the user. In the case of No in step 4016e, the processing returns to step 4016a.

In the case of Yes in step 4016e, the processing proceeds to step 4016f, where the detection of the user is transmitted to the mobile phone.

Next, in step 4016g, the user being present near the user detection device is registered into the DB.

Next, in step 4016h, if the DB has position information of the user detection device, the information is obtained, thereby determining the position of the user, and the processing returns to step 4016a.

FIG. 38 is a diagram illustrating that while canceling sound from a sound output device, notification sound of a home electric appliance is recognized, an electronic device which can communicate is caused to recognize a current position of a user (operator), and based on the recognition result of the user position, a device located near the user position is caused to give a notification to the user. Further, FIG. 39 is a diagram illustrating content of a database held in a server, a mobile phone, or a microwave according to the present embodiment.

As illustrated in FIG. 39, on a microwave table 4040a, the model of a microwave, data for identifying sound which can be output (speaker characteristics, a modulation method, and the like), for each of various mobile phone models, data of notification sound having characteristics easily recognized by the mobile phone, and data of notification sound easily recognized by a typical mobile phone on the average are held in association with one another.

A mobile phone table 4040b holds mobile phones, and for each of the mobile phones, the model of the mobile phone, a user who uses the mobile phone, and data indicating the position of the mobile phone in association with one another.

A mobile phone model table 4040c holds the model of a mobile phone, sound-collecting characteristics of a microphone which is an accessory of the mobile phone of the model in association with each other.

A user voice characteristic table 4040d holds a user and an acoustic feature of the user voice in association with each other.

A user keyword voice table 4040e holds a user and voice waveform data obtained when the user says keywords such as "next" and "return" to be recognized by a mobile phone in association with each other. It should be noted that this data may be obtained by analyzing and changing in the form with which the data is easily handled, rather than the voice waveform data as is.

A user owned device position table 4040f holds a user, a device that the user owns, and position data of the device in association with one another.

A user owned device position table 4040g holds a user, a device that the user owns, and data of sound such as notification sound and operation sound output by the device in association with one another.

A user position table 4040h holds a user and data of a position of the user in association with each other.

FIG. 40 is a diagram illustrating that a user cooks based on cooking processes displayed on a mobile phone, and further operates the display content of the mobile phone by saying "next", "return", and others according to the present embodiment. FIG. 41 is a diagram illustrating that the user has moved to another place while he/she is waiting until the operation of a microwave ends after starting the operation or while he/she is stewing food according to the present embodiment. FIG. 42 is a diagram illustrating that a mobile phone transmits an instruction to detect the user to a device which is connected to the mobile phone via a network, and can recognize a position of the user and the presence of the user, such as a camera, a microphone, or a human sensing sensor. FIG. 43 illustrates that as an example of user detection, a user face is recognized using a camera included in a television, and further the movement and presence of the user are recognized using a human sensing sensor of an air-conditioner. It should be noted that a television and an air-conditioner may perform this recognition processing, or image data or the like may be transmitted to a mobile phone or a server, and recognition processing may be performed at the transmission destination. From a viewpoint of privacy protection, it is better not to transmit data of the user to an external server.

FIG. 44 illustrates that devices which have detected the user transmit to the mobile phone the detection of the user and a relative position of the user to the devices which have detected the user.

As described above, it is possible to determine a user position if the DB has position information of a device which has detected the user.

FIG. 45 is a diagram illustrating that the mobile phone recognizes microwave operation end sound according to the present embodiment. FIG. 46 illustrates that the mobile phone which has recognized the end of the operation of the microwave transmits an instruction to, among the devices which have detected the user, a device having a screen-display function or a sound output function (the television in front of the user in this drawing) to notify the user of the end of the microwave operation.

FIG. 47 illustrates that the device which has received the instruction notifies the user of the details of the notification (in the drawing, the television displays the end of operation of the microwave on the screen thereof). FIG. 48 is a diagram illustrating that a device which is present near the microwave is connected to the mobile phone via a network, and includes a microphone recognizes the microwave operation end sound. FIG. 49 is a diagram illustrating that the device which has recognized the end of operation of the microwave notifies the mobile phone thereof. FIG. 50 illustrates that if the mobile phone is near the user when the mobile phone receives the notification indicating the end of the operation of the microwave, the user is notified of the end of the operation of the microwave, using screen display, sound output, and the like by the mobile phone.

FIG. 51 is a diagram illustrating that the user is notified of the end of the operation of the microwave. Specifically, FIG. 51 illustrates that if the mobile phone is not near the user when the mobile phone receives the notification indicating the end of the operation of the microwave, an instruction is transmitted to, among the devices which have detected the user, a device having a screen display function or a sound output function (the television in front of the user in this drawing) to notify the user of the end of the operation of the microwave, and the device which has received the instruction notifies the user of the end of the operation of the microwave. This drawing illustrates that there are often cases where the mobile phone is not present near the microwave nor the user when the mobile phone is connected to a charger, and thus the illustrated situation tends to occur.

FIG. 52 is a diagram illustrating that the user who has received the notification indicating the end of the operation of the microwave moves to a kitchen. It should be noted that the mobile phone shows what to do next for the cooking at this time. Further, the mobile phone may recognize that the user has moved to the kitchen by sound, for instance, and start giving explanation of the next process of the cooking in a timely manner.

FIG. 53 illustrates that the microwave transmits information such as the end of operation to the mobile phone by wireless communication, the mobile phone gives a notification instruction to the television which the user is watching, and the user is notified by a screen display or sound of the television.

It should be noted that a home LAN, direct wireless communication, especially the wireless communication of 700 MHz to 900 MHz, for instance, can be utilized for communication between an information source device (the microwave in this drawing) and the mobile phone and communication between the mobile phone and a device which gives a notification to the user (the television in this drawing). Further, although the mobile phone is utilized as a hub here, another device having communication capability may be utilized instead of the mobile phone.

FIG. 54 illustrates that the microwave transmits information such as the end of operation to the television which the user is watching by wireless communication, and the user is notified thereof using the screen display or sound of the television. This illustrates the operation performed when communication is performed not via the mobile phone serving as a hub in FIG. 53.

FIG. 55 illustrates that if an air-conditioner on the first floor notifies the user of certain information, the air-conditioner on the first floor transmits information to an air-conditioner on the second floor, the air-conditioner on the second floor transmits the information to the mobile phone, the mobile phone gives a notification instruction to the television which the user is watching, and the user is notified thereof by the screen display or sound of the television. This shows that an information source device (the air-conditioner on the first floor in this drawing) cannot directly communicate with the mobile phone serving as a hub, the information source device transmits information to another device which can communicate therewith, and establishes communication with the mobile phone.

FIG. 56 is a diagram illustrating that a user who is at a remote place is notified of information. Specifically, FIG. 56 illustrates that the mobile phone which has received a notification from the microwave by sound, optically, or via wireless communication, for instance, notifies the user at a remote place of information via the Internet or carrier communication. FIG. 57 illustrates that if the microwave cannot directly communicate with the mobile phone serving as a hub, the microwave transmits information to the mobile phone via a personal computer, for instance. FIG. 58 illustrates that the mobile phone which has received communication in FIG. 57 transmits information such as an operation instruction to the microwave, following the information-and-communication path in an opposite direction.

It should be noted that the mobile phone may automatically transmit information in response to the information in FIG. 57, notify the user of the information, and transmit information on the operation performed by the user in response to the notification.

FIG. 59 illustrates that in the case where the air-conditioner which is an information source device cannot directly communicate with the mobile phone serving as a hub, the air-conditioner notifies the user of information. Specifically, FIG. 59 illustrates that in the case where the air-conditioner which is an information source device cannot directly communicate with the mobile phone serving as a hub, first, information is transmitted to a device such as a personal computer which establishes one step of communication with the mobile phone as shown by A, the information is transmitted to the mobile phone from the personal computer via the Internet or a carrier communication network as shown by B and C, and the mobile phone processes the information automatically, or the user operates the mobile phone, thereby transmitting the information to the personal computer via the Internet or the carrier communication network as shown by D and E, the personal computer transmits a notification instruction to a device (the television in this drawing) which can notify the user who the computer wants to notify the information as shown by F, and the user is notified of the information using the screen display or sound of the television as shown by G.

Such a situation tends to occur if the user to receive notification information from the air-conditioner is different from the user who is using the mobile phone.

It should be noted that although communication between the personal computer and the mobile phone is established via the Internet or the carrier communication network in this drawing, communication may be established via a home LAN, direct communication, or the like.

FIG. 60 is a diagram for describing a system utilizing a communication device which uses a 700 to 900 MHz radio wave. Specifically, with the configuration in FIG. 60, a system is described which utilizes a communication unit (referred to as a G unit in the following) which uses a 700 to 900 MHz radio wave (referred to as a G radio wave in the following). FIG. 60 illustrates that the microwave having a G unit transmits information, using a G radio wave, to a mobile phone on the third floor having a G unit, the mobile phone on the third floor having the G unit transmits, utilizing a home network, the information to a mobile phone on the second floor which does not have a G unit, and the user is notified of the information from the mobile phone on the second floor.

It should be noted that for registration and authentication of communication between devices each having a G unit, a method using the NFC function of both the devices can be considered. In addition, if one of the devices does not have the NFC function, the output of a G radio wave is lowered so that communication is possible only in a range of about 10 to 20 cm, and both the devices are brought close to each other. If communication is successfully established, communication between the G units is registered and authenticated, which is a conceivable method as a registration mode.

In addition, an information source device (the microwave in this drawing) may be a device other than a microwave, as long as the device has a G unit.

In addition, a device (the mobile phone on the third floor in this drawing) which relays communication between the information source device and the information notification device (the mobile phone on the second floor in this drawing) may be a device such as a personal computer, an air-conditioner, or a smart meter rather than a mobile phone, as long as the device can access a G radio wave and a home network.

In addition, an information notification device may be a device such as a personal computer or a television rather than a mobile phone, as long as the device can access a home network, and give a notification to a user by using screen display, audio output, or the like.

FIG. 61 is a diagram illustrating that a mobile phone at a remote place notifies a user of information. Specifically, FIG. 61 illustrates that an air-conditioner having a G unit transmits information to a mobile phone having a G unit in a house, the mobile phone in the house transmits the information to the mobile phone at the remote place via the Internet or a carrier communication network, and the mobile phone at the remote place notifies the user of the information.

It should be noted that the information source device (the air-conditioner in this drawing) may be a device other than a microwave, as long as the device has a G unit.

In addition, a device (the mobile phone in the house in this drawing) which relays communication between the information source device and the information notification device (the mobile phone at a remote place in this drawing) may be a device such as a personal computer, an air-conditioner, or a smart meter rather than a mobile phone, as long as the device can access a G radio wave, the Internet, or a carrier communication network.

It should be noted that the information notification device may be a device such as a personal computer or a television rather than a mobile phone, as long as the device can access the Internet or a carrier communication network, and give a notification to a user by using screen display, audio output, or the like.

FIG. 62 is a diagram illustrating that the mobile phone at a remote place notifies the user of information. Specifically, FIG. 62 illustrates that a television having a G unit recognizes notification sound of the microwave which does not have a G unit and transmits information to the mobile phone having a G unit in the house via a G radio wave, the mobile phone in the house transmits the information to the mobile phone at a remote place via the Internet or a carrier communication network, and the mobile phone at the remote place notifies the user of the information.

It should be noted that another device may perform a similar operation to that of an information source device (the microwave in this drawing), and a method for a notification recognition device (the television in this drawing) to recognize notification from the information source device may be performed using, for instance, a light emission state rather than sound, which also achieves similar effects.

In addition, another device having a G unit may perform a similar operation to that of the notification recognition device. Further, a device (the mobile phone in the house in this drawing) which relays communication between the notification recognition device and the information notification device (the mobile phone at a remote place in this drawing) may be a device such as a personal computer, an air-conditioner, or a smart meter rather than a mobile phone, as long as the device can access a G radio wave, the Internet, or a carrier communication network.

It should be noted that the information notification device may be a device such as a personal computer or a television rather than a mobile phone, as long as the device can access the Internet or a carrier communication network and give a notification to a user using screen display and audio output, for instance.

In addition, FIG. 63 is a diagram illustrating that in a similar case to that of FIG. 62, a television on the second floor serves as a relay device instead of a device (a mobile phone in the house in FIG. 62) which relays communication between a notification recognition device (the television on the second floor in this drawing) and an information notification device (the mobile phone at a remote place in this drawing).

As described above, the device according to the present embodiment achieves the following functions.

- a function of learning user voice characteristics through the use of an application
- a function of detecting a sound collecting device which can collect sound output from a mobile phone, from among devices which can communicate with the mobile phone and have a sound-collecting function
- a function of detecting a sound collecting device which can collect sound output from an electronic device, from among devices which can communicate with a mobile phone and have a sound-collecting function
- a function of causing a sound collecting device to transmit to a mobile phone as-is sound collected by the sound collecting device or a sound recognition result
- a function of analyzing characteristics of environmental sound and improving accuracy of sound recognition
- a function of obtaining, from a DB, sound which may be output from a device that a user owns and improving accuracy of sound recognition
- a function of detecting a sound output device sound output from which can be collected by a mobile phone or a sound collecting device, from among devices which can communicate with the mobile phone and have a sound output function
- a function of cancelling unnecessary sound from collected sound by obtaining audio data output from a sound output device, and subtracting the data from collected sound in consideration of transmission characteristics
- a function of obtaining processes of cooking for giving instructions to a user, in response to the reception of input of parameters of a cooking recipe, and obtaining control data for controlling a cooking device from a server
- a function of making settings so that a mobile phone and a sound collecting device easily recognize notification sound output from a device, based on data of sound which can be output by the device
- a function of improving accuracy of recognizing user voice by adjusting a recognition function, based on user voice characteristics
- a function of recognizing user voice using plural sound collecting devices
- a function of recognizing notification sound of an electronic device using plural sound collecting devices
- a function of obtaining necessary information from an electronic device and making settings in a microwave via, for instance, a mobile phone and a noncontact IC card of an electronic device in order to perform a series of operations only by one operation
- a function of searching for a user using a device such as a camera, a microphone, or a human sensing sensor which can communicate with a mobile phone, and causing the device to transmit a current position of the user to the mobile phone or store the position into a DB
- a function of notifying a user from a device located near the user using a position of the user stored in a DB
- a function of estimating whether a user is present near a mobile phone, based on states (an operating condition, a sensor value, a charging state, a data link state, and the like) of the mobile phone

It should be noted that in the processing in FIGS. 22 to 52, similar functionality can be achieved even by changing sound data to light emission data (frequency, brightness, and the like), sound output to light emission, and sound collection to light reception, respectively.

In addition, although a microwave is used as an example in the present embodiment, an electronic device which outputs notification sound to be recognized may not be a microwave, but changed to a washing machine, a rice cooker, a cleaner, a refrigerator, an air cleaner, an electric water boiler, an automatic dishwasher, an air-conditioner, a personal computer, a mobile phone, a television, a car, a telephone, a mail receiving device, or the like, which also achieves similar effects.

In addition, although a microwave, a mobile phone, and a device such as a television which gives notification to a user establish direct communication to one another in the present embodiment, the devices may communicate with one another indirectly via another device if there is a problem with direct communication.

In addition, although communication established mainly utilizing a home LAN is assumed in the present embodiment, even direct wireless communication between devices and communication via the Internet or a carrier communication network can achieve similar functionality.

The present embodiment achieves effects of preventing leakage of personal information since a mobile phone makes simultaneous inquiry about the position of a user, to cause a camera of a TV, for instance, to perform person identification, and a coded result is transmitted to the mobile phone of that user. Even if there are two or more people in a house, data obtained by a human sensing sensor of an air-conditioner, an air cleaner, and a refrigerator is transmitted to a position control database of a mobile phone or the like, whereby the movement of an operator recognized once is tracked by the sensor. This allows the position of the operator to be estimated.

It should be noted that if a user owns a mobile phone having a gyroscope or an azimuth meter, data of identified position may be registered into a user position database.

In addition, when an operator places a mobile phone, the operation of a physical sensor firstly stops for a certain period of time, and thus this can be detected. Next, button operation and human sensing sensors of a home electric appliance and a light, a camera of a TV or the like, a microphone of the mobile phone, and the like are used to detect that the operator has left there. Then, the position of the operator is registered into a mobile phone or the user position database of a server in the house.

As described above, according to Embodiment 4, an information communication device (recognition device) which enables communication between devices can be achieved.

Specifically, the information communication device according to the present embodiment may include a recognition device which searches for an electronic device (sound collecting device) having sound-collecting functionality from among electronic devices which can communicate with an operation terminal, and recognizes, utilizing the sound-collecting functionality of the sound collecting device, notification sound of another electronic device.

Here, this recognition device may be a recognition device utilizing the sound-collecting functionality of only a sound collecting device which can collect tones output from the operation terminal.

In addition, the information communication device according to the present embodiment may include a sound collecting device which searches for an electronic device (sound output device) having sound output functionality from among electronic devices which can communicate with the operation terminal, analyzes sound transmission characteristics between the sound output device and the sound collecting device, obtains output sound data from the sound output device, and cancels, from the collected sound, sound output from the sound output device, based on the sound transmission characteristics and the output sound data.

In addition, the information communication device according to the present embodiment may include a recognition device which adjusts notification sound of electronic device whose notification sound is to be recognized so that the sound is prevented from being lost in environmental sound.

In addition, the information communication device according to the present embodiment may include a recognition device which stores, in a database, an electronic device owned by a user (owned electronic device), data of sound output by the owned electronic device, and position data of the owned electronic device, and adjusts notification sound of the electronic device to be recognized so that the sound output by the owned electronic device and the notification sound of the electronic device to be recognized are easily distinguished.

Here, this recognition device may further adjust sound recognition processing so that it is easy to distinguish between the sound output by an owned electronic device and the notification sound of the electronic device to be recognized.

In addition, the information communication device according to the present embodiment may include a recognition device which recognizes whether the positions of the operation terminal and an operator are close to each other, utilizing an operating condition of an operation terminal, a sensor value of a physical sensor, a data link state, and a charging state.

Here, this recognition device may further recognize a position of the user, utilizing an operating state of an electronic device which can communicate with an operation terminal, a camera, a microphone, a human sensing sensor, and position data of the electronic device stored in the database.

In addition, this recognition device may further be included in an information notifying device which notifies a user of information using the notification device which can give notification to the user, utilizing a recognition result of the user position, and position data, stored in the database, of an electronic device (notification device) which has a function of giving notification to the user by means of screen display, voice output, and the like.

It should be noted that these general and specific embodiments may be implemented using a system, a method, an integrated circuit, a computer program, or a recording medium, or any combination of systems, methods, integrated circuits, computer programs, or recording media.

(Embodiment 5)

Currently, various simple authentication methods have been considered in wireless communication. For example, a push button method, a personal identification number (PIN) input method, an NFC method, and the like are specified in the Wi-Fi protected setup (WPS) of wireless LAN, which is set by the Wi-Fi alliance. With various simple authentication methods in wireless communication, whether a user using a device is to be authenticated is determined by limiting a time period or determining that the user is in a range where he/she can touch both devices, thereby authenticating the user.

However, it cannot be said that the method of limiting a time period is secured if a user with evil intention is at some short distance. In addition, there are cases where the user has difficulty or troublesome in directly touching an installed device such as a home electric appliance.

In view of this, in the present embodiment, a method of determining that a user who is to be authenticated is certainly in a room, and performing wireless authentication of a home electric appliance with ease and in a secured manner, by using communication using visible light for wireless authentication.

FIG. 64 is a diagram illustrating an example of an environment in a house in the present embodiment. FIG. 65 is a diagram illustrating an example of communication between a smartphone and home electric appliances according to the present embodiment. FIG. 66 is a diagram illustrating a configuration of a transmitter device according to the present embodiment. FIG. 67 is a diagram illustrating a configuration of a receiver device according to the present embodiment. FIGS. 64 to 67 are similar to FIGS. 1 to 4, and thus a detailed description thereof is omitted.

Home environment is assumed to be an environment where a tablet terminal which the user has in the kitchen and a TV placed in a living room are authenticated as illustrated in FIG. 64. Assume that both the devices are terminals which can be connected to a wireless LAN, and each includes a WPS module.

FIG. 68 is a sequence diagram for when a transmitter terminal (TV) performs wireless LAN authentication with a receiver terminal (tablet terminal), using optical communication in FIG. 64. The following is a description of FIG. 68.

First, for example, a transmitter terminal as illustrated in FIG. 66 creates a random number (step 5001a). Next, the random number is registered in a registrar of WPS (step 5001b). Furthermore, a light emitting element is caused to emit light as indicated by a pattern of the random number registered in the registrar (step 5001c).

On the other hand, while the light emitting element of the transmitter device is emitting light, a receiver device as illustrated in, for example, FIG. 67 activates a camera thereof in an optical authentication mode. Here, the optical authentication mode is a mode in which it can be recognized that the light emitting element is emitting light for authentication, and is a video shooting mode which allows shooting in accordance with a cycle of light emissions.

Accordingly, a user shoots a light emitting element of the transmitter terminal, first (step 5001d). Next, the receiver terminal receives the random number by shooting (step 5001e). Next, the receiver terminal which has received the random number inputs the random number as a PIN of WPS (step 5001f).

Here, the transmitter and receiver terminals which share the PIN perform authentication processing according to the standard by WPS (step 5001g).

Next, when the authentication is completed, the transmitter terminal deletes the random number from the registrar, and avoids accepting authentication from a plurality of terminals (5001h).

It should be noted that this method is applicable not only to wireless LAN authentication, but also to all the wireless authentication methods which use a common key.

In addition, this method is not limited to a wireless authentication method. For example it is also applicable for authentication of an application loaded on both the TV and the tablet terminal.

FIG. 69 is a sequence diagram for when authentication is performed using an application according to the present embodiment. The following is a description of FIG. 69.

First, a transmitter terminal creates a transmitter ID according to the state of the terminal (step 5002a). Here, the transmitter ID may be a random number or a key for coding. In addition, a terminal ID (a MAC address, an IP address) of the transmitter terminal may be included. Next, the transmitter terminal emits light as indicated by the pattern of the transmitter ID (step 5002b).

On the other hand, a receiver device receives the transmitter ID in the same process as in the case of wireless authentication (step 5002f). Next, upon the reception of the transmitter ID, the receiver device creates a receiver ID which can show that the transmitter ID has been received (step 5002g). For example, the receiver ID may be a terminal ID of the receiver terminal coded in the transmitter ID. In addition, the receiver ID may also include a process ID and a password of an application which has been activated in the receiver terminal. Next, the receiver terminal broadcasts the receiver ID wirelessly (step 5002h). It should be noted that if a terminal ID of the transmitter terminal is included in the transmitter ID, the receiver terminal may unicast the receiver ID

Next, the transmitter terminal which has received the receiver ID wirelessly (5002c) performs authentication with a terminal which has transmitted the received receiver ID, using the transmitter ID shared in both the terminals (step 5002d).

FIG. 70 is a flowchart illustrating operation of the transmitter terminal according to the present embodiment. The following is a description of FIG. 70.

First, the transmitter terminal emits light indicating an ID, according to the state of the terminal (step 5003a).

Next, light is emitted by the pattern according to the ID (step 5003b).

Next, it is checked whether there is a wireless response corresponding to the ID indicated by emitted light (step 5003c). If there is a response (Yes in step 5003c), processing of authenticating the terminal which has transmitted the response is performed (step 5003d). It should be noted that if there is no response in step 5003c, the transmitter terminal waits until a timeout time elapses (step 5003i), and ends the processing after displaying there being no response (step 5003j).

Next, it is checked whether authentication processing has succeeded in step 5003e, and when authentication processing has succeeded (Yes in step 5003e), if a command other than authentication is included in the ID indicated by light emission (Yes in step 5003f), processing in accordance with the command is performed (step 5003g).

It should be noted that if authentication fails in step 5003e, an authentication error is displayed (step 5003h), and the processing ends.

FIG. 71 is a flowchart illustrating operation of the receiver terminal according to the present embodiment. The following is a description of FIG. 71.

First, a receiver terminal activates a camera in an optical authentication mode (step 5004a).

Next, it is checked whether light has been received in a specific pattern (step 5004b), and if it is determined that such light has been received (Yes in step 5004b), a receiver ID is created which can show that a transmitter ID has been received (step 5004c). It should be noted that if it is not determined that such light has been received (No in step 5004b), the receiver terminal waits until a timeout time elapses (Yes in step 5004i), and displays timeout (step 5004j), and the processing ends.

Next, it is checked whether the transmitter terminal holds an ID of the transmitter terminal (step 5004k), and if the transmitter terminal holds the ID of the terminal (Yes in step 5004k), the transmitter terminal unicasts the receiver ID to the terminal (step 5004d). On the other hand, if the transmitter terminal does not hold the ID of the terminal (No in step 5004k), the transmitter terminal broadcasts the receiver ID (step 5004l).

Next, authentication processing is started by the transmission terminal (step 5004e), and if the authentication processing has succeeded (Yes in step 5004e), it is determined whether a command is included in the ID obtained by receiving light (step 5004f). If it is determined in step 5004f that a command is included (YES in step 5004f), processing according to the ID is performed (step 5004g).

It should be noted that if authentication fails in step 5004e (No in step 5004e), an authentication error is displayed (step 5004h), and the processing ends.

As described above, according to the present embodiment, the communication using visible light is used for wireless authentication, whereby it can be determined that a user to be authenticated is certainly in a room, and wireless authentication of a home electric appliance can be performed with ease and in a secured manner.

(Embodiment 6)

Although the flows for data exchange using NFC communication and high-speed wireless communication are described in the embodiments above, the present invention is not limited to those. An embodiment of the present invention can of course be achieved as the flows as illustrated in FIGS. 72 to 74, for example.

FIG. 72 is a sequence diagram in which a mobile AV terminal 1 transmits data to a mobile AV terminal 2 according to the present embodiment. Specifically, FIG. 72 is a sequence diagram of data transmission and reception performed using NFC and wireless LAN communication. The following is a description of FIG. 72.

First, the mobile AV terminal 1 displays, on a screen, data to be transmitted to the mobile AV terminal 2.

Here, if the mobile AV terminals 1 and 2 are brought into contact with each other to perform NFC communication, the mobile AV terminal 1 displays, on the screen, a confirmation screen for checking whether data transmission is to be performed. This confirmation screen may be a screen for requesting a user to select "Yes/No" together with the words "Transmit data?" or may be an interface for starting data transmission by the screen of the mobile AV terminal 1 being touched again.

In the case of "Yes" when it is checked whether data is intended to be transmitted, the mobile AV terminal 1 and the mobile AV terminal 2 exchange, by NFC communication, information on data to be transmitted and information for establishing high-speed wireless communication. The information on the data to be transmitted may be exchanged by wireless LAN communication. Information on establishment of wireless LAN communication may indicate a communication channel, or a service set identifier (SSID), and cryptographic key information, or may indicate a method of exchanging ID information created randomly and establishing a secure channel using this information

If wireless LAN communication is established, the mobile AV terminals 1 and 2 perform data communication by wireless LAN communication, and the mobile AV terminal 1 transmits the transmission target data thereof to the mobile AV terminal 2.

Next, a description is given using FIGS. 73 and 74, focusing on changes of the screens of the mobile AV terminal 1 and the mobile AV terminal 2. FIG. 73 is a diagram illustrating a screen changed when the mobile AV terminal 1 transmits data to the mobile AV terminal 2 according to the present embodiment. FIG. 74 is a diagram illustrating a screen changed when the mobile AV terminal 1 transmits data to the mobile AV terminal 2 according to the present embodiment.

In FIGS. 73 and 74, a user activates an application for reproducing video and a still image in the mobile AV terminal 1, first. This application displays a still image and video data stored in the mobile AV terminal 1.

Here, NFC communication is performed by bringing the mobile AV terminals 1 and 2 to be almost in contact with each other. This NFC communication is processing for starting exchange of a still image and video data in the mobile AV terminal 1.

First, when the mobile AV terminals 1 and 2 recognize the start of data exchange by NFC communication, a confirmation screen for checking whether data is to be transmitted is displayed on the screen of the mobile AV terminal 1. It should be noted that this confirmation screen may be an interface for facilitating a user to touch the screen to start data transmission or an interface for facilitating a user to select whether to allow data transmission by Yes/No, as in FIG. 73. In the case of Yes in determination as to whether data transmission is to be started, or specifically, when the mobile AV terminal 1 is to transmit data to the mobile AV terminal 2, the mobile AV terminal 1 transmits, to the mobile AV terminal 2, information on data to be exchanged and information on the start of high-speed wireless communication via a wireless LAN. It should be noted that information on this data to be exchanged may be transmitted using high-speed wireless communication.

Next, upon receipt and transmission of the information on the start of high-speed wireless communication via the wireless LAN, the mobile AV terminals 1 and 2 perform processing for establishing connection by wireless LAN communication. This processing includes determining which channel is to be used for communication, and which of the terminals is a parent terminal and which is a child terminal on communication topology, and exchanging password information, SSIDs of the terminals, and terminal information, for instance.

Next, when the connection by wireless LAN communication is established, the mobile AV terminals 1 and 2 transmit data by wireless LAN communication. During data transmission, the mobile AV terminal 1 displays, on the screen, video being reproduced normally, whereas the mobile AV terminal 2 which receives data displays, on the screen, data being received. This is because if the mobile AV terminal 1 displays data being transmitted on the screen, the mobile AV terminal 1 cannot perform other processing, and thus data is transmitted in the background, thereby achieving an advantage of the improvement of a user's convenience. In addition, the mobile AV terminal 2 which is receiving data displays data being received on the screen so that the received data can be immediately displayed, thereby achieving an advantage of displaying data immediately after reception of the data is completed.

Finally, the mobile AV terminal 2 displays the received data after the data reception is completed.

FIGS. 75 to 77 are system outline diagrams when the mobile AV terminal 1 is a digital camera according to the present embodiment.

As illustrated in FIG. 75, it is needless to say that the mobile phone according to the present embodiment is even applicable to the case where the mobile AV terminal 1 is a digital camera.

In addition, if the mobile AV terminal 1 is a digital camera, the digital camera does not have a means of the Internet access by mobile-phone communication in many cases, although typical digital cameras have a means of the Internet access by wireless LAN.

Accordingly, it is preferable to adopt a configuration in which as illustrated in FIGS. 76 and 77, the digital camera (the mobile AV terminal 1) transmits captured image data by a wireless LAN to picture sharing service in an environment where wireless LAN communication can be performed, whereas in an environment where wireless LAN communication cannot be performed, the digital camera transmits data to the mobile AV terminal 2 using a wireless LAN first, and the mobile AV terminal 2 transmits the as-is received data to picture sharing service by mobile phone communication.

Since wireless LAN communication is performed at a higher speed than mobile phone communication, a picture can be transmitted to picture sharing service at high speed by performing wireless LAN communication if possible. In addition, the service area of a mobile phone communication network is generally larger than a wireless LAN communication network, and thus if wireless LAN environment is not available, a function of transmitting data to picture sharing service by mobile phone communication via the mobile AV terminal 2 is provided, thereby allowing a picture to be immediately transmitted to picture sharing service at various places.

As described above, according to the present embodiment, data can be exchanged using NFC communication and high-speed wireless communication.

The above is a description of, for instance, an information communication device according to one or more aspects of the present invention based on the embodiments. The present invention, however, is not limited to the embodiments. Various modifications to the embodiments that may be conceived by those skilled in the art and combinations of constituent elements in different embodiments may be included within the scope of one or more aspects of the present invention, without departing from the spirit of the present invention.

It should be noted that in the above embodiments, each of the constituent elements may be constituted by dedicated hardware, or may be obtained by executing a software program suitable for the constituent element. Each constituent element may be achieved by a program execution unit such as a CPU or a processor reading and executing a software program stored in a recording medium such as a hard disk or semiconductor memory.

(Embodiment 7)

The following describes Embodiment 7.

(Observation of luminance of light emitting unit)

In an imaging element such as a CMOS sensor, one captured image is completed not by exposing all pixels at once but by exposing each line (exposure line) with a time difference as illustrated in FIG. 78.

In the case of capturing a blinking light emitting unit in a state where the light emitting unit is shown on the entire surface of the imaging element, the blink state of the light emitting unit that blinks at a speed higher than an imaging frame rate can be recognized based on whether or not the light of the light emitting unit is shown on each exposure line, as illustrated in FIG. 79.

By this method, information transmission is performed at the speed higher than the imaging frame rate.

In the case where the number of exposure lines whose exposure times do not overlap each other is 20 in one captured image and the imaging frame rate is 30 fps, it is possible to recognize a luminance change in a period of 1 millisecond. In the case where the number of exposure lines whose exposure times do not overlap each other is 1000, it is possible to recognize a luminance change in a period of 1/30000 second (about 33 microseconds). Note that the exposure time is set to less than 10 milliseconds, for example.

FIG. 79 illustrates a situation where, after the exposure of one exposure line ends, the exposure of the next exposure line starts.

In this situation, when transmitting information based on whether or not each exposure line receives at least a predetermined amount of light, information transmission at a speed of fl bits per second at the maximum can be realized where f is the number of frames per second (frame rate) and l is the number of exposure lines constituting one image.

Note that faster communication is possible in the case of performing time-difference exposure not on a line basis but on a pixel basis.

In such a case, when transmitting information based on whether or not each pixel receives at least a predetermined amount of light, the transmission speed is flm bits per second at the maximum, where m is the number of pixels per exposure line.

If the exposure state of each exposure line caused by the light emission of the light emitting unit is recognizable in a plurality of levels as illustrated in FIG. 80, more information can be transmitted by controlling the light emission time of the light emitting unit in a shorter unit of time than the exposure time of each exposure line.

In the case where the exposure state is recognizable in Elv levels, information can be transmitted at a speed of flElv bits per second at the maximum.

Moreover, a fundamental period of transmission can be recognized by causing the light emitting unit to emit light with a timing slightly different from the timing of exposure of each exposure line.

FIG. 81 illustrates a situation where, before the exposure of one exposure line ends, the exposure of the next exposure line starts.

In this situation, the exposure time is calculated from the brightness of each exposure line, to recognize the light emission state of the light emitting unit.

Note that, in the case of determining the brightness of each exposure line in a binary fashion of whether or not the luminance is greater than or equal to a threshold, it is necessary for the light emitting unit to continue the state of emitting no light for at least the exposure time of each line, to enable the no light emission state to be recognized.

Depending on imaging devices, there is a time (blanking) during which no exposure is performed, as illustrated in FIG. 82.

In the case where there is blanking, the luminance of the light emitting unit during the time cannot be observed.

A transmission loss caused by blanking can be prevented by the light emitting unit repeatedly transmitting the same signal two or more times or adding error correcting code.

To prevent the same signal from being transmitted during blanking every time, the light emitting unit transmits the signal in a period that is relatively prime to the period of image capture or a period that is shorter than the period of image capture.

(Signal modulation scheme)

In the case of using visible light as a carrier, by causing the light emitting unit to emit light so as to keep a constant moving average of the luminance of the light emitting unit when the temporal resolution (about 5 milliseconds to 20 milliseconds) of human vision is set as a window width, the light emitting unit of the transmission device appears to be emitting light with uniform luminance to the person (human) while the luminance change of the light emitting unit is observable by the reception device, as illustrated in FIG. 83.

A modulation method illustrated in FIG. 84 is available as a modulation scheme for causing the light emitting unit to emit light so as to keep the constant moving average of the luminance of the light emitting unit when the temporal resolution of human vision is set as the window width. Suppose a modulated signal "0" indicates no light emission and a modulated signal "1" indicates light emission, and there is no bias in a transmission signal. Then, the average of the luminance of the light emitting unit is about 50% of the luminance at the time of light emission.

It is assumed here that the switching between light emission and no light emission is sufficiently fast as compared with the temporal resolution of human vision.

A modulation method illustrated in FIG. 85 is available as a modulation scheme for causing the light emitting unit to emit light so as to keep the constant moving average of the luminance of the light emitting unit when the temporal resolution of human vision is set as the window width. Suppose a modulated signal "0" indicates no light emission and a modulated signal "1" indicates light emission, and there is no bias in a transmission signal. Then, the average of the luminance of the light emitting unit is about 75% of the luminance at the time of light emission.

When compared with the modulation scheme in FIG. 84, the coding efficiency is equal at 0.5, but the average luminance can be increased.

A modulation method illustrated in FIG. 86 is available as a modulation scheme for causing the light emitting unit to emit light so as to keep the constant moving average of the luminance of the light emitting unit when the temporal resolution of human vision is set as the window width. Suppose a modulated signal "0" indicates no light emission and a modulated signal "1" indicates light emission, and there is no bias in a transmission signal. Then, the average of the luminance of the light emitting unit is about 87.5% of the luminance at the time of light emission.

When compared with the modulation schemes in FIGS. 84 and 85, the coding efficiency is lower at 0.375, but high average luminance can be maintained.

Likewise, such modulation that trades off the coding efficiency for increased average luminance is further available.

A modulation method illustrated in FIG. 87 is available as a modulation scheme for causing the light emitting unit to emit light so as to keep the constant moving average of the luminance of the light emitting unit when the temporal resolution of human vision is set as the window width.

Suppose a modulated signal "0" indicates no light emission and a modulated signal "1" indicates light emission, and there is no bias in a transmission signal. Then, the average of the luminance of the light emitting unit is about 25% of the luminance at the time of light emission.

By combining this with the modulation scheme in FIG. 85 or the like and periodically switching between the modulation schemes, it is possible to cause the light emitting unit to appear to be blinking to the person or the imaging device whose exposure time is long.

Likewise, by changing the modulation method, it is possible to cause the light emitting unit to appear to be emitting light with an arbitrary luminance change to the person or the imaging device whose exposure time is long.

In the case of using visible light as a carrier, by causing the light emitting unit to emit light so as to periodically change the moving average of the luminance of the light emitting unit when the temporal resolution of human vision is set as the window width, the light emitting unit of the transmission device appears to be blinking or changing with an arbitrary rhythm to the person while the light emission signal is observable by the reception device, as illustrated in FIG. 88.

The same advantageous effect can be obtained even in the case where an LED unit of a liquid crystal television which uses an LED light source as a backlight is caused to emit light. In this case, at least by reducing the contrast of the screen portion of an optical communication unit to be closer to white, optical communication with a low error rate can be achieved. Making the entire surface or the screen portion used for communication white contributes to a higher communication speed.

In the case of using a television display or the like as the light emitting unit, by adjusting, to the luminance of an image desired to be seen by the person, the moving average of the luminance of the light emitting unit when the temporal resolution of human vision is set as the window width, normal television video is seen by the person while the light emission signal is observable by the reception device, as illustrated in FIG. 89.

By adjusting, to a signal value in the case of performing signal transmission per frame, the moving average of the luminance of the light emitting unit when a substantial time per frame of the captured image is set as the window width, signal propagation can be carried out at two different speeds in such a manner that observes the light emission state of the transmission device per exposure line in the case of image capture at a short distance and observes the light emission state of the transmission device per frame in the case of image capture at a long distance, as illustrated in FIG. 90.

Note that, in the case of image capture at a short distance, the signal receivable in the case of image capture at a long distance can be received, too.

FIG. 91 is a diagram illustrating how light emission is observed for each exposure time.

The luminance of each capture pixel is proportional to the average luminance of the imaging object in the time during which the imaging element is exposed. Accordingly, if the exposure time is short, a light emission pattern 2217a itself is observed as illustrated in 2217b. If the exposure time is longer, the light emission pattern 2217a is observed as illustrated in 2217c, 2217d, or 2217e.

Note that 2217a corresponds to a modulation scheme that repeatedly uses the modulation scheme in FIG. 85 in a fractal manner.

The use of such a light emission pattern enables simultaneous transmission of more information to a reception device that includes an imaging device of a shorter exposure time and less information to a reception device that includes an imaging device of a longer exposure time.

The reception device recognizes that "1" is received if the luminance of pixels at the estimated position of the light emitting unit is greater than or equal to predetermined luminance and that "0" is received if the luminance of pixels at the estimated position of the light emitting unit is less than or equal to the predetermined luminance, for one exposure line or for a predetermined number of exposure lines.

In the case where "1" continues, it is indistinguishable from an ordinary light emitting unit (which constantly emits light without transmitting a signal). In the case where "0" continues, it is indistinguishable from the case where no light emitting unit is present.

Therefore, the transmission device may transmit a different numeric when the same numeric continues for a predetermined number of times.

Alternatively, transmission may be performed separately for a header unit that always includes "1" and "0" and a body unit for transmitting a signal, as illustrated in FIG. 92. In this case, the same numeric never appears more than five successive times.

In the case where the light emitting unit is situated at a position not shown on part of exposure lines or there is blanking, it is impossible to capture the whole state of the light emitting unit by the imaging device of the reception device.

This makes it necessary to indicate which part of the whole signal the transmitted signal corresponds to.

In view of this, there is a method whereby a data unit and an address unit indicating the position of the data are transmitted together, as illustrated in FIG. 93.

For easier signal reception at the reception device, it is desirable to set the length of the light emission pattern combining the data unit and the address unit to be sufficiently short so that the light emission pattern is captured within one image in the reception device.

There is also a method whereby the transmission device transmits a reference unit and a data unit and the reception device recognizes the position of the data based on the difference from the time of receiving the reference unit, as illustrated in FIG. 94.

There is also a method whereby the transmission device transmits a reference unit, an address pattern unit, and a data unit and the reception device obtains each set of data of the data unit and the pattern of the position of each set of data from the address pattern unit following the reference unit, and recognizes the position of each set of data based on the obtained pattern and the difference between the time of receiving the reference unit and the time of receiving the data, as illustrated in FIG. 95.

When a plurality of types of address patterns are available, not only data can be transmitted uniformly, but also important data or data to be processed first can be transmitted earlier than other data or repeatedly transmitted a larger number of times than other data.

In the case where the light emitting unit is not shown on all exposure lines or there is blanking, it is impossible to capture the whole state of the light emitting unit by the imaging device of the reception device.

Adding a header unit allows a signal separation to be detected and an address unit and a data unit to be detected, as illustrated in FIG. 96.

Here, a pattern not appearing in the address unit or the data unit is used as the light emission pattern of the header unit.

For example, the light emission pattern of the header unit may be "0011" in the case of using the modulation scheme of table 2200.2a.

Moreover, when the header unit pattern is "11110011", the average luminance is equal to the other parts, with it being possible to suppress flicker when seen with the human eye. Since the header unit has a high redundancy, information can be superimposed on the header unit. As an example, it is possible to indicate, with the header unit pattern "11100111", that data for communication between transmission devices is transmitted.

For easier signal reception at the reception device, it is desirable to set the length of the light emission pattern combining the data unit, the address unit, and the header unit to be sufficiently short so that the light emission pattern is captured within one image in the reception device.

In FIG. 97, the transmission device determines the information transmission order according to priority.

For example, the number of transmissions is set in proportion to the priority.

In the case where the light emitting unit of the transmission device is not wholly shown on the imaging unit of the reception device or there is blanking, the reception device cannot receive signals continuously. Accordingly, information with higher transmission frequency is likely to be received earlier.

FIG. 98 illustrates a pattern in which a plurality of transmission devices located near each other transmit information synchronously.

When the plurality of transmission devices simultaneously transmit common information, the plurality of transmission devices can be regarded as one large transmission device. Such a transmission device can be captured in a large size by the imaging unit of the reception device, so that information can be received faster from a longer distance.

Each transmission device transmits individual information during a time slot when the light emitting unit of the nearby transmission device emits light uniformly (transmits no signal), to avoid confusion with the light emission pattern of the nearby transmission device.

Each transmission device may receive, at its light receiving unit, the light emission pattern of the nearby transmission signal to learn the light emission pattern of the nearby transmission device, and determine the light emission pattern of the transmission device itself. Moreover, each transmission device may receive, at its light receiving unit, the light emission pattern of the nearby transmission signal, and determine the light emission pattern of the transmission device itself according to an instruction from the other transmission device. Alternatively, each transmission device may determine the light emission pattern according to an instruction from a centralized control device.

(Light emitting unit detection)

As a method of determining in which part of the image the light emitting unit is captured, there is a method whereby the number of lines on which the light emitting unit is captured is counted in the direction perpendicular to the exposure lines and the column in which the light emitting unit is captured most is set as the column where the light emitting unit is present, as illustrated in FIG. 99.

The decree of light reception fluctuates in the parts near the edges of the light emitting unit, which tends to cause wrong determination of whether or not the light emitting unit is captured. Therefore, signals are extracted from the imaging results of the pixels in the center column of all columns in each of which the light emitting unit is captured most.

As a method of determining in which part of the image the light emitting unit is captured, there is a method whereby the midpoint of the part in which the light emitting unit is captured is calculated for each exposure line and the light emitting unit is estimated to be present on an approximate line (straight line or quadratic curve) connecting the calculated points, as illustrated in FIG. 100.

Moreover, as illustrated in FIG. 101, the estimated position of the light emitting unit may be updated from the information of the current frame, by using the estimated position of the light emitting unit in the previous frame as a prior probability.

Here, the current estimated position of the light emitting unit may be updated based on values of an accelerometer and a gyroscope during the time.

In FIG. 102, when capturing a light emitting unit 2212b in an imaging range 2212a, images such as captured images 2212c, 2212d, and 2212e are obtained.

Summing the light emission parts of the captured images 2212c, 2212d, and 2212e yields a synthetic image 2212f. The position of the light emitting unit in the captured image can thus be specified.

The reception device detects ON/OFF of light emission of the light emitting unit, from the specified position of the light emitting unit.

In the case of using the modulation scheme in FIG. 85, the light emission probability is 0.75, so that the probability of the light emitting unit in the synthetic image 2212f appearing to emit light when summing n images is $1 - 0.25^n$. For example, when n = 3, the probability is about 0. 984.

Here, higher accuracy is attained when the orientation of the imaging unit is estimated from sensor values of a gyroscope, an accelerometer, and a magnetic sensor and the imaging direction is compensated for before the image synthesis. In the case where the number of images to be synthesized is small, however, the imaging time is short, and so there is little adverse effect even when the imaging direction is not compensated for.

FIG. 103 is a diagram illustrating a situation where the reception device captures a plurality of light emitting units.

In the case where the plurality of light emitting units transmit the same signal, the reception device obtains one transmission signal from both light emission patterns. In the case where the plurality of light emitting units transmit different signals, the reception device obtains different transmission signals from different light emission patterns.

The difference in data value at the same address between the transmission signals means different signals are transmitted. Whether the signal same as or different from the nearby transmission device is transmitted may be determined based on the pattern of the header unit of the transmission signal.

It may be assumed that the same signal is transmitted in the case where the light emitting units are substantially adjacent to each other.

FIG. 104 illustrates transmission signal timelines and an image obtained by capturing the light emitting units in this case.

(Signal transmission using position pattern)

In FIG. 105, light emitting units 2216a, 2216c, and 2216e are emitting light uniformly, while light emitting units 2216b, 2216d, and 2216f are transmitting signals using light emission patterns. Note that the light emitting units 2216b, 2216d, and 2216f may be simply emitting light so as to appear as stripes when captured by the reception device on an exposure line basis.

In FIG. 105, the light emitting units 2216a to 2216f may be light emitting units of the same transmission device or separate transmission devices.

The transmission device expresses the transmission signal by the pattern (position pattern) of the positions of the light emitting units engaged in signal transmission and the positions of the light emitting units not engaged in signal transmission.

In FIG. 105, there are six light emitting units, so that signals of $2^6 = 64$ values are transmittable. Though position patterns that appear to be the same when seen from different directions should not be used, such patterns can be discerned by specifying the imaging direction by the magnetic sensor or the like in the reception device. Here, more signals may be transmitted by changing, according to time, which light emitting units are engaged in signal transmission.

The transmission device may perform signal transmission using the position pattern during one time slot and perform signal transmission using the light emission pattern during another time slot. For instance, all light emitting units may be synchronized during a time slot to transmit the ID or position information of the transmission device using the light emission pattern.

Since there are nearly an infinite number of light emitting unit arrangement patterns, it is difficult for the reception device to store all position patterns beforehand.

Hence, the reception device obtains a list of nearby position patterns from a server and analyzes the position pattern based on the list, using the ID or position information of the transmission device transmitted from the transmission device using the light emission pattern, the position of the reception device estimated by a wireless base station, and the position information of the reception device estimated by a GPS, a gyroscope, an accelerometer, or a magnetic sensor as a key.

According to this method, the signal expressed by the position pattern does not need to be unique in the whole world, as long as the same position pattern is not situated nearby (radius of about several meters to 300 meters). This solves the problem that a transmission device with a small number of light emitting units can express only a small number of position patterns.

The position of the reception device can be estimated from the size, shape, and position information of the light emitting units obtained from the server, the size and shape of the captured position pattern, and the lens characteristics of the imaging unit.

(Reception device)

Examples of a communication device that mainly performs reception include a mobile phone, a digital still camera, a digital video camera, a head-mounted display, a robot (cleaning, nursing care, industrial, etc.), and a surveillance camera as illustrated in FIG. 106, though the reception device is not limited to such.

Note that the reception device is a communication device that mainly receives signals, and may also transmit signals according to the method in this embodiment or other methods.

(Transmission device)

Examples of a communication device that mainly performs transmission include a lighting (household, store, office, underground city, street, etc.), a flashlight, a home appliance, a robot, and other electronic devices as illustrated in FIG. 107, though the transmission device is not limited to such.

Note that the transmission device is a communication device that mainly transmits signals, and may also receive signals according to the method in this embodiment or other methods.

The light emitting unit is desirably a device that switches between light emission and no light emission at high speed such as an LED lighting or a liquid crystal display using an LED backlight as illustrated in FIG. 108, though the light emitting unit is not limited to such.

Other examples of the light emitting unit include lightings such as a fluorescent lamp, an incandescent lamp, a mercury vapor lamp, and an organic EL display.

Since the transmission efficiency increases when the light emitting unit is captured in a larger size, the transmission device may include a plurality of light emitting units that emit light synchronously as illustrated in FIG. 109. Moreover, since the transmission efficiency increases when the light emitting unit is shown in a larger size in the direction perpendicular to the exposure lines of the imaging element, the light emitting units may be arranged in a line. The light emitting units may also be arranged so as to be perpendicular to the exposure lines when the reception device is held normally. In the case where the light emitting unit is expected to be captured in a plurality of directions, the light emitting units may be arranged in the shape of a cross as illustrated in FIG. 110. Alternatively, in the case where the light emitting unit is expected to be captured in a plurality of directions, a circular light emitting unit may be used or the light emitting units may be arranged in the shape of a circle as illustrated in FIG. 111. Since the transmission efficiency increases when the light emitting unit is captured in a larger size, the transmission device may cover the light emitting unit(s) with a diffusion plate as illustrated in FIG. 112.

Light emitting units that transmit different signals are positioned away from each other so as not to be captured at the same time, as illustrated in FIG. 113. As an alternative, light emitting units that transmit different signals have a light emitting unit, which transmits no signal, placed therebetween so as not to be captured at the same time, as illustrated in FIG. 114.

(Structure of light emitting unit)

FIG. 115 is a diagram illustrating a desirable structure of the light emitting unit.

In 2311a, the light emitting unit and its surrounding material have low reflectance. This eases the recognition of the light emission state by the reception device even when light impinges on or around the light emitting unit. In 2311b, a shade for blocking external light is provided. This eases the recognition of the light emission state by the reception device because light is kept from impinging on or around the light emitting unit. In 2311c, the light emitting unit is provided in a more recessed part. This eases the recognition of the light emission state by the reception device because light is kept from impinging on or around the light emitting unit.

(Signal carrier)

Light (electromagnetic wave) in frequency bands from near infrared, visible light, to near ultraviolet illustrated in FIG. 116, which can be received by the reception device, is used as light (electromagnetic wave) for carrying signals.

(Imaging unit)

In FIG. 117, an imaging unit in the reception device detects a light emitting unit 2310b emitting light in a pattern, in an imaging range 2310a.

An imaging control unit obtains a captured image 2310d by repeatedly using an exposure line 2310c at the center position of the light emitting unit, instead of using the other exposure lines.

The captured image 2310d is an image of the same area at different exposure times. The light emission pattern of the light emitting unit can be observed by scanning, in the direction perpendicular to the exposure lines, the pixels where the light emitting unit is shown in the captured image 2310d.

According to this method, even in the case where the light emitting unit is present only in one part of the captured image, the luminance change of the light emitting unit can be observed for a longer time. Hence, the signal can be read even when the light emitting unit is small or the light emitting unit is captured from a long distance.

In the case where there is no blanking, the method allows every luminance change of the light emitting unit to be observed so long as the light emitting unit is shown in at least one part of the imaging device.

In the case where the time for exposing one line is longer than the time from when the exposure of the line starts to when the exposure of the next line starts, the same advantageous effect can be achieved by capturing the image using a plurality of exposure lines at the center of the light emitting unit.

Note that, in the case where pixel-by-pixel control is possible, the image is captured using only a point closest to the center of the light emitting unit or only a plurality of points closest to the center of the light emitting unit. Here, by making the exposure start time of each pixel different, the light emission state of the light emitting unit can be detected in smaller periods.

When, while mainly using the exposure line 2310c, other exposure lines are occasionally used and the captured images are synthesized, the synthetic image (video) that is similar to the normally captured image though lower in resolution or frame rate can be obtained. The synthetic image is then displayed to the user, so that the user can operate the reception device or perform image stabilization using the synthetic image.

The image stabilization may be performed using sensor values of a gyroscope, an accelerometer, a magnetic sensor, and the like, or using an image captured by an imaging device other than the imaging device capturing the light emitting unit.

It is desirable to use exposure lines or exposure pixels in a part near the center of the light emitting unit rather than near the edges of the light emitting unit, because the light emitting unit is less likely to be displaced from such exposure lines or exposure pixels upon hand movement.

Since the periphery of the light emitting unit is low in luminance, it is desirable to use exposure lines or exposure pixels in a part that is as far from the periphery of the light emitting unit as possible and is high in luminance.

(Position estimation of reception device)

In FIG. 118, the transmission device transmits the position information of the transmission device, the size of the light emitting device, the shape of the light emitting device, and the ID of the transmission device. The position information includes the latitude, longitude, altitude, height from the floor surface, and the like of the center part of the light emitting device.

The reception device estimates the imaging direction based on information obtained from the magnetic sensor, the gyroscope, and the accelerometer. The reception device estimates the distance from the reception device to the light emitting device, from the size and shape of the light emitting device transmitted from the transmission device, the size and shape of the light emitting device in the captured image, and information about the imaging device. The information about the imaging device includes the focal length of a lens, the distortion of the lens, the size of the imaging element, the distance between the lens and the imaging element, a comparative table of the size of an object of a reference size in the captured image and the distance from the imaging device to the imaging object, and so on.

The reception device also estimates the position information of the reception device, from the information transmitted from the transmission device, the imaging direction, and the distance from the reception device to the light emitting device.

In FIG. 119, the transmission device transmits the position information of the transmission device, the size of the light emitting unit, the shape of the light emitting unit, and the ID of the transmission device. The position information includes the latitude, longitude, altitude, height from the floor surface, and the like of the center part of the light emitting unit.

The reception device estimates the imaging direction based on information obtained from the magnetic sensor, the gyroscope, and the accelerometer. The reception device estimates the distance from the reception device to the light emitting unit, from the size and shape of the light emitting unit transmitted from the transmission device, the size and shape of the light emitting unit in the captured image, and information about the imaging device. The information about the imaging device includes the focal length of a lens, the distortion of the lens, the size of the imaging element, the distance between the lens and the imaging element, a comparative table of the size of an object of a reference size in the captured image and the distance from the imaging device to the imaging object, and so on.

The reception device also estimates the position information of the reception device, from the information transmitted from the transmission device, the imaging direction, and the distance from the reception device to the light emitting unit. The reception device estimates the moving direction and the moving distance, from the information obtained from the magnetic sensor, the gyroscope, and the accelerometer. The reception device estimates the position information of the reception device, using position information estimated at a plurality of points and the position relation between the points estimated from the moving direction and the moving distance.

For example, suppose the random field of the position information of the reception device estimated at point [Math. 1] $x_1$ is [Math. 2] $P_{x1}$, and the random field of the moving direction and the moving distance estimated when moving from point [Math. 3] $x_1$ to point [Math. 4] $x_2$ is [Math. 5] $M_{x1x2}$. Then, the random field of the eventually estimated position information can be calculated at

[Math. 6]

$$\prod_k^{n-1}\left(P_{x_k} \times M_{x_k x_{k+1}}\right) \times P_{x_n}.$$

Moreover, in FIG. 119, the transmission device may transmit the position information of the transmission device and the ID of the transmission device. The position information includes the latitude, longitude, altitude, height from the floor surface, and the like of the center part of the light emitting device.

In this case, the reception device estimates the imaging direction based on information obtained from the magnetic sensor, the gyroscope, and the accelerometer. The reception device estimates the position information of the reception device by trilateration.

In FIG. 120, the transmission device transmits the ID of the transmission device.

The reception device receives the ID of the transmission device, and obtains the position information of the transmission device, the size of the light emitting device, the shape of the light emitting device, and the like from the Internet. The position information includes the latitude, longitude, altitude, height from the floor surface, and the like of the center part of the light emitting device.

The reception device estimates the imaging direction based on information obtained from the magnetic sensor, the gyroscope, and the accelerometer. The reception device estimates the distance from the reception device to the light emitting device, from the size and shape of the light emitting device transmitted from the transmission device, the size and shape of the light emitting device in the captured image, and information about the imaging device. The information about the imaging device includes the focal length of a lens, the distortion of the lens, the size of the imaging element, the distance between the lens and the imaging element, a comparative table of the size of an object of a reference size in the captured image and the distance from the imaging device to the imaging object, and so on.

The reception device also estimates the position information of the reception device, from the information obtained from the Internet, the imaging direction, and the distance from the reception device to the light emitting device.

In FIG. 121, the transmission device transmits the position information of the transmission device and the ID of the transmission device. The position information includes the latitude, longitude, altitude, height from the floor surface, and the like of the center part of the light emitting device.

The reception device estimates the imaging direction based on information obtained from the magnetic sensor, the gyroscope, and the accelerometer. The reception device estimates the position information of the reception device by triangulation.

In FIG. 122, the transmission device transmits the position information of the transmission device and the ID of the transmission device. The position information includes the latitude, longitude, altitude, height from the floor surface, and the like of the center part of the light emitting device.

The reception device estimates the imaging direction based on information obtained from the magnetic sensor, the gyroscope, and the accelerometer. The reception device estimates the position information of the reception device by triangulation. The reception device also estimates the orientation change and movement of the reception device, from the gyroscope, the accelerometer, and the magnetic sensor. The reception device may perform zero point adjustment or calibration of the magnetic sensor simultaneously.

(Transmission information setting)

In FIG. 123, a reception device 2606c obtains a transmitted signal by capturing a light emission pattern of a transmission device 2606b, and estimates the position of the reception device.

The reception device 2606c estimates the moving distance and direction from the change in captured image and the sensor values of the magnetic sensor, accelerometer, and gyroscope, during movement.

The reception device captures a light receiving unit of a transmission device 2606a, estimates the center position of the light emitting unit, and transmits the position to the transmission device.

Since the size information of the light emitting device is necessary for estimating the position of the light emitting unit, the transmission device desirably transmits the size information of the light emitting unit even in the case where part of the transmission information is missing. In the case where the size of the light emitting unit is unknown, the reception device estimates the height of the ceiling from the distance between the transmission device 2606b and the reception device 2606c used in the position estimation and, through the use of this estimation result, estimates the distance between the transmission device 2606a and the reception device 2606c.

There are transmission methods such as transmission using a light emission pattern, transmission using a sound pattern, and transmission using a radio wave. The light emission pattern of the transmission device and the corresponding time may be stored and later transmitted to the transmission device or the centralized control device.

The transmission device or the centralized control device specifies, based on the light emission pattern and the time, the transmission device captured by the reception device, and stores the position information in the transmission device.

In FIG. 124, a position setting point is designated by designating one point of the transmission device as a point in the image captured by the reception device.

The reception device calculates the position relation to the center of the light emitting unit of the transmission device from the position setting point, and transmits, to the transmission device, the position obtained by adding the position relation to the setting point.

In FIG. 125, the reception device receives the transmitted signal by capturing the image of the transmission device. The reception device communicates with a server or an electronic device based on the received signal.

As an example, the reception device obtains the information of the transmission device, the position and size of the transmission device, service information relating to the position, and the like from the server, using the ID of the transmission device included in the signal as a key.

As another example, the reception device estimates the position of the reception device from the position of the transmission device included in the signal, and obtains map information, service information relating to the position, and the like from the server.

As yet another example, the reception device obtains a modulation scheme of a nearby transmission device from the server, using the rough current position as a key.

As yet another example, the reception device registers, in the server, the position information of the reception device or the transmission device, neighborhood information, and information of any process performed by the reception device in the neighborhood, using the ID of the transmission device included in the signal as a key.

As yet another example, the reception device operates the electronic device, using the ID of the transmission device included in the signal as a key.

(Block diagram of reception device)

FIG. 126 is a block diagram illustrating the reception device. The reception device includes all of the structure or part of the structure including an imaging unit and a signal analysis unit. In FIG. 126, blocks having the same name may be realized by the same structural element or different structural elements.

A reception device 2400af in a narrow sense is included in a smartphone, a digital camera, or the like. An input unit 2400h includes all or part of: a user operation input unit 2400i; a light meter 2400j; a microphone 2400k; a timer unit 2400n; a position estimation unit 2400m; and a communication unit 2400p.

An imaging unit 2400a includes all or part of: a lens 2400b; an imaging element 2400c; a focus control unit 2400d; an imaging control unit 2400e; a signal detection unit 2400f; and an imaging information storage unit 2400g. The imaging unit 2400a starts imaging according to a user operation, an illuminance change, or a sound or voice pattern, when a specific time is reached, when the reception device moves to a specific position, or when instructed by another device via a communication unit.

The focus control unit 2400d performs control such as adjusting the focus to a light emitting unit 2400ae of the transmission device or adjusting the focus so that the light emitting unit 2400ae of the transmission device is shown in a large size in a blurred state.

An exposure control unit 2400ak sets an exposure time and an exposure gain.

The imaging control unit 2400e limits the position to be captured, to specific pixels.

The signal detection unit 2400f detects pixels including the light emitting unit 2400ae of the transmission device or pixels including the signal transmitted using light emission, from the captured image.

The imaging information storage unit 2400g stores control information of the focus control unit 2400d, control information of the imaging control unit 2400e, and information detected by the signal detection unit 2400f. In the case where there are a plurality of imaging devices, imaging may be simultaneously performed by the plurality of imaging devices so that one of the captured images is put to use in estimating the position or orientation of the reception device.

A light emission control unit 2400ad transmits a signal by controlling the light emission pattern of the light emitting unit 2400ae according to the input from the input unit 2400h. The light emission control unit 2400ad obtains, from a timer unit 2400ac, the time at which the light emitting unit 2400ae emits light, and records the obtained time.

A captured image storage unit 2400w stores the image captured by the imaging unit 2400a.

A signal analysis unit 2400y obtains the transmitted signal from the captured light emission pattern of the light emitting unit 2400ae of the transmission device through the use of the difference between exposure times of lines in the imaging element, based on a modulation scheme stored in the modulation scheme storage unit 2400af.

A received signal storage unit 2400z stores the signal analyzed by the signal analysis unit 2400y.

A sensor unit 2400q includes all or part of: a GPS 2400r; a magnetic sensor 2400t; an accelerometer 2400s; and a gyroscope 2400u.

A position estimation unit estimates the position or orientation of the reception device, from the information from the sensor unit, the captured image, and the received signal.

A computation unit 2400aa causes a display unit 2400ab to display the received signal, the estimated position of the reception device, and information (e.g. information relating to a map or locations, information relating to the transmission device) obtained from a network 2400ah based on the received signal or the estimated position of the reception device.

The computation unit 2400aa controls the transmission device based on the information input to the input unit 2400h from the received signal or the estimated position of the reception device.

A communication unit 2400ag performs communication between terminals without via the network 2400ah, in the case of using a peer-to-peer connection scheme (e.g. Bluetooth).

An electronic device 2400aj is controlled by the reception device.

A server 2400ai stores the information of the transmission device, the position of the transmission device, and information relating to the position of the transmission device, in association with the ID of the transmission device.

The server 2400ai stores the modulation scheme of the transmission device in association with the position.

(Block diagram of transmission device)

FIG. 127 is a block diagram illustrating the transmission device.

The transmission device includes all of the structure or part of the structure including a light emitting unit, a transmission signal storage unit, a modulation scheme storage unit, and a computation unit.

A transmission device 2401ab in a narrow sense is included in an electric light, an electronic device, or a robot.

A lighting control switch 2401n is a switch for switching the lighting ON and OFF.

A diffusion plate 2401p is a member attached near a light emitting unit 2401q in order to diffuse light of the light emitting unit 2401q.

The light emitting unit 2401q is turned ON and OFF at a speed that allows the light emission pattern to be detected on a line basis, through the use of the difference between exposure times of lines in the imaging element of the reception device in FIG. 126.

The light emitting unit 2401q is composed of a light source, such as an LED or a fluorescent lamp, capable of turning ON and OFF at high speed.

A light emission control unit 2401r controls ON and OFF of the light emitting unit 2401q.

A light receiving unit 2401s is composed of a light receiving element or an imaging element. The light receiving unit 2401s converts the intensity of received light to an electric signal. An imaging unit may be used instead of the light receiving unit 2401s.

A signal analysis unit 2401t obtains the signal from the pattern of the light received by the light receiving unit 2401s.

A computation unit 2401u converts a transmission signal stored in a transmission signal storage unit 2401d to a light emission pattern according to a modulation scheme stored in a modulation scheme storage unit 2401e. The computation unit 2401u controls communication by editing information in the storage unit 2401a or controlling the light emission control unit 2401r, based on the signal obtained from the signal analysis unit 2401t. The computation unit 2401u controls communication by editing information in the storage unit 2401a or controlling the light emission control unit 2401r, based on a signal from an attachment unit 2401w. The computation unit 2401u edits information in the storage unit 2401a or controls the light emission control unit 2401r, based on a signal from a communication unit 2401v.

The computation unit 2401u also edits information in a storage unit 2401b in an attachment device 2401h. The computation unit 2401u copies the information in the storage unit 2401b in the attachment device 2401h, to a storage unit 2401a.

The computation unit 2401u controls the light emission control unit 2401r at a specified time. The computation unit 2401u controls an electronic device 2401zz via a network 2401aa.

The storage unit 2401a includes all or part of: the transmission signal storage unit 2401d; a shape storage unit 2401f; the modulation scheme storage unit 2401e; and a device state storage unit 2401g.

The transmission signal storage unit 2401d stores the signal to be transmitted from the light emitting unit 2401q.

The modulation scheme storage unit 2401e stores the modulation scheme for converting the transmission signal to the light emission pattern.

The shape storage unit 2401f stores the shapes of the transmission device and light emitting unit 2401q.

The device state storage unit 2401g stores the state of the transmission device.

The attachment unit 2401w is composed of an attachment bracket or a power supply port.

The storage unit 2401b in the attachment device 2401h stores information stored in the storage unit 2401a. Here, the storage unit 2401b in the attachment device 2401h or a storage unit 2401c in a centralized control device 2401m may be used, while omitting the storage unit 2401a.

A communication unit 2401v performs communication between terminals without via the network 2400aa, in the case of using a peer-to-peer connection scheme (e.g. Bluetooth).

A server 2401y stores the information of the transmission device, the position of the transmission device, and information relating to the position of the transmission device, in association with the ID of the transmission device. The server 2401y also stores the modulation scheme of the transmission device in association with the position.

(Reception procedure)

FIG. 128 is explained below. In Step 2800a, whether or not there are a plurality of imaging devices in the reception device is determined. In the case of No, the procedure proceeds to Step 2800b to select an imaging device to be used, and then proceeds to Step 2800c. In the case of Yes, on the other hand, the procedure proceeds to Step 2800c.

In Step 2800c, an exposure time (= shutter speed) is set (the exposure time is desirably shorter).

Next, in Step 2800d, an exposure gain is set.

Next, in Step 2800e, an image is captured.

Next, in Step 2800f, a part having at least a predetermined number of consecutive pixels whose luminance exceeds a predetermined threshold is determined for each exposure line, and the center position of the part is calculated.

Next, in Step 2800g, a linear or quadratic approximate line connecting the above center positions is calculated.

Next, in Step 2800h, the luminance of the pixel on the approximate line in each exposure line is set as the signal value of the exposure line.

Next, in Step 2800i, an assigned time per exposure line is calculated from imaging information including an imaging frame rate, a resolution, a blanking time, and the like.

Next, in Step 2800j, in the case where the blanking time is less than or equal to a predetermined time, it is determined that the exposure line following the last exposure line of one frame is the first exposure line of the next frame. In the case where the blanking time is greater than the predetermined time, it is determined that unobservable exposure lines as many as the number obtained by dividing the blanking time by the assigned time per exposure line are present between the last exposure line of one frame and the first exposure line of the next frame.

Next, in Step 2800k, a reference position pattern and an address pattern are read from decoded information.

Next, in Step 2800m, a pattern indicating a reference position of the signal is detected from the signal of each exposure line.

Next, in Step 2800n, a data unit and an address unit are calculated based on the detected reference position.

Next, in Step 2800p, a transmission signal is obtained.

(Self-position estimation procedure)

FIG. 129 is explained below. First, in Step 2801a, a position recognized as the current position of the reception device or a current position probability map is set as self-position prior information.

Next, in Step 2801b, the imaging unit of the reception device is pointed to the light emitting unit of the transmission device.

Next, in Step 2801c, the pointing direction and elevation angle of the imaging device are calculated from the sensor values of the accelerometer, the gyroscope, and the magnetic sensor.

Next, in Step 2801d, the light emission pattern is captured and the transmission signal is obtained.

Next, in Step 2801e, the distance between the imaging device and the light emitting unit is calculated from information of the size and shape of the light emitting unit included in the transmission signal, the size of the captured light emitting unit, and the imaging magnification factor of the imaging device.

Next, in Step 2801f, the relative angle between the direction from the imaging unit to the light emitting unit and the normal line of the imaging plane is calculated from the position of the light emitting unit in the captured image and the lens characteristics.

Next, in Step 2801g, the relative position relation between the imaging device and the light emitting unit is calculated from the hitherto calculated values.

Next, in Step 2801h, the position of the reception device is calculated from the position of the light emitting unit included in the transmission signal and the relative position relation between the imaging device and the light emitting unit. Note that, when a plurality of transmission devices can be observed, the position of the reception device can be calculated with high accuracy by calculating the coordinates of the imaging device from the signal included in each transmission device. When a plurality of transmission devices can be observed, triangulation is applicable.

Next, in Step 2801i, the current position or current position probability map of the reception device is updated from the self-position prior information and the calculation result of the position of the reception device.

Next, in Step 2801j, the imaging device is moved.

Next, in Step 2801k, the moving direction and distance are calculated from the sensor values of the accelerometer, the gyroscope, and the magnetic sensor.

Next, in Step 2801m, the moving direction and distance are calculated from the captured image and the orientation of the imaging device. The procedure then returns to Step 2801a.

(Transmission control procedure 1)

FIG. 130 is explained below. First, in Step 2802a, the user presses a button.

Next, in Step 2802b, the light emitting unit is caused to emit light. Here, a signal may be expressed by the light emission pattern.

Next, in Step 2802c, the light emission start time and end time and the time of transmission of a specific pattern are recorded.

Next, in Step 2802d, the image is captured by the imaging device.

Next, in Step 2802e, the image of the light emission pattern of the transmission device present in the captured image is captured, and the transmitted signal is obtained. Here, the light emission pattern may be synchronously analyzed using the recorded time. The procedure then ends.

(Transmission control procedure 2)

FIG. 131 is explained below. First, in Step 2803a, light is received by the light receiving device or the image is captured by the imaging device.

Next, in Step 2803b, whether or not the pattern is a specific pattern is determined.

In the case of No, the procedure returns to Step 2803a. In the case of Yes, on the other hand, the procedure proceeds to Step 2803c to record the start time and end time of light reception or image capture of the reception pattern and the time of appearance of the specific pattern.

Next, in Step 2803d, the transmission signal is read from the storage unit and converted to the light emission pattern.

Next, in Step 2803e, the light emitting unit is caused to emit light according to the light emission pattern, and the procedure ends. Here, the light emission may be started after a predetermined time period from the recorded time, with the procedure ending thereafter.

(Transmission control procedure 3)

FIG. 132 is explained below. First, in Step 2804a, light is received by the light receiving device, and the received light energy is converted to electricity and accumulated.

Next, in Step 2804b, whether or not the accumulated energy is greater than or equal to a predetermined amount is determined.

In the case of No, the procedure returns to Step 2804a. In the case of Yes, on the other hand, the procedure proceeds to Step 2804c to analyze the received light and record the time of appearance of the specific pattern.

Next, in Step 2804d, the transmission signal is read from the storage unit and converted to the light emission pattern.

Next, in Step 2804e, the light emitting unit is caused to emit light according to the light emission pattern, and the procedure ends. Here, the light emission may be started after a predetermined time period from the recorded time, with the procedure ending thereafter.

(Information provision inside station)

FIG. 133 is a diagram for describing a situation of receiving information provision inside a station.

A reception device 2700a captures an image of a lighting disposed in a station facility and reads a light emission pattern or a position pattern, to receive information transmitted from the lighting device.

The reception device 2700a obtains information of the lighting or the facility from a server based on the reception information, and further estimates the current position of the reception device 2700a from the size or shape of the captured lighting.

For example, the reception device 2700a displays information obtained based on a facility ID or position information (2700b). The reception device 2700a downloads a map of the facility based on the facility ID, and navigates to a boarding place using ticket information purchased by the user (2700c).

Though FIG. 133 illustrates the example inside the train station, the same applies to facilities such as an airport, a harbor, a bus stop, and so on.

(Passenger service)

FIG. 134 is a diagram illustrating a situation of use inside a vehicle.

A reception device 2704a carried by a passenger and a reception device 2704b carried by a salesperson each receive a signal transmitted from a lighting 2704e, and estimates the current position of the reception device itself.

Note that each reception device may obtain necessary information for self-position estimation from the lighting 2704e, obtain the information from a server using the information transmitted from the lighting 2704e as a key, or obtain the information beforehand based on position information of a train station, a ticket gate, or the like.

The reception device 2704a may recognize that the current position is inside the vehicle from ride time information of a ticket purchased by the user (passenger) and the current time, and download information associated with the vehicle.

Each reception device notifies a server of the current position of the reception device. The reception device 2704a notifies the server of a user (passenger) ID, a reception device ID, and ticket information purchased by the user (passenger), as a result of which the server recognizes that the person in the seat is a person entitled to riding or reserved seating.

The reception device 2704a displays the current position of the salesperson, to enable the user (passenger) to decide the purchase timing for sales aboard the train.

When the passenger orders an item sold aboard the train through the reception device 2704a, the reception device 2704a notifies the reception device 2704b of the salesperson or the server of the position of the reception device 2704a, order details, and billing information. The reception device 2704b of the salesperson displays a map 2704d indicating the position of the customer.

The passenger may also purchase a seat reservation ticket or a transfer ticket through the reception device 2704a.

The reception device 2704a displays available seat information 2704c. The reception device 2704a notifies the server of reserved seat ticket or transfer ticket purchase information and billing information, based on travel section information of the ticket purchased by the user (passenger) and the current position of the reception device 2704a.

Though FIG. 134 illustrates the example inside the train, the same applies to vehicles such as an airplane, a ship, a bus, and so on.

(In-store service)

FIG. 135 is a diagram illustrating a situation of use inside a store or a shop.

Reception devices 2707b, 2707c, and 2707d each receive a signal transmitted from a lighting 2707a, estimate the current position of the reception device itself, and notify a server of the current position.

Note that each reception device may obtain necessary information for self-position estimation and a server address from the lighting 2707a, obtain the necessary information and the server address from another server using information transmitted from the lighting 2707a as a key, or obtain the necessary information and the server address from an accounting system.

The accounting system associates accounting information with the reception device 2707d, displays the current position of the reception device 2707d (2707c), and delivers the ordered item.

The reception device 2707b displays item information based on the information transmitted from the lighting 2707a. When the customer orders from the displayed item information, the reception device 2707b notifies the server of item information, billing information, and the current position.

Thus, the seller can deliver the ordered item based on the position information of the reception device 2707b, and the purchaser can purchase the item while remaining seated.

(Wireless connection establishment)

FIG. 136 is a diagram illustrating a situation of communicating wireless connection authentication information to establish wireless connection.

An electronic device (digital camera) 2701b operates as a wireless connection access point and, as information necessary for the connection, transmits an ID or a password as a light emission pattern.

An electronic device (smartphone) 2701a obtains the transmission information from the light emission pattern, and establishes the wireless connection.

Though the wireless connection is mentioned here, the connection to be established may be a wired connection network.

The communication between the two electronic devices may be performed via a third electronic device.

(Communication range adjustment)

FIG. 137 is a diagram illustrating a range of communication using a light emission pattern or a position pattern.

In a communication scheme using a radio wave, it is difficult to limit the communication range because the radio wave also reaches an adjacent room separated by a wall.

In communication using a light emission pattern or a position pattern, on the other hand, the communication range can be easily limited using an obstacle because visible light and its surrounding area wavelengths are used. Moreover, the use of visible light has an advantage that the communication range is recognizable even by the human eye.

(Indoor use)

FIG. 138 is a diagram illustrating a situation of indoor use such as an underground city.

A reception device 2706a receives a signal transmitted from a lighting 2706b, and estimates the current position of the reception device 2706a. The reception device 2706a also displays the current position on a map to provide directions, or displays nearby shop information.

By transmitting disaster information or evacuation information from the lighting 2706b in the event of an emergency, such information can be obtained even in the case of communication congestion, in the case of a failure of a communication base station, or in the case of being situated in a place where it is difficult for a radio wave from a communication base station to penetrate. This is beneficial to people who missed hearing emergency broadcasting or hearing-impaired people who cannot hear emergency broadcasting.

(Outdoor use)

FIG. 139 is a diagram illustrating a situation of outdoor use such as a street.

A reception device 2705a receives a signal transmitted from a street lighting 2705b, and estimates the current position of the reception device 2705a. The reception device 2705a also displays the current position on a map to provide directions, or displays nearby shop information.

By transmitting disaster information or evacuation information from the lighting 2705b in the event of an emergency, such information can be obtained even in the case of communication congestion, in the case of a failure of a communication base station, or in the case of being situated in a place where it is difficult for a radio wave from a communication base station to penetrate.

Moreover, displaying the movements of other vehicles and pedestrians on the map and notifying the user of any approaching vehicles or pedestrians contributes to accident prevention.

(Route indication)

FIG. 140 is a diagram illustrating a situation of route indication.

A reception device 2703e can download a neighborhood map or estimate the position of the reception device 2703a with an accuracy error of 1 cm to tens of cm, through the use of information transmitted from transmission devices 2703a, 2703b, and 2703c.

When the accurate position of the reception device 2703e is known, it is possible to automatically drive a wheelchair 2703d or ensure safe passage of visually impaired people.

(Use of a plurality of imaging devices)

A reception device in FIG. 141 includes an in camera 2710a, a touch panel 2710b, a button 2710c, an out camera 2710d, and a flash 2710e.

When capturing the transmission device by the out camera, image stabilization can be performed by estimating the movement or orientation of the reception device from an image captured by the in camera.

By receiving a signal from another transmission device using the in camera, it is possible to simultaneously receive the signals from the plurality of devices or enhance the self-position estimation accuracy of the reception device.

(Transmission device autonomous control)

In FIG. 142, a transmission device 1 receives light of a light emitting unit of a transmission device 2 by a light receiving unit, to obtain a signal transmitted from the transmission device 2 and its transmission timing.

In the case where no transmission signal is stored in a storage unit of the transmission device 1, the transmission device 1 transmits a signal by emitting light in the same pattern synchronously with the light emission of the transmission device 2.

In the case where a transmission signal is stored in the storage unit of the transmission device 1, on the other hand, the transmission device 1 transmits a part common with the transmission signal of the transmission device 2 by emitting light in the same pattern synchronously with the light emission of the transmission device 2. The transmission device 1 also transmits a part not common with the transmission signal of the transmission device 2, during a time in which the transmission device 2 transmits no signal. In the case where there is no time in which the transmission device 2 transmits no signal, the transmission device 1 specifies a period appropriately and transmits the uncommon part according to the period. In this case, the transmission device 2 receives the light emitted from the transmission device 1 by a light receiving unit, detects that a different signal is transmitted at the same time, and transmits an uncommon part of signal during a time in which the transmission device 1 transmits no signal.

CSMA/CD (Carrier Sense Multiple Access with Collision Detection) is used for avoiding collisions in signal transmission using light emission.

The transmission device 1 causes the light emitting unit to emit light using its own information as a light emission pattern.

The transmission device 2 obtains the information of the transmission device 1 by the light receiving unit.

The transmission device generates a transmission device arrangement map by exchanging, between communicable transmission devices, their information. The transmission device also calculates an optimal light emission pattern as a whole so as to avoid collisions in signal transmission using light emission. Further, the transmission device obtains information obtained by the other transmission device(s), through communication between the transmission devices.

(Transmission information setting)

In FIG. 143, a transmission device stores information stored in a storage unit of an attachment device into a storage unit of the transmission device, when the transmission device is attached to the attachment device or the information stored in the storage unit of the attachment device is changed. The information stored in the storage unit of the attachment device or the transmission device includes a transmission signal and its transmission timing.

In the case where the information stored in the storage unit is changed, the transmission device stores the information into the storage unit of the attachment device. The information in the storage unit of the attachment device or the storage unit of the transmission device is edited from a centralized control device or a switchboard. Power line communication is used when operating from the switchboard.

A shape storage unit in the transmission device stores a position relation between a center position of a light emitting unit and an attachment unit of the transmission device.

When transmitting position information, the transmission device transmits position information obtained by adding the position relation to position information stored in the storage unit.

Information is stored into the storage unit of the attachment device upon building construction or the like. In the case of storing position information, the accurate position is stored through the use of a design or CAD data of the building. Transmitting the position information from the transmission device upon building construction enables position identification, which may be utilized for construction automation, material use position identification, and the like.

The attachment device notifies the centralized control device of the information of the transmission device. The attachment device notifies the centralized control device that a device other than the transmission device is attached.

In FIG. 144, a transmission device receives light by a light receiving unit, obtains information from the light pattern by a signal analysis unit, and stores the information into a storage unit. Upon light reception, the transmission device converts information stored in the storage unit to a light emission pattern and causes a light emitting unit to emit light.

Information about the shape of the transmission device is stored in a shape storage unit.

In FIG. 145, a transmission device stores a signal received by a communication unit, into a storage unit. Upon reception, the transmission device converts information stored in the storage unit to a light emission pattern and causes a light emitting unit to emit light.

Information about the shape of the transmission device is stored in a shape storage unit.

In the case where no transmission signal is stored in the storage unit, the transmission device converts an appropriate signal to a light emission pattern and causes the light emitting unit to emit light.

A reception device obtains the signal transmitted from the transmission device by an imaging unit, and notifies a transmission device or a centralized control device of the signal and information to be stored in the transmission device, via a communication unit.

The transmission device or the centralized control device stores the transmitted information into the storage unit of the transmission device transmitting the same signal as the signal obtained by the imaging unit of the reception device.

Here, the reception device may transmit the signal transmitted from the transmission device according to the time of image capture so that the transmission device or the centralized control device specifies the transmission device captured by the reception device using the time.

Note that the information may be transmitted from the reception device to the transmission device using a light emission pattern, where the communication unit of the reception device is a light emitting unit and the communication unit of the transmission device is a light receiving unit or an imaging unit.

Alternatively, the information may be transmitted from the reception device to the transmission device using a sound pattern, where the communication unit of the reception device is a sound emitting unit and the communication unit of the transmission device is a sound receiving unit.

(Combination with 2D barcode)

FIG. 146 is a diagram illustrating a situation of use in combination with 2D (two-dimensional) barcode.

The user sets a communication device 2714a and a communication device 2714d opposed to each other.

The communication device 2714a displays transmission information on a display as 2D barcode 2714c.

The communication device 2714d reads the 2D barcode 2714c by a 2D barcode reading unit 2714f. The communication device 2714d expresses transmission information as a light emission pattern of a light emitting unit 2714e.

The communication device 2714a captures the light emitting unit by an imaging unit 2714b, and reads the signal. According to this method, two-way direct communication is possible. In the case where the amount of data to be transmitted is small, faster communication can be performed than communication via a server.

(Map generation and use)

FIG. 147 is a diagram illustrating a situation of map generation and use.

A robot 2715a creates a room map 2715f by performing self-position estimation based on signals transmitted from a lighting 2715d and an electronic device 2715c, and stores the map information, the position information, and the IDs of the lighting 2715d and the electronic device 2715c into a server 2715e.

Likewise, a reception device 2715b creates the room map 2715f from the signals transmitted from the lighting 2715d and the electronic device 2715c, an image captured during movement, and sensor values of the gyroscope, the accelerometer, and the magnetic sensor, and stores the map information, the position information, and the IDs of the lighting 2715d and the electronic device 2715c into the server 2715e.

The robot 2715a performs cleaning or serving efficiently, based on the map 2715f obtained from the server 2715e.

The reception device 2715b indicates the cleaning area or the moving destination to the robot 2715a or operates an electronic device in the pointing direction of the reception device, based on the map 2715f obtained from the server 2715e.

(Electronic device state obtainment and operation)

FIG. 148 is a diagram illustrating a situation of electronic device state obtainment and operation.

A communication device 2716a converts control information to a light emission pattern, and causes a light emitting unit to emit light to a light receiving unit 2716d of an electronic device 2716b.

The electronic device 2716b reads the control information from the light emission pattern, and operates according to the control information. Upon light reception by the light receiving unit 2716d, the electronic device 2716b converts information indicating the state of the electronic device to a light emission pattern, and causes a light emitting unit 2716c to emit light. Moreover, in the case where there is information to be notified to the user such as when the operation ends or when an error occurs, the electronic device 2716b converts the information to a light emission pattern and causes the light emitting unit 2716c to emit light.

The communication device 2716a captures the image of the light emitting unit 2716c, and obtains the transmitted signal.

(Electronic device recognition)

FIG. 149 is a diagram illustrating a situation of recognizing a captured electronic device.

A communication device 2717a has communication paths to an electronic device 2717b and an electronic device 2717e, and transmits an ID display instruction to each electronic device.

The electronic device 2717b receives the ID display instruction, and transmits an ID signal using a light emission pattern of a light emitting unit 2717c.

The electronic device 2717e receives the ID display instruction, and transmits an ID signal using a position pattern with light emitting units 2717f, 2717g, 2717h, and 2717i.

Here, the ID signal transmitted from each electronic device may be an ID held in the electronic device or the details of indication by the communication device 2717a.

The communication device 2717a recognizes the captured electronic device and the position relation between the electronic device and the reception device, from the light emission pattern or the position pattern of the light emitting unit(s) in the captured image.

Note that the electronic device desirably includes three or more light emitting units to enable the recognition of the position relation between the electronic device and the reception device.

(Augmented reality object display)

FIG. 150 is a diagram illustrating a situation of displaying an augmented reality (AR) object.

A stage 2718e for augmented reality display is a light emission pattern or a position pattern of light emitting units 2718a, 2718b, 2718c, and 2718d, to transmit information of the augmented reality object and a reference position for displaying the augmented reality object.

A reception device superimposes an augmented reality object 2718f on a captured image and displays it, based on the received information.

(User interface)

In the case where the light emitting unit is not within the center area of the imaging range, such display that prompts the user to point the center of the imaging range to the light emitting unit is made in order to point the center of the imaging range to the light emitting unit, as illustrated in FIG. 151.

In the case where the light emitting unit is not within the center area of the imaging range, such display that prompts the user to point the center of the imaging range to the light emitting unit is made in order to point the center of the imaging range to the light emitting unit, as illustrated in FIG. 152.

Even when the light emitting unit is not recognized within the imaging range, if the position of the light emitting unit can be estimated from the previous imaging result or the information of the accelerometer, gyroscope, microphone, position sensor, and the like equipped in the imaging terminal, such display that prompts the user to point the center of the imaging range to the light emitting unit is made as illustrated in FIG. 153.

To point the center of the imaging range to the light emitting unit, the size of a figure displayed according to the moving distance of the imaging range is adjusted as illustrated in FIG. 154.

In the case where the light emitting unit is captured small, such display that prompts the user to get closer to the light emitting unit to capture the image is made in order to capture the light emitting unit larger, as illustrated in FIG. 155.

In the case where the light emitting unit is not within the center of the imaging range and also the light emitting unit is not captured in a sufficiently large size, such display that prompts the user to point the center of the imaging range to the light emitting unit and also prompts the user to get closer to the light emitting unit to capture the image is made as illustrated in FIG. 156.

In the case where the signal of the light emitting unit can be more easily received by changing the angle between the light emitting unit and the imaging range, such display that prompts the user to rotate the imaging range is made as illustrated in FIG. 157.

In the case where the light emitting unit is not within the center of the imaging range and also the signal of the light emitting unit can be more easily received by changing the angle between the light emitting unit and the imaging range, such display that prompts the user to point the center of the imaging range to the light emitting unit and also prompts the user to rotate the imaging range is made as illustrated in FIG. 158.

In the case where the light emitting unit is not captured in a sufficiently large size and also the signal of the light emitting unit can be more easily received by changing the angle between the light emitting unit and the imaging range, such display that prompts the user to get closer to the light emitting unit to capture the image and also prompts the user to rotate the imaging range is made as illustrated in FIG. 159.

In the case where the light emitting unit is not within the center of the imaging range, the light emitting unit is not captured in a sufficiently large size, and also the signal of the light emitting unit can be more easily received by changing the angle between the light emitting unit and the imaging range, such display that prompts the user to point the center of the imaging range to the light emitting unit, prompts the user to get closer to the light emitting unit to capture the image, and also prompts the user to rotate the imaging range is made as illustrated in FIG. 160.

During signal reception, information that the signal is being received and the information amount of the received signal are displayed as illustrated in FIG. 161.

In the case where the size of the signal to be received is known, during signal reception, the proportion of the signal the reception of which has been completed and the information amount are displayed with a progress bar, as illustrated in FIG. 162.

During signal reception, the proportion of the signal the reception of which has been completed, the received parts, and the information amount of the received signal are displayed with a progress bar, as illustrated in FIG. 163.

During signal reception, the proportion of the signal the reception of which has been completed and the information amount are displayed so as to superimpose on a light emitting unit, as illustrated in FIG. 164.

In the case where a light emitting unit is detected, information that the object is a light emitting unit is displayed by, for example, displaying the light emitting unit as blinking, as illustrated in FIG. 165.

While receiving a signal from a light emitting unit, information that the signal is being received from the light emitting unit is displayed by, for example, displaying the light emitting unit as blinking, as illustrated in FIG. 166.

In FIG. 167, in the case where a plurality of light emitting units are detected, the user is prompted to designate a transmission device from which a signal is to be received or which is to be operated, by tapping any of the plurality of light emitting units.

(Embodiment 8)

(Application to ITS)

The following describes ITS (Intelligent Transport Systems) as an example of application of the present invention.

In this embodiment, high-speed communication of visible light communication is realized, which is adaptable to the field of ITS.

FIG. 168 is a diagram for describing communication between a transport system having the visible light communication function and a vehicle or a pedestrian. A traffic light 6003 has the visible light communication function according to this embodiment, and is capable of communicating with a vehicle 6001 and a pedestrian 6002.

Information transmission from the vehicle 6001 or the pedestrian 6002 to the traffic light 6003 is performed using, for example, a headlight or a flash light emitting unit of a mobile terminal carried by the pedestrian. Information transmission from the traffic light 6003 to the vehicle 6001 or the pedestrian 6002 is performed by signal illumination using a camera sensor of the traffic light 6003 or a camera sensor of the vehicle 6001.

The function of communication between a traffic assistance object disposed on the road, such as a road lighting or a road information board, and the vehicle 6001 or the pedestrian 6002 is also described below. Here, since the communication method is the same, the description of other objects is omitted.

As illustrated in FIG. 168, the traffic light 6003 provides road traffic information to the vehicle 6001. The road traffic information mentioned here is information for helping driving, such as congestion information, accident information, and nearby service area information.

The traffic light 6003 includes an LED lighting. Communication using this LED lighting enables information to be provided to the vehicle 6001 with no need for addition of a new device. Since the vehicle 6001 usually moves at high speed, only a small amount of data can be transmitted in conventional visible light communication techniques. However, the improvement in communication speed according to this embodiment produces an advantageous effect that a larger size of data can be transmitted to the vehicle.

Moreover, the traffic light 6003 or a lighting 6004 is capable of providing different information depending on signal or light. It is therefore possible to transmit information according to the vehicle position, such as transmitting information only to each vehicle running in a right turn lane.

Regarding the pedestrian 6002, too, it is possible to provide information only to each pedestrian 6002 at a specific spot. For example, only each pedestrian waiting at a crosswalk signal at a specific intersection may be provided with information that the intersection is accident-prone, city spot information, and the like.

The traffic light 6003 is also capable of communicating with another traffic light 6005. For example, in the case of changing information provided from the traffic light 6003, the information distributed from the traffic light can be changed through communication relay between traffic lights, with there being no need to newly connecting a signal line or a communication device to the traffic light. According to the method of this embodiment, the communication speed of visible light communication can be significantly improved, so that the distribution information can be changed in a shorter time. This allows the distribution information to be changed several times a day, as an example. Besides, snow information, rain information, and the like can be distributed immediately.

Furthermore, the lighting may distribute the current position information to provide the position information to the vehicle 6001 or the pedestrian 6002. In facilities with roofs such as a shopping arcade and a tunnel, it is often difficult to obtain position information using a GPS. However, the use of visible light communication has an advantageous effect that the position information can be obtained even in such a situation. In addition, since the communication speed can be increased according to this embodiment as compared with conventional techniques, for example it is possible to receive information while passing a specific spot such as a store or an intersection.

Note that this embodiment provides speedups in visible light communication, and so is equally applicable to all other ITS systems using visible light communication.

FIG. 169 is a schematic diagram of the case of applying the present invention to inter-vehicle communication where vehicles communicate with each other using visible light communication.

The vehicle 6001 transmits information to a vehicle 6001a behind, through a brake lamp or other LED light. The vehicle 6001 may also transmit data to an oncoming vehicle 6001b, through a headlight or other front light.

By communicating between vehicles using visible light in this way, the vehicles can share their information with each other. For instance, congestion information or warning information may be provided to the vehicle behind by relay transmission of information of an accident at an intersection ahead.

Likewise, information for helping driving may be provided to the oncoming vehicle by transmitting congestion information or sudden braking information obtained from sensor information of the brake.

Since the communication speed of visible light communication is improved according to the present invention, there is an advantageous effect that information can be transmitted while passing the oncoming vehicle. Regarding the vehicle behind, too, information can be transmitted to many vehicles in a shorter time because the information transmission interval is shorter. The increase in communication speed also enables transmission of sound or image information. Hence, richer information can be shared among vehicles.

(Position information reporting system and facility system)

FIG. 170 is a schematic diagram of a position information reporting system and a facility system using the visible light communication technique according to this embodiment. A system of delivering patient medical records, transported articles, drugs, and the like by a robot inside a hospital is described as a typical example.

A robot 6101 has the visible light communication function. A lighting distributes position information. The robot 6101 obtains the position information of the lighting, with it being possible to deliver drugs or other items to a specific hospital room. This alleviates burdens on doctors. Since the light never leaks to an adjacent room, there is also an advantageous effect that the robot 6101 is kept from going to the wrong room.

The system using visible light communication according to this embodiment is not limited to hospitals, and is adaptable to any system that distributes position information using lighting equipment. Examples of this include: a mechanism of transmitting position and guidance information from a lighting of an information board in an indoor shopping mall; and an application to cart movement in an airport.

Moreover, by providing a shop lighting with the visible light communication technique, it is possible to distribute coupon information or sale information. When the information is superimposed on visible light, the user intuitively understands that he or she is receiving the information from the light of the shop. This has an advantageous effect of enhancing user convenience.

In the case of transmitting information in or outside a room, if position information is distributed using a wireless LAN, radio waves leak to an adjacent room or corridor, so that a function of blocking radio waves by the outer wall to prevent radio waves from leaking out of the room is needed. Such blocking radio waves by the outer wall causes a problem that any device communicating with the outside, such as a mobile phone, is unusable.

When transmitting position information using visible light communication according to this embodiment, the communication can be confined within the reach of light. This has an advantageous effect that, for example, position information of a specific room can be easily transmitted to the user. There is also an advantageous effect that no special device is needed because normally light is blocked by the outer wall.

In addition, since the positions of lightings are usually unchanged in buildings, large-scale facilities, and ordinary houses, the position information transmitted by each lighting does not change frequently. The frequency of updating a database of the position information of each lighting is low. This has an advantageous effect that the maintenance cost in position information management is low.

(Supermarket system)

FIG. 171 illustrates a supermarket system in which, in a store, a device capable of the communication method according to this embodiment is mounted on a shopping cart to obtain position information from a shelf lighting or an indoor lighting.

A cart 6201 carries a visible light communication device that uses the communication method according to this embodiment. A lighting 6100 distributes position information and shelf information by visible light communication. The cart can receive product information distributed from the lighting. The cart can also receive the position information to thereby recognize at which shelf the cart is situated. For example, by storing shelf position information in the cart, the direction can be displayed on the cart when the user designates, to the cart, to which shelf he or she wants to go or which product he or she wants to buy.

Visible light communication enables obtainment of such accurate position information that makes the shelf positions known, so that the movement information of the cart can be obtained and utilized. For example, a database of position information obtained by the cart from each lighting may be created.

The information from the lighting, together with cart information, is transmitted using visible light communication, or transmitted to a server using a wireless LAN or the like. Alternatively, a memory is equipped in the cart, and data is collected after the store is closed to compile, in the server, which path each cart has taken.

By collecting the cart movement information, it is possible to recognize which shelf is popular and which aisle is passed most. This has an advantageous effect of being applicable to marketing.

(Communication between mobile phone terminal and camera)

FIG. 172 illustrates an example of application of using visible light communication according to this embodiment.

A mobile phone terminal 6301 transmits data to a camera 6302 using a flash. The camera 6302 receives the data transmitted from the mobile phone terminal 6301, from light information received by an imaging unit.

Camera imaging settings are stored in the mobile phone terminal 6301 beforehand, and setting information is transmitted to the camera 6302. Thus, the camera can be set using rich user interfaces of the mobile phone terminal.

Moreover, the use of the image sensor of the camera enables the setting information to be transmitted from the mobile phone terminal to the camera upon communication between the camera and the mobile phone terminal, with there being no need to provide a new communication device such as a wireless LAN.

(Underwater communication)

FIG. 173 is a schematic diagram of the case of adapting the communication method according to this embodiment to underwater communication. Since radio waves do not penetrate water, divers underwater or a ship on the sea and a ship in the sea cannot communicate with each other by radio. Visible light communication according to this embodiment, on the other hand, is available even underwater.

In the visible light communication method according to this embodiment, data can be transmitted from an object or building emitting light. By pointing a light receiving unit to a building, it is possible to obtain guidance information or detailed information of the building. This allows useful information to be provided to tourists.

The visible light communication method according to this embodiment is also applicable to communication from a lighthouse to a ship. More detailed information can be transferred because a larger amount of communication than in conventional techniques is possible.

Since light is used in visible light communication according to this embodiment, communication control on a room basis such as communicating only in a specific room can be carried out. As an example, the communication method according to this embodiment may be applied to the case of accessing information available only in a specific room in a library. As another example, the communication method according to this embodiment may be used for exchange of key information, while communication such as a wireless LAN is used for actual communication.

Note that the communication method according to this embodiment can be used for all imaging devices having MOS sensors and LED communication, and are applicable to digital cameras, smartphones, and so on.

(Embodiment 9)

(Service provision example)

This embodiment describes an example of service provision to a user as an example of application of the present invention, with reference to FIG. 174. FIG. 174 is a diagram for describing an example of service provision to a user in Embodiment 9. A network server 4000a, transmitters 4000b, 4000d, and 4000e, receivers 4000c and 4000f, and a building 4000g are illustrated in FIG. 174.

The receivers 4000c and 4000f receive signals from the plurality of transmitters 4000b, 4000d, and 4000e in or outside the house and process the received signals, and can thereby provide services to the user. Here, the transmitters and the receivers may process the signals individually to provide the services to the user, or provide the services to the user while changing their behaviors or transmitted signals according to instructions from a network in cooperation with the network server 4000a forming the network.

Note that the transmitters and the receivers may be equipped in mobile objects such as vehicles or persons, equipped in stationary objects, or later equipped in existing objects.

FIG. 175 is a diagram for describing an example of service provision to a user in Embodiment 9. Transmitters 4001a and a receiver 4001b are illustrated in FIG. 175.

As illustrated in FIG. 175, the receiver 4001b receives signals transmitted from the plurality of transmitters 4001a and processes information included in the signals, thereby providing services to the user. The information included in the signals are information relating to: devices IDs uniquely identifying devices; position information; maps; signs; tourist information; traffic information; regional services; coupons; advertisements; product description; characters; music; video; photos; sounds; menus; broadcasting; emergency guidance; time tables; guides; applications; news; bulletin boards; commands to devices; information identifying individuals; vouchers; credit cards; security; and URLs, for example.

The user may perform a registration process or the like for using the information included in the signals on a network server beforehand so that the user can be provided with services by receiving the signals by the receiver 4001b at the place where the transmitters 4001a transmit the signals. Alternatively, the user may be provided with services without via the network server.

FIG. 176 is a flowchart illustrating the case where the receiver simultaneously processes the plurality of signals received from the transmitters in this embodiment.

First, the procedure starts in Step 4002a. Next, in Step 4002b, the receiver receives the signals from the plurality of light sources. Next, in Step 4002c, the receiver determines the area in which each light source is displayed from the reception result, and extracts the signal from each area.

In Step 4002e, the receiver repeatedly performs a process based on information included in the signal for the number of obtained signals until the number of signals to be processed reaches 0 in Step 4002d. When the number of signals to be processed reaches 0, the procedure ends in Step 4002f.

FIG. 177 is a diagram illustrating an example of the case of realizing inter-device communication by two-way communication in Embodiment 9. An example of the case of realizing inter-device communication by two-way communication between a plurality of transmitter-receivers 4003a, 4003b, and 4003c each including a transmitter and a receiver is illustrated in FIG. 175. Note that the transmitter-receivers may be capable of communication between the same devices as in FIG. 175, or communication between different devices.

Moreover, in this embodiment, the user can be provided with services in such a manner that applications are distributed to a mobile phone, a smartphone, a personal computer, a game machine, or the like using the communication means in this embodiment or other networks or removable storages and already equipped devices (LED, photodiode, image sensor) are used from the applications. Here, the applications may be installed in the device beforehand.

(Example of service using directivity)

A service using directivity characteristics in this embodiment is described below, as an example of application of the present invention. In detail, this is an example of the case of using the present invention in public facilities such as a movie theater, a concert hall, a museum, a hospital, a community center, a school, a company, a shopping arcade, a department store, a government office, and a food shop. The present invention achieves lowering of directivity of a signal transmitted from a transmitter to a receiver as compared with conventional visible light communication, so that information can be simultaneously transmitted to many receivers present in a public facility.

FIG. 178 is a diagram for describing a service using directivity characteristics in Embodiment 9. A screen 4004a, a receiver 4004b, and a lighting 4004c are illustrated in FIG. 178.

As illustrated in FIG. 178, the application of this embodiment to the movie theater can suppress a situation where, during a movie, the user uses such a device (mobile phone, smartphone, personal computer, game machine, etc.) that interferes with the other users enjoying the movie. The transmitter uses, as a signal, video projected on the screen 4004a displaying the movie or light emitted from the lighting 4004c disposed in the facility, and includes a command for controlling the receiver 4004b in the signal. By the receiver 4004b receiving the command, it is possible to control the operation of the receiver 4004b to prevent any act that interferes with the other users watching the movie. The command for controlling the receiver 4004b relates to power or reception sound, communication function, LED display, vibration ON/OFF, level adjustment, and the like.

Moreover, the strength of directivity can be controlled by the receiver filtering the signal from the transmitter through the use of the intensity of the light source and the like. In this embodiment, the command or information can be simultaneously transmitted to the receivers present in the facility, by setting low directivity.

In the case of increasing the directivity, the constraint may be imposed by the transmitter limiting the amount of light source or the receiver reducing the sensitivity of receiving the light source or performing signal processing on the received light source amount.

In the case where this embodiment is applied to a store where the user's order is received and processed at the place, such as a food shop or a government office, a signal including the order transmitted from a transmitter held by the user is received by a receiver placed at such a position that can overlook the store, so that which menu is ordered by the user of which seat can be detected. The service provider processes the order on a time axis, with it being possible to provide the service of high fairness to the user.

Here, a secret key or a public key preset between the transmitter and the receiver may be used to encrypt/decrypt the information included in the signal, to thereby restrict transmitters capable of signal transmission and receivers capable of signal reception. Moreover, a protocol such as SSL used in the Internet by default may be employed for a transmission path between the transmitter and the receiver, to prevent signal interception by other devices.

(Service example by combination of real world and Internet world)

The following describes a service provided to a user by superimposing of information of the real world captured by a camera and the Internet world, as an example of application of the present invention.

FIG. 179 is a diagram for describing another example of service provision to a user in Embodiment 9. In detail, FIG. 179 illustrates an example of a service in the case of applying this embodiment using a camera 4005a equipped in a receiver such as a mobile phone, a smartphone, or a game machine. The camera 4005a, light sources 4005b, and superimposition information 4005c are illustrated in FIG. 179.

Signals 4005d transmitted from the plurality of light sources 4005b are extracted from the imaging result of the camera 4005a, and information included in the signals 4005d is superimposed on the camera 4005a and displayed. Examples of the superimposition information 4005c to be superimposed on the camera 4005a include character strings, images, video, characters, applications, and URLs. Note that the information included in the signals may be processed not only by superimposition on the camera but also by use of sounds, vibrations, or the like.

FIG. 180 is a diagram illustrating a format example of a signals included in a light source emitted from a transmitter. Light source characteristics 4006a, a service type 4006b, and service-related information 4006c are illustrated in FIG. 180.

The information 4006c related to the service of superimposing the signal received by the receiver on the camera is the result of filtering the information obtainable from the signal according to the information such as the service type 4006b included in the signal transmitted from the transmitter and the distance from the camera to the light source. The information to be filtered by the receiver may be determined according to settings made in the receiver beforehand or user preference set in the receiver by the user.

The receiver can estimate the distance to the transmitter transmitting the signal, and display the distance to the light source. The receiver estimates the distance to the transmitter, by performing digital signal processing on the intensity of light emitted from the transmitter captured by the camera.

However, since the intensity of light of each transmitter captured by the camera of the receiver is different depending on the position or strength of the light source, significant deviation may be caused if the distance is estimated only by the intensity of light of the captured transmitter.

To solve this, the light source characteristics 4006a indicating the intensity, color, type, and the like of the light source are included in the signal transmitted from the transmitter. By performing digital signal processing while taking into account the light source characteristics included in the signal, the receiver can estimate the distance with high accuracy. In the case where a plurality of light sources are captured by the receiver, if all light sources have the same intensity, the distance is estimated using the intensity of light of the light source. If there is a transmitter of different intensity out of the light sources captured by the receiver, the distance from the transmitter to the receiver is estimated by not only using the light source amount but also using other distance measurement means in combination.

As the other distance measurement means, the distance may be estimated by using the parallax in image captured by a twin-lens camera, by using an infrared or millimeter wave radar, or by obtaining the moving amount of the receiver by an accelerometer or an image sensor in the receiver and combining the moving distance with triangulation.

Note that the receiver may not only filter and display the signal using the strength or distance of the signal transmitted from the transmitter, but also adjust the directivity of the signal received from the transmitter.

(Embodiment 10)

FIG. 181 is a diagram illustrating a principle in Embodiment 10. FIGS. 182 to 194 are each a diagram illustrating an example of operation in Embodiment 10.

As illustrated in (a) in FIG. 181, an image sensor such as a CMOS image sensor for a camera has a delay in exposure time of each line 1. At a normal shutter speed, the lines have temporally overlapping parts, and so the light signal of the same time is mixed in each line and cannot be identified. When decreasing the shutter open time, no overlap occurs as in (a) in FIG. 181 if the exposure time is reduced to less than or equal to a predetermined shutter speed, as a result of which the light signal can be temporally separated and read on a line basis.

When the light signal "1011011" as in the upper part of (a) in FIG. 181 is given in this state, the first light signal "1" enters in the shutter open time of line 1 and so is photoelectrically converted in line 1, and output as "1" of an electrical signal 2a in (b) in FIG. 181. Likewise, the next light signal "0" is output as the electrical signal "0" in (b). Thus, the 7-bit light signal "1011011" is accurately converted to the electrical signal.

In actuality, there is a dead time due to a vertical blanking time as in (b) in FIG. 181, so that the light signal in some time slot cannot be extracted. In this embodiment, this blanking time problem is solved by changing, when switching from "normal imaging mode" to "light signal reading mode", the access address of the imaging device such as CMOS to read the first read line la following the last read line 1h at the bottom. Though this has a slight adverse effect on the image quality, an advantageous effect of capable of continuous (seamless) reading can be achieved, which contributes to significantly improved transmission efficiency.

In this embodiment, one symbol at the maximum can be assigned to one line. In the case of employing the below-mentioned synchronization method, transmission of 30 kbps at the maximum is theoretically possible when using an imaging element of 30 fps and 1000 lines.

Note that synchronization can be established by, with reference to the signal of the light receiving element of the camera as in FIG. 182, vertically changing the line access clock so as to attain the maximum contrast or reduce the data error rate. In the case where the line clock of the image sensor is faster than the light signal, synchronization can be established by receiving one symbol of the light signal in n lines which are 2 or 3 lines as in FIG. 182.

Moreover, when a display of a TV in FIG. 183 or a TV in the left part of FIG. 184 or a light source vertically divided into n which is 10 as an example is captured by the camera of the mobile phone by switching to the detection mode of non-blanking, high-speed electronic shutter, and the like according to the present invention, ten stripe patterns specific to this embodiment can be detected independently of each other as in the right part of FIG. 184. Thus, a 10-times (n-times) transfer rate can be achieved.

For example, dividing an image sensor of 30 fps and 1000 lines into 10 results in 300 kbps. In HD video, there are 1980 pixels in the horizontal direction, so that the division into 50 is possible. This yields 1.5 Mbps, enabling reception of video data. If the number is 200, HD video can be transmitted.

To achieve the advantageous effects in this embodiment, it is necessary to decrease the shutter time to less than or equal to $T_0$ where $T_0$ is the detectable longest exposure time. As in the upper right part of FIG. 181, when the shutter time is decreased to less than or equal to half of 1/fp where fp is the frame frequency, binary detection is possible.

However, 4-value PPM or the like is necessary to suppress flicker, so that the shutter time is less than or equal to 1/1(fp x 2 x 4), i.e. 1/8fp. Since the camera of the mobile phone typically has fp = 30, 60, by setting the shutter speed less than or equal to 1/240, 1/480, i.e. the shutter speed less than or equal to 1/480, visible light communication according to this embodiment can be received using the camera of the mobile phone or the like while maintaining compatibility.

There are actually a large number of mobile phones that do not employ the synchronization method according to this embodiment, and so asynchronous communication is initially performed. In this case, by receiving one symbol using scan lines greater than or equal to 2 times the clock of the light signal, in more detail, 2 to 10 times the clock of the light signal, compatible communication can be realized though with a decrease in information rate.

In the case of a lighting device in which flicker needs to be suppressed, light emission is performed by turning OFF or reducing light during one time slot of 4-value PPM, i.e. one time slot of four bits. In this case, though the bitrate decreases by half, flicker is eliminated. Accordingly, the device can be used as a lighting device and transmit light and data.

FIG. 185 illustrates a situation of light signal reception in a state where all lightings indoors transmit a common signal during a common time slot and an individual lighting $L_4$ transmits individual sub-information during an individual time slot. $L_4$ has a small area, and so takes time to transmit a large amount of data. Hence, only an ID of several bits is transmitted during the individual time slot, while all of $L_1$, $L_2$, $L_3$, $L_4$, and $L_5$ transmit the same common information during the common time slot.

This is described in detail, with reference to FIG. 186. In time slot A in the lower part of FIG. 186, two lightings in a main area M which are all lightings in a room and $S_1$, $S_2$, $S_3$, and $S_4$ at parts of the lightings transmit the same light signal simultaneously, to transmit common information "room reference position information, arrangement information of individual device of each ID (difference position information from reference position), server URL, data broadcasting, LAN transmission data". Since the whole room is illuminated with the same light signal, there is an advantageous effect that the camera unit of the mobile phone can reliably receive data during the common time slot.

In time slot B, on the other hand, the main area M does not blink but continuously emits light with 1/n of the normal light intensity, as illustrated in the upper right part of FIG. 186. In the case of 4-value PPM, the average light intensity is unchanged when emitting light with 3/4, i.e. 75%, of the normal light intensity, as a result of which flicker can be prevented. Blinking in the range where the average light intensity is unchanged causes no flicker, but is not preferable because noise occurs in the reception of the partial areas $S_1$, $S_2$, $S_3$, and $S_4$ in time slot B. In time slot B, $S_1$, $S_2$, $S_3$, and $S_4$ each transmit a light signal of different data. The main area M does not transmit a modulated signal, and so is separated in position as in the screen of the mobile phone in the upper right part of FIG. 186. Therefore, for example in the case of extracting the image of the area $S_1$, stripes appearing in the area can be easily detected because there is little noise, with it being possible to obtain data stably.

For instance, in the case of 4-value PPM, when the camera scans in the lateral direction (horizontal direction) as illustrated in FIG. 187, a lighting $L_2$ is captured by a face camera, and "0101", i.e. 4-bit data per frame, can be demodulated as a result of three stripes appearing as illustrated on the right side. ID data is included in this data. Accordingly, there is an advantageous effect that the position of the mobile terminal can be detected at high speed, i.e. in a short time, by computing the distance difference information between the reference position information of the common data and each ID of the individual data or the arrangement information of each ID of the individual data. Thus, for example, the data and positions of four light sources can be instantaneously recognized in one frame information, merely by transmitting 2-bit ID information.

An example of using low-bit ID information of individual light sources is described below, with reference to FIG. 188.

In this embodiment, in common data 101 in FIG. 188, a large amount of data including a reference position, a server URL, arrangement information of each ID, and area-specific data broadcasting are transmitted in a common time slot using all lightings as illustrated.

Individual IDs of $L_1$, $L_2$, $L_3$, and $L_4$ to $L_8$ in (a) in FIG. 188 can be 3-bit demodulated as mentioned earlier.

As illustrated in (b) in FIG. 188, by transmitting signals of a frequency f1 and a frequency f2, too, one or more stripes that are specific to the present invention are detected in each lighting unit and converted to ID data corresponding to the frequency or ID data corresponding to the modulated data. Computing this pattern using the arrangement information makes it possible to recognize from which position the image is captured. That is, the position of the terminal can be specified as the arrangement information of each ID and the reference position information can be obtained from $L_0$.

In (b) in FIG. 188, by assigning the frequencies f1 and f2 to IDs and setting, for example, f1 = 1000 Hz, f2 = 1100 Hz, ..., f16 = 2500 Hz, a hexadecimal value, i.e. a 4-bit value, can be expressed by the frequency. Changing the transmission frequency at predetermined time intervals enables more signals to be transmitted. When changing the frequency or starting/ending the modulation, the average luminance is kept constant before and after the change. This has an advantageous effect of causing no flicker perceivable by the human eye.

Note that, since the receiver detects frequencies from signal periods, reception errors can be reduced by assigning signals so that the inverses or logarithms of frequencies are at regular intervals, rather than by assigning frequencies to signals at regular intervals.

For example, changing the signal per 1/15 second enables transmission of 60 bits per second. A typical imaging device captures 30 frames per second. Accordingly, by transmitting the signal at the same frequency for 1/15 second, the transmitter can be reliably captured even if the transmitter is shown only in one part of the captured image.

Moreover, by transmitting the signal at the same frequency for 1/15 second, the signal can be received even in the case where the receiver is under high load and unable to process some frame or in the case where the imaging device is capable of capturing only 15 frames per second.

When frequency analysis is conducted by, for example, Fourier transforming the luminance in the direction perpendicular to the exposure lines, the frequency of the transmission signal appears as a peak. In the case where a plurality of frequencies, as in a frequency change part, are captured in one frame, a plurality of peaks weaker than in the case of Fourier transforming the single frequency signal are obtained. The frequency change part may be provided with a protection part so as to prevent adjacent frequencies from being mixed with each other.

According to this method, the transmission frequency can be analyzed even in the case where light transmitted at a plurality of frequencies in sequence is captured in one frame, and the transmission signal can be received even when the frequency of the transmission signal is changed at time intervals shorter than 1/15 second or 1/30 second.

The transmission signal sequence can be recognized by performing Fourier transform in a range shorter than one frame. Alternatively, captured frames may be concatenated to perform Fourier transform in a range longer than one frame. In this case, the luminance in the blanking time in imaging is treated as unknown. The protection part is a signal of a specific frequency, or is unchanged in luminance (frequency of 0 Hz).

In (b) in FIG. 188, the FM modulated signal of the frequency f2 is transmitted and then the PPM modulated signal is transmitted. As a result of alternately transmitting the FM modulated signal and the PPM modulated signal in this way, even a receiver that supports only one of the methods can receive the information. Besides, more important information can be transmitted with higher priority, by assigning the more important information to the FM modulated signal which is relatively easy to receive.

In this embodiment, since the ID of each device and its position on the screen are simultaneously obtained, it is possible to download image information, position information, and an application program linked with each ID of the lighting in a database of a cloud server at an URL linked with the lighting, and superimpose and display an image of a related product or the like on the video of the device having the lighting of the ID according to AR. In such a case, switching the demodulation mode to the imaging mode in this embodiment produces an advantageous effect that an AR image superimposed on beautiful video can be attained.

As illustrated in FIG. 185, by transmitting distance difference d in east, west, south, and north between the light source of each ID and the reference position in time slot A, the accurate position of the lighting $L_4$ in cm is known. Next, height h is calculated from ceiling height H and the height of the user of the mobile phone, and the orientation information of the mobile phone is corrected using a magnetic sensor, an accelerometer, and an angular velocity sensor, to obtain accurate camera direction angle $\theta 2$ and angle $\theta 1$ between the lighting and the mobile phone. d is calculated according to, for example, $d = (H - h) \times \arctan \cdot \theta 1$.

The position of the mobile phone can be calculated with high accuracy in this way. By transmitting the common light signal in time slot A and the individual light signal in time slot B, an advantageous effect of ensuring that the large amount of common information and the small amount of individual information such as IDs are substantially simultaneously transmitted can be achieved.

The individual light sources $S_1$ to $S_4$ are captured as in the mobile terminal in the upper light part of FIG. 186. As illustrated in the time chart in the lower part of FIG. 186, only $S_1$ transmits the light signal in time C. There is an advantageous effect that the detection can be made without influence of noise, because only one stripe appears as in t = C in FIG. 189.

Two pieces of individual data may be transmitted as in t = D, E. Transmitting most spatially separate individual data as in t = H, I has an advantageous effect of a reduction in error rate because they are easily separated on the screen.

In t = C in FIG. 189, only $S_1$ needs to be demodulated, and accordingly the scan of the image sensor for the other areas is unnecessary. Hence, by reducing the number of scan lines so as to include the area of $S_1$ as in t = C, it is possible to scan only the area of $S_1$ and demodulate the data. This has an advantageous effect that not only a speedup can be achieved but also a large amount of data can be demodulated only in the narrow area of $S_1$.

In such a case, however, there is a possibility that the area $S_1$ deviates from the scan range of the image sensor due to hand movement.

Hence, image stabilization as illustrated in FIG. 190 is important. The gyroscope included in the mobile phone is typically unable to detect fine rotation in a narrow range such as hand movement.

Accordingly, in the case of receiving the light signal of $L_2$ by the face camera as in the left part of FIG. 190, it is difficult to detect blur due to hand movement from the image captured by the face camera when, for example, the scan is limited. In view of this, the in camera is turned ON, and blur is detected from the image of the in camera to correct the scan range or the detection range. Thus, the effect of hand movement can be reduced. This is because the hand movement of the face camera and the hand movement of the in camera are the same.

When the shutter speed of the scan area other than the light signal pattern in the face camera is decreased and the normal image is obtained from this area, image stabilization can be performed using this image. In this case, blur detection and signal detection are possible with one camera. The same advantageous effect can be achieved in the case of using the in camera in the right part of FIG. 190.

In FIG. 191, the light signal is detected by the face camera to first obtain the position information of the terminal.

In the case of calculating the moving distance $l_2$ from this point, the accelerometer for the mobile phone is not useful because of poor accuracy. In such a case, the moving distance $l_2$ can be calculated from the orientation of the terminal and the change in the pattern of the floor surface using the in camera opposite to the face camera, as in FIG. 191. The pattern of the ceiling may be detected using the face camera.

Actual example of applications are described below.

FIG. 192 is a diagram illustrating a situation of receiving data broadcasting which is common data from the ceiling lighting and obtaining the position of the user itself from individual data, inside a station.

In FIG. 193, after a mobile terminal on which barcode is displayed displays authentication information and a terminal of a coffee shop reads the authentication information, a light emitting unit in the terminal of the shop emits light and the mobile terminal receives the light according to the present invention to perform mutual authentication. The security can be enhanced in this way. The authentication may be performed in reverse order.

The customer carrying the mobile terminal sits at a table and transmits obtained position information to the terminal of the shop via a wireless LAN or the like, as a result of which the position of the customer is displayed on the shop staff's terminal. This enables the shop staff to bring the ordered drink to the table of the position information of the customer ordering the drink.

In FIG. 194, the passenger detects his or her position in a train or an airplane according to the method of this embodiment, and orders a product such as food through his/her terminal. The crew has a terminal according to the present invention on the cart and, since the ID number of the ordered product is displayed at the position of the customer on the screen, properly delivers the ordered product of the ID to the customer.

FIG. 184 is a diagram illustrating the case of using the method or device of this embodiment for a backlight of a display of a TV or the like. Since a fluorescent lamp, an LED, or an organic EL is capable of low luminance modulation, transmission can be performed according to this embodiment. In terms of characteristics, however, the scan direction is important. In the case of portrait orientation as in a smartphone, the scan is horizontally performed. Hence, by providing a horizontally long light emitting area at the bottom of the screen and reducing the contrast of video of the TV or the like to be closer to white, there is an advantageous effect that the signal can be received easily.

In the case of scanning in the vertical direction as in a digital camera, a vertically long display is provided as in the right side of the screen in FIG. 183.

By providing these two areas in one screen and emitting the same light signal from both areas, the signal can be received by an image sensor of either scan direction.

In the case where a horizontal scan image sensor is receiving light of a vertical light emitting unit, a message such as "pleas rotate to horizontal" may be displayed on the terminal screen to prompt the user to receive the light more accurately and faster.

Note that the communication speed can be significantly increased by controlling the scan line read clock of the image sensor of the camera to synchronize with the light emission pattern of the light emitting unit as in FIG. 182.

In the case of detecting one symbol of the light emission pattern in 2 lines as in (a) in FIG. 182, synchronization is established in the pattern in the left part. In the pattern in the middle part, the image sensor reading is fast, so that the read clock of the imaging element is slowed down for synchronization. In the pattern in the right part, the read clock is speeded up for synchronization.

In the case of detecting one symbol in 3 lines as in (b) in FIG. 182, the read clock is slowed down in the pattern in the middle part, and speeded up in the pattern in the right part.

Thus, high speed optical communication can be realized.

In bidirectional communication, an infrared light receiving unit provided in the lighting device of the light emitting unit as a motion sensor may be used for reception, with it being possible to perform bidirectional reception in the lighting device with no additional component. The terminal may perform transmission using the electronic flash for the camera, or may be additionally provided with an inexpensive infrared light emitting unit. Thus, bidirectional communication is realized without significant component addition.

(Embodiment 11)

(Signal transmission by phase modulation)

FIG. 195 is a timing diagram of a transmission signal in an information communication device in Embodiment 11.

In FIG. 195, a reference waveform (a) is a clock signal of period T, which serves as the reference for the timing of the transmission signal. A transmission symbol (b) represents a symbol string generated based on a data string to be transmitted. Here, the case of one bit per symbol is illustrated as an example, which is the same binary as the transmission data. A transmission waveform (c) is a transmission waveform phase-modulated according to the transmission symbol with respect to the reference waveform. The transmission light source is driven according to this waveform. The phase modulation is performed by phase-shifting the reference waveform in correspondence with the symbol. In this example, symbol 0 is assigned phase 0°, and symbol 1 is assigned phase 180°.

FIG. 196 is a diagram illustrating the relations between the transmission signal and the reception signal in Embodiment 11.

The transmission signal is the same as in FIG. 195. The light source emits light only when the transmission signal is 1, with the light emission time being indicated by the diagonally right down shaded area. The diagonally right up shaded band represents the time during which the pixels of the image sensor are exposed (exposure time tE). The signal charge of the pixels of the image sensor is generated in the area overlapping with the diagonally right down shaded area indicating the light emission time. A pixel value p is proportional to the overlapping area. Here, the relation of Expression 1 holds between the exposure time tE and the period T.

$$tE = T/2 \times (2n + 1) \quad \text{(where n is a natural number)}$$
$$\text{(Expression 1).}$$

Note that FIGS. 196 to 200 illustrate the case where n = 2, that is, tE = 2.5 T.

The reception waveform indicates the pixel value p of each line. Here, the value of the pixel value axis is normalized with the intensity of received light per period being set as 1. As mentioned above, the exposure time tE has the section of T(n + 1/2), so that the pixel value p is always in the range of $n \le p \le n + 1$. In the example in FIG. 196, $2 \le p \le 3$.

FIGS. 197 to 199 are each a diagram illustrating the relations between the transmission signal and the reception signal for a symbol string different from that in FIG. 196.

The transmission signal has a preamble including a consecutive same-symbol string (e.g. string of consecutive symbols 0) (not illustrated). The receiver generates the reference (fundamental) signal for reception from the consecutive symbol string in the preamble, and uses it as the timing signal for reading the symbol string from the reception waveform. In detail, for consecutive symbols 0, the reception waveform returns a fixed waveform repeating $2 \rightarrow 3 \rightarrow 2$, and the clock signal is generated as the reference signal based on the output timing of the pixel value 3, as illustrated in FIG. 196.

Next, the symbol reading from the reception waveform can be performed in such a manner that the reception signal in one section of the reference signal is read where the pixel value 3 is read as symbol 0 and the pixel value 2 is read as symbol 1. FIGS. 197 to 199 illustrate the state of reading symbols in the fourth period.

FIG. 200 is a diagram summarizing FIGS. 196 to 199. Since the lines are closely aligned, the pixel boundary in the line direction is omitted so that the pixels are continuous in the drawing. The state of reading symbols in the fourth to eighth periods is illustrated here.

According to such a structure, in this embodiment, the average of the intensity of the light signal taken for a sufficiently longer time than the period of the reference wave is always constant. By setting the frequency of the reference wave appropriately high, it is possible to set the time to be shorter than the time in which humans perceive a change in light intensity. Hence, the transmission light emitting source observed by the human eye appears to be emitting light uniformly. Since no flicker of the light source is perceived, there is an advantageous effect of causing no annoyance on the user as in the previous embodiment.

In a situation where the exposure time of each line is long and the time overlapping with the exposure time of the adjacent line is long, the amplitude modulation (ON/OFF modulation) in the previous embodiment has the problem that the signal frequency (symbol rate) cannot be increased and so the sufficient signal transmission speed cannot be attained. In this embodiment, on the other hand, the signal leading and trailing edges are detectable even in such a situation, with it being possible to increase the signal frequency and attain the high signal transmission speed.

The term "phase modulation" used here means the phase modulation for the reference signal waveform. In the original sense, a carrier is light, which is amplitude-modulated (ON/OFF modulated) and transmitted. Therefore, the modulation scheme in this signal transmission is one type of amplitude modulation.

Note that the transmission signal mentioned above is merely an example, and the number of bits per symbol may be set to 2 or more. Besides, the correspondence between the symbol and the phase shift is not limited to 0° and 180°, and an offset may be provided.

Though not mentioned above, the structures and operations of the light signal generating means and light signal receiving means described in Embodiments 1 to 6 with reference to FIGS. 1 to 77 may be replaced with the structures and operations of the high-speed light emitting means and light signal receiving means described in Embodiment 7 and its subsequent embodiments with reference to FIG. 78 onward, to achieve the same advantageous effects. Conversely, the high-speed light emitting means and receiving means in Embodiment 7 and its subsequent embodiments may equally be replaced with the low-speed light emitting means and receiving means.

For instance, in the above-mentioned example where the data such as position information in the light signal from the lighting is received using the face camera which is the display-side camera of the mobile phone in FIG. 191 or using the opposite in camera in FIG. 190, the up/down direction can be detected based on gravity through the use of the accelerometer.

Consider the case of receiving the light signal by the mobile phone placed on the table in the restaurant, as illustrated in FIG. 193. The light signal may be received by operating the face camera when the front side of the mobile phone is facing upward, and operating the in camera when the front side is facing downward, according to the signal of the accelerometer. This contributes to lower power consumption and faster light signal reception, as unnecessary camera operations can be stopped. The same operation may be performed by detecting the orientation of the camera on the table from the brightness of the camera. Moreover, when the camera switches from the imaging mode to the light signal reception mode, a shutter speed increase command and an imaging element sensitivity increase command may be issued to the imaging circuit unit. This has an advantageous effect of enhancing the sensitivity and making the image brighter. Though noise increases with the increase in sensitivity, such noise is white noise. Since the light signal is in a specific frequency band, the detection sensitivity can be enhanced by separation or removal using a frequency filter. This enables detection of a light signal from a dark lighting device.

In the present invention, a lighting device in a space which is mainly indoors is caused to emit a light signal, and a camera unit of a mobile terminal including a communication unit, a microphone, a speaker, a display unit, and the camera unit with the in camera and the face camera receives the light signal to obtain position information and the like. When the mobile terminal is moved from indoors to outdoors, the position information can be detected by GPS using satellite. Accordingly, by obtaining the position information of the boundary of the light signal area and automatically switching to the signal reception from GPS, an advantageous effect of seamless position detection can be achieved.

When moving from outdoors to indoors, the boundary is detected based on the position information of GPS or the like, to automatically switch to the position information of the light signal. In the case where barcode is displayed on the display unit of the mobile phone for authentication by a POS terminal at an airplane boarding gate or a store, the use of a server causes a long response time and is not practical, and therefore only one-way authentication is possible.

According to the present invention, on the other hand, mutual authentication can be carried out by transmitting the light signal from the light emitting unit of the reader of the POS terminal or the like to the face camera unit of the mobile phone. This contributes to enhanced security.

(Embodiment 12)

This embodiment describes each example of application using a receiver such as a smartphone and a transmitter for transmitting information as an LED blink pattern in Embodiments 1 to 11 described above.

FIG. 201 is a diagram illustrating an example of application of the receiver and the transmitter in Embodiment 12.

A transmitter 7001a such as a signage of a restaurant transmits identification information (ID) of the transmitter 7001a to a receiver 7001b such as a smartphone. The receiver 7001b obtains information associated with the ID from a server, and displays the information. Examples of the information include a route to the restaurant, availability, and a coupon.

FIG. 202 is a diagram illustrating an example of application of the receiver and the transmitter in Embodiment 12.

A transmitter 7042b such as a signage of a movie transmits identification information (ID) of the transmitter 7042b to a receiver 7042a such as a smartphone. The receiver 7042a obtains information associated with the ID from a server, and displays the information. Examples of the information include an image 7042c prompting to reserve a seat for the movie, an image 7042d showing scheduled times for the movie, an image 7042e showing availability, and an image 7042f notifying reservation completion.

FIG. 203 is a diagram illustrating an example of application of the receiver and the transmitter in Embodiment 12.

A transmitter 7043b such as a signage of a drama transmits identification information (ID) of the transmitter 7043b to a receiver 7043a such as a smartphone. Having received the ID, the receiver 7043a obtains information associated with the ID from a server, and displays the information. Examples of the information include an image 7043c prompting to timer record the drama, an image 7043d prompting to select a recorder for recording the drama, and an image 7043e notifying timer recording completion.

FIG. 204 is a diagram illustrating an example of application of the receiver and the transmitter in Embodiment 12.

A transmitter 7044b or 7044c such as a signage of a store, e.g. a roof sign or a sign placed on a street, transmits identification information (ID) of the transmitter 7044b or 7044c to a receiver 7044a such as a smartphone. The receiver 7044a obtains information associated with the ID from a server, and displays the information. Examples of the information include an image 7044b showing availability, a coupon, and the like of the store.

FIG. 205 is a flowchart illustrating an example of process operations of the receiver and the transmitter in Embodiment 12. This flowchart corresponds to the examples of application illustrated in FIGS. 201 to 204.

First, the ID of the transmitter and the information to be provided to the receiver receiving the ID are stored in the server in association with each other (Step 7101a). The information to be provided to the receiver may include information such as a store name, a product name, map information to a store, availability information, coupon information, stock count of a product, show time of a movie or a play, reservation information, and a URL of a server for reservation or purchase.

Next, the transmitter transmits the ID (Step 7101b). The camera of the receiver is pointed to the transmitter, to receive the ID (Step 7101c).

The receiver transmits the received ID to the server, and stores the information associated with the ID in the receiver (Step 7101d).

The receiver also stores a terminal ID and a user ID in the server (Step 7101e). The receiver displays the information stored in the server as the information to be displayed on the receiver (Step 7101f).

The receiver adjusts the display, based on a user profile stored in the receiver or the server (Step 7101g). For example, the receiver performs control such as changing the font size, hiding age-restricted content, or preferentially displaying content assumed to be preferred from the user's past behavior.

The receiver displays the route from the current position to the store or the sales floor (Step 7101h). The receiver obtains information from the server according to need, and updates and displays availability information or reservation information (Step 7101i). The receiver displays a button for storing the obtained information and a button for cancelling the storage of the displayed information (Step 7101j).

The user taps the button for storing the information obtained by the receiver (Step 7101k). The receiver stores the obtained information so as to be redisplayable by a user operation (Step 7101m). A reader in the store reads information transmitted from the receiver (Step 7101n). Examples of the transmission method include visible light communication, communication via Wi-Fi or Bluetooth, and communication using 2D barcode. The transmission information may include the ID of the receiver or the user ID.

The reader in the store stores the read information and an ID of the store in the server (Step 7101p). The server stores the transmitter, the receiver, and the store in association with each other (Step 7101q). This enables analysis of the advertising effectiveness of the signage.

FIG. 206 is a diagram illustrating an example of application of the receiver and the transmitter in Embodiment 12.

A transmitter 7002a such as a signage of a plurality of stores transmits identification information (ID) of the transmitter 7002a to a receiver 7002b such as a smartphone. Having received the ID, the receiver 7002b obtains information associated with the ID from a server, and displays the same information as the signage. When the user selects a desired store by tapping or voice, the receiver 7002b displays the details of the store.

FIG. 207 is a flowchart illustrating an example of process operations of the receiver 7002b and the transmitter 7002a in Embodiment 12.

The ID of the transmitter 7002a and the information to be provided to the receiver 7002b receiving the ID are stored in the server in association with each other (Step 7102a). The information to be provided to the receiver 7002b may include information such as a store name, a product name, map information to a store, availability information, coupon information, stock count of a product, show time of a movie or a play, reservation information, and a URL of a server for reservation or purchase. The position relation of information displayed on the transmitter 7002a is stored in the server.

The transmitter 7002a such as a signage transmits the ID (Step 7102b). The camera of the receiver 7002b is pointed to the transmitter 7002a, to receive the ID (Step 7102c). The receiver 7002b transmits the received ID to the server, and obtains the information associated with the ID (Step 7102d). The receiver 7002b displays the information stored in the server as the information to be displayed on the receiver 7002b (Step 7102e). An image which is the information may be displayed on the receiver 7002b while maintaining the position relation of the image displayed on the transmitter 7002a.

The user selects information displayed on the receiver 7002b, by designation by screen tapping or voice (Step 7102f). The receiver 7002b displays the details of the information designated by the user (Step 7102g).

FIG. 208 is a diagram illustrating an example of application of the receiver and the transmitter in Embodiment 12.

A transmitter 7003a such as a signage of a plurality of stores transmits identification information (ID) of the transmitter 7003a to a receiver 7003b such as a smartphone. Having received the ID, the receiver 7003b obtains information associated with the ID from a server, and displays information near (e.g. nearest) the center of the captured image of the camera of the receiver 7003b from among the information displayed on the signage.

FIG. 209 is a flowchart illustrating an example of process operations of the receiver 7003b and the transmitter 7003a in Embodiment 12.

The ID of the transmitter 7003a and the information to be provided to the receiver 7003b receiving the ID are stored in the server in association with each other (Step 7103a). The information to be provided to the receiver 7003b may include information such as a store name, a product name, map information to a store, availability information, coupon information, stock count of a product, show time of a movie or a play, reservation information, and a URL of a server for reservation or purchase. The position relation of information displayed on the transmitter 7003a is stored in the server.

The transmitter 7003a such as a signage transmits the ID (Step 7103b). The camera of the receiver 7003b is pointed to the transmitter 7003a, to receive the ID (Step 7103c). The receiver 7003b transmits the received ID to the server, and obtains the information associated with the ID (Step 7103d). The receiver 7003b displays information nearest the center of the captured image or the designated part from among the information displayed on the signage (Step 7103e).

FIG. 210 is a diagram illustrating an example of application of the receiver and the transmitter in Embodiment 12.

A transmitter 7004a such as a signage of a plurality of stores transmits identification information (ID) of the transmitter 7004a to a receiver 7004b such as a smartphone. Having received the ID, the receiver 7004b obtains information associated with the ID from a server, and displays information (e.g. image showing the details of the store "B Cafe") near the center of the captured image of the camera of the receiver 7004b from among the information displayed on the signage. When the user flicks left the screen, the receiver 7004b displays an image showing the details of the store "C Bookstore" on the right side of the store "B Cafe" on the signage. Thus, the receiver 7004b displays the image in the same position relation as that in the transmitter signage.

FIG. 211 is a flowchart illustrating an example of process operations of the receiver 7004b and the transmitter 7004a in Embodiment 12.

The ID of the transmitter 7004a and the information to be provided to the receiver 7004b receiving the ID are stored in the server in association with each other (Step 7104a). The information to be provided to the receiver 7004b may include information such as a store name, a product name, map information to a store, availability information, coupon information, stock count of a product, show time of a movie or a play, reservation information, and a URL of a server for reservation or purchase. The position relation of information displayed on the transmitter 7004a is stored in the server.

The transmitter 7004a such as a signage transmits the ID (Step 7104b). The camera of the receiver 7004b is pointed to the transmitter 7004a, to receive the ID (Step 7104c). The receiver 7004b transmits the received ID to the server, and obtains the information associated with the ID (Step 7104d). The receiver 7004b displays the information stored in the server as the information to be displayed on the receiver 7004b (Step 7104e).

The user performs a flick operation on the receiver 7004b (Step 7104f). The receiver 7004b changes the display in the same position relation as the information displayed on the transmitter 7004a, according to the user operation (Step 7104g). For example, in the case where the user flicks left the screen to display the information on the right side of the currently displayed information, the information displayed on the transmitter 7004a on the right side of the information currently displayed on the receiver 7004b is displayed on the receiver 7004b.

FIG. 212 is a diagram illustrating an example of application of the receiver and the transmitter in Embodiment 12.

A transmitter 7005a such as a signage of a plurality of stores transmits identification information (ID) of the transmitter 7005a to a receiver 7005b such as a smartphone. Having received the ID, the receiver 7005b obtains information associated with the ID from a server, and displays information (e.g. image showing the details of the store "B Cafe") near the center of the captured image of the camera of the receiver 7005b from among the information displayed on the signage. When the user taps the left of the screen (or a left arrow on the screen) of the receiver 7005b, the receiver 7005b displays an image showing the details of the store "A Restaurant" on the left side of the store "B Cafe" on the signage. When the user taps the bottom of the screen (or a down arrow on the screen) of the receiver 7005b, the receiver 7005b displays an image showing the details of the store "E Office" below the store "B Cafe" on the signage. When the user taps the right of the screen (or a right arrow on the screen) of the receiver 7005b, the receiver 7005b displays an image showing the details of the store "C Bookstore" on the left side of the store "B Cafe" on the signage. Thus, the receiver 7004b displays the image in the same position relation as that in the transmitter signage.

FIG. 213 is a flowchart illustrating an example of process operations of the receiver 7005b and the transmitter 7005a in Embodiment 12.

The ID of the transmitter 7005a and the information to be provided to the receiver 7005b receiving the ID are stored in the server in association with each other (Step 7105a). The information to be provided to the receiver 7005b may include information such as a store name, a product name, map information to a store, availability information, coupon information, stock count of a product, show time of a movie or a play, reservation information, and a URL of a server for reservation or purchase. The position relation of information displayed on the transmitter 7005a is stored in the server.

The transmitter 7005a such as a signage transmits the ID (Step 7105b). The camera of the receiver 7005b is pointed to the transmitter 7005a, to receive the ID (Step 7105c). The receiver 7005b transmits the received ID to the server, and obtains the information associated with the ID (Step 7105d). The receiver 7005b displays the information stored in the server as the information to be displayed on the receiver 7005b (Step 7105e).

The user taps the edge of the screen displayed on the receiver 7005b or the up, down, left, or right direction indicator displayed on the receiver 7005b (Step 7105f). The receiver changes the display in the same position relation as the information displayed on the transmitter 7005a, according to the user operation. For example, in the case where the user taps the right of the screen or the right direction indicator on the screen, the information displayed on the transmitter 7005a on the right side of the information currently displayed on the receiver 7005b is displayed on the receiver 7005b.

FIG. 214 is a diagram illustrating an example of application of the receiver and the transmitter in Embodiment 12. A rear view of a vehicle is given in FIG. 214.

A transmitter (vehicle) 7006a having, for instance, two car taillights (light emitting units or lights) transmits identification information (ID) of the transmitter 7006a to a receiver such as a smartphone. Having received the ID, the receiver obtains information associated with the ID from a server. Examples of the information include the ID of the vehicle or the transmitter, the distance between the light emitting units, the size of the light emitting units, the size of the vehicle, the shape of the vehicle, the weight of the vehicle, the number of the vehicle, the traffic ahead, and information indicating the presence/absence of danger. The receiver may obtain these information directly from the transmitter 7006a.

FIG. 215 is a flowchart illustrating an example of process operations of the receiver and the transmitter 7006a in Embodiment 12.

The ID of the transmitter 7006a and the information to be provided to the receiver receiving the ID are stored in the server in association with each other (Step 7106a). The information to be provided to the receiver may include information such as the size of the light emitting unit as the transmitter 7006a, the distance between the light emitting units, the shape and weight of the object including the transmitter 7006a, the identification number such as a vehicle identification number, the state of an area not easily observable from the receiver, and the presence/absence of danger.

The transmitter 7006a transmits the ID (Step 7106b). The transmission information may include the URL of the server and the information to be stored in the server.

The receiver receives the transmitted information such as the ID (Step 7106c). The receiver obtains the information associated with the received ID from the server (Step 7106d). The receiver displays the received information and the information obtained from the server (Step 7106e).

The receiver calculates the distance between the receiver and the light emitting unit by triangulation, from the information of the size of the light emitting unit and the apparent size of the captured light emitting unit or from the information of the distance between the light emitting units and the distance between the captured light emitting units (Step 7106f). The receiver issues a warning of danger or the like, based on the information such as the state of an area not easily observable from the receiver and the presence/absence of danger (Step 7106g).

FIG. 216 is a diagram illustrating an example of application of the receiver and the transmitter in Embodiment 12.

A transmitter (vehicle) 7007b having, for instance, two car taillights (light emitting units or lights) transmits information of the transmitter 7007b to a receiver 7007a such as a transmitter-receiver in a parking lot. The information of the transmitter 7007b indicates the identification information (ID) of the transmitter 7007b, the number of the vehicle, the size of the vehicle, the shape of the vehicle, or the weight of the vehicle. Having received the information, the receiver 7007a transmits information of whether or not parking is permitted, charging information, or a parking position. The receiver 7007a may receive the ID, and obtain information other than the ID from the server.

FIG. 217 is a flowchart illustrating an example of process operations of the receiver 7007a and the transmitter 7007b in Embodiment 12. Since the transmitter 7007b performs not only transmission but also reception, the transmitter 7007b includes an in-vehicle transmitter and an in-vehicle receiver.

The ID of the transmitter 7007b and the information to be provided to the receiver 7007a receiving the ID are stored in the server (parking lot management server) in association with each other (Step 7107a). The information to be provided to the receiver 7007a may include information such as the shape and weight of the object including the transmitter 7007b, the identification number such as a vehicle identification number, the identification number of the user of the transmitter 7007b, and payment information.

The transmitter 7007b (in-vehicle transmitter) transmits the ID (Step 7107b). The transmission information may include the URL of the server and the information to be stored in the server. The receiver 7007a (transmitter-receiver) in the parking lot transmits the received information to the server for managing the parking lot (parking lot management server) (Step 7107c). The parking lot management server obtains the information associated with the ID of the transmitter 7007b, using the ID as a key (Step 7107d). The parking lot management server checks the availability of the parking lot (Step 7107e).

The receiver 7007a (transmitter-receiver) in the parking lot transmits information of whether or not parking is permitted, parking position information, or the address of the server holding these information (Step 7107f). Alternatively, the parking lot management server transmits these information to another server. The transmitter (in-vehicle receiver) 7007b receives the transmitted information (Step 7107g). Alternatively, the in-vehicle system obtains these information from another server.

The parking lot management server controls the parking lot to facilitate parking (Step 7107h). For example, the parking lot management server controls a multi-level parking lot. The transmitter-receiver in the parking lot transmits the ID (Step 7107i). The in-vehicle receiver (transmitter 7007b) inquires of the parking lot management server based on the user information of the in-vehicle receiver and the received ID (Step 7107j).

The parking lot management server charges for parking according to parking time and the like (Step 7107k). The parking lot management server controls the parking lot to facilitate access to the parked vehicle (Step 7107m). For example, the parking lot management server controls a multi-level parking lot. The in-vehicle receiver (transmitter 7007a) displays the map to the parking position, and navigates from the current position (Step 7107n).

FIG. 218 is a diagram illustrating an example of application of the receiver and the transmitter in Embodiment 12.

A transmitter 7008a or 7008b such as a signage of a store, e.g. a roof sign or a sign placed on a street, transmits identification information (ID) of the transmitter 7008a or 7008b to a receiver 7008c such as a smartphone. Having received the ID, the receiver 7008c obtains information associated with the ID from a server, and displays the information. Examples of the information include an image showing availability, a coupon, 2D barcode, and the like of the store.

FIG. 219 is a flowchart illustrating an example of process operations of the receiver 7008c and the transmitter 7008a or 7008b in Embodiment 12. Though the following describes, of the transmitters 7008a and 7008b, the transmitter 7008a as an example, the process operations of the transmitter 7008b are the same as those of the transmitter 7008a.

The ID of the transmitter 7008a and the information to be provided to the receiver 7008c receiving the ID are stored in the server in association with each other (Step 7108a). The information to be provided to the receiver 7008c may include information such as a store name, a product name, map information to a store, availability information, coupon information, stock count of a product, show time of a movie or a play, reservation information, and a URL of a server for reservation or purchase.

The transmitter 7008a such as a signage transmits the ID (Step 7108b). The camera of the receiver 7008c is pointed to the transmitter 7008a, to receive the ID (Step 7108c). The receiver 7008c transmits the received ID to the server, and stores the information associated with the ID in the receiver 7008c (Step 7108d). The receiver 7008c also stores a terminal ID and a user ID in the server (Step 7108e).

The receiver 7008c displays the information stored in the server as the information to be displayed on the receiver 7008c (Step 7108f). The receiver 7008c displays the route from the current position to the store or the sales floor (Step 7108g). The receiver 7008c obtains information from the server according to need, and updates and displays availability information or reservation information (Step 7108h).

The receiver 7008c displays a button for reserving or ordering a seat or a product (Step 7108i). The user taps the reserve button or the order button displayed on the receiver 7008c (Step 7108j). The receiver 7008c transmits the information of reservation or order to the server for managing reservation or order (Step 7108k).

FIG. 220 is a diagram illustrating an example of application of the receiver and the transmitter in Embodiment 12.

A receiver (terminal) 7009b such as a smartphone is placed on a table in front of a seat in a store. A transmitter 7009a such as a lighting device transmits identification information (ID) of the transmitter 7009a to the receiver 7009b. Having received the ID, the receiver 7009b obtains information associated with the ID from a server, and performs a process such as reserving the seat, confirming the provisional reservation, or extending the reserved time.

FIG. 221 is a diagram illustrating an example of application of the receiver and the transmitter in Embodiment 12.

Having obtained the information from the server, the receiver 7009b displays, for example, the availability of the store and buttons for selecting "check", "extend", and "additional order".

FIG. 222 is a flowchart illustrating an example of process operations of the receiver 7009b and the transmitter 7009a in Embodiment 12.

The ID of the transmitter 7009a and the information to be provided to the receiver 7009b receiving the ID are stored in the server in association with each other (Step 7109a). The information to be provided to the receiver 7009b may include information of the position and shape of the transmitter 7009a. The transmitter 7009a such as a ceiling lighting transmits the ID (Step 7109b).

The user places the receiver 7009b on the table or the like (Step 7109c). The receiver 7009b recognizes the placement of the receiver 7009b on the table or the like from the information of the gyroscope, the magnetic sensor, or the accelerometer, and starts the reception process (Step 7109d). The receiver 7009b identifies an upward facing camera from the upward direction of the accelerometer, and receives the ID using the camera.

The camera of the receiver 7009b is pointed to the transmitter 7009a, to receive the ID (Step 7109e). The receiver 7009b transmits the received ID to the server, and stores the information associated with the ID in the receiver 7009b (Step 7109f). The receiver 7009b estimates the position of the receiver 7009b (Step 7109g).

The receiver 7009b transmits the position of the receiver 7009b to the store management server (Step 7109h). The store management server specifies the seat of the table on which the receiver 7009b is placed (Sep 7109i). The store management server transmits the seat number to the receiver 7009b (Step 7109j).

FIG. 223 is a diagram illustrating an example of application of the receiver and the transmitter in Embodiment 12.

A transmitter 7011a such as a ceiling lighting transmits identification information (ID) of the transmitter 7011a to a receiver 7011b such as a smartphone. Having received the ID, the receiver 7011b obtains information associated with the ID from a server, and estimates (determines) the self-position. When the receiver 7011b is placed at an electronic device 7011c, the receiver 7011b functions as an operation terminal of the electronic device 7011c. Thus, the electronic device 7011c can be operated by a rich interface such as a touch panel or voice output.

FIG. 224 is a flowchart illustrating an example of process operations of the receiver 7011b and the transmitter 7011a in Embodiment 12.

The position of the electronic device is stored in the server (Step 7110a). The ID, model, function, and operation interface information (screen, input/output voice, interactive model) of the electronic device may be stored in association with the position information.

The ID of the transmitter 7011a and the information to be provided to the receiver 7011b receiving the ID are stored in the server in association with each other (Step 7110b). The information to be provided to the receiver 7011b may include information of the position and shape of the transmitter 7011a.

The transmitter 7011a such as a ceiling lighting transmits the ID (Step 7110c). The camera of the receiver 7011b is pointed to the transmitter 7011a, to receive the ID (Step 7110d). The receiver 7011b transmits the received ID to the server, and stores the information associated with the ID in the receiver 7011b (Step 7110e). The receiver 7011b estimates the position of the receiver 7011b (Step 7110f).

The user places the receiver 7011b at the electronic device (Step 7110g). The receiver 7011b recognizes that the receiver 7011b is stationary from the information of the gyroscope, the magnetic sensor, or the accelerometer, and starts the following process (Step 7110h). The receiver 7011b estimates the self-position by the above-mentioned method, in the case where at least a predetermined time has elapsed from the last estimation of the position of the receiver 7011b (Step 7110i).

The receiver 7011b estimates the movement from the last self-position estimation from the information of the gyroscope, the magnetic sensor, or the accelerometer, and estimates the current position (Step 7110j). The receiver 7011b obtains information of an electronic device nearest the current position, from the server (Step 7110k). The receiver 7011b obtains the information of the electronic device from the electronic device via Bluetooth or Wi-Fi (Step 7110m). Alternatively, the receiver 7011b obtains the information of the electronic device stored in the server.

The receiver 7011b displays the information of the electronic device (Step 7110n). The receiver 7011b receives input as the operation terminal of the electronic device (Step 7110p). The receiver 7011b transmits the operation information of the electronic device to the electronic device via Bluetooth or Wi-Fi (Step 7110q). Alternatively, the receiver 7011b transmits the operation information of the electronic device to the electronic device via the server.

FIG. 225 is a diagram illustrating an example of application of the receiver and the transmitter in Embodiment 12.

A camera of a receiver 7012a such as a smartphone is pointed to a transmitter 7012b as an electronic device such as a television receiver (TV). The receiver 7012a receives identification information (ID) of the transmitter 7043b transmitted from the transmitter 7043b. The receiver 7043a obtains information associated with the ID from a server. Thus, the receiver 7012a functions as an operation terminal of the electronic device in the direction pointed by the camera. That is, the receiver 7012a wirelessly connects to the transmitter 7012b via Bluetooth, Wi-Fi, or the like.

FIG. 226 is a flowchart illustrating an example of process operations of the receiver 7012a and the transmitter 7012b in Embodiment 12.

The ID of the transmitter 7012b and the information to be provided to the receiver 7012a receiving the ID are stored in the server in association with each other (Step 7111a). The information to be provided to the receiver 7012a may include the ID, model, function, and operation interface information (screen, input/output voice, interactive model) of the electronic device.

The transmitter 7012b included in the electronic device or associated with the electronic device transmits the ID (Step 7111b). The camera of the receiver 7012a is pointed to the transmitter 7012b, to receive the ID (Step 7111c). The receiver 7012a transmits the received ID to the server, and stores the information associated with the ID in the receiver 7012a (Step 7111d). The receiver 7012a obtains the information of the electronic device from the server, using the received ID as a key (Step 7111e).

The receiver 7012a obtains the information of the electronic device from the electronic device via Bluetooth or Wi-Fi (Step 7111f). Alternatively, the receiver 7012a obtains the information of the electronic device stored in the server. The receiver 7012a displays the information of the electronic device (Step 7111g).

The receiver 7012a receives input as the operation terminal of the electronic device (Step 7111h). The receiver 7012a transmits the operation information of the electronic device to the electronic device via Bluetooth or Wi-Fi (Step 7111i). Alternatively, the receiver 7012a transmits the operation information of the electronic device to the electronic device via the server.

FIG. 227 is a diagram illustrating an example of application of the receiver and the transmitter in Embodiment 12.

A receiver 7013b such as a smartphone receives a destination input by the user. The camera of the receiver 7013b is then pointed to a transmitter 7013a such as a lighting device (light). The receiver 7013b receives identification information (ID) of the transmitter 7013a transmitted from the transmitter 7013a. The receiver 7013b obtains information associated with the ID from a server. The receiver 7013b estimates (determines) the self-position based on the obtained information. The receiver 7013b accordingly navigates the user to the destination by audio or the like. In the case where the user is visually impaired, the receiver 7013b reports any obstacle to the user in detail.

FIG. 228 is a flowchart illustrating an example of process operations of the receiver 7013b and the transmitter 7013a in Embodiment 12.

The user inputs the destination to the receiver 7013b (Step 7112a). The user points the receiver 7013b to the light (transmitter 7013a) (Step 7112b). Even a visually impaired user can point the receiver 7013b to the light if he or she is capable of recognizing intense light.

The receiver 7013b receives a signal superimposed on the light (Step 7112c). The receiver 7013b obtains information from the server, using the received signal as a key (Step 7112d). The receiver 7013b obtains a map from the current position to the destination from the server (Step 7112e). The receiver 7013b displays the map, and navigates from the current position to the destination (Step 7112f).

FIG. 229 is a diagram illustrating a state of the receiver in Embodiment 12.

A receiver (terminal) 7014a such as a smartphone includes a face camera 7014b. When the imaging direction of the face camera 7014b is upward at a predetermined angle or more with the ground plane, the receiver 7014a performs a signal reception process (process of receiving a signal from a transmitter by imaging) by the face camera 7014b. In the case where the receiver 7014a also includes a camera other than the face camera 7014b, the receiver 7014a assigns higher priority to the face camera 7014b than the other camera.

FIG. 230 is a flowchart illustrating an example of process operations of the receiver 7014a in Embodiment 12.

The receiver 7014a determines whether or not the imaging direction of the face camera 7014b is upward at a predetermined angle or more with the ground plane (Step 7113a). In the case where the determination result is true (Y), the receiver 7014a starts the reception by the face camera 7014b (Step 7113b). Alternatively, the receiver 7014a assigns higher priority to the reception process by the face camera 7014b. When a predetermined time has elapsed (Step 7113c), the receiver 7014a ends the reception by the face camera 7014b (Step 7113d). Alternatively, the receiver 7014a assigns lower priority to the reception process by the face camera 7014b.

FIG. 231 is a diagram illustrating a state of the receiver in Embodiment 12.

A receiver (terminal) 7015a such as a smartphone includes an out camera 7015b. When the imaging direction of the out camera 7015b is at a predetermined angle or less with the ground plane, the receiver 7014a performs a signal reception process (process of receiving a signal from a transmitter by imaging) by the out camera 7015b. In the case where the receiver 7015a also includes a camera other than the out camera 7015b, the receiver 7015a assigns higher priority to the out camera 7015b than the other camera.

Note that, when the imaging direction of the out camera 7015b is at a predetermined angle or less with the ground plane, the receiver 7015a is in portrait orientation, and the surface of the receiver 7015a on which the out camera 7015b is provided is at a predetermined angle or more with the ground plane.

FIG. 232 is a flowchart illustrating an example of process operations of the receiver 7015a in Embodiment 12.

The receiver 7015a determines whether or not the imaging direction of the out camera 7015b is at a predetermined angle or less with the ground plane (Step 7114a). In the case where the determination result is true (Y), the receiver 7015a starts the reception by the out camera 7015b (Step 7114b). Alternatively, the receiver 7015a assigns higher priority to the reception process by the out camera 7015b. When a predetermined time has elapsed (Step 7114c), the receiver 7015a ends the reception by the out camera 7015b (Step 7114d). Alternatively, the receiver 7015a assigns lower priority to the reception process by the out camera 7015b.

FIG. 233 is a diagram illustrating a state of the receiver in Embodiment 12.

A receiver (terminal) 7016a such as a smartphone includes an out camera. When the receiver 7016a is moved (stuck out) in the imaging direction of the out camera, the receiver 7016a performs a signal reception process (process of receiving a signal from a transmitter by imaging) by the out camera. In the case where the receiver 7016a also includes a camera other than the out camera, the receiver 7016a assigns higher priority to the out camera than the other camera.

Note that, when the receiver 7016a is moved in the imaging direction of the out camera, the angle between the moving direction and the imaging direction (upon the end of the movement) is a predetermined angle or less.

FIG. 234 is a flowchart illustrating an example of process operations of the receiver 7016a in Embodiment 12.

The receiver 7016a determines whether or not the receiver 7016a is moved and the angle between the moving direction and the imaging direction of the out camera upon the end of the movement is a predetermined angle or less (Step 7115a). In the case where the determination result is true (Y), the receiver 7016a starts the reception by the out camera (Step 7115b). Alternatively, the receiver 7016a assigns higher priority to the reception process by the out camera. When a predetermined time has elapsed (Step 7115c), the receiver 7016a ends the reception by the out camera (Step 7115d). Alternatively, the receiver 7016a assigns lower priority to the reception process by the out camera.

FIG. 235 is a diagram illustrating a state of the receiver in Embodiment 12.

A receiver (terminal) 7017a such as a smartphone includes a predetermined camera. When a display operation or specific button press corresponding to the predetermined camera is performed, the receiver 7017a performs a signal reception process (process of receiving a signal from a transmitter by imaging) by the predetermined camera. In the case where the receiver 7017a also includes a camera other than the predetermined camera, the receiver 7017a assigns higher priority to the predetermined camera than the other camera.

FIG. 236 is a flowchart illustrating an example of process operations of the receiver 7017a in Embodiment 12.

The receiver 7017a determines whether or not a display operation or a specific button press is performed on the receiver 7017a (Step 7115h). In the case where the determination result is true (Y), the receiver 7017a starts the reception by the camera corresponding to the display operation or the specific button press (Step 7115i). Alternatively, the receiver 7017a assigns higher priority to the reception process by the camera. When a predetermined time has elapsed (Step 7115j), the receiver 7017a ends the reception by the camera corresponding to the display operation or the specific button press (Step 7115k). Alternatively, the receiver 7017a assigns lower priority to the reception process by the camera.

FIG. 237 is a diagram illustrating a state of the receiver in Embodiment 12.

A receiver (terminal) 7018a such as a smartphone includes a face camera 7018b. When the imaging direction of the face camera 7018b is upward at a predetermined angle or more with the ground plane and also the receiver 7014a is moving along a direction at a predetermined angle or less with the ground plane, the receiver 7018a performs a signal reception process (process of receiving a signal from a transmitter by imaging) by the face camera 7018b. In the case where the receiver 7018a also includes a camera other than the face camera 7018b, the receiver 7018a assigns higher priority to the face camera 7018b than the other camera.

FIG. 238 is a flowchart illustrating an example of process operations of the receiver 7018a in Embodiment 12.

The receiver 7018a determines whether or not the imaging direction of the face camera 7018b is upward at a predetermined angle or more with the ground plane and the receiver 7018a is translated at a predetermined angle or less with the ground plane (Step 7116a). In the case where the determination result is true (Y), the receiver 7018a starts the reception by the face camera 7018b (Step 7116b). Alternatively, the receiver 7018a assigns higher priority to the reception process by the face camera 7018b. When a predetermined time has elapsed (Step 7116c), the receiver 7018a ends the reception by the face camera 7018b (Step 7116d). Alternatively, the receiver 7018a assigns lower priority to the reception process by the face camera 7018b.

FIG. 239 is a diagram illustrating an example of application of the receiver and the transmitter in Embodiment 12.

A camera of a receiver 7019b such as a smartphone is pointed to a transmitter 7019a as an electronic device such as a television receiver (TV). The receiver 7019b receives identification information (ID) of a currently viewed channel, which is transmitted from the transmitter 7019a (display of the transmitter 7019a). The receiver 7019b obtains information associated with the ID from a server. Thus, the receiver 7019b displays a page for buying a related product of the TV program, or related information of the TV program. The receiver 7019b also participates in the TV program through voting or applying for presents. The transmitter (TV) 7019a may include an address storage unit storing the address of the user, and transmit information relating to the address stored in the address storage unit.

FIG. 240 is a diagram illustrating an example of application of the receiver and the transmitter in Embodiment 12.

As illustrated in (a) in FIG. 240, the transmitter 7019a and the receiver 7019b may directly transmit and receive the information necessary for realizing the example of application illustrated in FIG. 239.

As illustrated in (b) in FIG. 240, the transmitter 7019a may transmit the ID of the currently viewed channel to the receiver 7019b. In this case, the receiver 7019b receives the information associated with the ID, i.e. the information necessary for realizing the example of application illustrated in FIG. 239, from the server.

As illustrated in (c) in FIG. 240, the transmitter 7019a may transmit the ID of the transmitter (TV) 7019a or information necessary for wireless connection to the receiver 7019b. In this case, the receiver 7019b receives the ID or the information, and inquires of the transmitter 7019a or a recorder for the currently viewed channel, based on the ID or the information. The receiver 7019b then obtains the information relating to the channel identified as a result of the inquiry, i.e. the information necessary for realizing the example of application illustrated in FIG. 239, from the server.

FIG. 241 is a diagram illustrating an example of application of the receiver and the transmitter in Embodiment 12.

The transmitter 7019b may include a TV 2021b and a recorder 2021a. In the transmitter 7019b, the recorder 2021a stores the information necessary for realizing the example of application illustrated in FIG. 239. Upon reproduction, the TV 2021b transmits part or all of the information stored in the recorder 2021a, to the receiver 7019b. Moreover, at least one of the TV 2021b and the recorder 2021a may act as the server. In the case where the recorder 2021a acts as the server, the recorder 2021a replaces the server address with the address of the recorder 2021a, and has the TV 202b transmit the address to the receiver 7019b.

FIG. 242 is a diagram illustrating an example of application of the receiver and the transmitter in Embodiment 12.

A camera of a receiver 7022c such as a smartphone is pointed to a transmitter 7022b as an electronic device such as a television receiver (TV). The receiver 7022c receives information transmitted from the transmitter 7022b (display of the transmitter 7022b). The receiver 7022c performs wireless communication with the transmitter 7022b, based on the information. When the transmitter 7022b obtains information including an image to be displayed on the receiver 7022c from a server 7022a and transmits the information to the receiver 7022c, the transmitter 7022b replaces the address of the server 7022a included in the information with the address of the transmitter 7022b.

FIG. 243 is a diagram illustrating an example of application of the receiver and the transmitter in Embodiment 12.

For instance, a recorder 7023b obtains all of the information necessary for realizing the example of application illustrated in FIG. 239 from a server 7023a, upon recording a TV program.

Upon reproducing the TV program, the recorder 7023b transmits the reproduction screen and the information necessary for realizing the example of application illustrated in FIG. 239, to a TV 7023c as a transmitter. The TV 7023c receives the reproduction screen and the information, displays the reproduction image, and also transmits the information from the display. A receiver 7023d such as a smartphone receives the information, and performs wireless communication with the TV 7023c based on the information.

As an alternative, upon reproducing the TV program, the recorder 7023b transmits the reproduction screen and the information necessary for wireless communication such as the address of the recorder 7023b, to the TV 7023c as a transmitter. The TV 7023c receives the reproduction screen and the information, displays the reproduction image, and also transmits the information from the display. The receiver 7023d such as a smartphone receives the information, and performs wireless communication with the recorder 7023b based on the information.

FIG. 244 is a diagram illustrating an example of application of the receiver and the transmitter in Embodiment 12.

A camera of a receiver 7045a such as a smartphone is pointed to a transmitter 7045b as an electronic device such as a television receiver (TV). The transmitter 7045b displays video of a TV program such as a music program, and transmits information from the display. The receiver 7045a receives the information transmitted from the transmitter 7045b (display of the transmitter 7045b). The receiver 7045a displays a screen 7045c prompting to buy a song in the music program, based on the information.

FIG. 245 is a flowchart illustrating an example of process operations of the receiver and the transmitter in Embodiment 12. This flowchart corresponds to the examples of application illustrated in FIGS. 239 to 244.

The transmitter included in the TV or the recorder obtains, from the server, the information to be provided to the receiver as the information relating to the currently broadcasted program (Step 7117a). The transmitter transmits the signal by superimposing the signal on the backlight of the display (Step 7117b). The transmission signal may include a URL of the transmitter, an SSID of the transmitter, and a password for accessing the transmitter.

FIG. 246 is a flowchart illustrating an example of process operations of the receiver and the transmitter in Embodiment 12. This flowchart corresponds to the examples of application illustrated in FIGS. 239 to 244.

The receiver receives the information from the display (Step 7118a). The receiver determines whether or not the currently viewed channel information is included in the received information (Step 7118b). In the case where the determination result is false (N), the receiver obtains the currently viewed channel information from the electronic device having the ID included in the received information (Step 7118c).

In the case where the determination result is true (Y), the receiver obtains the information related to the currently viewed screen from the server (Step 7118d). The TV or the recorder may act as the server. The receiver displays the information obtained from the server (Step 7118e). The receiver adjusts the display, based on a user profile stored in the receiver or the server (Step 7118f). For example, the receiver performs control such as changing the font size, hiding age-restricted content, or preferentially displaying content assumed to be preferred from the user's past behavior.

FIG. 247 is a flowchart illustrating an example of process operations of the receiver and the transmitter in Embodiment 12. This flowchart corresponds to the examples of application illustrated in FIGS. 239 to 244.

The recorder obtains the information related to the program from the server and stores the information, when recording the program (Step 7119a). In the case where the related information changes with time, the recorder also stores the time.

The recorder transmits the stored information to the display, when reproducing the recorded image (Step 7119b). The access information (URL or password) of the server in the stored information may be replaced with the access information of the display.

The recorder transmits the stored information to the receiver, when reproducing the recorded image (Step 7119c). The access information (URL or password) of the server in the stored information may be replaced with the access information of the recorder.

FIG. 248 is a diagram illustrating a luminance change of the transmitter in Embodiment 12.

The transmitter codes the information transmitted to the receiver, by making the time length from a rapid rise in luminance to the next rapid rise in luminance different depending on code (0 or 1). In this way, the brightness perceived by humans can be adjusted by PWM (Pulse Width Modulation) control, without changing the transmission information. Here, the luminance waveform may not necessarily be a precise rectangular wave.

FIG. 249 is a flowchart illustrating an example of process operations of the receiver in Embodiment 12. This flowchart illustrates the process operations of the receiver that corresponds to the transmitter having the luminance change illustrated in FIG. 248.

The receiver observes the luminance of light emitted from the transmitter (Step 7120a). The receiver measures the time from a rapid rise in luminance to the next rapid rise in luminance (Step 7120b). Alternatively, the receiver measures the time from a rapid fall in luminance to the next rapid fall in luminance. The receiver recognizes the signal value according to the time (Step 7120c). For example, the receiver recognizes "0" in the case where the time is less than or equal to 300 microseconds, and "1" in the case where the time is greater than or equal to 300 microseconds.

FIG. 250 is a diagram illustrating a luminance change of the transmitter in Embodiment 12.

The transmitter expresses the starting point of the information transmitted to the receiver, by changing the wavelength indicating luminance rise/fall. Alternatively, the transmitter superimposes information on the other information, by changing the wavelength.

FIG. 251 is a flowchart illustrating an example of process operations of the receiver in Embodiment 12. This flowchart illustrates the process operations of the receiver that corresponds to the transmitter having the luminance change illustrated in FIG. 250.

The receiver observes the luminance of light emitted from the transmitter (Step 7121a). The receiver determines the minimum value of the time width of the rapid change in luminance (Step 7121b). The receiver searches for a luminance change width that is not an integral multiple of the minimum value (Step 7121c). The receiver analyzes the signal, with the luminance change width that is not the integral multiple as the starting point (Step 7121d). The receiver calculates the time width between the parts each having the luminance change width that is not the integral multiple (Step 7121e).

FIG. 252 is a diagram illustrating a luminance change of the transmitter in Embodiment 12.

The transmitter can adjust the brightness perceived by the human eye and also reset any luminance change accumulated over time, by changing the luminance at intervals shorter than the exposure time of the receiver.

FIG. 253 is a flowchart illustrating an example of process operations of the transmitter in Embodiment 12. This flowchart illustrates the process operations of the receiver that corresponds to the transmitter having the luminance change illustrated in FIG. 252.

The transmitter turns the current ON/OFF with a time width sufficiently shorter than the exposure time of the receiver, when the luminance or the current for controlling the luminance falls below a predetermined value (Step 7125a). This returns the current to its initial value, so that the luminance decrease of the light emitting unit can be prevented. The transmitter turns the current ON/OFF with a time width sufficiently shorter than the exposure time of the receiver, when the luminance or the current for controlling the luminance exceeds a predetermined value (Step 7125b). This returns the current to its initial value, so that the luminance increase of the light emitting unit can be prevented.

FIG. 254 is a diagram illustrating a luminance change of the transmitter in Embodiment 12.

The transmitter expresses different signals (information), by making the carrier frequency of the luminance different. The receiver is capable of recognizing the carrier frequency earlier than the contents of the signal. Hence, making the carrier frequency different is suitable for expressing information, such as the ID of the transmitter, that needs to be recognized with priority.

FIG. 255 is a flowchart illustrating an example of process operations of the receiver in Embodiment 12. This flowchart illustrates the process operations of the receiver that corresponds to the transmitter having the luminance change illustrated in FIG. 254.

The receiver observes the luminance of light emitted from the transmitter (Step 7122a). The receiver determines the minimum value of the time width of the rapid change in luminance (Step 7122b). The receiver recognizes the minimum value as the carrier frequency (Step 7122c). The receiver obtains information from the server, using the carrier frequency as a key (Step 7122d).

FIG. 256 is a flowchart illustrating an example of process operations of the receiver in Embodiment 12. This flowchart illustrates the process operations of the receiver that corresponds to the transmitter having the luminance change illustrated in FIG. 254.

The receiver observes the luminance of light emitted from the transmitter (Step 7123a). The receiver Fourier transforms the luminance change, and recognizes the maximum component as the carrier frequency (Step 7123b). The receiver obtains information from the server, using the carrier frequency as a key (Step 7123c).

FIG. 257 is a flowchart illustrating an example of process operations of the transmitter in Embodiment 12. This flowchart illustrates the process operations of the transmitter having the luminance change illustrated in FIG. 254.

The transmitter expresses the transmission signal as the luminance change (Step 7124a). The transmitter generates the luminance change so that the maximum component of the Fourier transformed luminance change is the carrier frequency (Step 7124b). The transmitter causes the light emitting unit to emit light according to the generated luminance change (Step 7124c).

FIG. 258 is a diagram illustrating an example of a structure of the transmitter in Embodiment 12.

A transmitter 7028a has a part 7028b transmitting a signal A, a part 7028d transmitting a signal B, and a part 7028f transmitting a signal C. When such parts transmitting different signals are provided in the transmitter along the direction in which the imaging unit (camera) of the receiver is exposed simultaneously, the receiver can receive a plurality of signals simultaneously. Here, a part transmitting no signal or a buffer part 7028c or 7028e transmitting a special signal may be provided between the parts 7028b, 7028d, and 7028f.

FIG. 259 is a diagram illustrating an example of a structure of the transmitter in Embodiment 12. The system of light emission by this structure of the transmitter extends the system of light emission by the structure illustrated in FIG. 258.

Parts 7029a transmitting the signals illustrated in FIG. 258 may be arranged in the transmitter as illustrated in FIG. 259. By doing so, even when the receiver is tilted, the imaging unit (camera) of the receiver can simultaneously receive (capture) many parts of the signals A, B, and C.

FIG. 260 is a diagram illustrating an example of a structure of the transmitter in Embodiment 12. The system of light emission by this structure of the transmitter extends the system of light emission by the structure illustrated in FIG. 258.

A circular light emitting unit of the transmitter has a plurality of annular parts 7030a, 7030b, and 7030c arranged concentrically and transmitting the respective signals. The part 7030a transmits the signal C, the part 7030b transmits the signal B, and the part 7030c transmits the signal A. In the case where the light emitting unit of the transmitter is circular as in this example, the above-mentioned arrangement of the parts transmitting the respective signals enables the receiver to simultaneously receive (capture) many parts of the signals A, B, and C transmitted from the corresponding parts.

FIG. 261 is a flowchart illustrating an example of process operations of the receiver and the transmitter in Embodiment 12. This flowchart illustrates the process operations of the receiver and the transmitter that includes the light emitting device illustrated in any of FIGS. 258 to 260.

The receiver measures the luminance of each position of the line that receives light simultaneously (Step 7126a). The receiver receives the signal at high speed, by receiving the separately transmitted signals in the direction perpendicular to the simultaneous light receiving line (Step 7126b).

FIG. 262 is a diagram illustrating an example of display and imaging by the receiver and the transmitter in Embodiment 12.

The transmitter displays a plurality of 1D barcodes each formed as an image uniform in the direction perpendicular to the direction in which the receiving unit (camera) of the receiver is exposed simultaneously, respectively as a frame 1 (7031a), a frame 2 (7031b), and a frame 3 (7031c) in sequence. A 1D barcode mentioned here is made of a line (bar) along the direction perpendicular to the above-mentioned simultaneous exposure direction. The receiver captures the image displayed on the transmitter as described in each of the above embodiments, and as a result obtains a frame 1 (7031d) and a frame 2 (7031e). The receiver can recognize the successively displayed 1D barcodes in sequence, by dividing the 1D barcodes at an interruption of the bar of each 1D barcode. In this case, the receiver can recognize all information displayed on the transmitter, with there being no need to synchronize the imaging by the receiver to the display by the transmitter. The display by the transmitter may be at a higher frame rate than the imaging by the receiver. The display time of one frame in the display by the transmitter, however, needs to be longer than the blanking time between the frames captured by the receiver.

FIG. 263 is a flowchart illustrating an example of process operations of the transmitter in Embodiment 12. This flowchart illustrates the process operations of the display device in the transmitter for performing the display illustrated in FIG. 262.

The display device displays a 1D barcode (Step 7127a). The display device changes the barcode display at intervals longer than the blanking time in the imaging by the receiver (Step 7127b).

FIG. 264 is a flowchart illustrating an example of process operations of the receiver in Embodiment 12. This flowchart illustrates the process operations of the receiver for performing the imaging illustrated in FIG. 262.

The receiver captures the 1D barcode displayed on the display device (Step 7128a). The receiver recognizes that the display device displays the next barcode, at an interruption of the barcode line (Step 7128b). According to this method, the receiver can receive all displayed information, without synchronizing the imaging to the display. Besides, the receiver can receive the signal displayed at a frame rate higher than the imaging frame rate of the receiver.

FIG. 265 is a diagram illustrating an example of application of the receiver and the transmitter in Embodiment 12.

A transmitter 7032a such as a lighting device transmits encrypted identification information (ID) of the transmitter 7032a. A receiver 7032b such as a smartphone receives the encrypted ID, and transmits the encrypted ID to a server 7032c. The server 7032c receives the encrypted ID, and decrypts the encrypted ID. Alternatively, the receiver 7032b receives the encrypted ID, decrypts the encrypted ID, and transmits the decrypted ID to the server 7032c.

FIG. 266 is a flowchart illustrating an example of process operations of the receiver 7032b and the transmitter 7032a in Embodiment 12.

The transmitter 7032a holds partially or wholly encrypted information (Step 7129a). The receiver 7032b receives the information transmitted from the transmitter 7032a, and decrypts the received information (Step 7129b). Alternatively, the receiver 7032b transmits the encrypted information to the server 7032c. In the case where the encrypted information is transmitted, the server 7032c decrypts the encrypted information (Step 7129c).

FIG. 267 is a diagram illustrating a state of the receiver in Embodiment 12.

For a phone call, the user puts a receiver 7033a such as a smartphone to his or her ear. At this time, an illuminance sensor provided near the speaker of the receiver 7033a detects an illuminance value indicating low illuminance. The receiver 7033a accordingly estimates that the receiver 7033a is in a call state, and stops receiving information from the transmitter.

FIG. 268 is a flowchart illustrating an example of process operations of the receiver 7033a in Embodiment 12.

The receiver 7033a determines whether or not the receiver 7033a is estimated to be in a call state from the sensor value of the illuminance sensor and the like (Step 7130a). In the case where the determination result is true (Y), the receiver 7033a ends the reception by the face camera (Step 7130b). Alternatively, the receiver 7033a assigns lower priority to the reception process by the face camera.

FIG. 269 is a diagram illustrating a state of the receiver in Embodiment 12.

A receiver 7034a such as a smartphone includes an illuminance sensor 7034b near a camera (e.g. face camera) which is an imaging device for receiving (capturing) information from a transmitter. When an illuminance value indicating low illuminance less than or equal to a predetermined value is detected by the illuminance sensor 7034b, the receiver 7034a stops receiving information from the transmitter. In the case where the receiver 7034a includes a camera other than the camera (e.g. face camera) near the illuminance sensor 7034b, the receiver 7034a assigns lower priority to the camera (e.g. face camera) near the illuminance sensor 7034b than the other camera.

FIG. 270 is a flowchart illustrating an example of process operations of the receiver 7034a in Embodiment 12.

The receiver 7034a determines whether or not the sensor value of the illuminance sensor 7034b is less than or equal to a predetermined value (Step 7131a). In the case where the determination result is true (Y), the receiver 7034a ends the reception by the face camera (Step 7131b). Alternatively, the receiver 7034a assigns lower priority to the reception process by the face camera.

FIG. 271 is a flowchart illustrating an example of process operations of the receiver in Embodiment 12.

The receiver measures the illuminance change from the sensor value of the illuminance sensor (Step 7132a). The receiver receives the signal from the illuminance change, as in the reception of the signal from the luminance change measured by the imaging device (camera) (Step 7132b). Since the illuminance sensor is less expensive than the imaging device, the receiver can be manufactured at low cost.

FIG. 272 is a diagram illustrating an example of a wavelength of the transmitter in Embodiment 12.

The transmitter expresses the information transmitted to the receiver, by outputting metameric light 7037a and 7037b as illustrated in (a) and (b) in FIG. 272.

FIG. 273 is a flowchart illustrating an example of process operations of the receiver and the transmitter in Embodiment 12. This flowchart illustrates the process operations of the receiver and the transmitter that outputs the light of the wavelengths illustrated in FIG. 272.

The transmitter expresses different signals by light (metameric light) perceived as isochromatic by humans but different in spectral distribution, and causes the light emitting unit to emit light (Step 7135a). The receiver measures the spectral distributions and receives the signals (Step 7135b). According to this method, the signal can be transmitted without concern for flicker.

FIG. 274 is a diagram illustrating an example of a structure of a system including the receiver and the transmitter in Embodiment 12.

The system includes an ID solution server 7038a, a relay server 7038b, a receiver 7038c, a transmitter 7038d, and a transmitter control device 7038e.

FIG. 275 is a flowchart illustrating an example of process operations of the system in Embodiment 12.

The ID solution server 7038a stores the ID of the transmitter 7038d and the method of communication between the transmitter control device 7038e and the receiver 7038c, in association with each other (Step 7136a). The receiver 7038c receives the ID of the transmitter 7038d, and obtains the method of communication with the transmitter control device 7038e from the ID solution server 7038a (Step 7136b). The receiver 7038c determines whether or not the receiver 7038c and the transmitter control device 7038e are directly communicable (Step 7136c). In the case where the determination result is false (N), the receiver 7038c communicates with the transmitter control device 7038e via the relay server 7038b (Step 7136d). In the case where the determination result is true (Y), the receiver 7038c communicates directly with the transmitter control device 7038e (Step 7136e).

FIG. 276 is a diagram illustrating an example of a structure of the system including the receiver and the transmitter in Embodiment 12.

The system includes a server 7039g, a store device 7039a, and a mobile device 7039b. The store device 7039a includes a transmitter 7039c and an imaging unit 7039d. The mobile device 7039b includes a receiver 7039e and a display unit 7039f.

FIG. 277 is a flowchart illustrating an example of process operations of the system in Embodiment 12.

The mobile device 7039b displays information on the display unit 7039f in 2D barcode or the like (Step 7137a). The store device 7039a captures the information displayed on the display unit 7039f by the imaging unit 7039d, to obtain the information (Step 7137b). The store device 7039a transmits some kind of information from the transmitter 7039c (Step 7137c).

The mobile device 7039b receives the transmitted information by the receiver 7039e (Step 7137d). The mobile device 7039b changes the display on the display unit 7039f, based on the received information (Step 7137e). The information displayed on the display unit 7039f may be determined by the mobile device 7039b, or determined by the server 7039g based on the received information.

The store device 7039a captures the information displayed on the display unit 7039f by the imaging unit 7039d, to obtain the information (Step 7137f). The store device 7039a determines the consistency between the obtained information and the transmitted information (Step 7137g). The determination may be made by the store device 7039a or by the server 7039g. In the case where the obtained information and the transmitted information are consistent, the transaction is completed successfully (Step 7137h).

According to this method, coupon information displayed on the display unit 7039f can be protected from unauthorized copy and use. It is also possible to exchange an encryption key by this method.

FIG. 278 is a flowchart illustrating an example of process operations of the receiver in Embodiment 12.

The receiver starts the reception process (Step 7138a). The receiver sets the exposure time of the imaging device (Step 7138b). The receiver sets the gain of the imaging device (Step 7138c). The receiver receives information from the luminance of the captured image (Step 7138d).

FIG. 279 is a flowchart illustrating an example of process operations of the receiver in Embodiment 12.

The receiver sets the exposure time (Step 7139a). The receiver determines whether or not there is an API (Application Program Interface) that changes the exposure time (Step 7139b). In the case where the determination result is false (N), the imaging device is pointed to a high-luminance object such as a light source (Step 7139c). The receiver performs automatic exposure setting (Step 7139d). The receiver fixes the automatic exposure set value once the change of the automatic exposure set value has become sufficiently small (Step 7139e).

In the case where the determination result is true (Y), the receiver starts setting the exposure time using the API (Step 7139f).

FIG. 280 is a diagram illustrating an example of a structure of the system including the receiver and the transmitter in Embodiment 12.

The system includes a server 7036a, a receiver 7036b, and one or more transmitters 7036c. The receiver 7036b obtains information relating to the one or more transmitters 7036c present near the receiver 7036b, from the server.

FIG. 281 is a flowchart illustrating an example of process operations of the receiver in Embodiment 12.

The receiver 7036b performs self-position estimation from information of GPS, a base station, and the like (Step 7133a). The receiver 7036b transmits the estimated self-position and the estimation error range to the server 7036a (Step 7133b). The receiver 7036b obtains, from the server 7036a, IDs of transmitters 7036c present near the position of the receiver 7036b and information associated with the IDs, and stores the IDs and the information (Step 7133c). The receiver 7036b receives an ID from a transmitter 7036c (Step 7133d).

The receiver 7036b determines whether or not information associated with the received ID is stored in the receiver 7036b (Step 7133e). In the case where the determination result is false (N), the receiver 7036b obtains the information from the server 7036a, using the received ID as a key (Step 7133f). The receiver 7036b performs self-position estimation from the information received from the server 7036a and the position relation with the transmitter 7036bc, obtains IDs of other nearby transmitters 7036c and information associated with the IDs from the server 7036a, and stores the IDs and the information (Step 7133g).

In the case where the determination result is true (Y) in Step 7133e or after Step 7133g, the receiver 7036b displays the information associated with the received ID (Step 7133h).

FIG. 282 is a diagram illustrating an example of application of the receiver and the transmitter in Embodiment 12.

Transmitters 7040c and 7040d such as lighting devices are disposed in a building a (7040a), and transmitters 7040e and 7040f such as lighting devices are disposed in a building b (7040b). The transmitters 7040c and 7040e transmit a signal A, and the transmitters 7040d and 7040f transmit a signal B. A receiver (terminal) 7040g such as a smartphone receives a signal transmitted from any of the transmitters.

FIG. 283 is a flowchart illustrating an example of process operations of the receiver in Embodiment 12.

The receiver 7040g detects the entry into a building (Step 7134a). The receiver 7040g transmits the estimated self-position, the estimation error range, and the name or the like of the building in which the receiver 7040g is estimated to be present, to the server (Step 7134b). The receiver 7040g obtains, from the server, IDs of transmitters present in the building in which the receiver 7040g is present and information associated with the IDs, and stores the IDs and the information (Step 7134c). The receiver 7040g receives an ID from a transmitter (Step 7134d).

The receiver 7040g determines whether or not information associated with the received ID is stored in the receiver 7040g (Step 7134e). In the case where the determination result is false (N), the receiver 7040g obtains the information from the server, using the received ID as a key (Step 7134f). The receiver 7040g obtains, from the server, IDs of other transmitters present in the same building as the transmitter from which the receiver 7040g receives the ID and information associated with the IDs, and stores the IDs and the information (Step 7134g).

In the case where the determination result is true (Y) in Step 7134e or after Step 7134g, the receiver 7040g displays the information associated with the received ID (Step 7134h).

FIG. 284 is a diagram illustrating an example of a structure of the system including the receiver and the transmitter in Embodiment 12.

Transmitters 7041a, 7041b, 7041c, and 7041d such as lighting devices transmit a signal A, a signal B, a signal C, and the signal B, respectively. A receiver (terminal) 7041e such as a smartphone receives a signal transmitted from any of the transmitters. Here, the transmitters 7041a, 7041b, and 7041c are included in the error range of the self-position of the receiver 7041e estimated based on information of GPS, a base station, and the like (other means).

FIG. 285 is a flowchart illustrating an example of process operations of the system in Embodiment 12.

The receiver 7041e receives an ID from a transmitter (Step 7140a). The receiver 7041e performs self-position estimation (Step 7140b). The receiver 7041e determines whether or not the self-position estimation is successful (Step 7140c). In the case where the determination result is false (N), the receiver 7041e displays a map or an input form, and prompts the user to input the current position (Step 7140d).

The receiver 7041e transmits the received ID, the estimated self-position, and the self-position estimation error range to the server (Step 7140e).

The server determines whether or not only one transmitter transmitting the ID received by the receiver 7041e is present within the estimation error range (estimation error radius) from the estimated self-position of the receiver 7041e (Step 7140f). In the case where the determination result is false (N), the receiver 7041e repeats the process from Step 7140d. In the case where the determination result is true (Y), the server transmits information associated with the transmitter to the receiver 7041e (Step 7140g).

FIG. 286 is a flowchart illustrating an example of process operations of the receiver in Embodiment 12.

The receiver detects a light emitting device (transmitter) emitting a signal (Step 7141a), and receives the signal (Step 7141b). The receiver displays the reception state, the received data amount, the transmission data amount, and the ratio of the received data amount to the transmission data amount (Step 7141c).

The receiver then determines whether or not the receiver has received all transmission data (Step 7141d). In the case of determining that the receiver has received all transmission data (Step 7141d: Y), the receiver stops the reception process (Step 7141e), and displays the reception completion (Step 7141f). The receiver also outputs notification sound (Step 7141g), and vibrates (7141h).

In the case of determining that the receiver has not received all transmission data in Step 7141d (Step 7141d: N), the receiver determines whether or not a predetermined time has elapsed from when the transmitter disappears from the frame of the imaging device (camera) of the receiver (Step 7141i). In the case of determining that the predetermined time has elapsed (Step 7141i: Y), the receiver abandons the received data and stops the reception process (Step 7141m). The receiver also outputs notification sound (Step 7141n), and vibrates (Step 7141p).

In the case of determining that the predetermined time has not elapsed in Step 7141i (Step 7141i: N), the receiver determines whether or not the sensor value of the accelerometer of the receiver changes by a predetermined value or more, or whether or not the receiver is estimated to be pointed in another direction (Step 7141j). In the case of determining that the sensor value changes by the predetermined value or more or the receiver is estimated to be pointed in another direction (Step 7141i: Y), the receiver performs the process from Step 7141m mentioned above.

In the case of determining that the sensor value does not change by the predetermined value or more or the receiver is not estimated to be pointed in another direction (Step 7141i: N), the receiver determines whether or not the sensor value of the accelerometer of the receiver changes in a predetermined rhythm, or whether or not the receiver is estimated to be shaken (Step 7141k). In the case of determining that the sensor value changes in the predetermined rhythm or the receiver is estimated to be shaken, the receiver performs the process from Step 7141m mentioned above. In the case of determining that the sensor value does not change in the predetermined rhythm or the receiver is not estimated to be shaken (Step 7141k: N), the receiver repeats the process from Step 7141b.

FIG. 287A is a diagram illustrating an example of a structure of the transmitter in Embodiment 12.

A transmitter 7046a includes a light emitting unit 7046b, a 2D barcode 7046c, and an NFC chip 7046d. The light emitting unit 7046b transmits information common with at least one of the 2D barcode 7046c and the NFC chip 7046d, by the method according to any of the above embodiments. Alternatively, the light emitting unit 7046b may transmit information different from at least one of the 2D barcode 7046c and the NFC chip 7046d, by the method according to any of the above embodiments. In this case, the receiver may obtain the information common with at least one of the 2D barcode 7046c and the NFC chip 7046d from the server, using the information transmitted from the light emitting unit 7046b as a key. The receiver may perform a common process in the case of receiving information from the light emitting unit 7046b and in the case of receiving information from at least one of the 2D barcode 7046c and the NFC chip 7046d. In either case, the receiver accesses a common server and displays common information.

FIG. 287B is a diagram illustrating another example of a structure of the transmitter in Embodiment 12.

A transmitter 7046e includes a light emitting unit 7046f, and causes the light emitting unit 7046f to display a 2D barcode 7046g. That is, the light emitting unit 7046f has the functions of both the light emitting unit 7046b and the 2D barcode 7046c illustrated in FIG. 287A.

Here, the light emitting unit 7046b or 7046f may transmit information indicating the size of the light emitting unit 7046b or 7046f, to cause the receiver to estimate the distance from the receiver to the transmitter 7046a or 7046e. This enables the receiver to capture the 2D barcode 7046c or 7046g more easily or clearly.

FIG. 288 is a flowchart illustrating an example of process operations of the receiver and the transmitter 7046a or 7046e in Embodiment 12. Though the following describes, of the transmitters 7046a and 7046e, the transmitter 7046a as an example, the process operations of the transmitter 7046e are the same as those of the transmitter 7046a.

The transmitter 7046a transmits information indicating the size of the light emitting unit 7046b (Step 7142a). Here, the maximum distance between arbitrary two points in the light emitting unit 7046b is set as the size of the light emitting unit 7046b. Since speed is important in this series of processes, it is desirable that the transmitter 7046a directly transmits the information indicating the size of the light emitting unit 7046b of the transmitter 7046a and the receiver obtains the information indicating the size without server communication. It is also desirable that the transmission is performed by a method that facilitates fast reception, such as the frequency of the brightness change of the transmitter 7046a.

The receiver receives the signal which is the above-mentioned information, and obtains the size of the light emitting unit 7046b of the transmitter 7046a (Step 7142b). The receiver calculates the distance from the receiver to the light emitting unit 7046b, based on the size of the light emitting unit 7046b, the size of the captured image of the light emitting unit 7046b, and the characteristics of the imaging unit (camera) of the receiver (Step 7142c). The receiver adjusts the focal length of the imaging unit to the calculated distance, and captures the image (Step 7142d). The receiver obtains the 2D barcode in the case of capturing the 2D barcode (Step 7142e).

(Embodiment 13)

This embodiment describes each example of application using a receiver such as a smartphone and a transmitter for transmitting information as an LED or organic EL blink pattern in Embodiments 1 to 12 described above.

FIG. 289 is a flowchart illustrating an example of process operations of the receiver and the transmitter in Embodiment 13.

In Step 7201a, the transmitter outputs a sound of a specific frequency or a sound that changes in a specific pattern (the sound desirably has a frequency that is difficult to be heard by humans and collectable by a typical sound collector, e.g. 2 kHz to 20 kHz. A typical sound collector has a sampling frequency of about 44.1 kHz, and is only capable of precisely recognizing up to half of the frequency due to the sampling theorem. If the transmission signal is known, however, whether or not the signal is collected can be estimated with high accuracy. Based on this property, a signal of a frequency greater than or equal to 20 kHz may be used).

In Step 7201b, the user presses a button on the receiver to switch from the power off state or the sleep state to the power on state. In Step 7201c, the receiver activates a sound collecting unit. In Step 7201d, the receiver collects the sound output from the transmitter. In Step 7201e, the receiver notifies the user that the transmitter is present nearby, by screen display, sound output, or vibration. In Step 7201f, the receiver starts reception, and then ends the process.

FIG. 290 is a flowchart illustrating an example of process operations of the receiver and the transmitter in Embodiment 13.

In Step 7202a, the user presses a button on the receiver to switch from the power off state or the sleep state to the power on state. In Step 7202b, the receiver activates an illuminance sensor. In Step 7202c, the receiver recognizes a change of illuminance from the illuminance sensor. In Step 7202d, the receiver receives a transmission signal from the illuminance sensor. In Step 7202e, the receiver notifies the user that the transmitter is present nearby, by screen display, sound output, or vibration. In Step 7202f, the receiver starts reception, and then ends the process.

FIG. 291 is a flowchart illustrating an example of process operations of the receiver and the transmitter in Embodiment 13.

In Step 7203a, the user operates the receiver to start reception, or the receiver automatically starts reception by a trigger. In Step 7203b, the reception is performed preferentially by an imaging unit whose average luminance of the entire screen is high or whose luminance at the maximum luminance point is high. The receiver then ends the process.

FIG. 292 is a flowchart illustrating an example of process operations of the receiver and the transmitter in Embodiment 13.

In Step 7204a, the imaging unit captures, at high speed, the image of the simultaneous imaging lines or pixels in which the transmitter is shown, by not capturing the simultaneous imaging lines or pixels in which the transmitter is not shown. In Step 7204b, the receiver detects the movement of the receiver or the hand movement using a gyroscope or an accelerometer, makes adjustment by electronic correction so that the transmitter is always shown, and ends the process.

FIG. 293 is a flowchart illustrating an example of process operations of the receiver and the transmitter in Embodiment 13.

In Step 7205a, the receiver displays a 2D barcode A. In Step 7205b, the transmitter reads the 2D barcode A. In Step 7205c, the transmitter transmits a display change instruction. In Step 7205d, the receiver displays a 2D barcode B. In Step 7205e, the transmitter reads the 2D barcode B, and ends the process.

FIG. 294 is a diagram illustrating an example of application of the transmitter in Embodiment 13.

A transmitter 7211a has a mark 7211b indicating that the transmitter 7211a is a transmitter. Though humans cannot distinguish a transmission signal from ordinary light, they are able to recognize from the mark 7211b that the transmitter 7211a is a transmitter. Likewise, a transmitter 7211c has a mark 7211d indicating that the transmitter 7211c is a transmitter. A transmitter 7211e displays a mark 7211f indicating that the transmitter 7211e is a transmitter, only during signal transmission.

FIG. 295 is a diagram illustrating an example of application of the transmitter in Embodiment 13.

A transmitter 7212a such as a TV transmits a signal by changing the luminance of a backlight or a screen 7212b. A transmitter 7212c such as a TV transmits a signal by changing the luminance of a part other than the screen, such as a bezel 7212d or a logo mark.

FIG. 296 is a diagram illustrating an example of application of the transmitter in Embodiment 13.

A transmitter 7213a such as a TV transmits a signal, when displaying a display 7213c such as urgent news, subtitles, or an on-screen display on a screen 7213b. The display 7213c is displayed wide in the horizontal direction of the screen, with dark letters on a bright background. This eases the signal reception by the receiver.

FIG. 297 is a diagram illustrating an example of application of the transmitter and the receiver in Embodiment 13.

When the user operates a remote control 7214a of a receiver or a TV, the remote control 7214a transmits a start signal to a transmitter 7214b. The transmitter 7214b transmits a signal for a predetermined time after receiving the start signal. The transmitter 7214b displays a display 7214c indicating that the signal is being transmitted. This eases the signal reception by the receiver, even in the case where the display of the TV itself is dark. The receiver can receive the signal more easily when the display 7214c has more bright portions and is wide in the horizontal direction.

The transmitter 7214b may have the area 7214c for signal transmission, apart from the area for displaying TV images. The transmitter 7214b may recognize the movement of the user or the movement of the remote control 7214a by a camera 7214d or a microphone 7214e, and start signal transmission.

FIG. 298 is a diagram illustrating an example of application of the transmitter and the receiver in Embodiment 13.

Transmitters 7215a and 7215b each transmit the ID number of the transmitter. The ID of the transmitter may be an ID that is completely unique, or an ID that is unique within a region, a building, or a room. In the latter case, it is desirable that the same ID is not present within several tens of meters. A receiver 7215c transmits the received ID to a server 7215d. The receiver 7215c may also transmit the position information of the receiver 7215c recognized by a position sensor such as GPS, the terminal ID of the receiver 7215c, a user ID, a session ID, and the like to the server.

A database 7215e stores, in association with the ID transmitted from the transmitter, another ID, the position information (latitude, longitude, altitude, room number) of the transmitter, the model, shape, or size of the transmitter, content such as text, image, video, and music, an instruction or program executed by the receiver, a URL of another server, information of the owner of the transmitter, the registration date or expiration date of the ID, and so on.

The server 7215d reads the information associated with the received ID from the database, and transmits the information to the receiver 7215c. The receiver 7215c performs a process such as displaying the received information, accessing another server based on the received information, or executing the received instruction.

FIG. 299 is a diagram illustrating an example of application of the transmitter and the receiver in Embodiment 13.

As in the case of FIG. 298, transmitters 7216a and 7216b each transmit an ID 1 of the transmitter. A receiver 7216c transmits the received ID 1 to a server A 7216d. The server A transmits an ID 2 and information (URL, password, etc.) for accessing another server B, which are associated with the ID 1. The receiver 7216c transmits the ID 2 to the server B 7216f. The server B 7216f transmits information associated with the ID 2 to the receiver 7216c, and performs a process associated with the ID 2.

FIG. 300 is a diagram illustrating an example of application of the transmitter and the receiver in Embodiment 13.

As in the case of FIG. 298, transmitters 7217a and 7217b each transmit an ID 1 of the transmitter. A receiver 7217c transmits the received ID 1 to a server A 7217d. The server A transmits information associated with the ID 1 and randomly generated key information to a server B. The key information may be generated by the server B and transmitted to the server A. The server A transmits the key information and information (URL, password, etc.) for accessing the server B, to the receiver. The receiver 7217c transmits the key information to the server B 7217f. The server B 7217f transmits information associated with the ID 2 to the receiver 7217c, or performs a process associated with the ID 2.

FIG. 301A is a diagram illustrating an example of the transmission signal in Embodiment 13.

The signal is made up of a header unit 7218a, a data unit 7218b, a padding unit 7218c, and an End of Data unit 7218e. The signal repeatedly carries the same data for 1/15 second. Hence, even in the case where the receiver receives only part of the signal, the receiver can decode the signal. The receiver extracts the header unit from the received signal, and decodes the data by treating the part between two header units as the data unit. A shorter data unit per frame enables decoding even in the case where the transmitter is shown in a small size in the imaging unit of the receiver. A longer data unit per frame, on the other hand, contributes to faster communication. By repeating the same data for 1/15 second, a receiver that captures 30 frames per second can reliably capture the signal of the data unit even when there is blanking. In addition, the same signal is received in either one of adjacent frames, with it being possible to confirm the reception result. The signal can be received even in the case where nonconsecutive frames are not processed due to the operation of another application or the receiver is only capable of capturing 15 frames per second. Since data nearer the header unit can be received more easily, important data may be located near the header unit.

FIG. 301B is a diagram illustrating another example of the transmission signal in Embodiment 13.

As in the example in FIG. 301A, the signal is made up of the header unit 7218a, the data unit 7218b, the padding unit 7218c, and the End of Data unit 7218e. The signal repeatedly carries the same data for 1/30 second. Hence, even in the case where the receiver receives only part of the signal, the receiver can decode the signal. A shorter data unit enables decoding even in the case where the transmitter is shown in a small size in the imaging unit of the receiver. A longer data unit, on the other hand, contributes to faster communication. By repeating the same data for 1/30 second, a receiver that captures 30 frames per second can reliably capture the signal of the data unit even when there is blanking. In addition, the same signal is received in either one of adjacent frames, with it being possible to confirm the reception result. Since data nearer the header unit can be received more easily, important data may be located near the header unit.

FIG. 302 is a diagram illustrating an example of the transmission signal in Embodiment 13.

A modulation scheme 7219a for modulating a 2-bit signal to a 5-bit signal, though lower in modulation efficiency than a modulation scheme such as 2200.2a for modulating a 2-bit signal to a 4-bit signal, can express a header pattern in the same form as data, and therefore suppress flicker as compared with inserting a header pattern of a different form. End of Data may be expressed using a header in the data unit.

FIG. 303A is a diagram illustrating an example of the transmission signal in Embodiment 13.

The signal is made up of a data unit 7220a, a buffer unit 7220b, and an End of Data unit 7220d. The buffer unit may be omitted. The signal repeatedly carries the same data for 1/15 second. A header such as the header 7218a is unnecessary in the case of using, for example, FM modulation of transmitting a signal by a light emission frequency.

FIG. 303B is a diagram illustrating another example of the transmission signal in Embodiment 13.

As in the example in FIG. 303A, the signal is made up of the data unit 7220a, the buffer unit 7220b, and the End of Data unit 7220d. The buffer unit may be omitted. The signal repeatedly carries the same data for 1/30 second. A header such as the header 7218a is unnecessary in the case of using, for example, FM modulation of transmitting a signal by a light emission frequency.

FIG. 304 is a diagram illustrating an example of the transmission signal in Embodiment 13.

Signals are assigned according to frequency. Since the receiver detects frequencies from signal periods, reception errors can be reduced by assigning signals so that the inverses or logarithms of frequencies are at regular intervals, rather than by assigning frequencies to signals at regular intervals. In the case where the imaging unit of the receiver captures light for transmitting data 1 and data 2 within one frame, Fourier transforming the luminance in the direction perpendicular to the exposure lines results in the occurrence of weaker peaks in the frequencies of the data 1 and the data 2 than in the case where light for transmitting single data is captured.

According to this method, the transmission frequency can be analyzed even in the case where light transmitted at a plurality of frequencies in sequence is captured in one frame, and the transmission signal can be received even when the frequency of the transmission signal is changed at time intervals shorter than 1/15 second or 1/30 second.

The transmission signal sequence can be recognized by performing Fourier transform in a range shorter than one frame. Alternatively, captured frames may be concatenated to perform Fourier transform in a range longer than one frame. In this case, the luminance in the blanking time in imaging is treated as unknown.

FIGS. 305A and 305B are diagrams illustrating an example of the transmission signal in Embodiment 13.

In the case where the frequency of the transmission signal is less than or equal to 200 Hz, the light appears to blink to humans. In the case where the frequency exceeds 200 Hz, the light appears to be continuous to humans. A camera captures blinking light in frequencies up to about 500 Hz (1 kHz depending on conditions). It is therefore desirable that the signal frequency (carrier frequency) is greater than or equal to 1 kHz. The signal frequency may be greater than or equal to 200 Hz if there is little effect of the camera capturing flicker. Harmonic noise of a lighting device increases in frequencies greater than or equal to 20 kHz. This can be avoided by setting the signal frequency to less than or equal to 20 kHz. Besides, since sound due to coil oscillation occurs in a range from 500 Hz to 3 kHz, it is necessary to set the signal frequency to greater than or equal to 3 kHz or fix the coil. When the signal frequency is 1 kHz (period of 1 millisecond), the exposure time of the imaging device needs to be set to less than or equal to half, i.e. 0.5 millisecond (= 1/2000 second), in order to recognize the signal asynchronously. In the case of employing frequency modulation in the signal modulation scheme, too, the exposure time of the imaging device needs to be set to less than or equal to half the signal period, due to the sampling theorem. In the case of the modulation scheme that expresses the value by the frequency itself as in FIG. 304, on the other hand, the exposure time of the imaging device can be set to less than or equal to about 4 times the signal period, because the frequency can be estimated from signal values at a plurality of points.

FIG. 306 is a diagram illustrating an example of application of the transmitter in Embodiment 13.

A transmitter 7223a such as a lighting transmits an ID. A receiver 7223b such as a personal computer receives the ID, and transmits the ID and a file 7223e to a server 7223d. The server 7223d stores the file 7223e and the ID in association with each other, and permits a personal computer transmitting the same ID to access the file. Here, a plurality of access controls, such as read-only permission and read and write permission, may be applied according to the ID. A receiver 7223c such as a personal computer receives the ID, transmits the ID to the server 7223d, and accesses the file 7223e on the server. The server 7223d deletes the file or initializes access control, in the case where a predetermined time has elapsed from when the file is accessed last time or in the case where the personal computer 7223b transmits a different ID. The personal computer 7223b or the personal computer 7223c may transmit an ID.

FIG. 307 is a diagram illustrating an example of application of the transmitter in Embodiment 13.

A transmitter 7224b registers its ID information in a server 7224d. A receiver 7224a displays a coupon, an admission ticket, member information, or prepaid information on the screen. The transmitter 7224b transmits the ID. The receiver 7224a receives the ID, and transmits the received ID, a user ID, a terminal ID, and the information displayed on the screen to the server 7224d. The server 7224d determines whether or not the information displayed on the receiver 7224a is valid, and transmits the result to a display device 7224c. The server 7224d may transmit key information that changes with time to the transmitter 7224b, which then transmits the key information. Here, the server 7224d may be implemented as the same device as the transmitter 7224b or the display device 7224c. In a system of displaying a coupon, an admission ticket, member information, or prepaid information on the screen of the receiver 7224a in 2D barcode or the like and reading the displayed information, the information can be easily falsified by displaying an image obtained by copying the screen. According to this method, however, it is possible to prevent the falsification of the screen by copying.

FIGS. 308 to 310 are diagrams for describing the imaging element in Embodiment 13.

FIG. 308 is a front view of an imaging element 800 according to the present invention. As described with the drawings in the foregoing embodiments, to improve the optical communication speed according to the present invention, only the data of scan lines, e.g. n = 4 to 7, of an area 830a in a light signal generation unit 830 is obtained by repetitive scan by supplying a scan line selection signal to vertical access means 802, while tracking the light signal generation unit 830 as illustrated in FIG. 310. As a result, continuous light signals according to the present invention can be extracted as illustrated in the lower part of FIG. 310. In detail, continuous signals such as 4, 5, 6, 7 followed by the blanking time and 4, 5, 6, 7 followed by the blanking time can be obtained. The blanking can be limited to 2 μs or less in the current imaging element process. When the blanking is limited to 2 μs or less, the data can be demodulated substantially continuously because, in the case of 30 fps, one frame is 33 ms and, in the case of 1000 lines, one line is 33 μs.

In the present invention, in the imaging element (image sensor) in a rolling shutter mode, first the shutter speed is increased to display the lines according to the present invention, and then the signal is obtained. After this, the image 830 of the light source moves up, down, left, or right due to hand movement of the user of the camera. This causes the image 830 to be partially outside the lines n = 4 to 7, as a result of which the signal is interrupted and an error occurs. In view of this, hand movement detection and correction means 832 is used for correction, to fix the image 830. Alternatively or in combination with this, means 834 of detecting the line number of the position of the image 830 is used to specify the line number n of the image 830, and a line selection unit 835 controls the vertical access means to change the line number to a desired line n (e.g. n = 7 to 10). As a result, the image 830 is obtained and so the continuous signals are obtained. Thus, data with few errors can be received at high speed.

Referring back to FIG. 308, the imaging element 800 is further described below. There are horizontal pixels a to k, which are accessible by horizontal access means 801. Meanwhile, there are 12 vertical pixels where n = 1 to 12. 803a to 803n are read for each column to a line memory 805 and output from an output unit 808.

As illustrated in FIG. 309, in the present invention, first the data is sequentially read in a normal imaging mode as in (a). A blanking time 821 is provided between normal frames, during which various adjustment operations for video signals, such as color, are conducted.

The signal cannot be obtained in a time period of 5% to 20%, though this differs depending on the imaging element. Since the reception pattern specific to the present invention is unable to be obtained, when the imaging device enters a data signal reception mode in Step 820c, first the shutter speed is increased to increase the gain, thus receiving the data. In the case of Yes, the blanking time 821 is reduced to a blanking time 821a by stopping part of the above-mentioned video imaging operations for color, brightness, sensitivity, and so on. As a result of such a reduction by omitting adjustment operations, the blanking time 821a can be limited to 2 μs or less in the current process. This delivers a significant reduction in burst error of the input signal, and so enables much faster transmission.

In the case where only a partial image is captured as the image 830 as in FIG. 310, the information of the lines other than n = 4 to 8 is not obtained. This causes a large burst error, leading to lower reception efficiency and a significant decrease in transmission amount.

The image position detection means 834 in FIG. 310 detects the position and size of the image 830. In the case where the image is small, the imaging element is switched to a high-speed read mode in Step 820d, and scans only the lines (n = 4 to 7) in which the image 830 is captured. Line signals 803d, 803e, 803f, and 803g are repeatedly read as in (c), as a result of which the pattern specific to the present invention is read seamlessly. Continuous data reception with almost no burst error can thus be performed at a significantly improved data rate.

In detail, a transmission rate of about 2400 bps is achieved when the carrier is 4.8 kHz in the current imaging element. A transmission rate of several tens of kbps is expected with faster imaging elements in the future.

After the data read is completed in Step 820e, the shutter speed is decreased to increase the blanking time, and the imaging element returns to the normal imaging mode in (a).

The above-mentioned blanking time reduction and repetitive reading of specific lines ensures that synchronous signals or addresses are read, and enables much faster transmission in the pattern transmission method according to the present invention.

(Variations)

The following describes variations or supplements to each of the above embodiments.

FIG. 311A is a flowchart illustrating process operations of the reception device (imaging device). FIG. 311A illustrates more detailed process operations than those in FIG. 128.

Here, the imaging unit of the receiver employs not a mode (global shutter mode) of simultaneously exposing all light receiving elements but a mode (rolling shutter mode, focal plane shutter mode) of sequentially exposing the light receiving elements one by one with a time difference. The term "exposure" used in the description of the present invention includes an exposure mode of controlling the time during which an imaging element is exposed to light by a physical shutter, and an exposure mode of extracting only the output of an imaging element during a specific time by an electronic shutter.

First, in Step 7340a, in the case where the imaging mode is the global shutter mode, the receiver changes the imaging mode to the rolling shutter mode. Next, in Step 7340b, the receiver sets the shutter speed so that a bright line is captured when capturing a subject whose moving average luminance with a time width greater than or equal to 5 milliseconds is unchanged and that changes in luminance in a region less than or equal to 5 milliseconds.

In Step 7340c, the receiver sets the sensitivity of the light receiving element to increase the difference between the bright part and the dark part of the bright line. In Step 7340d, the receiver sets the imaging mode to a macro imaging mode, or sets a shorter focal length than focusing on the transmitter. Capturing the transmitter in a larger size in a blurred state enables an increase in the number of exposure lines in which the bright line is captured.

In Step 7340e, the receiver observes the change in luminance of the bright line in the direction perpendicular to the exposure line. In Step 7340f, the receiver calculates the interval between the parts of rapid rise in luminance or the interval between the parts of rapid fall in luminance and reads the transmission signal from the interval, or calculates the period of luminance change and reads the transmission signal from the period.

FIG. 311B is a diagram illustrating an image obtained in the normal imaging mode and an image obtained in the macro imaging mode in comparison. As illustrated in FIG. 311B, an image 7307b obtained by capturing the light emitting subject in the macro imaging mode includes a larger bright area than an image 7307a obtained by capturing the same subject in the normal imaging mode. Thus, the bright line can be generated in more exposure lines for the subject in the macro imaging mode.

FIG. 312 is a diagram illustrating a display device that displays video and the like.

A display device 7300a including a liquid display or the like displays video in a video area 7300b, and various information in an information display area 7300c. The display device 7300a is configured as a transmitter (transmission device), and transmits a signal by changing the luminance of the backlight.

FIG. 313 is a diagram illustrating an example of process operations of the display device 7300a.

First, in Step 7350a, the display device 7300a enters the signal transmission mode. Next, in Step 7350b, the display device 7300a transmits the signal by changing the luminance of the backlight in the information display area 7300c.

FIG. 314 is a diagram illustrating an example of the signal transmission part in the display device 7300a.

The display device 7300a transmits the signal by changing the luminance of each part (7301d, 7301f, 7301g, 7301i) where the backlight is ON, and transmits no signal from the other parts (7301c, 7301e, 7301h, 7301j).

FIG. 315 is a diagram illustrating another example of process operations of the display device 7300a.

First, in Step 7351a, the display device 7300a enters the signal transmission mode. Next, in Step 7351b, the display device 7300a transmits the signal only from the part where the backlight is ON, in the case where the backlight is turned OFF upon screen change for improved dynamic resolution. In Step 7351c, the display device 7300a transmits no signal when the backlight is OFF in the entire screen.

FIG. 316 is a diagram illustrating another example of the signal transmission part in the display device 7300a.

The display device 7300a turns OFF the backlight control for improved dynamic resolution in each part (7302b, 7302e, 7302g, 7302j), and transmits the signal from these parts. Meanwhile, the display device 7300a turns ON the backlight control for improved dynamic resolution in the other parts (7302c, 7302d, 7302h, 7301i).

FIG. 317 is a diagram illustrating yes another example of process operations of the display device 7300a.

First, in Step 7352a, the display device 7300a enters the signal transmission mode. Next, in Step 7352b, the display device 7300a turns OFF the backlight control for improved dynamic resolution in the part (7302b, 7302e, 7302g, 7202j) of the screen, and transmits the signal from the part.

In Step 7352c, the display device 7300a adjusts the average luminance of the backlight so that the brightness of the part transmitting the signal is equal to the average luminance of the backlight in the part transmitting no signal. This adjustment may be made by adjusting the time ratio of blinking of the backlight during signal transmission or by adjusting the maximum luminance of the backlight.

FIG. 318 is a diagram illustrating a structure of a communication system including the transmitter and the receiver.

The communication system includes transmitters 7303a and 7303b, a control device 7303c, a network 7303d, an ID management server 7303e, a wireless access point 7303f, and receivers 7303g and 7303h.

FIG. 319 is a flowchart illustrating process operations of the communication system in FIG. 318.

First, in Step 7353a, the ID of the transmitter, the information (SSID, password, ID of wireless access point, radio frequency, position information of access point, connectable position information, etc.) of the wireless access point 7303f, and the information (IP address, etc.) of the control device 7303c are stored in the ID management server 7303e in association with each other. Next, in Step 7353b, the transmitter 7303a or 7303b transmits the ID of the transmitter 7303a or 7303b. The transmitter 7303a or 7303b may also transmit the information of the wireless access point 7303f and the information of the control device 7303c. In Step 7353c, the receiver 7303g or 7303h receives the ID of the transmitter 7303a or 7303b and obtains the information of the wireless access point 7303f and the information of the control device 7303c from the ID management server 7303e, or receives the ID of the transmitter 7303a or 7303b and the information of the wireless access point 7303f.

In Step 7353d, the transmitter 7303a or 7303b connects to the wireless access point 7303f. In Step 7353e, the transmitter 7303a or 7303b transmits the address of the ID management server 7303e on the network, an instruction to the ID management server 7303e, and the ID of the transmitter 7303a or 7303b to the control device 7303c.

In Step 7353f, the control device 7303c transmits the received ID to the receiver 7303g or 7303h. In Step 7353g, the control device 7303c issues the instruction to the ID management server 7303e on the network, and obtains a response. Here, the control device 7303c operates as a proxy server.

In Step 7353h, the control device 7303c transmits the response and the received ID, from the transmitter 7303a or 7303b indicated by the transmitter ID. The transmission may be repeatedly performed until the reception completion is notified from the receiver 7303g or 7303h or a predetermined time elapses.

In Step 7353i, the receiver 7303g or 7303h receives the response. In Step 7353j, the receiver 7303g or 7303h transmits the received ID to the control device 7303c, and notifies the reception completion.

In Step 7353k, in the case where the receiver 7303g or 7303h is at a position where the signal from the transmitter 7303a or 7303b cannot be received, the receiver 7303g or 7303h may notify the control device 7303c to return the response via the wireless access point 7303f.

FIG. 320 is a diagram illustrating a variation of signal transmission in each of the above embodiments.

In the reception method according to the present invention, the signal transmission efficiency is higher when the light emitting unit of the transmitter is captured in a larger size in the imaging unit of the receiver. That is, the signal transmission efficiency is low in the case where a small electric bulb or a high ceiling lighting is used as the light emitting unit of the transmitter. The signal transmission efficiency can be enhanced by applying light of a transmitter 7313a to a wall, a ceiling, a floor, a lamp shade, or the like and capturing reflected light 7313b by a receiver 7313c.

FIG. 321 is a diagram illustrating a variation of signal transmission in each of the above embodiments.

Signal transmission is performed by a transmitter 7314d projecting light including a transmission signal onto an exhibit 7314a and a receiver 7314c capturing reflected light 7314b.

FIG. 322 is a diagram illustrating a variation of signal transmission in each of the above embodiments.

A signal transmitted from a transmitter 7315a is received by a receiver 7315b including an illuminance sensor. The receiver 7315b receives the signal not by an imaging element but by an illuminance sensor. Such a receiver is low in power consumption, suitable for constant signal reception, lightweight, and manufacturable at low cost.

The receiver 7315b is formed as a part of glasses, an earring, a hair accessory, a wristwatch, a hearing aid, a necklace, a cane, a trolley, or a shopping cart. The receiver 7315b performs video display, audio reproduction, or vibration, according to the received signal. The receiver 7315b also transmits the received signal to a mobile information terminal 7315c via a wireless or wired transmission path.

FIG. 323A is a diagram illustrating a variation of signal transmission in each of the above embodiments.

A projector 7316a transmits a signal, using projection light as the transmission signal. A receiver 7316c captures reflected light from a screen 7316b, to receive the signal. The receiver 7316c displays content and its ancillary information projected by the projector 7316a, on a screen 7316d. The content displayed on the screen 7316d may be transmitted as the transmission signal, or obtained from a server 7316e based on an ID included in the transmission signal.

FIG. 323B is a diagram illustrating a variation of signal transmission in each of the above embodiments.

A receiver 7317b receives a signal transmitted from a transmitter 7317a. The receiver 7317b transmits audio to an earphone or hearing aid 7317c registered in the receiver 7317b. In the case where visual impairment is included in a user profile registered in the receiver 7317b, the receiver 7317b transmits audio commentary for the visually impaired to the earphone 7317c.

FIG. 323C is a diagram illustrating a variation of signal transmission in each of the above embodiments.

A receiver 7318c receives a signal transmitted from a transmitter 7318a or 7318b. The receiver 7318c may receive the signal using an illuminance sensor. The inclusion of an illuminance sensor with high directivity enables the receiver 7318c to accurately estimate the direction to the transmitter. Moreover, the inclusion of a plurality of illuminance sensors enables the receiver 7318c to receive the transmission signal in a wider range. The receiver 7318c transmits the received signal to an earphone 7318d or a head-mounted display 7318e.

FIG. 323D is a flowchart illustrating process operations of a communication system including the receiver and the display or the projector. This flowchart illustrates process operations corresponding to any of the examples of signal transmission illustrated in FIGS. 323A to 323C.

First, in Step 7357a, the ID of the transmitter, the display content ID, and the content displayed on the display or the projector are stored in the ID management server in association with each other. Next, in Step 7357b, the transmitter displays the content on the display or the projector, and transmits the signal using the backlight of the display or the projection light of the projector. The transmission signal may include the ID of the transmitter, the display content ID, the URL in which the display content is stored, and the display content itself.

In Step 7357c, the receiver receives the transmission signal. In Step 7357d, the receiver obtains the content displayed on the display or the projector by the transmitter, based on the received signal.

In Step 7357e, in the case where a user profile is set in the receiver, the receiver obtains content suitable for the profile. For example, the receiver obtains subtitle data or audio content for at hand reproduction in the case where a profile of hearing impairment is set, and obtains content for audio commentary in the case where a profile of visual impairment is set.

In Step 7357f, the receiver displays the obtained image content on the display of the receiver, and reproduces the obtained audio content from the speaker of the receiver, the earphone, or the hearing aid.

FIG. 324 is a diagram illustrating an example of the transmission signal in Embodiment 12. FIG. 324 illustrates the transmission signal in FIG. 250 in detail.

In the case of coding the transmission signal by the method in any of FIGS. 84 to 87, 302, and the like, the receiver can decode the transmission signal by detecting points 7308c, 7308d, and 7308e at which the luminance rises rapidly. In this case, transmission signals 7308a and 7308b are equivalent and represent the same signal.

Accordingly, the average luminance can be changed by adjusting the time of luminance fall, as in the transmission signals 7308a and 7308b. When there is a need to change the luminance of the transmitter, by adjusting the average luminance in this way, the luminance can be adjusted without changing the transmission signal itself.

FIG. 325 is a diagram illustrating an example of the transmission signal in Embodiment 7. FIG. 325 illustrates the transmission signal in FIG. 91 in detail.

Transmission signals 7309a and 7309b can be regarded as equivalent to a transmission signal 7309c, when taking the average luminance of a length such as 7309d. Another signal can be superimposed by changing the luminance with a time width unobservable by other receivers, as in the transmission signals 7309a and 7309b.

FIG. 326 is a diagram illustrating another example of the transmission signal in Embodiment 7. FIG. 326 illustrates the transmission signal in FIG. 91 in detail.

Another signal is superimposed by adding a luminance change with a time width unobservable by other receivers to a transmission signal 7310a, as in 7310c. In the case where the signal cannot be superimposed in a luminance fall section in the transmission signal 7310a, a high-speed modulation signal can be transmitted intermittently by adding a start signal and an end signal to a high-speed modulation part as in 7310e.

FIG. 327A is a diagram illustrating an example of the imaging element of the receiver in each of the above embodiments.

Many imaging elements have a layout 7311a, and so cannot capture the transmitter while capturing the optical black. A layout 7311b, on the other hand, enables the imaging element to capture the transmitter for a longer time.

FIG. 327B is a diagram illustrating an example of a structure of an internal circuit of the imaging device of the receiver in each of the above embodiments.

An imaging device 7319a includes a shutter mode change unit 7319b that switches between the global shutter mode and the rolling shutter mode. Upon reception start, the receiver changes the shutter mode to the rolling shutter mode. Upon reception end, the receiver changes the shutter mode to the global shutter mode, or returns the shutter mode to a mode before reception start.

FIG. 327C is a diagram illustrating an example of the transmission signal in each of the above embodiments.

In the case where the carrier is set to 1 kHz as a frequency at which no flicker is captured by a camera, one slot is 1 millisecond (7320a). In the modulation scheme (4-value PPM modulation) in FIG. 85, the average of one symbol (4 slots) is 75% (7320b), and the range of the moving average for 4 milliseconds is 75% $\pm$ (modulation factor)/4. Flicker is smaller when the modulation factor is lower. Assuming one symbol as one period, the carrier is greater than or equal to 800 Hz in the case where the frequency at which no flicker is perceived by humans is greater than or equal to 200 Hz, and the carrier is greater than or equal to 4 kHz in the case where the frequency at which no flicker is captured by a camera is greater than or equal to 1 kHz.

Likewise, in the case where the carrier is set to 1 kHz, in the modulation scheme (5-value PPM modulation) in FIG. 302, the average of one symbol (5 slots) is 80% (7320c), and the range of the moving average for 5 milliseconds is 80% $\pm$ (modulation factor)/5. Flicker is smaller when the modulation factor is lower. Assuming one symbol as one period, the carrier is greater than or equal to 1 kHz in the case where the frequency at which no flicker is perceived by humans is greater than or equal to 200 Hz, and the carrier is greater than or equal to 5 kHz in the case where the frequency at which no flicker is captured by a camera is greater than or equal to 1 kHz.

FIG. 327D is a diagram illustrating an example of the transmission signal in each of the above embodiments.

A header pattern is different from a pattern representing data, and also needs to be equal in average luminance to the pattern representing data, in order to eliminate flicker. Patterns such as 7321b, 7321c, 7321d, and 7321e are available as patterns equal in average luminance to the data pattern in the modulation scheme of 2200.2a. The pattern 7321b is desirable in the case where the luminance value can be controlled in levels. In the case where the luminance change is sufficiently faster than the exposure time of the imaging device in the receiver as in the pattern 7321e, the signal is observed as in 7321b by the receiver. The modulation scheme 7219a is defined in the form that includes the header pattern.

Though the information communication method according to one or more aspects has been described by way of the embodiments, the present invention is not limited to these embodiments. Other embodiments realized by application of modifications conceivable by those skilled in the art to the embodiments and any combination of the structural elements in the embodiments are also included in the scope of one or more aspects without departing from the subject matter of the present invention.

FIG. 328A is a flowchart of an information communication method according to an aspect of the present invention.

An information communication method according to an aspect of the present invention is an information communication method of obtaining information from a subject, and includes steps SA11, SA12, and SA13.

In detail, the information communication method includes: an exposure time setting step (SA11) of setting an exposure time of an image sensor so that, in an image obtained by capturing the subject by the image sensor, a bright line corresponding to an exposure line included in the image sensor appears according to a change in luminance of the subject; an imaging step (SA12) of capturing the subject that changes in luminance by the image sensor with the set exposure time, to obtain the image including the bright line; and an information obtainment step (SA13) of obtaining the information by demodulating data specified by a pattern of the bright line included in the obtained image.

FIG. 328B is a block diagram of an information communication device according to an aspect of the present invention.

An information communication device A10 according to an aspect of the present invention is an information communication device that obtains information from a subject, and includes structural elements A11, A12, and A13.

In detail, the information communication device A10 includes: an exposure time setting unit A11 that sets an exposure time of an image sensor so that, in an image obtained by capturing the subject by the image sensor, a bright line corresponding to an exposure line included in the image sensor appears according to a change in luminance of the subject; an imaging unit A12 which is the image sensor that captures the subject that changes in luminance by the image sensor with the set exposure time, to obtain the image including the bright line; and a demodulation unit A13 that obtains the information by demodulating data specified by a pattern of the bright line included in the obtained image.

Note that the pattern of the bright line mentioned above is synonymous with the difference of the interval of each bright line.

FIG. 329 is a diagram illustrating an example of an image obtained by an information communication method according to an aspect of the present invention.

For example, the exposure time is set to less than 10 milliseconds for the subject that changes in luminance at a frequency greater than or equal to 200 Hz. A plurality of exposure lines included in the image sensor are exposed sequentially, each at a different time. In this case, several bright lines appear in an image obtained by the image sensor, as illustrated in FIG. 329. That is, the image includes the bright line parallel to the exposure line. In the information obtainment step (SA13), data specified by a pattern in a direction perpendicular to the exposure line in the pattern of the bright line is demodulated.

In the information communication method illustrated in FIG. 328A and the information communication device A10 illustrated in FIG. 328B, the information transmitted using the change in luminance of the subject is obtained by the exposure of the exposure line in the image sensor. This enables communication between various devices, with no need for, for example, a special communication device for wireless communication.

FIG. 330A is a flowchart of an information communication method according to another aspect of the present invention.

An information communication method according to another aspect of the present invention is an information communication method of transmitting a signal using a change in luminance, and includes steps SB11, SB12, and SB13.

In detail, the information communication method includes: a determination step (SB11) of determining a pattern of the change in luminance by modulating the signal to be transmitted; a first transmission step (SB12) of transmitting the signal by a light emitter changing in luminance according to the determined pattern; and a second transmission step (SB13) of transmitting the same signal as the signal by the light emitter changing in luminance according to the same pattern as the determined pattern within 33 milliseconds from the transmission of the signal. In the determination step (SB11), the pattern is determined so that each average obtained by moving-averaging the changing luminance with a width greater than or equal to 5 milliseconds is within a predetermined range.

FIG. 330B is a block diagram of an information communication device according to another aspect of the present invention.

An information communication device B10 according to another aspect of the present invention is an information communication device that transmits a signal using a change in luminance, and includes structural elements B11 and B12.

In detail, the information communication device B10 includes:

a luminance change pattern determination unit B11 that determines a pattern of the change in luminance by modulating the signal to be transmitted; and a light emitter B12 that transmits the signal by changing in luminance according to the determined pattern, and transmits the same signal as the signal by changing in luminance according to the same pattern as the determined pattern within 33 milliseconds from the transmission of the signal. The luminance change pattern determination unit B11 determines the pattern so that each average obtained by moving-averaging the changing luminance with a width greater than or equal to 5 milliseconds is within a predetermined range.

In the information communication method illustrated in FIG. 330A and the information communication device B10 illustrated in FIG. 330B, the pattern of the change in luminance is determined so that each average obtained by moving-averaging the changing luminance with a width greater than or equal to 5 milliseconds is within a predetermined range. As a result, the signal can be transmitted using the change in luminance without humans perceiving flicker. Moreover, the same signal is transmitted within 33 milliseconds, ensuring that, even when the receiver receiving the signal has blanking, the signal is transmitted to the receiver.

FIG. 331A is a flowchart of an information communication method according to yet another aspect of the present invention.

An information communication method according to yet another aspect of the present invention is an information communication method of transmitting a signal using a change in luminance, and includes steps SC11, SC12, SC13, and SC14.

In detail, the information communication method includes: a determination step (SC11) of determining a plurality of frequencies by modulating the signal to be transmitted; a transmission step (SC12) of transmitting the signal by a light emitter changing in luminance according to a constant frequency out of the determined plurality of frequencies; and a change step (SC14) of changing the frequency used for the change in luminance to an other one of the determined plurality of frequencies in sequence, in a period greater than or equal to 33 milliseconds. After the transmission step SC12, whether or not all of the determined frequencies have been used for the change in frequency may be determined (SC13), where the update step SC14 is performed in the case of determining that all of the frequencies have not been used (SC13: N). In the transmission step (SC12), the light emitter changes in luminance so that each average obtained by moving-averaging the changing luminance with a width greater than or equal to 5 milliseconds is within a predetermined range.

FIG. 331B is a block diagram of an information communication device according to yet another aspect of the present invention.

An information communication device C10 according to yet another aspect of the present invention is an information communication device that transmits a signal using a change in luminance, and includes structural elements C11, C12, and C13.

In detail, the information communication device C10 includes: a frequency determination unit C11 that determines a plurality of frequencies by modulating the signal to be transmitted; a light emitter C13 that transmits the signal by changing in luminance according to a constant frequency out of the determined plurality of frequencies; and a frequency change unit C12 that changes the frequency used for the change in luminance to an other one of the determined plurality of frequencies in sequence, in a period greater than or equal to 33 milliseconds. The light emitter C13 changes in luminance so that each average obtained by moving-averaging the changing luminance with a width greater than or equal to 5 milliseconds is within a predetermined range.

In the information communication method illustrated in FIG. 331A and the information communication device C10 illustrated in FIG. 331B, the pattern of the change in luminance is determined so that each average obtained by moving-averaging the changing luminance with a width greater than or equal to 5 milliseconds is within a predetermined range. As a result, the signal can be transmitted using the change in luminance without humans perceiving flicker. In addition, a lot of FM modulated signals can be transmitted.

Moreover, an information communication device may include:

an information management unit that manages device information which includes an ID unique to the information communication device and state information of a device; a light emitting element; and a light transmission unit that transmits information using a blink pattern of the light emitting element, wherein when an internal state of the device has changed, the light transmission unit converts the device information into the blink pattern of the light emitting element, and transmits the converted device information.

The information communication device may further include an activation history management unit that stores information sensed in the device, the information indicating an activation state of the device or a user usage history, wherein the light transmission unit obtains previously registered performance information of a clock generation device to be utilized, and changes a transmission speed.

The light emitting element may include a first light emitting element and a second light emitting element, the second light emitting element being disposed in vicinity of the first light emitting element for transmitting information by blinking, wherein when information transmission is repeatedly performed a certain number of times by the first light emitting element blinking, the second light emitting element emits light during an interval between an end of the information transmission and a start of the information transmission.

The information communication device may include: an imaging unit that exposes imaging elements with a time difference; and a signal analysis unit that reads, from one captured image, a change in time-average luminance of an imaging object less than or equal to 1 millisecond, using a difference between exposure times of the imaging elements.

The time-average luminance may be time-average luminance greater than or equal to 1/30000 second.

The information communication device may further modulate transmission information to a light emission pattern, and transmit the information using the light emission pattern.

The information communication device may express a transmission signal by a change in time-average luminance less than or equal to 1 millisecond, and change a light emitting unit in luminance to ensure that time-average luminance greater than or equal to 60 milliseconds is uniform.

The information communication device may express the transmission signal by a change in time-average luminance greater than or equal to 1/30000 second.

A part common between the transmission signal and a signal expressed by time-average luminance in a same type of information communication device located nearby may be transmitted by causing the light emitting unit to emit light at a same timing as a light emitting unit of the same type of information communication device.

A part not common between the transmission signal and the signal expressed by time-average luminance in the same type of information communication device located nearby may be expressed by time-average luminance of the light emitting unit during a time slot in which the same type of information communication device does not express the signal by time-average luminance.

The information communication device may include: a first light emitting unit that expresses the transmission signal by a change in time-average luminance; and a second light emitting unit that expresses the transmission signal not by a change in time-average luminance, wherein the signal is transmitted using a position relation between the first light emitting unit and the second light emitting unit.

A centralized control device may include a control unit that performs centralized control on any of the information communication devices described above.

A building may include any of the information communication devices described above or the centralized control device described above.

A train may include any of the information communication devices described above or the centralized control device described above.

An imaging device may be an imaging device that captures a two-dimensional image, wherein the image is captured by exposing only an arbitrary imaging element, at a higher speed than in the case where the image is captured by exposing all imaging elements.

The arbitrary imaging element may be an imaging element that captures an image of a pixel having a maximum change in time-average luminance less than or equal to 1 millisecond, or a line of imaging elements including the imaging element.

Each of the structural elements in each of the above-described embodiments may be configured in the form of an exclusive hardware product, or may be realized by executing a software program suitable for the structural element. Each of the structural elements may be realized by means of a program executing unit, such as a CPU and a processor, reading and executing the software program recorded on a recording medium such as a hard disk or a semiconductor memory. For example, the program causes a computer to execute the information communication method illustrated in any of the flowcharts in FIGS. 328A, 330A, and 331A.

[Industrial Applicability]

The present invention is applicable to an information communication device and the like, and in particular to an information communication device and the like used for a method of communication between a mobile terminal such as a smartphone, a tablet terminal, or a mobile phone and a home electric appliance such as an air conditioner, a lighting device, or a rice cooker.

[Reference Signs List]

1101 Television
1105 Smartphone
1106 Microwave
1107 Air cleaner
1201 Smartphone
1301 Transmitter device
1309 Transmission speed determination unit
1401 Receiver device
1404 Image obtaining unit
1406 Blink information obtaining unit
3001a Orderer mobile terminal
3001b Intercom indoor unit
3001c Intercom outdoor unit
3001e Delivery order receiving server
3001f Deliverer mobile terminal
4040a Microwave table
4040b Mobile phone table
4040c Mobile phone model table
4040d User voice characteristic table
4040e User keyword voice table
4040f User owned device position table
4040h User position table
A10, B10, C10 Information communication device
A11 Exposure time setting unit
A12 Imaging unit
A13 Demodulation unit
B11 Luminance change pattern determination unit
B12, C13 Light emitter
C11 Frequency determination unit
C12 Frequency change unit

**Claims**

1. An information communication method of obtaining information from a subject using an image sensor including a plurality of exposure lines, the information communication method comprising:

obtaining a first image by starting exposure sequentially for the plurality of exposure lines in the image sensor each at a different time and performing image capture with a first exposure time so that the exposure time of each of the plurality of exposure lines partially overlaps with the exposure time of an adjacent one of the plurality of exposure lines; and
obtaining a second image by starting exposure sequentially for the plurality of exposure lines each at a different time and performing image capture with a second exposure time shorter than the first exposure time so that the exposure time of each of the plurality of exposure lines partially overlaps with the exposure time of an adjacent one of the plurality of exposure lines, and obtaining information by demodulating a bright line pattern that appears in the second image, the bright line pattern corresponding to the plurality of exposure lines the information communication method being **characterised in that** in the obtaining of second image, the second exposure time is set to less than or equal to 1/480 second to cause the bright line pattern to appear in the second image.

2. The information communication method according to Claim 1,
wherein in the obtaining of the second image, a pattern in a direction perpendicular to the plurality of exposure lines in the bright line pattern is demodulated.

3. The information communication method according to Claim 1 or 2,
wherein in the obtaining of the second image, the subject that changes in luminance at a frequency greater than or equal to 200 Hz is captured.

4. The information communication method according to any one of Claims 1 to 3,
wherein in the obtaining of the second image, the second image including a bright line parallel to the plurality of exposure lines is obtained.

5. The information communication method according to any one of Claims 1 to 4,
wherein in the obtaining of the second image, for each area in the obtained second image corresponding to a different one of the plurality of exposure lines included in the image sensor, the bright line pattern indicating 0 or 1 specified according to whether or not a bright line is present in the area is demodulated.

6. The information communication method according to Claim 5,
wherein in the obtaining of the second image, whether or not the bright line is present in the area is determined according to whether or not a luminance value of the area is greater than or equal to a threshold.

7. The information communication method according to any one of Claims 1 to 4,
wherein in the obtaining of the second image:

for each predetermined period, the subject that changes in luminance at a constant frequency corresponding to the predetermined period is captured; and
the bright line pattern generated, for each predetermined period, according to the change in luminance at the constant frequency corresponding to the predetermined period is demodulated.

8. The information communication method according to any one of Claims 1 to 4,
wherein in the obtaining of the second image:

the subject that changes in luminance to transmit a signal by adjusting a time from one change to a next change in luminance is captured, the one change and the next change being the same one of a rise and a fall in luminance; and
a code specified by the bright line pattern is demodulated, the code being associated with the time.

9. The information communication method according to any one of Claims 1 to 8,
wherein in the obtaining of the second image, the subject that changes in luminance so that each average obtained by moving-averaging the changing luminance with a width greater than or equal to 5 milliseconds is within a predetermined range is captured.

10. The information communication method according to any one of Claims 1 to 9,
wherein the bright line pattern differs according to an exposure time of the image sensor, and
in the obtaining of the second image, the bright line pattern corresponding to the set exposure time is demodulated.

11. The information communication method according to any one of Claims 1 to 10, further comprising
detecting a state of an imaging device including the image sensor,
wherein in the obtaining of the second image, the information indicating a position of the subject is obtained, and a position of the imaging device is calculated based on the obtained information and the detected state.

**12.** The information communication method according to Claim 1,
wherein in the obtaining of the second image, the subject that includes a plurality of areas arranged along the plurality of exposure lines and changes in luminance for each area is captured.

**13.** The information communication method according to Claim 1, further comprising
estimating a location where an imaging device including the image sensor is present,
wherein in the obtaining of the second image, identification information of the subject is obtained as the information, and related information associated with the location and the identification information is obtained from a server.

**14.** An information communication device configured to obtain information from a subject using an image sensor including a plurality of exposure lines, the information communication device comprising:

a imaging unit configured to obtain a first image by starting exposure sequentially for the plurality of exposure lines in the image sensor each at a different time and performing image capture with a first exposure time so that the exposure time of each of the plurality of exposure lines partially overlaps with the exposure time of an adjacent one of the plurality of exposure lines; and
a visible light communication unit configured to obtain a second image by starting exposure sequentially for the plurality of exposure lines each at a different time and performing image capture with a second exposure time shorter than the first exposure time so that the exposure time each of the plurality of exposure lines partially overlaps with the exposure time of an adjacent one of the plurality of exposure lines, and to obtain information by demodulating a bright line pattern that appears in the second image, the bright line pattern corresponding to the plurality of exposure lines, the information communication device being **characterised in that** the visible light communication unit is configured to set the second exposure time to less than or equal to 1/480 second to cause the bright line pattern to appear in the second image.

**15.** A computer program that causes an information communication device according to claim 14 to execute the information communication method according to claim 1.


**Patentansprüche**

**1.** Informationsübermittlungsverfahren für die Einholung von Informationen von einem Subjekt unter Verwendung eines Bildsensors, der eine Mehrzahl von Belichtungszeilen enthält, wobei das Informationsübermittlungsverfahren Folgendes umfasst:

Einholung eines ersten Bildes durch sequentielles Starten der Belichtung für die Mehrzahl von Belichtungszeilen in dem Bildsensor jeweils zu einem anderen Zeitpunkt und Durchführung einer Bildaufnahme mit einer ersten Belichtungszeit, so dass sich die Belichtungszeit jeder der Mehrzahl von Belichtungszeilen teilweise mit der Belichtungszeit einer anschließenden der Mehrzahl von Belichtungszeilen überschneidet; und
Einholung eines zweiten Bildes durch sequentielles Starten der Belichtung für die Mehrzahl von Belichtungszeilen, jeweils zu einem anderen Zeitpunkt und Durchführung einer Bildaufnahme mit einer zweiten Belichtungszeit, die kürzer als die erste Belichtungszeit ist, so dass sich die Belichtungszeit jeder der Mehrzahl von Belichtungszeilen teilweise mit der Belichtungszeit einer anschließenden der Mehrzahl von Belichtungszeilen überschneidet, und Einholung von Informationen durch Demodulation eines hellen Zeilenmusters, das im zweiten Bild erscheint, wobei das helle Zeilenmuster der Mehrzahl von Belichtungszeilen entspricht,
Informationsübermittlungsverfahren, **dadurch gekennzeichnet, dass** bei der Einholung eines zweiten Bildes die zweite Belichtungszeit auf weniger als oder gleich 1/480 Sekunde eingestellt wird, um das helle Zeilenmuster im zweiten Bild erscheinen zu lassen.

**2.** Informationsübermittlungsverfahren nach Anspruch 1,
wobei bei der Einholung des zweiten Bildes ein Muster in einer Richtung senkrecht zur Mehrzahl von Belichtungszeilen in dem hellen Zeilenmuster demoduliert wird.

**3.** Informationsübermittlungsverfahren nach Anspruch 1 oder 2,
wobei bei der Einholung des zweiten Bildes das Subjekt, das die Leuchtdichte bei einer Frequenz von größer oder gleich 200 Hz ändert, aufgenommen wird.

**4.** Informationsübermittlungsverfahren nach einem der Ansprüche 1 bis 3,

wobei bei der Einholung des zweiten Bildes das zweite Bild eingeholt wird, das eine helle Zeile parallel zur Mehrzahl von Belichtungszeilen enthält.

**5.** Informationsübermittlungsverfahren nach einem der Ansprüche 1 bis 4, wobei bei der Einholung des zweiten Bildes für jeden Bereich in dem eingeholten zweiten Bild, der einer anderen der im Bildsensor enthaltenen Mehrzahl von Belichtungszeilen entspricht, das helle Zeilenmuster, das 0 oder 1 angibt, das entsprechend dem spezifiziert ist, ob eine helle Zeile im Bereich vorhanden ist oder nicht, demoduliert wird.

**6.** Informationsübermittlungsverfahren nach Anspruch 5, wobei bei der Einholung des zweiten Bildes bestimmt wird, ob die helle Zeile im Bereich vorhanden ist oder nicht, und zwar je nachdem, ob ein Leuchtdichtewert des Bereichs größer oder gleich einer Schwelle ist oder nicht.

**7.** Informationsübermittlungsverfahren nach einem der Ansprüche 1 bis 4, wobei bei der Einholung des zweiten Bildes:

für jeden vorbestimmten Zeitraum das Subjekt aufgenommen wird, das die Leuchtdichte bei einer konstanten Frequenz entsprechend dem vorbestimmten Zeitraum wechselt; und das helle Zeilenmuster erzeugt wird, das für jeden vorbestimmten Zeitraum entsprechend der Änderung der Leuchtdichte bei konstanter Frequenz, die der vorbestimmten Periode entspricht, demoduliert wird.

**8.** Informationsübermittlungsverfahren nach einem der Ansprüche 1 bis 4, wobei bei der Einholung des zweiten Bildes:

das Subjekt, das die Leuchtdichte wechselt, um ein Signal zu übertragen, indem es eine Zeitspanne von einem Wechsel zu einem nächsten Wechsel der Leuchtdichte anpasst, aufgenommen wird, wobei der eine Wechsel und der nächste Wechsel der gleiche ist wie derjenige von einem Anstieg und einem Rückgang der Leuchtdichte; und einem Code, der durch das helle Zeilenmuster spezifiziert ist, demoduliert wird, wobei der Code mit der Zeit verbunden ist.

**9.** Informationsübermittlungsverfahren nach einem der Ansprüche 1 bis 8, wobei bei der Einholung des zweiten Bildes das Subjekt, das die Leuchtdichte so wechselt, dass jeder Mittelwert, der durch das Bewegen und Bilden des Mittelwerts der wechselnden Leuchtdichte mit einer Breite größer oder gleich 5 Millisekunden eingeholt wird, innerhalb eines vorbestimmten Bereichs aufgenommen wird.

**10.** Informationsübermittlungsverfahren nach einem der Ansprüche 1 bis 9, wobei sich das helle Zeilenmuster entsprechend einer Belichtungszeit des Bildsensors unterscheidet, und bei der Einholung des zweiten Bildes das helle Zeilenmuster, das der eingestellten Belichtungszeit entspricht, demoduliert wird.

**11.** Informationsübermittlungsverfahren nach einem der Ansprüche 1 bis 10, das Folgendes umfasst Erfassen eines Zustands einer Bildaufnahmevorrichtung, die den Bildsensor enthält, wobei bei der Einholung des zweiten Bildes die Information, die eine Position des Subjekts angibt, eingeholt wird, und eine Position der Bildaufnahmevorrichtung auf der Grundlage der eingeholten Information und des erfassten Zustands berechnet wird.

**12.** Informationsübermittlungsverfahren nach Anspruch 1, wobei bei der Einholung des zweiten Bildes das Subjekt, das eine Mehrzahl von Bereichen umfasst, die entlang der Mehrzahl der Belichtungszeilen angeordnet sind, und das die Leuchtdichte wechselt, für jeden Bereich aufgenommen wird.

**13.** Informationsübermittlungsverfahren nach Anspruch 1, das ferner Folgendes umfasst Bewerten eines Ortes, an dem eine Bildaufnahmevorrichtung einschließlich des Bildsensors vorhanden ist, wobei bei der Einholung des zweiten Bildes Identifikationsinformationen des Subjekts als Informationen eingeholt werden, und verwandte Informationen, die mit dem Ort und den Identifikationsinformationen verbunden sind, von einem Server eingeholt werden.

**14.** Informationsübermittlungsvorrichtung, die so konfiguriert ist, dass sie Informationen von einem Subjekt einholt, und zwar unter Verwendung eines Bildsensors, der eine Mehrzahl von Belichtungszeilen enthält, wobei die Informationsübermittlungsvorrichtung Folgendes umfasst:

Bilderzeugungsvorrichtung, die so konfiguriert ist, das sie ein erstes Bild einholt, und zwar durch sequentielles Starten der Belichtung für die Mehrzahl von Belichtungszeilen in dem Bildsensor jeweils zu einem anderen Zeitpunkt und eine Bildaufnahme mit einer ersten Belichtungszeit durchführt, so dass sich die Belichtungszeit jeder der Mehrzahl von Belichtungszeilen teilweise mit der Belichtungszeit einer anschließenden der Mehrzahl von Belichtungszeilen überschneidet; und

sichtbare Lichtübermittlungseinheit, die so konfiguriert ist, dass sie ein zweites Bild einholt, und zwar durch sequentielles Starten der Belichtung für die Mehrzahl von Belichtungszeilen jeweils zu einem anderen Zeitpunkt und eine Bildaufnahme mit einer zweiten Belichtungszeit durchführt, die kürzer als die erste Belichtungszeit ist, so dass sich die Belichtungszeit jeder der Mehrzahl von Belichtungszeilen teilweise mit der Belichtungszeit einer anschließenden der Mehrzahl von Belichtungszeilen überschneidet, und um Informationen einzuholen durch Demodulation eines hellen Zeilenmusters, das im zweiten Bild erscheint, wobei das helle Zeilenmuster der Mehrzahl von Belichtungszeilen entspricht,

Informationsübermittlungsvorrichtung, **dadurch gekennzeichnet, dass** die sichtbare Lichtübermittlungseinheit so konfiguriert ist, dass die zweite Belichtungszeit auf weniger als oder gleich 1/480 Sekunde eingestellt wird, um das helle Zeilenmuster im zweiten Bild erscheinen zu lassen.

**15.** Rechnerprogramm, das eine Informationsübermittlungsvorrichtung nach Anspruch 14 dazu veranlasst, das Informationsübermittlungsverfahren nach Anspruch 1 durchzuführen.

## Revendications

**1.** Procédé de communication d'informations pour obtenir des informations d'un sujet en utilisant un capteur d'image qui comprend une pluralité de lignes d'exposition, dans lequel le procédé de communication d'informations comprend :

l'obtention d'une première image en débutant une exposition séquentiellement pour la pluralité de lignes d'exposition dans le capteur d'image chacune à un instant différent et l'exécution d'une capture d'image avec un premier temps d'exposition de sorte que le temps d'exposition de chacune de la pluralité de lignes d'exposition recouvre partiellement le temps d'exposition d'une ligne adjacente de la pluralité de lignes d'exposition ; et l'obtention d'une deuxième image en débutant une exposition séquentiellement pour la pluralité de lignes d'exposition chacune à un instant différent et l'exécution d'une capture d'image avec un deuxième temps d'exposition plus court que le premier temps d'exposition de sorte que le temps d'exposition de chacune de la pluralité de lignes d'exposition recouvre partiellement le temps d'exposition d'une ligne adjacente de la pluralité de lignes d'exposition, et l'obtention d'informations en démodulant un motif de lignes brillantes qui apparaît dans la deuxième image, dans lequel le motif de lignes brillantes correspond à la pluralité de lignes d'exposition, dans lequel le procédé de communication d'informations est **caractérisé en ce que**, lors de l'obtention de la deuxième image, le deuxième temps d'exposition est établi de manière à être inférieur ou égal à 1/480 seconde pour faire en sorte que le motif de lignes brillantes apparaisse dans la deuxième image.

**2.** Procédé de communication d'informations selon la revendication 1, dans lequel, lors de l'obtention de la deuxième image, un motif dans une direction perpendiculaire à la pluralité de lignes d'exposition dans le motif de lignes brillantes est démodulé.

**3.** Procédé de communication d'informations selon la revendication 1 ou 2, dans lequel, lors de l'obtention de la deuxième image, le sujet qui change de luminance à une fréquence supérieure ou égale à 200 Hz est capturé.

**4.** Procédé de communication d'informations selon l'une quelconque des revendications 1 à 3, dans lequel, lors de l'obtention de la deuxième image, la deuxième image qui comprend une ligne brillante parallèle à la pluralité de lignes d'exposition est obtenue.

**5.** Procédé de communication d'informations selon l'une quelconque des revendications 1 à 4, dans lequel, lors de l'obtention de la deuxième image, pour chaque zone dans la deuxième image obtenue correspondant à une ligne différente de la pluralité de lignes d'exposition incluses dans le capteur d'image, le motif de lignes brillantes indiquant 0 ou 1 spécifié selon qu'une ligne brillante est présente ou non dans la zone est démodulé.

6. Procédé de communication d'informations selon la revendication 5,
   dans lequel, lors de l'obtention de la deuxième image, il est déterminé si la ligne brillante est présente ou non dans la zone selon qu'une valeur de luminance de la zone est ou non supérieure ou égale à un seuil.

7. Procédé de communication d'informations selon l'une quelconque des revendications 1 à 4,
   dans lequel, lors de l'obtention de la deuxième image :

   pour chaque période prédéterminée, le sujet qui change de luminance à une fréquence constante correspondant à la période prédéterminée est capturé ; et
   le motif de lignes brillantes généré, pour chaque période prédéterminée, conformément au changement de luminance à la fréquence constante correspondant à la période prédéterminée est démodulé.

8. Procédé de communication d'informations selon l'une quelconque des revendications 1 à 4,
   dans lequel, lors de l'obtention de la deuxième image :

   le sujet qui change de luminance pour transmettre un signal en ajustant un temps d'un changement à un changement suivant de luminance est capturé, ledit un changement et le changement suivant étant le même d'une augmentation et d'une diminution de luminance ; et
   un code spécifié par le motif de lignes brillantes est démodulé, dans lequel le code est associé au temps.

9. Procédé de communication d'informations selon l'une quelconque des revendications 1 à 8,
   dans lequel, lors de l'obtention de la deuxième image, le sujet qui change de luminance de sorte que chaque moyenne obtenue par un moyennage mobile de la luminance changeante avec une largeur supérieure ou égale à 5 millisecondes est dans une plage prédéterminée est capturé.

10. Procédé de communication d'informations selon l'une quelconque des revendications 1 à 9,
    dans lequel le motif de lignes brillantes diffère conformément à un temps d'exposition du capteur d'image, et
    lors de l'obtention de la deuxième image, le motif de lignes brillantes correspondant au temps d'exposition établi est démodulé.

11. Procédé de communication d'informations selon l'une quelconque des revendications 1 à 10, qui comprend en outre la détection d'un état d'un dispositif de formation d'image qui comprend le capteur d'image,
    dans lequel, lors de l'obtention de la deuxième image, les informations qui indiquent une position du sujet sont obtenues, et une position du dispositif de formation d'image est calculée sur la base des informations obtenues et de l'état détecté.

12. Procédé de communication d'informations selon la revendication 1,
    dans lequel, lors de l'obtention de la deuxième image, le sujet qui comprend une pluralité de zones agencées le long de la pluralité de lignes d'exposition et qui change de luminance pour chaque zone est capturé.

13. Procédé de communication d'informations selon la revendication 1, qui comprend en outre
    l'estimation d'un emplacement où un dispositif de formation d'image qui comprend le capteur d'image est présent,
    dans lequel, lors de l'obtention de la deuxième image, des informations d'identification du sujet sont obtenues en tant qu'informations, et des informations associées qui sont associées à l'emplacement et aux informations d'identification sont obtenues à partir d'un serveur.

14. Dispositif de communication d'informations configuré pour obtenir des informations d'un sujet en utilisant un capteur d'image qui comprend une pluralité de lignes d'exposition, dans lequel le dispositif de communication d'informations comprend :

    une unité de formation d'image configurée pour obtenir une première image en débutant une exposition séquentiellement pour la pluralité de lignes d'exposition dans le capteur d'image chacune à un instant différent et en effectuant une capture d'image avec un premier temps d'exposition de sorte que le temps d'exposition de chacune de la pluralité de lignes d'exposition recouvre partiellement le temps d'exposition d'une ligne adjacente de la pluralité de lignes d'exposition ; et

une unité de communication de lumière visible configurée pour obtenir une deuxième image en débutant une exposition séquentiellement pour la pluralité de lignes d'exposition chacune à un instant différent et en effectuant une capture d'image avec un deuxième temps d'exposition plus court que le premier temps d'exposition de sorte que le temps d'exposition de chacune de la pluralité de lignes d'exposition recouvre partiellement le temps d'exposition d'une ligne adjacente de la pluralité de lignes d'exposition, et pour obtenir des informations en démodulant un motif de lignes brillantes qui apparaît dans la deuxième image, le motif de lignes brillantes correspondant à la pluralité de lignes d'exposition,

dans lequel le dispositif de communication d'informations est **caractérisé en ce que** l'unité de communication de lumière visible est configurée pour établir le deuxième temps d'exposition à une valeur inférieure ou égale à 1/480 seconde pour faire en sorte que le motif de lignes brillantes apparaisse dans la deuxième image.

15. Programme d'ordinateur qui amène un dispositif de communication d'informations selon la revendication 14 à exécuter le procédé de communication d'informations selon la revendication 1.

FIG. 1

# FIG. 2

# FIG. 3

Transmitter device 1301

Light transmission instruction button 1302

Activation state management unit 1303

Activation history 1304

Clock generation device 1320

Transmission speed determination 1306

Transmission start determination unit 1305

Light transmission unit 1307

Light emitting element 1308

Light

Transmission information determination (Simplified ID) 1309

Simplified ID 1310

NFC communication unit 1311

Storage unit 1312

Device information 1313

Address information 1314

Authentication information 1315

Information management unit 1316

Authentication processing unit 1317

Connection management unit 1318

Wireless communication unit 1319

Wireless communication

# FIG. 4

Receiver device 1401

```
┌─1402              ┌─1403
Reception          Camera
start button       activation unit
                        │
                        │
                   ┌─1404           ┌─1405
                   Image            Image
                   obtaining        pickup      ◄── Light
                   unit             device
              ┌─1406          ┌─1407
              Blink information    Blinking area
              obtaining unit       determination unit

    ┌─1408         ┌─1409
    Device         Information
    related        interpolation unit
    information
         1410┐          ┌─1411
              Received   Cloud
              information  cooperation
                          processing unit        ┌─1413    Wireless
                                                  Wireless   communi-
                              ┌─1412              communi-   cation
                              Inter-device        cation unit  ──►
                              authentication
                              information
                              registration         WLAN,3G
                              processing unit
```

# FIG. 5

Start

S1001a

User purchases home electric appliance and connects to power supply for first time, thereby causing appliance to be in energized state

S1001b

Yes — Initial setting information has been written?

No — S1001c

Mark blinks at blink speed (e.g., 1 to 2/5) which user can easily recognize

Example of communication mark

Mark
LED

*This mark shows position for NFC communication (touch)

|  | NFC | Initial setting | Color |
|---|---|---|---|
| State 1 | Not written | Not written | Red |
| State 2 | Written | Written | Blue |

S1001d

Here, device information of home electric appliance is obtained by user bringing smartphone to touch the mark via NFC communication — No

Yes — S1001e

Smartphone receives device information to server of cloud computing system, and registers information at cloud computing system

S1001f

Simplified ID associated with account of user of smartphone is received from cloud computing system and transmitted to the home electric appliance

S1001g

Yes — Is there registration via NFC? 

S1001j — No — S1001h

Blink blue light twice

30 seconds have elapsed? — No

S1001k — Yes

Stop blinking

LED portion outputs device information (model number of device, whether registration processing has been performed via NFC, ID unique to device) by blinking light — S1001i

D

C

B

# FIG. 6

B

S1002a

User activates application for obtaining light blink information of smartphone

S1002b

Image obtaining portion obtains blinks of light Blinking area determination unit determines blinking area from time series change of image

S1002c

Blink information obtaining unit determines blink pattern of blinking area, and waits for detection of preamble

S1002d

If preamble is successfully detected, information on the blinking area is obtained

S1002e

If information on device ID is successfully obtained, also in reception continuing state, information is transmitted to server of cloud computing system, and information interpolation unit performs interpolation while comparing information acquired from cloud computing system to information obtained by blink information obtaining unit

S1002f

When all information including information as result of interpolation is obtained, smartphone or user is notified At this time, GUI and related site acquired from cloud computing system are displayed, thereby allowing notification to include more information and be readily understood

C

D

# EP 2 858 269 B1

## FIG. 7

**D** → S1003a

Information transmission mode is started when home electric appliance creates message indicating failure, usage count to be notified to user, room temperature, and others

→ S1003b

Mark is caused to blink per 1 to 2 seconds Simultaneously, LED also starts transmitting information

→ S1003c

**No** ← Communication via NFC has been started?

**G**

**Yes** → S1003d

Blinking LED is stopped

→ S1003e

Smartphone accesses server of cloud computing system and displays related information

**H** → S1003f

In case of failure which needs to be handled at actual location, serviceman who gives support is looked for by server
Information on home electric appliance, setting position, and location are utilized

→ S1003g

Serviceman sets mode of home electric appliance to support mode by pressing buttons thereof in predetermined order

→ S1003h

When blinks of marker for LED of home electric appliance other than appliance of interest can be seen from smartphone, some of or all such LEDs observed simultaneously blink so as to interpolate information

**E**

Example of data to be transmitted

| Mode | | | | Information |
|---|---|---|---|---|
| Serviceman mode NFC | Serviceman mode Light | N F C | Light | Device information for notification code |
| | | | | User operation information |
| | | | | Internal sensor information |

★When mark and LED blink simultaneously, error in obtaining information by camera of smartphone can be reduced by causing mark to emit light during intervals of successive information transmissions by LED

LED　Marker　LED　Marker

Information transmission for one time

105

# FIG. 8

E

↓

S1004a

Serviceman presses setting button of his/her receiving terminal if performance thereof allows detection of blinking at high speed (e.g., 1000 times/s)

Note that processing regarding light blinking portion does not depend on whether NFC function is provided

↓ S1004b

LED of home electric appliance blinks in high speed mode

↓

F

# FIG. 9

G

↓ S1005a

Blinking is continued

↓ S1005b

User obtains LED blink information, using smartphone

↓ S1005c

User activates application for obtaining light blinking information of smartphone

↓ S1005d

Image obtaining portion obtains blinking of light Blinking area determination unit determines blinking area, from time series change in image

↓ S1005e

Blink information obtaining unit determines blink pattern of blinking area, and waits for detection of preamble

↓ S1005f

If preamble is successfully detected, information on the blinking area is obtained

↓ S1005g

If information on device ID is successfully obtained, also in reception continuing state, information is transmitted to server of cloud computing system, and information interpolation unit performs interpolation while comparing information acquired from cloud computing system with information obtained by blink information obtaining unit

↓ S1005h

When all information including information as result of interpolation is obtained, smartphone or user is notified (at this time, GUI and related site acquired from cloud computing system are displayed, thereby allowing notification to include more information and be readily understood

↓

H

## FIG. 10

```
                    ( Start )  A
                        |
                        v           2001a
            +--------------------------+
            |   User turns on device   |
            +--------------------------+
                        |
                        v                    2001b
    +------------------------------------------+
    | As start processing, it is checked whether|
    | initial settings such as installation setting|------+
    | and NW setting have been made            |      |
    +------------------------------------------+      |
                        |                             |
                        v           2001c             v           2001f
    +------------------------------------+   +-------------------------------+
    | If initial settings have not been  |   | Normal operation starts if initial|
    | made, "LED normal light emission"  |   | settings have been made       |
    | and "audible tone" notify          |   +-------------------------------+
    | user that initial settings need to |                  |
    | be made                            |                  v
    +------------------------------------+             ( End )  C
                        |
                        v           2001d
    +------------------------------------------+
    | Device information (product number and serial|
    | number) is collected, and visible light     |
    | communication is prepared                    |
    +------------------------------------------+
                        |
                        v           2001e
    +------------------------------------------+
    | "LED communication light emission", "icon  |
    | display on display", "audible tone", and   |
    | "light emission by LEDs" notify user that  |
    | device information (product number and     |
    | serial number) can be transmitted by visible|
    | light communication                        |
    +------------------------------------------+
                        |
                        v
                    ( End )  B
```

EP 2 858 269 B1

# FIG. 11

```
                    ( Start )  B
                         │
                         ▼              2002a
┌─────────────────────────────────────┐
│ Approach of visible light receiving │◄──────────────────────────┐
│ terminal is perceived by "proximity │                           │
│ sensor", "illuminance sensor", and  │                           │
│ "human sensing sensor"              │                           │
└─────────────────────────────────────┘                           │
         │                    │                                    │
         ▼        2002b       ▼              2002d                 │
┌──────────────────────┐  ┌─────────────────────────────┐         │
│ Visible light        │  │ If approach is not perceived,│         │
│ communication is     │  │ level of notification        │         │
│ started by perception│  │ indicating that visible light│         │
│ as trigger           │  │ communication is possible is │─────────┘
└──────────────────────┘  │ increased by "brightening",  │
         │                │ "increasing sound volume",   │
         ▼        2002c    │ "moving icon", and others    │
┌──────────────────────┐  │ after certain period of time │
│ User obtains device  │  │ elapses                      │
│ information using     │  └─────────────────────────────┘
│ visible light         │                │
│ receiving terminal    │                ▼            2002e
└──────────────────────┘  ┌─────────────────────────┐
         │                │ Another certain period  │
         │                │ of time elapses         │
         │                └─────────────────────────┘
```

2002f | 2002g | 2002h | 2002i

- End D

2002f: It is perceived, by "sensitivity sensor" and "cooperation with light control device, " that light of room is switched off, and light emission for device information is stopped

2002g: Visible light receiving terminal notifies, by "NFC communication" and "NW communication", that device information has been perceived and obtained

2002h: It is perceived that visible light receiving terminal has moved away, and light emission for device information is stopped

2002i: After certain time period elapses, light emission for device information is stopped

End E

# FIG. 12

| Processing by visible light transmission device (Home electric appliance) | Processing by visible light receiving device (Smartphone) | Server (Cloud computing system) |
|---|---|---|

**D**

( Start )

**2003a**
Obtain, using GPS, position information of smartphone which has received device information

User information = User name, telephone number, e-mail address, and address

**2003b**
Collect user information in terminal if smartphone has user information

**2003c**
Collect user information from device in vicinity via NW if smartphone does not have user information

**2003d**
Transmit device information, user information, and position information to cloud server

**2003e**
Collect information necessary for initial settings and activation information, using device information and position information

**2003g**

Cooperation information = IP, authentication method, and available service

**2003f**
Collect cooperation information necessary for setting cooperation with device whose user has been registered

Transmit device information and setting information to device whose user has been registered via NW to make cooperation setting with device in vicinity

**2003h**
Make user setting using device information and user information

**2003k**
Make device setting using initial setting information, activation information, and cooperation setting information

**2003j**
Transmit initial setting information activation information, and cooperation setting information to home electric appliance via NFC

**2003i**
Transmit initial setting information, activity information, and cooperation setting information to smartphone

( End ) **F**

# FIG. 13

Processing by visible light transmission device (Home electric appliance)

Processing by visible light receiving device (Smartphone, receiving terminal for exclusive use)

Server (Cloud computing system)

**Start** C

2004a
Record history information generated during normal operation of device into local storage medium

History information = Operation log and user operation log

Error information = Error code and details of error

2004b
Record error information simultaneously with failure occurrence, and notify, using LED abnormal light emission, that visible light communication is possible

2004d
Identify whether terminal which has approached is ordinary smartphone or a receiving terminal exclusively used by serviceman

2004e
Obtain error information in case of smartphone

**End** G

2004c
Change mode to high-speed LED light emission mode by serviceman executing special command, thereby starting high-speed visible light communication

2004f
Obtain, by receiving terminal for exclusive use, error information and history information in case of serviceman

2004h
Cancel high-speed LED light emission mode by serviceman executing special command

2004g
Transmit device information, error information, and history information to cloud computing system, and obtain repair method

**End** H

2004i
Obtain product information on products related and similar to product in device information, selling prices at nearby stores, and new product information from cloud server

2004j
Obtain user information via visible light communication between user's smartphone and terminal exclusively used by serviceman, and make order for product to nearby store via cloud server

**End** I

111

# FIG. 14

| Processing by visible light transmission device (Cleaner/Cleaning robot) | Processing by visible light receiving device (Smartphone, lighting device) | Server (Local server, cloud computing system) |
|---|---|---|

**Start** C

2005a
Record cleaning information of device performing normal operation

2005b
Create dirt information in combination with room arrangement information, and encrypt and compress information

Cleaning information = Information obtained by associating: dirt level; cleaning level and position information; and date and time information (dirt level may be level evaluation value, and combined with dirt type. Cleaning level may be level indicating how much dirt is left after cleaning. Position information may be represented by longitude, latitude, and altitude, and coordinates relative to charging place)

| Recording date and time | Coordinates (x, y, z) | Dirt level | Cleaning level |
|---|---|---|---|
| 2012/5/21T 13:00:01.000 | 1,0,0 | Dust 8, Hair 4 | Dust 2, Hair 3 |
| 2012/5/21T 13:00:02.000 | 1,3,0 | Dust 7, Hair 6, Tick 2 | Dust 3, Hair 6 |
| ... | | | |

2005c
Record dirt information in local storage medium, which is triggered by compression of dirt information

2005d
Transmit dirt information to lighting device by visible light communication, which is triggered by temporary stop of cleaning (stoppage of suction processing)

2005e
Transmit dirt information to domestic local server and cloud server via NW, which is triggered by compression of dirt information

Dirt information = Information representing coordinates of cleaning information in user recognizable manner (which may be map obtained by superimposing dirt level on room layout or list)

2005f
Transmit device information, storage location, and decoding key to smartphone by visible light communication, which is triggered by transmission and recording of dirt information

2005g
Obtain dirt information via NW and NFC, and decode information

**End** J

# FIG. 15

WWW `3001d`

1 Transmit delivery order
2 Receive delivery order number (order number) from server

Delivery order receiving server

`3001e`

6 Order number (for deliverer)
Also transmit GPS information of delivery address together

**Orderer mobile terminal**

`3001a`

⇔

Touch

**Intercom indoor unit**

`3001b`

Order number
XXX-YYY

Response ⊕

**Intercom outdoor unit**

● LED

○ Camera

`3001c`

6 LED blinks according to order number

**Deliverer mobile terminal**

○ Camera

((● LED  `3001f`

7 Check blinks of LED by camera of deliverer mobile terminal
If blinks correspond to order, house is determined to be delivery destination
8 Blink LED of deliverer mobile terminal according to order number

3 Transmit delivery number to intercom indoor unit
4 Display received order number by intercom indoor unit
5 Transmit order number intercom outdoor unit

9 Check blinks of LED of deliverer mobile terminal using camera of intercom
If order number corresponds to blinks, arrival of delivery is notified to intercom indoor unit
10 Upon reception of notification from intercom outdoor unit, intercom indoor unit notifies user of arrival of delivery

EP 2 858 269 B1

# FIG. 16

```
┌──────────────┐        ┌──────────┐   ┌──────────┐         ┌──────────────┐
│Orderer mobile│        │Intercom  │   │Intercom  │         │Deliverer     │
│terminal      │        │indoor unit│  │outdoor   │         │mobile terminal│
└──────────────┘        └──────────┘   │unit      │         └──────────────┘
                                       └──────────┘
```

**Orderer mobile terminal** — ( Start )

3002a
Reserve pizza delivery using web browser or application of smartphone

A

B

3002b
Wait for order number to be transmitted

3002c
No — Terminal has been brought to touch order number transmission destination device?

Yes 3002d
Transmit order number by touching intercom indoor unit via NFC (if intercom and smartphone are in same network, method for transmitting number via network may also be used)

**Intercom indoor unit** — ( Start )

3002e
Wait for LED blink request from another terminal

3002f
Receive order number from smartphone

3002g
Give instruction to blink LED of intercom outdoor unit according to received order number

C

**Intercom outdoor unit** — ( Start )

3002h
Wait for LED blink instruction from intercom indoor unit

G

**Deliverer mobile terminal** — ( Start )

3002i
Wait for order notification

3002j
No — Order notification has been given from delivery order server?

Yes

3002k
Receive information on order number, delivery address, and others

3002n
Wait until camera is activated to recognize LED light emission instruction for order number received by user and LED light emission from another device

E

114

## FIG. 17

**Delivery order server**

**Orderer mobile terminal**

```
         ( Start )
            │           ╱3003a
    ┌──────►┌────────────────────┐
    │       │ Wait for order number│
    │       └────────────────────┘
    │            │           ╱3003b
    │   No   ╱─────────────╲
    └───────╲ Delivery order has ╱
            ╲ been received? ╱
                 │ Yes
                 ▼           ╱3003c
        ┌────────────────────┐
        │ Issue order number to │
        │ received delivery order│
        └────────────────────┘
                 │           ╱3003d
        ┌────────────────────┐
        │ Notify deliverer that delivery│
        │ order has been received│
        └────────────────────┘
                 │
             ( End )
```

```
              A
              │           ╱3003e
        ┌────────────────────┐
        │ Select what to order from │
        │ menu presented by delivery │
        │ order server │
        └────────────────────┘
                 │           ╱3003f
    ┌───────►┌────────────────────┐
    │        │ Set and transmit order │
    │        │ to delivery server │
    │        └────────────────────┘
    │            │  ⎧Input and transmit⎫
    │            │  │ address if delivery │
    │            │  │ destination is not │
    │            │  ⎩set                 ⎭
    │    No   ╱─────────────╲  ╱3003g
    └────────╲ Order number has been ╱
             ╲ received? ╱
                 │ Yes        ╱3003h
        ┌────────────────────┐
        │ Display received order number,│
        │ and prompt user to touch │
        │ intercom indoor unit │
        └────────────────────┘
                 │
                 B
```

# FIG. 18

```
┌─────────────┐
│Orderer mobile│
│terminal     │
└─────────────┘


           ┌──────────► E
           │            │
           │            ▼              ⟋3004a
           │     ╱──────────────╲
           │    ╱ Activate camera in╲
        ┌──┘   ╱  order to recognize ╲
        │ No  ⟨   LED of intercom     ⟩
        └─────╲   outdoor unit at    ╱
               ╲  delivery destination
                ╲──────────────╱
                      │ Yes
                      ▼              ⟋3004b
               ┌──────────────────┐
               │Identify blinks of LED of│
               │intercom outdoor unit│
               │at delivery destination│
               │using camera of   │
               │deliverer mobile terminal│
               └──────────────────┘
                      │
                      ▼              ⟋3004c
               ┌──────────────────┐
          ┌───►│Recognizes light emission│
          │    │of LED of intercom │
          │    │outdoor unit, and check│
          │    │light emission against│
          │    │order number      │
          │    └──────────────────┘
          │            │
    Yes  ⟋3004e        ▼              ⟋3004d
  ╱──────────╲    ╱──────────────╲
 ╱ Blinks of another╲  No ╱ Check whether  ╲
⟨  LED can be seen   ⟩◄───⟨ blinks of LED of ⟩
 ╲ by camera?       ╱    ╲ intercom outdoor ╱
  ╲──────────╱          ╲ unit correspond to
        │ No             ╲ order number  ╱
        ▼                 ╲──────────╱
   ╭─────────╮                │ Yes
   │   End   │                ▼
   ╰─────────╯                F
```

# FIG. 19

```
Intercom
outdoor
unit
```

```
Intercom
indoor unit
```

E

C

┌─ No ─ 3005a
│  ⟨LED blink instruction
│   has been given from
│   intercom indoor unit?⟩
│       │ Yes
│       ▼ 3005b
│  ┌─────────────────────┐
│  │ Blink LED in accordance
│  │ with LED blink instruction
│  │ from intercom indoor unit
│  └─────────────────────┘
│       │
│       ▼
│       H

3005d
┌─────────────────────┐
│ Give instruction to
│ intercom outdoor unit
│ to blink LED according
│ to order number
└─────────────────────┘
        │
        ▼ 3005e
┌─────────────────────┐
│ Wait until camera of
│ intercom outdoor unit
│ recognizes blinks of LED
│ of deliverer mobile
│ terminal
└─────────────────────┘
        │
        ▼ 3005f
   No  ⟨Intercom outdoor
  ┌─── unit has notified that
  │     blinks of LED are
  │     recognized?⟩
  │        │ Yes
  │        ▼ 3005g
  │   ┌─────────────────────┐
  │   │ Check blinks of LED of
  │   │ intercom outdoor unit
  │   │ against order number
  │   └─────────────────────┘

I
│
▼ 3005c
┌─────────────────────┐
│ Notify intercom indoor unit
│ of blinks of LED recognized
│ using camera of intercom
│ outdoor unit
└─────────────────────┘
        │
        ▼
        J

3005i
┌─────────────────────┐        No   3005h
│ Give instruction to   │◄─────── ⟨Blinks of LED of intercom
│ intercom outdoor      │          outdoor unit correspond
│ unit to stop          │          to order number?⟩
│ blinking LED          │               │ Yes
└─────────────────────┘               ▼
        │                              K
        ▼
     ( End )
```

# FIG. 20

Deliverer mobile terminal

Intercom outdoor unit

F

H

**3006a**
Start blinking LED according to order number held by deliverer mobile terminal

**3006f**
No / Blinks of LED of deliverer mobile terminal have been recognized using camera of intercom outdoor unit? /

Yes

I

**3006b**
Put LED blinking portion in range from intercom outdoor unit where camera can capture image

**3006c**
No / Blinks of LED of intercom outdoor unit indicate that blinks of LED of deliverer mobile terminal shot by camera of intercom outdoor unit correspond to order number held by intercom indoor unit /

Yes

**3006e**
Whether blinks correspond to order number is displayed on deliverer mobile terminal

End

# FIG. 21

| Intercom outdoor unit | | Intercom indoor unit |

K        J

3007a

No — Notification has been given regarding whether blinks of LED notified from intercom indoor unit correspond to order number?

Yes

3007b

Blink LED to show whether blinks correspond to order number

End

3007c

Notify orderer by display of intercom indoor unit showing that deliverer has arrived, with ring tone output

3007d

Give, to intercom outdoor unit, instruction to stop blinking LED and instruction to blink LED to show that blinks correspond to order number

End

# FIG. 22

Register user and mobile phone in use to server

Server          Mobile phone

( start )

4001b

Activate application by user

4001c

Receive and respond ←------→ Make inquiry as to information on this user and mobile phone to server

4001d

User information and information on mobile phone in use are registered in DB of server?  Y

N  4001e

Register mobile phone ID and user ID into mobile phone table of DB

4001f

Start analysis of user voice characteristic (processing a) as parallel processing

B

# FIG. 23

(Processing a) Analyze user voice characteristics

Server                                                    Mobile phone

start

4002a
Collect sound from
microphone

4002b
Collected sound is
estimated to be user voice,
as result of sound recognition?   N

Y                                       4002c
Y   What is said is keyword
(such as "next", "return")
used for this application?

N

4002f
Register data   ◄---   Register voice data into
user keyword voice table
of server

4002d
Analyze voice characteristics (frequency,
sound pressure, rate of speech)

4002e
Register data   ◄---------------   Register analysis result into
mobile phone and user voice
characteristic table of server

# FIG. 24

Prepare sound recognition processing

| Server | Mobile phone | Microwave |
|---|---|---|

B

4003a
(User operation)
Perform operation for displaying cooking menu list

4003b
Receive and respond ◄ - - - - - ► Obtain cooking menu list from server

4003c
Display cooking menu list on screen of mobile phone

4003d
Started collecting sound using microphone connected to mobile phone

4003e
Start collecting sound by sound collectin device in vicinity (processing b) as parallel processing

4003f
Start analysis of environmental sound characteristics (processing c) as parallel processing

4003g
Start cancellation of sound from sound output device present in vicinity (processing d) as parallel processing

4003h
Receive and respond ◄ - - - - - ► Obtain user voice characteristics from DB of server

4003i
Start recognition of user voice

C

# FIG. 25

(Processing b) Collect sound by sound collecting device in vicinity

Server

Mobile phone

( start )

↓ 4004a

Search for device which can communicate with mobile phone and collect sound (sound collecting device)

↓ 4004b

< Detect sound collecting device > → ( end )

↓ 4004c

┌──────────────┐
│ Receive and │ ← ─ ─ ─ ─ ─ ─ ─ → Obtain position information and microphone
│ respond │ characteristic information of sound collecting
└──────────────┘ device from server

↓ 4004d

Server has information? 
Y ← N

4004h

Cause sound collecting device to start collecting sound

↓ 4004i

Output tone from mobile phone

↓ 4004j

Cause sound collected by sound collecting device to be transmitted to mobile phone

4004e

Location of sound collecting device is sufficiently close to position of mobile phone, so that user voice can be collected?
N
Y

4004f

Cause sound collecting device to start collecting sound

↓ 4004k

Tone has been recognized based on sound transmitted from sound collecting device?
N
Y

↓ 4004g

Cause sound collected by sound collecting device to be transmitted to mobile phone until instruction to terminate sound collecting processing is given
Note that rather than transmitting collected sound to mobile phone as it is, result obtained by sound recognition may be transmitted to mobile phone
Note that sound transmitted to mobile phone is processed similarly to sound collected from microphone connected to mobile phone

# FIG. 26

(Processing c) Analyze environmental sound characteristics

Server           Mobile phone

( start )

_4005f_

| Receive and respond | ← - - - → | Obtain list of devices which excludes any device whose position is sufficiently far from position of microwave, among devices which this user owns<br>Obtain data of sounds output by these devices from DB |

_4005g_

Analyze and store characteristics (such as frequency, sound pressure) of obtained sound data as environmental sound characteristics<br>Noted that particularly sound output by, for instance, rice cooker near microwave tends to be incorrectly recognized, and thus store characteristics thereof with high importance being set

_4005a_

Collect sound by microphone

_4005b_

Collected sound is user voice? — Y

N

_4005c_

Analyze characteristics (frequency, sound pressure) of collected sound

_4005d_

Update environmental sound characteristics based on analysis result

_4005e_

Ending flag is on? — N

Y

( end )

# FIG. 27

(Processing d) Cancel sound from sound output device present in vicinity

start

4006a
Search for device which can communicate and output sound (sound output device)

4006b
Sound output device has been detected? — N → end

Y
4006c
Cause sound output device to output tones including various frequencies

4006d
Collect sound by mobile phone and sound collecting device in FIG. 404 (sound collecting devices), thereby collecting tones output from sound output device

4006e
Tone has been collected and recognized? — N → end

Y
4006f
Analyze transmission characteristics from sound output device to each sound collecting device (relationship for each frequency between output sound volume and volume of collected sound and delay time between output of tone and sound collection)

4006g
Sound data output from sound output device is accessible from mobile phone?
Y / N

4006h
Obtain output sound source, output portion, and volume from sound output device, and cancel sound output by sound output device from sound collected by sound collecting devices in consideration of transmission characteristics, until instruction is given to terminate cancellation processing

4006i
Obtain sound output from sound output device, and cancel sound output by sound output device from sound collected by sound collecting devices in consideration of transmission characteristics, until instruction is given to terminate cancellation processing

# FIG. 28

Select what to cook, and set detailed operation in microwave

Server        Mobile phone        Microwave

C

4007a

(User operation)
Select what to cook

4007b

(User operation)
Set recipe parameters (quantity to cook, how
strong taste is to be, baking degree, and others)

4007c

| Receive and respond | ← - - → | Obtain recipe data and detailed microwave operation setting command from server in accordance with recipe parameters |

4007d

Prompt user to bring mobile phone to
touch noncontact IC tag embedded
in microwave

4006e

Detect microwave
being touched   N

Y

4007f

Transmit microwave setting command
obtained from server to microwave
This makes all settings for microwave
necessary for this recipe, and user can
cook by only pressing operation start
button of microwave     - - → Set detailed operation

4007g

Obtain notification sound for microwave
from DB of server, for instance, and set
sound in microwave (processing e)

4007h

Adjust notification sound of microwave
(processing f)

D

# FIG. 29

(Processing e) Obtain notification sound for microwave from DB of server, for instance, and set sound in microwave

| Server | Mobile phone | Microwave |
|---|---|---|

**start**

4008a
User brings mobile phone close to (= to touch) noncontact IC tag embedded in microwave

4008b
Make inquiry as to whether notification sound data for this mobile phone (data of sound output when microwave is operating and ends operation) is registered in microwave
Receive and respond

4008c
Notification sound data for this mobile phone is registered in microwave? Y

N
4008d
Notification sound data for this mobile phone is registered in mobile phone? Y

N
4008e
Receive and respond
Refer to DB of server, mobile phone, or microwave
Receive and respond

4008f
If notification sound data for this mobile phone (data of notification sound which this mobile phone can easily recognize) is in DB, obtain that data from DB, whereas if such data is not in DB, obtain notification sound data for typical mobile phones (data of typical notification sound which mobile phones can easily recognize) from DB
Receive and respond
Receive and respond

4008g
Register obtained notification sound data in mobile phone

4008h
Register notification sound data registered in mobile phone in microwave
Receive and respond

**end**

# FIG. 30

(Processing f) Adjust notification sound of microwave

Mobile phone                                                                              Microwave

start

4009a

Obtain notification sound data of this
microwave registered in mobile phone

4009b

Frequency of notification sound for
this mobile phone and frequency of
environmental sound overlap
certain amount or more?                    N

Y                                              4009c

Set volume of notification sound so as to be sufficiently
larger than environmental sound
Alternatively, change frequency of notification sound
As example of method for generating notification sound
having changed frequency, if microwave can output
sound in (c) of "diagram: pulse patterns of notification
sounds of microwave", notification sound is generated
in pattern in (c), and if microwave cannot output sound
in (c), but can output sound in (b), notification sound is
generated in pattern in (b), and if microwave can output
only sound in (a), notification sound is generated in
pattern in (a)

Receive and
respond

end

# FIG. 31

Diagram: Pulse patterns of notification sounds of microwave

Waves are repeated once or two or three times as notification sound for button operation, and repeated several times as notification sound for end of operation

(a) Square signals

Time

(b) Intermittent square signals easily distinguished from other sound source

Time

(c) PWM signals

Time

# FIG. 32

Display details of cooking

End of application

# FIG. 33

Recognize notification sound of microwave

E

Start collecting sound by sound collecting device in vicinity and recognition of notification sound of microwave (processing g) as parallel processing ──4012a

Start checking operation state of mobile phone (processing i) as parallel processing ──4012f

Start tracking user position (processing j) as parallel processing ──4012g

Recognize user operation

F

Recognize notification sound for pressing button

Register change of setting ──4012c

Details of recognition ──4012b

Recognize notification sound indicating start of operation

Recognize notification sound indicating end of operation or sound of opening door of microwave after operation time elapses since display is presented to prompt putting food into microwave and pressing operation start button

Wait until operation time elapses ──4012d

Notify user of end of operation of microwave (processing h) ──4012e

G

131

# FIG. 34

(Processing g) Collect sound by sound collecting device in vicinity and recognize notification sound of microwave

Server                                                    Mobile phone                    Microwave

Receive and respond

( start )

Search for device which can communicate with mobile phone and collect sound (sound collecting device) ~4013a

Sound collecting device has been detected? ~4013b → N → ( end )

↓ Y

Obtain position information of sound collecting device and microphone characteristics information from server ~4013c

Server has information? ~4013d

Y ↓N

Location of sound collecting device is close enough to microwave so that notification sound can be collected? ~4013r

N

↓ Y

Arithmetic unit of sound collecting device can perform sound recognition? ~4013s

Y ↓N

Transmit information for recognizing notification sound of microwave to sound collecting device ~4013u

Cause sound collecting device to start collecting sound and transmit collected sound to mobile phone ~4013t

Cause sound collecting device to start collecting sound and sound recognition, and transmit recognition results to mobile phone ~4013v

Arithmetic unit of sound collecting device can perform sound recognition? ~4013e

Y ↓N

Transmit information for recognizing notification sound of microwave to sound collecting device ~4013k

Cause sound collecting device to start collecting sound and transmit collected sound to mobile phone ~4013f

Cause sound collecting device to start collecting sound and sound recognition, and transmit recognition results to mobile phone ~4013m

Cause microwave to output notification sound ~4013g

Cause microwave to output notification sound ~4013n

Perform recognition processing on sound transmitted from sound collecting device ~4013h

Sound collecting device has successfully recognized the notification sound? ~4013p

N ↓ Y

The notification sound has been successfully recognized? ~4013i

N ↓ Y

Receive instruction from mobile phone and output notification sound

Cause processing of recognizing notification sound of microwave to be performed until procedure proceeds to next cooking step, and recognition results to be transmitted to mobile phone ~4013q

Cause sound collecting device to transmit collected sound to mobile phone until procedure proceeds to next cooking step, and identify notification sound of microwave by mobile phone ~4013j

# FIG. 35

(Processing h) Notify user of end of operation of microwave

Server                                    Mobile phone

start

4014a

It can be determined that mobile phone is being used or carried using sensor data?

Y          N

4014b

Search for device being operated (device under user operation) from among devices such as PC which user has logged in

4014d

Notify user of end of operation of microwave by using display of screen of device under user operation

end

4014c

Device under user operation has been detected?          Y

N

4014e

Search for device which can communicate with mobile phone and obtain images (imaging device)

4014f

Imaging device is detected?          Y

N          4014g

Search for device which can communicate with mobile phone and collect sound (sound collecting device)

4014p

Cause imaging device to capture image, transmit data of user face to imaging device to recognize user face Alternatively, cause captured image to be transmitted to mobile phone or server, where (transmission destination) user face is recognized

4014h

Sound collecting device is detected?          Y

4014j

N          4014i

Cause sound collecting device to collect sound, and transmit user voice data to sound collecting device to identify speaker Alternatively, cause collected sound to be transmitted to mobile phone or server, where (transmission destination) speaker is identified

Another device has been detected which can determine position of user by device operation of device, by means of walk vibration, and others?          Y

N

4014q

User face has been recognized?          N

Y

4014r

Device (detection device) which has detected user includes display unit and sound output unit?          Y

4014s

Notify user of end of operation of microwave using unit included in device

N          4014t

4014k

User voice has been recognized?          Y

N

Obtain position information of detection device from server

4014u

Search for device (notification device) near device including display unit and sound output unit

Receive and respond

4014m

Notify user of end of operation of microwave using screen display, sound, and vibration of mobile phone, for instance

end

Receive and respond

4014v

Notify user of end of operation of microwave by screen display or sound of sufficient volume in consideration of distance from notification device to user

end

# FIG. 36

(Processing i) Check operation state of mobile phone

Mobile phone

( start )

4015a

Mobile phone is being operated? or
Mobile phone is being carried? or
Input/output device connected to
mobile phone has received input
and output? or
Video and music are being played
back? or
Device located near mobile phone
is being operated? or
User is recognized by camera or
various sensors of device located
near mobile phone?

Y

4015b

Acknowledge that there
is high probability that
position of user is close
to this mobile phone

N

4015c

Device located far from mobile
phone is being operated? or
User is recognized by camera or
various sensors of device located
far from mobile phone? or
Mobile phone is being charged?

Y

4015d

Acknowledge that there
is high probability that
position of user is far
from this mobile phone

N

# FIG. 37

(Processing j) Track user position

Server                                    Mobile phone

( start )

Mobile phone is determined
to be being carried, using          ┌─4016a
bearing sensor, position sensor,
or acceleration sensor?         Y

┌─────────┐                                    ┌─4016b
│Receive and│                          Register positions
│respond   │                          of mobile phone
└─────────┘            N              and user into DB

┌─────────┐    Search for device (user detection device)    ┌─4016c
│Receive and│   which can communicate with mobile phone,
│respond   │   and detect user position and presence of
└─────────┘   user, such as camera, microphone, or
              human sensing sensor

                    Sound collecting device      ┌─4016d
               N    has been detected?
                            Y
                    User detection device        ┌─4016e
               N    has detected user?
                            Y

              Cause device to transmit          ┌─4016f
              detection of user to mobile phone

┌─────────┐   Register user being present near   ┌─4016g
│Receive and│  user detection device into DB
│respond   │
└─────────┘

┌─────────┐   If DB has position information of user   ┌─4016h
│Receive and│  detection device, obtain information,
│respond   │  thereby determining position of user
└─────────┘

# FIG. 38

EP 2 858 269 B1

# FIG. 39

Database

Microwave table ⎯4040a

| Model ID of microwave | Data for identifying sound which can be output by microwave (speaker characteristics and modulation method, for instance) | Notification sound data for mobile phone model A (sound easily recognized by A) | Notification sound data for mobile phone model B (sound easily recognized by B) | ... | Notification sound data for typical mobile phone (sound easily recognized on average) |
|---|---|---|---|---|---|
| | | | | | |
| | | | | | |

Mobile phone table ⎯4040a

| Mobile phone ID | Mobile phone model ID | User ID | Mobile phone position data |
|---|---|---|---|
| | | | |
| | | | |

Mobile phone model table ⎯4040c

| Mobile phone model ID | Sound-collecting characteristics |
|---|---|
| | |
| | |

User voice characteristic table ⎯4040d

| User ID | User voice acoustic feature |
|---|---|
| | |
| | |

User keyword voice table ⎯4040e

| User ID | Voice waveform data obtained when user says keyword |
|---|---|
| | |
| | |

User owned device position table ⎯4040f

| User ID | Owned device ID | Owned device position data |
|---|---|---|
| | | |
| | | |

User owned device sound data table ⎯4040g

| User ID | Owned device ID | Sound data output by owned device |
|---|---|---|
| | | |
| | | |

User position table ⎯4040h

| User ID | User position data |
|---|---|
| | |
| | |

FIG. 40

FIG. 41

FIG. 42

EP 2 858 269 B1

FIG. 43

FIG. 44

FIG. 45

FIG. 46

FIG. 47

FIG. 48

EP 2 858 269 B1

FIG. 49

FIG. 50

FIG. 51

Connected
to charger

FIG. 52

EP 2 858 269 B1

FIG. 53

FIG. 54

EP 2 858 269 B1

FIG. 55

FIG. 56

Internet or carrier communication network

Remote place

EP 2 858 269 B1

# FIG. 57

Internet or carrier communication network

Remote place

FIG. 58

Internet or carrier communication network

Remote place

EP 2 858 269 B1

EP 2 858 269 B1

FIG. 59

Internet or carrier communication network

Remote place

FIG. 60

FIG. 61

Internet or carrier communication network

Remote place

EP 2 858 269 B1

FIG. 62

Internet or carrier communication network

Remote place

EP 2 858 269 B1

FIG. 63

Remote place

Internet or carrier communication network

FIG. 64

FIG. 65

Light blinking

Light blinking

Light blinking

# FIG. 66

Transmitter device 100

Light transmission instruction button

Activation state management unit

Activation history

Transmission start determination unit

Transmission speed determination

Light transmission unit ⟋103

Light emitting element ⟋101

Light →

Transmission information determination (Simplified ID)

Simplified ID

NFC communication unit (Extend later)

Storage unit

Device information ⟋108

Address information ⟋109

Authentication information ⟋110

Information management unit ⟋104

Authentication processing unit ⟋105

Connection management unit ⟋107

Wireless communication unit ⟋106

Wireless communication ↔

# FIG. 67

Receiver device 110

Reception start button — Camera activation unit

103 — Image obtaining unit

101 — Image pickup device — Light

Blink information obtaining unit — Blinking area determination unit

108 — Device related information — Information interpolation unit

Received information — Cloud cooperation processing unit

106 — Wireless communication unit — Wireless communication

Inter-device authentication information registration processing unit

WLAN, 3G

# FIG. 68

Transmitter device                                    Receiver device

Create random number   /5001a

Register in registrar of WPS   /5001b

Activate camera in optical authentication mode ⇒Capture image of light emitting element of transmitter terminal   /5001d

Emit light indicating random number   /5001c

Receive light   /5001e

Input random number as PIN of WPS   /5001f

Perform authentication processing according to standard by WPS   /5001g

Delete random number from registrar of WPS   /5001h

# FIG. 69

Transmitter device                                      Receiver device

```
                                                                    5002e
                                              ┌────────────────────────────┐
                                              │ Activate camera in optical │
                             5002a            │ authentication mode        │
        ┌────────────────────┐               │ ⇒Capture image of light    │
        │ Create transmitter ID│             │ emitting element of        │
        │ according to state of│             │ transmitter terminal       │
        │ terminal             │             └────────────────────────────┘
        └────────────────────┘                                   5001f
                    5002b                              ┌──────────────┐
        ┌───────────┐                                  │ Receive light│
        │ Emit light│──────────────────────────────►  └──────────────┘
        └───────────┘                                          5002g
                                              ┌────────────────────────────┐
                                              │ Create receiver ID         │
                                              │ which can show that        │
                                              │ transmitter ID has         │
                                              │ been received              │
                                              │ (e.g., terminal ID of      │
                                              │ receiver terminal and      │
                                              │ password encrypted         │
                                              │ using transmitter ID       │
                                              └────────────────────────────┘
              5002c                                                5002h
        ┌────────────────────┐               ┌────────────────────┐
        │ Receive by wireless│◄- - - - - - - │ Broadcast receiver │
        │ communication      │               │ ID wirelessly      │
        └────────────────────┘               └────────────────────┘
        ┌────────────────────┐ 5002d
        │ Start authentication│
        │ processing with terminal│
        │ which has transmitted│
        │ receiver ID          │
        └────────────────────┘
                                                                   5002i
        ┌──────────────────────────────────────────────────────┐
        │                                                        │
        │             Authentication processing                  │
        │                                                        │
        └──────────────────────────────────────────────────────┘
```

# FIG. 70

Start

Issue ID according to state of terminal — 5003a

Emit light by pattern according to ID — 5003b

Is there wireless response corresponding to ID indicated by emitted light? — 5003c

NO →

Timeout? — 5003i

NO

YES

Display there being no response — 5003j

End

YES

Perform processing of authenticating terminal which has responded — 5003d

Authentication has succeeded? — 5003e

NO →

Display authentication error — 5003h

End

YES

Command is included in ID indicated by light emission? — 5003f

End

Perform processing in accordance with command — 5003g

End

# FIG. 71

Start

Activate camera in optical authentication mode — 5004a

Light has been received in specific pattern? — 5004b

NO →

YES ↓

Create receiver ID which can show that transmitter ID has been received — 5004c

Transmitter terminal holds transmitter terminal ID? — 5004k

NO →

YES ↓ — 5004d

Unicast receiver ID

Broadcast receiver ID — 5004l

Authentication has succeeded? — 5004e

NO →

YES ↓

Command is included in ID obtained by receiving light? — 5004f

Perform processing according to ID — 5004g

End

Timeout? — 5004i

NO →

YES ↓ — 5004j

Display timeout

End

Display authentication error — 5004h

End

End

# FIG. 72

Sequence diagram illustrating data transmission and reception
using NFC/high speed wireless communication

Mobile AV terminal 1        Mobile AV terminal 2

Perform
NFC polling

Display
data to be
transmitted

Touch (NFC communication)

Display,
confirmation
screen, for
checking
whether
data
transmission
is to be
performed

NFC communication

(Information on data to be
transmitted
Information on establishing high-
speed wireless communication

Display data
being
received
on screen

Establish wireless LAN communication

Data transmission using wireless
LAN communication

Transmit data held in each
terminal to another terminal

Complete data transmission

# FIG. 73

Terminal screen flow illustrating data exchange using
NFC/high speed wireless communication

| Mobile AV terminal 1 | Mobile AV terminal 2 |
|---|---|

Start                                    Start

(Application selection screen)

Select
application
on screen

Video/still
image
reproduction
application

Standby screen
or screen
showing
another
application
being operated

Display data in
storage unit of
mobile AV
terminal 1

Display list of
data such as
picture, video,
and music

Picture | Video | Music

Data stored in
cloud computing
system may be
displayed

Picture | Video | Music

NFC touch recognized?                    No

Yes

Please touch to
start data
transmission

Picture | Video | Music

Start data transmission?                 No

Yes

A in FIG. 603                            B in FIG. 603

# FIG. 74

Mobile AV terminal 1

A

Transmit data transmission start instruction

NFC communication →

Mobile AV terminal 2

B

Receive data transmission start instruction

⎧ Information on data to be exchanged
⎨ Information on wireless LAN
⎩ communication start

Establish wireless LAN communication connection

Start wireless LAN communication data transmission

Picture | Video | Music

Receiving data

Complete wireless LAN communication data transmission

Picture | Video | Music

Picture | Video | Music

End

End

## FIG. 75

Mobile AV terminal 1

Mobile AV terminal 2

## FIG. 76

Picture sharing service

Wireless LAN

Mobile AV terminal 1

Mobile AV terminal 2

Wireless LAN

Mobile phone
communication

# FIG. 77

EP 2 858 269 B1

174

## FIG. 78

time →

Exposure time of each line

2100a

Line 1
Line 2
Line 3

Line N

2100b

2100c

One image          One image          One image

EP 2 858 269 B1

# FIG. 79

time →

Light emission time of transmitter

2101a    2101b    2101c

Exposure time of each line

2101d

Line 1
Line 2
2101e
Line 3
Line 4
Line 5
Line 6
Line 7
Line 8

2101f

Captured image

EP 2 858 269 B1

# FIG. 80

time →

Light emission time of transmitter

2102a

Exposure time of each line
- Line 1
- Line 2
- Line 3
- Line 4
- Line 5
- Line 6
- Line 7
- Line 8

2102b

2102c

2102d

Captured image

2102e

EP 2 858 269 B1

FIG. 81

time

Light emission time of transmitter

2103a

Exposure time of each line
- Line 1
- Line 2
- Line 3
- Line 4
- Line 5
- Line 6
- Line 7
- Line 8

2103b
2103c
2103d

Captured image

2103e
2103f

EP 2 858 269 B1

# FIG. 82

time →

Exposure time of each line  2104a

Line 1
Line 2
Line 3

Line N

2104b

Blanking

2104c

One image

One image

EP 2 858 269 B1

# FIG. 83

Appear to be emitting light uniformly

2200a

Light emitting unit

Transmission device

Person

2200b

Light emission signal is observable

Reception device

# FIG. 84

2200.1a

| Transmission signal | Modulated signal |
|:---:|:---:|
| 0 | 01 |
| 1 | 10 |

# FIG. 85

2200.2a

| Transmission signal | Modulated signal |
|:---:|:---:|
| 00 (0) | 0111 |
| 01 (1) | 1011 |
| 10 (2) | 1101 |
| 11 (3) | 1110 |

# FIG. 86

2200.3a

| Transmission signal | Modulated signal |
|---|---|
| 000 (0) | 01111111 |
| 001 (1) | 10111111 |
| 010 (2) | 11011111 |
| 011 (3) | 11101111 |
| 100 (4) | 11110111 |
| 101 (5) | 11111011 |
| 110 (6) | 11111101 |
| 111 (7) | 11111110 |

# FIG. 87

2200.4a

| Transmission signal | Modulated signal |
|---|---|
| 00 (0) | 1000 |
| 01 (1) | 0100 |
| 10 (2) | 0010 |
| 11 (3) | 0001 |

EP 2 858 269 B1

## FIG. 88

Appear to be blinking

2201a

Light
emitting
unit

Person

Transmission device

2201b

Light emission signal is observable

Reception device

## FIG. 89

Video is seen

2202a

TV

Transmission device

Person

Light emission signal is observable

2202b

Reception device

EP 2 858 269 B1

# FIG. 90

Light emission per exposure
line is observable

2203a

Light
emitting
unit

Transmission device

2203b

Reception device
at short distance

Light emission per frame
is observable

2203c

Reception device
at long distance

EP 2 858 269 B1

## FIG. 91

Light emission pattern

11101101011101000100110101000100

~2217a

Observe average luminance of width ↔

11101101011101000100110101000100

~2217b

Observe average luminance of width ↔

1 1 1 0 0 1 0 0

~2217c

Observe average luminance of width ←——→

1          0

~2217d

Observe average luminance of width ←————→

~2217e

EP 2 858 269 B1

EP 2 858 269 B1

## FIG. 92

## FIG. 93

| Data unit | Address unit | Data unit | Address unit | Data unit | Address unit |
|-----------|--------------|-----------|--------------|-----------|--------------|
| 2208a | 2208b | 2208c | 2208d | 2208e | 2208f |

EP 2 858 269 B1

## FIG. 94

2209a              2209b

| Reference unit | Data unit |
|---|---|

# FIG. 95

| Reference unit | Address pattern unit | Data unit |
|---|---|---|

2210a   2210b                                        2210c

# FIG. 96

| Header unit | Address unit | Data unit | Header unit | Address unit | Data unit |
|---|---|---|---|---|---|
| 2211a | 2211b | 2211c | 2211d | 2211e | 2211f |

## FIG. 97

| Transmission information | Priority |
|---|---|
| Information 1 | 3 (High) |
| Information 2 | 2 (Normal) |
| Information 3 | 1 (Low) |

Transmission order 1

| Information 1 | Information 1 | Information 1 | Information 1 | Information 1 | Information 1 | Information 2 | Information 2 | Information 2 | Information 2 | Information 3 | Information 3 |
|---|---|---|---|---|---|---|---|---|---|---|---|

Transmission order 2

| Information 1 | Information 2 | Information 1 | Information 3 | Information 1 | Information 2 | Information 1 | Information 2 | Information 1 | Information 3 | Information 1 | Information 2 |
|---|---|---|---|---|---|---|---|---|---|---|---|

Time

EP 2 858 269 B1

FIG. 98

| Transmission device 1 | Common information | Individual information | Uniform light emission | Common information | Individual information | Uniform light emission |
|---|---|---|---|---|---|---|

| Transmission device 2 | Common information | Uniform light emission | Individual information | Common information | Uniform light emission | Individual information |
|---|---|---|---|---|---|---|

Time

# FIG. 99

2204a

Column in which light emitting
unit is captured most

Pixel detecting light emission

# FIG. 100

Midpoint of captured part of light
emitting unit in exposure line

2205a

Line approximating midpoints

▨ Pixel detecting light emission

## FIG. 101

2206a

2206b

Estimated position of light
emitting unit after correction

Estimated position of light emitting
unit in previous frame

Time

[//////] Pixel detecting light emission

EP 2 858 269 B1

# FIG. 102

Time

Pixel detecting light emission

EP 2 858 269 B1

## FIG. 103

2212a

Imaging range

2212b

Light emitting unit

2212c

Light emitting unit

2212d

Pixel detecting light emission
pattern

# FIG. 104

Main area M

Light emission state of lighting unit

Time slot A

Time slot B

Image obtained by actually capturing lighting unit

Area S₁ → S₂→ S₁→ S₂→ S₁→ S₂→

Area S₃ → S₄→ S₃→ S₄→ S₃→ S₄→

S₃  S₁

S₄  S₂

Fundamental signal (in 4-value PPM)

2bit | 2bit

When no signal

I

↕ I×n (75% in the case of 4-value PPM)

00 | 01

t

Time slot A — Time slot B — Time slot C — Time slot A — Time slot D — Time slot E — F  G

Signal of M

Reference position information, URL, data broadcasting

Data (no signal is transmitted: light signal value of m%)

↕ I×n (n<1)

t

Signal of area S₁

Same data as M data — Individual data of S₁ (ID, position) — S₁ — Data of S₁ — S₁

t

Signal of area S₂

Individual data of S₂ — S₂  S₂

t

S₃

Individual data of S₃ — S₃ — S₃

t

S₄

Individual data of S₄ — S₄  S₄

t

EP 2 858 269 B1

# FIG. 105

Light emitting unit 2216a
Light emitting unit 2216b
Light emitting unit 2216c
Light emitting unit 2216d
Light emitting unit 2216e
Light emitting unit 2216f

Capture all

Reception device

Network (Internet)

Server

EP 2 858 269 B1

## FIG. 106

Mobile phone  Digital still camera  Digital video camera  Head-mounted display

Robot (cleaning, nursing care, industrial, etc.)  Surveillance camera

Example of reception device

## FIG. 107

Example of transmission device

EP 2 858 269 B1

## FIG. 108

# FIG. 109

2304a    2304b    2304c

Light emitting unit   Light emitting unit   Light emitting unit

# FIG. 110

2305a

Light emitting unit

2305b    2305c    2305d

Light emitting unit   Light emitting unit   Light emitting unit

2305e

Light emitting unit

# FIG. 111

2306a

Light
emitting unit

## FIG. 112

Diffusion plate

2307a

Light
emitting unit

Diffusion plate

2307b    2307c    2307d

Light          Light          Light
emitting unit  emitting unit  emitting unit

EP 2 858 269 B1

FIG. 113

Transmit signal A

2308a          2308b

| Light emitting unit | Light emitting unit |

Transmit signal B

2308c          2308d

| Light emitting unit | Light emitting unit |

## FIG. 114

Transmit signal A    Emit light uniformly (transmit no signal)    Transmit signal B

2309a   2309b   2309c   2309d   2309e

| Light emitting unit | Light emitting unit | Light emitting unit | Light emitting unit | Light emitting unit |

EP 2 858 269 B1

FIG. 115

2311a

Light
emitting
unit

Material
of low
reflectance

Light
emission
⟶

2311b

Shade

Light
emitting
unit

Light
emission
⟶

2311c

Light
emitting
unit

Light
emission
⟶

## FIG. 116

2303a  2303b  2303c

Near infrared  Visible light  Near ultraviolet

1400nm  750nm  380nm  200nm

Wavelength

Used frequency band (wavelength band)

EP 2 858 269 B1

FIG. 117

2310d

2310a

Imaging range

2310b

Light emitting unit

2310c

## FIG. 118

# FIG. 119

# FIG. 120

Transmission device 2603a

Reception device 2603b

Server 2603d

Internet 2603c

# FIG. 121

2604a

2604b

Transmission device

Transmission device

Reception device

2604c

# FIG. 122

Point reception device
in various directions

FIG. 123

# FIG. 124

2607a

2607b

Transmission
device

2607c

Position
setting point

North latitude:
aa. aaaaaaaaaa degrees
East longitude:
bb. bbbbbbbbbb degrees
Altitude: cc. cccccccc meters
Level: 5th floor

# FIG. 125

EP 2 858 269 B1

FIG. 126

2400h

Input unit 2400i

2400k Microphone

2400j Light meter

2400i User operation input unit

2400m Position estimation unit

2400n Timer unit

2400p Communication unit

2400ac Timer unit

2400ad Light emission control unit

2400ae Light emitting unit

2400af Modulation scheme storage unit

2400ag Communication unit

2400ah Network (Internet)

2400ai Server

2400aj Electronic device

2400a

Captured image storage unit

2400w Signal detection unit

2400x Signal analysis unit

2400y

2400z Received signal storage unit

2400v

2400aa Computation unit

2400ab Display unit

Position estimation unit

2400b Lens

2400c Imaging element

2400d Focus control unit

2400e Imaging control unit

2400f Signal detection unit

2400g Imaging information storage unit

Imaging unit

2400q Sensor unit

2400r GPS

2400s Accelerometer

2400t Magnetic sensor

2400u Gyroscope

## FIG. 127

# FIG. 128

start

2800a — A plurality of imaging devices in reception device? — N

2800b — Select imaging device to be used

Y

2800c — Set exposure time (= shutter speed), which is desirably shorter

2800d — Set exposure gain

2800e — Capture image

2800f — Determine, for each exposure line, part having at least predetermined number of consecutive pixels whose luminance exceeds predetermined threshold, and calculate center position of part

2800g — Calculate linear or quadratic approximate line connecting center positions

2800h — Set luminance of pixel on approximate line in each exposure line, as signal value of exposure line

2800i — Calculate assigned time per exposure line from imaging information including imaging frame rate, resolution, blanking time, and the like

2800j — Determine that exposure line following last exposure line of one frame is first exposure line of next frame in the case where blanking time is less than or equal to predetermined time, and determine that unobservable exposure lines as many as number obtained by dividing blanking time by assigned time per exposure line are present between last exposure line of one frame and first exposure line of next frame in the case where blanking time is greater than predetermined time

2800k — Read reference position pattern and address pattern from decoded information

2800m — Detect pattern indicating reference position of signal from signal value of each exposure line

2800n — Calculate data unit and address unit based on detected reference position

2800p — Obtain transmission signal

end

# FIG. 129

start

Set position recognized as current position of reception device or current position probability map, as self-position prior information ⟋2801a

Point imaging unit of reception device to light emitting unit of transmission device ⟋2801b

Calculate pointing direction and elevation angle of imaging device, from sensor values of accelerometer, gyroscope, and magnetic sensor ⟋2801c

Capture image of light emission pattern and obtain transmission signal ⟋2801d

Calculate distance between imaging device and light emitting unit, from information of size and shape of light emitting unit included in transmission signal, size of captured light emitting unit, and imaging magnification factor of imaging device ⟋2801e

Calculate relative angle between direction from imaging unit to light emitting unit and normal line of imaging plane, from position of light emitting unit in captured image and lens characteristics ⟋2801f

Calculate relative position relation between imaging device and light emitting unit, from hitherto calculated values ⟋2801g

Calculate position of reception device from position of light emitting unit included in transmission signal and relative position relation between imaging device and light emitting unit. Note that, when a plurality of transmission devices can be observed, position of reception device can be calculated with high accuracy by calculating coordinates of imaging device from signal included in each transmission device. When a plurality of transmission devices can be observed, triangulation is applicable. ⟋2801h

Update current position or current position probability map of reception device, from self-position prior information and calculation result of position of reception device ⟋2801i

Move imaging device ⟋2801j

Calculate moving direction and distance from sensor values of accelerometer, gyroscope, and magnetic sensor ⟋2801k

Calculate moving direction and distance from captured image and orientation of imaging device ⟋2801m

# FIG. 130

start

Press button by user — 2802a

Cause light emitting unit to emit light, where signal may be expressed by light emission pattern — 2802b

Record light emission start time and end time and time of transmission of specific pattern — 2802c

Capture image by imaging device — 2802d

Capture image of light emission pattern of transmission device present in captured image, and obtain transmitted signal, where light emission pattern may be synchronously analyzed using recorded time — 2802e

end

# FIG. 131

start

Receive light by light receiving device or
capture image by imaging device
2803a

Specific pattern?
2803b

N

Y

Record start time and end time of light reception or
image capture of reception pattern and time of
appearance of specific pattern
2803c

Read transmission signal from storage unit and
convert transmission signal to light emission pattern
2803d

Cause light emitting unit to emit light according to light
emission pattern, where light emission may be started
after predetermined period from recorded time
2803e

end

# FIG. 132

start

Receive light by light receiving device, convert received light energy to electricity, and accumulate converted energy         2804a

Accumulated energy greater than or equal to predetermined amount?     2804b    N

Y

Analyze received light and record time of appearance of specific pattern     2804c

Read transmission signal from storage unit and convert transmission signal to light emission pattern     2804d

Cause light emitting unit to emit light according to light emission pattern, where light emission may be started after predetermined period from recorded time     2804e

end

FIG. 133

Inside station

2700b

News Today

- - - - - - - - - -
- - - - - - - - - -
- - - - - - - - - -
- - - - - - - - - -

Service

2700c

WEST→
000000000
station

+

2700a

EP 2 858 269 B1

**FIG. 134**

Inside vehicle

2704e

$\theta_1$

2704a

Camera unit

16B

2704c

2704b

2704d

No.14

FIG. 135

FIG. 136

2701a

Wireless connection
authentication
information

Wireless connection
establishment

2701b

Smartphone

Digital camera

EP 2 858 269 B1

# FIG. 137

FIG. 138

FIG. 139

EP 2 858 269 B1

## FIG. 140

| Transmission device | Transmission device | Transmission device |
|---|---|---|

2703a　　2703b　　2703c

2703d

2703e

EP 2 858 269 B1

FIG. 141

## FIG. 142

Transmission device 1 — 2709a
- Light receiving unit — 2709b
- Light emitting unit — 2709c
- Light receiving unit — 2709d
- Storage unit — 2709e

Transmission device 2 — 2709f
- Light receiving unit — 2709g
- Light emitting unit — 2709h
- Light receiving unit — 2709i
- Storage unit — 2709j

EP 2 858 269 B1

EP 2 858 269 B1

## FIG. 143

2711g

Centralized control
device

2711h

Switchboard

2711a

Attachment device

Ceiling, wall, or floor of building

2711b Storage
unit

2711c

2711d

Transmission
device

Attachment unit

Shape
storage
unit

Light
emitting
unit

Storage
unit

2711d          2711e          2711f

# FIG. 144

2712a   2712b   2712c

| Transmission device | Shape storage unit | Signal analysis unit |
| | Light emitting unit | Storage unit | Light receiving unit |

2712d   2712e   2712f

2712g

| Reception device | Imaging unit | Light emitting unit |

2712h   2712i

## FIG. 145

Centralized control device — 2713a
Communication unit — 2713b

Transmission device — 2713c
Shape storage unit — 2713d
Light emitting unit — 2713e
Storage unit — 2713f
Communication unit — 2713g

Transmission device — 2713c
Shape storage unit — 2713d
Light emitting unit — 2713e
Storage unit — 2713f
Communication unit — 2713g

Reception device — 2713h
Imaging unit — 2713i
Communication unit — 2713j

EP 2 858 269 B1

# FIG. 146

2714a  2714b

2714c

2714d

2714e

Light emitting unit

2714f

2D barcode
reading unit

FIG. 147

2715d

2715c

2715b

2715a

2715e

Server

2715f

# FIG. 148

2716b

2716c
2716d

2716a

Electronic device
(microwave oven)

FIG. 149

## FIG. 150

## FIG. 151

2500a

Imaging range

2500b

Light emitting unit

Display to user    2500c

EP 2 858 269 B1

# FIG. 152

Imaging range

2501a

2501b

Light emitting unit

Display to user

2501c

EP 2 858 269 B1

FIG. 153

Imaging range
2502a

Light emitting unit
2502b

Display to user
2502c

# FIG. 154

Imaging range — 2503a

Light emitting unit — 2503b

Display to user — 2503c

Imaging range — 2503d

Light emitting unit — 2503e

Display to user — 2503f

EP 2 858 269 B1

# FIG. 155

Imaging range — 2504a

Light emitting unit — 2504b

Display to user — 2504c

EP 2 858 269 B1

FIG. 156

Display to user
2505c

Imaging range
2505a
Light emitting unit
2505b

# FIG. 157

2506a — Imaging range

2506b — Light emitting unit

Display to user — 2506c

EP 2 858 269 B1

FIG. 158

2507c

Display to user

2507b

Light emitting unit

2507a

Imaging range

# FIG. 159

2508a

Imaging range

2508b

Light emitting unit

Display to user

2508c

EP 2 858 269 B1

# FIG. 160

2509a

Imaging range

Light emitting unit

2509b

Display to user

2509c

EP 2 858 269 B1

EP 2 858 269 B1

## FIG. 161

2510a

2510b

14 byte

239 byte

Time

# FIG. 162

2511a

2511b

30%
60 byte

80%
160 byte

Time

FIG. 163

FIG. 164

2513a

2513b

60%

Light
emitting unit

90%

Light
emitting unit

Time

EP 2 858 269 B1

# FIG. 165

EP 2 858 269 B1

# FIG. 166

FIG. 167

FIG. 168

6005

6002

6003

6004

6001

FIG. 169

FIG. 170

6101

6100

6101

FIG. 171

6201    6202    6100

# FIG. 172

6301

6302

FIG. 173

FIG. 174

4000a

4000b

4000g

Transmitter

Receiver

4000c

Traffic light

4000e

Electric light

4000d

4000f

FIG. 175

Transmitter 4001a

4001b
Receiver

# FIG. 176

Start /4002a

Receive signal from a plurality of light sources /4002b

Separate each light source from light source area and obtain signal /4002c

Number of obtained signals? /4002d 0

Greater than or equal to 1

Execute process included in signal /4002e

End /4002f

## FIG. 177

Transmitter-receiver 1

4003a

Transmitter-receiver 2

4003b

4003c

Transmitter-receiver 3

FIG. 178

FIG. 179

## FIG. 180

| Light source characteristics | Service type | Service-related information |
|---|---|---|
| 4006a | 4006b | 4006c |

FIG. 181

# FIG. 182

(a) In the case of 2 lines per symbol

(b) In the case of 3 lines per symbol

Imaging element

Clock synchronous circuit

Change read clock

Speedup

Slowdown

Change clock

# FIG. 183

Normal TV screen area

Optical communication screen area for vertical scan camera

Camera → Demodulated signal

Guard band

Prompt character display → Point to this position

Optical communication screen area for lateral (horizontal) scan camera

Camera

Demodulated signal

EP 2 858 269 B1

FIG. 184

FIG. 185

Top view

Calculate angle in horizontal direction by geomagnetic sensor and angular velocity sensor

Data (position data, ceiling height H)

$d=(H-h)\times tan^{-1}\Theta_1$

| Sensor |
|---|
| Geomagnetic sensor<br>Accelerometer<br>(Angular velocity sensor) |
| Wireless data |
| Base station ID<br>Base station field intensity |

| Computation | Position information of lighting<br>(difference information from<br>reference position is also available) | + | d:Distance difference information<br>from lighting position | = | Position information<br>of mobile phone |
|---|---|---|---|---|---|
| | Latitude N:34.7388<br>Longitude E:135.5738 | | d₁:Latitude N:0.000013<br>d₂:Longitude E:0.000097 | | Latitude N:34.738813<br>Longitude E:135.573897 |

FIG. 186

EP 2 858 269 B1

280

# FIG. 187

$$d = (H-h) \times \tan^{-1} \Theta$$

L1  L2  L3  L4  L5

H−h

Detect ID data
"0101" of L2

4-value PPM

010001010

L2→

In the case of horizontal scan

In the case of vertical scan

Detection area

Scan area

In camera

d  Θ

L2

# FIG. 188

L0: Transmission of common data: reference position information (latitude, longitude), ceiling height information, server URL, room shape information, difference information between ID number of each individual lighting and reference position information or relative position information or arrangement information of each ID, area-specific data broadcasting

(a)

| | | | |
|---|---|---|---|
| L0 /L1 | L0 /L2 | L0 /L3 | L0 /L4 |
| 0001 | 0010 | 0011 | 100 |
| L0 /L5 | L0 /L6 | L0 /L7 | L0 /L8 |
| 010 | 110 | 111 | 000 |
| L0 | L0 | L0 | L0 |

(b)

Captured image

f1 ⋯⋯ f2

Decode →

Data demodulated image

Superimpose AR image

(011) ⋯⋯ (100)

(000)

+ Information of L0

Transmit ID

Cloud

Image information and position information linked with ID

Calculate position information of mobile terminal

EP 2 858 269 B1

# FIG. 189

When no signal    Time slot t=A    t=B    t=C    Scan range    t=D

Reduce scan range of image sensor

Large amount of data, speedup

Speed up upon defocusing

t=E    t=F    t=G    t=H    t=I

EP 2 858 269 B1

FIG. 190

# FIG. 191

Obtain position
information of
$L_2$ by face camera

↓

Compute moving
amount $l_2$ from
physical sensor
and image of in
camera

↓

Compute position
information after
movement

| Physical sensor |
| --- |
| Accelerometer
Gyroscope
Geomagnetic sensor |
| Image of in camera |

$L_1$  $L_2$  $L_3$  $L_4$  $L_5$

Face camera

In camera

In camera

$l_1$

$\Theta_1$  $\Theta_2$

$l_2$

$l_3$  $l_4$

EP 2 858 269 B1

FIG. 192

Inside station

News Today

Service

WEST→
station
+

EP 2 858 269 B1

FIG. 193

FIG. 194

Inside vehicle

$\theta_1$

Camera unit

16B

No.14

EP 2 858 269 B1

## FIG. 195

In the case of 1bit per symbol

(a) Reference waveform

Period T

Time t

(b) Transmission symbol

| 0 | 1 | 0 | 1 |

(c) Transmission waveform (light emission waveform)

Time t

# FIG. 196

In the case of symbol 0 → 0

FIG. 197

In the case of symbol 0 → 1

Period T

Transmission symbol

| 1 | 2 | 3 | 4 |
|---|---|---|---|
| 0 | 0 | 0 | 1 |

Transmission waveform
Pixel value p

0   1   2   3

1

Line 1

Reception
waveform

Time t

Exposure time

# FIG. 198

In the case of symbol 1 → 0

# FIG. 199

In the case of symbol 1 → 1

# FIG. 200

EP 2 858 269 B1

FIG. 201

Signage 7001a

A RESTAURANT

Receive

7001b

A RESTAURANT

Eight seats available

5% off

Obtain

FIG. 202

## FIG. 203

7043b

TV station's 50th anniversary drama

Air time: MM/DD 20:00

7043a

7043c
Timer record

7043d
Select recorder

DMR-100

DMR-200

7043e
Timer recording completed

MM/DD
20:00-22:00
× ch

EP 2 858 269 B1

FIG. 204

EP 2 858 269 B1

# FIG. 205

```
( start )                                                    7101a

Store ID of transmitter and information to be provided to receiver
receiving ID, in server in association with each other.  Information to be
provided to receiver may include information such as store name, product
name, map information to store, availability information, coupon
information, stock count of product, show time of movie or play,
reservation information, and URL of server for reservation or purchase

                                                            7101b
          Transmitter transmits ID

                                                            7101c
      Point camera of receiver to transmitter and receive ID    7101d

          Receiver transmits received ID to server, and stores
          information associated with ID in receiver

                                                            7101e
          Receiver stores terminal ID and user ID in server
                                                            7101f
          Receiver displays information stored in server
          as information to be displayed on receiver        7101g

Receiver adjusts display based on user profile stored in receiver or server.  For
example, receiver performs control such as changing font size, hiding
age-restricted content, or preferentially displaying content assumed to be
preferred from user's past behavior
                                                            7101h
       Receiver displays route from current position to store or sales floor    7101i

Receiver obtains information from server according to need, and updates
and displays availability information or reservation information
                                                            7101j
          Receiver displays button for storing obtained
          information and button for cancelling storage of
          displayed information                             7101k

          User taps button for storing information obtained by receiver
                                                            7101m
          Receiver stores obtained information so as to be redisplayable
          by user operation                                 7101n

Reader in store reads information transmitted from receiver.  Examples
of transmission method include visible light communication, communication
via Wi-Fi or Bluetooth, and communication using 2D barcode.
Transmission information may include ID of receiver or user ID
                                                            7101p
          Reader in store stores read information and ID of store in server
                                                            7101q
          Server stores transmitter, receiver, and store in
          association with each other.  This enables analysis of
          advertising effectiveness of signage

                           ( end )
```

FIG. 206

Signage

7002a

| A<br>Restaurant | B<br>Cafe | C<br>Bookstore |
|---|---|---|
| D<br>Bar | E<br>Office | F<br>Variety store |

Receive

7002b

| A<br>Restaurant | B<br>Cafe | C<br>Bookstore |
|---|---|---|
| D<br>Bar | E<br>Office | F<br>Variety store |

7002b

B
Cafe

Select by tapping
or voice

## FIG. 207

```
              ( start )
                  |
                  |                                      7102a
  ┌───────────────────────────────────────────────────────────────┐
  │ Store ID of transmitter and information to be provided to receiver │
  │ receiving ID, in server in association with each other.  Information to be │
  │ provided to receiver may include information such as store name, product │
  │ name, map information to store, availability information, coupon │
  │ information, stock count of product, show time of movie or play, │
  │ reservation information, and URL of server for reservation or purchase. │
  │ Store position relation of information displayed on transmitter in server │
  └───────────────────────────────────────────────────────────────┘
                  |                                      7102b
         ┌───────────────────────────────────┐
         │ Transmitter such as signage transmits ID │
         └───────────────────────────────────┘
                  |                                      7102c
    ┌────────────────────────────────────────────┐
    │ Point camera of receiver to transmitter and receive ID │
    └────────────────────────────────────────────┘
                  |                                      7102d
         ┌──────────────────────────────────────┐
         │ Receiver transmits received ID to server, and │
         │ obtains information associated with ID │
         └──────────────────────────────────────┘
                  |                                      7102e
  ┌───────────────────────────────────────────────────────┐
  │ Receiver displays information stored in server as information to │
  │ be displayed on receiver.  Information may be displayed on receiver │
  │ while maintaining position relation of information displayed on │
  │ transmitter │
  └───────────────────────────────────────────────────────┘
                  |                                      7102f
    ┌────────────────────────────────────────────────────┐
    │ User selects information displayed on receiver by designation │
    │ by screen tapping or voice │
    └────────────────────────────────────────────────────┘
                  |                                      7102g
    ┌──────────────────────────────────────────────────┐
    │ Receiver displays details of information designated by user │
    └──────────────────────────────────────────────────┘
                  |
                  v
              ( end )
```

## FIG. 208

Signage ⌐7003a

| A<br>Restaurant | B<br>Cafe | C<br>Bookstore |
|---|---|---|
| D<br>Bar | E<br>Office | F<br>Variety store |

7003b

B
Cafe

Display information near center of camera

EP 2 858 269 B1

# FIG. 209

start

7103a

Store ID of transmitter and information to be provided to receiver receiving ID, in server in association with each other. Information to be provided to receiver may include information such as store name, product name, map information to store, availability information, coupon information, stock count of product, show time of movie or play, reservation information, and URL of server for reservation or purchase. Store position relation of information displayed on transmitter in server

7103b

Transmitter such as signage transmits ID

7103c

Point camera of receiver to transmitter and receive ID

7103d

Receiver transmits received ID to server, and obtains information associated with ID

7103e

Receiver displays information nearest center of captured image or designated part from among information displayed on signage

end

# FIG. 210

Signage

| A<br>Restaurant | B<br>Cafe | C<br>Bookstore |
|---|---|---|
| D<br>Bar | E<br>Office | F<br>Variety store |

7004a

7004b

7004b

Receive

B
Cafe

C
Bookstore

Flick left

Display in same position relation
as transmitter

EP 2 858 269 B1

# FIG. 211

start

7104a

Store ID of transmitter and information to be provided to receiver receiving ID, in server in association with each other. Information to be provided to receiver may include information such as store name, product name, map information to store, availability information, coupon information, stock count of product, show time of movie or play, reservation information, and URL of server for reservation or purchase. Store position relation of information displayed on transmitter in server

7104b

Transmitter such as signage transmits ID

7104c

Point camera of receiver to transmitter and receive ID

7104d

Receiver transmits received ID to server, and obtains information associated with ID

7104e

Receiver displays information stored in server as information to be displayed on receiver

7104f

User performs flick operation on receiver

7104g

Receiver changes display in same position relation as information displayed on transmitter, according to user operation. For example, in the case where user flicks left screen to display information on right side of currently displayed information, information displayed on transmitter on right side of information currently displayed on receiver is displayed on receiver

end

## FIG. 212

| A<br>Restaurant | B<br>Cafe | C<br>Bookstore |
|---|---|---|
| D<br>Bar | E<br>Office | F<br>Variety store |

7005a

Signage

7005b    Receive    7005b    7005b

A<br>Restaurant    B<br>Cafe    C<br>Bookstore

7005b

E<br>Office

Display in same position relation as transmitter when arrow or edge of screen is tapped

# FIG. 213

start

7105a

Store ID of transmitter and information to be provided to receiver receiving ID, in server in association with each other. Information to be provided to receiver may include information such as store name, product name, map information to store, availability information, coupon information, stock count of product, show time of movie or play, reservation information, and URL of server for reservation or purchase. Store position relation of information displayed on transmitter in server

7105b

Transmitter such as signage transmits ID

7105c

Point camera of receiver to transmitter and receive ID

7105d

Receiver transmits received ID to server, and obtains information associated with ID

7105e

Receiver displays information stored in server as information to be displayed on receiver

7105f

User taps edge of screen displayed on receiver or up, down, left, or right direction indicator displayed on receiver

7105g

Receiver changes display in same position relation as information displayed on transmitter, according to user operation. For example, in the case where user taps right edge of screen or right direction indicator on screen, information displayed on transmitter on right side of information currently displayed on receiver is displayed on receiver

end

## FIG. 214

7006a

Transmit ID, distance between lights, light size, vehicle size, shape, weight, number, traffic ahead, or presence/absence of danger

# FIG. 215

start

7106a

Store ID of transmitter and information to be provided to receiver receiving ID, in server in association with each other. Information to be provided to receiver may include information such as size of light emitting unit as transmitter, distance between light emitting units, shape and weight of object including transmitter, identification number such as vehicle identification number, state of area not easily observable from receiver, and presence/absence of danger

7106b

Transmitter transmits ID. Transmission information may include URL of server and information to be stored in server

7106c

Receiver receives transmitted information such as ID

7106d

Receiver obtains information associated with received ID from server

7106e

Receiver displays received information and information obtained from server

7106f

Receiver calculates distance between receiver and light emitting unit by triangulation, from information of size of light emitting unit and apparent size of captured light emitting unit or from information of distance between light emitting units and distance between captured light emitting units

7106g

Receiver issues warning of danger or the like, based on information such as state of area not easily observable from receiver and presence/absence of danger

end

## FIG. 216

Transmit ID, number, vehicle size, shape, or weight

7007b

7007a

Transmit whether or not parking is permitted, charging information, or parking position

Transmitter-receiver in parking lot

# FIG. 217

start — 7107a

Store ID of transmitter and information to be provided to receiver receiving ID, in server in association with each other. Information to be provided to receiver may include information such as shape and weight of object including transmitter, identification number such as vehicle identification number, identification number of user of transmitter, and payment information

7107b

In-vehicle transmitter transmits ID. Transmission information may include URL of server and information to be stored in server

7107c

Receiver in parking lot transmits received information to parking lot management server

7107d

Parking lot management server obtains information associated with ID of transmitter using ID as key

7107e

Parking lot management server checks availability of parking lot

7107f

Transmitter-receiver in parking lot transmits whether or not parking is permitted, parking position information, or address of server holding these information, or parking lot management server transmits these information to another server

7107g

In-vehicle receiver receives transmitted information, or in-vehicle system obtains these information from another server

7107h

Parking lot management server controls parking lot to facilitate parking. For example, parking lot management server controls multi-level parking lot

7107i

Transmitter-receiver in parking lot transmits ID

7107j

In-vehicle receiver inquires of parking lot management server based on user information of in-vehicle receiver and received ID

7107k

Parking lot management server charges for parking according to parking time and the like

7107m

Parking lot management server controls parking lot to facilitate access to parked vehicle. For example, parking lot management server controls multi-level parking lot

7107n

Receiver displays map to parking position, and navigates from current position

end

## FIG. 218

7008a

B Cafe

Open

7008b

Receive

7008c

B Cafe

Six seats available

Reserve available seat

5% off

2D barcode

EP 2 858 269 B1

# FIG. 219

( start )

7108a

Store ID of transmitter and information to be provided to receiver receiving ID, in server in association with each other. Information to be provided to receiver may include information such as store name, product name, map information to store, availability information, coupon information, stock count of product, show time of movie or play, reservation information, and URL of server for reservation or purchase

7108b

Transmitter such as signage transmits ID

7108c

Point camera of receiver to transmitter and receive ID

7108d

Receiver transmits received ID to server, and stores information associated with ID in receiver

7108e

Receiver stores terminal ID and user ID in server

7108f

Receiver displays information stored in server as information to be displayed on receiver

7108g

Receiver displays route from current position to store or sales floor

7108h

Receiver obtains information from server according to need, and updates and displays availability information or reservation information

7108i

Receiver displays button for reserving or ordering seat or product

7108j

User taps reserve button or order button displayed on receiver

7108k

Receiver transmits information of reservation or order to server for managing reservation or order

( end )

FIG. 220

7009a

Lighting

7009b

· Reserve seat of table on which terminal is placed
· Confirm provisional reservation
· Extend reserved time

## FIG. 221

Though all seats are taken, there are customers waiting to enter — 7009b

Check

Extend

Additional order

EP 2 858 269 B1

## FIG. 222

start

7109a

Store ID of transmitter and information to be provided to receiver receiving ID, in server in association with each other. Information to be provided to receiver may include information of position and shape of transmitter

7109b

Transmitter such as ceiling lighting transmits ID

7109c

User places receiver on table or the like

7109d

Receiver recognizes placement of receiver on table or the like from information of gyroscope, magnetic sensor, or accelerometer, and starts reception process. Receiver identifies upward facing camera from upward direction of accelerometer, and receives ID using camera

Receiver transmits received ID to server, and stores information associated with ID in receiver

7109f

7109g

Receiver estimates position of receiver

7109h

Receiver transmits position of receiver to store management server

7109i

Store management server specifies seat of table on which receiver is placed

7109j

Store management server transmits seat number to receiver

end

# FIG. 223

7011a

Lighting

Receive and determine
self-position

7011b

Place

7011c

Electronic device

EP 2 858 269 B1

# FIG. 224

start

7110a

Store position of electronic device in server. ID, model, function, and operation interface information (screen, input/output voice, interactive model) of electronic device may be stored in association with position information

7110b

Store ID of transmitter and information to be provided to receiver receiving ID, in server in association with each other. Information to be provided to receiver may include information of position and shape of transmitter

7110c

Transmitter such as ceiling lighting transmits ID

7110d

Point camera of receiver to transmitter and receive ID

7110e

Receiver transmits received ID to server, and stores information associated with ID in receiver

7110f

Receiver estimates position of receiver

7110g

User places receiver at electronic device

7110h

Receiver recognizes that receiver is stationary from information of gyroscope, magnetic sensor, or accelerometer, and starts following process

7110i

Receiver estimates self-position by above-mentioned method in the case where at least predetermined time has elapsed from last estimation of position of receiver

7110j

Receiver estimates movement from last self-position estimation from information of gyroscope, magnetic sensor, or accelerometer, and estimates current position

7110k

Receiver obtains information of electronic device nearest current position, from server

7110m

Receiver obtains information of electronic device from electronic device via Bluetooth or Wi-Fi, or obtains information of electronic device stored in server

7110n

Receiver displays information of electronic device

7110p

Receiver receives input as operation terminal of electronic device

7110q

Receiver transmits operation information of electronic device to electronic device via Bluetooth or Wi-Fi, or via server

end

FIG. 225

# FIG. 226

```
                            ( start )                    7111a
                                |
 ┌──────────────────────────────────────────────────────────────────┐
 │ Store ID of transmitter and information to be provided to receiver │
 │ receiving ID, in server in association with each other. Information to │
 │ be provided to receiver may include ID, model, function, and operation │
 │ interface information (screen, input/output voice, interactive model) │
 │ of electronic device                                               │
 └──────────────────────────────────────────────────────────────────┘
                                |                        7111b
 ┌──────────────────────────────────────────────────────────────────┐
 │ Transmitter included in electronic device or associated with electronic │
 │ device transmits ID                                                │
 └──────────────────────────────────────────────────────────────────┘
                                |                        7111c
       ┌──────────────────────────────────────────┐
       │ Point camera of receiver to transmitter   │
       │ and receive ID                            │       7111d
       └──────────────────────────────────────────┘
 ┌──────────────────────────────────────────────────────────────────┐
 │ Receiver transmits received ID to server, and stores information   │
 │ associated with ID in receiver                                     │
 └──────────────────────────────────────────────────────────────────┘
                                |                        7111e
   ┌──────────────────────────────────────────────────────────┐
   │ Receiver obtains information of electronic device from server │
   │ using received ID as key                                  │
   └──────────────────────────────────────────────────────────┘
                                |                        7111f
 ┌──────────────────────────────────────────────────────────────────┐
 │ Receiver obtains information of electronic device from electronic   │
 │ device via Bluetooth or Wi-Fi, or obtains information of electronic │
 │ device stored in server                                            │
 └──────────────────────────────────────────────────────────────────┘
                                |                        7111g
       ┌──────────────────────────────────────────┐
       │ Receiver displays information of           │
       │ electronic device                         │       7111h
       └──────────────────────────────────────────┘
   ┌──────────────────────────────────────────────────────┐
   │ Receiver receives input as operation terminal of       │
   │ electronic device                                     │
   └──────────────────────────────────────────────────────┘
                                |                        7111i
 ┌──────────────────────────────────────────────────────────────────┐
 │ Receiver transmits operation information of electronic device to    │
 │ electronic device via Bluetooth or Wi-Fi, or via server            │
 └──────────────────────────────────────────────────────────────────┘
                                |
                            (  end  )
```

FIG. 227

7013a

Lighting

Receive and
determine
self-position

7013b

Navigate to destination by
voice or the like

EP 2 858 269 B1

# FIG. 228

start

7112a

User inputs destination
to receiver

7112b

User points receiver to light (transmitter).
Even visually impaired user can point receiver to
light if he or she is capable of recognizing
intense light

7112c

Receiver receives signal
superimposed on light

7112d

Receiver obtains information from server using
received signal as key

7112e

Receiver obtains map from current position to
destination from server

7112f

Receiver displays map and navigates from
current position to destination

end

## FIG. 229

Face camera

7014b

7014a

# FIG. 230

start

7113a

Y | Imaging direction of face camera upward at predetermined angle or more with ground plane? | N

Start reception by face camera, or assign higher priority to reception process by face camera

7113b

7113c

Predetermined time elapsed

7113d

End reception by face camera, or assign lower priority to reception process by face camera

end

FIG. 231

Out camera

7015b

7015a

# FIG. 232

start

Imaging direction of out
camera at predetermined
angle or less with
ground plane?                        7114a

Y                                    N

Start reception by out camera, or
assign higher priority to reception
process by out camera               7114b

Predetermined
time elapsed                 7114c

End reception by out camera, or
assign lower priority to reception
process by out camera               7114d

end

# FIG. 233

7016a

Move of sticking receiver out

## FIG. 234

```
                        ┌─────────┐
                        │  start  │
                        └────┬────┘
                             │                    7115a
                    ╱────────┴─────────╲
                   ╱  Receiver moved, and angle ╲
        Y         ╱  between moving direction and ╲   N
     ┌───────────╱  imaging direction of out camera ╲──────┐
     │           ╲    upon end of movement          ╱      │
     │            ╲ predetermined angle or less?    ╱       │
     │             ╲────────────────────────╱              │
     ▼                                                      │
┌────────────────────────────────┐  7115b                  │
│Start reception by out camera, or│                         │
│assign higher priority to        │                         │
│reception process by out camera  │                         │
└────────────┬───────────────────┘                          │
             │                                               │
             ▼          7115c          7115d                 ▼
      ┌──────────────┐        ┌──────────────────────────────────┐
      │Predetermined │────────▶│End reception by out camera, or    │
      │time elapsed  │        │assign lower priority to reception  │
      └──────────────┘        │process by out camera              │
                              └──────────────┬───────────────────┘
                                             │
                                             ▼
                                        ┌─────────┐
                                        │   end   │
                                        └─────────┘
```

FIG. 235

7017a

Display operation or specific button press

# FIG. 236

start

Display operation or
specific button press
performed?                    7115h

Y                             N

Start reception by camera
corresponding to display operation
or specific button press, or assign     7115i
higher priority to reception process
by camera

7115j     End reception by camera        7115k
corresponding to display operation or
Predetermined     specific button press, or assign lower
time elapsed       priority to reception process by
camera

end

FIG. 237

7018b
7018a

Move

# FIG. 238

start

Imaging direction of face camera upward at predetermined angle or more with ground plane, and receiver translated at predetermined angle or less with ground plane? — 7116a

Y                    N

Start reception by face camera, or assign higher priority to reception process by face camera — 7116b

Predetermined time elapsed — 7116c

End reception by face camera, or assign lower priority to reception process by face camera — 7116d

end

# FIG. 239

EP 2 858 269 B1

## FIG. 240

| | |
|---|---|
| (a) <br> | Directly transmit and receive necessary information |
| (b) <br> Server | Transmit and receive displayed channel, and inquire of server for necessary information |
| (c) <br> Server | Transmit and receive ID of TV or information necessary for wireless connection, inquire of TV or recorder for displayed channel, and obtain necessary information from server |

FIG. 241

2021b

TV

2021a

Recorder

## FIG. 242

7022a

Server

7022b

Replace server address in information transmitted from TV, with TV address

7022c

Receive

Wireless communication

EP 2 858 269 B1

# FIG. 243

**Upon reproduction (1)**

7023a — Server

Necessary information

7023b — Recorder

7023c

Upon recording

7023b

Reproduction screen + Necessary information

7023c

Receive

Wireless communication

7023d

**Upon reproduction (2)**

7023b

Reproduction screen

7023c

Receive

7023d

Wireless communication

EP 2 858 269 B1

## FIG. 244

7045b

7045c

Song Title
Artist
¥200

Preview  Buy

7045a

EP 2 858 269 B1

# FIG. 245

```
start
```

Transmitter included in TV or recorder obtains, from server, information to be provided to receiver as information relating to currently broadcasted program

7117a

Transmitter transmits signal by superimposing signal on backlight of display.  Transmission signal may include URL of transmitter, SSID of transmitter, and password for accessing transmitter

7117b

```
end
```

# FIG. 246

start

Receiver receives information from display — 7118a

Currently viewed channel information included in received information? — 7118b

N → Obtain currently viewed channel information from electronic device having ID included in received information — 7118c

Obtain information related to currently viewed screen from server. TV or recorder may act as server — 7118d

Receiver displays information obtained from server — 7118e

Receiver adjusts display based on user profile stored in receiver or server. For example, receiver performs control such as changing font size, hiding age-restricted content, or preferentially displaying content assumed to be preferred from user's past behavior — 7118f

end

# FIG. 247

start

7119a

Recorder obtains information related to program from server and stores information, when recording program. In the case where related information changes with time, recorder also stores time

7119b

Recorder transmits stored information to display, when reproducing recorded image. Access information (URL or password) of server in stored information may be replaced with access information of display

7119c

Recorder transmits stored information to receiver, when reproducing recorded image. Access information (URL or password) of server in stored information may be replaced with access information of recorder

end

FIG. 248

Luminance

7024a

Time

0      1           0        0

# FIG. 249

start

**7120a**

Receiver observes luminance of light
emitted from transmitter

**7120b**

Measure time from rapid rise in luminance to next rapid rise
in luminance, or measure time from rapid fall in
luminance to next rapid fall in luminance

**7120c**

Recognize signal value according to time. For example,
recognize "0" in the case where time is less than or
equal to 300 microseconds, and "1" in the case where
time is greater than or equal to 300 microseconds

end

FIG. 250

# FIG. 251

start

7121a

Receiver observes luminance of light emitted from transmitter

7121b

Determine minimum value of time width of rapid change in luminance

7121c

Search for luminance change width that is not integral multiple of minimum value

7121d

Analyze signal, with luminance change width that is not integral multiple as starting point

7121e

Calculate time width between parts having luminance change width that is not integral multiple

end

EP 2 858 269 B1

# FIG. 252

Luminance

7026a

Time

Exposure time

# FIG. 253

start

7125a

Turn current ON/OFF with time width sufficiently shorter than exposure time of receiver, when luminance or current for controlling luminance falls below predetermined value. This returns current to initial value, so that luminance decrease of light emitting unit can be prevented

7125b

Turn current ON/OFF with time width sufficiently shorter than exposure time of receiver, when luminance or current for controlling luminance exceeds predetermined value. This returns current to initial value, so that luminance increase of light emitting unit can be prevented

end

# FIG. 254

Luminance

7027a

Carrier frequency: △Hz

Time

Luminance

7027b

Carrier frequency: ○Hz

Time

EP 2 858 269 B1

# FIG. 255

```
                    ┌─────────┐
                    │  start  │
                    └─────────┘
                         │
                         │                           7122a
          ┌──────────────────────────────────┐
          │ Receiver observes luminance of light │
          │ emitted from transmitter           │
          └──────────────────────────────────┘
                         │
                         │                           7122b
       ┌─────────────────────────────────────┐
       │ Determine minimum value of time width │
       │ of rapid change in luminance          │
       └─────────────────────────────────────┘
                         │
                         │                           7122c
            ┌──────────────────────────────┐
            │ Recognize minimum value as     │
            │ carrier frequency              │
            └──────────────────────────────┘
                         │
                         │                           7122d
    ┌──────────────────────────────────────────┐
    │ Obtain information from server using carrier │
    │ frequency as key                            │
    └──────────────────────────────────────────┘
                         │
                         ▼
                    ┌─────────┐
                    │   end   │
                    └─────────┘
```

# FIG. 256

```
        ( start )
            │
            │                              7123a
   ┌────────┴─────────────────────────┐
   │ Receiver observes luminance of light │
   │ emitted from transmitter          │
   └────────┬─────────────────────────┘
            │
            │                              7123b
   ┌────────┴──────────────────────────────────┐
   │ Fourier transform luminance change and recognize │
   │ maximum component as carrier frequency      │
   └────────┬──────────────────────────────────┘
            │
            │                              7123c
   ┌────────┴─────────────────────────┐
   │ Obtain information from server using carrier │
   │ frequency as key                  │
   └────────┬─────────────────────────┘
            │
            ▼
        ( end )
```

# FIG. 257

start

7124a

Express transmission signal as luminance change

7124b

Generate luminance change so that maximum component of Fourier transformed luminance change is carrier frequency

7124c

Cause light emitting unit to emit light according to generated luminance change

end

## FIG. 258

EP 2 858 269 B1

Transmitter

7028a

| Transmit signal A | 7028b |
| | 7028c |
| Transmit signal B | 7028d |
| | 7028e |
| Transmit signal C | 7028f |

Direction in which imaging unit of receiver is exposed simultaneously (vertical direction on paper surface)

7028g

FIG. 259

EP 2 858 269 B1

Transmitter

7029a

| A | C | B |
|---|---|---|
| B | A | C |
| C | B | A |

FIG. 260

# FIG. 261

start

7126a

Receiver measures luminance of each position of line
that receives light simultaneously

7126b

Receive signal at high speed by receiving separately
transmitted signals in direction perpendicular to
simultaneous light receiving line

end

## FIG. 262

Frame 1    7031a      Frame 2    7031b      Frame 3    7031c

Display

Frame 1    7031d      Frame 2    7031e

Imaging

7031f

Time

Direction in which imaging unit of receiver is exposed simultaneously (vertical direction on paper surface)

EP 2 858 269 B1

# FIG. 263

start

7127a

Display device displays 1D barcode

7127b

Display device changes barcode display at interval longer than blanking time in imaging by receiver

end

# FIG. 264

```
          ┌─────────┐
          │  start  │
          └─────────┘
               │
               │
               │                                    7128a
               │
   ┌───────────────────────────────────────────────────┐
   │ Receiver captures 1D barcode displayed on         │
   │ display device                                    │
   └───────────────────────────────────────────────────┘
               │
               │                                    7128b
               │
 ┌─────────────────────────────────────────────────────────┐
 │ Recognize that display device displays next barcode, at │
 │ interruption of barcode line                            │
 └─────────────────────────────────────────────────────────┘
               │
               │
               ▼
          ┌─────────┐
          │   end   │
          └─────────┘
```

# FIG. 265

7032a

Lighting

7032c

Encrypted ID

7032b

Decrypt in server

Decrypt in receiver

EP 2 858 269 B1

# FIG. 266

start

7129a

Transmitter holds partially or wholly encrypted transmission information

7129b

Receiver decrypts received information, or transmits received information in encrypted form to server

7129c

Server decrypts received information

end

## FIG. 267

7033a

Stop reception in the case where value of illuminance sensor is low and receiver is estimated to be in call state

EP 2 858 269 B1

FIG. 268

```
                    ┌─────────┐
                    │  start  │
                    └─────────┘
                         │
                         │        7130a
                         ▼
              ╱───────────────────────╲
         N   ╱   Receiver estimated to  ╲   Y
        ┌───┤      be in call state from ├──────────┐
        │    ╲ sensor value of illuminance╱          │
        │     ╲  sensor and the like?   ╱            │
        │      ╲───────────────────────╱             │
        │                                    7130b   │
        │                                            ▼
        │          ┌──────────────────────────────────┐
        │          │ End reception by face camera,     │
        │          │ or assign lower priority to       │
        │          │ reception process by face camera  │
        │          └──────────────────────────────────┘
        │                                            │
        │                                            │
        └──────────────────┐         ┌───────────────┘
                           │         │
                           ▼
                      ┌─────────┐
                      │   end   │
                      └─────────┘
```

FIG. 269

7034b

7034a

Stop reception process by imaging device on illuminance sensor side or assign lower priority to reception process, in the case where measurement value of illuminance sensor is less than or equal to predetermined value

# FIG. 270

start

7131a

N | Sensor value of illuminance sensor less than or equal to predetermined value? | Y

7131b

End reception by face camera, or assign lower priority to reception process by face camera

end

# FIG. 271

start

7132a

Measure illuminance change from
sensor value of illuminance sensor

7132b

Receive signal from illuminance change, as in reception of signal
from luminance change measured by imaging device. Since
illuminance sensor is less expensive than imaging device, receiver
can be manufactured at low cost

end

# FIG. 272

(a)

7037a

400    500    600    700

Wavelength

(b)

7037b

400    500    600    700

Wavelength

Example of metameric spectral distribution combination

EP 2 858 269 B1

# FIG. 273

start

7135a

Transmitter expresses different signals by light (metameric light) perceived as isochromatic by humans but different in spectral distribution, and causes light emitting unit to emit light

7135b

Receiver measures spectral distributions and receives signals

end

## FIG. 274

# FIG. 275

```
                          ( start )
                              |
  +---------------------------+---------------------------+      7136a
  | ID solution server stores ID of transmitter           |
  | and method of communication between                   |
  | transmitter control device and receiver in            |
  | association with each other                           |
  +---------------------------+---------------------------+
                              |                                  7136b
  +---------------------------+---------------------------+
  | Receiver receives ID of transmitter, and obtains      |
  | method of communication with transmitter              |
  | control device from ID solution server                |
  +---------------------------+---------------------------+
                              |
                              v                               7136c
                   /  Receiver and transmitter  \
              N   /   control device directly     \   Y
                  \   communicable?               /
                   _____ /
        |                7136d                        |      7136e
        v                                             v
  +------------------+                        +------------------+
  | Communicate via  |                        | Communicate      |
  | relay server     |                        | directly         |
  +------------------+                        +------------------+
        |                                             |
        +----------------------+----------------------+
                               |
                           ( end )
```

FIG. 276

Server — 7039g

7039b

7039e — Receiver

7039f — Display unit

Mobile device

7039a

7039c — Transmitter

7039d — Imaging unit

Store device

# FIG. 277

start

7137a

Mobile device displays information on display unit
in 2D barcode or the like

7137b

Store device captures information displayed on display
unit by imaging unit, to obtain information

7137c

Store device transmits information from
transmitter

7137d

Mobile device receives transmitted
information by receiver

7137e

Mobile device changes display on display unit based on
received information. Information displayed on display
unit may be determined by mobile device, or determined
by server based on received information

7137f

Store device captures information displayed on display
unit by imaging unit, to obtain information

7137g

Store device determines consistency between obtained
information and transmitted information. Determination
may be made by store device or by server

7137h

Transaction completed successfully in the
case where obtained information and
transmitted information are consistent

end

# FIG. 278

start

7138a

Receiver starts reception process

7138b

Receiver sets exposure time of imaging device

7138c

Receiver sets gain of imaging device

7138d

Receiver receives information from luminance of captured image

end

# FIG. 279

```
                        ( start )

                                              7139a
              ┌──────────────────────────────┐
              │  Start exposure time setting  │
              └──────────────────────────────┘
                              │
                              │          7139b
           N  ╱─────────────────────────────────╲  Y
         ┌────┤ Any API that changes exposure time? ├────┐
         │    ╲─────────────────────────────────╱        │
         │                                                │
         │                          7139c                 │        7139f
  ┌──────────────────────────────────┐          ┌──────────────────┐
  │ Point imaging device to          │          │ Set exposure     │
  │ high-luminance object such as light│        │ time using API   │
  │ source                           │          └──────────────────┘
  └──────────────────────────────────┘                   │
              ┌───────────────────┐   7139d              │
              │ Perform automatic │                      │
              │ exposure setting  │                      │
              └───────────────────┘                      │
                      │                                   │
  ┌──────────────────────────────────┐  7139e            │
  │ Fix automatic exposure set value  │                  │
  │ once change of automatic          │                  │
  │ exposure set value has become     │                  │
  │ sufficiently small                │                  │
  └──────────────────────────────────┘                   │
         │                                                │
         └────────────────────┬───────────────────────────┘
                              │
                           ( end )
```

# FIG. 280

Server — 7036a

Transmitter

Transmitter — 7036c

Receiver — 7036b

Transmitter

Transmitter

Transmitter

Transmitter

EP 2 858 269 B1

# FIG. 281

start

Receiver performs self-position estimation from information of GPS, base station, and the like _7133a

Receiver transmits estimated self-position and estimation error range to server _7133b

Receiver obtains, from server, IDs of transmitters present near position of receiver and information associated with IDs, and stores IDs and information _7133c

Receiver receives ID from transmitter _7133d

Information associated with received ID stored in receiver? _7133e

N                                Y

Receiver obtains information from server using received ID as key _7133f

Receiver performs self-position estimation from information received from server and position relation with transmitter, obtains IDs of nearby transmitters and information associated with IDs from server, and stores IDs and information _7133g

Receiver displays information associated with received ID _7133h

end

FIG. 282

Building a

Building b

7040c

7040d

7040e

7040f

7040a

7040b

Transmit
signal A

Transmit
signal B

Transmit
signal A

Transmit
signal B

7040g

EP 2 858 269 B1

# FIG. 283

start

Receiver detects entry into building                7134a

Receiver transmits estimated self-position, estimation
error range, and name of building in which receiver is
estimated to be present, to server                7134b

Receiver obtains, from server, IDs of transmitters
present in building in which receiver is present and
information associated with IDs, and stores IDs
and information                7134c

Receiver receives ID from
transmitter                7134d

Information associated with
received ID stored in receiver?                7134e

N                                        Y

Receiver obtains
information from server
using received ID as key                7134f

Receiver obtains, from server, IDs
of transmitters present in same
building as transmitter from which
receiver receives ID and
information associated with IDs,
and stores IDs and information                7134g

Receiver displays information
associated with received ID                7134h

end

## FIG. 284

7041a  7041b  7041c  7041d

Transmit signal A  Transmit signal B  Transmit signal C  Transmit signal B

7041e

Error range of self-position estimation by other means

EP 2 858 269 B1

# FIG. 285

```
                         ( start )
                            │
                            ▼                          7140a
              ┌──────────────────────────────┐
              │ Receiver receives ID from     │
              │ transmitter                   │
              └──────────────────────────────┘        7140b
                            │
              ┌──────────────────────────────┐
              │ Receiver performs             │
              │ self-position estimation      │
              └──────────────────────────────┘
                            │         7140c
  7140d              N  ⟨ Self-position estimation successful? ⟩  Y
  ┌─────────────────┐    │                                    │
  │ Receiver displays│◄──┘                                    │
  │ map or input     │                                        │
  │ form, and prompts │                                       │
  │ user to input    │                                        │
  │ current position │                                        │
  └─────────────────┘                                         │
          │                                                   │
          └──────────────┐                                    │
                         ▼                                    │
                         │◄───────────────────────────────────┘
                         ▼                          7140e
              ┌──────────────────────────────┐
              │ Receiver transmits received ID,│
              │ estimated self-position, and   │
              │ self-position estimation error │
              │ range to server                │
              └──────────────────────────────┘
                            │                     7140f
   N ⟨ Only one transmitter transmitting ID received by receiver present  ⟩ Y
     ⟨ within estimation error radius from estimated self-position of receiver? ⟩
                                                              │
                            ┌─────────────────────────────────┘
                            ▼                     7140g
              ┌──────────────────────────────┐
              │ Server transmits information associated with │
              │ transmitter to receiver                      │
              └──────────────────────────────┘
                            │
                         (  end  )
```

# FIG. 286

start

Receiver detects light emitting device emitting signal  7141a

Receiver receives signal  7141b

Receiver displays reception state, received data amount, transmission data amount, and ratio of received data amount to transmission data amount  7141c

All transmission data received by receiver?  7141d

N

Predetermined time elapsed from when transmitter disappears from frame of imaging device of receiver?  7141i

N / Y

Sensor value of accelerometer of receiver change by predetermined value or more, or receiver estimated to be pointed in another direction?  7141j

N / Y

Sensor value of accelerometer of receiver change in predetermined rhythm, or receiver estimated to be shaken?  7141k

N / Y

Abandon received data and stop reception process  7141m

Output notification sound from receiver  7141n

Vibrate receiver  7141p

Y

Stop reception process  7141e

Display reception completion  7141f

Output notification sound from receiver  7141g

Vibrate receiver  7141h

end

FIG. 287A

7046a

A Shop

5-minute walk
to east

7046b 7046c 7046d

Light
emitting
unit

NFC

FIG. 287B

7046e

A Shop

5-minute walk
to east

7046f

7046g

306672334462487

# FIG. 288

```
                      ┌─────────┐
                      │  start  │
                      └────┬────┘
                           │
                           │                         7142a
         ┌─────────────────┴─────────────────┐
         │  Transmitter transmits size of    │
         │  light emitting unit              │
         └─────────────────┬─────────────────┘
                           │
                           │                         7142b
    ┌──────────────────────┴────────────────────────┐
    │  Receiver receives signal and obtains size of  │
    │  light emitting unit of transmitter            │
    │  light                                         │
    └──────────────────────┬─────────────────────────┘
                           │
                           │                         7142c
    ┌──────────────────────┴────────────────────────┐
    │  Receiver calculates distance to light         │
    │  emitting unit, from size of light emitting    │
    │  unit, size of captured light emitting unit,   │
    │  and characteristics of imaging unit           │
    └──────────────────────┬─────────────────────────┘
                           │
                           │                         7142d
    ┌──────────────────────┴────────────────────────┐
    │  Receiver adjusts focal length of imaging      │
    │  unit to calculated distance and captures      │
    │  image                                         │
    └──────────────────────┬─────────────────────────┘
                           │
                           │                         7142e
       ┌───────────────────┴───────────────────┐
       │  Receiver obtains 2D barcode in the    │
       │  case of capturing 2D barcode          │
       └───────────────────┬───────────────────┘
                           │
                           ▼
                      ┌─────────┐
                      │   end   │
                      └─────────┘
```

# FIG. 289

start

Transmitter outputs sound of specific frequency or sound that changes in specific pattern. Sound desirably has frequency that is difficult to be heard by humans and collectable by typical sound collector, e.g. 10 kHz to 20 kHz  ⌐7201a

User presses button on receiver to switch from power off state or sleep state to power on state  ⌐7201b

Receiver activates sound collecting unit  ⌐7201c

Receiver collects sound output from transmitter  ⌐7201d

Receiver notifies user that transmitter is present nearby, by screen display, sound output, or vibration  ⌐7201e

Receiver starts reception  ⌐7201f

end

# FIG. 290

start

User presses button on receiver to switch from power off state or sleep state to power on state — 7202a

Receiver activates illuminance sensor — 7202b

Receiver recognizes change of illuminance from illuminance sensor — 7202c

Receiver receives transmission signal from illuminance sensor — 7202d

Receiver notifies user that transmitter is present nearby, by screen display, sound output, or vibration — 7202e

Receiver starts reception — 7202f

end

# FIG. 291

```
        ( start )
            │
            ▼
┌─────────────────────────────────────────┐   ⌐ 7203a
│ User operates receiver to start reception, or receiver │
│ automatically starts reception by trigger │
└─────────────────────────────────────────┘
            │
            ▼
┌─────────────────────────────────────────┐   ⌐ 7203b
│ Receive preferentially by imaging unit whose │
│ average luminance of entire screen is high or │
│ whose luminance at maximum luminance point │
│ is high │
└─────────────────────────────────────────┘
            │
            ▼
        ( end )
```

FIG. 292

start

Imaging unit captures simultaneous imaging lines or pixels in which transmitter is shown at high speed, by not capturing simultaneous imaging lines or pixels in which transmitter is not shown

7204a

Receiver detects movement of receiver or hand movement using gyroscope or accelerometer, and makes adjustment by electronic correction so that transmitter is always shown

7204b

end

# FIG. 293

start

Receiver displays 2D barcode A ⌐ 7205a

Transmitter reads 2D barcode A ⌐ 7205b

Transmitter transmits display change instruction ⌐ 7205c

Receiver displays 2D barcode B ⌐ 7205d

Transmitter reads 2D barcode B ⌐ 7205e

end

FIG. 294

FIG. 295

7212a

7212b

7212c

7212d

EP 2 858 269 B1

## FIG. 296

Dark letters on bright background                                    7213b

Earthquake early warning: Earthquake was detected in the
following regions

7213c

7213a

EP 2 858 269 B1

FIG. 297

## FIG. 298

7215a
Transmitter

7215b

Server
7215d

7215e
Database

1. Receive ID

2. ID

3. Position
informat
etc.

7215c

Receiver

Store, in association with ID transmitted from transmitter:
another ID
position (latitude, longitude, altitude, room number) of transmitter
model, shape, or size of transmitter
multimedia content
instruction or program executed by receiver
URL of another server
owner of transmitter
registration date or expiration date of ID

EP 2 858 269 B1

## FIG. 299

EP 2 858 269 B1

## FIG. 300

Transmitter — 7217a, 7217b

Receiver — 7217c

Server A — 7217d, Database 7217e

Server B — 7217f, Database 7217g

1. Receive ID1
2. ID1
3. ID2, key
4. key, URL of server B
5. key
6. Information

# FIG. 301A

7218a  7218b                                          7218c

| Header | Data 1 | Header | Data 1 | Header | Data 1 | Padding | Header | Data 2 | Header | Data 2 | Header | Data 2 | Padding |

$$\frac{1}{15} \text{ sec}$$   $$\frac{1}{15} \text{ sec}$$

7218d                                                7218e

| Data 1 | Data 2 | Data 3 | Data 4 | Data 5 | End of Data | Data 1 | Data 2 | Data 3 | · · · |

Time

EP 2 858 269 B1

## FIG. 301B

| | 7218a | 7218b | | | | | | 7218c | | | | | | | |
|---|---|---|---|---|---|---|---|---|---|---|---|---|---|---|---|

| Header | Data 1 | Header | Data 1 | Header | Data 1 | Padding | Header | Data 2 | Header | Data 2 | Header | Data 2 | Padding |
|---|---|---|---|---|---|---|---|---|---|---|---|---|---|

$$\frac{1}{30} \text{ sec} \qquad \frac{1}{30} \text{ sec}$$

| 7218d | | | | | | 7218e | | |
|---|---|---|---|---|---|---|---|---|

| Data 1 | Data 2 | Data 3 | Data 4 | Data 5 | End of Data | Data 1 | Data 2 | Data 3 | · · · |
|---|---|---|---|---|---|---|---|---|---|

Time

EP 2 858 269 B1

# FIG. 302

7219a

| Transmission signal | Modulated signal |
|---|---|
| 00 (0) | 01111 |
| 01 (1) | 10111 |
| 10 (2) | 11011 |
| 11 (3) | 11101 |
| Header | 11110 |

EP 2 858 269 B1

# FIG. 303A

7220a      7220b

| Data 1 | Buffer | Data 2 | Buffer |

$$\frac{1}{15} \text{ sec}$$      $$\frac{1}{15} \text{ sec}$$

7220c      7220d

| Data 1 | Data 2 | Data 3 | Data 4 | Data 5 | End of Data | Data 1 | Data 2 | Data 3 | · · · |

Time

EP 2 858 269 B1

## FIG. 303B

EP 2 858 269 B1

## FIG. 304

7221a

| Transmission signal | Modulation frequency |
|---|---|
| 00 (0) | 500Hz |
| 01 (1) | 1000Hz |
| 10 (2) | 2000Hz |
| 11 (3) | 5000Hz |

## FIG. 305A

0Hz    200Hz    500kHz    1kHz    4kHz    20kHz

7222a

Human perceives flicker

7222b

Camera captures flicker

7222e

Frequency domain
suitable for carrier

7222c

Harmonic noise of
light emitting unit

7222d

Coil whine is audible

EP 2 858 269 B1

## FIG. 305B

0Hz 200Hz 1kHz 3kHz 20kHz

7222a Frequency at which human perceives flicker

7222e Frequency domain suitable for carrier

7222b Frequency at which camera captures flicker

7222f Frequency domain suitable for carrier

7222c Frequency of harmonic noise of light emitting unit

7222d Frequency at which coil whine is audible

7222g Frequency domain suitable for carrier

EP 2 858 269 B1

FIG. 306

7223a

7223c

7223b

7223d

7223e

File sharing

Server

FIG. 307

FIG. 308

EP 2 858 269 B1

FIG. 309

(a) Signal in normal mode

Line scan order

803a 803b

| 1 | 2 | 3 | 4 | 5 | 6 | 7 | 8 | 9 | 10 | 11 | 12 | Blanking time | 1 | 2 | 3 | 4 |

821

Reduce

t

Start → Normal imaging mode — Yes

820c Light signal reception mode? — No → Start

(b) Light signal obtainment mode

| 1 | 2 | 3 | 4 | 5 | 6 | 7 | 8 | 9 | 10 | 11 | 12 | ■ | 1 | 2 | 3 | 4 |

821a

t

Yes

820d High-speed light signal read mode? — No → Start

803d 803e 803f 803g

(c) High-speed light signal read mode

| 4 | 5 | 6 | 7 | 4 | 5 | 6 | 7 | ■ | 4 | 5 | 6 | 7 |

821b

t

Yes

820e High-speed light signal read completed? — Yes → Start

Repeatedly read
n = 4 to 7

406

## FIG. 310

EP 2 858 269 B1

# FIG. 311A

```
                    ( start )
                        │
                        ▼                                    7340a
   ┌──────────────────────────────────────────────┐
   │ Change to rolling shutter mode in the case    │
   │ where imaging mode is global shutter mode      │
   └──────────────────────────────────────────────┘        7340b
                        │
   ┌──────────────────────────────────────────────┐
   │ Set shutter speed so that bright line is       │
   │ captured when capturing subject whose moving   │
   │ average luminance in time width greater than   │
   │ or equal to 5 milliseconds is unchanged and    │
   │ that changes in luminance in region less than  │
   │ or equal to 5 milliseconds                     │
   └──────────────────────────────────────────────┘        7340c
                        │
   ┌──────────────────────────────────────────────┐
   │ Set sensitivity of light receiving element to  │
   │ increase difference between bright part and    │
   │ dark part of bright line                       │
   └──────────────────────────────────────────────┘        7340d
                        │
   ┌──────────────────────────────────────────────────────┐
   │ Set imaging mode to macro imaging mode, or set shorter │
   │ focal length than focusing on transmitter.  Capturing  │
   │ transmitter in larger size in blurred state enables     │
   │ increase in number of exposure lines in which bright   │
   │ line is captured                                        │
   └──────────────────────────────────────────────────────┘  7340e
                        │
   ┌──────────────────────────────────────────────┐
   │ Observe change in luminance of bright line     │
   │ in direction perpendicular to exposure line    │
   └──────────────────────────────────────────────┘        7340f
                        │
   ┌──────────────────────────────────────────────────────┐
   │ Calculate interval between parts of rapid rise in      │
   │ luminance or interval between parts of rapid fall in   │
   │ luminance and read transmission signal from interval,  │
   │ or calculate period of luminance change and read       │
   │ transmission signal from period                         │
   └──────────────────────────────────────────────────────┘
                        │
                        ▼
                    ( end )
```

# FIG. 311B

Normal imaging mode — 7307a

Macro imaging mode — 7307b

EP 2 858 269 B1

FIG. 312

7300b

7300a

1ch Program title        June 19  5:05 PM

7300c Information display area

EP 2 858 269 B1

# FIG. 313

```
      ┌─────────┐
      │  start  │
      └────┬────┘
           │
           ▼                          7350a
  ┌──────────────────────┐
  │ Enter signal         │
  │ transmission mode    │
  └──────────┬───────────┘
             │
             ▼                              7350b
┌──────────────────────────────────────────────────┐
│ Transmit signal by changing luminance of backlight in │
│ information display area                            │
└──────────────────────┬─────────────────────────────┘
                       │
                       ▼
                  ┌─────────┐
                  │   end   │
                  └─────────┘
```

FIG. 314

FIG. 314

EP 2 858 269 B1

# FIG. 315

```
                    ( start )
                        │
                        │              7351a
                        ▼          ╱
            ┌───────────────────────┐
            │ Enter signal          │
            │ transmission mode     │
            └───────────────────────┘
                        │
                        │                              7351b
                        ▼                          ╱
┌──────────────────────────────────────────────────────┐
│ Transmit signal only from part where backlight is ON in the │
│ case where backlight is turned OFF upon screen change for   │
│ improved dynamic resolution                                 │
└──────────────────────────────────────────────────────┘
                        │
                        │                              7351c
                        ▼                          ╱
┌──────────────────────────────────────────────────────┐
│ Transmit no signal when backlight is OFF in entire screen │
└──────────────────────────────────────────────────────┘
                        │
                        ▼
                    ( end )
```

FIG. 316

EP 2 858 269 B1

# FIG. 317

start

Enter signal
transmission mode ————— 7352a

Turn OFF backlight control for improved dynamic
resolution in part (7302b, 7302e, 7302g, 7202j) of
screen and transmit signal from part ————— 7352b

Adjust average luminance of backlight so that brightness of part
transmitting signal is equal to average luminance of backlight in part
transmitting no signal. Adjustment may be made by adjusting time
ratio of blinking of backlight during signal transmission or by adjusting
maximum luminance of backlight ————— 7352b

end

FIG. 318

7303c

7303d

7303e

Control device

Network

Server

7303a

7303b

7303f

Wireless access point

7303g

7303h

EP 2 858 269 B1

# FIG. 319

start

Store ID of transmitter, information (SSID, password, ID of wireless access point, radio frequency, position information of access point, connectable position information, etc.) of wireless access point, and information (IP address, etc.) of control device in ID management server in association with each other
7353a

Transmitter transmits ID of transmitter. Transmitter may also transmit information of wireless access point and information of control device
7353b

Receiver receives ID of transmitter and obtains information of wireless access point and information of control device from ID management server, or receives ID of transmitter and information of wireless access point
7353c

Transmitter connects to wireless access point
7353d

Transmitter transmits address of server on network, instruction to server, and ID of transmitter to control device
7353e

Control device transmits received ID to receiver
7353f

Control device issues instruction to server on network and obtains response. Here, control device operates as proxy server
7353g

Control device transmits response and received ID from transmitter indicated by transmitter ID. Transmission may be repeatedly performed until reception completion is notified from receiver or predetermined time elapses
7353h

Receiver receives response
7353i

Receiver transmits received ID to control device and notifies reception completion
7353j

In the case where receiver is at position where signal from transmitter cannot be received, receiver may notify control device to return response via wireless access point
7353k

end

FIG. 320

FIG. 321

FIG. 322

7315a

7315b

7315c

EP 2 858 269 B1

FIG. 323B

7317c

7317b

7317a

## FIG. 323C

7318b

7318a

Current position

7318e

7318d

7318c

EP 2 858 269 B1

## FIG. 323D

start

7357a

Store ID of transmitter, display content ID, and content displayed on display or projector in ID management server in association with each other

7357b

Transmitter displays content on display or projector, and transmits signal using backlight of display or projection light of projector. Transmission signal may include ID of transmitter, display content ID, URL in which display content is stored, and display content

7357c

Receiver receives transmission signal

7357d

Receiver obtains content displayed on display or projector by transmitter, based on received signal

7357e

In the case where user profile is set in receiver, receiver obtains content suitable for profile. For example, receiver obtains subtitle data or audio content for at hand reproduction in the case where profile of hearing impairment is set, and obtains content for audio commentary in the case where profile of visual impairment is set

7357f

Receiver displays obtained image content on display of receiver, and reproduces obtained audio content from speaker of receiver, earphone, or hearing aid

end

FIG. 324

FIG. 325

## FIG. 326

Low-speed light modulation signal — 7310a

Low-speed data — 7310b

| 1 | 0 | 1 | 1 | 0 | 1 | 0 | 1 |

High-speed modulation + Low-speed light modulation signal — 7310c

7310e
10110101

High-speed data — 7310d

End signal

Start signal

EP 2 858 269 B1

# FIG. 327A

7311a

| Optical black |
| --- |

Effective pixel

Exposure line

7311b

Effective pixel

Optical black

Exposure line

EP 2 858 269 B1

FIG. 327B

Structure of one pixel

Reception instruction

7319d

7319c

Memory

Shutter mode change unit

7319b

Video processing circuit

Photosensor

Global shutter output

Rolling shutter output

Horizontal line memory

7319a

Vertical control circuit

Output

Horizontal line memory

429

## FIG. 327C

7320a

7320b

Average for 4 milliseconds = 75%

$\left( \begin{array}{l} \text{Range of moving average for 4 milliseconds} \\ = 75\% \pm \text{(modulation factor)}/ 4 \end{array} \right)$

1 millisecond
at 1 kHz

4 milliseconds
at 1 kHz

7320c

Average for 5 milliseconds = 80%

$\left( \begin{array}{l} \text{Range of moving average for 5 milliseconds} \\ = 80\% \pm \text{(modulation factor)}/ 5 \end{array} \right)$

5 milliseconds
at 1 kHz

EP 2 858 269 B1

FIG. 327D

# FIG. 328A

```
┌─────────────┐
│    Start    │
└─────────────┘
       │
       ▼
┌──────────────────────────┐  SA11
│ Set exposure time so that│
│ bright line appears      │
└──────────────────────────┘
       │
       ▼
┌──────────────────────────┐  SA12
│ Capture subject with set │
│ exposure time            │
└──────────────────────────┘
       │
       ▼
┌──────────────────────────┐  SA13
│ Demodulate according to  │
│ bright line pattern      │
└──────────────────────────┘
       │
       ▼
┌─────────────┐
│     End     │
└─────────────┘
```

# FIG. 328B

A10

```
┌────────────────────────────────────────┐
│ Information communication device        │
│                                         │
│                              A11        │
│            ┌──────────────────┐         │
│            │ Exposure time    │         │
│            │ setting unit     │         │
│            └──────────────────┘         │
│                     │                   │
│                     ▼         A12       │
│ Light    ┌──────────────────┐           │
│ signal ──▶│  Imaging unit    │          │
│          └──────────────────┘           │
│                     │                   │
│                     ▼         A13       │
│          ┌──────────────────┐           │
│          │  Demodulation    │           │
│          │  unit            │           │
│          └──────────────────┘           │
│                                         │
└────────────────────────────────────────┘
```

EP 2 858 269 B1

FIG. 329

SB11

Start

Determine luminance change pattern so that moving average (average in width greater than or equal to 5 milliseconds) of luminance is constant

SB12

Change luminance according to determined pattern

SB13

Change luminance according to same pattern within 33 milliseconds

End

B10

Information communication device

B11

Luminance change pattern determination unit

B12

Light emitter

→ Light signal
→ Light signal

( Same luminance change pattern )

EP 2 858 269 B1

434

## FIG. 331A

```
        ┌────────────┐
        │   Start    │
        └────────────┘         SC11
               │
               ▼
┌──────────────────────────────────┐
│ Determine a plurality of frequencies │
└──────────────────────────────────┘
     SC12       │
               ▼ ◄──────────────────┐
┌──────────────────────────────┐    │
│ Change luminance according to │    │
│ determined frequency so that  │    │
│ moving average (average in    │    │
│ width greater than or equal to│    │
│ 5 milliseconds) of luminance is│   │
│ constant                      │    │
└──────────────────────────────┘    │
               │                     │
               ▼          SC13       │
        ╱─────────────╲              │
   Y   ╱      All       ╲            │
  ◄───╱ frequencies used? ╲         │
       ╲               ╱             │
        ╲─────────────╱              │
               │ N        SC14       │
               ▼                     │
┌──────────────────────────────┐    │
│ Change frequency in period    │    │
│ greater than or equal to 33   │────┘
│ milliseconds                  │
└──────────────────────────────┘
        ┌────────────┐
        │    End     │
        └────────────┘
```

## FIG. 331B

```
 C10
┌──────────────────────────────────────────────┐
│ Information communication                      │
│ device                                         │
│              C11            C12                │
│   ┌──────────────┐  ┌──────────────┐          │
│   │ Frequency    │  │ Frequency    │          │
│   │ determination│  │ change unit  │          │
│   │ unit         │  │              │          │
│   └──────────────┘  └──────────────┘          │
│         │      C13         │                   │
│         ▼                  ▼                   │
│   ┌──────────────────────────────┐            │──► Light signal
│   │                              │            │    (Frequency f1)
│   │        Light emitter         │            │
│   │                              │            │──► Light signal
│   └──────────────────────────────┘            │    (Frequency f2)
└──────────────────────────────────────────────┘
```

EP 2 858 269 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002290335 A

**Non-patent literature cited in the description**

- Foundational analysis of spatial optical wireless communication utilizing image sensor. **JIANG LIU et al.** 2011 IEEE INTERNATIONAL CONFERENCE ON IMAGING SYSTEMS AND TECHNIQUES (IST). IEEE, 17 May 2011, 205-209